Europäisches Patentamt

European Patent Office

Office européen des brevets

(19)

(11) Publication number: **0 397 996**
**A2**

# (12) EUROPEAN PATENT APPLICATION

(21) Application number: **90105549.1**

(22) Date of filing: **15.08.85**

(51) Int. Cl.5: **F01C 1/344, F01C 1/356,**
**F02B 53/04**

The application is published incomplete as filed (Article 93 (2) EPC). The point in the description or the claim(s) at which the omission obviously occurs has been left blank.

(30) Priority: **15.08.84 GB 8420682**

(43) Date of publication of application:
**22.11.90 Bulletin 90/47**

(60) Publication number of the earlier application in accordance with Art.76 EPC: **0 172 033**

(84) Designated Contracting States:
**AT BE CH DE FR GB IT LI LU NL SE**

(71) Applicant: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**Withers & Rogers 4 Dyer's Buildings Holborn**
**London EC1N 2JT(GB)**

(54) **Internal combustion engine.**

(57) An internal combustion engine includes a set of gas chambers including a compression chamber for compressing a fuel/gas mixture and a combustion and exhaust chamber for combusting the fuel/gas mixture and for exhausting the waste gases. The compression chamber and the combustion and exhaust chamber are defined by stationary wall and a moving wall. Means are provided for sequestering a portion of the gases in the compression chamber. The sequestering means are controlled by the position of the sequestering means with respect to the wall of the compression chamber. A transfer chamber saves the sequestered gases and releases the sequested gases into the combustion and exhaust chamber at a predetermined time in the engine cycle before the gases are exhausted from the engine. The gas sequestering and transfer means can be used in a rotary engine, a linear engine, and a reciprocating engine.

EP 0 397 996 A2

# INTERNAL COMBUSTION ENGINE

The invention relates to internal combustion engines.

An object of the invention is to provide an improved internal combustion engine of high efficiency, giving lower pollution and less vibration than conventional engines. The invention is applicable to internal combustion engines of various kinds.

The invention, in its several different aspects, is described in the following pages. However, a brief description of one particular aspect of the invention, referring to a limited sub-set of the drawings, commences on page 476 hereof.

## BACKGROUND OF THE INVENTION:

Idea of looking for new design of engine structure which can especially provide better driving efficiency, lower pollution, lower vibration, multiple application range, clockwise, counterclockwise rotation or non-rotary linear driving is the target group required by people. The present design is one of above target group. In the world, there still exists many design which relate to the designs of above ideal target group.

The following each case is the design of separate gas chamber engine which has been granted in the countries of the world:

U.S. Patent NO. 2, 583, 633, U. S. Patent NO. 3, 921,595, Fench Patent NO. 1, 335, 918, G. B. Patent NO. 1, 531, 541 G. B. Patent NO. 197, 811, German Patent NO. 1, 814, 899, German Patent NO. 2, 847, 890, Canadian Patent NO. 1, 006,442, U.S. Patent NO. 4, 096, 846.

The following is the present case in comparison with the above cases:

I. In the present case:

Item A is common gate plate type internal combustion engine unit with exchange gas chamber and separate gas chamber;

in Item B, a-2 intake compressive gas chamber Cx and explosive exhaust gas chamber Cy are the different body structures;

in Item b, a-3 is the structure which exchanges fuel gas through guide hole of gate plate and guide passage of active body;

Item C is the twice help combustion structure of internal combustion engine with gate plate set;

Item D is the compound fuel ignition combustion structure of internal combustion engine with gate plate set;

Item M is reciprocating type internal combustion engine unit with exchange gas chamber and separate gas chamber;

This is a new design of novel engine structural which has not been found in the above granted cases.

II. In Item B, a-1 is the structure which intake compressive gas chamber Cx and explosive exhaust gas chamber Cy are placed in the same body, due to it possesses obliquely stridding over exchange pressure-saved gas chamber structure of b-1, b-2, b-3, b-4, b-6, b-7 in Item B, therefore, it is characterized in that:

1. Each set of intake compressive gas chamber Cx, and explosive exhaust gas chamber Cy possesses proper length which is interlaced and overlapped, and discloses the design of exchange gas chamber oblique stridding between Cx, Cy, as to the rotor with same diameter, length of dynamic stroke can be lengthened.

2. Relationship among exchange gas chamber CZ, intake compressive gas chamber Cx and explosive exhaust gas chamber is: in intake, CZ communicates Cx, and separates from Cy to ignite; in explosion, CZ communicates Cy, and separates from Cx; in exhaust, CZ separate from Cy in order to produce function of saving pressure and returning combustion of waste gas.

3. It possesses guide transverse groove, when it transmits fuel gas, its working angle of effective dynamic stroke is larger than 180°.

4. It discloses structure of linear type engine.

And U.S. Patent NO. 2,583,633:

Hollow rotor 31 of this case possesses sectional projections 43, 43a, and is covered in gring by sectional casting 11 and castings 12, 13 at two ends to form a section of intake compressive gas chamber, the neighbored section of explosive exhaust gas chamber, between two sections, there is a valve port 55 which is transversely set on casting 11, when hollow rotor 31 rotates, its coaxial valve port 49 is communicated instantly to let fuel gas be pressed into explosive exhaust gas chamber at right end, due to the continuous motion of hollow rotor 31, coaxial valve port 49 separates from valve port 55, after separation, fuel gas entered into explosive exhaust gas chamber is igited to explode and drive rotor, intake compressive gas chamber continuous to let fuel gas enter into when gate plate passes over the next gas chamber, as shown in figures, after clamping fixed valve rings 51, 52 in the middle, there are three transversely placed valve ports 55, and at rear end of projections 43, 43a of hollow rotor 31, there is a setting coaxial valve port 49, and length of the separated arc between projections 43 and 43a is longer than valve port 49 or 55, and each circumference possesses three gas chambers.

Summing up:

1. It is three-sectional series type structure, cylindrical hollow rotor 31 is internal rotor, in explosive action, valve port 55 completely separate from explosive section, therefore, valve port 55 is only used for transmitting fuel gas, and can not store the waste gas and pressure after explosion for raising pressure and returning combustion in next cycle.

2. It does not disclose linear or disk type driving method .

3. There is no design of guide transverse groove, its effective working angle of dynamic stroke can not be larger than 180°.

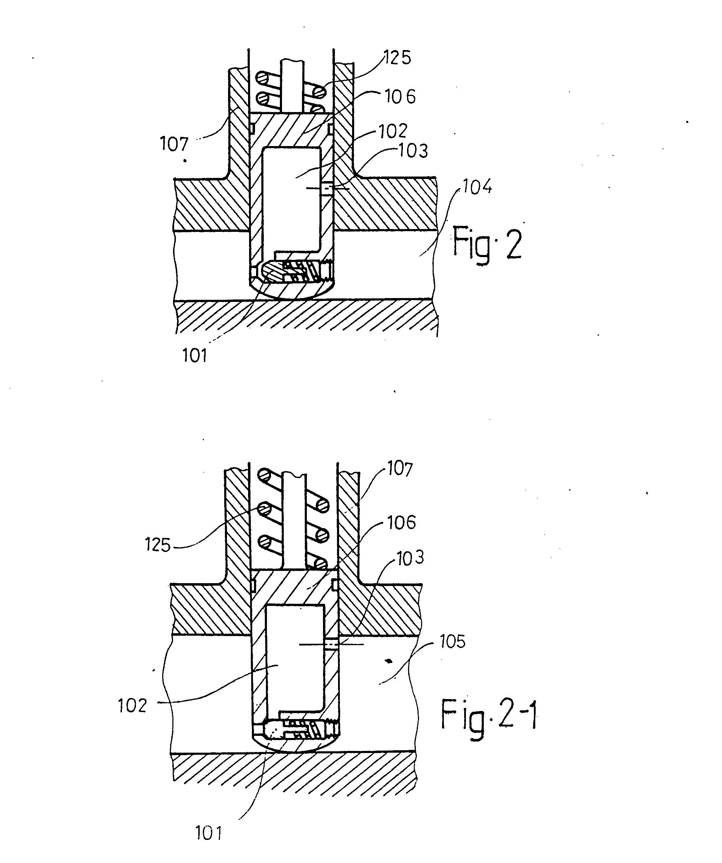

This case is constituted by three sections in series, projections 43, 43a are separated each other, and let coaxial valve port 49 be placed just between two projections 43, 43a, therefore, valve port 55 is blockaded and can not communicates two sections of gas chamber, and as to the function of guiding gas, fixed valve rings 51, 52 are fixed, and rotor 31 is in rotary action, valve port 55 and coaxial valve port 49 are connected and communicated instantly in action, therefore, it is doubted whether it can completely guide through fuel gas, as shown in Fig. 2, if sliding abutment 65 and projection 43 press and push gas, due to the cross section of ports 49, 55 is too small, therefore, the efficiency of transmitting fuel gas is greatly lowered down when fuel is required to be transmitted quickly.

Another key point is the distribution of groove, due to the limitation of valve port 55, there only discloses circumferential internal rotor motion , the middle fixed valve rings 51, 52 assemble three valve port 55 in ring, and rotor 31 of two sides assemble three projections 43, 43a with same arc angle to form cylinder, there is no disclosure of disk, external rotor and linear design.

In the above distribution of exchange gas chamber and groove, when gas chamber 40a explodes and exhausts, valve port completely separate from gas chambers 40, 40a, and it does not possess function of saving pressure and returning combustion of waste gas, due to time of guiding gas and the area of cross section of valve port corresponding to guide hole is too small, therefore, under quick rotation, there is phenomenon of incomplete burning or cancelling out of efficiency.

As to 360° of this case, due to the distance between valve port 55 and each projection 43 or 43a of gas chambers 40, 40a, it will cause loss of angle which can not produce dynamic power, the main reason is that valve port 55 is placed transversely and let projections 43, 43a must avoid away.

U. S. Patent NO. 3,921,595:

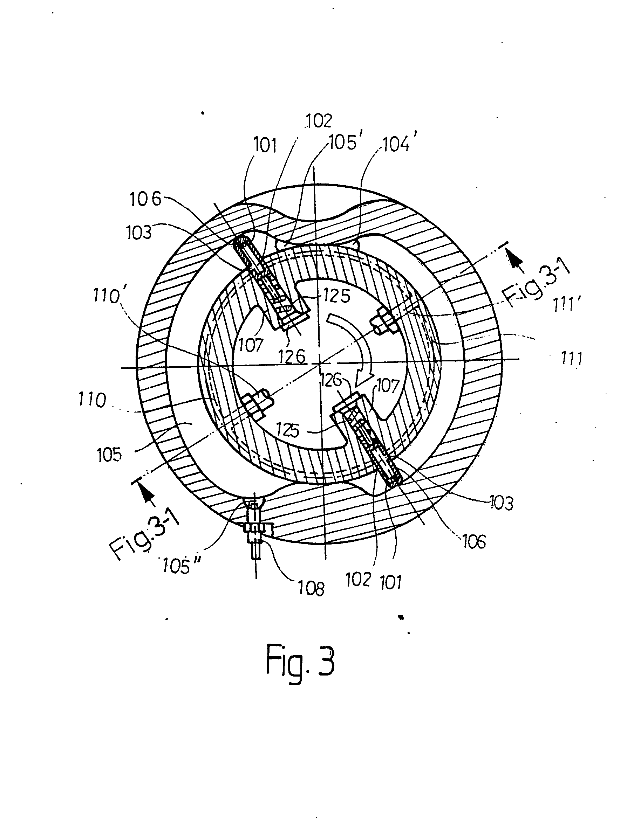

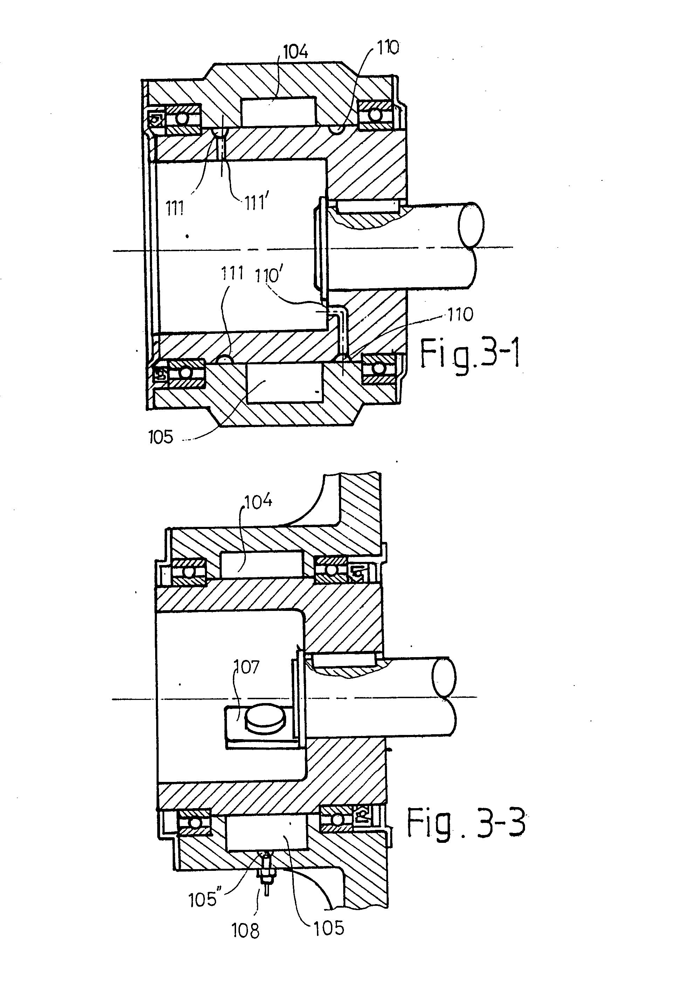

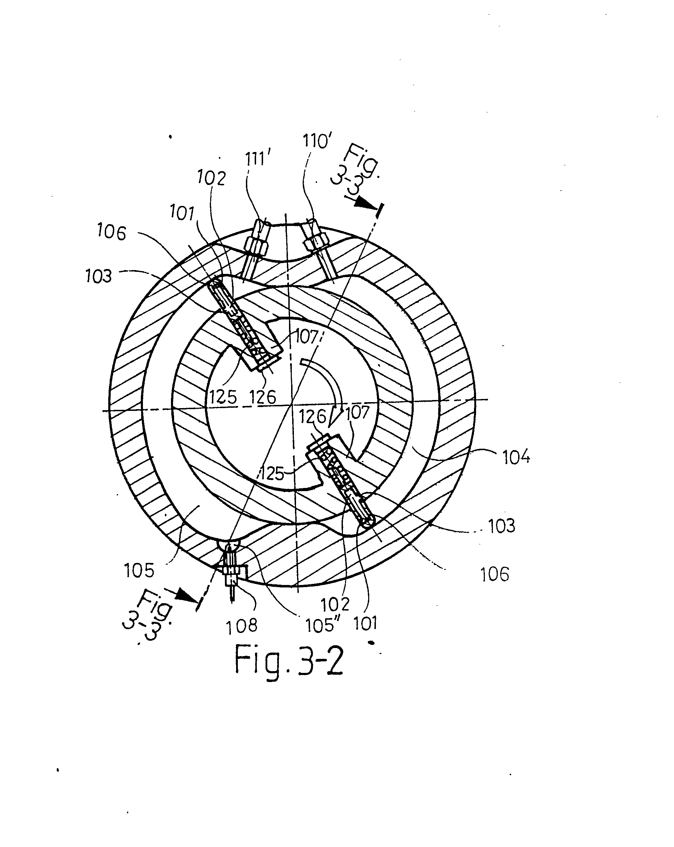

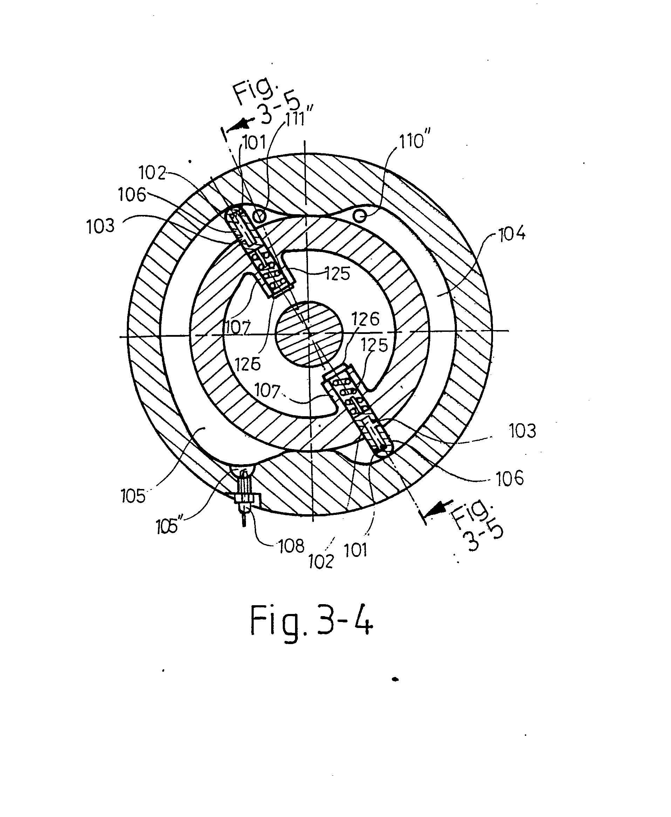

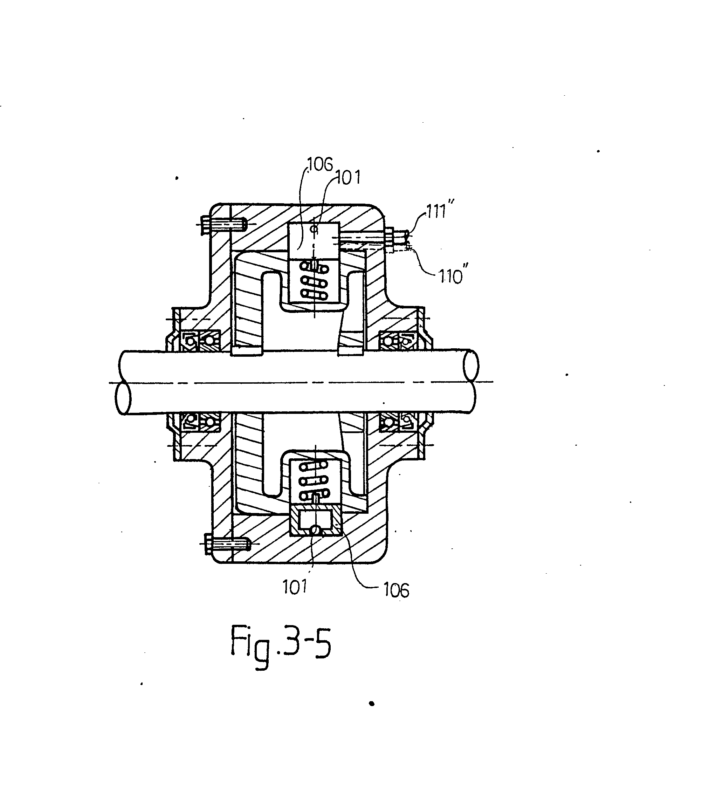

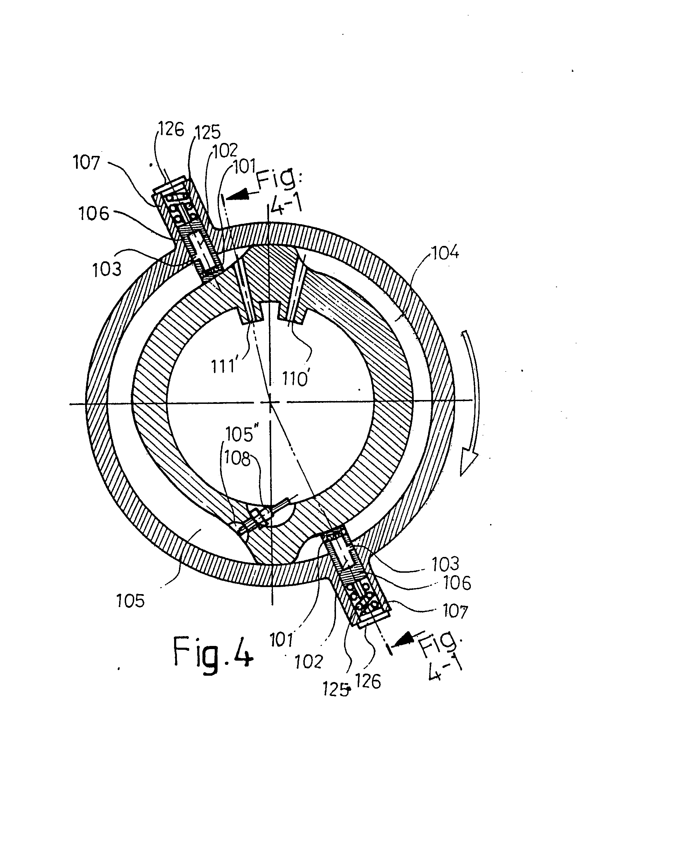

This case is also three-sectional independent structure which is combined in series, wherein at two side sections of rotors 1, 2, each of them possesses separated gas chambers 7, 8 and vanes 28, 29, middle section part is partitioned by fixed central wall 11, and has function of guiding gas, the action of guiding gas will transversely communicate when gas chambers 7, 8 at two sides are overlapped, the arc occupied by inlet port 42 and transfer port 43 which are formed by gas chambers 7, 8 is very large, therefore arc angle which produces dynamic power will be reduced, and as shown in Fig. 3 it is the starting point of dynamic stroke.

In brief, 1. only cylindrical rotors 1, 2 make rotary motion.

2. Transfer port formed by overlapping gas chambers 7, 8 separates from explosive exhaust gas chamber before ignition, therefore, waste gas and pressure after explosion can not be stored for raising pressure and returning combustion in next cycle.

3. It does not disclose linear and disk type driving method.

Exchange gas chamber of this case is communicated by three transfer ports 43, 43′, 43‴ on the middle fixed central wall 11 when overlapped parts of gas groove of two sides rotate and crisscross, therefore, the

3

rotary tangent direction of tramsfer ports 43, 43', 43''' which is verical to rotors 1, 2, when its explosive action is produced, it must let above overlapped part completely leave transfer ports 43, 43', 43''', two sections respectively possess three gas groove, gas groove of each corresponding set are placed in overlapping $\frac{1}{4}$ head and tail parts for guiding gas, this kind of structure is similar to case 2,583,633, by guessing, working angle is lost in order to obtain wider transmission angle is the main reason to be granted a patent, but this case can only arrange gas chambers 7, 8 in internal type, and it has no design of external rotor or linear type.

This case also let the overlapped part leave transfer port then it ignites, therefore gas chamber 8 explodes and exhausts independently, pressure is independently born by rotating rotor 3, transfer port 43 does not possess function of saving pressure and returning combustion of waste gas, therefore, also it can not prepress on gas chamber 8.

Although this case has overlapped gas chambers 7, 8, it can not avoid to lose arc degree between actions in order to ignite after overlapped part leaves transfer port 43, and reduce the arc angle (stroke) which really possess dynamic push.

French Patent NO. 1,335.918:

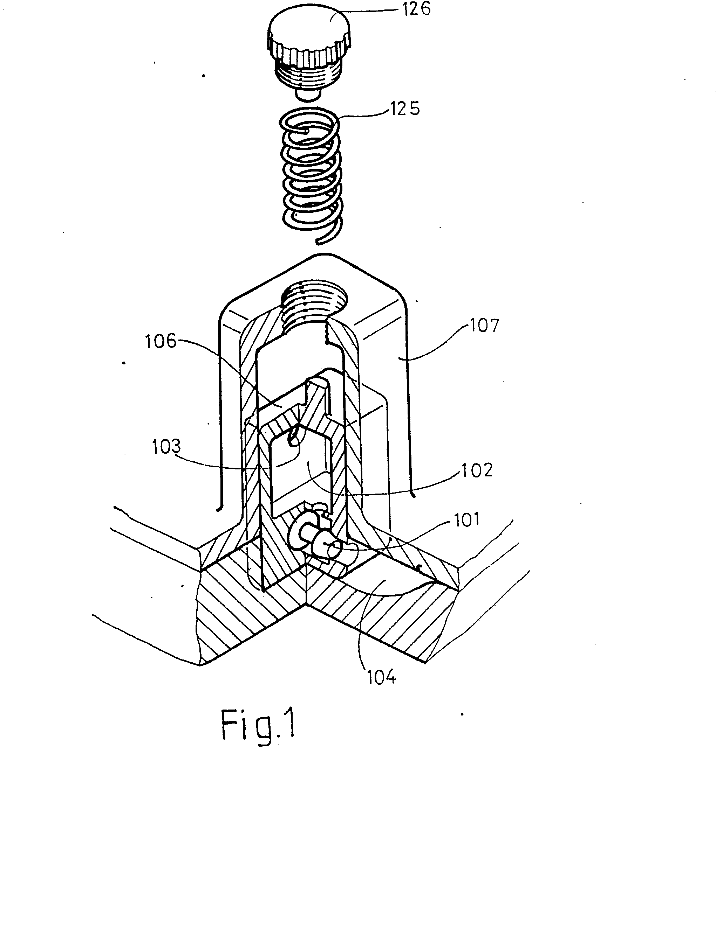

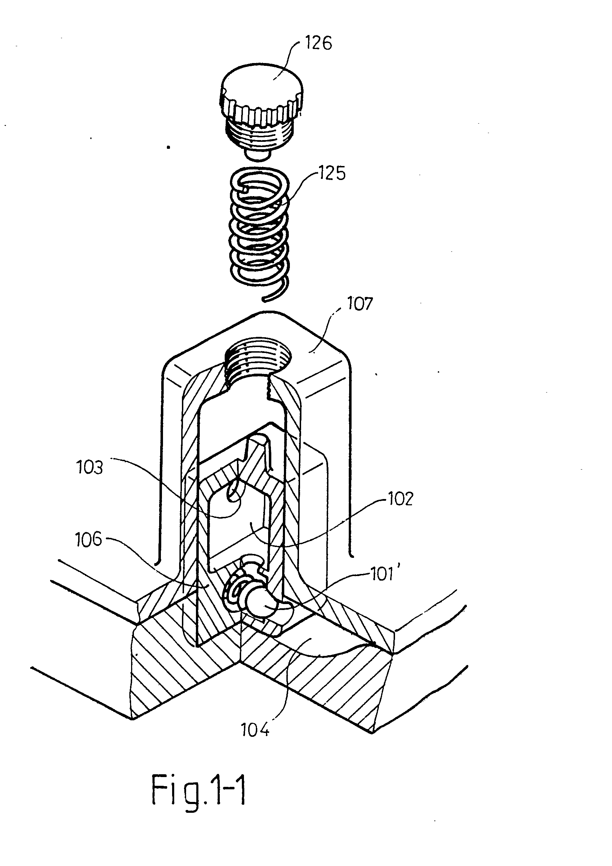

This case are also three-sectional oval shaped internal rotor rotary type engine in which middle section is fixed, its outer shell is guide passage, valve which is driven by rotor axle guides compressed fuel gas of the front section into explosive exhaust gas chamber of next section to iginite and explode in order to drive rotor to rotate continuously, as shown in Fig. 1, when rotor pass over outlet 7, as shown in Fig. 2, intake port 8 of explosive exhaust section is in the explosive space, that is, it can guide through front sectional intake gas chamber and avoid releasing pressure and exhausting in explosion, and reduce working efficiency, therefore, at middle fixed ring, there is intake valve, said valve is driven by the divided cam on main axle, in the structure, front section 7 of transmission fuel gas isolates rear section 8 and explosive exhaust gas chamber 3 from valve 9 before ignition and combustion, there are 135° between rear section 8 and front end of exhaust port, and rotor contacts inner wall of stator by point, therefore, before exhaust, 3 does not separate from 8, and can not store in the inner part, waste gas and pressure are stored in 3 after explosion, for raising pressure and returning combustion in next cycle, its arc of pressure intake is very large, therefore working angle is reduced, there has no design of linear and disk type driving structure.

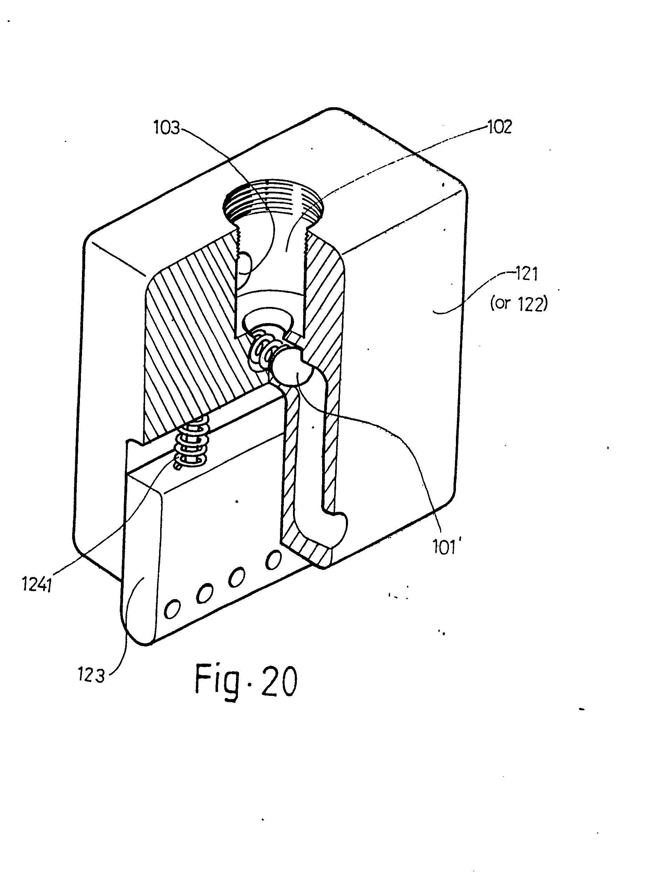

Exchange gas chamber of this case is to use outer shell 1 as guide passage, oval rotor 20 continuously presses and sends fuel gas into 7, and when another oval rotor 21 rotates to Fig. 20, fuel gas is sent from 7 to 8, and store in the cylinder until tip of rotor 20 passes through 7, end of rotor 21 is to ignite and explode, before explosion, of course, it start valve 9, the overlapped part of working gas chamber formed by two sectional rotors 20, 21 of this design is very large, therefore, placement of valve 9 is necessary, due to the limitation of rotor shape, therefore, the formed gas chamber must be outside outer shell, therefore, there is no design of external rotor and disk type, it is impossible to be arranged in linear type.

Character of this case is to assemble intake valve in the middle fixed ring, said valve is driven by the divided cam on main axle, front section 7 of transmission fuel gas port of this structure isolates rear section 8 and explosive exhaust gas chamber 3 from valve 9, the front end of rear section 8 and exhaust port is about 135°, and rotor contacts inner wall of stator by point, before exhaust, 3 does not separate 8, and can not be stored in the inner port, after explosion, waste gas and pressure are stored in 3, for raising pressure and returning combustion in next cycle, its arc of pressure intake is very large, therefore, its working angle is reduced, there have no design of linear and disk type driving structure and desing of external rotor.

In this case, due to rotors 20, 21 possesses oval shaped cross section as to its efficiency, its efficiency is not bettef than Wangle Engine, due to each 360° rotation is only born by dynamic power of each time, therefore force of starting is worse, working angle between intake compressive gas chamber and explosive exhaust gas chamber is only limited by separation of valve to be less than 180° and it is different from the present case.

G.B. Patent NO. 1,531,541, G.B. 197,811, German Patent NOS. 1,814,899 and 2,847,890:

Case of G.B. Patent NOS. 1,531,541 and 197,811, are similar to cases of German Patent NOS. 1,814,899 and 2,847,890, they relates directly to assemble valve housings 22, 23 and ports 24, 25 and gas chamber 21 of the same circumference at outer sheel 21 of column type rotor 10, from the sequence of action shown in Figs. 9a to 9i, 10a to 10i, 11a to 11i, 12a to 12i, the gas guide method is to guide gas through transmission pipe outside main body, in exhaust, C.C.B. and exhaust port communicate each other (as shown in Figs. 10c and 12c), after explosion, waste gas and pressure can not be stored in C.C.B. for raising pressure and returning combustion in next cycle.

In brief, 1. there is no function of saving pressure and returning effects.

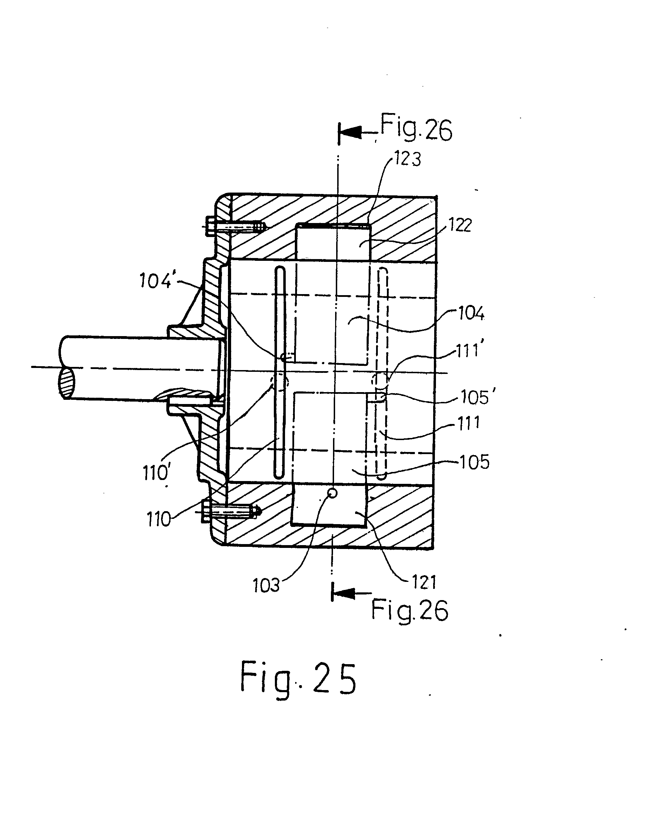

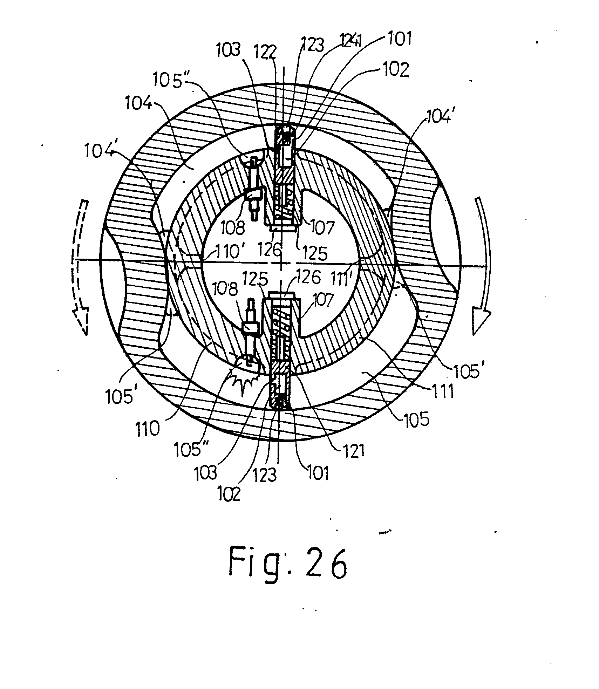

2. arc angle occupied by action of guiding gas is very large, therefore, working angle which produces dynamic power is reduced, in Fig. 26 of case 1,814,899, its exchange gas passage 5$''''$ is vertical to the tangent direction of rotor.

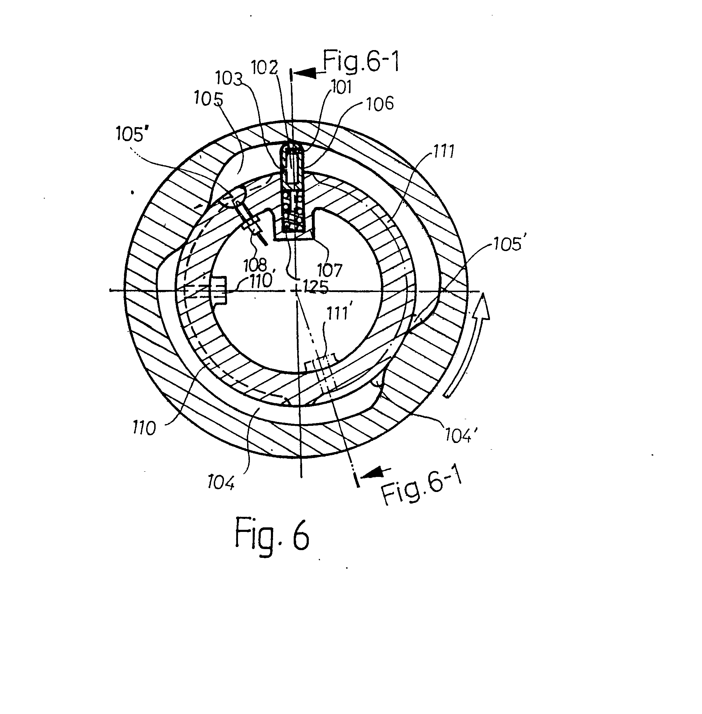

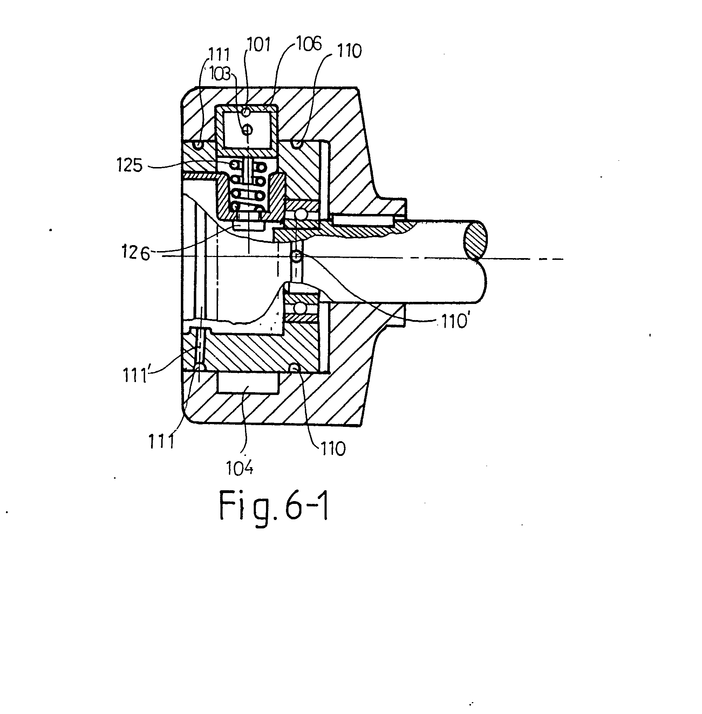

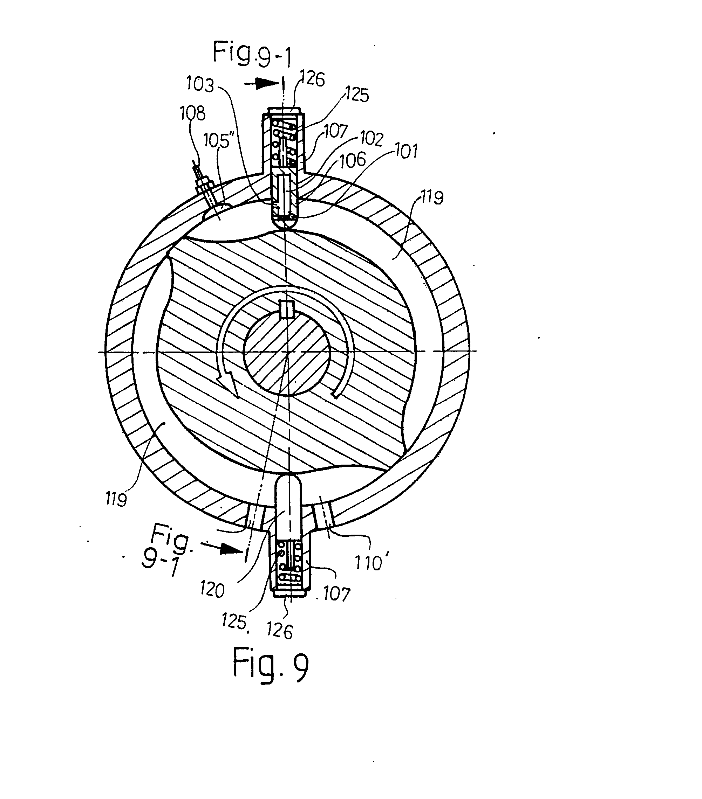

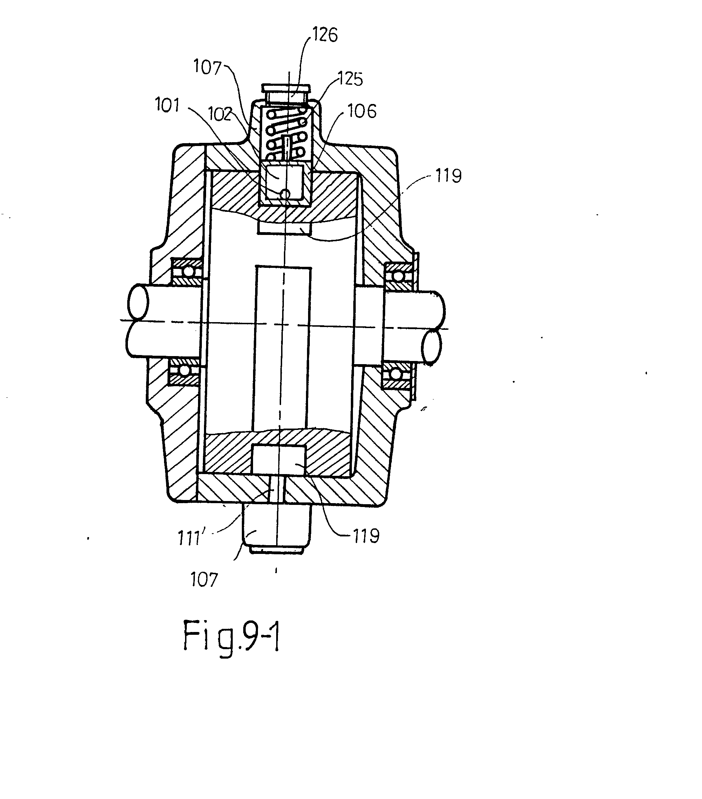

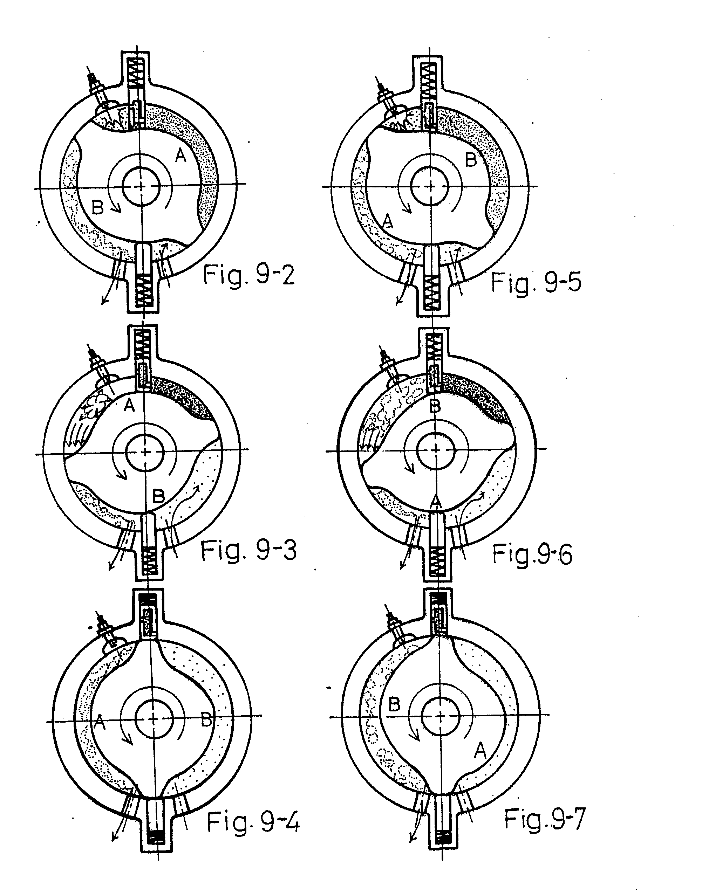

As shown in Figs. 6, 7, 8, of case NO. 1,531,541, Combustion Chamber 50 communicates groove 13 by port 52, in action, fuel gas in groove 13 is continuously transmitted into combustion chamber 50 from port 51, as shown in Figs. 9a to 9i then fuel gas is stored in groove 14 with bigger volume, when combustion chamber 50 will not press and transmit fuel gas into groove 14, and then ignition system 70 in combustion chamber 50 immediately ignites and explodes, as shown in figures, groove 14 can stride over exhaust port and combustion chamber 50, and between grooves 13, 14, there possesses a certain arc degree and does not possess gas groove, as shown in Figs. 1a to 1d, in other words, working angles between grooves 13, 14 are less than 180°.

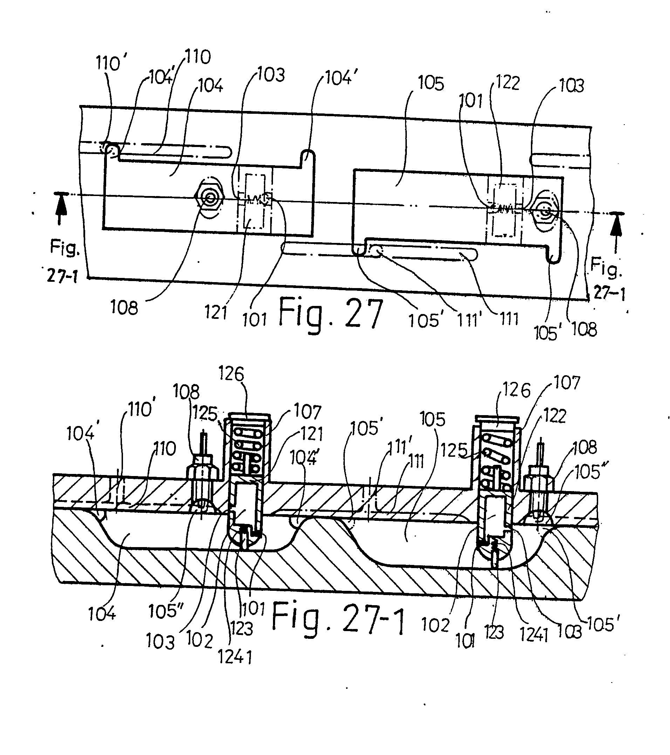

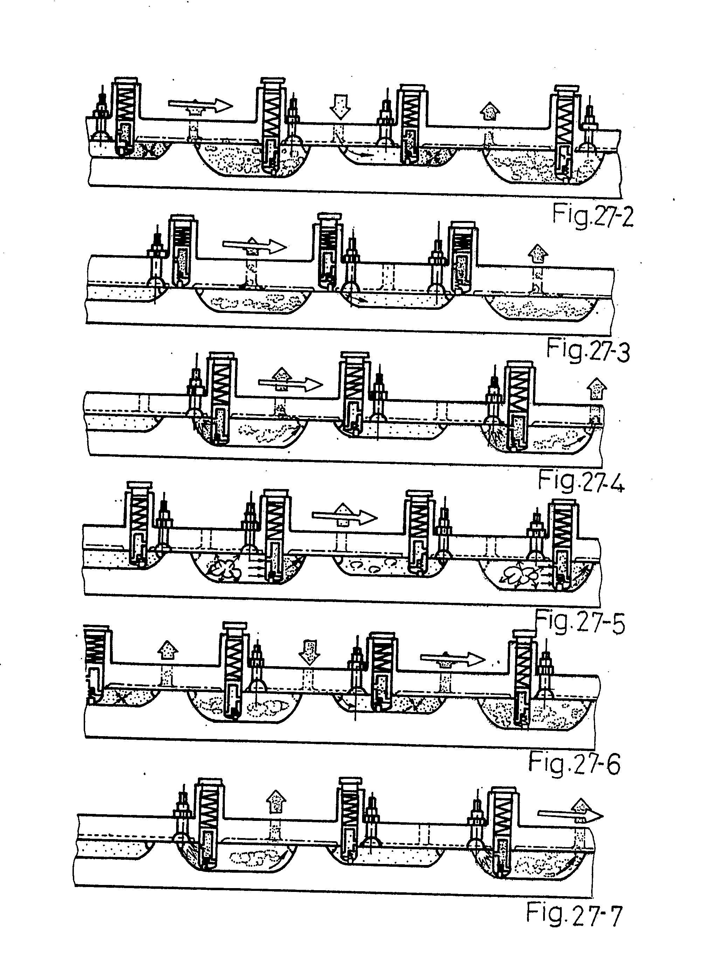

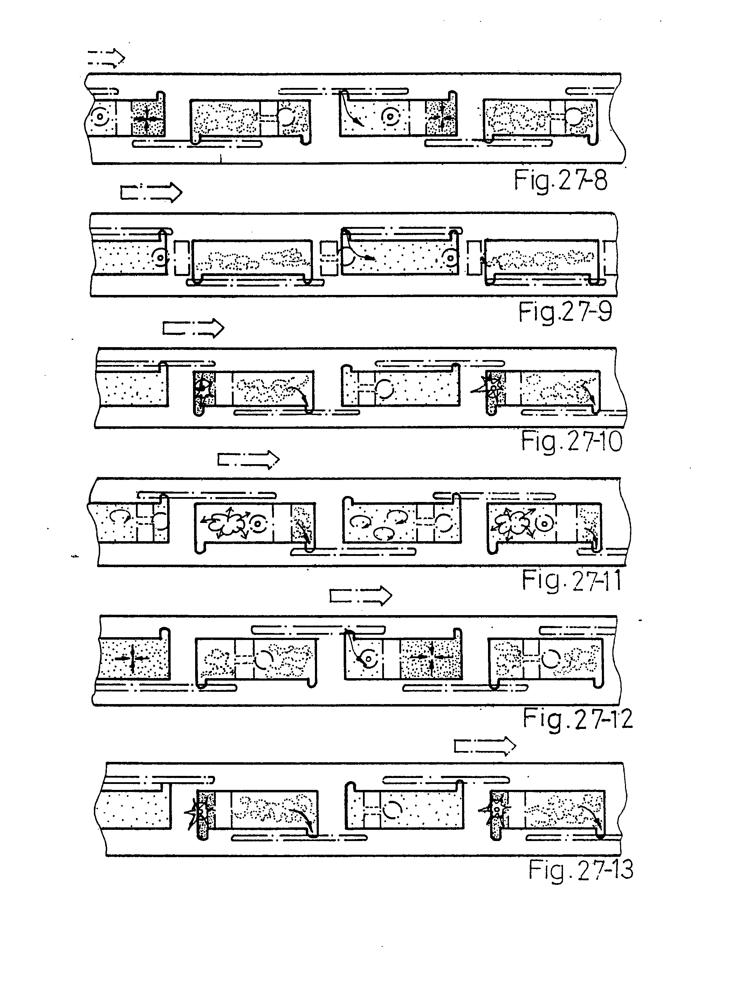

In Figs. 26, 27 of case 1,814,899, there possesses rectangular combustion chamber 5$''''$, said combustion chamber 5$''''$ must match distance between grooves 3$''''$, 4$''''$, and let its width can simultaneously connect 3$''''$, 4$''''$, and direction of combustion chamber 5$''''$ is vertical to the tangent motion direction of rotor 2$''''$.

Both of two cases can only disclose rotary motion of internal rotor, the arrangement of groove is only the sysmmetrical placement of large arc angle, there is the symmetrical placement of large arc angle, there is no disk, or linear or external rotor type design.

And in case 1,531,541, as above-mentioned, due to the arc degree of groove 14 is very large, when it is in exhaust, pressure of gas chamber C.C.B. will be completely exhaust, therefore, it can not save high pressure waste gas for preparing pressure and returning combustion in next cycle.

In this case, each 360° is only born and pushed by groove 14, at the interval between grooves 13, 14, there places C.C.B. 50, and it cause the working angle occupied by C.C.B. to be lessened.

Canadian Patent NO. 1,006,442:

The main characters of this case include:

1. Double axle double cylinder type design which possesses independent axle intake compressive gas chamber and independent axle explosive exhaust gas chamber, both of them communicates each other by gas hole.

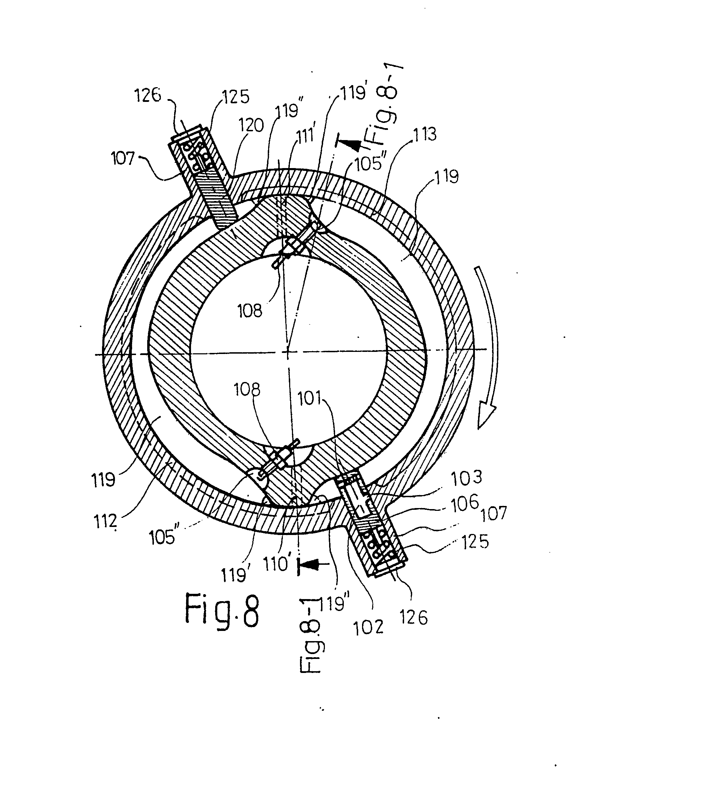

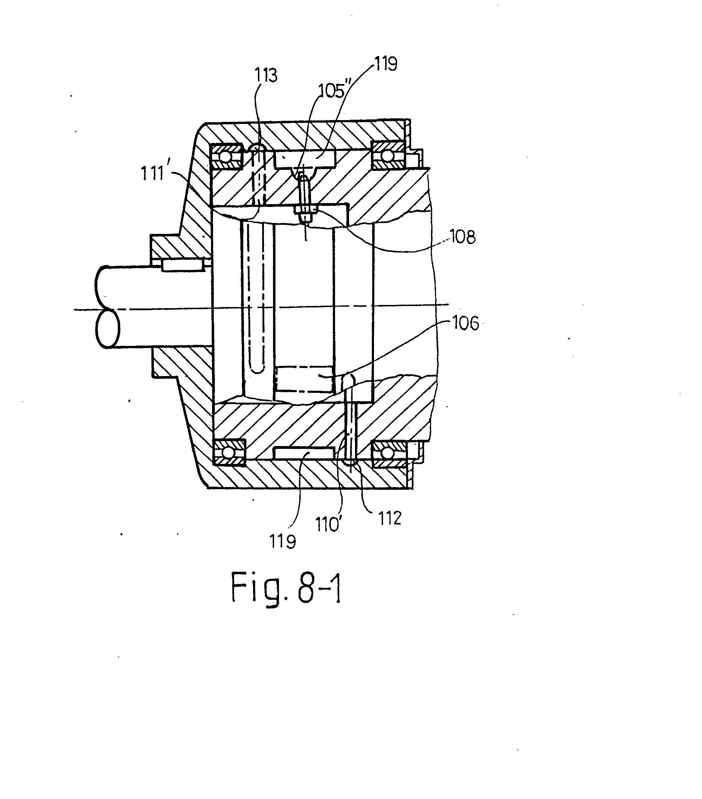

2. Rotary type synchronous guide valve, as shown in Figs. 8, 9.

3. Eccentric radiating vane for providing compressive function and produce rotary dynamic power.

4. Rotary axle in which each rotation is regularly a OTTO Cycle.

5. Disk type rotary engine.

6. Distance between gas chamber and gate is unequal.

7. Number of set of gas chamber is not the integral times of number of gate.

U.S. Patent NO. 4,096,846:

The main characters of this case are as follows:

1. It possesses mixed gas chamber.

2. It possesses same size, same shape gas chambers to form rotary rotor.

3. At upper and lower side of rotor, there respectively assembles gate plate set, and the highest two sides of rotor, there assembles penetration guide groove hole.

4. Each chamber produce pressure intake and explosion in sequence.

5. Between compression and explosion, there is delay gas chamber for storing compressive gas of last cycle.

6. The transfer of air current is controlled by high and low guide hole between the accepting gate plate and housing of engine.

7. In the front section before exhaust, exhaust port 220, combustion chamber 206 and delay storing gas chamber 208 are communicated.

8. Pressure intake and explosion, exhaust are produced by single line arranged gas chamber. III.

Each interface structure of b-5, b-8 in Item B and Items E. F. H. I. J. L. of the present application, wherein:

Character of b-5 is that: guide groove or guide transverse groove of exchange gas chamber possesses turbulent flow structure of tur-ulent column, barrier, hole, granule, curved passage.

Character of b-8 is that: it possess structure with function of releasing pressure.

Character of Item E is that: it possesses dynamic unit which is constituted by multi-sectional gas chamber Cx and single-set gas chamber Cy of e-3, and dynamic unit which is constituted by multi-row gas chamber Cx and single-row gas chamber Cy, and gas chamber set Cx, Cy of e-6 possesses guide transverse groove.

Character of Item F is that: combined type gate plate set of f-2 and bottom of gate plate of f-3 possess inclined crack structure, f-4 possesses lubricant groove structure, at front and rear end of trace of gate plate set Gx of f-5, there are turbulent gate GM, cross sectional structure of gate plate of f-6, guide hole structure of f-7.

Character of Item H is that: h-5 is linear driving internal combustion engine.

Character of Item I is that: i-2 is gate plate motion osmotic type lubricant structure.

Character of Item J is that: rotor of j-1 possesses turbine vane circulative cooling structure, and j-2 possesses rodiating vane open type cooling structure.

Character of Item L is that: it possesses each ring-shaped and side coupling interface device and synchronously distributive interface device.

Structure of above each item also respectively possesses its progressive character.


Summary of the Invention:

The present invention relates to a design of an internal combustion engine which improves pollution of engine and its main body is exchange pressure-saved gas chamber. In this design, rotary type, linear type and reciprocating type embodiments are obtained by selecting structure of main body of engine and varying the structures of exchange pressure-saved gas chamber, gas chamber and gate plate, working angle of engine are enlarged by selecting exchange pressure-saved gas chamber and lowering down pollution because of separation of gas chamber and two times intake help combustion, and it can reduce vibration through rotary engine of right circular rotor and provide linear drive and reciprocating type separate gas chamber, this design compares with conventional reciprocating engine: it possesses many merits more than the conventional reciprocating engine, for example, the conventional four-stroke internal combustion engine possesses low pollution, but its explosive stroke of real output work is only 1/4 of working angle, and although the working angle of two-stroke engine possesses about 1/2 cycle working angle, but its drawback is that there co-exists a section of intake and exhaust during the stroke, it will cause incomplete combustion and pollution, owing to the function of exchange pressure-saved gas chamber and separation gas chamber, the present invention can prevent the coexistence of intake and exhaust, and promote effectiveness of combustion (effective of anti-pollution by the return combustion of waste gas, as attachment I) by the return combustion of waste gas of pressure-saved gas chamber and two times help combustion.

Above design possesses two sets of separate gas chamber which are respectively used for produce functions of two procedures in the four procedures of intake, compression, explosion, exhaust of OTTO cycle, these two sets of separate gas chamber are constituted by cylinder, exterior arc, ring inner wall, disk surface or conic surface or concave surface or linear coupled surface gas chamber, or they are constituted by double gas chamber formed by double-side piston, or two sets of gas chamber in which two sets of piston are lir'ked. This design mainly includes: rotary or linear internal combustion engine which can drive in one-way or two-way and is constituted by active body with common use gate plate set and passive body with separate gas chamber connected in series, and rotary or linear internal combustion engine with function of saving pressure and returning combustion of waste gas are combined by exchange gas chamber set with obliquely stridden or inclined guide groove and function of saving pressure and passive body with cross separate gas chamber or reciprocating internal combustiton engine with exchange pressure-saved gas chamber and separate gas chamber are constituted by double-side piston or double piston ocnnected in series, and exchange valve.

Its detailed structures are as follows:

A: Common use internal combustion engine unit with exchange gas chamber and separate gas chamber, according to the selection of one-way or two-way drive, drive, drive type of active body and passive body, and gas chamber, it includes the following structures and characteristic:

a. One-way drive common use gate plate rotary type internal combustion engine.

I. Internal rotor motion body possesses structure of gate plate seat, gate plate set.

II. External rotor motion body possesses tructure of gate plate seat gate plate set.

III. Internal rotor motion body possesses structure of gas chamber set.

IV. External rotor motion body possesses structure of gas chamber set.

b. One-Way drive common use gate plate and gas chamber rotary type internal combustion engine:

I. Internal rotor motion body possesses structure of gate plate seat gate plate set.

II. External motion body possesses structure of gate plate seat gate plate set.

III. Internal motion body possesses structure of gas chamber set.

IV. External motion body possesses structure of gas chamber set.

c. One-Way drive common use gate plate linear type internal combustion engine:

I. Motion body possesses gate plate seat gate plate set structure.

II. Fixed rail possesses gate plate seat gate plate set structure.

d. One-Way drive common use gate plate and gas chamber linear type internal combustion engine:

I. Motion body possesses structure of gate plate seat and common use gate plate set.

II. Fixed rail possesses structure of gate plate seat and common use gate plate set.

e. Two-Way drive common use gate plate rotary type internal combustion engine:

I. Internal motion body possesses structure of gate plate seat gate plate set.

II. External motion body possesses structure of gate plate seat gate plate set.

III. Internal motion body possesses structure of gas chamber set.

IV. External motion body possesses structure of gas chamber set.

f. Two-Way drive common use gate plate linear type internal combustion engine:

I. Motion body possesses structure of gate plate seat gate plate set.

II. Motion body possesses structure of gas chamber set.

B. According to the drive type of active body and passive body and structure and characteristic of exchange gas chamber, independent gate plate type internal combustion engine with exchange gas chamber and separate gas chamber includes:

a. Drive method of active body and passive body

I. Intake compression gas chamber Cx and explosive exhaust gas chamber Cy are placed in a same body.

II. Intake compression gas chamber Cx and explosive exhaust gas chamber Cy are placed in different bodies.

III. Structure of exchanging fuel gas through guide hole of gate plate and guide way of active body.

b. Structure and characteristic of exchange gas chamber Cz:

I. Structure of rectangular or oval-shaped oblique stride gas chamber set Cx,Cy.

II. Main chamber of exchange gas chamber is placed on the rail of gas chamber Cy, and is stridden over gas chamber Cx by inclined guide groove.

III. Quter guide tube type exchange gas chamber.

IV. Gas chamber set possesses exchange gas chamber with guide transverse groove.

V. Exchange gas chamber guide groove or guide transverse groove possesses turbulent flow structure of turbulent flow column, barrier, hole, granule, curved path.

VI. Independent pressure-saved gas chamber CP is assembled at the rear end outside gas chamber Cy.

' VII. Independent pressure-saved gas chamber is assembled at the rear end of exchange gas chamber Cx.

VIII. Structure possesses function of leaking pressure.

c: Two times help combustion structure of gate plate set internal combustion engine in Items A and B.

I. Gas chambers Cx.Cy are connected in series in same body and posses two times help combustion with simple set of gas chamber Cx and multi-set gate plate Gx.

II. Gas chamber Cx.Cy are connected in series in same body and possess two times help combustion with multi-set gas chamber Cx and single set of gate plate Gx.

III. Gas chambers Cx.Cy are parallelly connected in same body and possess two times help combustion of single set of gas chamber Cx and multi-set gate plate set Gx.

IV. Gas chambers Cx, Cy are parallelly connected in same body and possess two times help combustion of multi-set gas chamber Cx and single set of gate plate set Gx.

V. Two times help combustion of multi-row gas chamber Cx connected in parallel with single set of gas chamber Cy in same body.

VI. Two times help combustion of gas chambers Cx, Cy connected and mixed in series and parallel in same body.

VII. Two times help combustion of single set of gate plate Gx, multi-set serial connection gas chamber Cx connected in parallel with gas chamber Cy of different body.

VIII. Two times help combustion of multi-set gas chamber Cx connected in parallel with gas chamber Cy of different body.

IX. Two times help combustion of gate plate set guide hole gas chamber Cx with multi-set gate plate Gx connected in parallel with gas chamber Cy in same body.

X. Two times help combustion of gate plate set with guide hole and multi-set serial connection gas chamber Cx connected in parallel with single set of gas chamber Cy in same body.

XI. Two times help combustion of gate plate set with guide hole and multi-row gas chamber Cx connected in parallel with signle set of gas chamber Cy in same body.

XII. Two times help combustion of gate plate set with guide hole and gas chambers Cx, Cy are connected in series and mixed in same body.

XIII. Two times help combustion of gate plate set with guide hole and multi-set serial connection gas chamber set Cx and single set of gate plate set Gx are connected in parallel with gas chamber Cy of different body.

XIV. Two times help combustion of gate plate set with guide hole and multi-row parallel connection gas chamber Cx are connected in parallel with gas chamber Cy of different body.

D: Compound fuel igniting structure of internal combustion engine of Item C.

E: Structure, characteristics, functions and dynamic combination of gas chamber set Cx,Cy of internal combustion engine as mentioned in Items A, B, C, D, include:

I. Dynamic unit combined by single set of intake compression gas chamber Cx and single set of explosive exhaust gas chamber Cy.

II. Dynamic unit ocmbined by multi-set of gas chamber Cx,Cy

III. Dynamic unit combined by multi-sectional gas chamber Cx and single set of gas chamber Cy.

IV. Dynamic unit combined by multi-row gas chamber Cx and single row of gas chamber Cy.

V. Dynamic unit combined by side-by-side multi-row gas chamber set Cx, Cy.

VI. Dynamic unit combined by gas chamber set Cx,Cy with guide transverse groove.

F: Structure and characteristic of gate plate set of internal combustion engine as mentioned in ITems A, B, C, D, include:

I. Single plate structure.

II. Combined gate plate structure.

III. Inclined crack at bottom end of gate plate.

IV. Lubricant groove

V. Turbulent gate GM at front and rear ends of trace of gate plate set Gx

VI. Section of gate plate set

VII. Guide hole

G: Igniting device:

H: Structure of internal combustion engine as mentioned in Item A, B, C, D

I. Columnar or cylindrical internal external rotor type internal combustion engine.

II. Disk end surface coupled rotor type internal combustion engine.

III. Columnar surface and disk end mixed type internal combustion engine.

IV. Conic surface coupled rotor type internal combustion engine.

V. Linear driving internal combustion engine.

I. Lubricant structure of internal combustion engine as mentioned in Items A, B, C, D:

I. Oil is pumped into coupled surface of Cx, Cy by independent pump.

II. Gate plate motion osmotic lubricant structure

J. Cooling structure of internal combustion engine as mentioned in Items A, B, C, D

I. including turbine blade circulative cooling structure

II. including axle-radial blade open type cooling structure

III. Axle-radial cooling fin free air cooling structure.

K: Single work or double work dynamic output structure of internal combustion engine in Items A, B, C, D

I. Single work dynamic structure

II. Double work dynamic structure

L: Intake and exhaust eoupled interface device of internal combustion engine in Items A, B, C, D

I. Ring type coupled interface device

II. Ring type coupled synchronous distributive interface device

III. Lateral coupled interface device

IV. Lateral coupled synchronous distributive interface device

V. Electro-magnetic valve or mechanical valve synchronous distribution interface device.

M: Reciprocating internal combustion engine with exchange gas chamber and separate gas chamber, its structures includes following design:

a. structural type:

I. Single work driving structure

II. Compound fuel ignition

III. Double work driving structure

IV. Two times help combustion

b. Fuel transmission structure:

I. Piston actuating type valve with return spring

II. Valve assembled on piston

III. It is driven by outer synchronous eccentric motion structure.

## BRIEF DESCRIPTION OF THE DRAWINGS

Drawings in the specification are described as follows:

Fig. 1 is the first embodiment of common gate plate set.

Fig. 1-1 is the second embodiment of common gate plate set.

Fig. 2 is the first functional graphic view of common gate plate set.

Fig. 2-1 is the second functional graphic view of common gate plate set.

Figs. 3, 3-1 are the first embodiment of common gate plate rotary internal combustion engine wherein the structure having gate plate seat, gate plate set is internal rotor motion body.

Figs. 3-2, 3-3 are the second embodiment of common gate plate rotary internal combustion engine wherein the structure having gate plate seat, gate plate set is internal rotor motion body.

Figs. 3-4, 3-5 are the third embodiment of common gate plate rotary internal combustion engine wherein the structure haveing gate plate seat, gate plate set is internal rotor motion body.

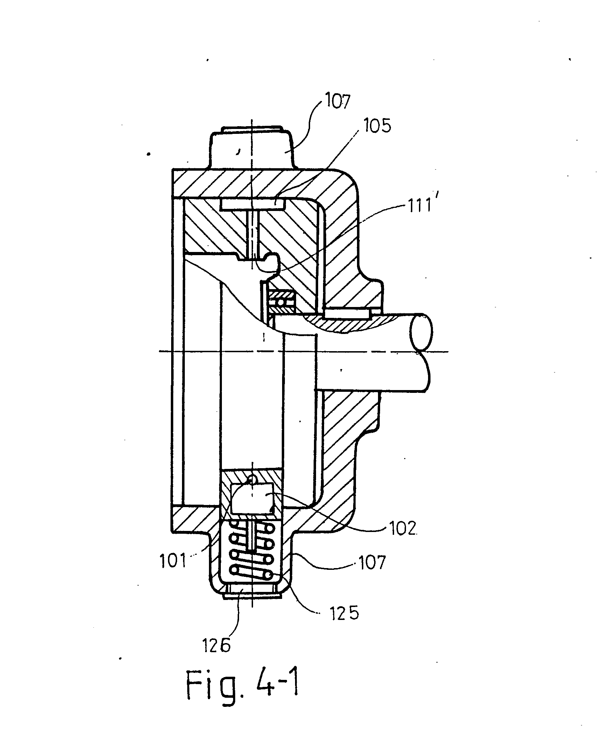

Figs. 4, 4-1 are the embodiment of common gate plate rotary internal combustion engine wherein the structure having gate plate seat, gate plate set is external rotor motion body.

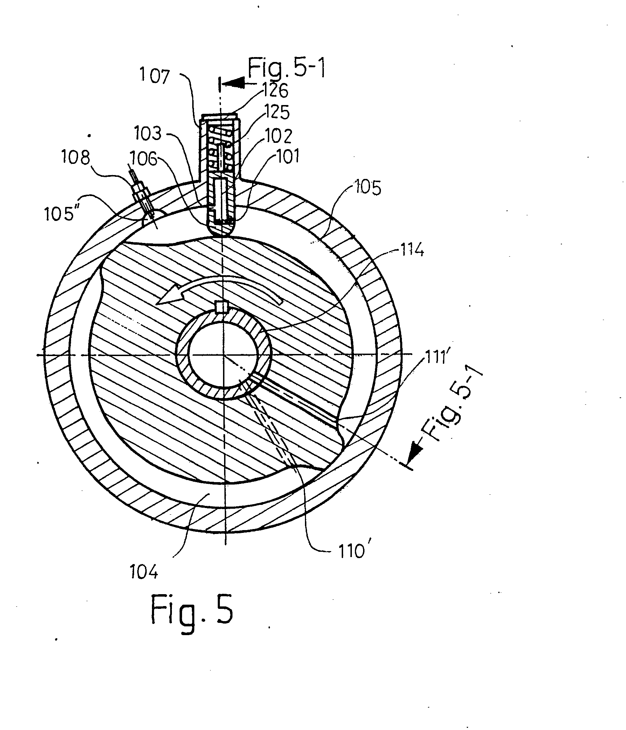

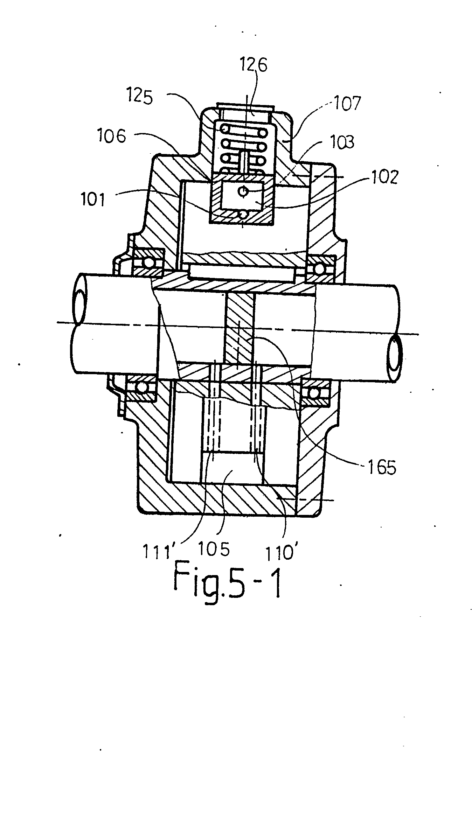

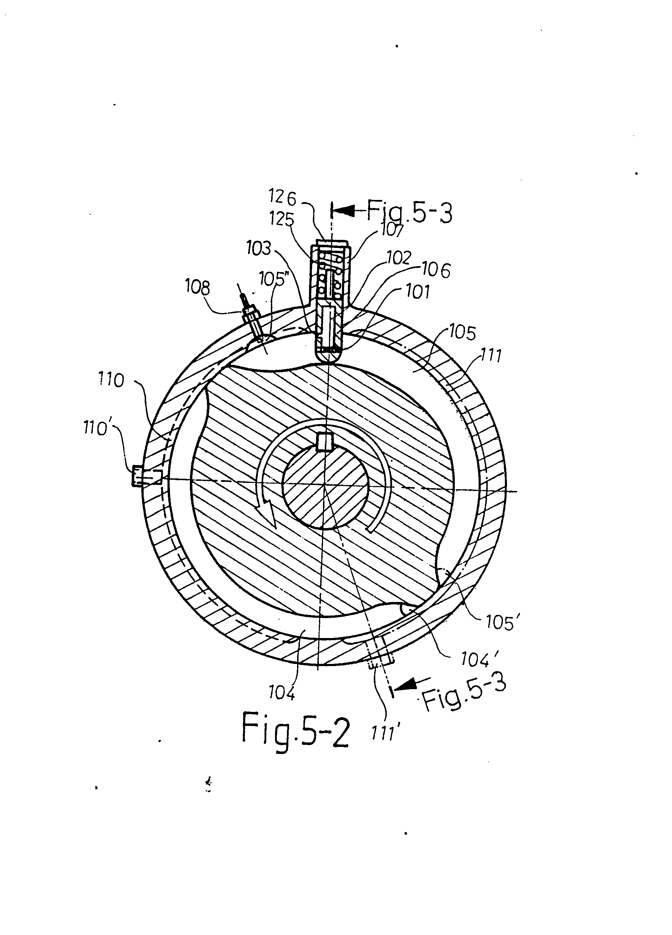

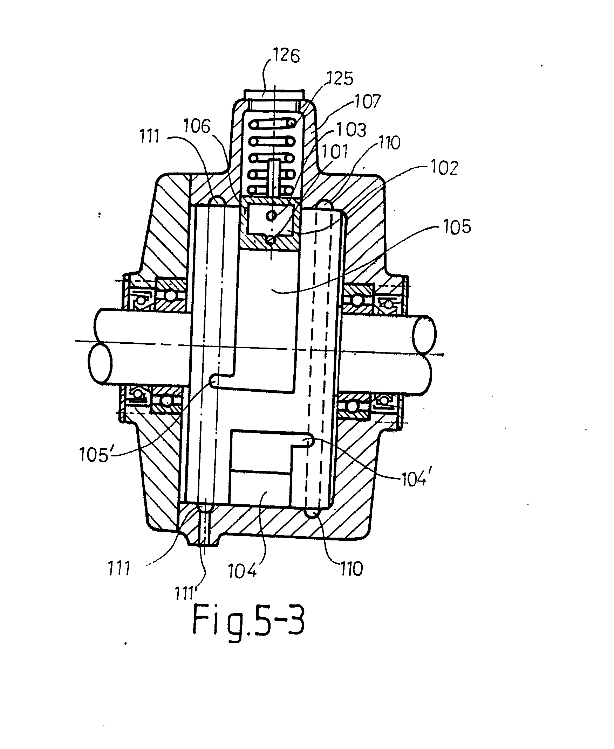

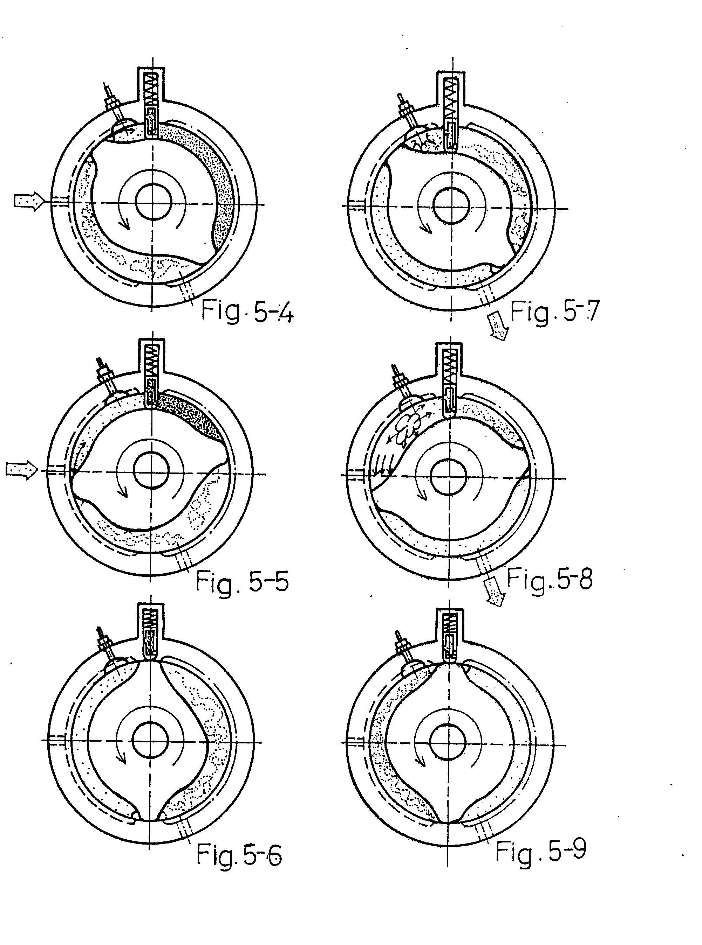

Figs. 5, 5-1 are the first embodiment of common gate plate rotary internal combustion engine wherein the structure having gas chamber set is internal rotor motion body.

Figs. 5-2, 5-3 are the second embodiment of common gate plate rotary internal combustion engine wherein the structure having gas chamber set is internal rotor motion body.

Figs. 5-4, 5-9 are the working procedure diagram of the embodiment of common gate plate rotary internal combustion engine wherein the structure having gas chamber set is internal rotor motion body.

Figs. 6, 6-1 are the embodiment of common gate plate rotary internal combustion engine wherein structure having gas chamber set is external rotor motion body.

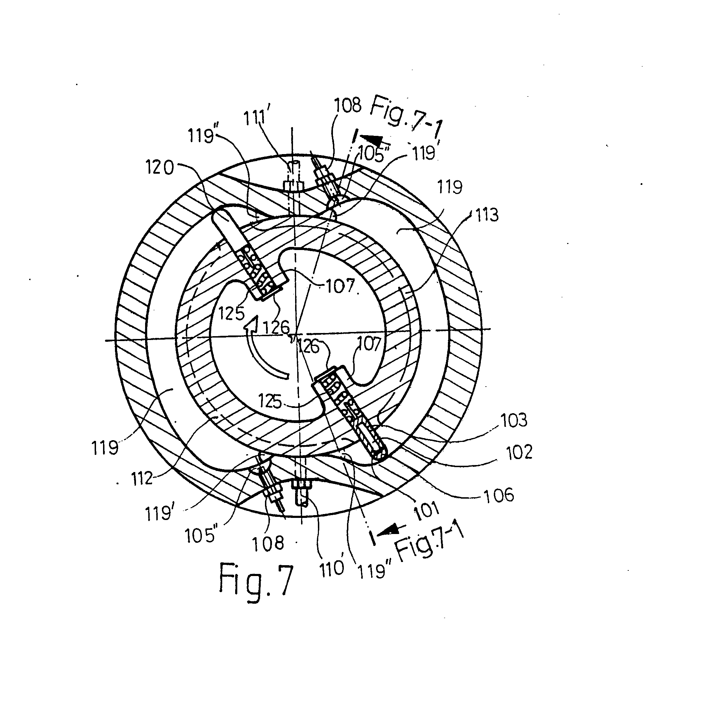

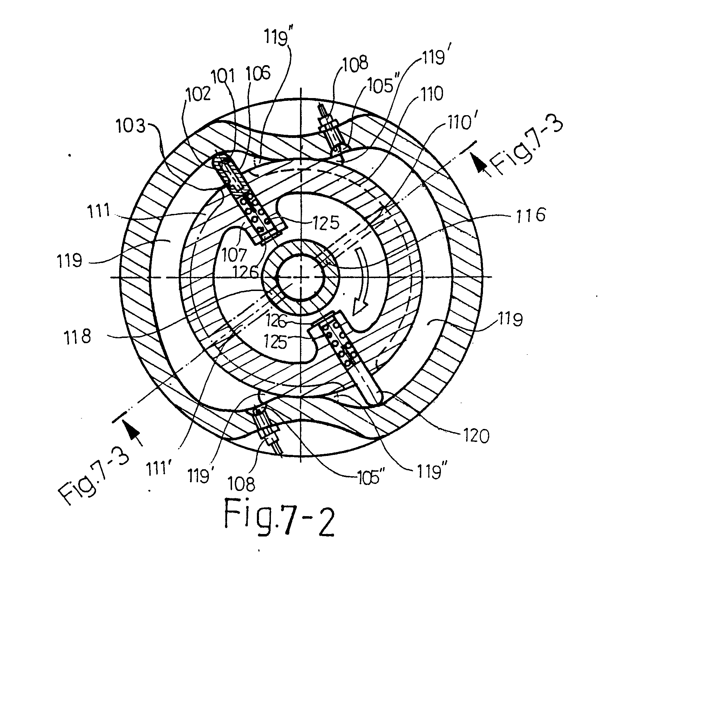

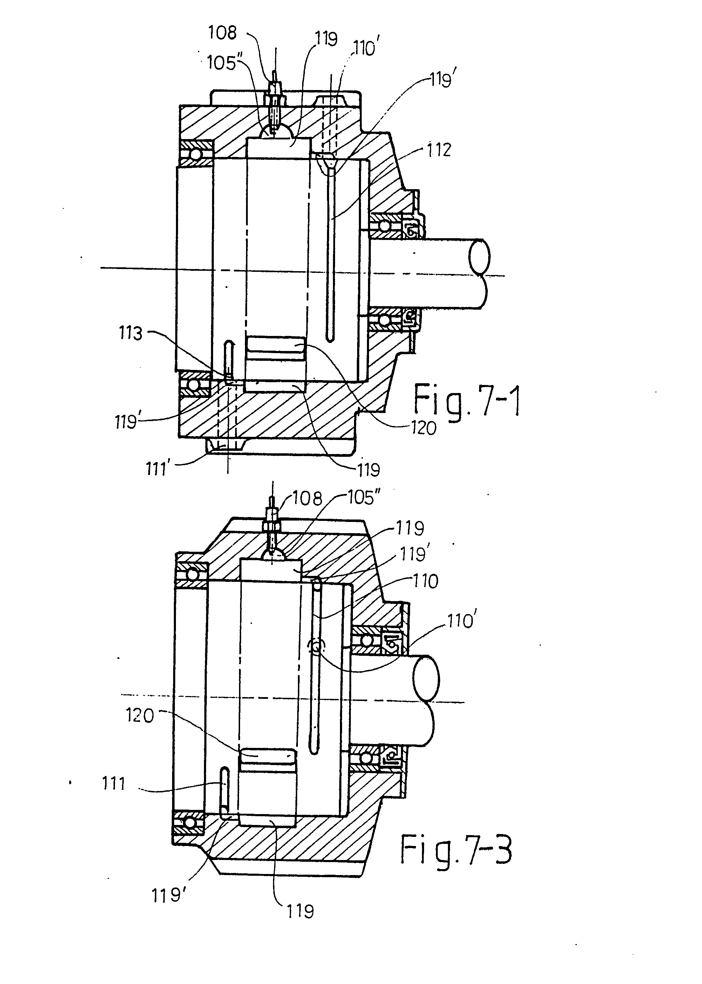

Figs. 7, 7-1 are the first embodiment of common gate plate common gas chamber internal combustion engine wherein structure having gate plate seat, gate plate set is internal rotor motion body.

Figs. 7-2, 7-3 are the second embodiment of common gate plate common gas chamber internal combustion engine wherein structure having gate plate seat, gate plate set is internal rotor motion body.

Figs. 8, 8-1 are the embodiment of common gate plate common gas chamber internal combustion engine wherein structure having gate plate seat, gate plate set is external rotor motion body.

Figs. 9, 9-1 are the embodiment of common gate plate common gas chamber internal combustion engine wherein structure having gas chamber set is internal rotor motion body.

Figs. 9-2 to 9-7 are the working procedure diagrams of common gate plate common gas chamber internal combustion engine wherein structure having gas chamber set is internal rotor motion body.

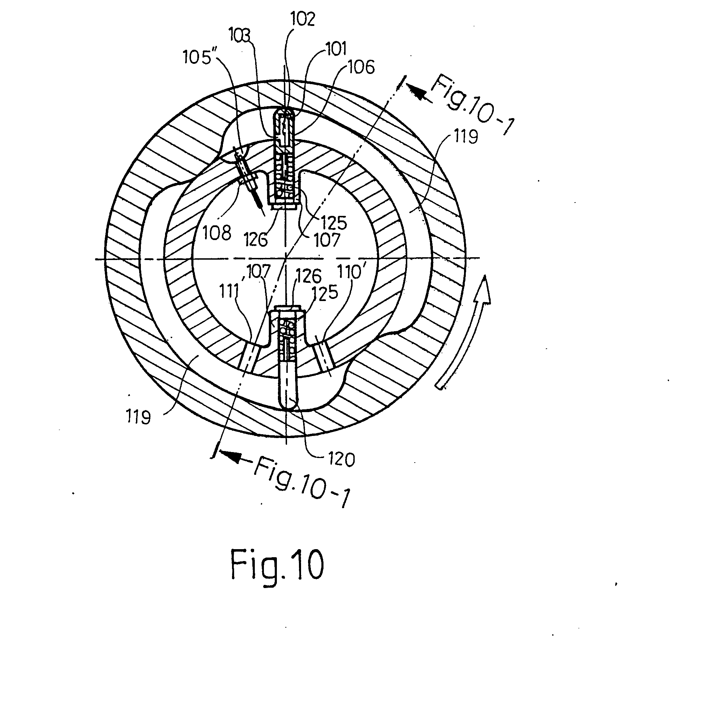

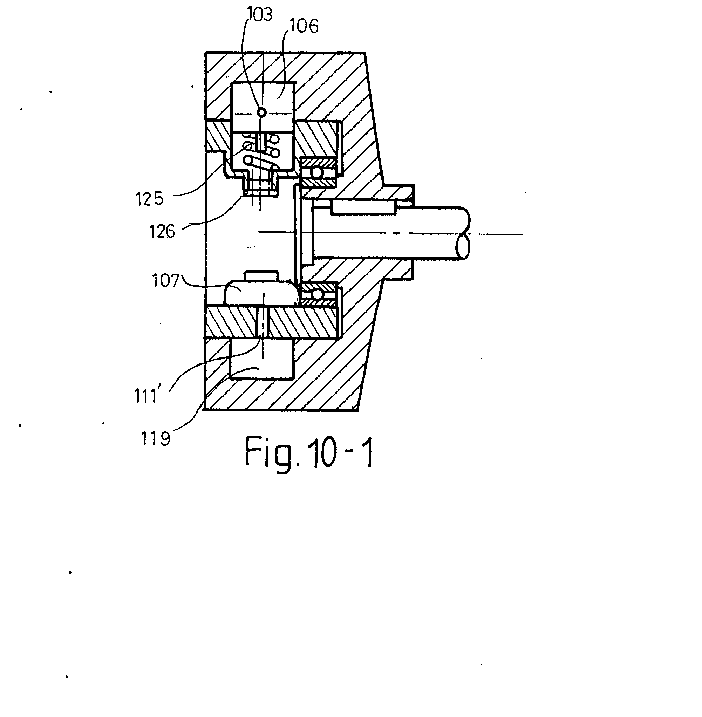

Figs. 10, 10-1 are the embodiment of common gate plate common gas chamber internal combustion engine wherein structure having gas chamber set is external rotor motion body.

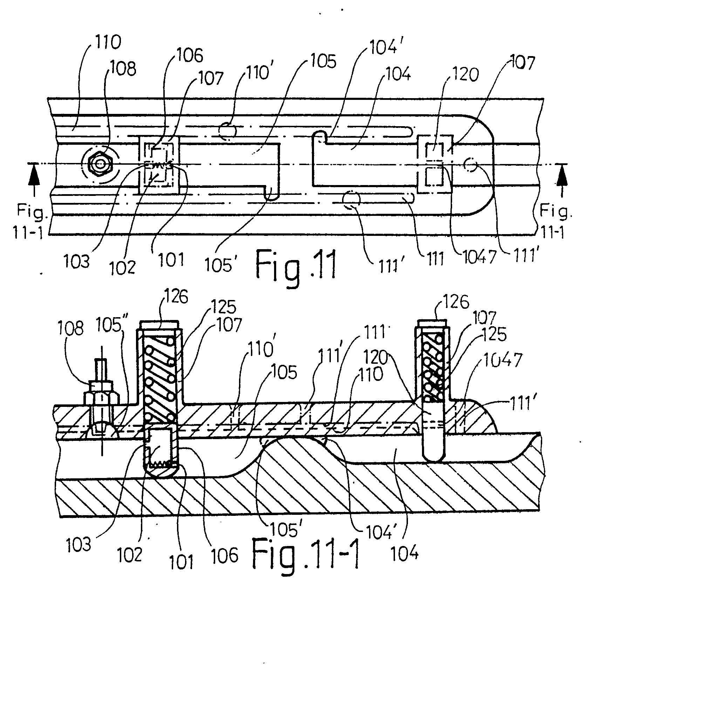

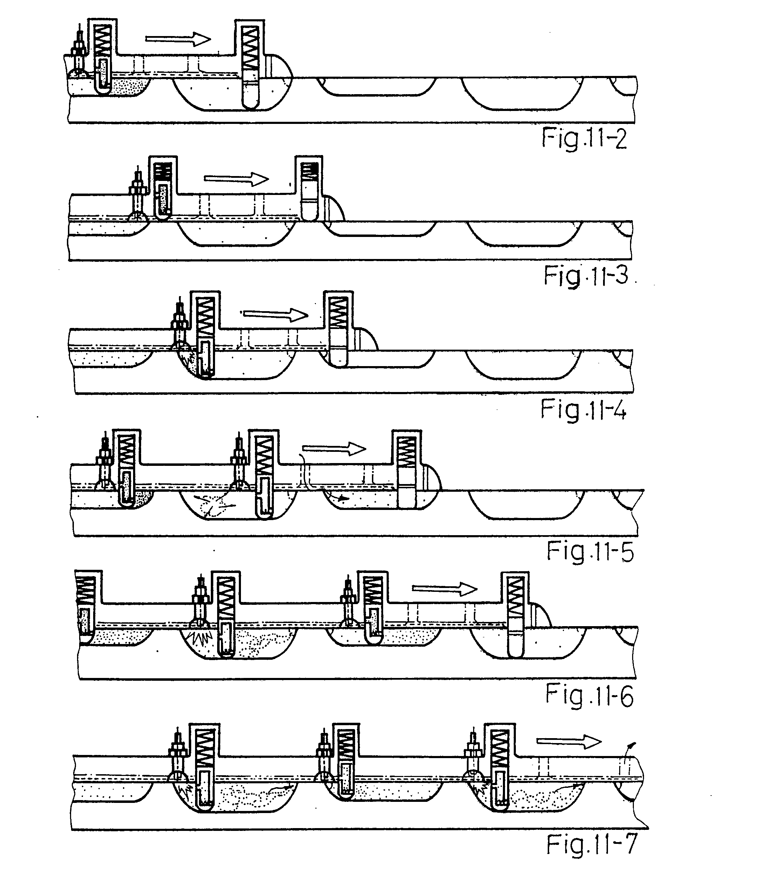

Fig. 11 is a top elevational view of the first embodiment of common gate plate linear type internal combustion engine wherein structure having gate plate seat gate plate set is motion body.

Fig. 11-1 is a side elevational view of the first embodiment of common gate plate linear type internal combustion engine wherein structure having gate plate seat gate plate set is motion body.

Fig. 11-2 to 11-7 are the working procedure diagrams of the first embodiment of common gate plate linear type internal combustion engine wherein structure having gate plate seat gate plate set is motion body.

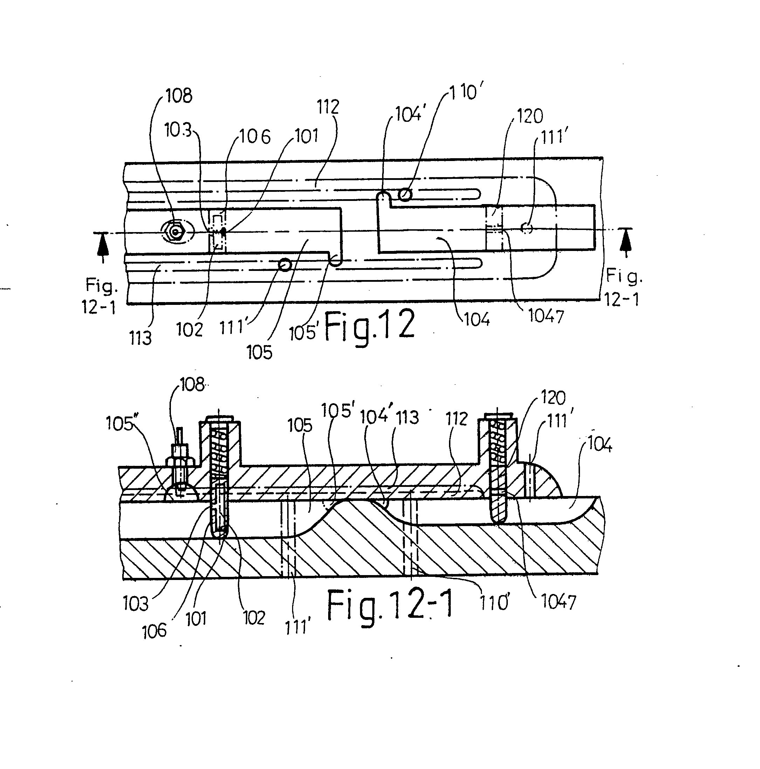

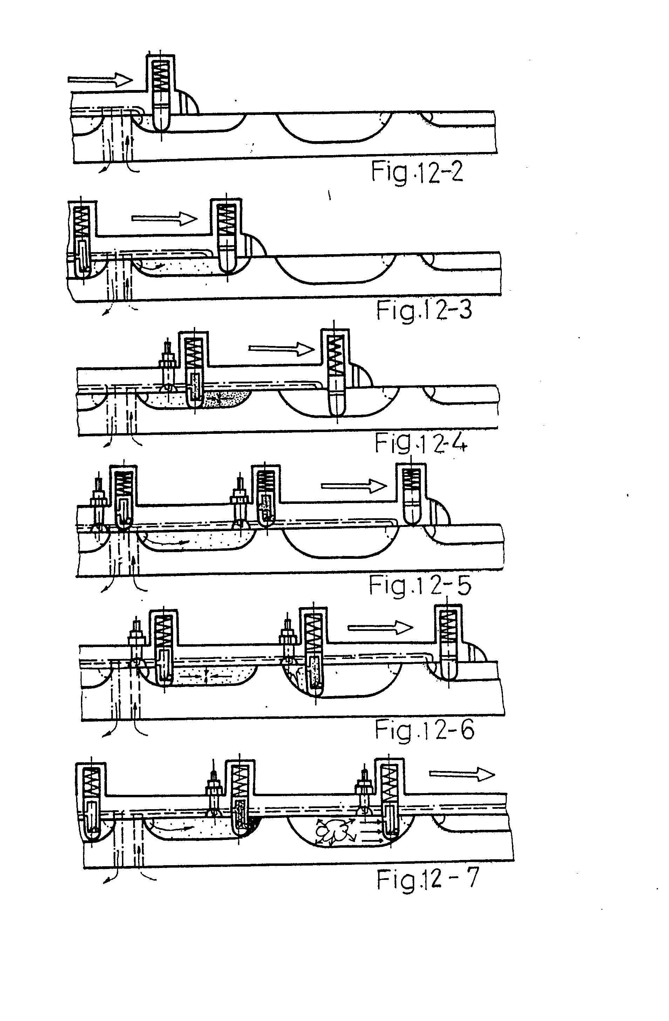

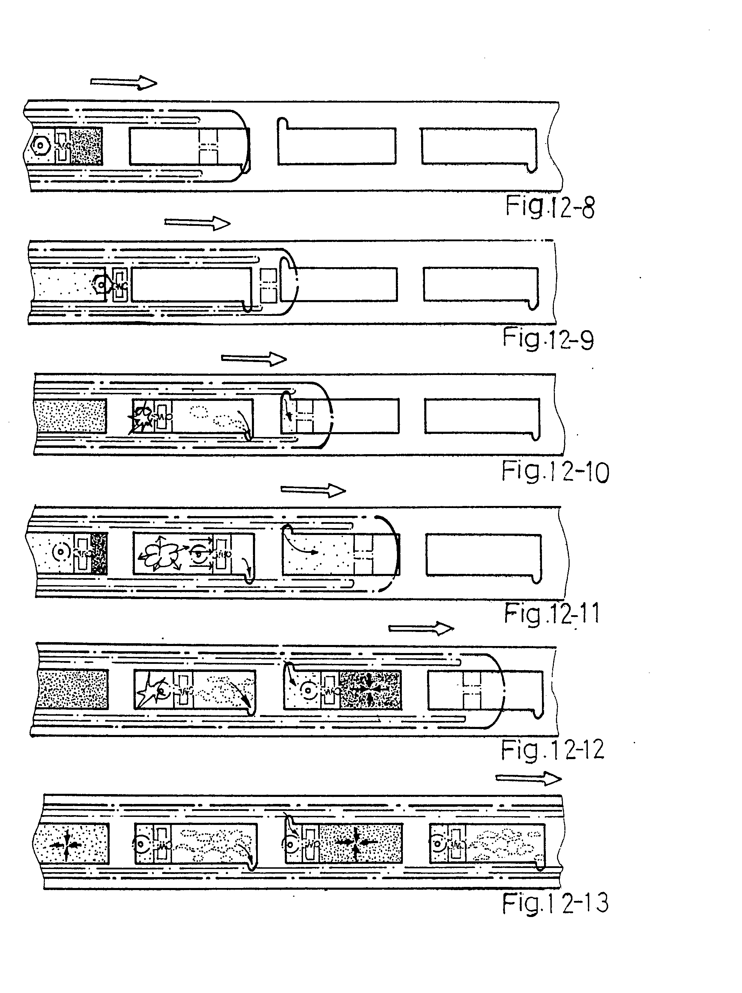

Fig. 12 is a top elevational view of the second embodiment of common gate plate linear type internal combustion engine wherein structure having gate plate seat gate plate set is motion body.

Fig. 12-1 is a side elevational view of the second embodiment of common gate plate linear type internal combustion engine wherein structure having gate plate seat gate plate set is motion body.

Figs. 12-2 to 12-13 are the working procedure diagrams of the second embodiment of common gate plate linear type internal combustion engine wherein structure having gate plate seat gate plate set is motion body.

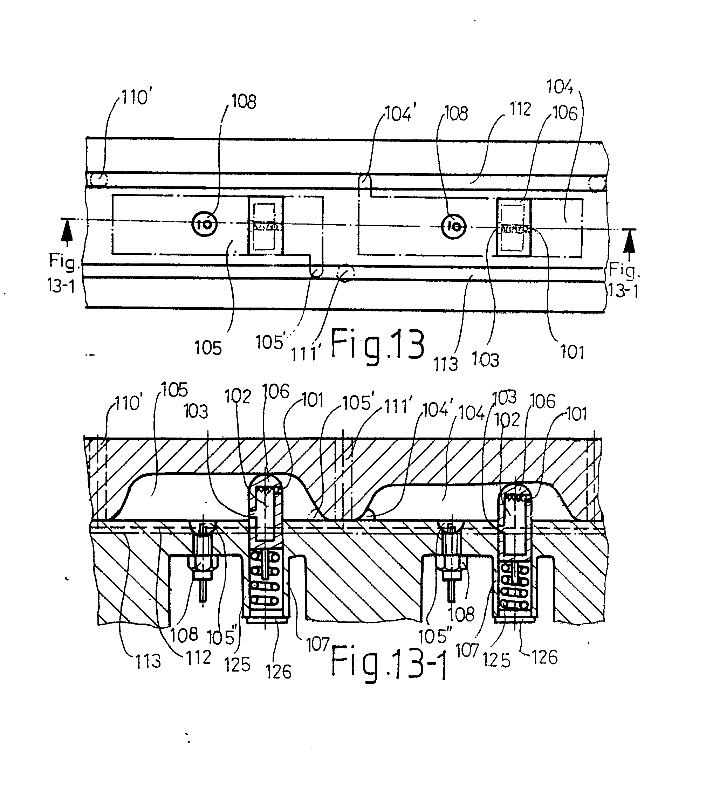

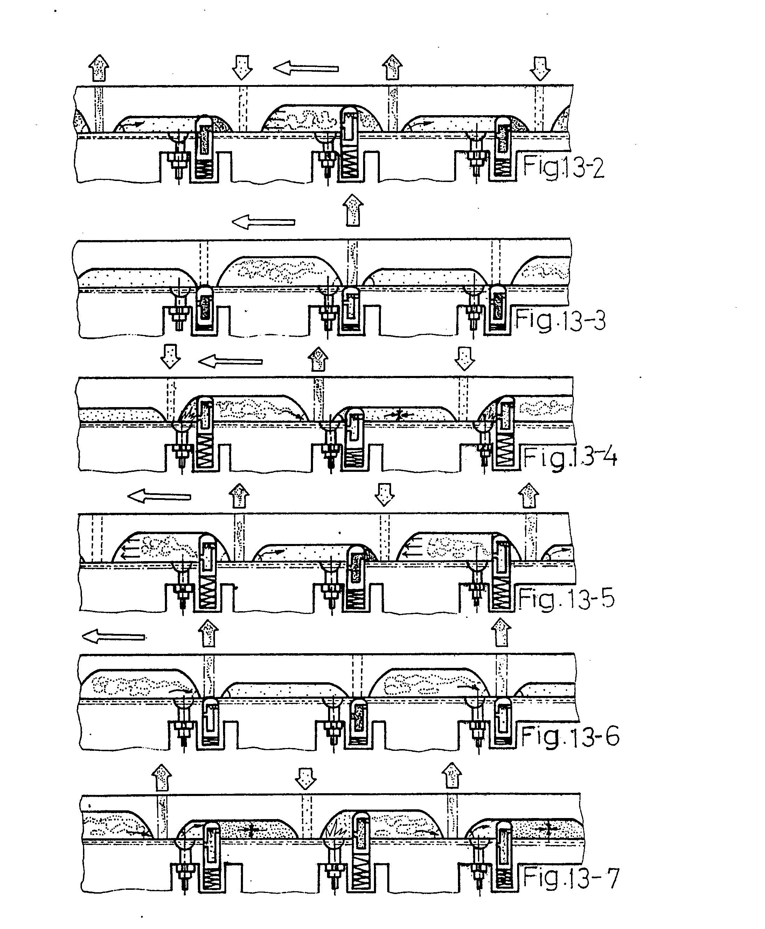

Fig.13 is a top elevational view of the first embodiment of common gate plate linear type internal combustion engine wherein structure having gate plate seat gate plate set is the fixed rail.

Fig. 13-1 is a side elevational view of the first embodiment of common gate plate linear type internal combustion engine wherein structure having gate plate seat gate plate set is the fixed rail.

Figs. 13-2 to 13-7 are the working procedure diagrams of the first embodiment of common gate plate linear type internal combustion engine wherein structure having gate plate seat gate plate set is the fixed rail.

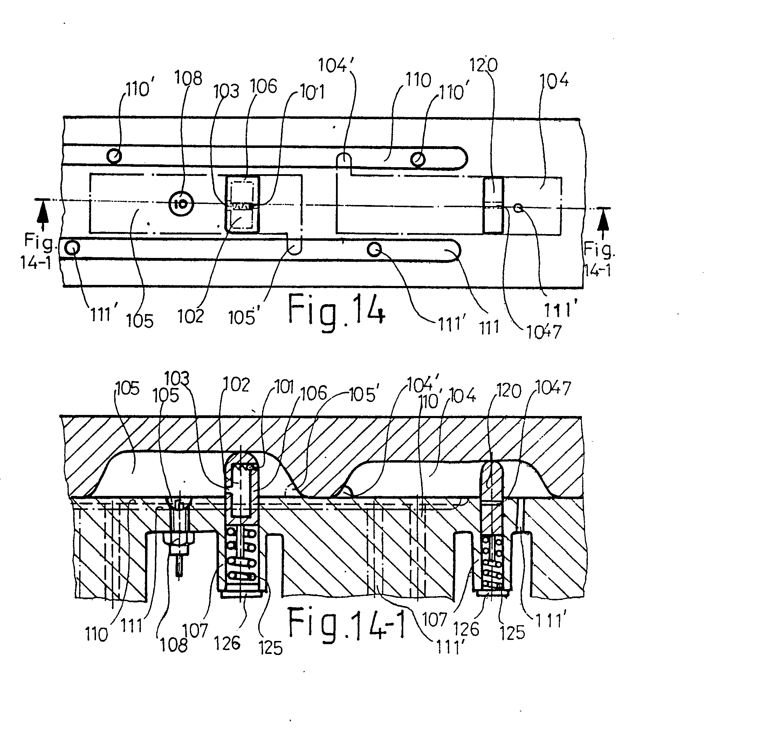

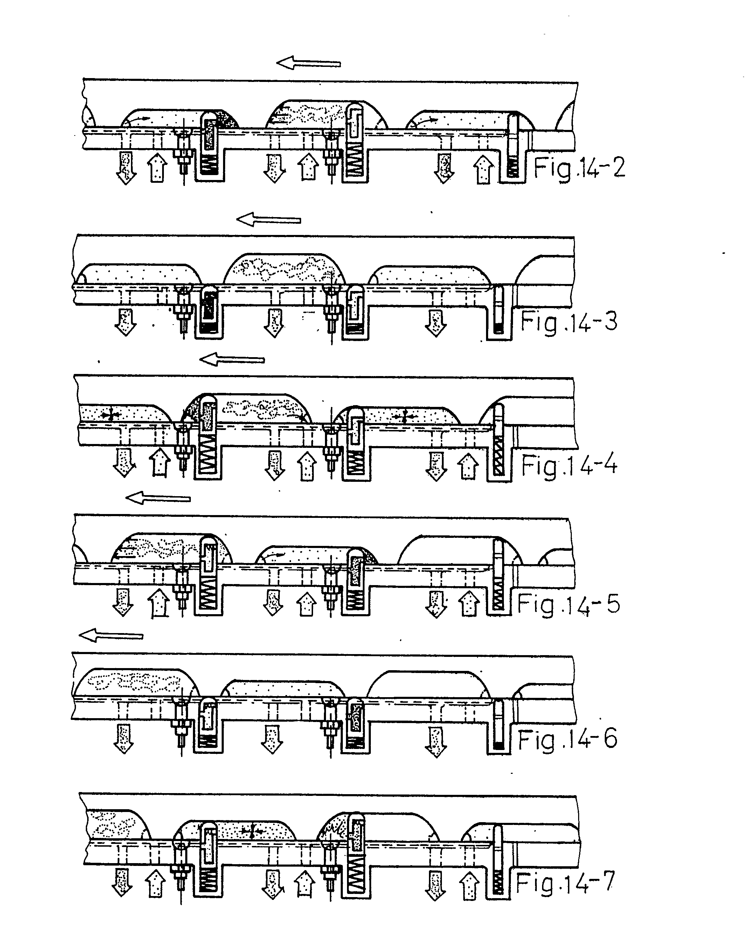

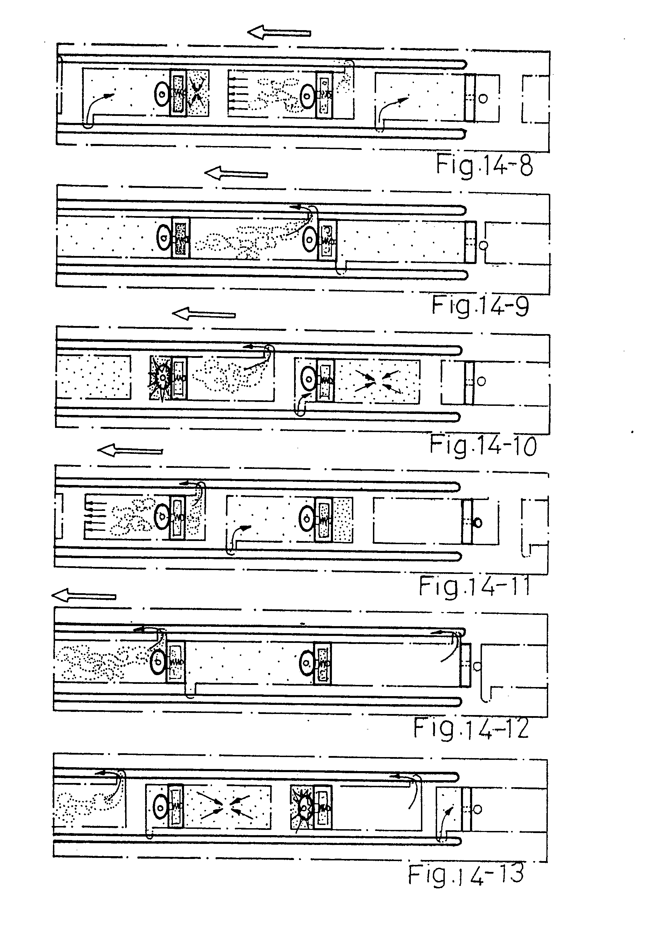

Fig. 14 is a top elevational view of the second embodiment of common gate plate linear type internal combustion engine wherein structure having gate plate seat gate plate set is the fixed rail.

Fig. 14-1 is a side elevational view of the second embodiment of common gate plate linear type internal combustion engine wherein structure having gate plate seat gate plate set is the fixed rail.

Figs. 14-2 to 14-13 are the working procedure diagrams of the second embodiment of common gate plate linear type internal combustion engine wherein structure having gate plate seat gate plate set is the fixed rail.

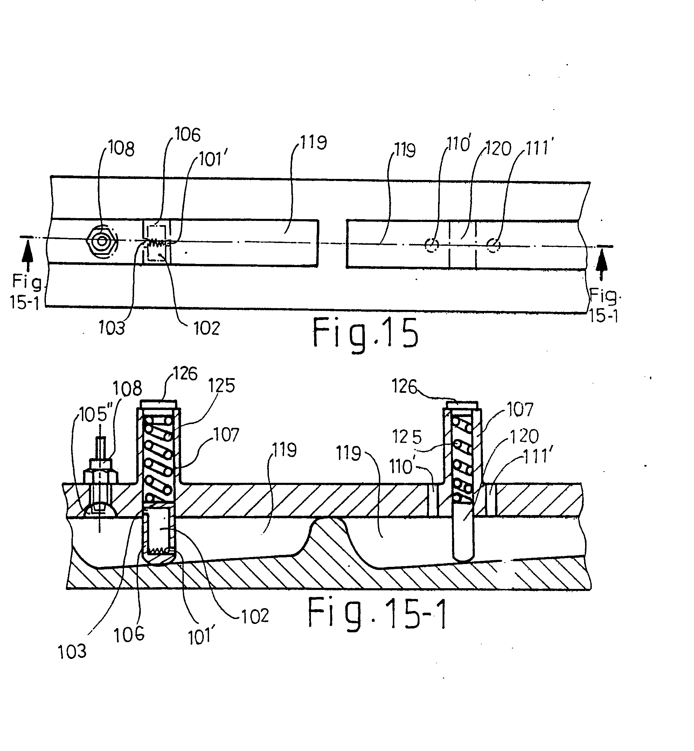

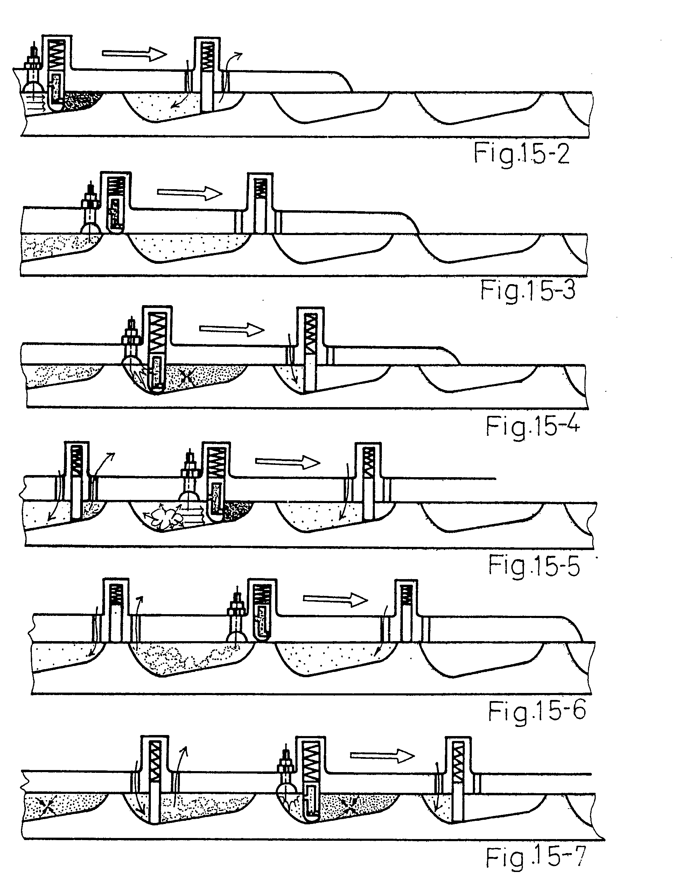

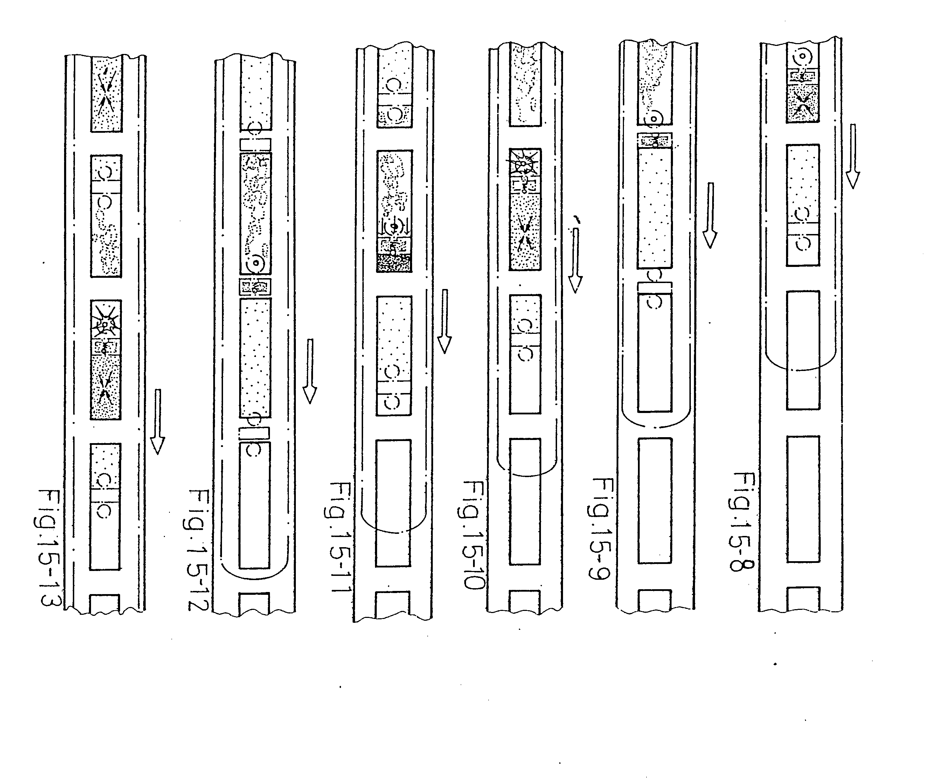

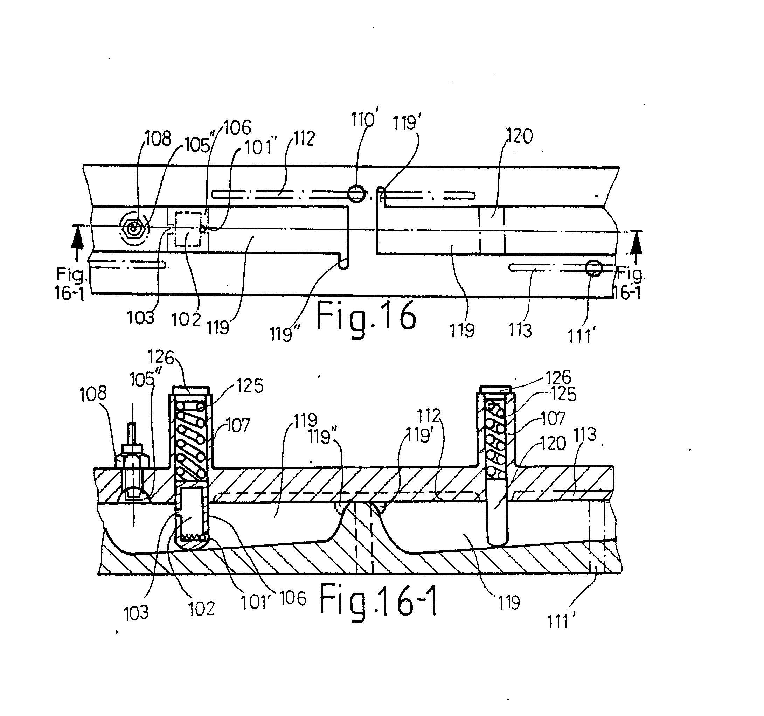

Fig. 15 is a top elevational view of the first embodiment of common gate plate common gas chamber linear type internal combustion engine wherein structure having gate plate seat and common gate plate set is motion body.

Fig. 15-1 is a side elevational view of the first embodiment of common gate plate common gas chamber linear type internal combustion engine wherein structure having gate plate seat and common gate plate set is motion body.

Figs. 15-2 to 15-3 are the working procedure diagrams of the first embodiment of common gate plate common gas chamber linear type internal combustion engine wherein structure having gate plate seat and common gate plate set is motion body.

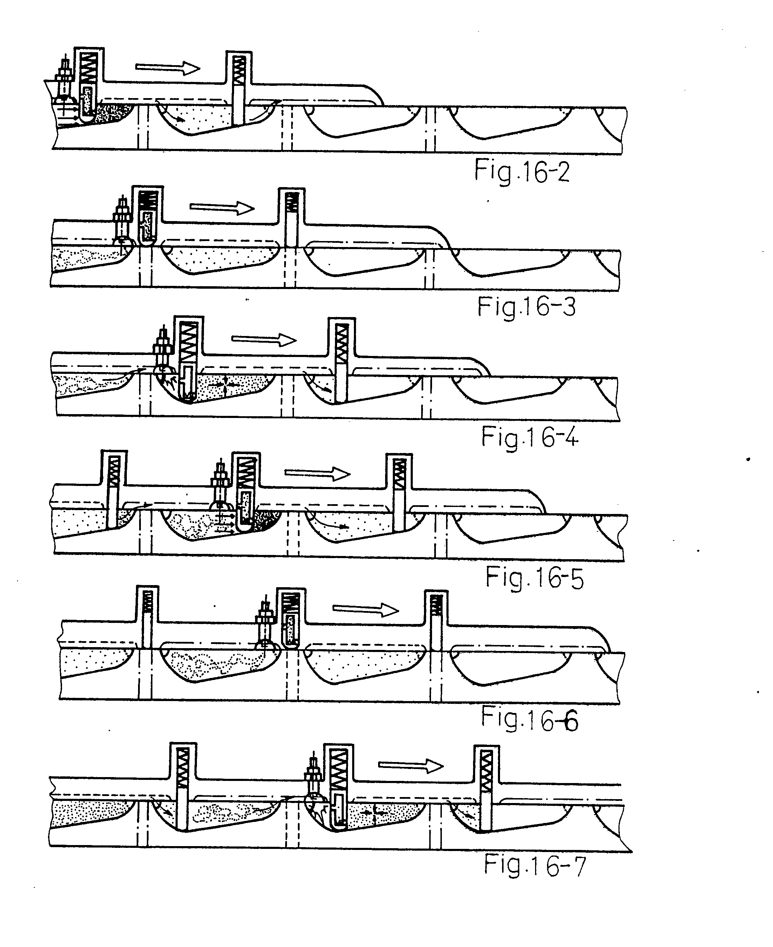

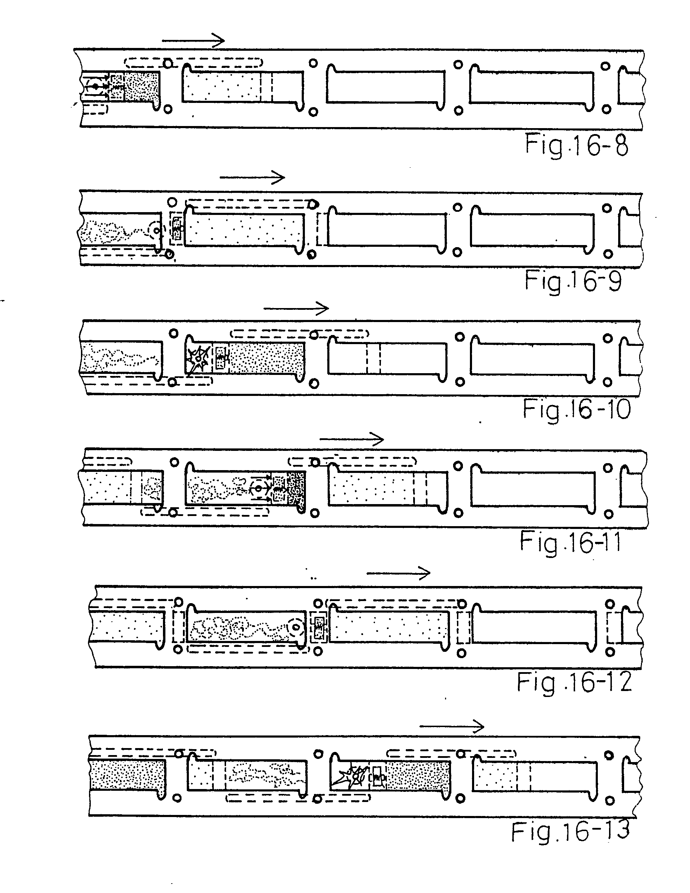

Fig. 16 is a top elevational view of the second embodiment of common gate plate common gas chamber linear type internal combustion engine wherein structure having gate plate seat and common gate plate set is motion body.

Fig. 16-1 is a side elevational view of the second embodiment of common gate plate common gas chamber linear type internal combustion engine wherein structure having gate plate seat and common gate plate set is motion body.

Figs. 16-2 to 16-13 are the working procedrue diagrams of the second embodiment of common gate plate common gas chamber linear type internal combustion engine wherein structure having gate plate seat and common gate plate set is motion body.

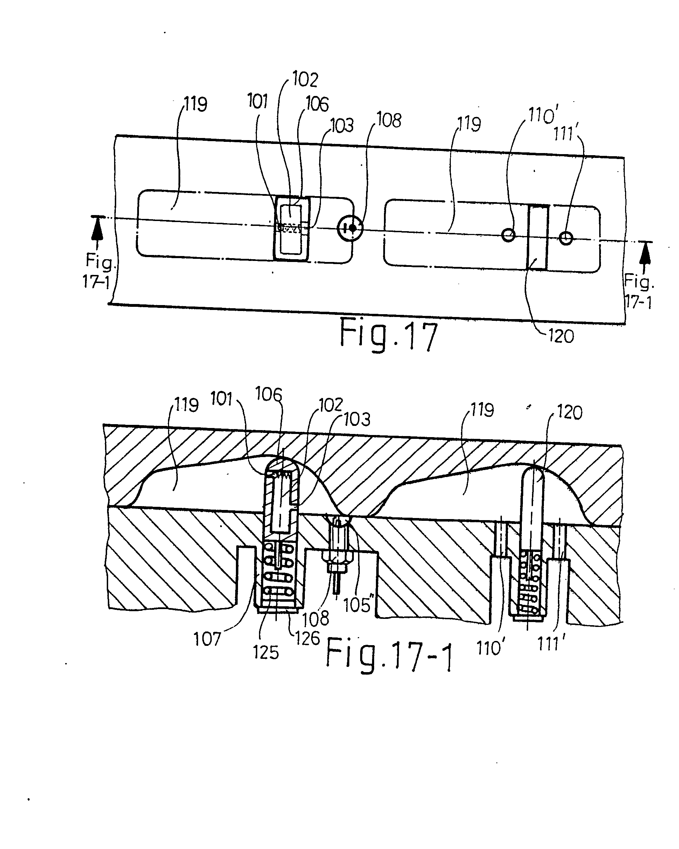

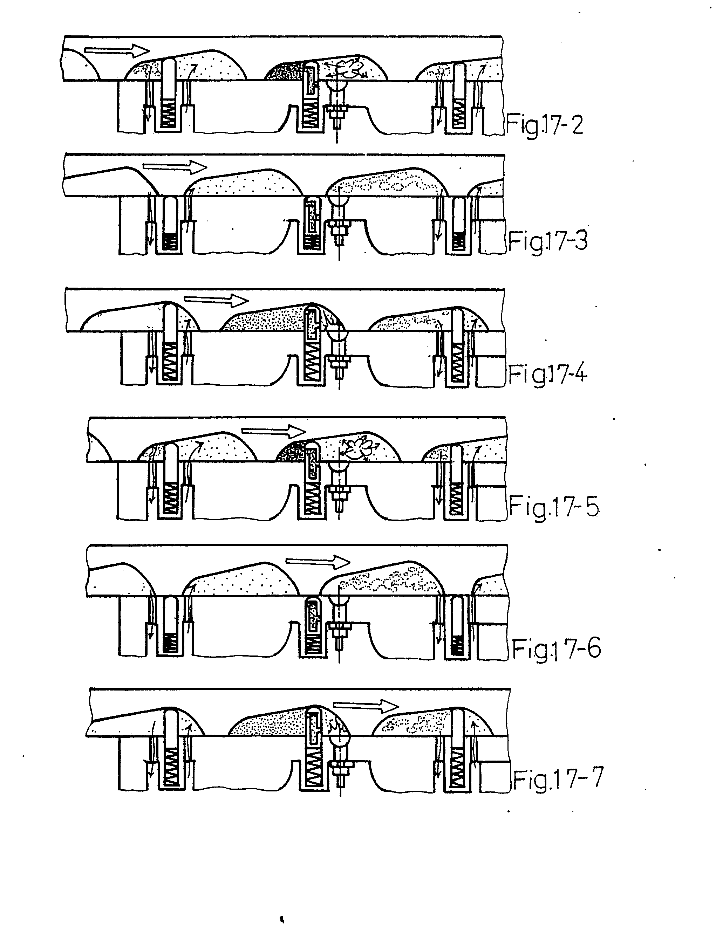

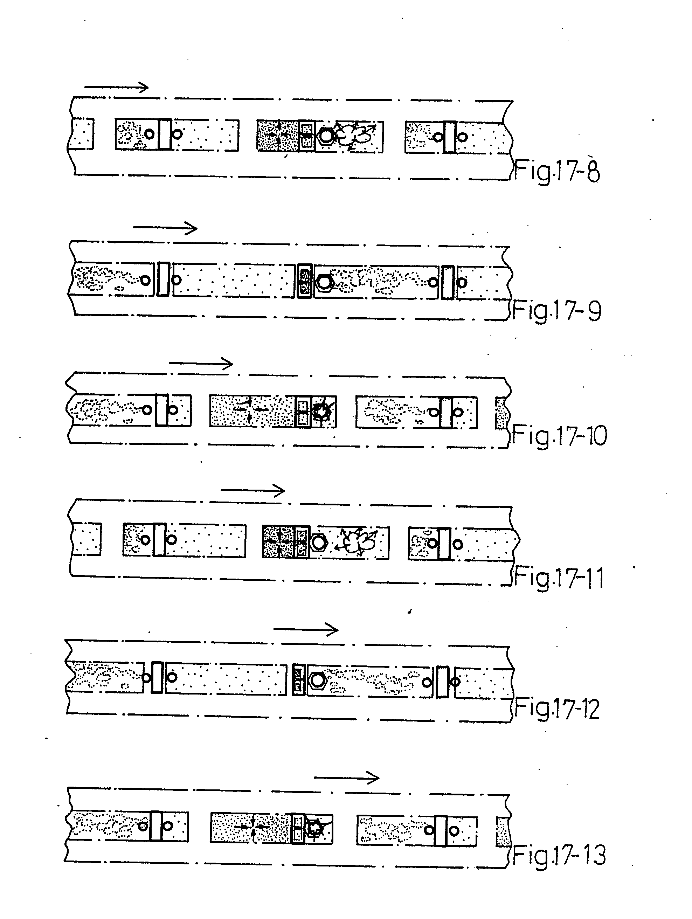

Fig. 17 is a top elevational view of the first embodiment of common gate plate common gas chamber linear type internal combustion engine wherein structure having gate plate seat and common gate plate set is the fixed rail.

Fig. 17-1 is a side elevational view of the first embodiment of common gate plate common gas chamber linear type internal combustion engine wherein structure having gate plate seat and common gate plate set is the fixed rail.

Figs. 17-2 to 17-13 are the working procedure diagrams of the first embodiment of common gate plate common gas chamber linear type internal combustion engine wherein structure having gate plate seat and common gate plate set is the fixed rail.

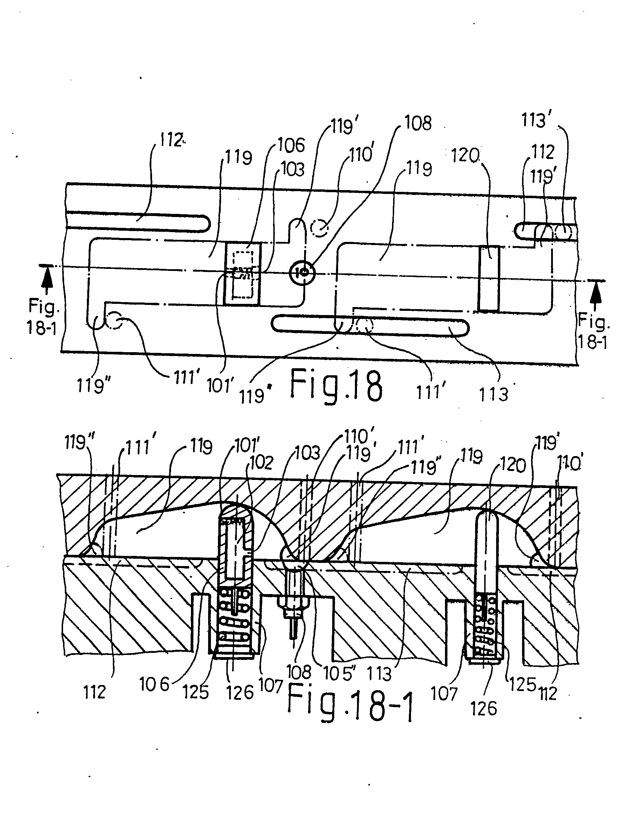

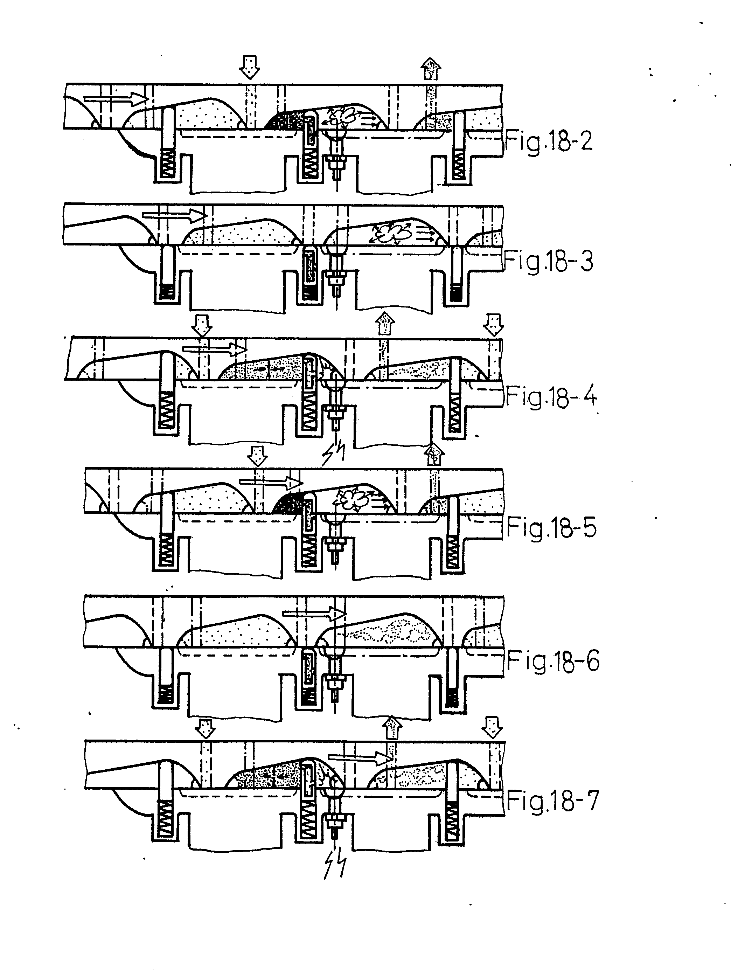

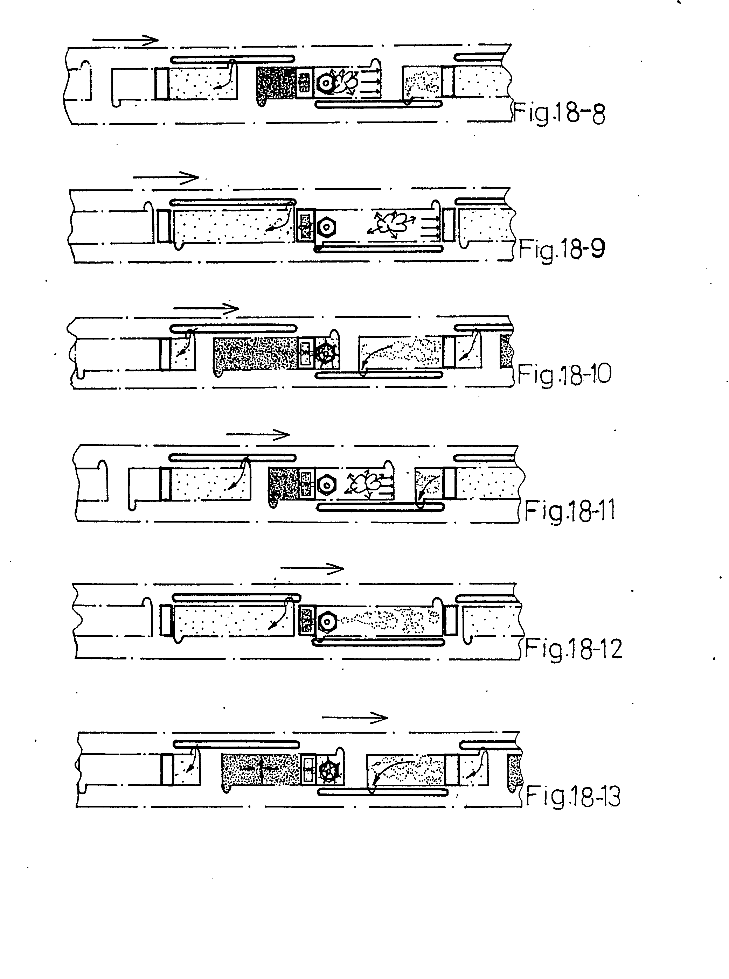

Fig. 18 is a top elevational view of the second embodiment of common gate plate common gas chamber linear type internal combustion engine wherein structure having gate plate seat and common gate plate set is the fixed rail.

Fig. 18-1 is a side elevational view of the second embodiment of common gate plate common gas chamber linear type internal combustion engine wherein structure having gate plate seat and common gate plate set is the fixed rail.

Figs. 18-2 to 18-13 are the working procedure diagrams of the second embodiment of common gate plate sommon gas chamber linear type internal combustion engine wherein structure having gate plate seat and common gate plate set is the fixed rail.

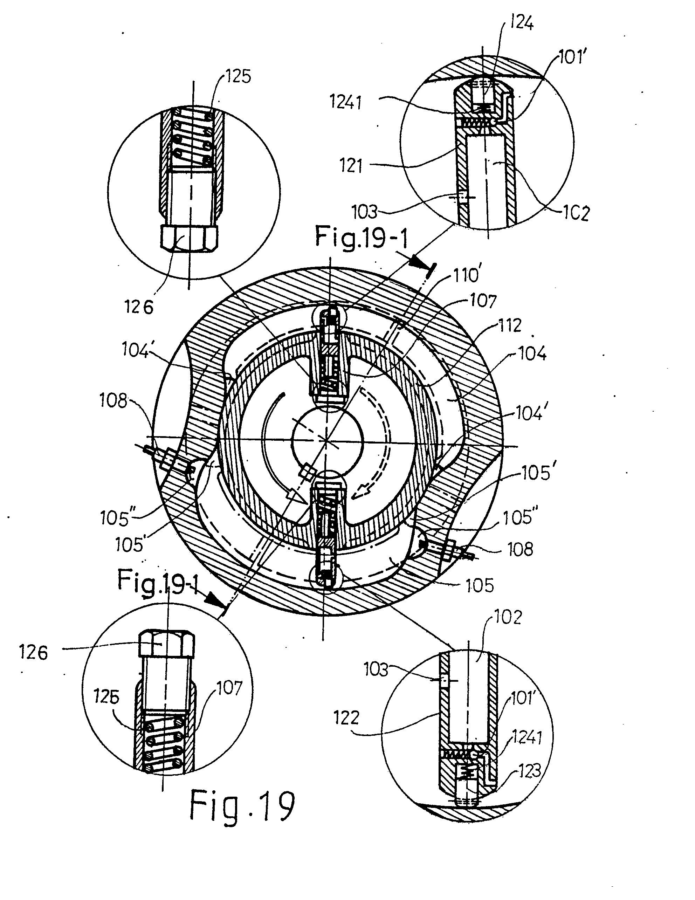

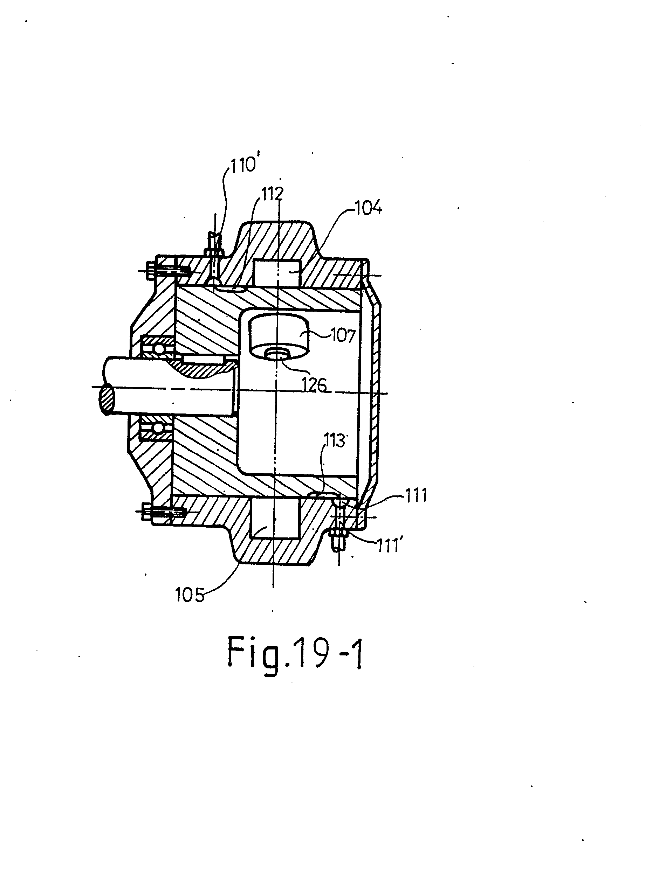

Fig. 19 is a graphic view of the embodiment of two-way drive common gate plate rotary internal combustion engine wherein structure having gate plate seat gate plate set is internal rotor motion body.

Fig. 19-1 is an exploded view of Fig. 19.

Fig. 20 is a structural graphic view of common gate plate set having terminal sub-gate.

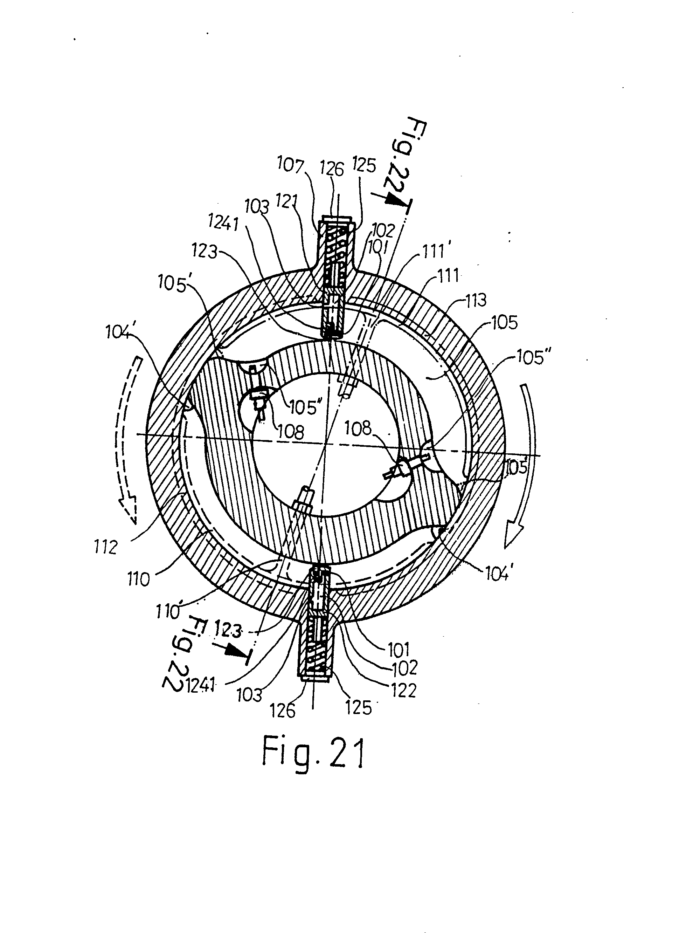

Fig. 21 is a graphic view of the embodiment of two- way drive common gate plate rotary internal combustion engine wherein structure having gate plate seat gate plate set is external rotor motion body.

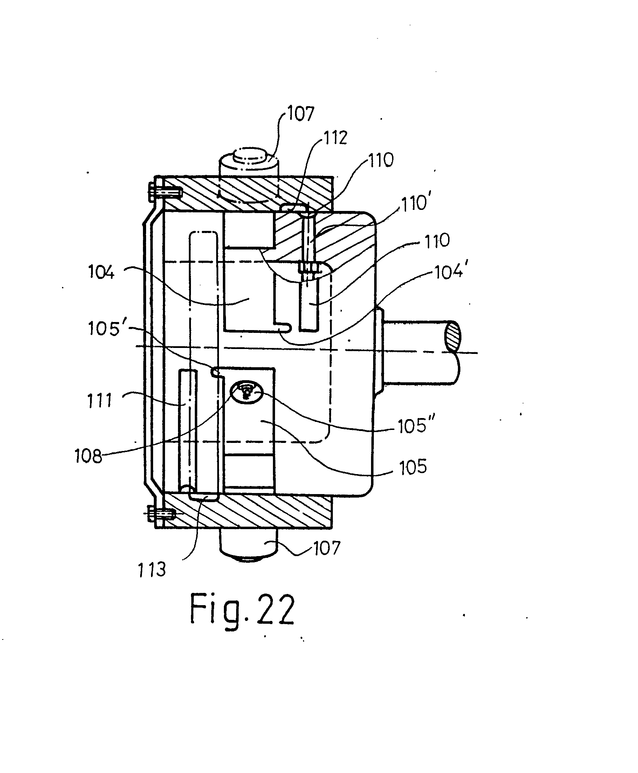

Fig. 22 is an exploded view of Fig. 21.

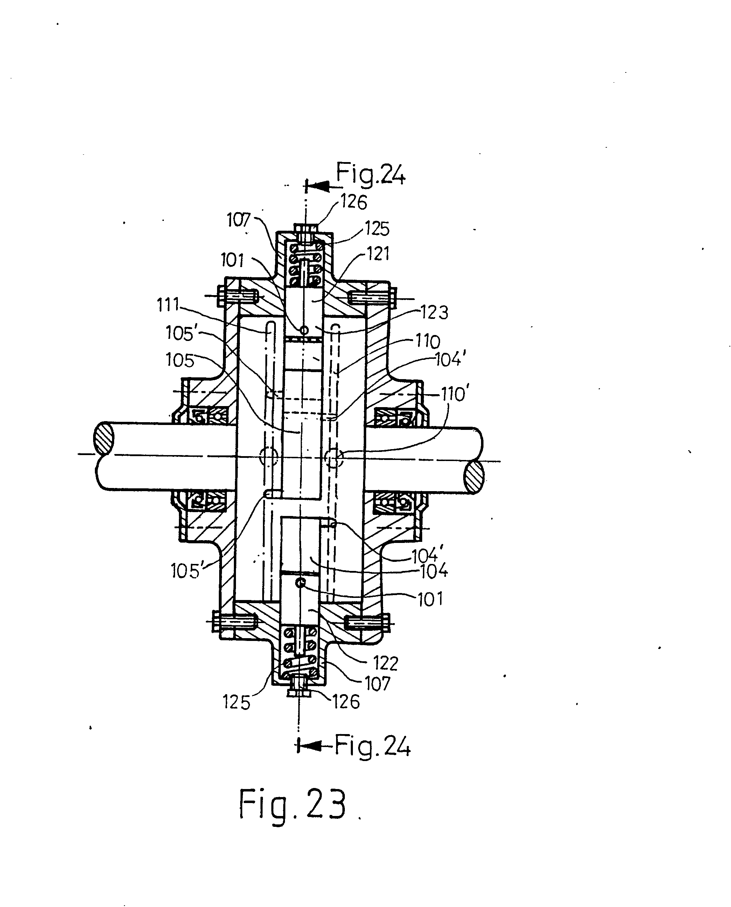

Fig. 23 is a graphic view of the embodiment of two-way drive common gate plate rotary internal combustion engine wherein structure having gas chamber set is internal rotor motion body.

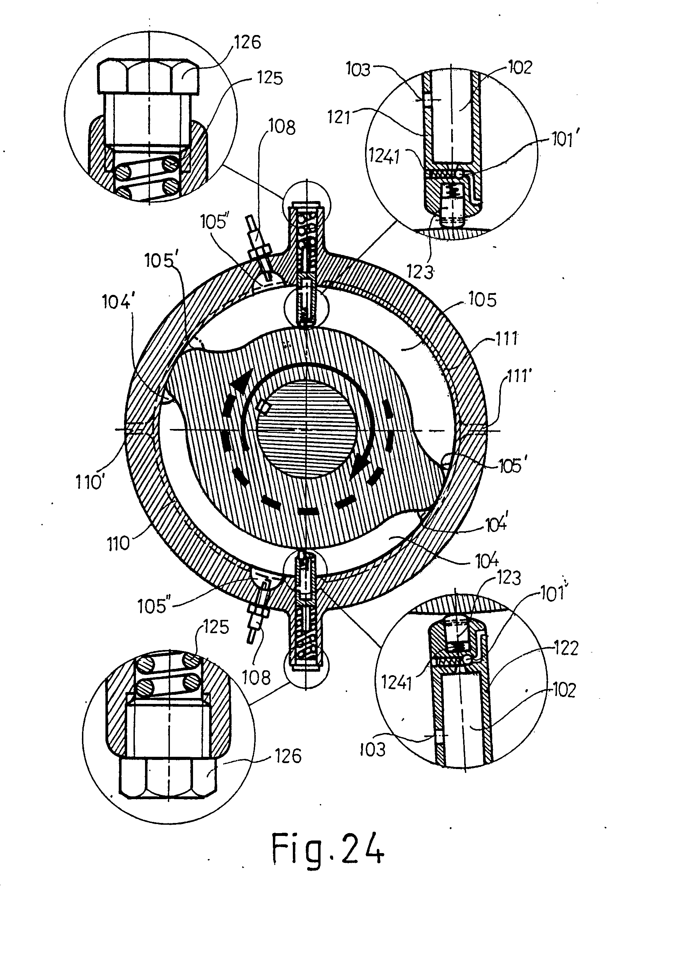

Fig. 24 is an exploded view of Fig. 23.

Fig. 25 is a graphic view of the embodiment of two-way drive common gate plate rotary internal combustion engine wherein structure having gas chamber set is external motion body.

Fig. 26 is an exploded view of Fig. 25.

Fig. 27 is a top elevational view of the first embodiment of two-way drive common gate plate linear type internal combustion engine wherein structure having gate plate seat gate plate set is motion body.

Fig. 27-1 is a side elevational view of the first embodiment of two-way drive common gate plate linear type internal combustion engine wherein structure having gate plate seat gate plate set is motion body.

Figs. 27-2 to 27-7 are the side elevational views of the working procedure of the first embodiment of two-way drive common gate plate linear type internal combustion engine wherein structure having gate plate seat gate plate set is motion body.

Figs. 27-8 to 27-13 are the top elevational views of the working procedure of the first embodiment of two-way drive common gate plate linear type internal combustion engine wherein structure having gate plate seat gate plate set is motion body.

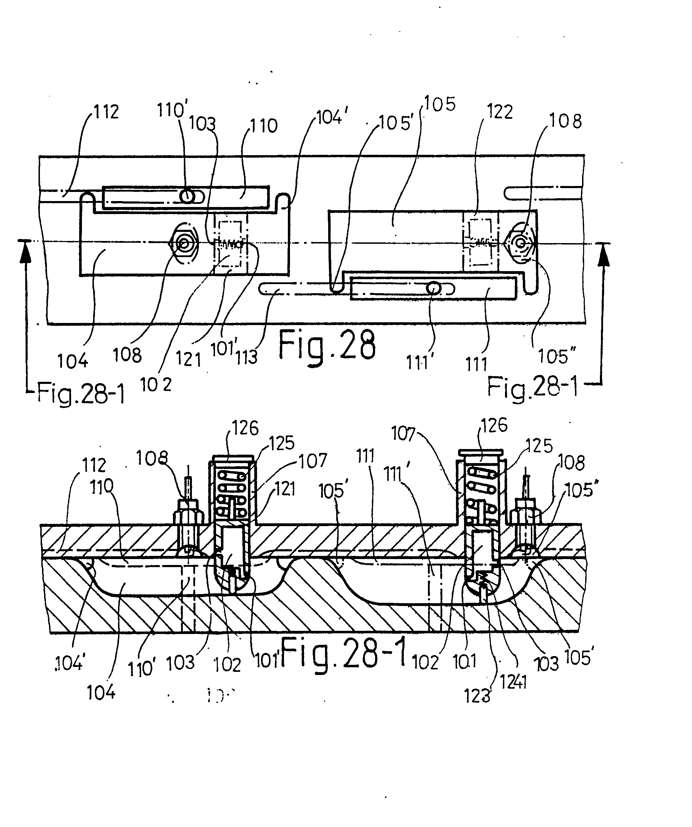

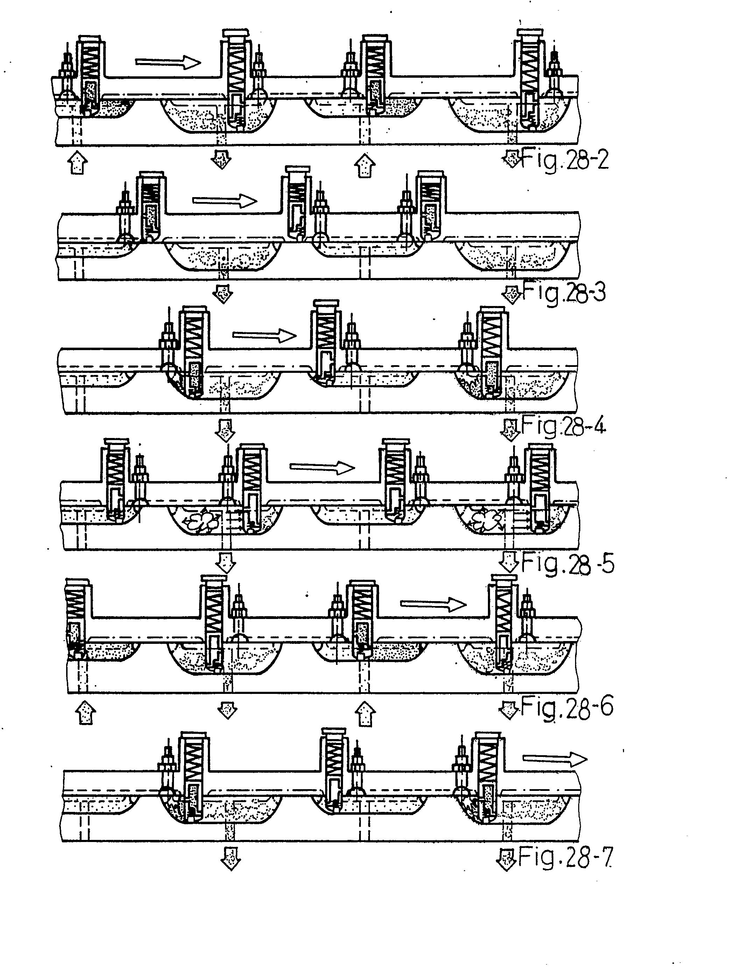

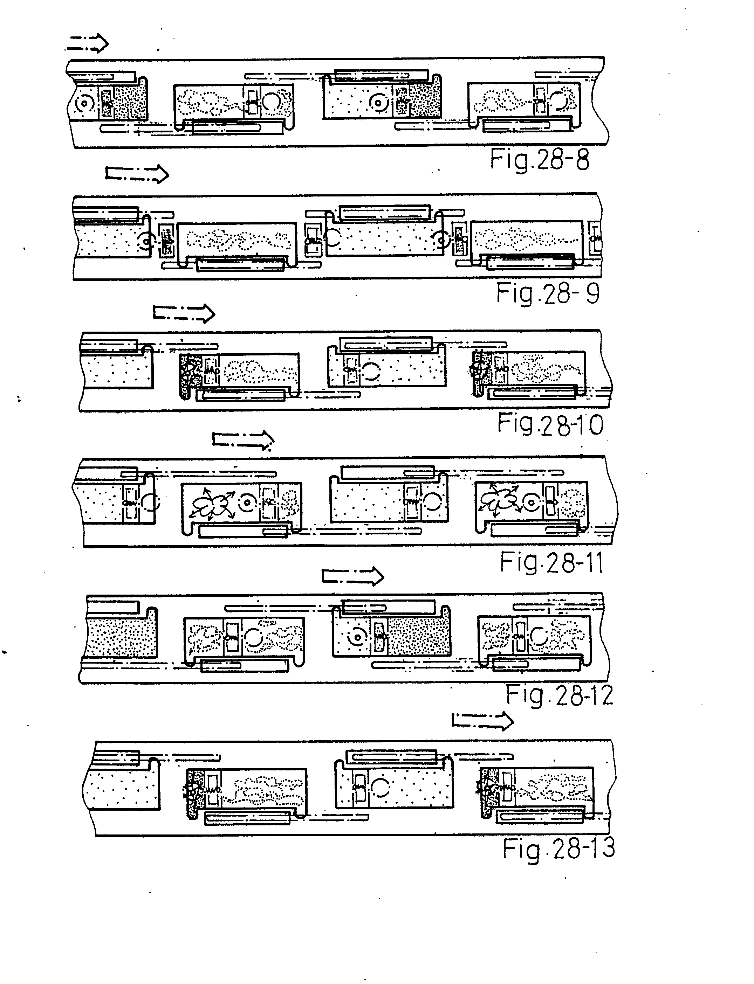

Fig. 28 is a top elevational view of the second embodiment of two-way drive common gate plate linear type internal combustion engine wherein structure having gate plate seat gate plate set is motion body.

Fig. 28-1 is a side elevational view of the second embodiment of two-way drive common gate plate linear type internal combustion engine wherein structure having gate plate seat gate plate set is motion body.

Figs. 28-2 to 28-7 are the side elevational views of the working procedure of the second embodiment of two-way drive common gate plate linear type internal combustion engine wherein structure having gate plate seat gate plate set is motion body.

Figs. 28-8 to 28-13 are the top elevational views of the working procedure of the second embodiment of two-way drive common gate plate linear type internal combustion engine wherein structure having gate plate seat gate plate set is motion body.

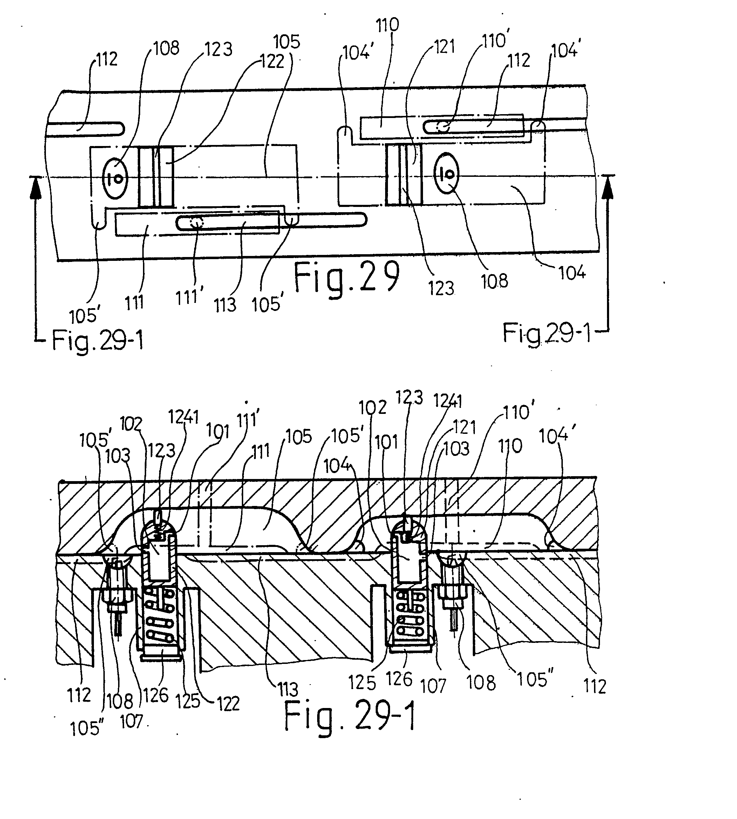

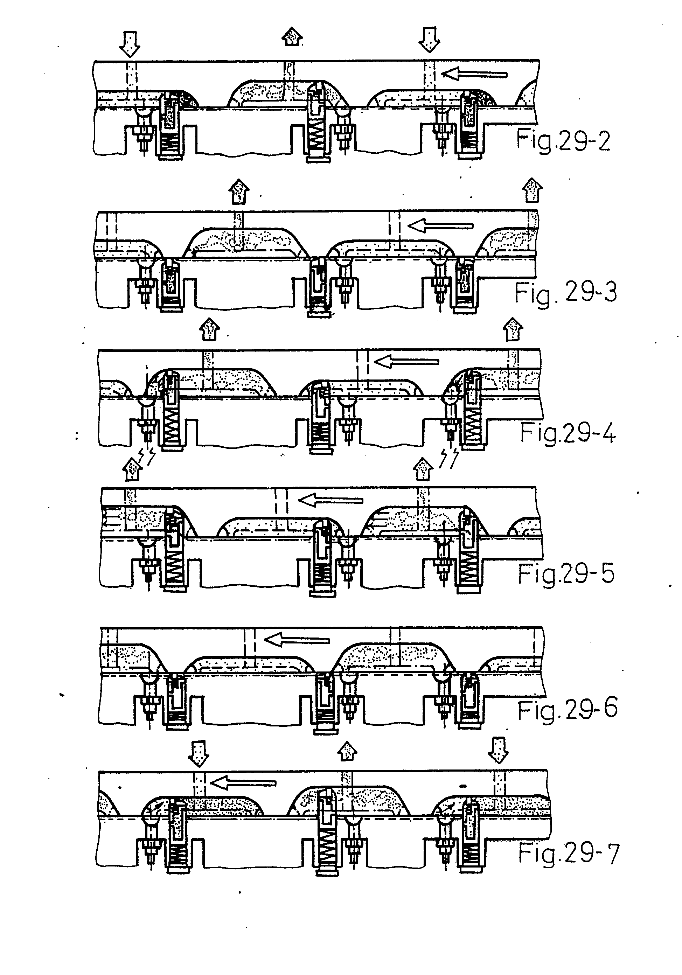

Fig. 29 is a top elevational view of the first embodiment of two-way drive common gate plate linear type internal combustion engine wherein structure having gas chamber set is motion body.

Fig. 29-1 is a side elevational view of the first embodiment of two-way drive common gate plate linear type internal combustion engine wherein structure having gas chamber set is motion body.

Figs. 29-2 to 29-7 are the working procedure diagrams of the first embodiment of two-way drive common gate plate linear type internal combustion engine wherein structure having gas chamber set is motion body.

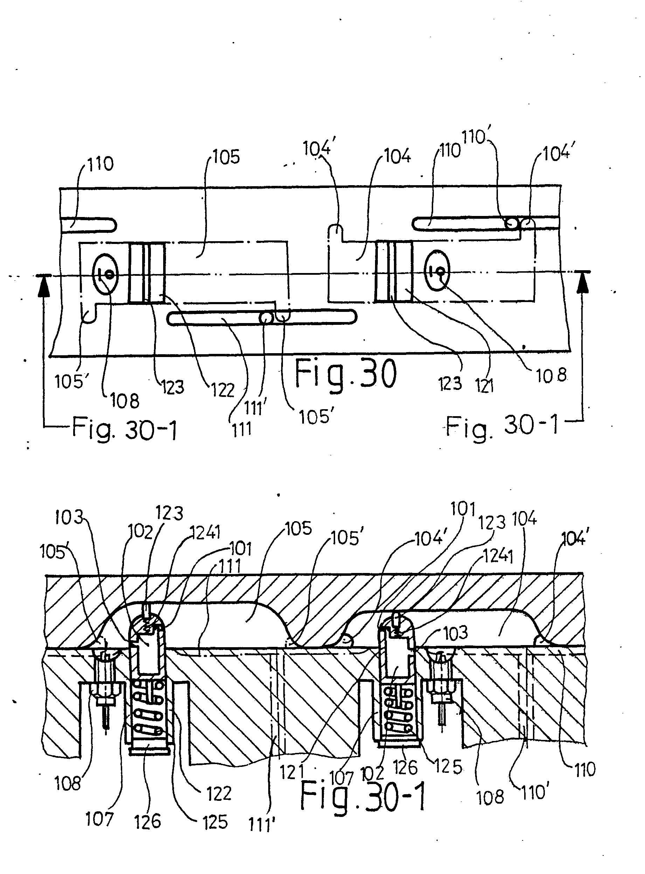

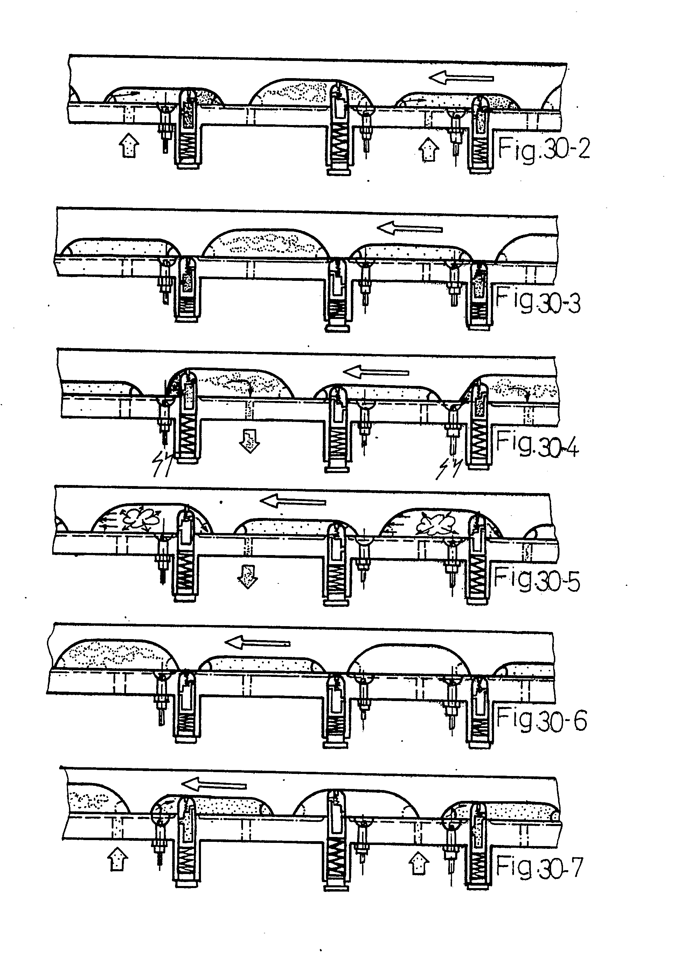

Fig. 30 is a top elevational view of the second embodiment of two-way drive common gate plate linear type internal combustion engine wherein structure having gas chamber set is motion body.

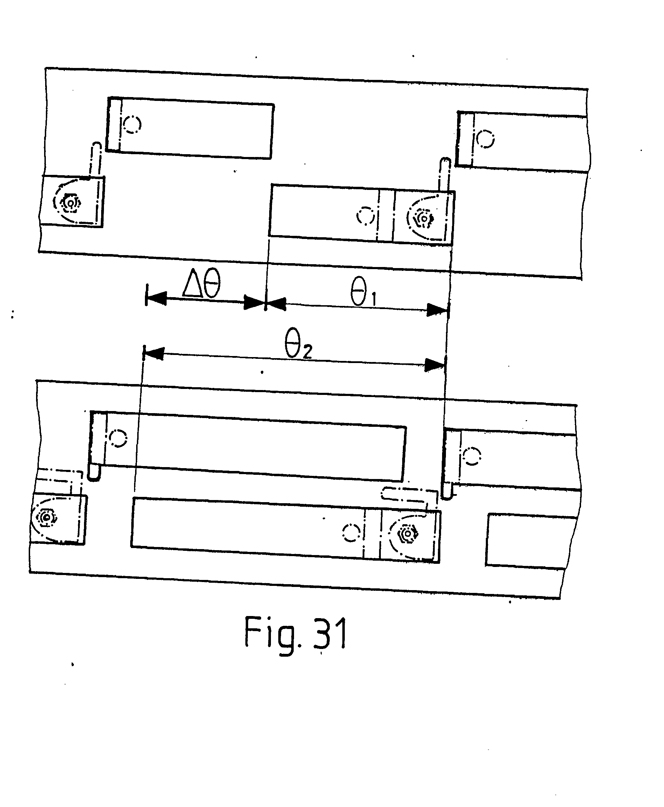

Fig. 31 is a side elevational view of the second embodiment of two-way drive common gate plate linear type internal combustion engine wherein structure having gas chamber set is motion body.

Figs. 30-2 to 30-7 are the working procedure diagrams of the second embodiment of two-way drive common gate plate linear type internal combustion engine wherein structure having gas chamber set is motion body.

Fig. 31 is the comparison between the connection of guide transverse groove and pressure-saved gas chamber and the connection of traditional transverse groove.

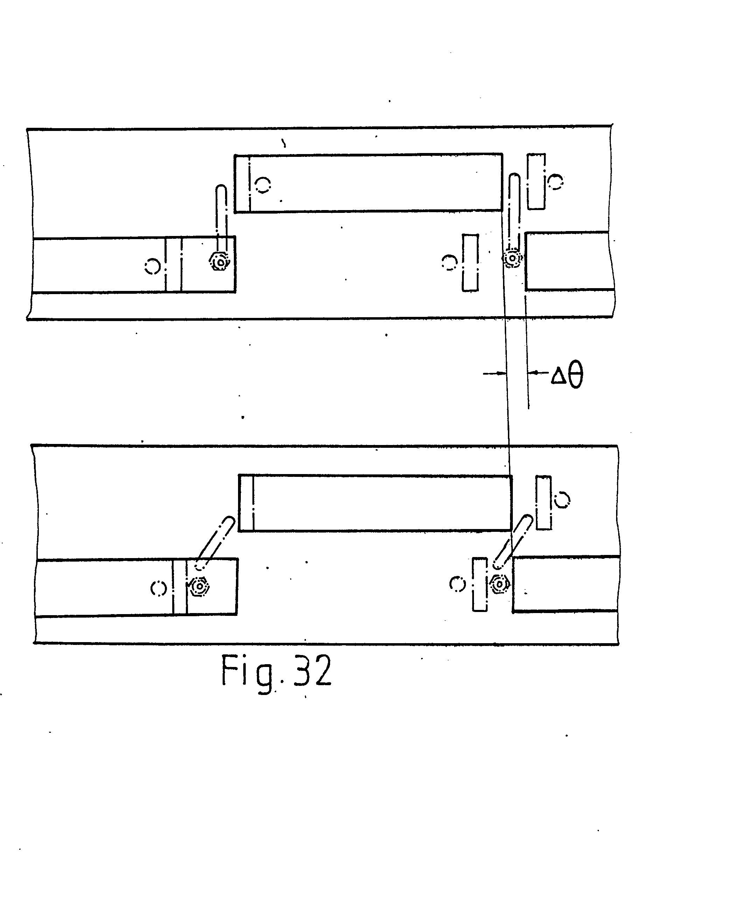

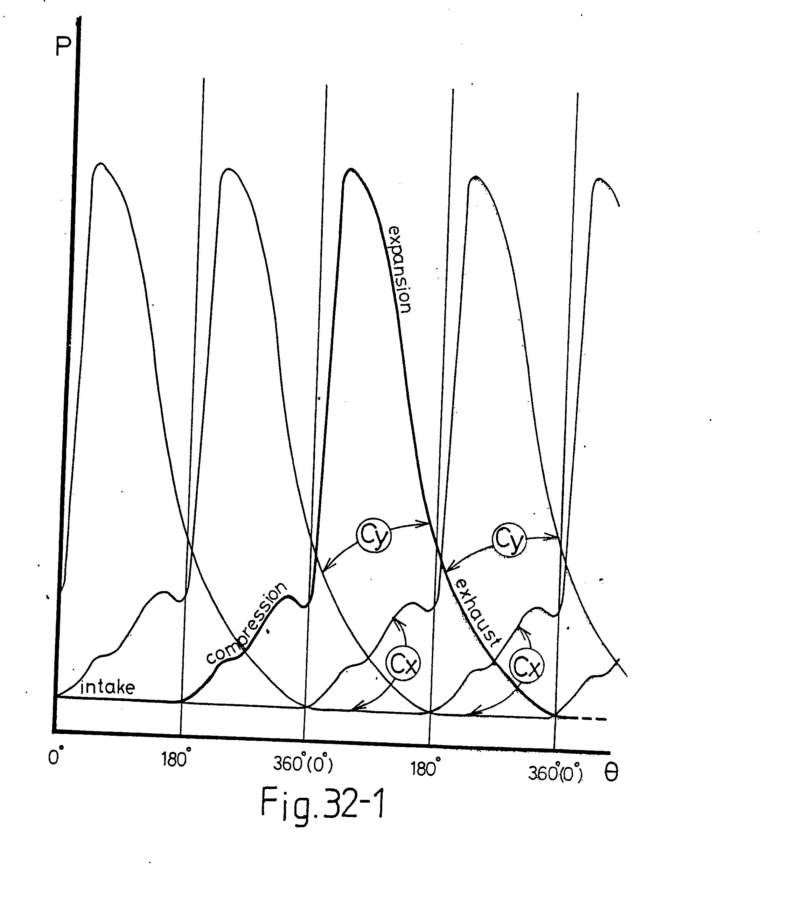

Fig. 32 is the comparison between inclined striding pressure-saved gas chamber and traditional transverse groove.

Fig. 32-1 is the pressure-saved functional curve.

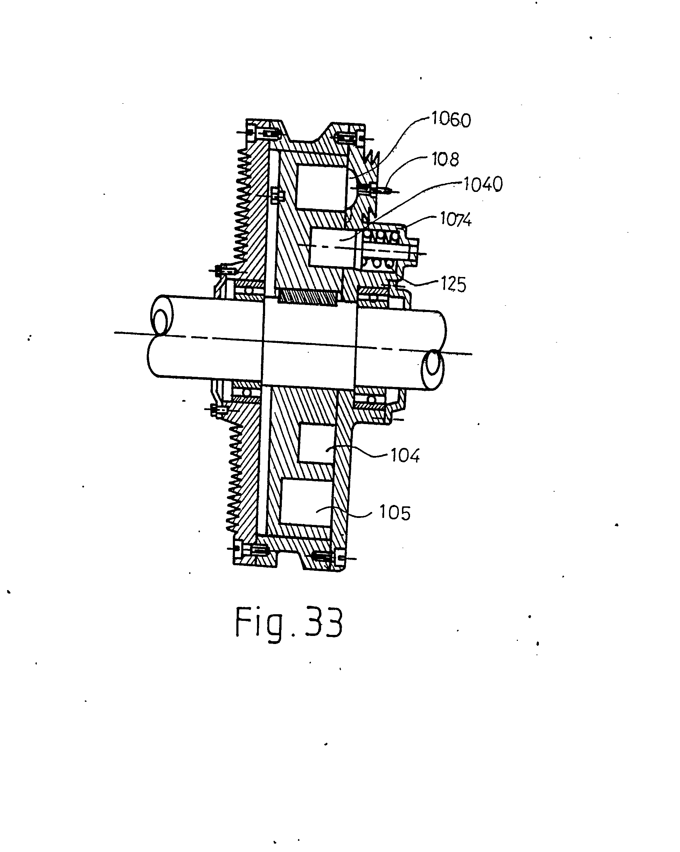

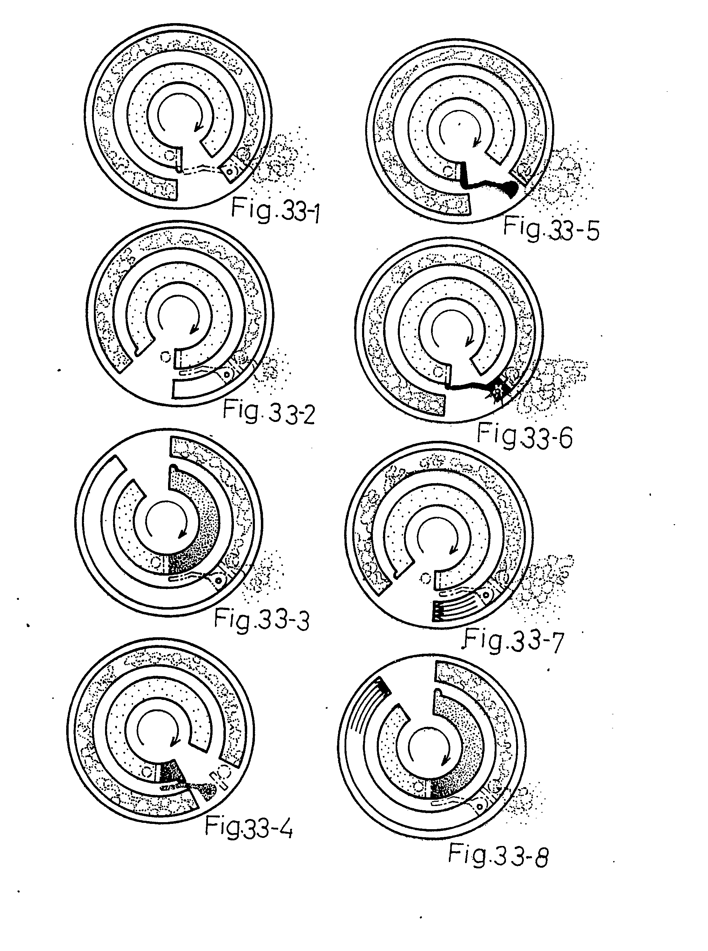

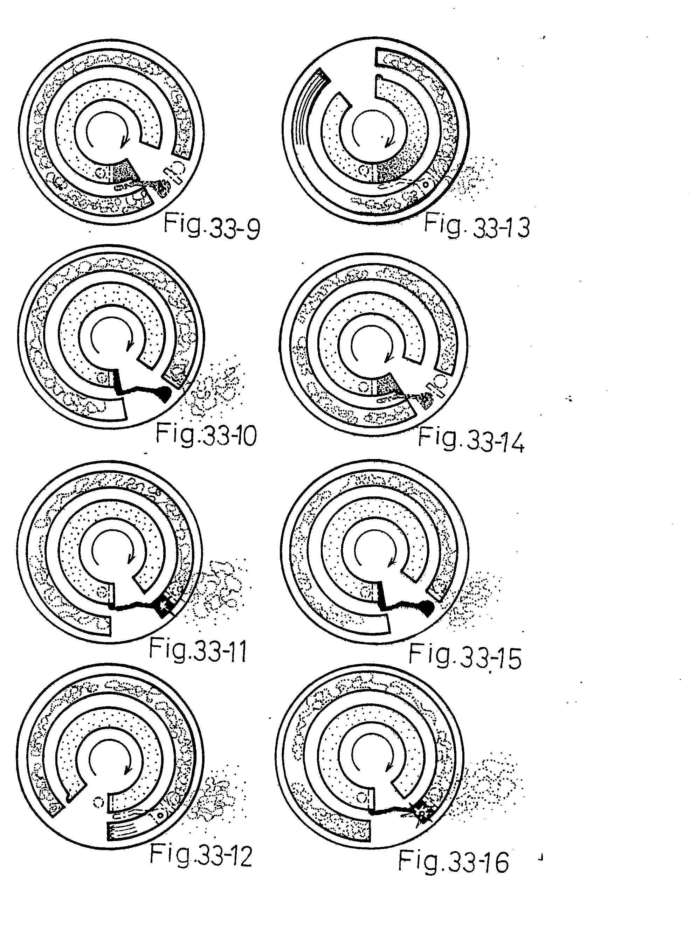

Fig. 33 is a graphic view of the embodiment of independent gate plate type disc shape internal combustion engine which possesses exchange gas chamber and separate gas chamber.

Figs. 33-1 to 33-16 are the working procedure diagrams of the embodiment of independent gate plate type disc shape internal combustion engine which possesses exchange gas chamber and separate gas chamber.

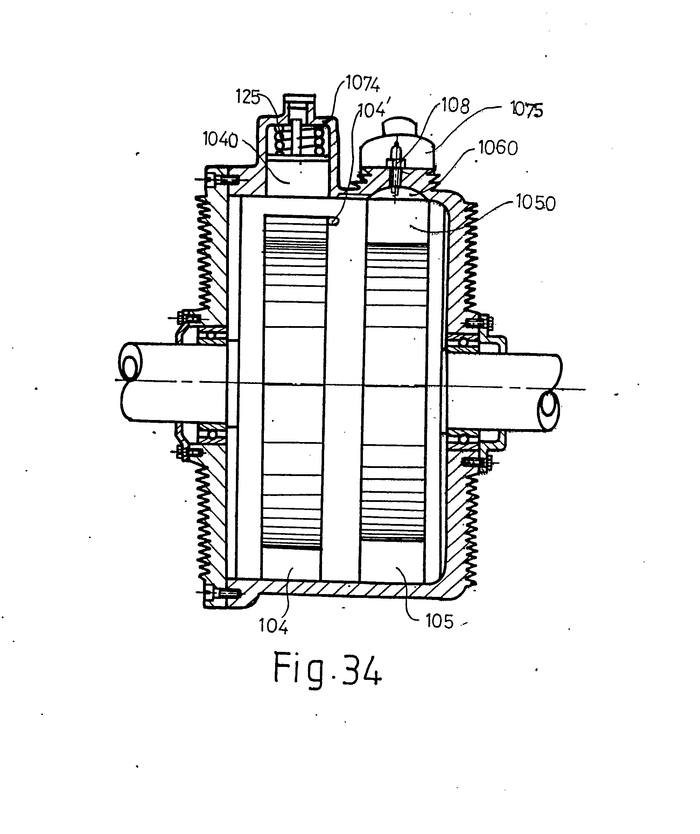

Fig. 34 is a graphic view of the embodiment of internal rotor engine wherein gas chamber sets Cx, Cy are in the same body, active body is the fixed body, passive body is motion body.

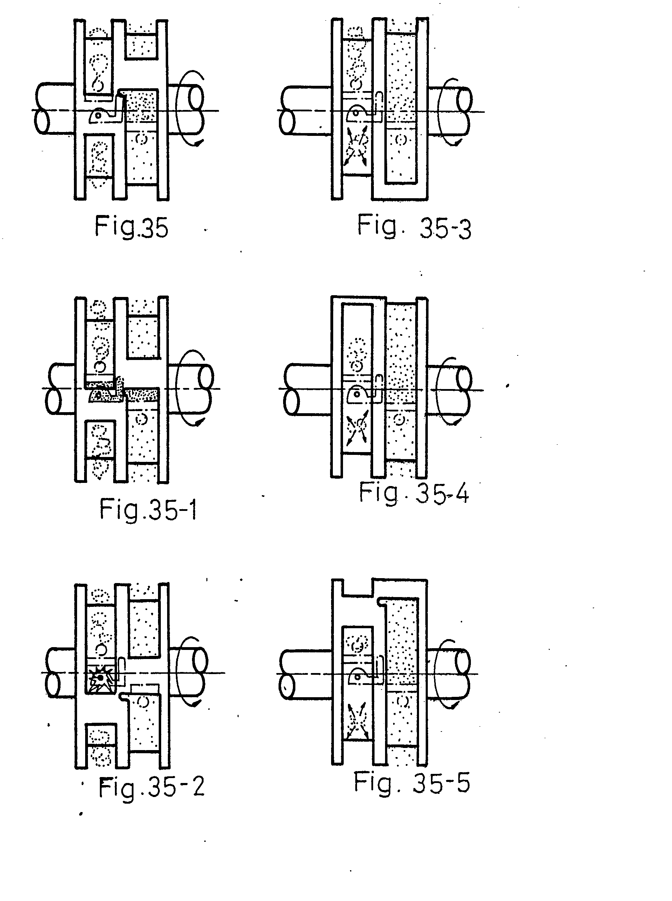

Figs. 35 to 35-5 are the graphic views of the working procedure of embodiment of internal rotor engine wherein gas chamber sets Cx, Cy are in the same body, active body is the fixed body, passive body is motion body.

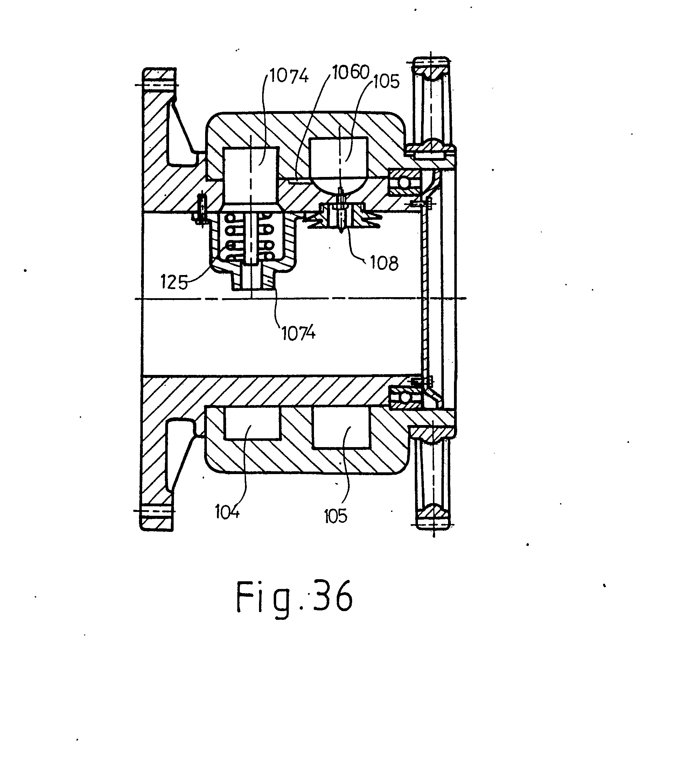

Fig. 36 is a graphic view of the embodiment of external rotor engine wherein gas chamber sets Cx, Cy are in the same body, active body is the fixed body, passive body is motion body.

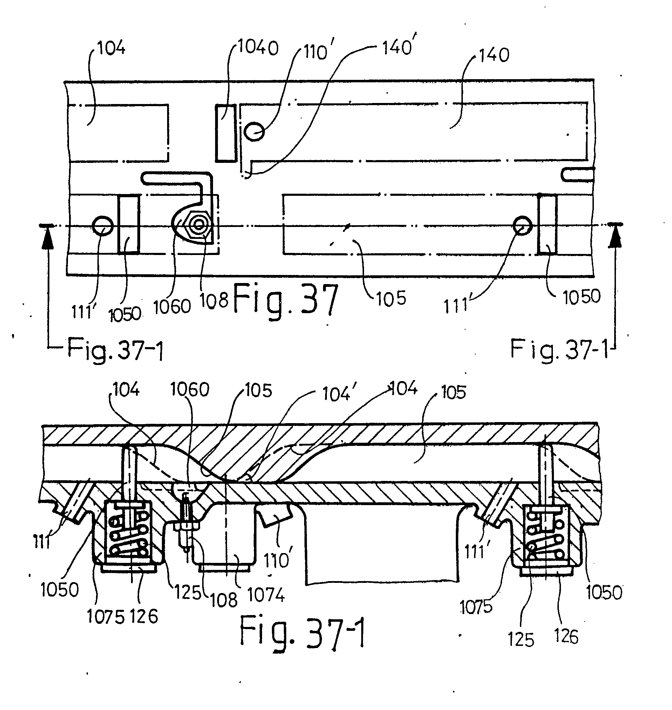

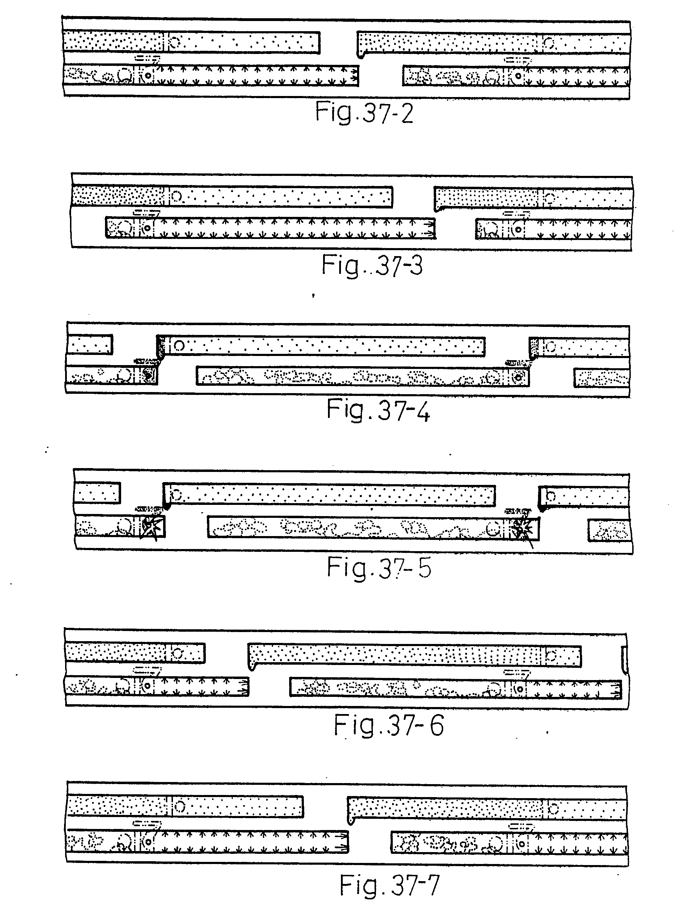

Figs. 37 to 37-1 is a graphic view of the embodiment of linear type engine wherein Cx, Cy are in the same body, active body is the fixed rail, passive body is motion body.

Figs. 37-2 to 37-7 are the working procedure diagrams of the embodiment of linear type engine wherein gas chamber sets Cx, Cy are in the same body, active body is the fixed rail, passive body is motion body.

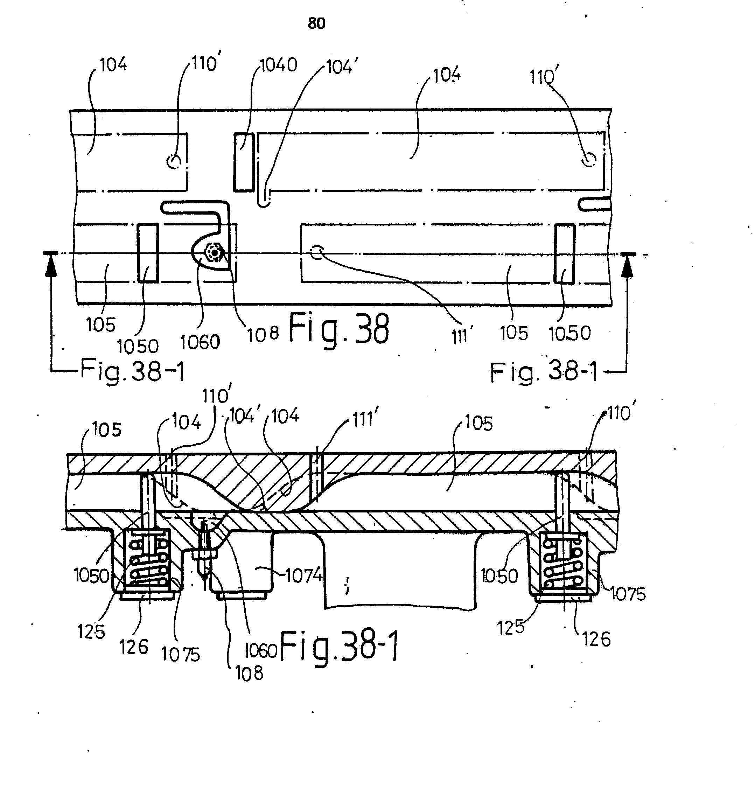

Figs. 38 to 38-1 are the graphic views of Fig. 37 wherein intake and exhaust system assembled on the passive body which is acted as motion body.

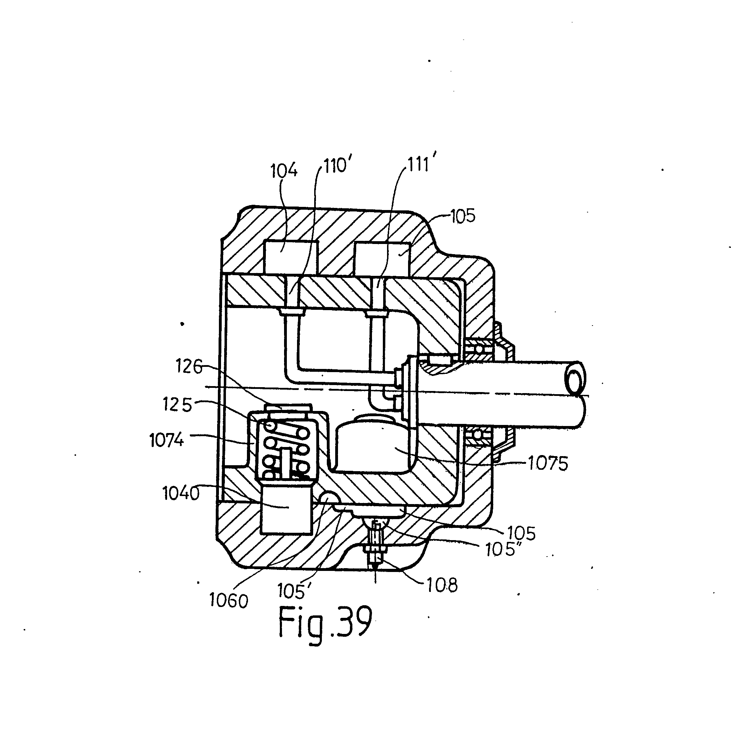

Fig. 39 is a graphic view of the embodiment of internal rotor engine wherein gas chambers Cx and Cy are in the same body, active body is motion body, passive body is the fixed body.

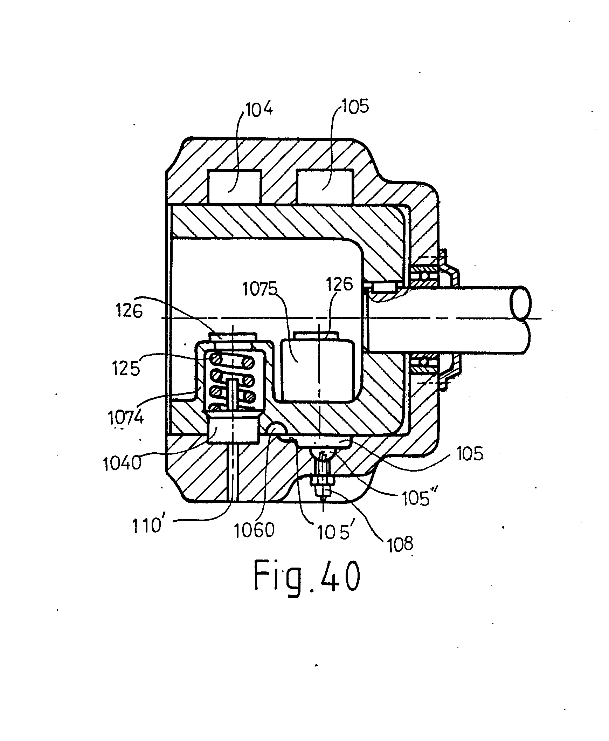

Fig. 40 is the structural graphic view of Fig. 39 wherein intake and exhaust system is assembled on the passive body which is acted as fixed body.

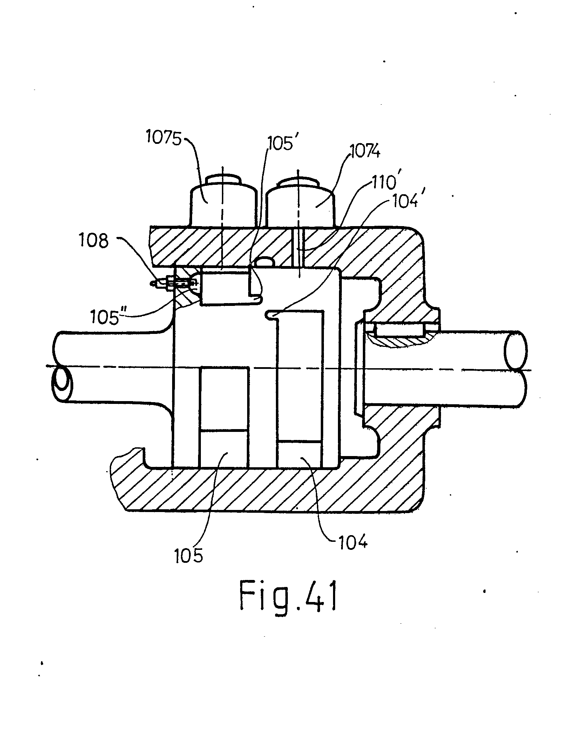

Fig. 41 is a graphic view of the embodiment of external rotor engine wherein gas chamber sets Cx, Cy are in the same body, active body is motion body, passive body is the fixed body.

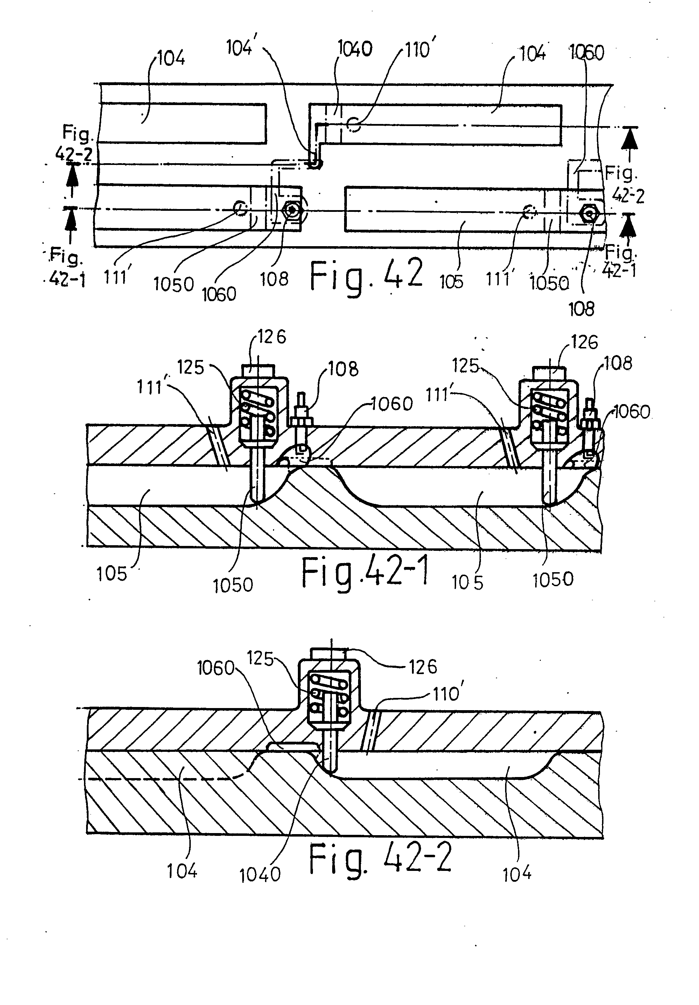

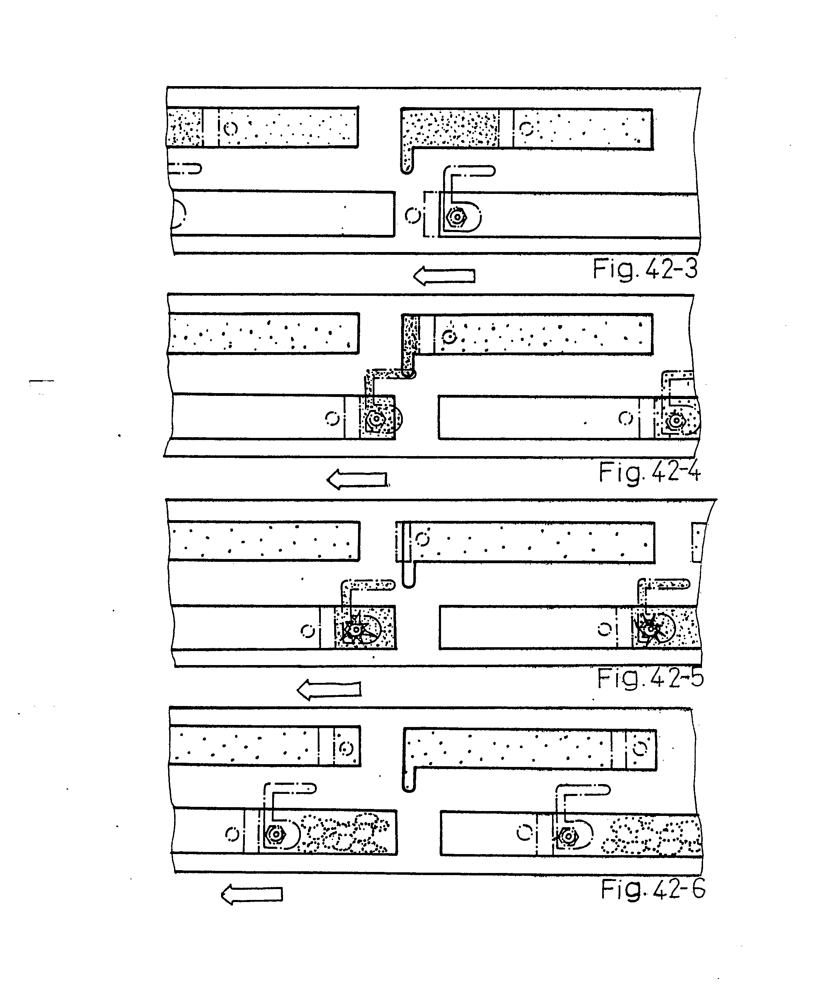

Figs. 42 to 42-2 are the graphic views of the embodiment of linear type engine wherein gas chamber sets Cx, Cy are in the same body, active body is motion body, passive body is the fixed body.

Figs. 42-3 to 42-6 are the working procedure diagrams of linear type engine wherein gas chamber sets Cx, Cy are in the same body, active body is motion body, passive body is the fixed body.

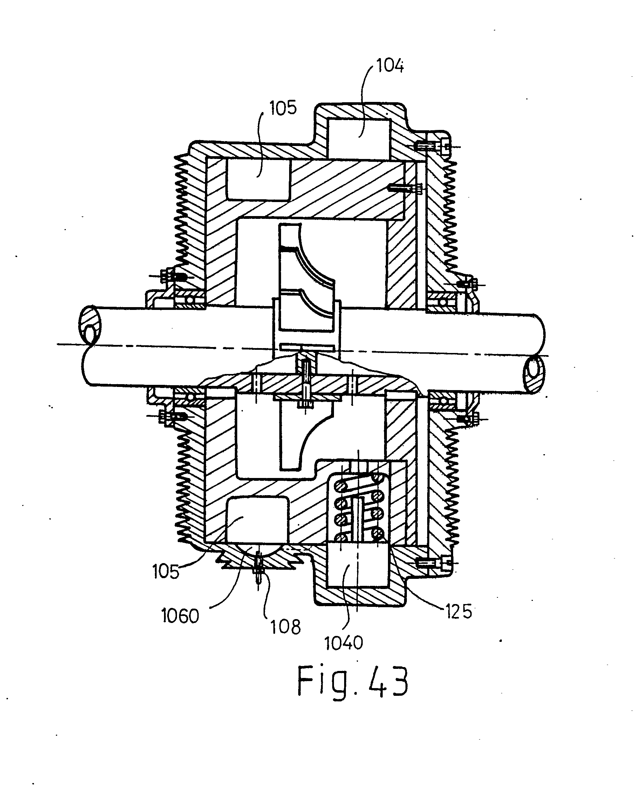

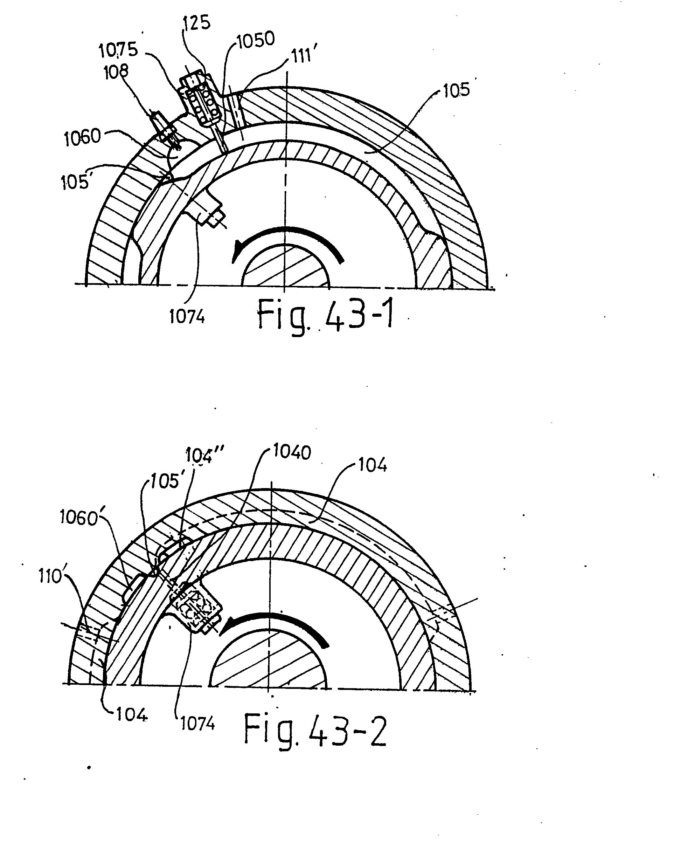

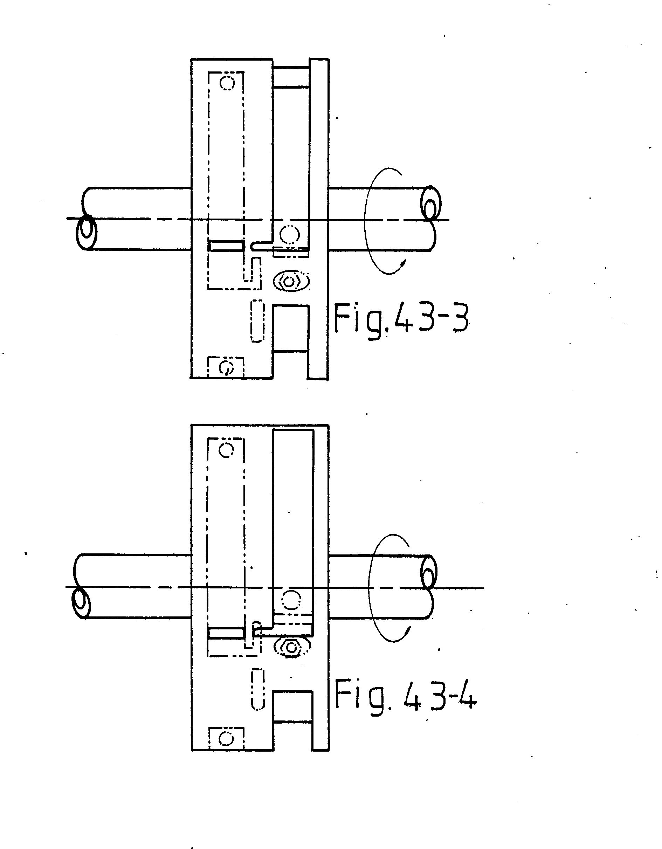

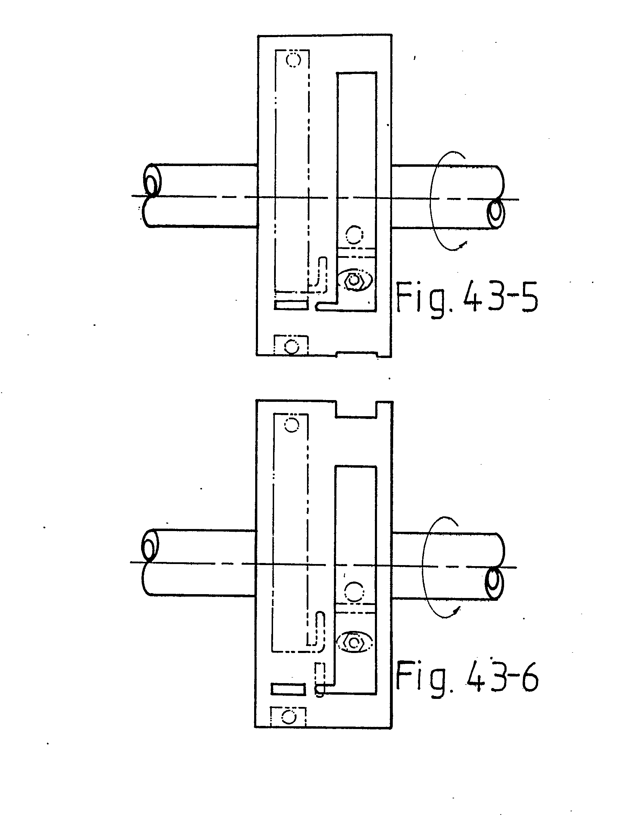

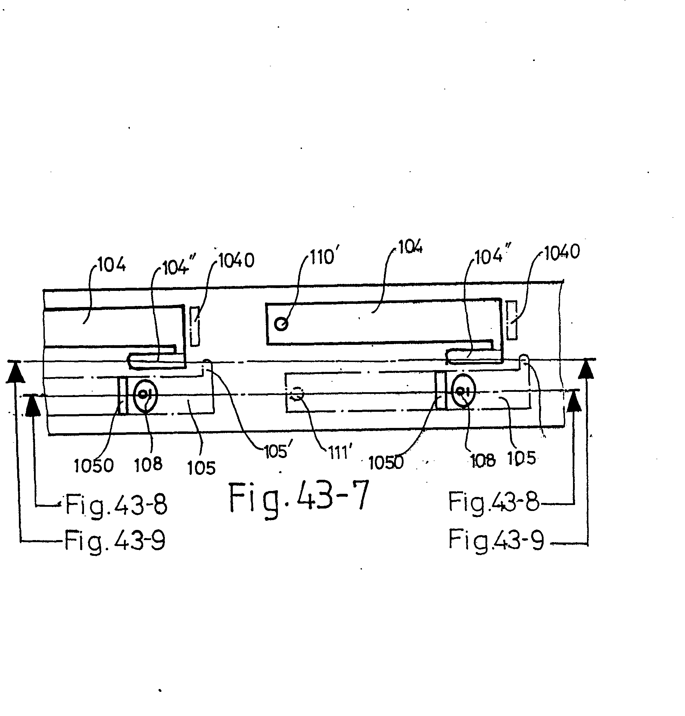

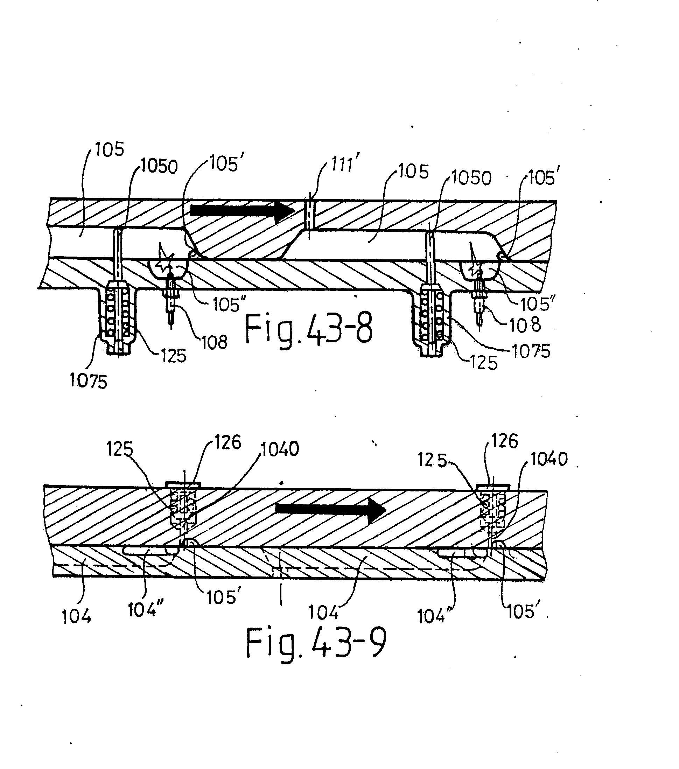

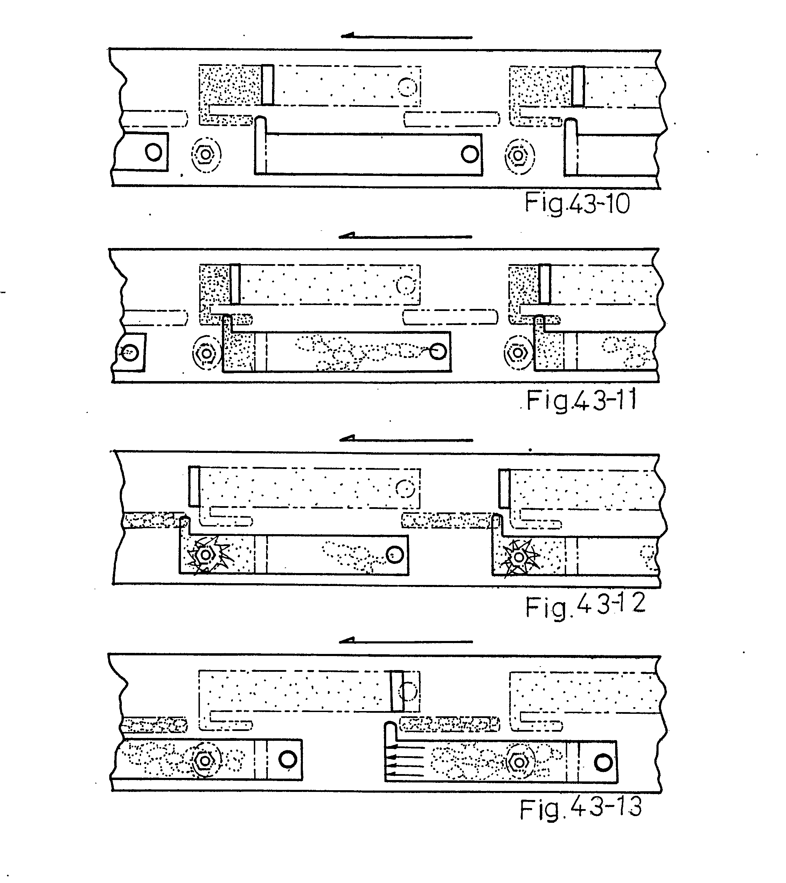

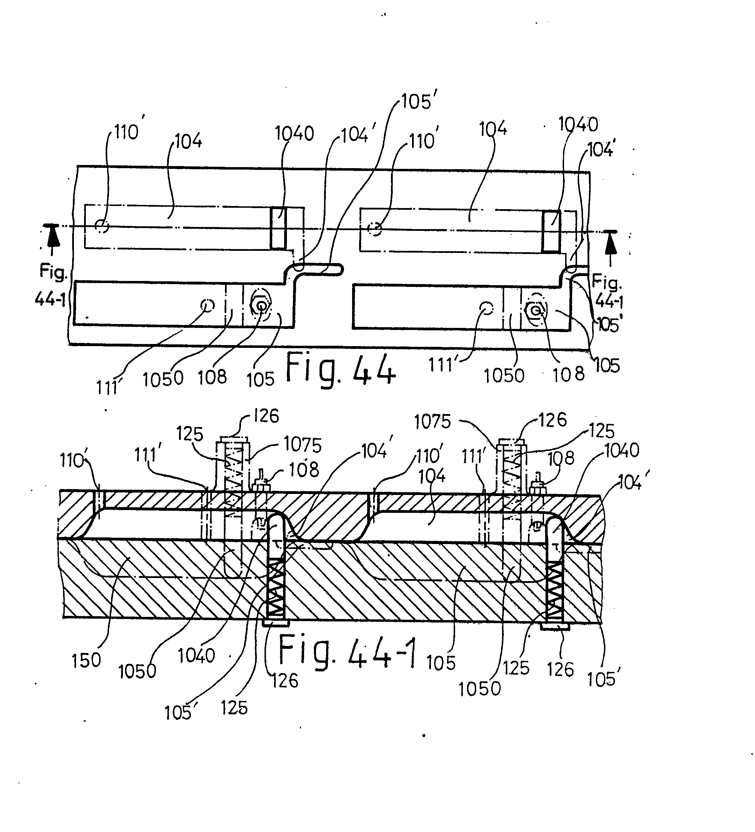

Figs. 43 to 43-2 are the graphic views of embodiment of internal rotor engine wherein gas chamber sets Cx, Cy are in the different body active body is the fixed body, motion body is passive body.

Figs. 43-3 to 43-6 are the working procedure diagrams of the embodiment of internal rotor engine wherein gas chamber sets Cx, Cy are in the different body, active body is the fixed body, motion body is passive body.

Figs. 43-7 to 43-9 are the graphic views of the embodiment of linear type engine wherein gas chamber sets Cx, Cy are in the different body, active body is the fixed body, motion body is passive body.

Figs. 43-10 to 43-13 are the working procedure diagrams of the embodiment of linear type engine wherein gas chamber sets Cx, Cy are in the different body, active body is the fixed body, motion body is passive body.

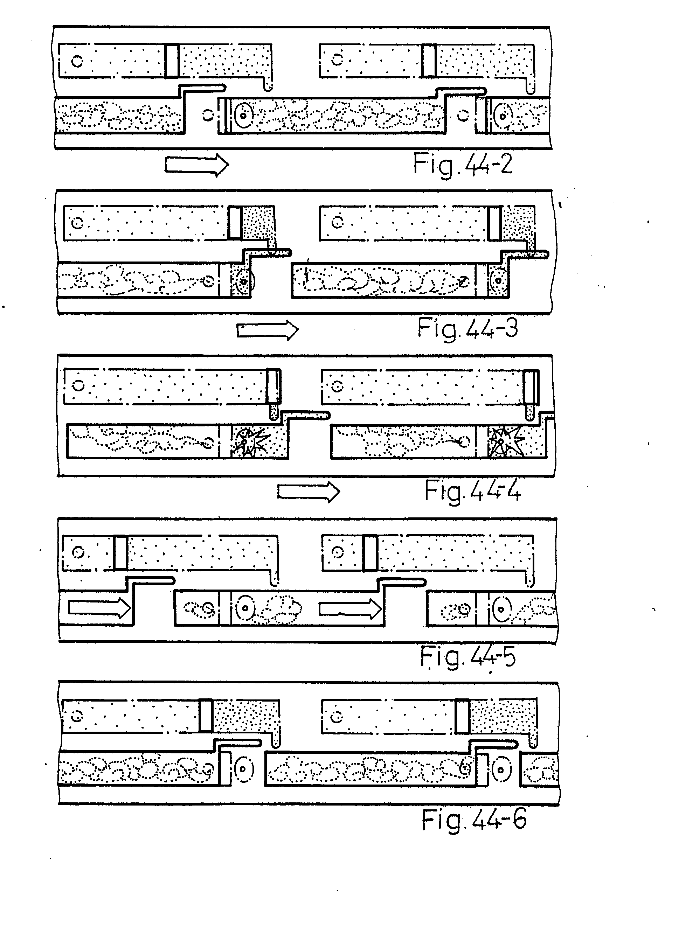

Figs. 44 to 44-1 are the graphic views of the embodiment of gas chamber sets Cx, Cy which are in the different body, guide transverse groove of gas chamber Cy turns to the leading end.

Figs. 44-2 to 44-6 are the working procedure diagrams of the embodiment of gas chamber sets Cx, Cy which are in the different body, guide transverse groove of gas chamber Cy turns to the leading end.

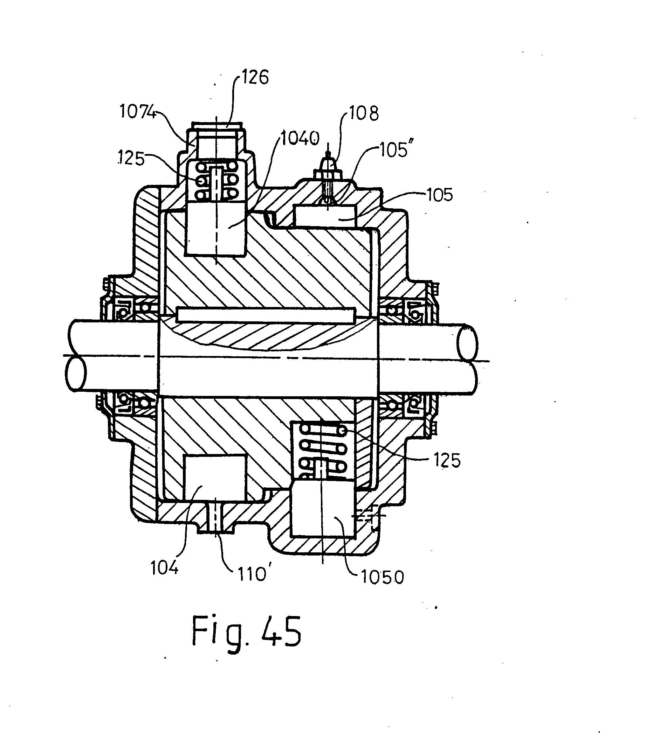

Fig. 45 is a graphic view of the embodiment of internal rotor engine wherein gas chamber sets Cx, Cy are in the different body, active body is motion body, passive body is the fixed body.

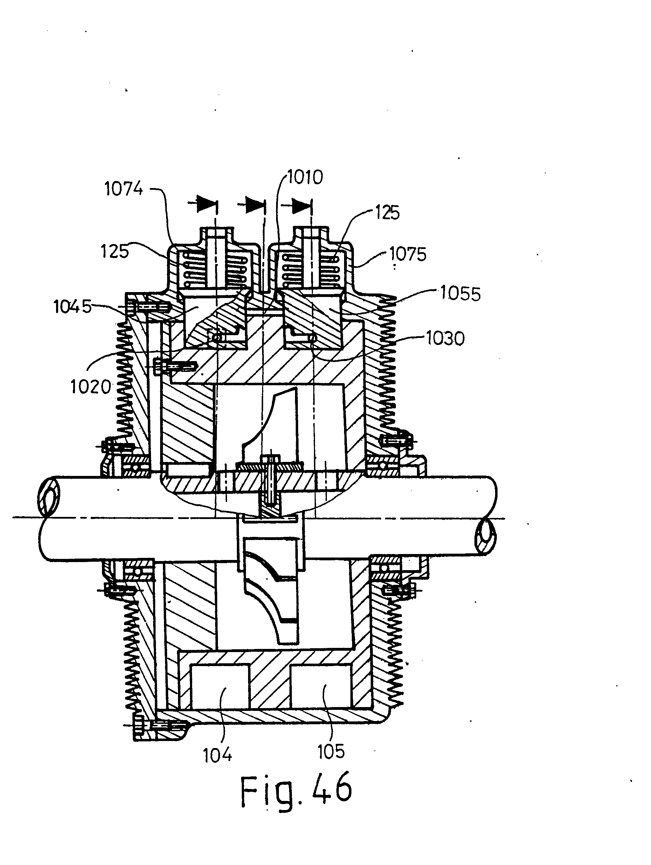

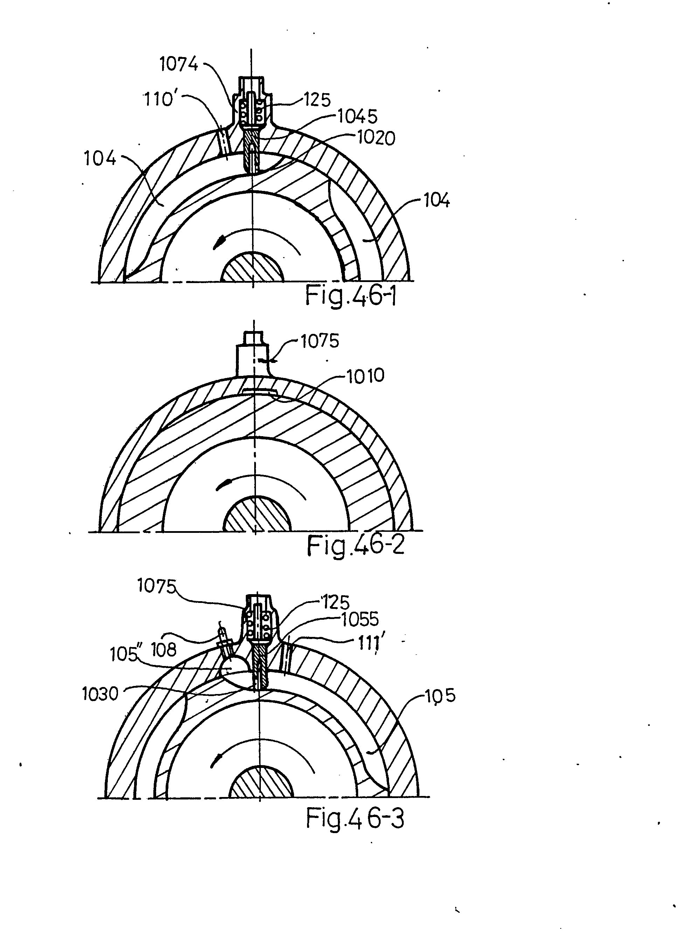

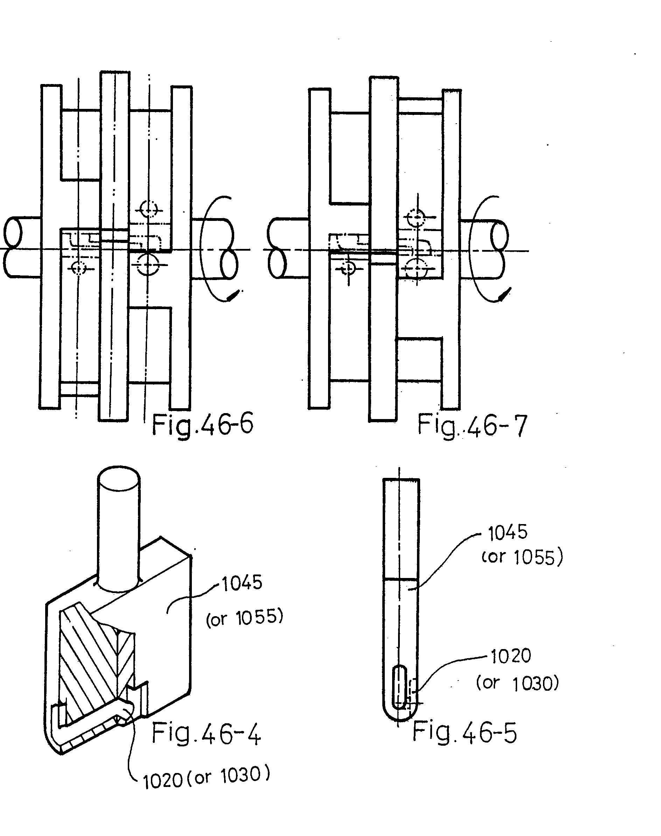

Figs. 46 to 46-5 are the graphic views of the embodiment of structure which exchange fuel gas through guide hole of gate plate and gas guide passage of active body.

Figs. 46-6 to 46-7 are the working procedure diagrams of the embodiment of structure which exchanges fuel gas through guide hole of gate plate and gas guide passage of active body.

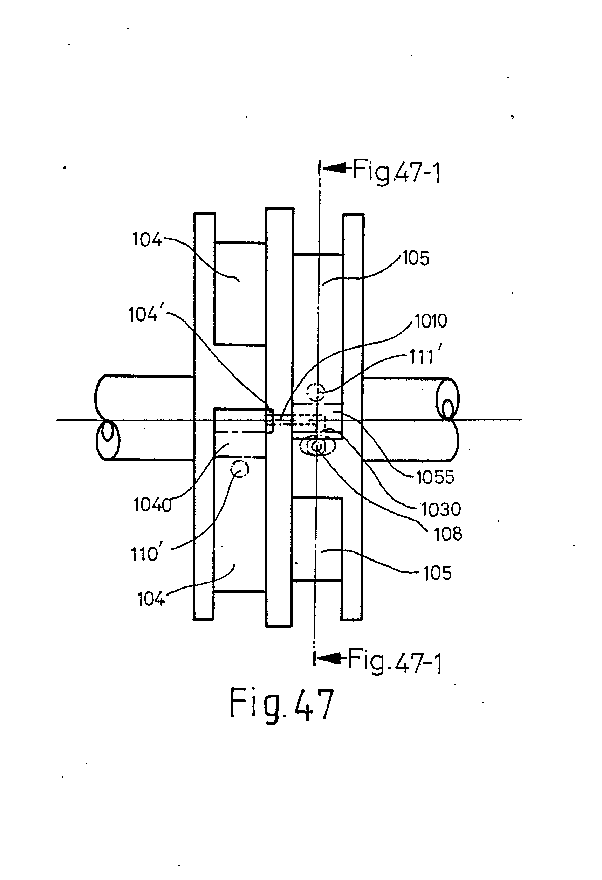

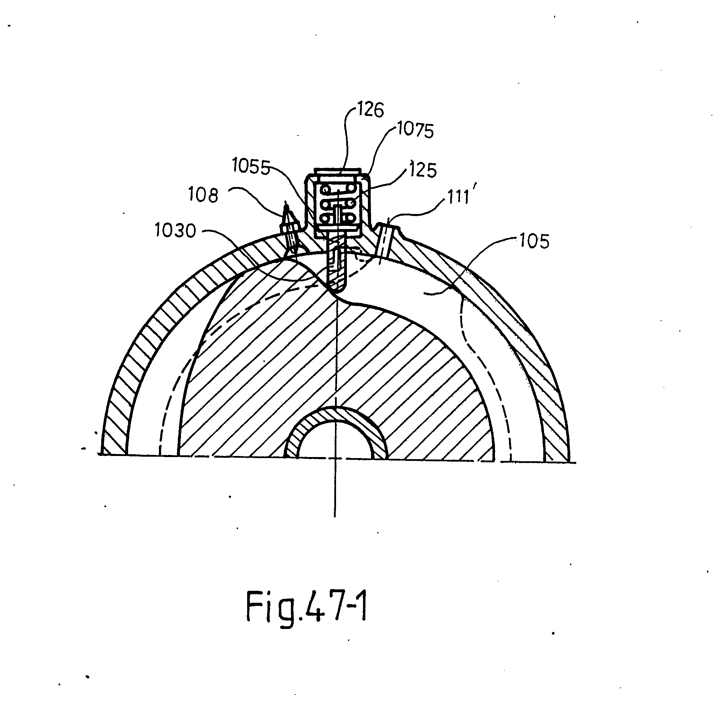

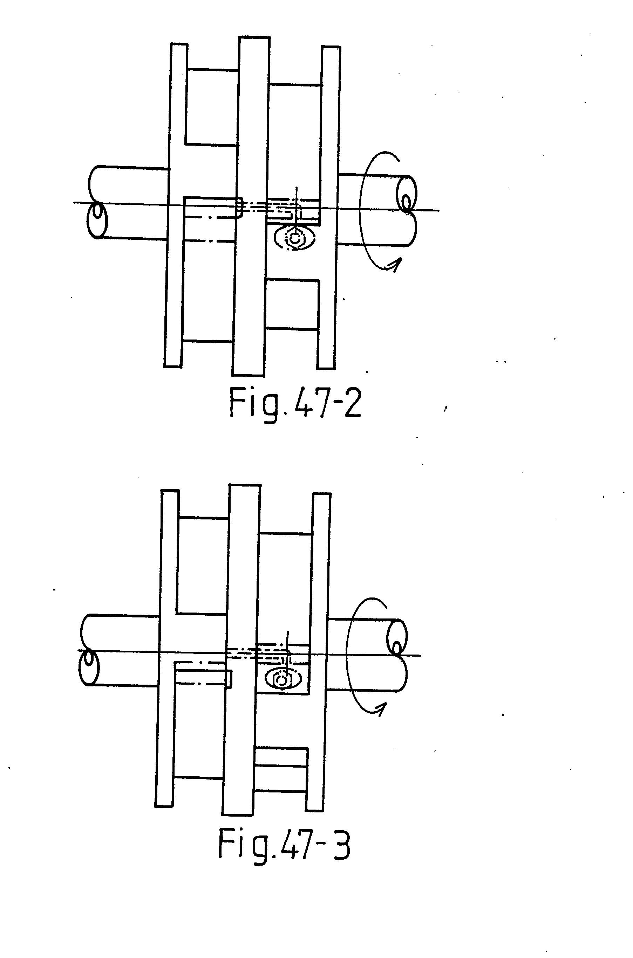

Figs. 47 to 47-1 are the graphic views of the embodiment of structure which exchanges fuel gas through guide hole of gate plate GTy, and gas guide passage of active body and guide transverse groove of gas chamber set Cx.

Figs. 47-2 to 47-3 are the working procedure diagrams of the embodiment of structure which exchanges fuel gas through guide hole of gate plate GTy, and gas guide passage of active body and guide transverse groove of gas chamber set Cx.

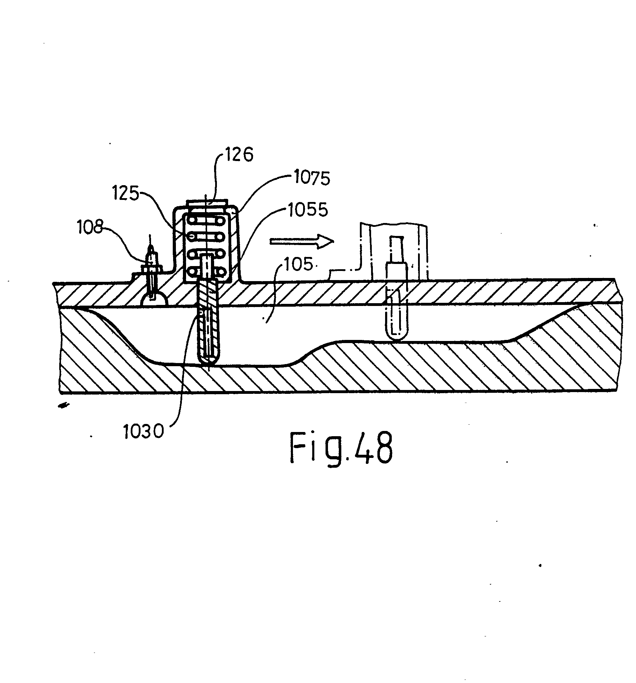

Fig. 48 is the structure of gas chamber wherein the leading end is deeper and the lagging end is shallower.

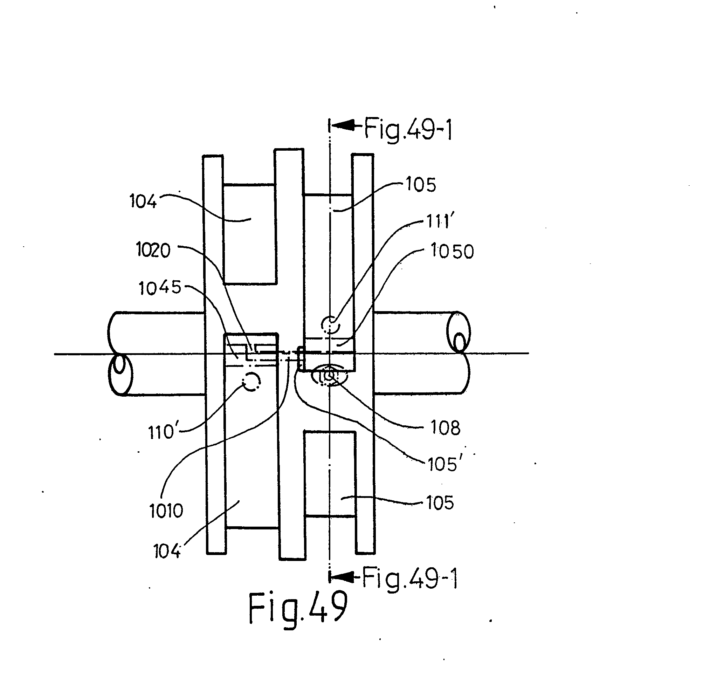

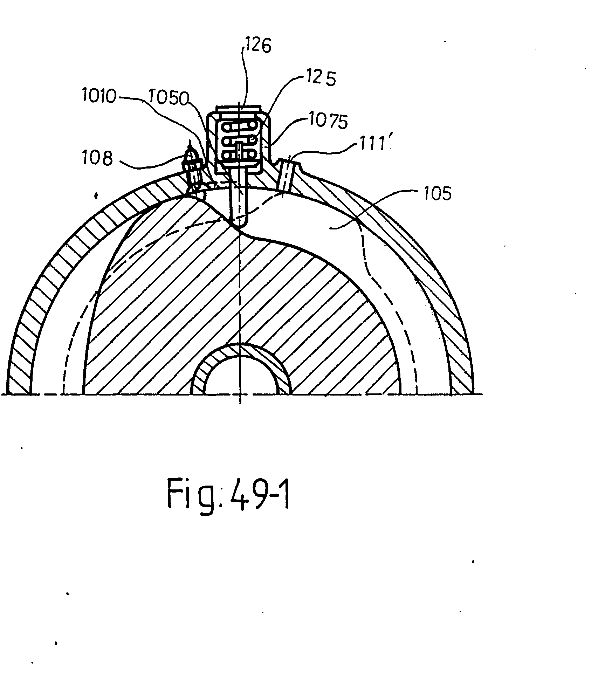

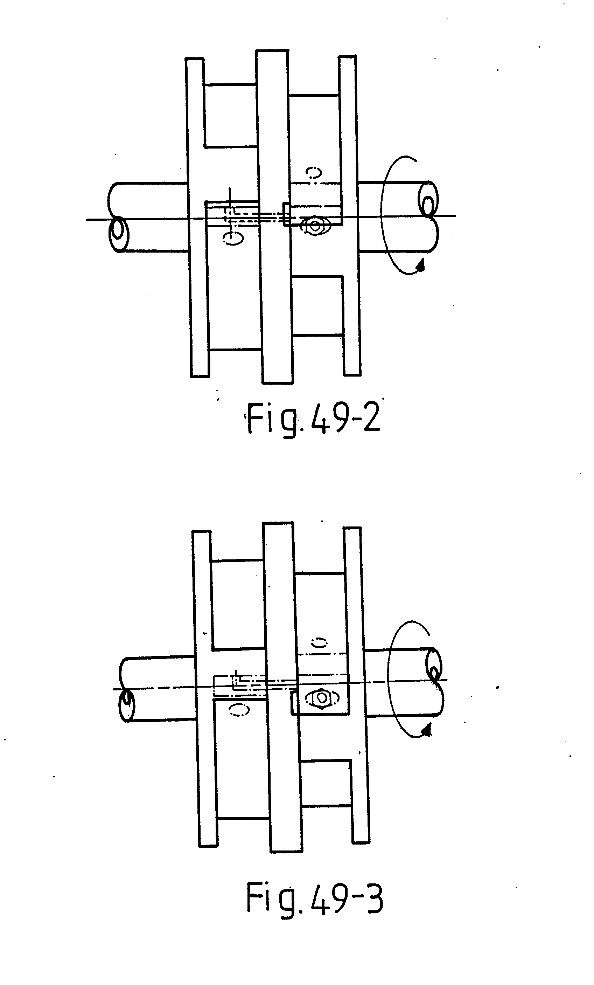

Figs. 49 to 49-1 are the graphic views of the embodiment of structure which exchange fuel gas through guide hole of gate plate GTx, and gas guide passage of active body and guide transverse groove of gas chamber set Cy.

Figs. 49-2 to 49-3 are the working procedure diagrams of the embodiment of structure which exchanges fuel gas through guide hole of gate plate GTx, and gas guide passage of active body and guide transverse groove of gas chamber set Cy.

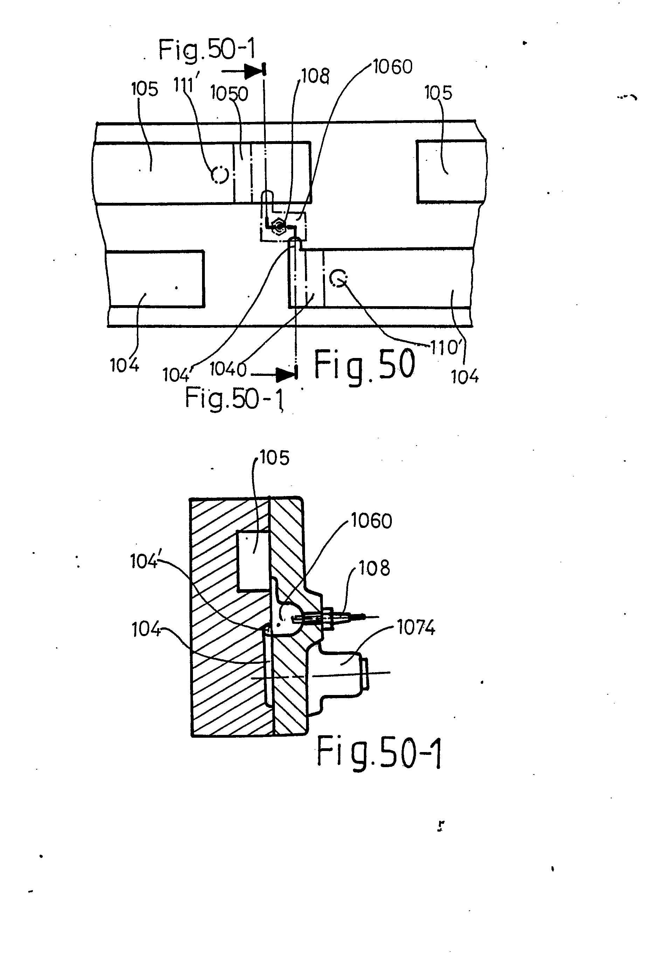

Figs. 50 to 50-1 are the graphic views of the embodiment of plug or fuel nozzle which is placed at the gas guide passage of active body.

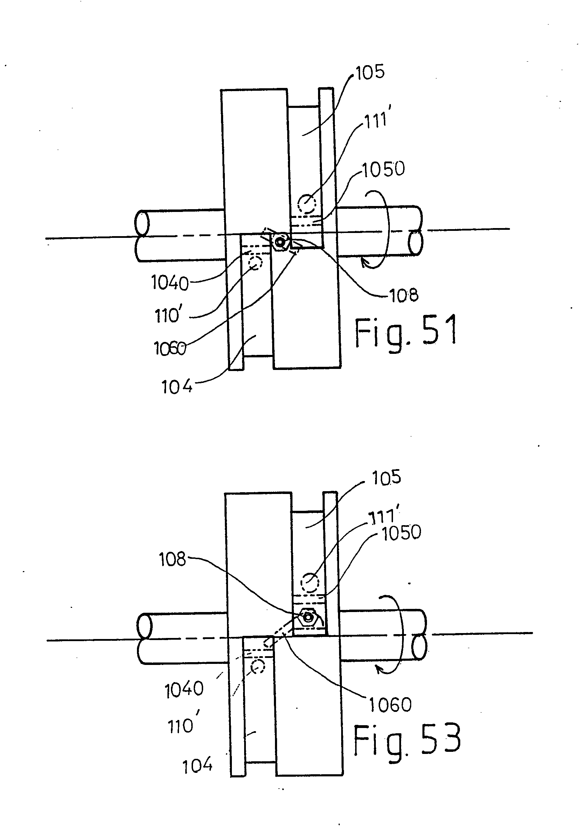

Fig. 51 is a graphic view of the embodiment of rectangular exchange gas chamber which is placed in the inclined direction.

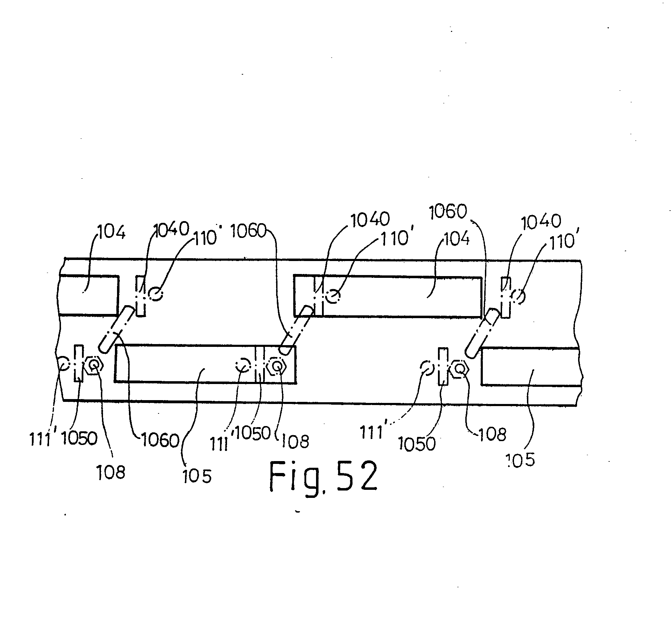

Fig. 52 is a graphic view of the embodiment of oval exchange gas chamber which is placed in the inclined direction.

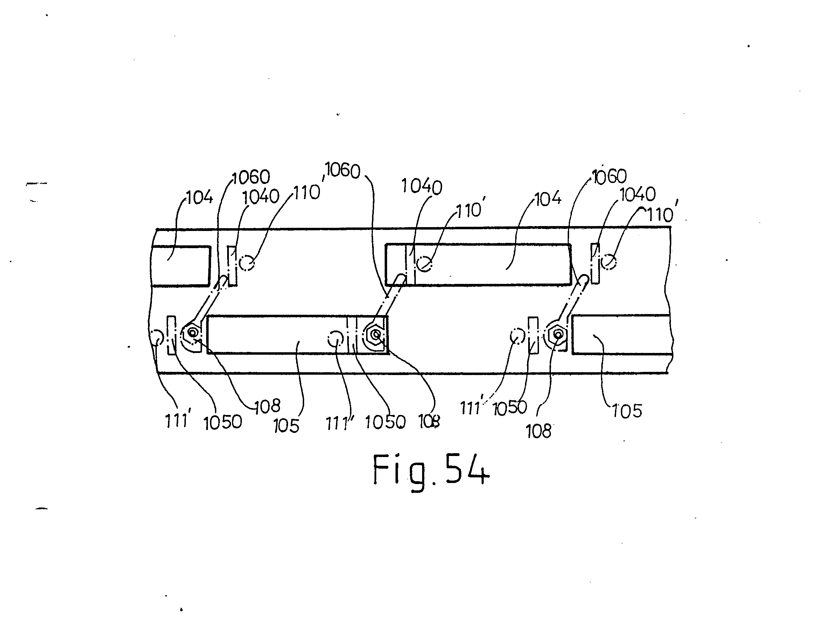

Fig. 53 is a graphic view of the embodiment of exchange gas chamber wherein main chamber couples guide groove of gas chamber Cy and extends toward the lagging inclined direction.

Fig. 54 is a graphic view of the embodiment of exchange gas chamber wherein main chamber couples guide groove of gas chamber Cy and extends toward the leading inclined direction.

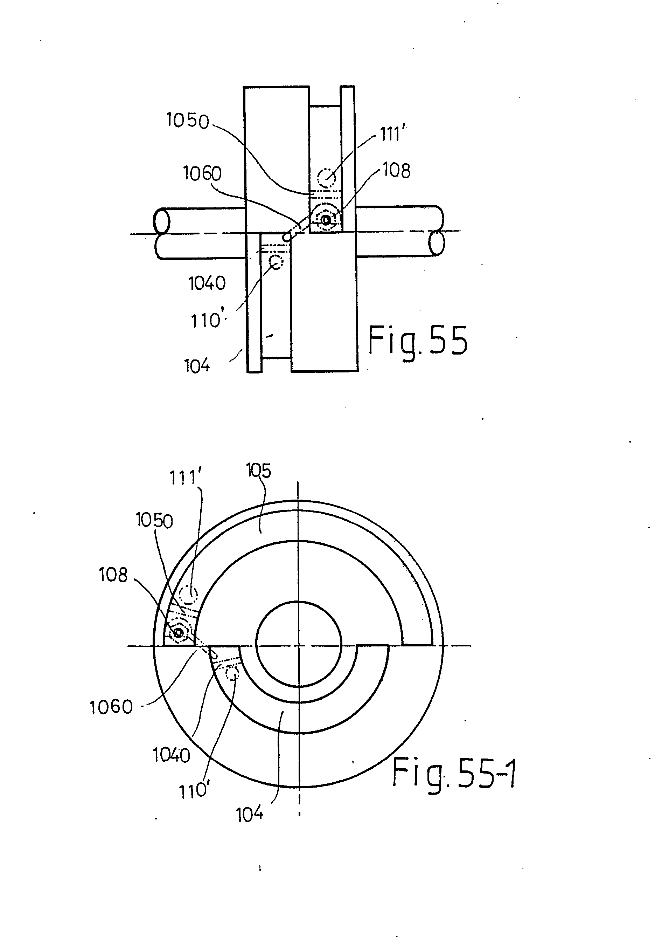

Figs. 55 to 55-1 are the graphic views of the embodiment of exchange gas chamber wherein main chamber couples guide groove of gas chamber Cy and extends in turning.

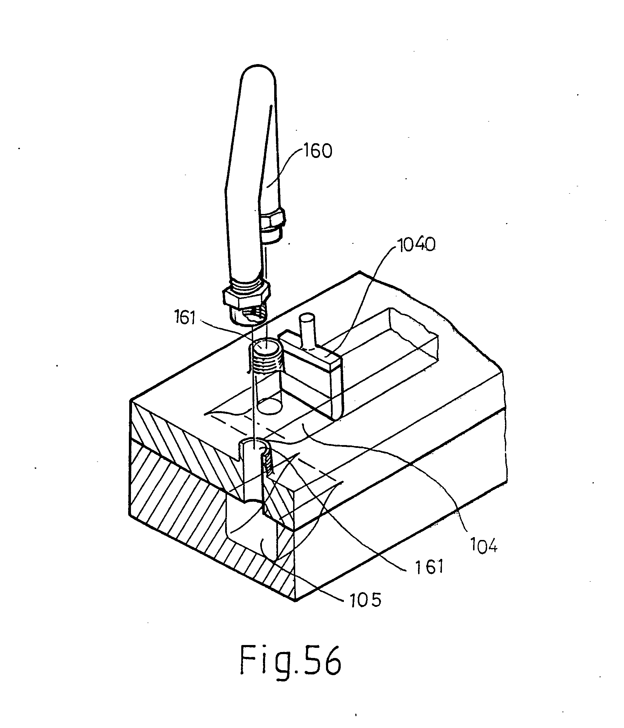

Fig. 56 is a graphic view of the embodiment of outer duct type exchange gas chamber structure.

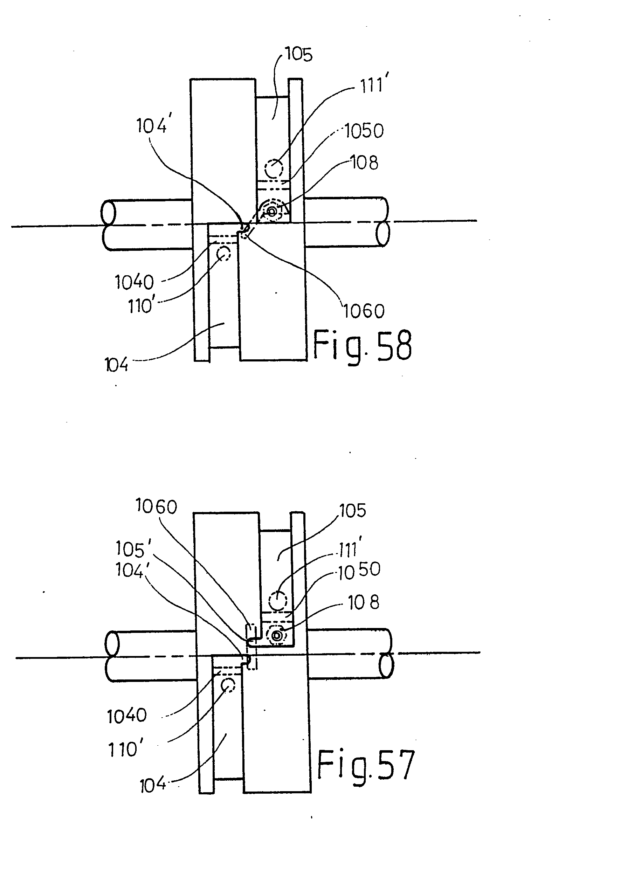

Fig. 57 is a graphic view of the embodiment wherein exchange gas chamber only couples guide transverse groove at the neighboured side of gas chambers Cx, Cy.

Fig. 58 is a grphic view of the embodiment of main chamber which couples guide groove of gas chamber Cy, and only couples guide transverse groove of gas chamber Cx.

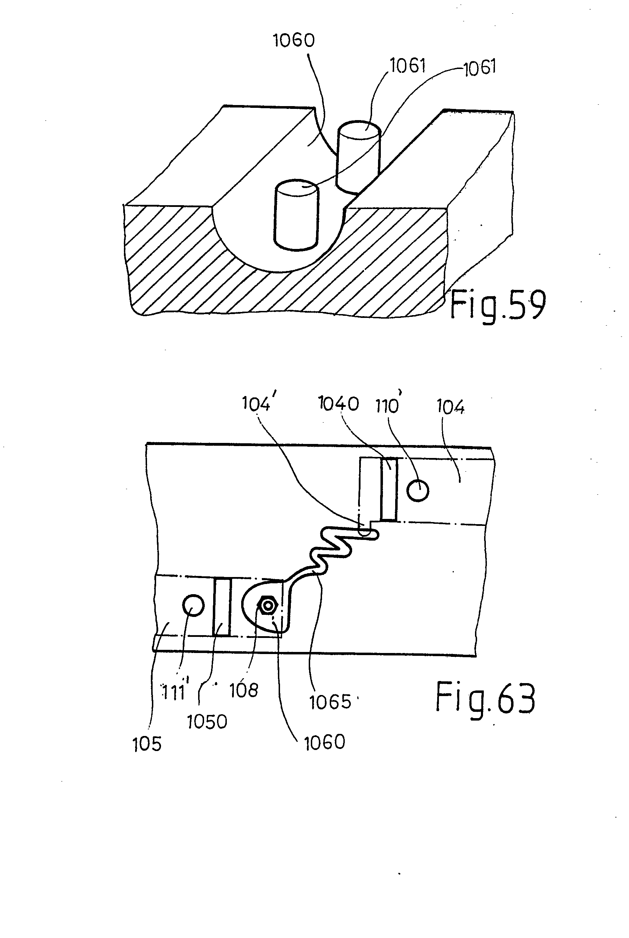

Fig. 59 is guide groove or guide transverse groove of exchange gas chamber which possesses column type turbulent flow structure.

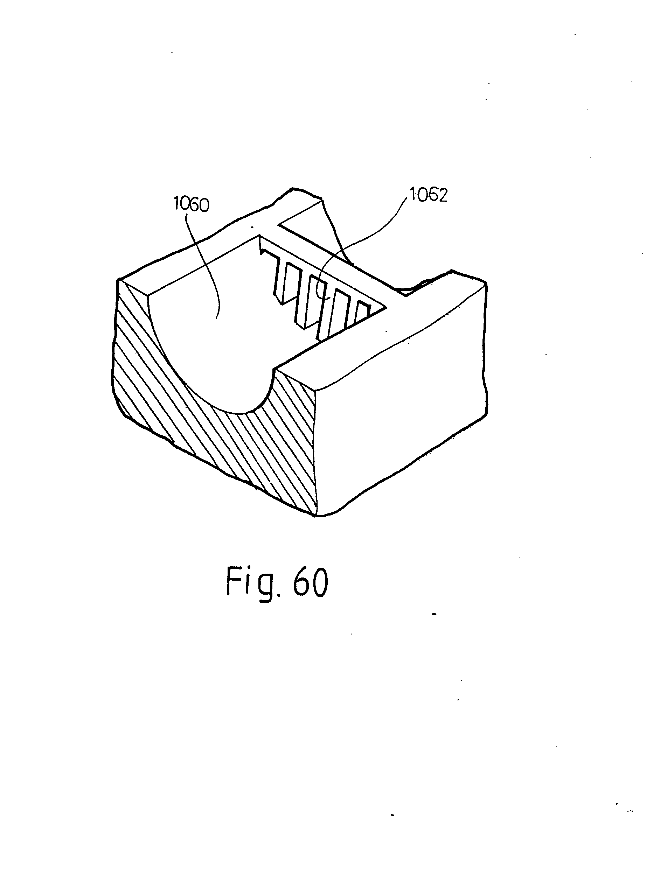

Fig. 60 is a guide groove or guide transverse groove of exchange gas chamber which possesses barrier type turbulent flow structure.

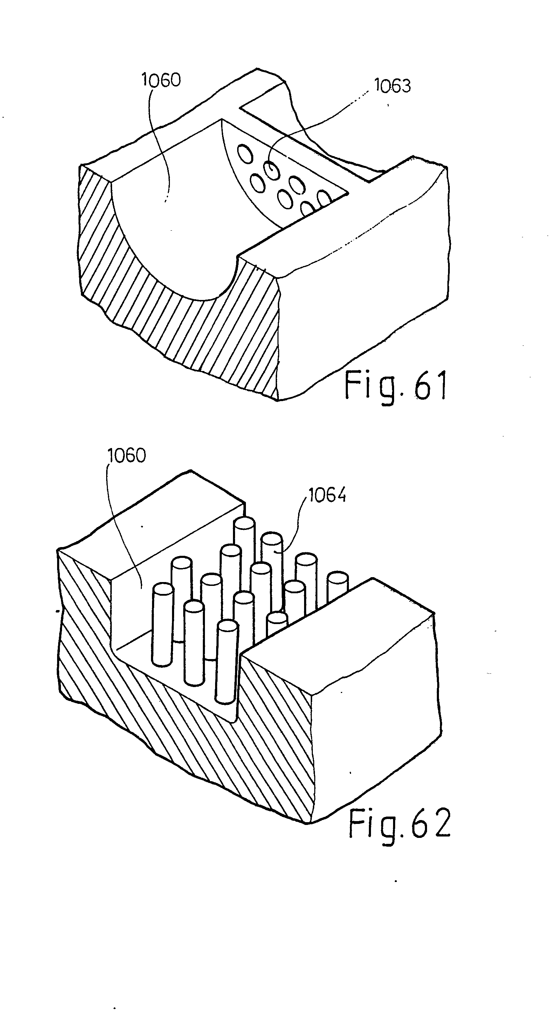

Fig. 61 is guide groove or guide transverse groove of exchange gas chamber which possesses hole type turbulent flow structure..

Fig. 62 is guide groove or guide transverse groove of exchange gas chamber which possesses granule type turbulent flow structure.

Fig. 63 is a guide groove or guide transverse groove of exchange gas chamber which possesses curved type turbulent flow structure.

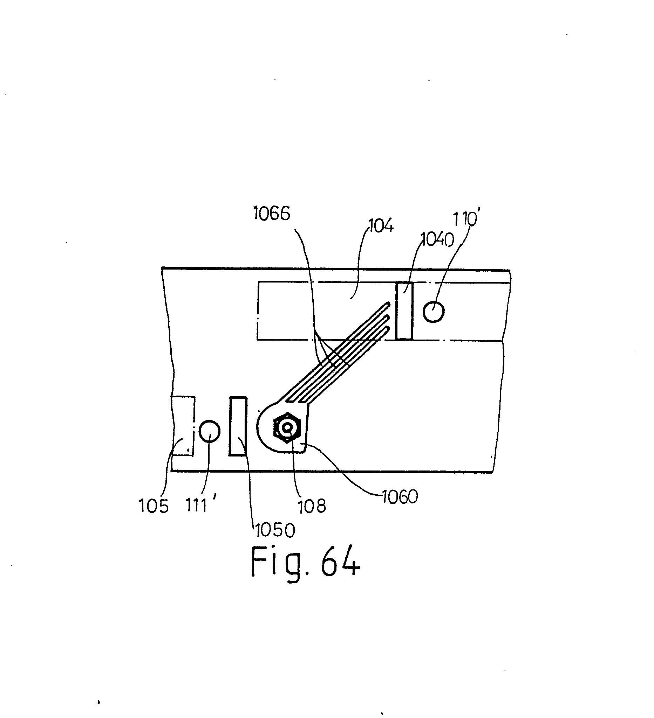

Fig. 64 is guide groove or guide transverse groove of exchange gas chamber which possesses multi-set tiny duct type turbulent flow structure.

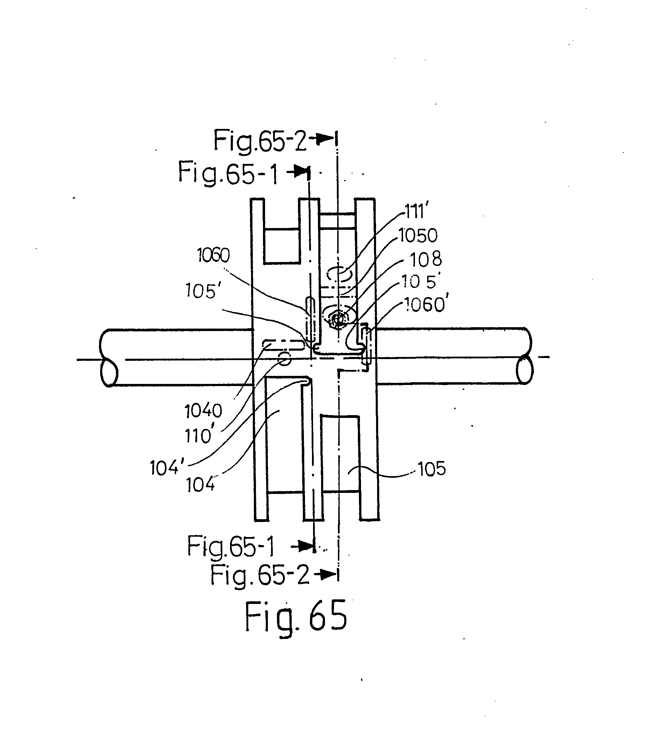

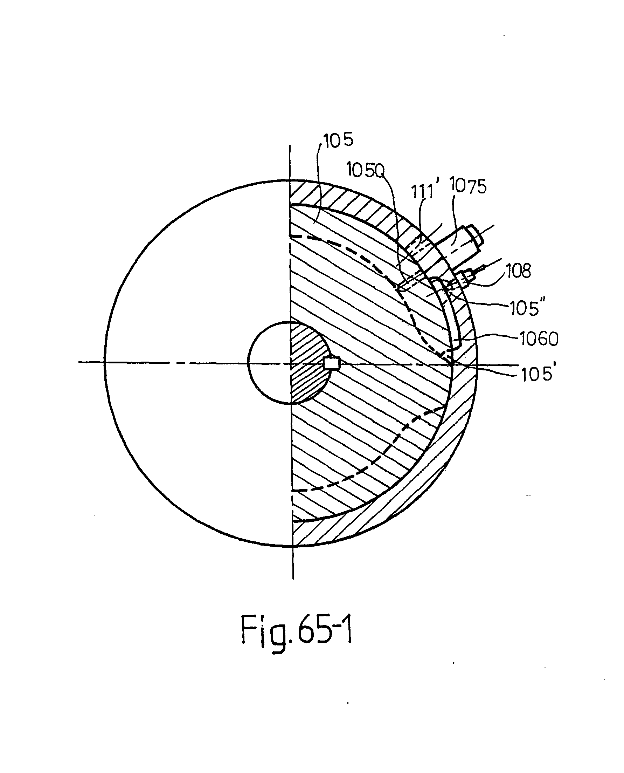

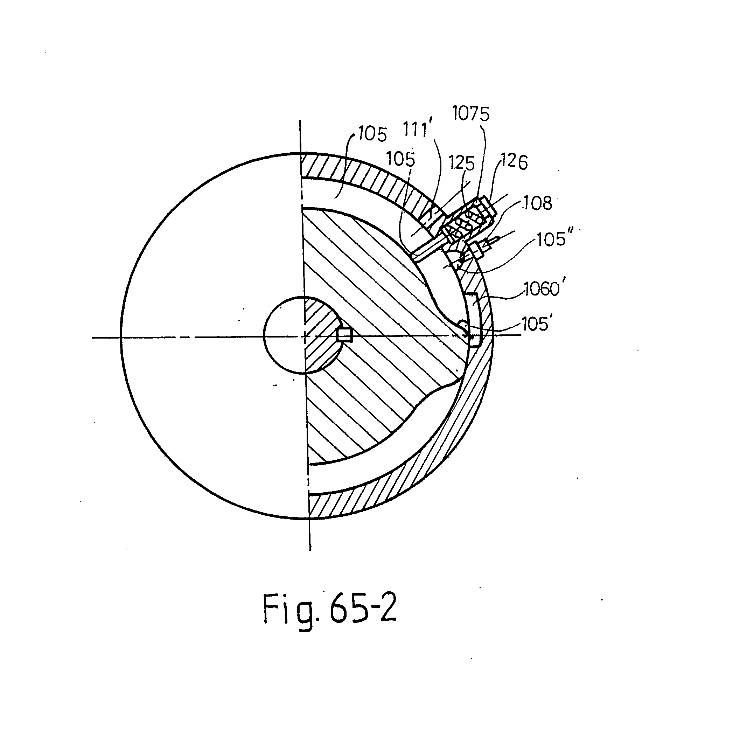

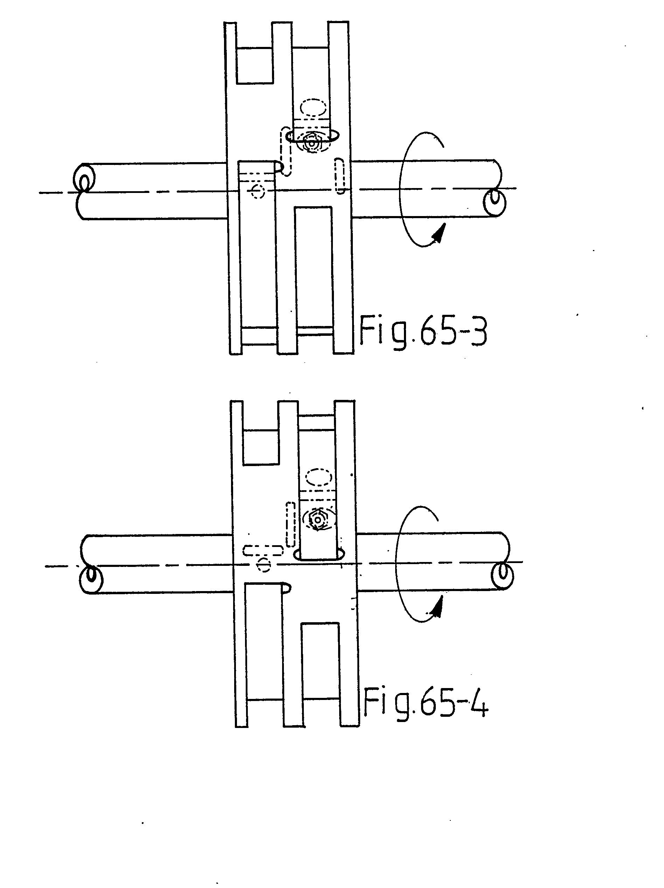

Fig. 65 to 65-2 are the graphic views of the embodiment of CP structure of independent pressure-saved gas chamber which is placed at the lagging end outside trace of gas chamber Cy.

Figs. 65-3 to 65-4 are the working procedure diagrams of the embodiment of CP structure of independent pressure-saved gas chamber which is placed at the lagging end outside trace of gas chamber Cy.

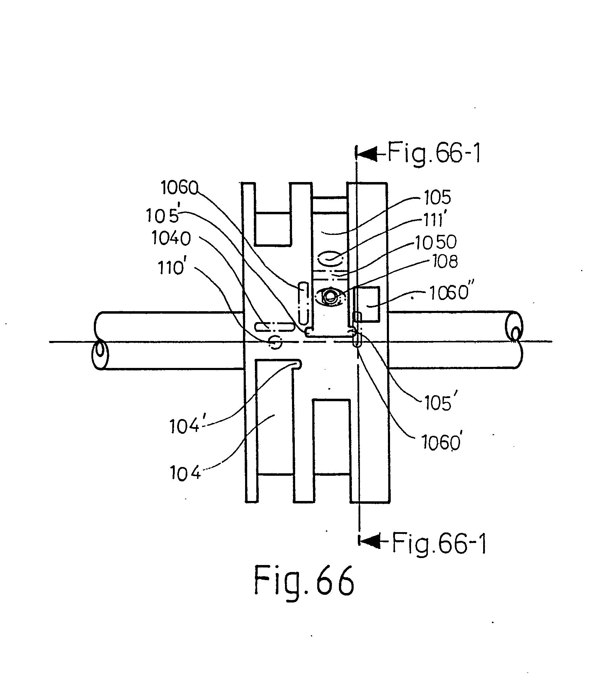

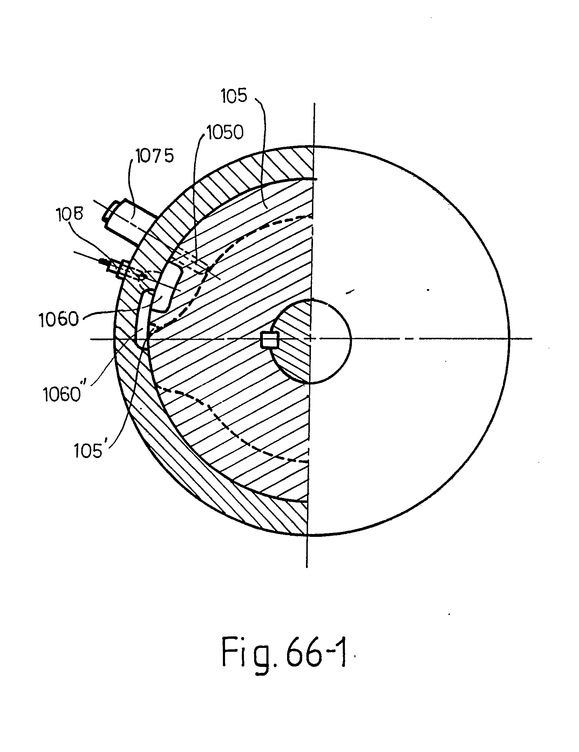

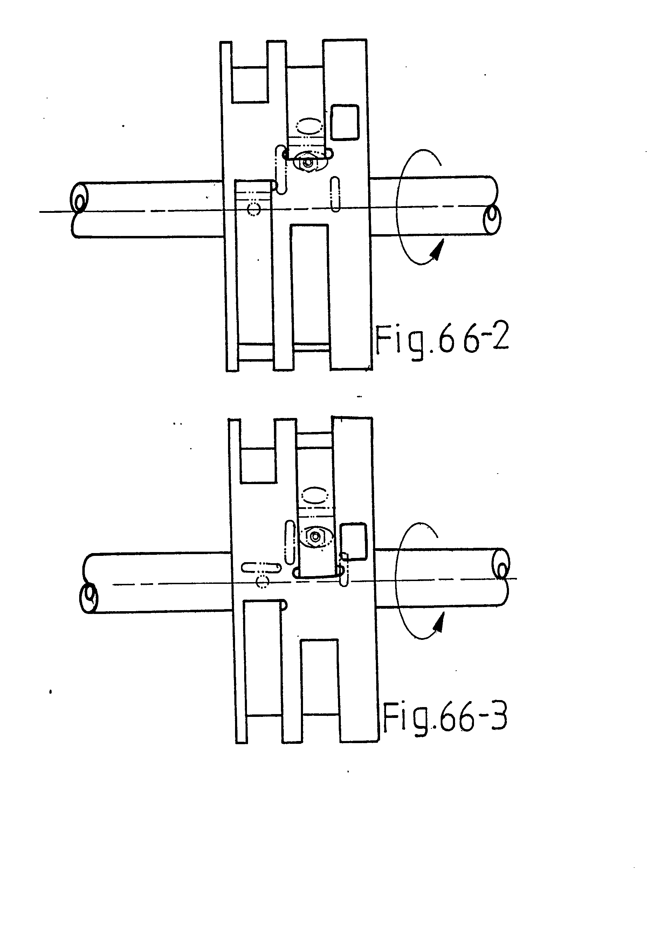

Figs. 66 to 66-1 are the graphic views of the structural embodiment of Fig. 65 wherein at the side of gas chamber Cy away from Cx, there are guide transverse groove, and auxiliary pressure-saved gas chamber CPS.

Figs. 66-2 to 66-3 are the working procedure diagrams of the structural embodiment of Fig. 65 wherein at the side of gas chamber Cy away from Cx, there are guide transverse groove, and auxiliary pressure-saved gas chamber CPS.

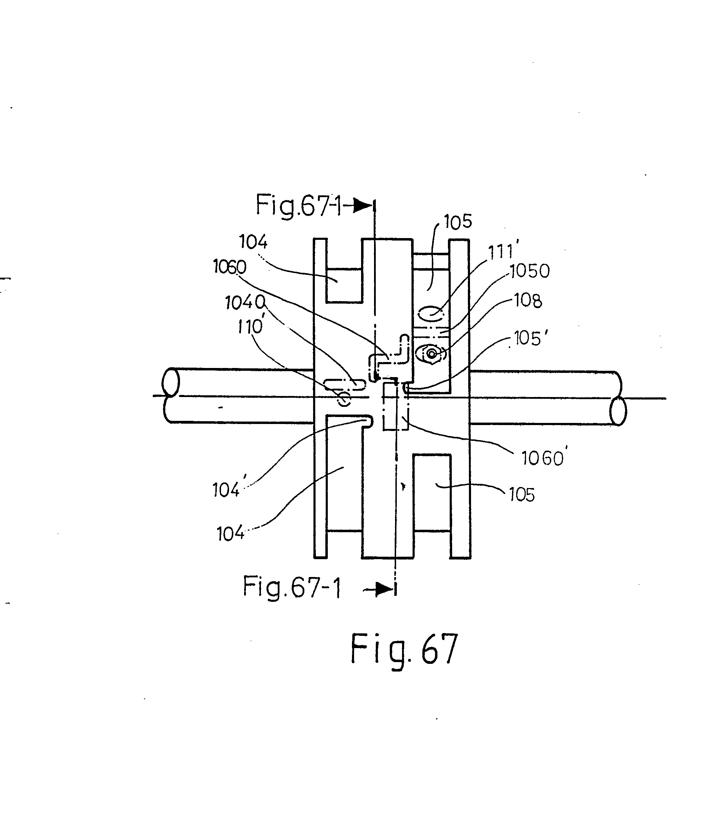

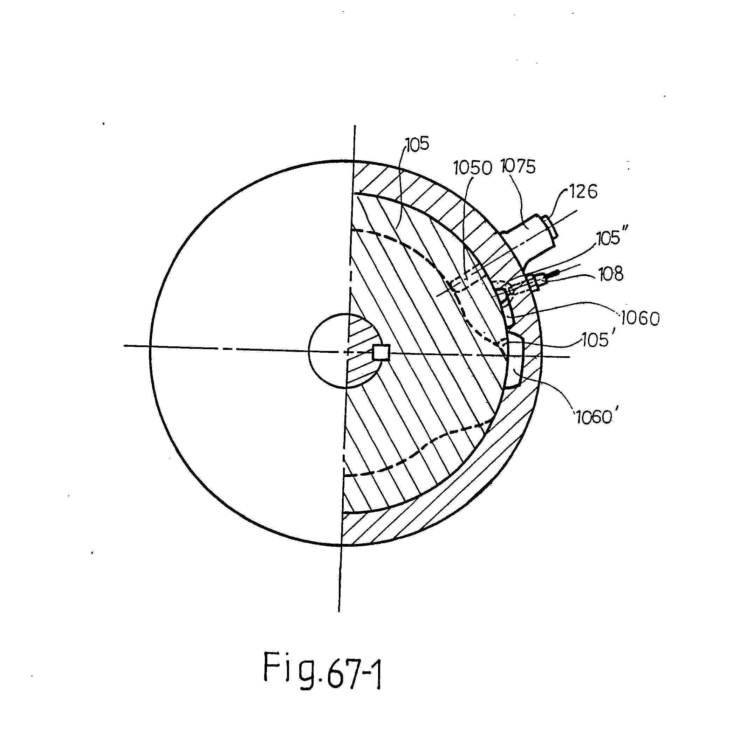

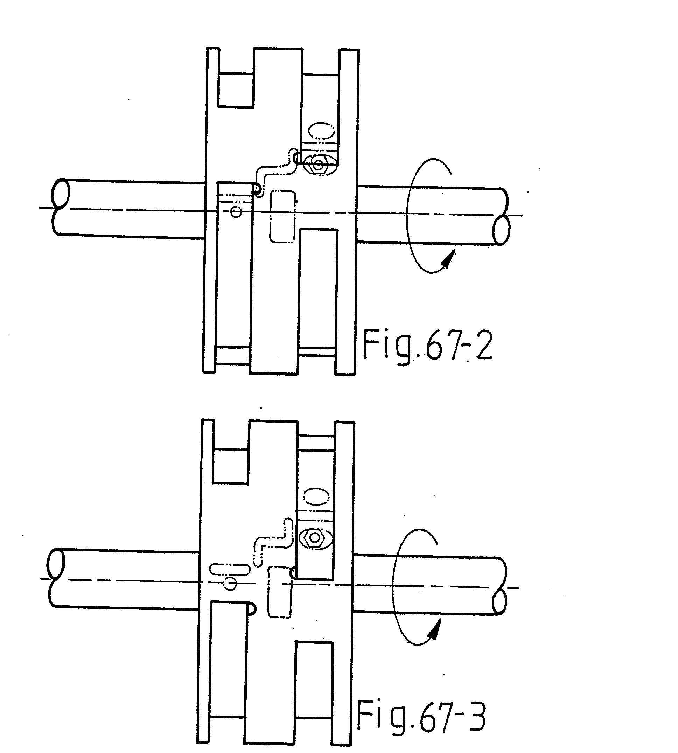

Figs. 67 to 67-1 are the graphic views of the structural embodiment of independent pressure-saved gas chamber CP which is placed at the lagging end of exchange gas chamber CZ.

Figs. 67-2 to 67-3 are the working procedure diagrams of the structural embodiment of independent pressure-saved gas chamber CP which is placed at the lagging end of exchange gas chamber CZ.

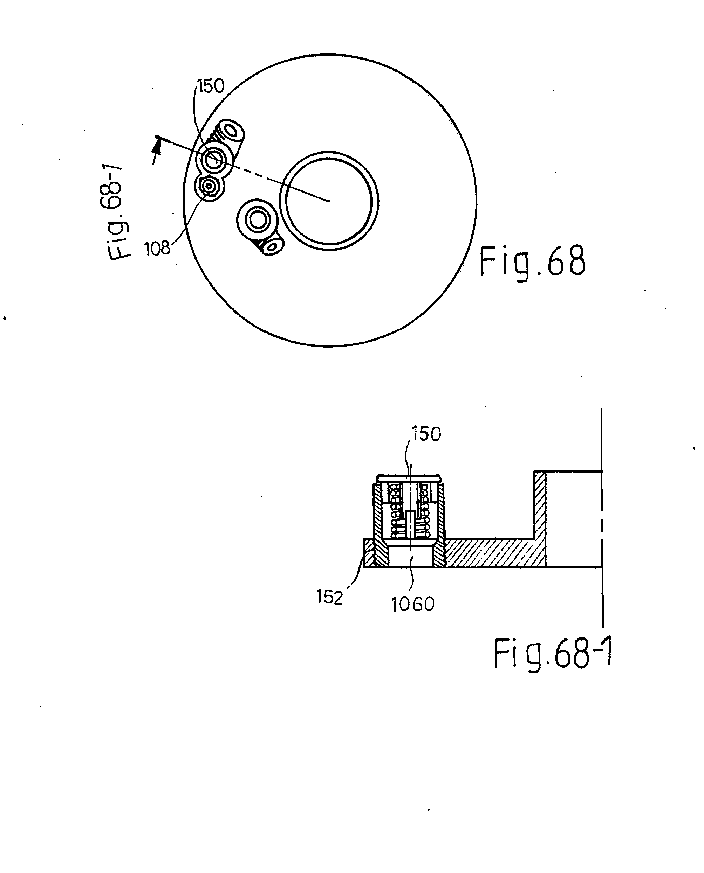

Figs. 68 to 68-1 is a graphic view of the structural embodiment which assembles pressure release valve.

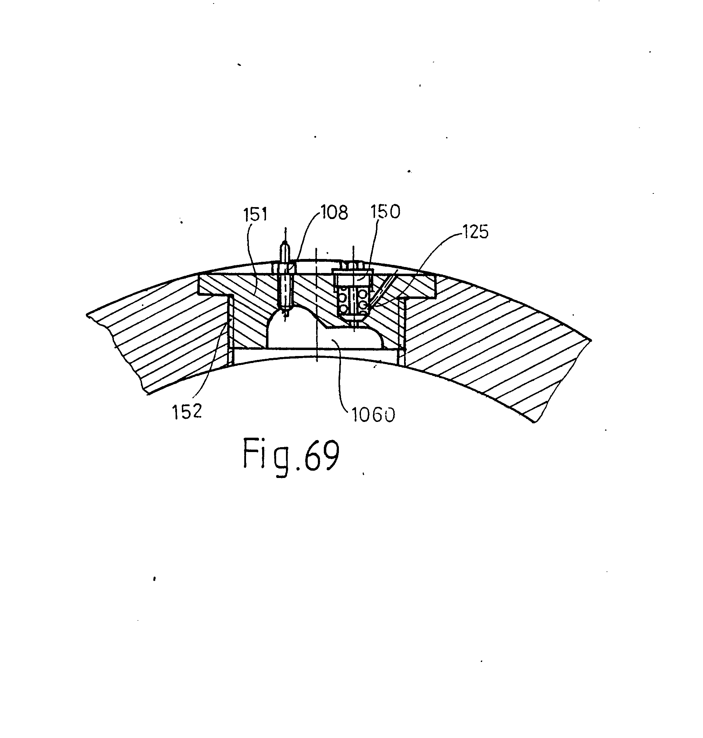

Fig. 69 is a graphic view of the embodiment which is independent plug type structure.

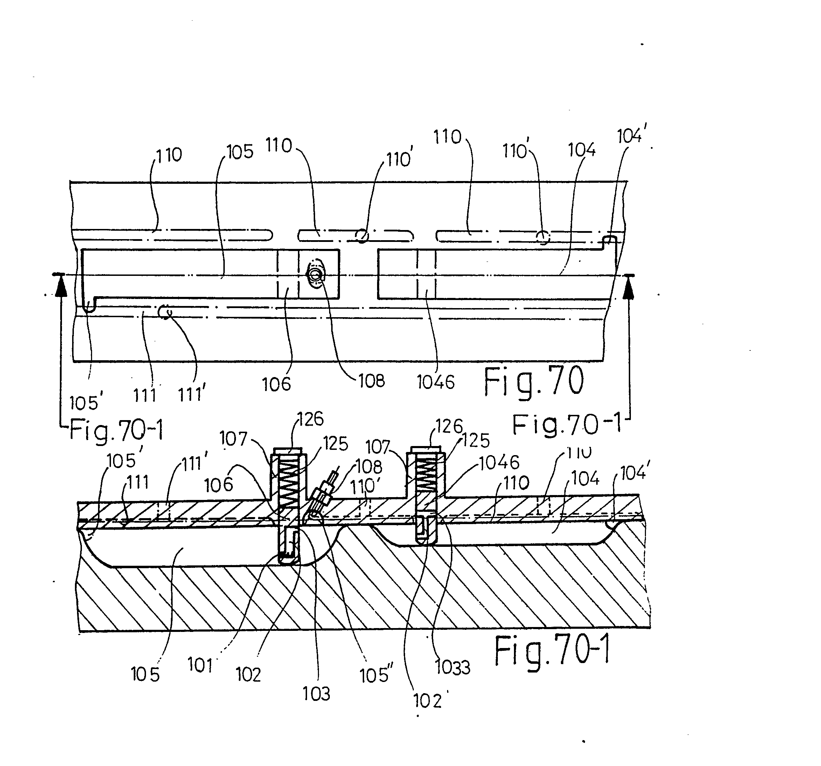

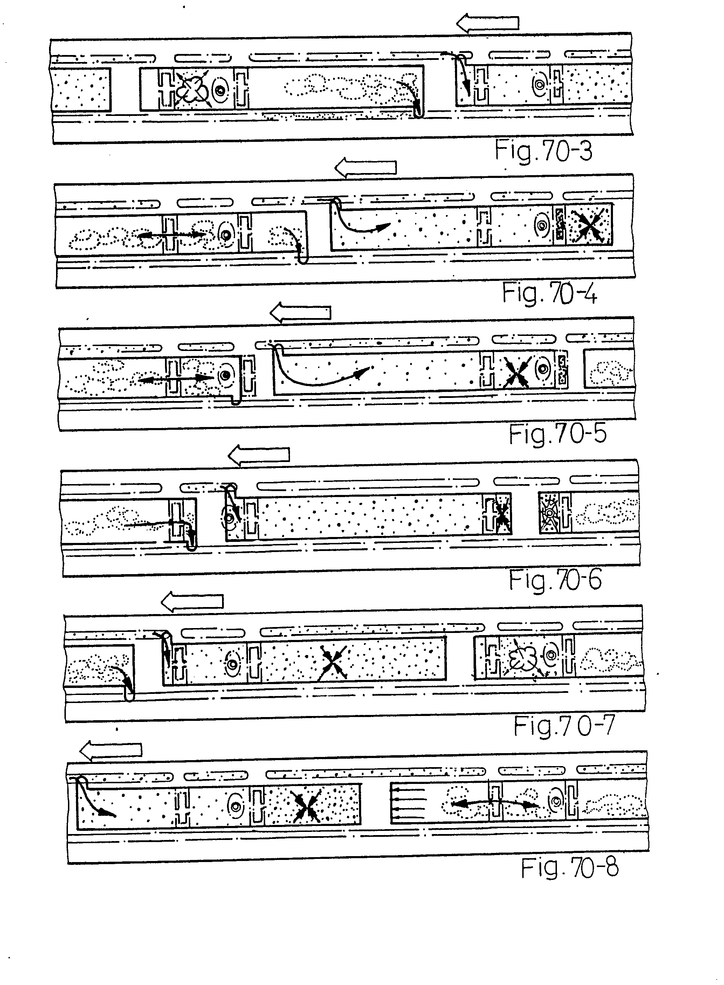

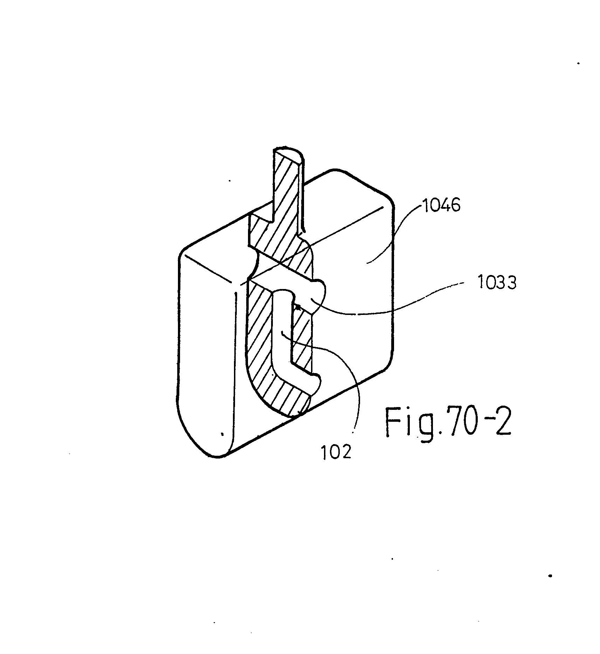

Figs. 70 to 70-1 are the graphic view of twice help combustion embodiment A wherein active body is the fixed body, gas chamber sets Cx, Cy are in the same body in series and possess single-set gas chamber Cx multi-set gate plate Gx.

Fig. 70-2 is a graphic view of structure of gate plate set GP with penetration hole.

Figs. 70-3 to 70-8 are the working procedure diagrams of twice help combustion embodiment A wherein active body is the fixed body, gas chamber sets Cx, Cy are in the same body in series and possess single-set gas chamber Cx multi-set gate plate Gx.

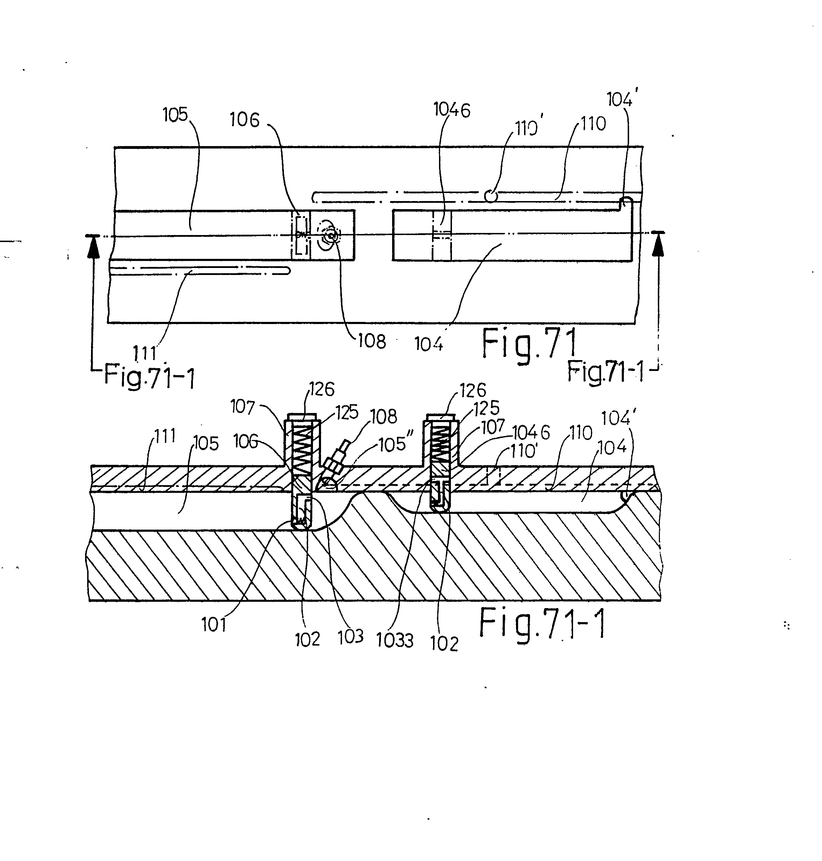

Figs. 71 to 71-1 are the graphic views of twice help combustion embodiment B wherein active body is the fixed body, gas chamber sets Cx, Cy are in the same body in series and possess single-set gas chamber Cx multi-set gate plate Gx.

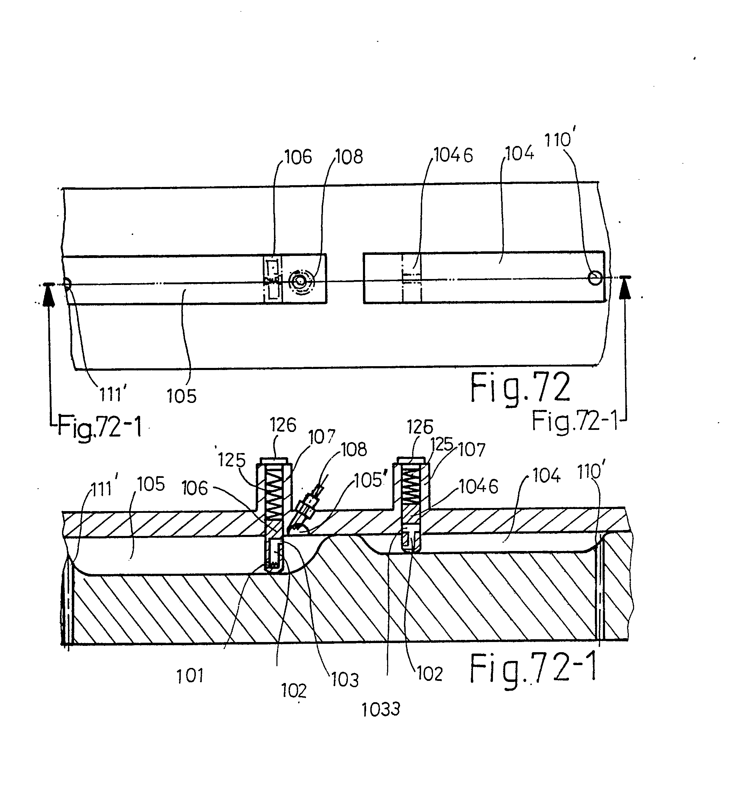

Figs. 72 to 72-1 are the graphic view of twice help combustion embodiment wherein active body is motion body, gas chambers Cx, Cy are in the same body in series, and possess single-set gas chamber Cx, multi-set gate plate Gx.

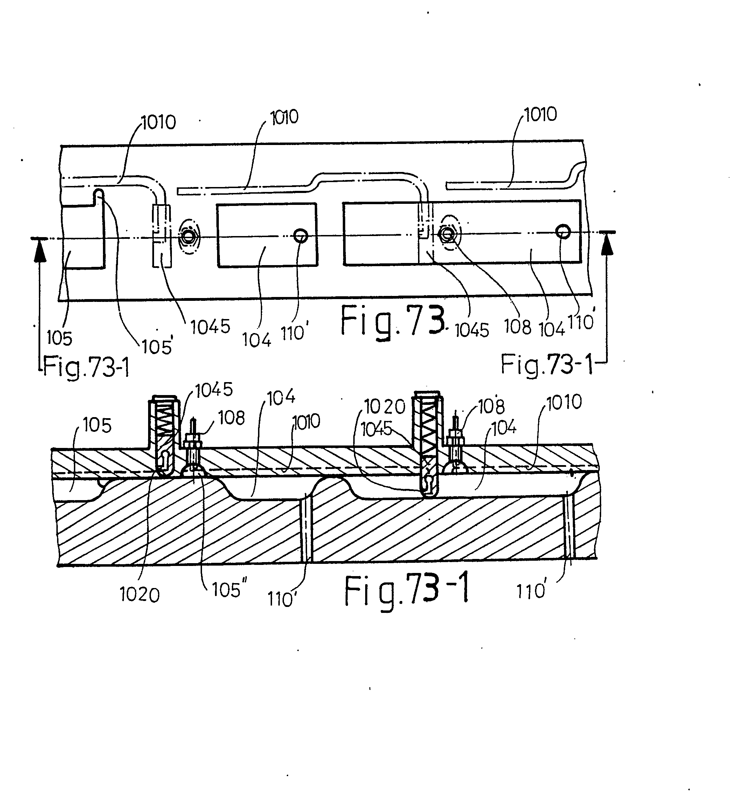

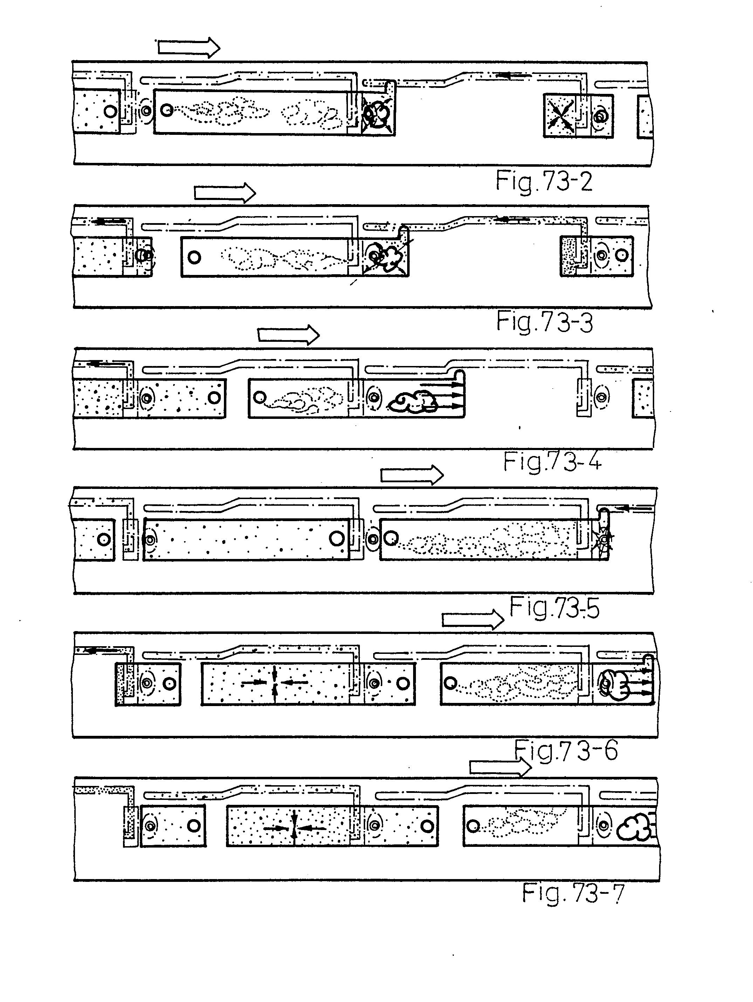

Figs. 73 to 73-1 are the graphic views of twice help combustion embodiment wherein active body is the fixed body, gas chambers Cx, Cy are in the same body in series, and possess multi-set gas chamber Cx, single-set plate plate Gx.

Figs. 73-2 to 73-7 are the working procedure diagrams of twice help combustion wherein active body is the fixed body, gas chambers Cx, Cy are in the same body in series, and possess multi-set gas chamber Cx, single-set gate plate Gx.

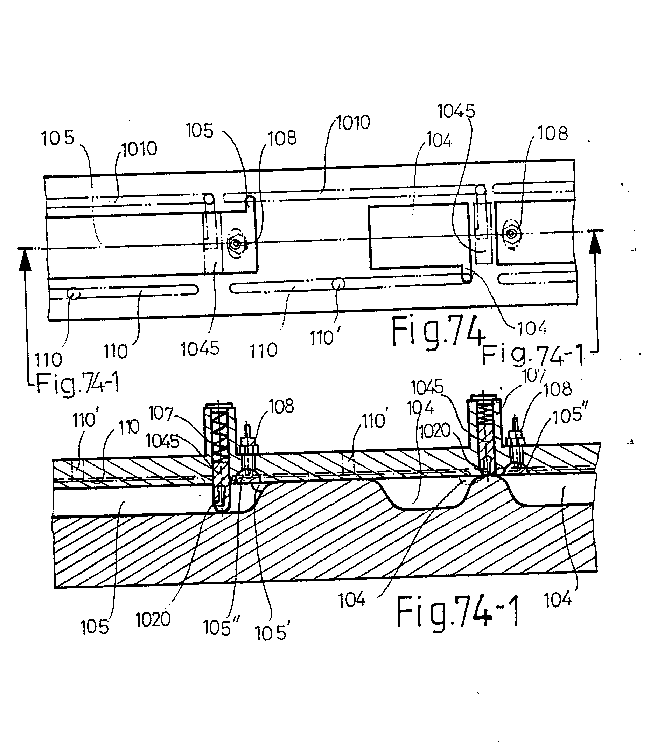

Figs. 74 to 74-1 are the graphic views of twice help combustion embodiment wherein active body is motion body, gas chambers Cx, Cy are in the same body in parallel, and possess multi-set gas chamber Cx, single-set gate plate Gx.

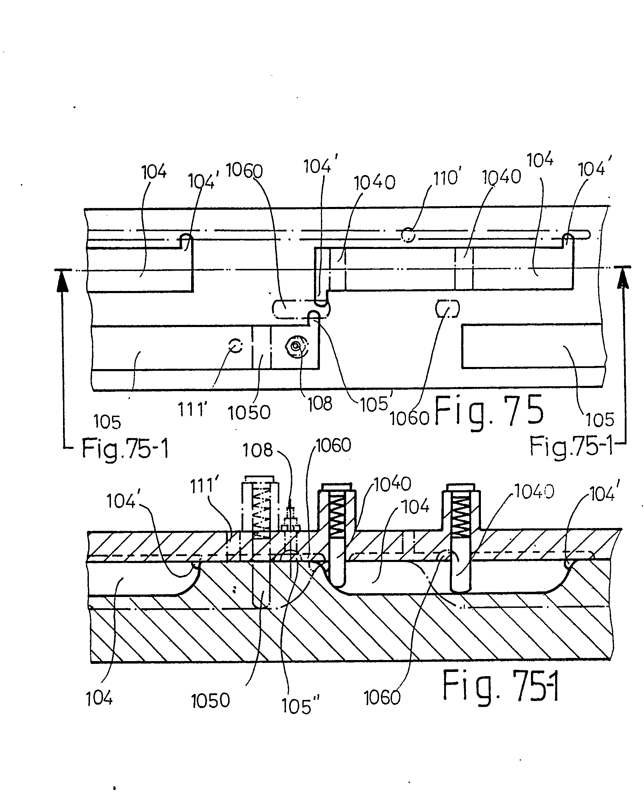

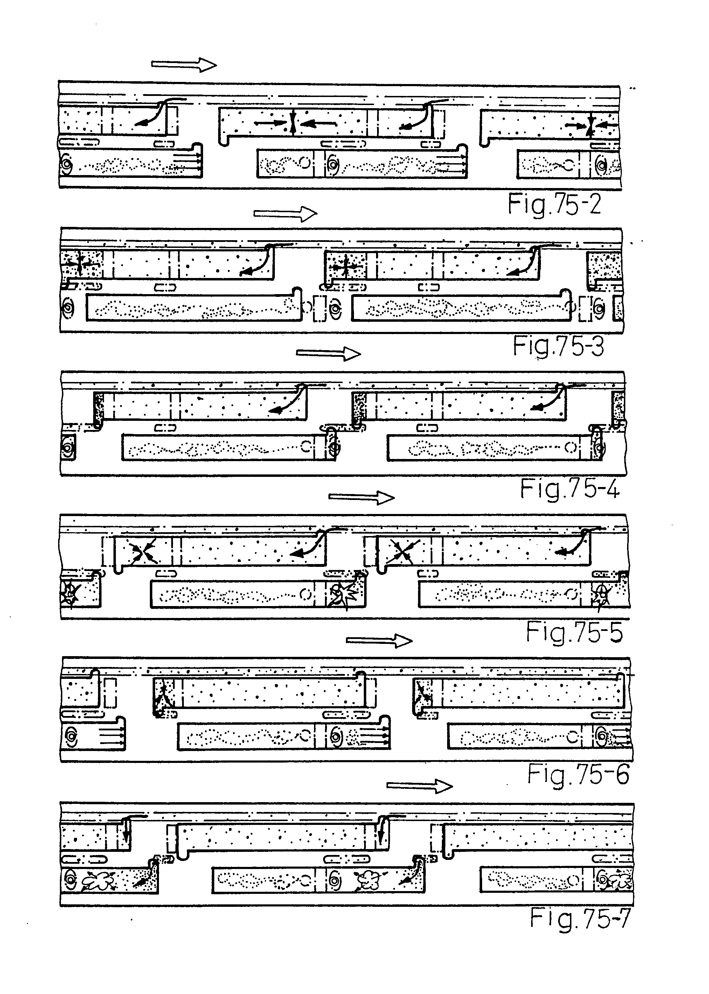

Figs. 75 to 75-1 are the graphic views of twice help combustion embodiment A wherein active body is the fixed body, gas chambers Cx, Cy are in the same body in parallel, and possess single-set gas chamber Cx, multi-set gate plate set Gx.

Figs. 75-2 to 75-7 are the working procedure diagrams of twice help combustion embodiment A wherein active body is the fixed body, gas chambers Cx, Cy are in the same body in parallel, and possess single-set gas chamber Cx, multi-set gate plate set Gx.

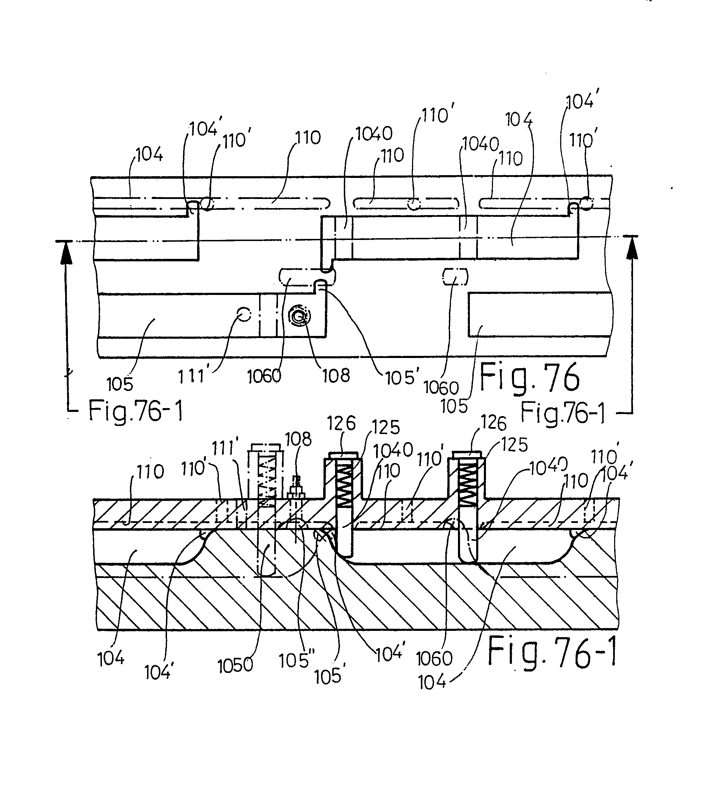

Figs. 76 to 76-1 are the graphic views of twice help combustion embodiment B wherein active body is the fixed body, gas chambers Cx, Cy are in the same body in parallel, and possess single-set gas chamber Cx, multi-set gate plate set Gx.

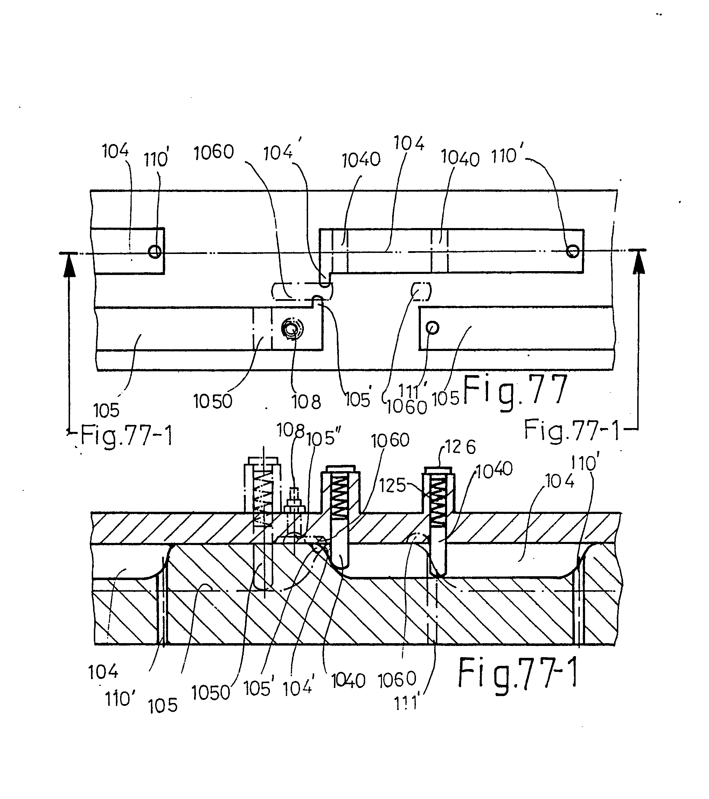

Figs. 77 to 77-1 are the graphic views of twice help combustion embodiment wherein active body is motion body, gas chambers Cx, Cy are in the same body in paralle, and possess single-set gas chamber Cx, multi-set gate plate set Gx.

Fis. 78 to 78-1 are the graphic views of twice help combustion embodiment A wherein active body is the fixed body, gas chambers Cx, Cy are in the same body in parallel, and possess multi-set gas chamber Cx, single-set gate plate Gx.

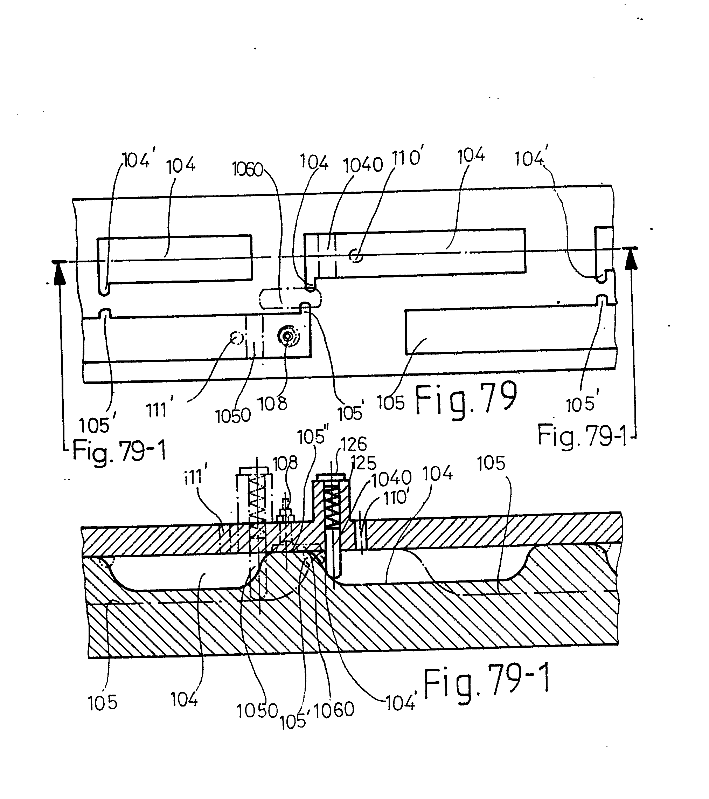

Figs. 79 to79-1 are the graphic views of twice help combustion embodiment B wherein active body is the fixed body, gas chambers Cx, Cy are in the same body in parallel, and possess multi-set gas chamber Cx, single-set gate plate Gx.

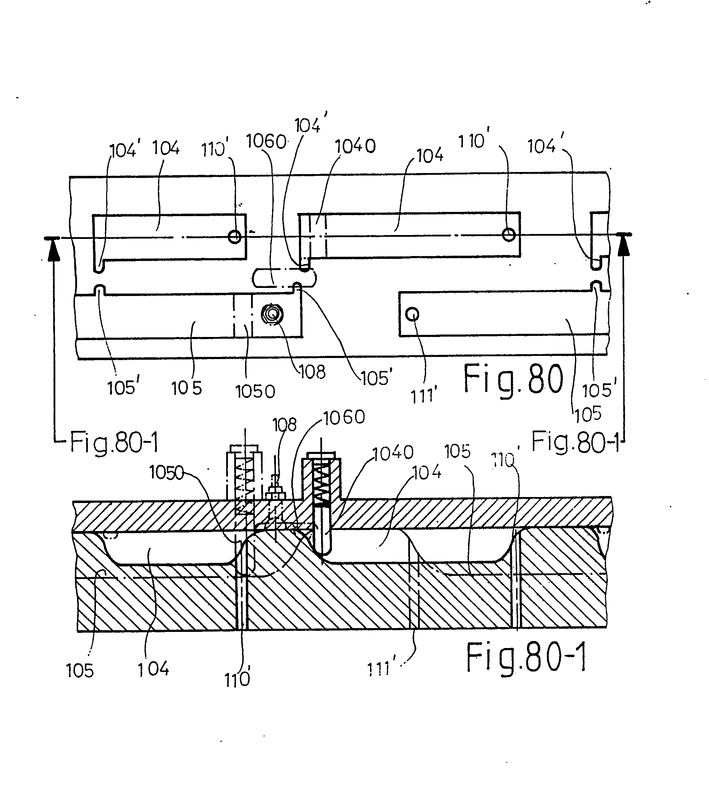

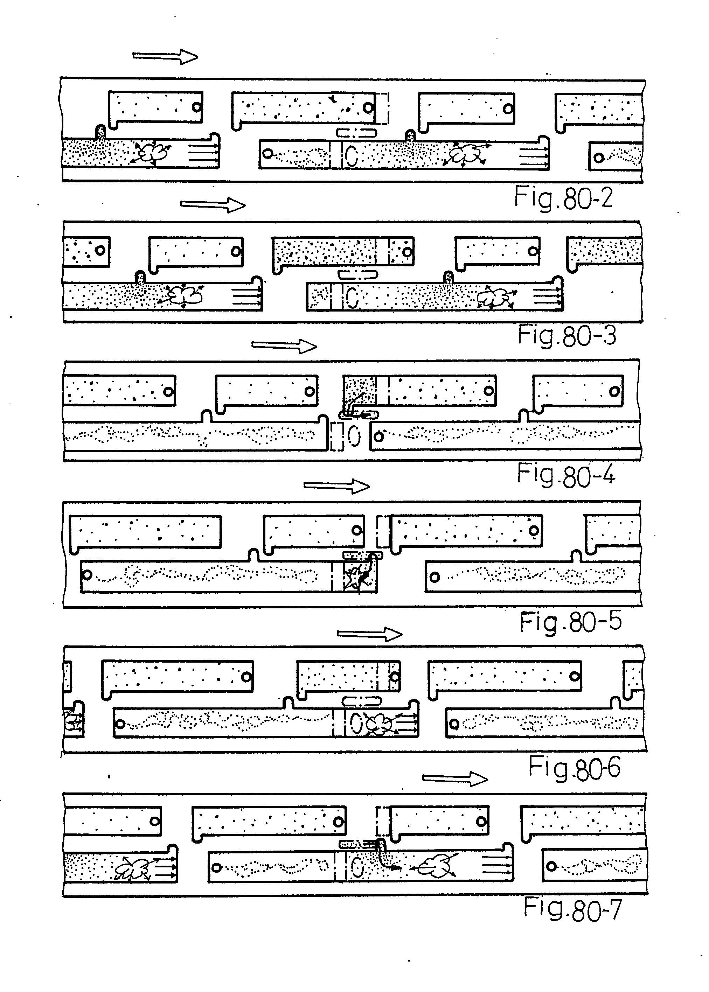

Figs. 80 to 80-1 are the graphic views of twice help combustion embodiment wherein active body is motion body, gas chambers Cx, Cy are in the same body in parallel, and possess multi-set chamber Cx, single-set gate plate Gx.

Figs. 80-2 to 80-7 are the working procedure diagrams of twice help combustion embodiment wherein active body is motion body, gas chambers Cx, Cy are in the same body in parallel, and possess multi-set gas chamber Cx, single-set gate plate Gx.

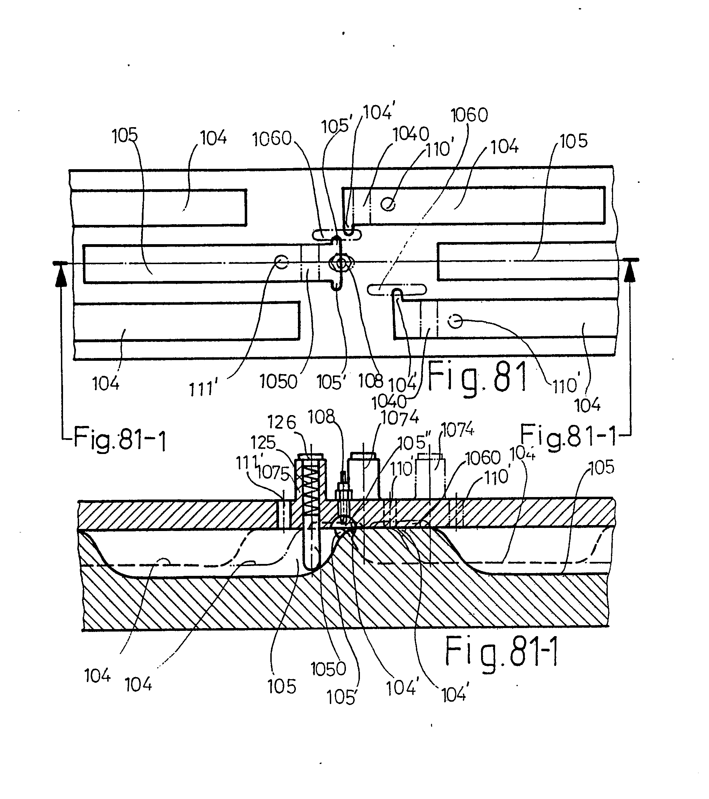

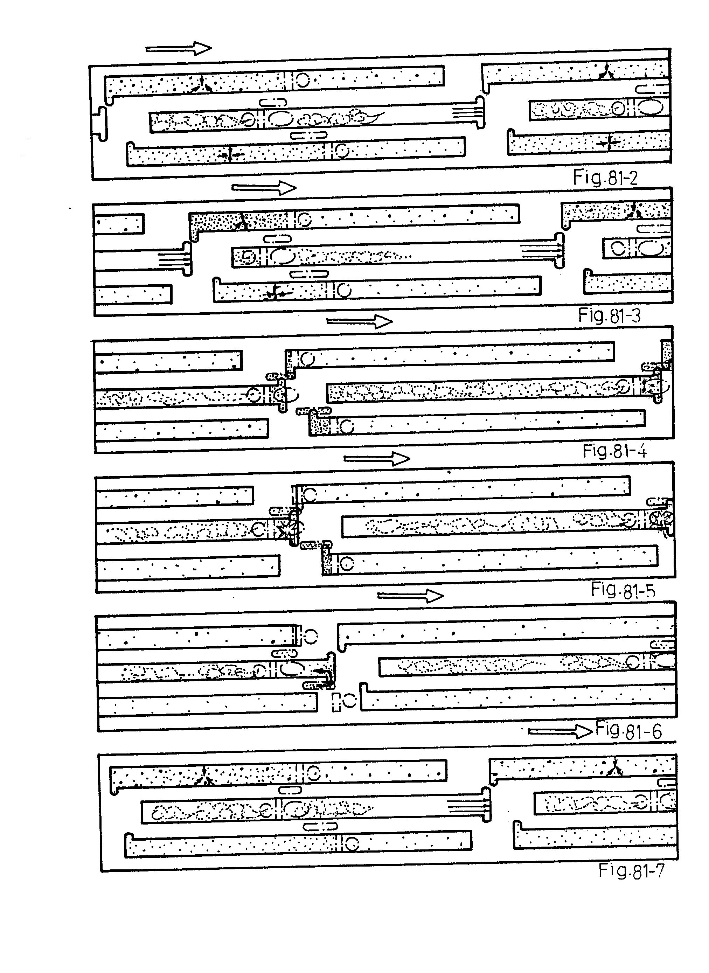

Figs. 81 to 81-1 are the graphic views of twice help combustion embodiment wherein active body is the fixed body, and possesses multi-row gas chamber Cx which is in parallel with single-set gas chamber Cy in the same body.

Figs. 81-2 to 81-7 are the working procedure diagrams of twice help combustion embodiment wherein active body is the fixed body, and possesses multi-row gas chamber Cx which is in parallel with single-set gas chamber Cy in the same body.

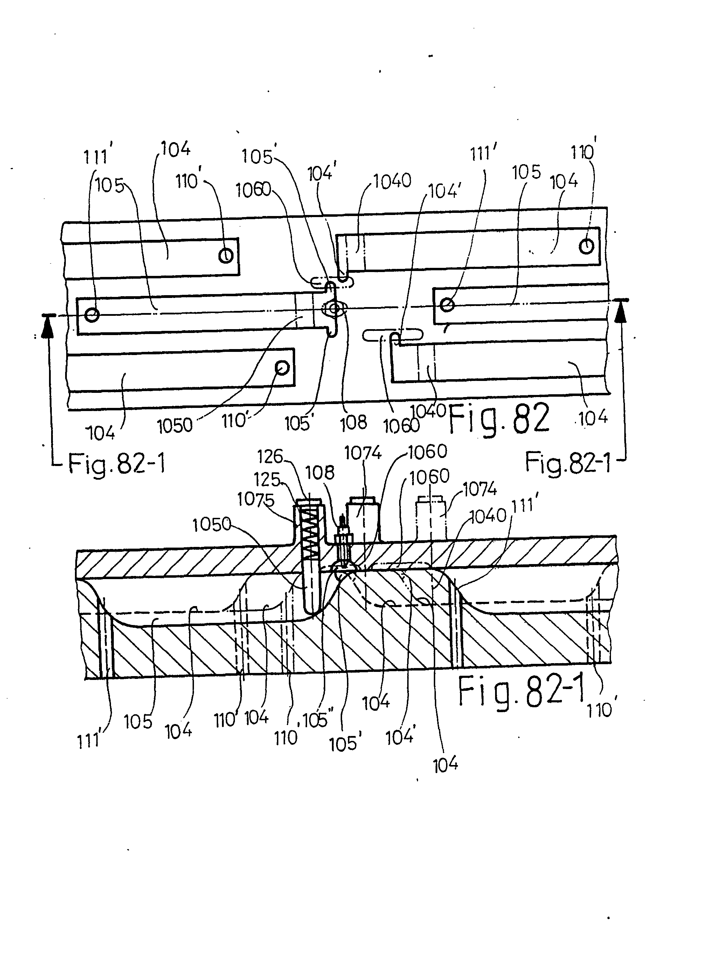

Figs. 82 to 82-1 are the graphic views of twice help combustion embodiment wherein active body is motion body, and possesses multi-row gas chamber Cx which is in parallel with single-set gas chamber Cy in the same body.

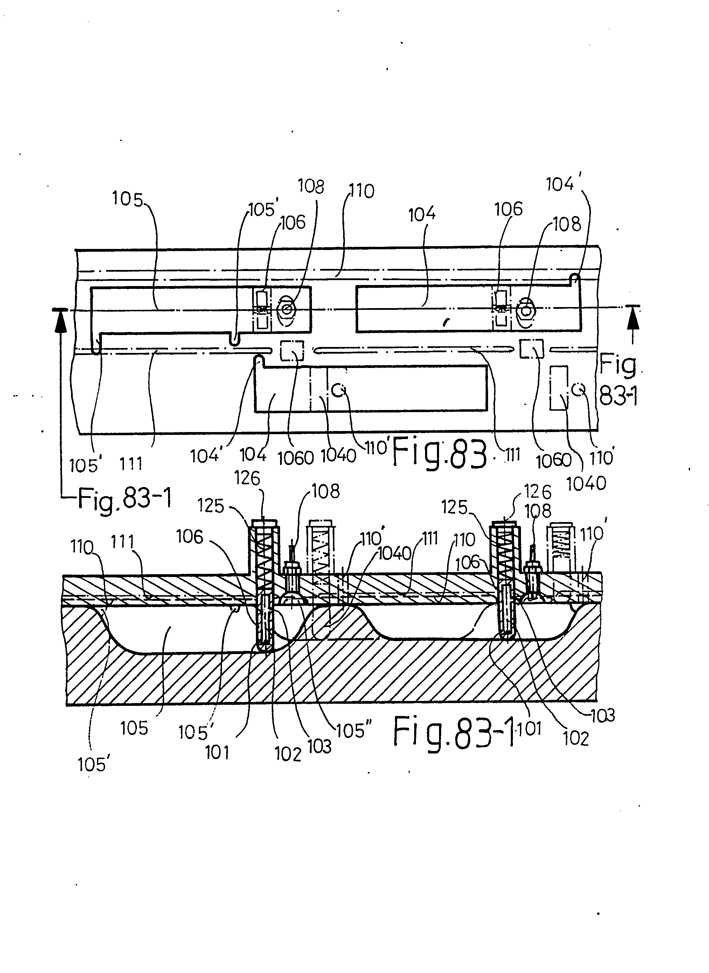

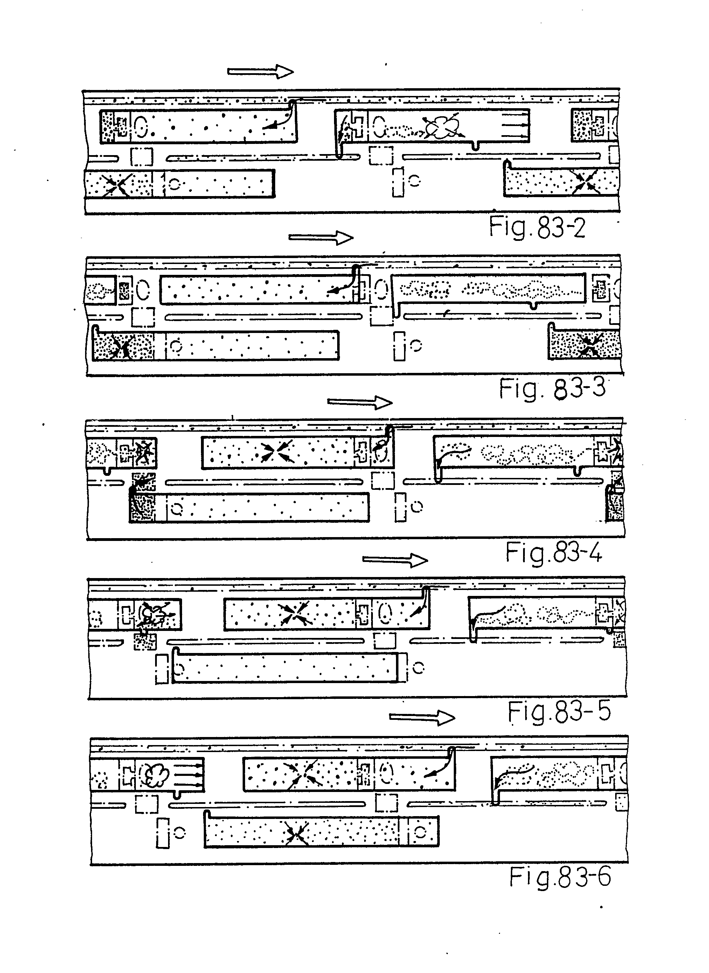

Figs. 83 to 83-1 are the graphic views of twice help combustion embodiment wherein active body is the fixed body, gas chambers Cx, Cy are in series and parallel in the same body.

Figs. 83-2 to 83-6 are the working procedure diagrams of twice help combustion embodiment wherein active body is the fixed body, gas chambers Cx, Cy are in series and parallel in the same body.

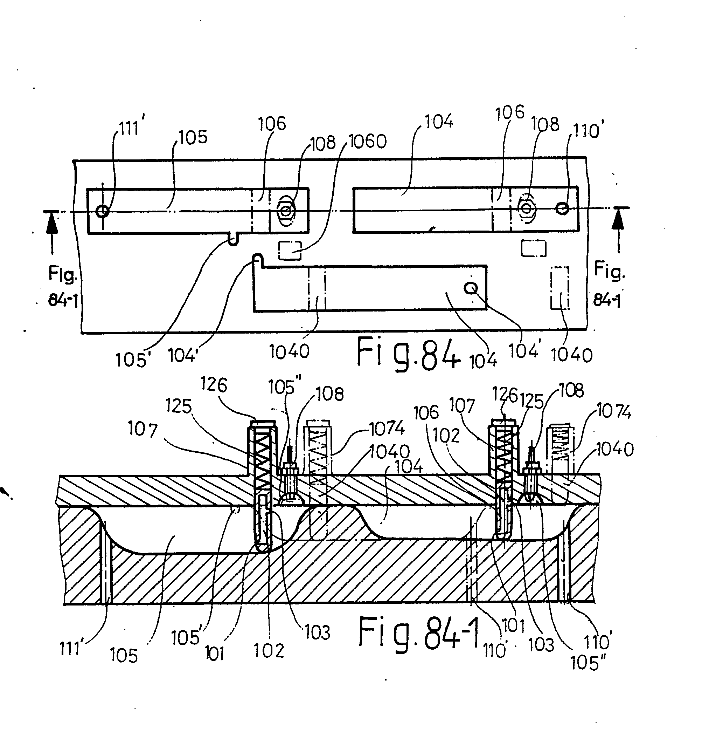

Figs. 84 to 84-1 are the graphic views of twice help combustion embodiment wherein active body is motion body, gas chambers Cx, Cy are in series and parallel in the same body.

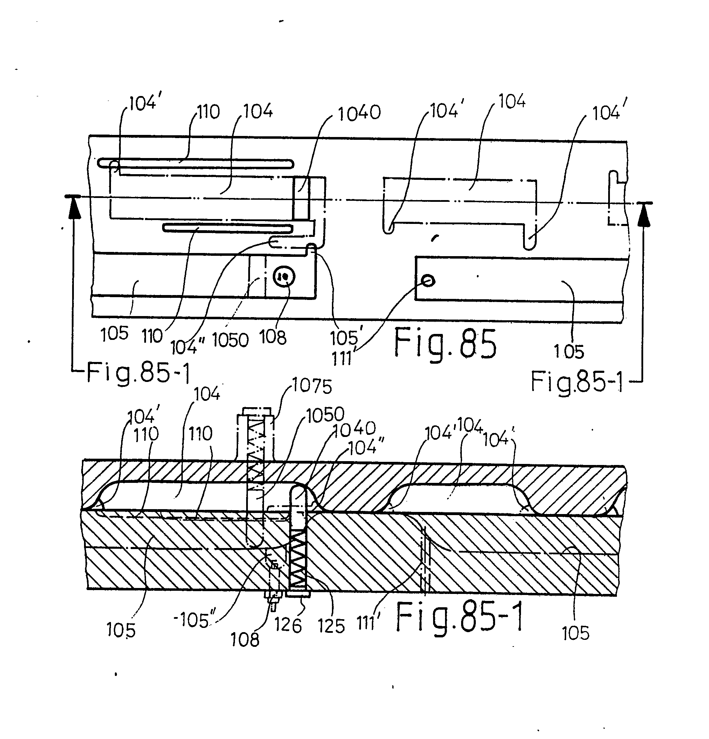

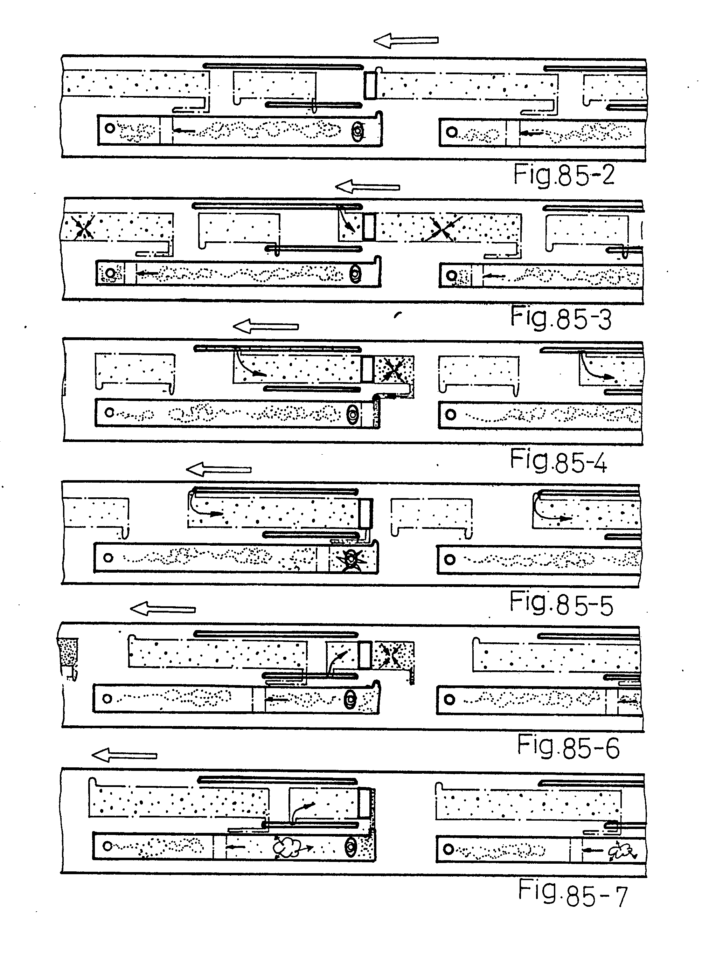

Figs. 85 to 85-1 are the graphic views of twice help combustion embodiment A wherein active body is the fixed body, the different body gas chamber Cy is in parallel, and possesses multi-set series gas chamber Cx, single-set gate plate Gx.

Figs. 85-2 to 85-7 are the working procedure diagrams of twice help combustion embodiment A wherein active body is the fixed body, the different body gas chamber Cy is in parallel and possesses

EP 0 397 996 A2

multi-set series gas chamber Cx, single-set gate plate Gx.

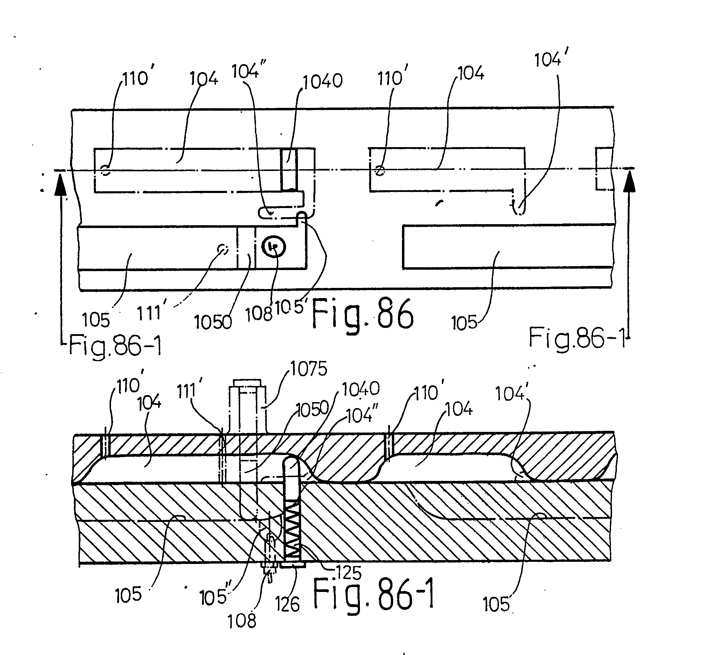

Figs. 86 to 86-1 are the graphic views of twice help combustion embodiment B wherein active body is the fixed body, the different body gas chamber Cy is in parallel, and possesses multi-set series gas chamber Cx, single-set gate plate Gx.

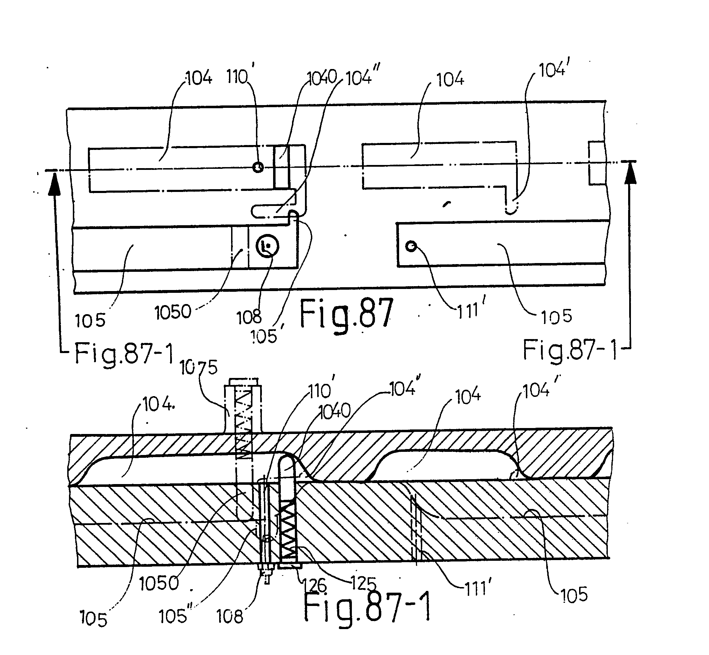

Figs. 87 to 87-1 are the graphic views of twice help combustion embodiment wherein active body is motion body, the different body gas chamber Cy is parallel, and possesses multi-set series gas chamber Cx, single-set gate plate Gx.

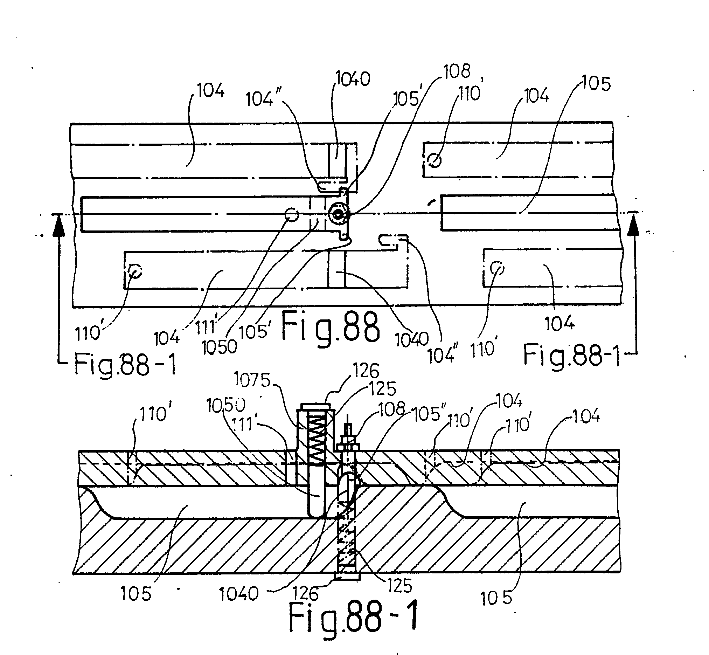

Figs. 88 to 88-1 are the graphic views of twice help combustion embodiment wherein active body is the fixed body, and possesses multi-row gas chamber set Cx which is in parallel with gas chamber Cy in the different body.

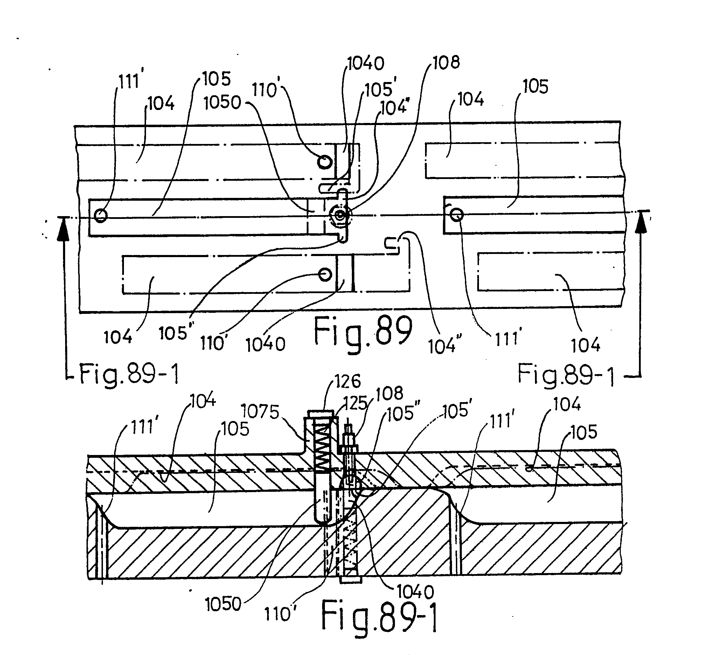

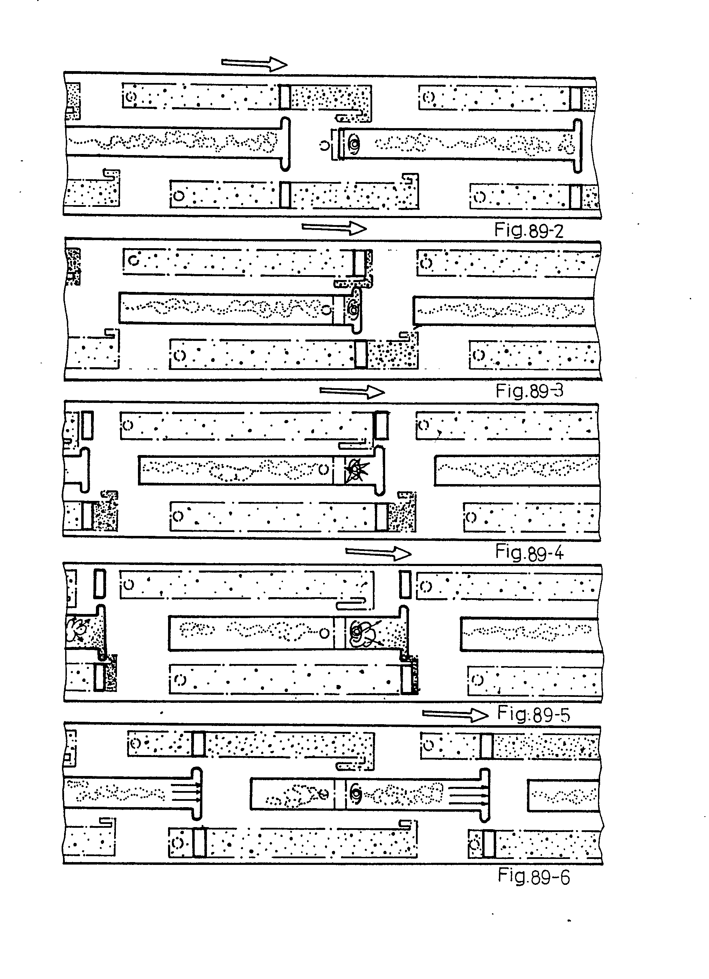

Figs. 89 to 89-1 are the graphic view of twice help combustion embodiment wherein active body is motion body, and possesses multi-row gas chamber Cx which is in parallel with gas chamber Cy in different body.

Figs. 89-2 to 89-6 are the working procedure diagrams of twice help combustion embodiment wherein active body is motion body, and possesses multi-row gas chamber Cx which is in parallel with gas chamber Cy in different body.

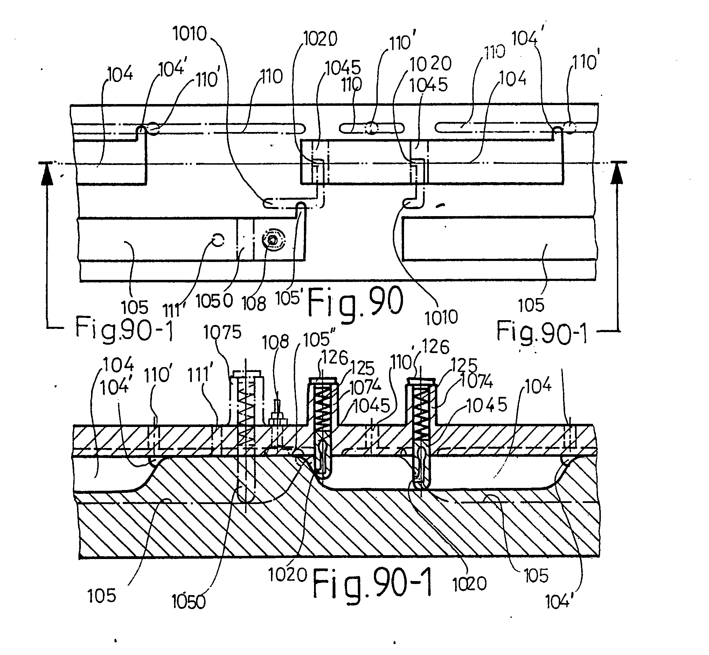

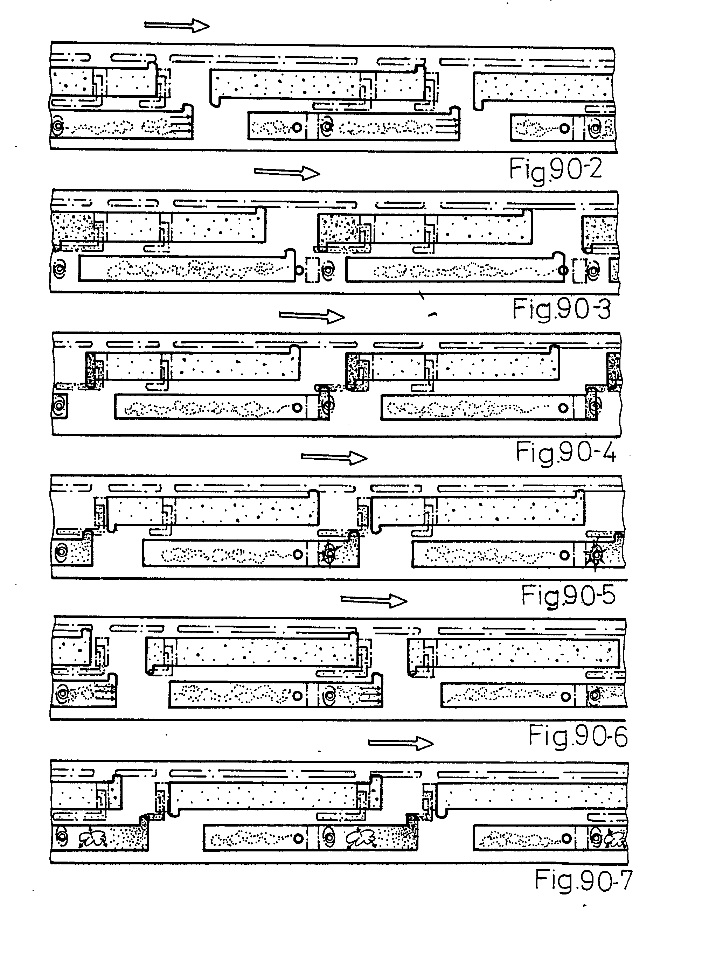

Figs. 90 to 90-1 are the graphic view of twice help combustion embodiment A wherein active body is the fixed body, gate plate set possesses guide hole, gas chamber Cx possesses multi-set gate plate Gx and is in parallel with gas chamber Cy in the same body.

Figs. 90-2 to 90-7 are the working procedure diagrams of twice help combustion embodiment A wherein active body is the fixed body, gate plate set possesses guide hole, gas chamber Cx possesses multi-set gate plate Gx, and is parallel with gas chamber Cy in the same body.

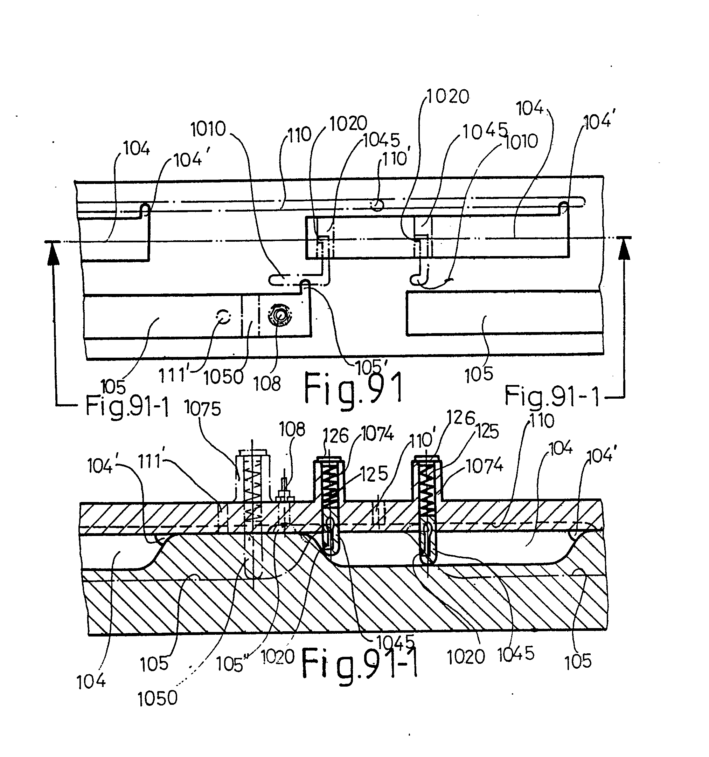

Figs. 91 to 91-1 are the graphic views of twice help combustion embodiment B wherein active body is the fixed body, gate plate set possesses guide hole, gas chamber Cx possesses multi-set gate plate Gx, and is parallel with gas chamber Cy in the same body.

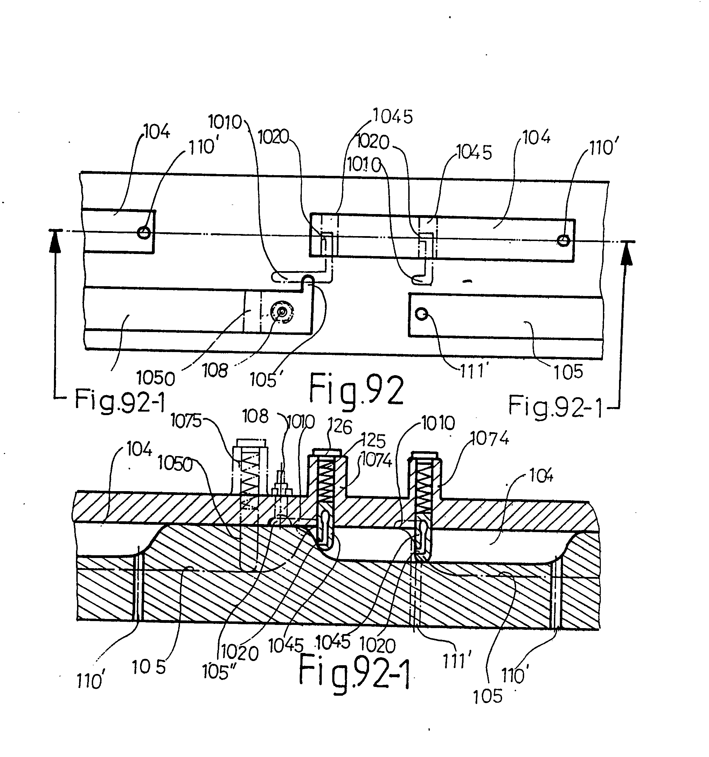

Figs. 92 to 92-1 are the graphic views of twice help combustion embodiment wherein active body is motion body, gate plate set possesses guide hole, gas chamber Cx possesses multi-set gate plate Gx, and is parallel with gas chamber Cy in the same body.

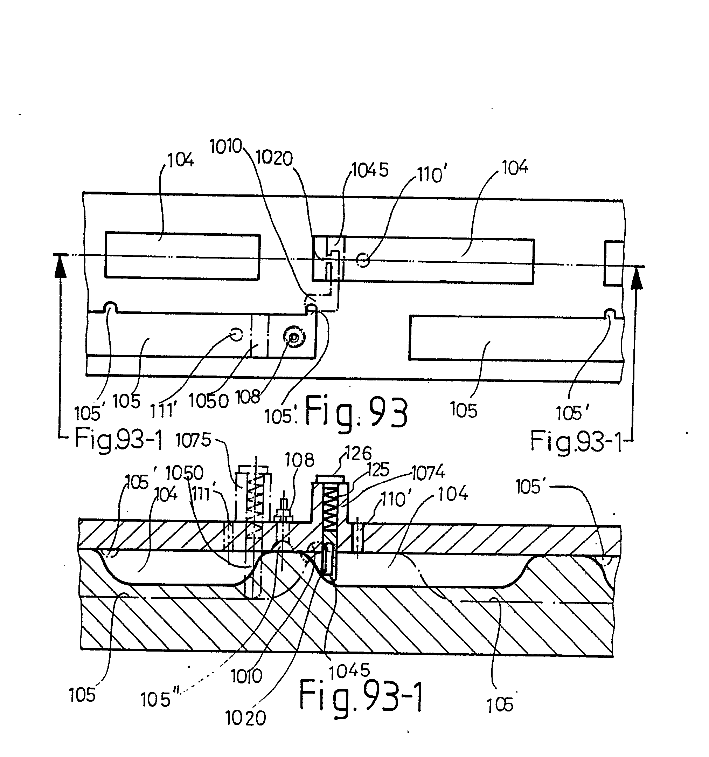

Figs. 93 to 93-1 are the graphic views of twice help combustion embodiment wherein active body is the fixed body, gate plate set possesses guide hole, multi-set series gas chamber Cx is in parallel with single-set gas chamber Cy in the same body.

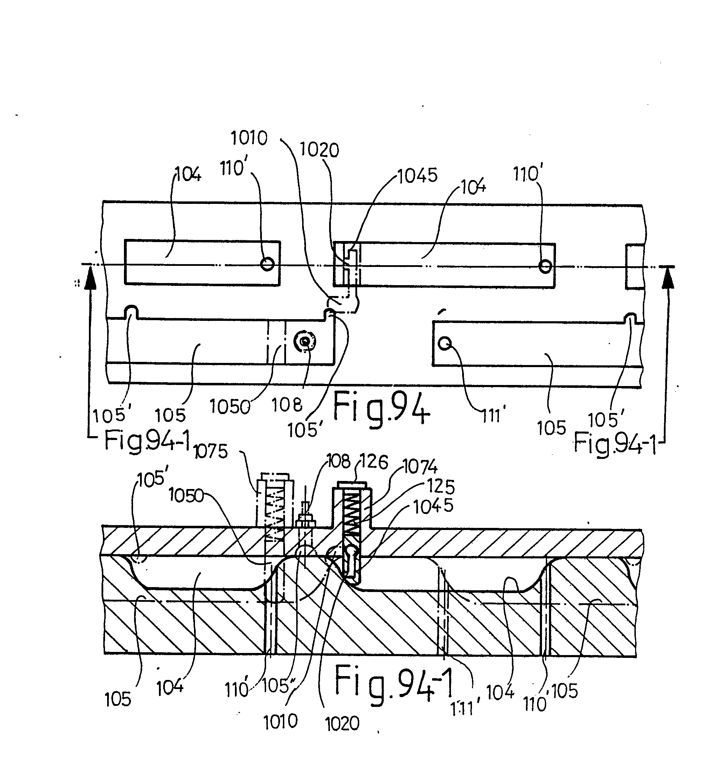

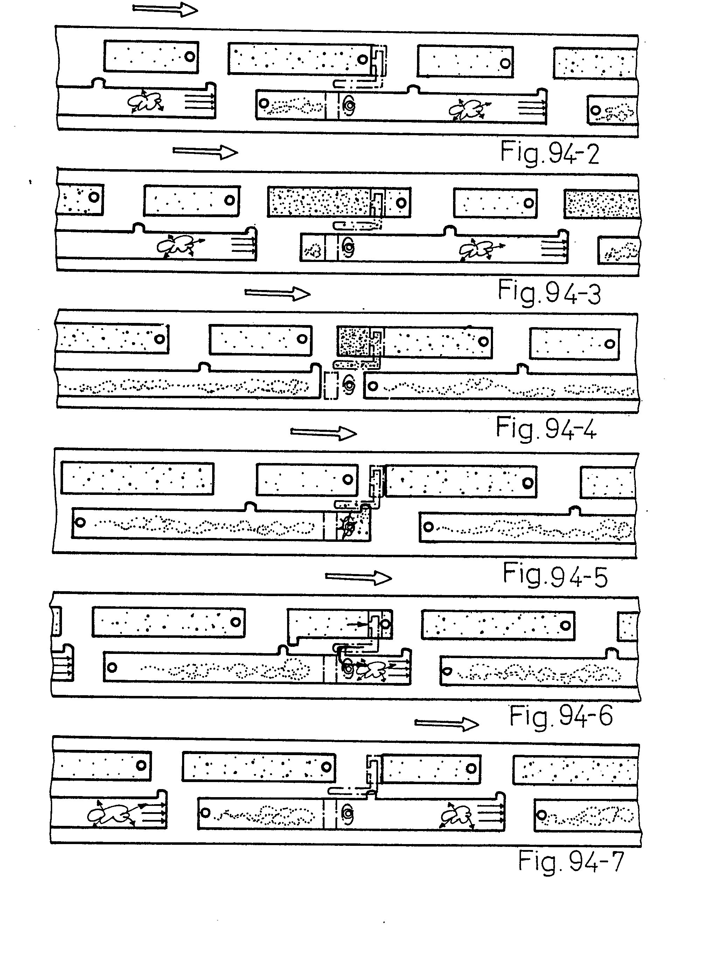

Fig. 94 to 94-1 are the graphic views of twice help combustion embodiment wherein active body is motion body, gate plate set possesses guide hole, multi-set series gas chamber Cx is in parallel with single-set gas chamber Cy in the same body.

Figs. 94-2 to 94-7 are the working procedure diagrams of twice help combustion wherein active body is motion body, gate plate set possesses guide hole, multi-set series gas chamber Cx is in parallel single-set gas chamber Cy in the same body.

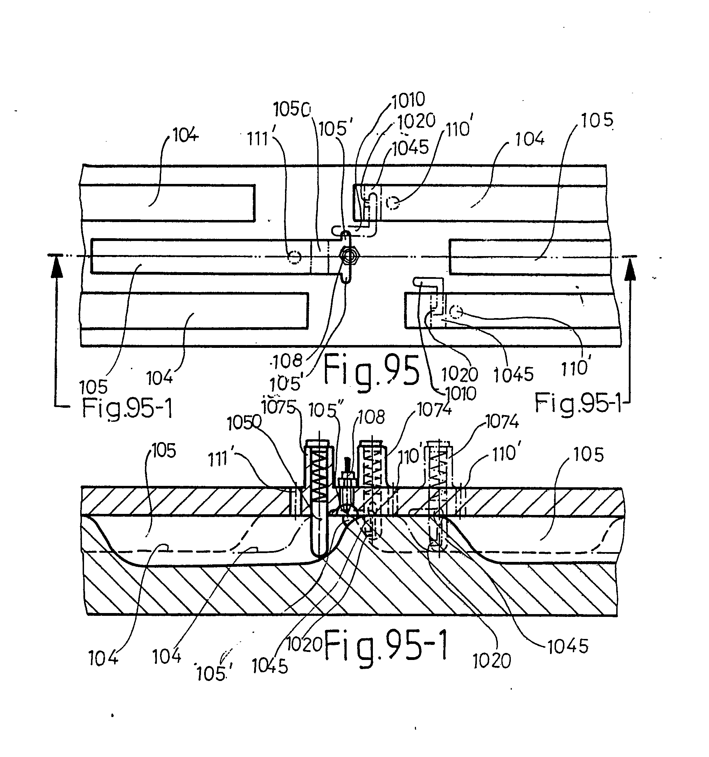

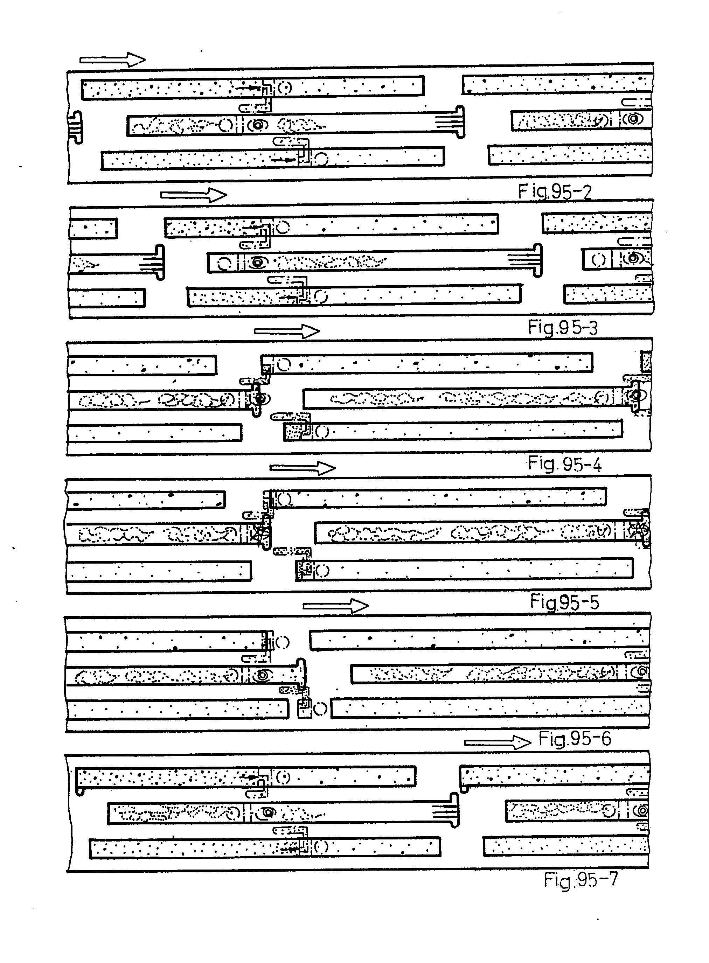

Figs. 95 to 95-1 are the graphic views of twice help combustion embodiment wherein active body is the fixed body, gate plate set possesses guide hole, multi-row gas chamber Cx is in parallel with single-set gas chamber Cy in the same body.

Figs. 95-2 to 95-7 are the working procedure diagrams of twice help combustion embodiment wherein active body is the fixed body, gate plate set possesses guide hole, multi-row gas chamber Cx is in parallel with single-set gas chamber Cy in the same body.

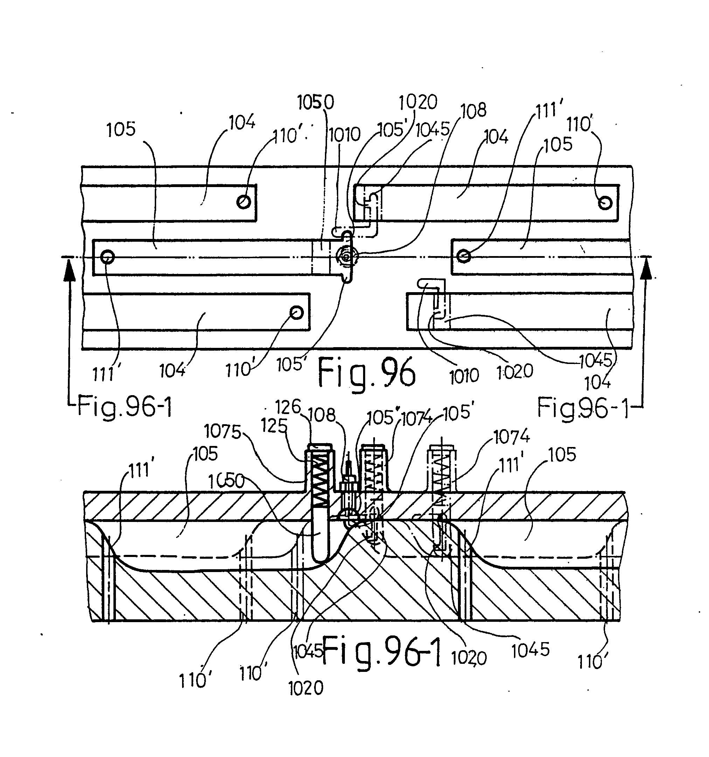

Figs. 96 to 96-1 are the graphic views of twice help combustion embodiment wherein active body is motion body, gate plate set possesses guide hole, multi-row gas chamber Cx is in parallel with single-set gas chamber Cy in the same body.

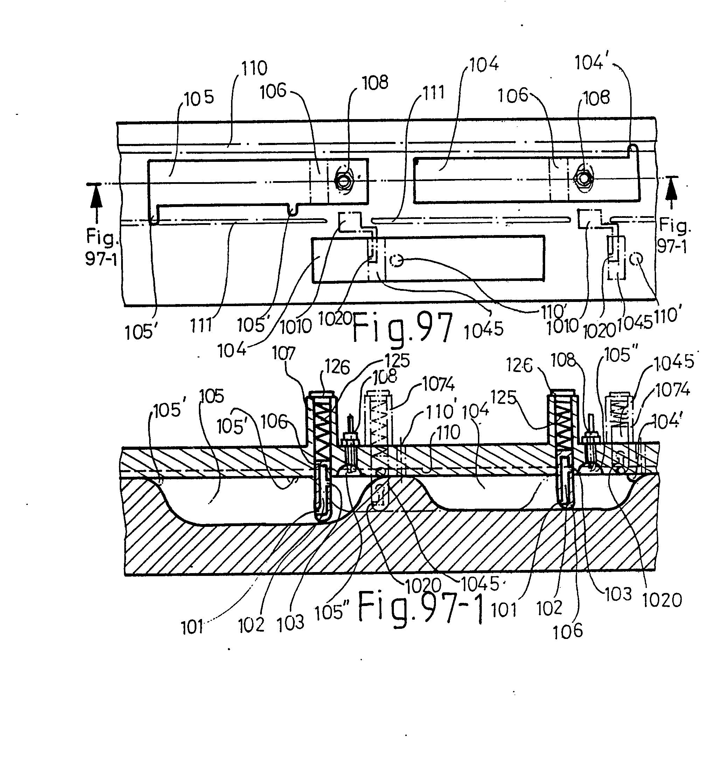

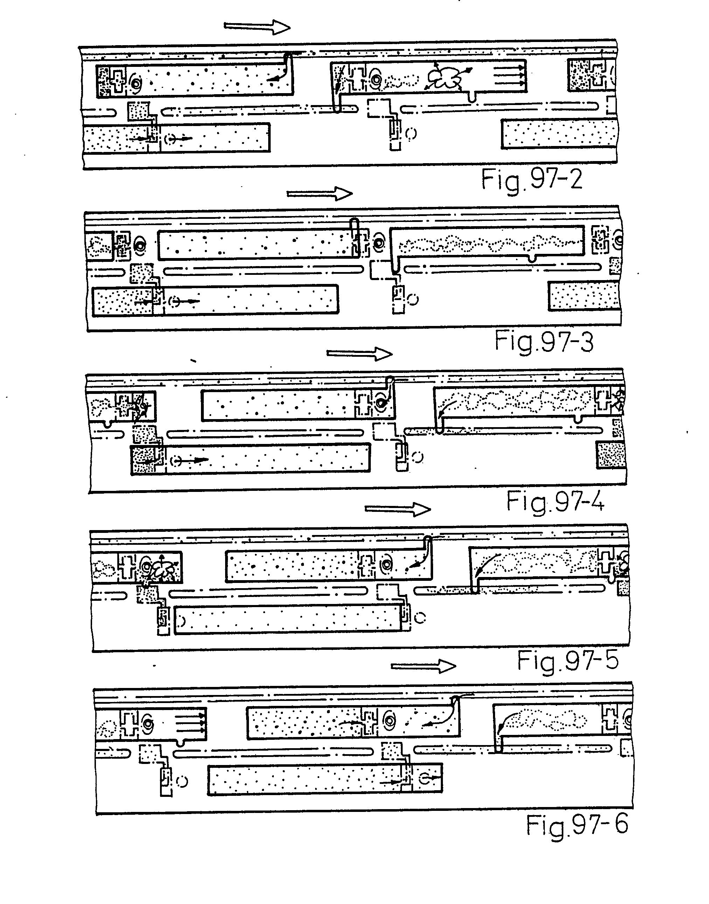

Figs. 97 to 97-1 are the graphic views of twice help combustion embodiment wherein active body is the fixed body, gate plate set possesses guide hole, gas chambers Cx, Cy are in series and parallel in the same body.

Figs. 97-2 to 97-6 are the working procedure diagrams of twice help combustion embodiment wherein active body is the fixed body, gate plate set possesses guide hole, gas chambers Cx, Cy are in series and parallel in the same body.

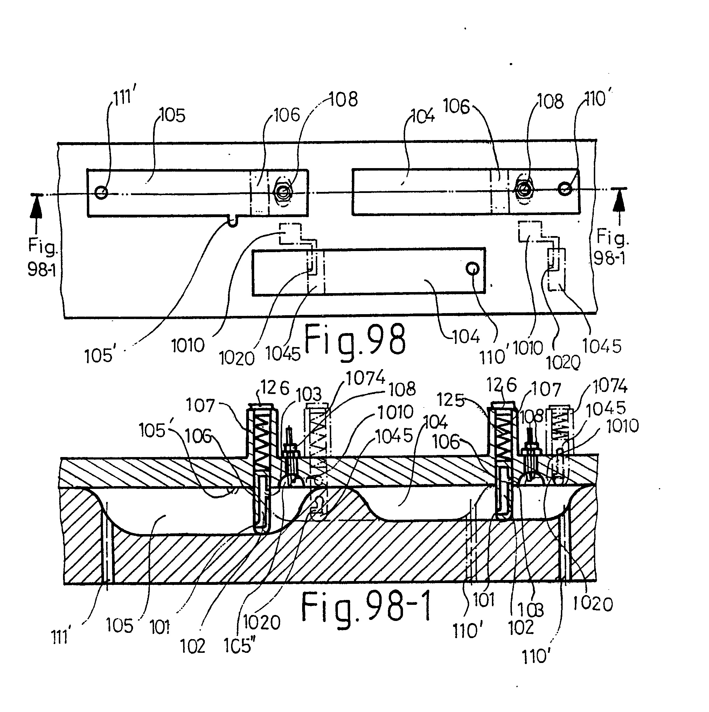

Figs. 98 to 98-1 are the graphic views of twice help combustion embodiment wherein active body is motion body, gate plate set possesses guide hole, gas chambers Cx, Cy are in series and parallel in the same body.

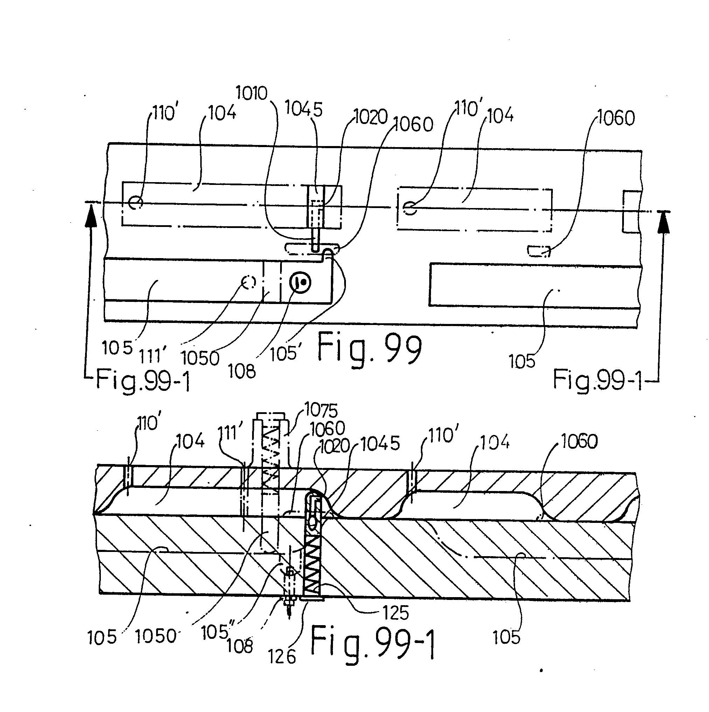

Figs. 99 to 99-1 are the graphic views of twice help combustion embodiment wherein active body is the fixed body, gate plate set possesses guide hole, multi-set series gas chamber set Cx, single-set gate plate set Gx are in parallel with gas chamber Cy in different body.

15

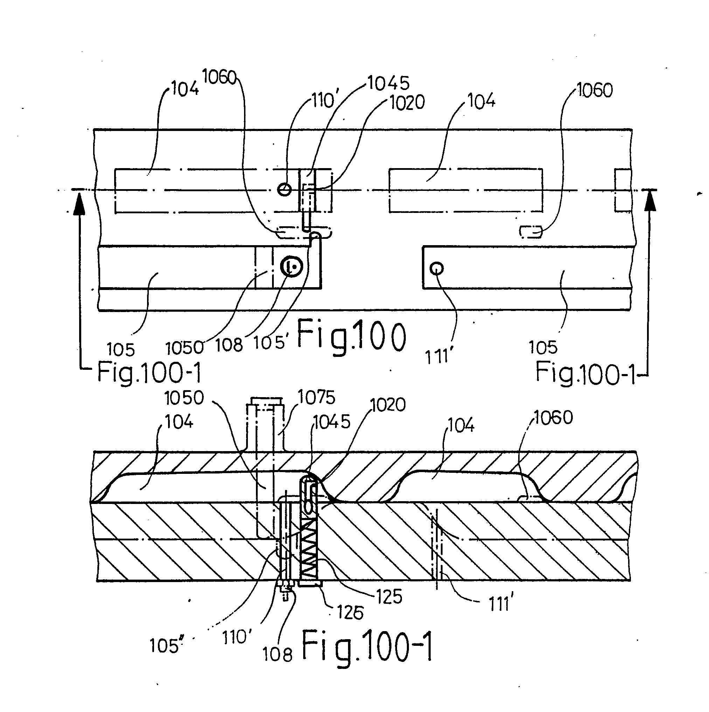

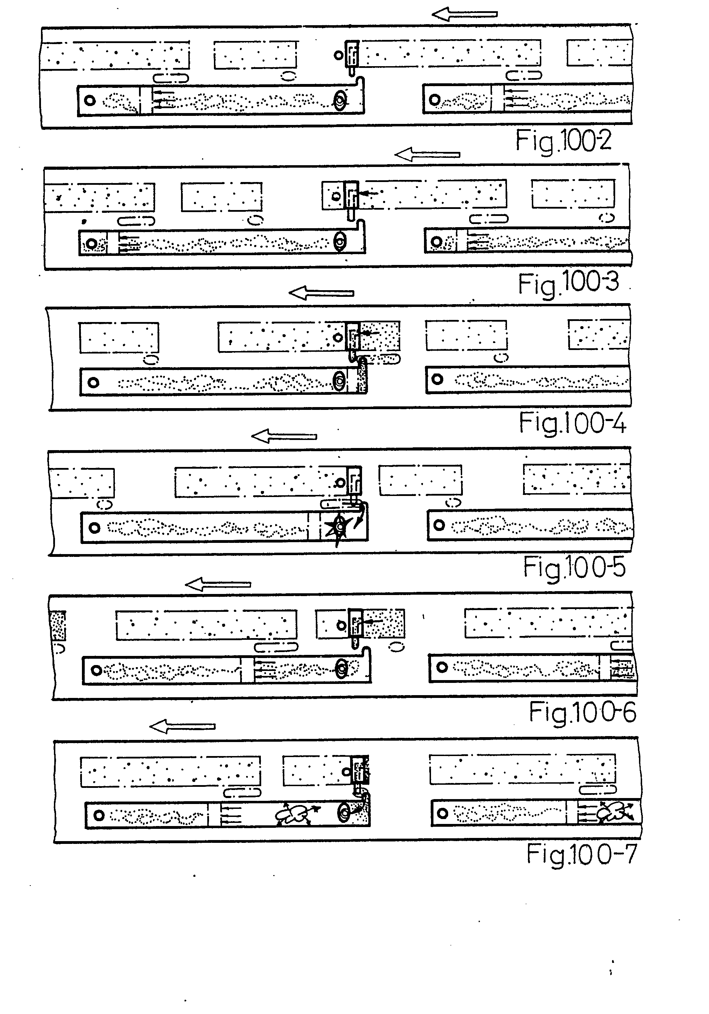

Figs. 100 to 100-1 are the graphic views of twice help combustion embodiment A wherein active body is motion body, gate plate set possesses guide hole, multi-set series gas chamber set Cx, single-set gate plate set Gx are in parallel with gas chamber Cy in different body.

Figs. 100-2 to 100-7 are the working procedure diagram of twice help combustion embodiment A wherein active body is motion body, gate plate set possesses guide hole, multi-set series gas chamber set Cx, single-set gate plate set Gx are in parallel with gas chamber Cy in different body.

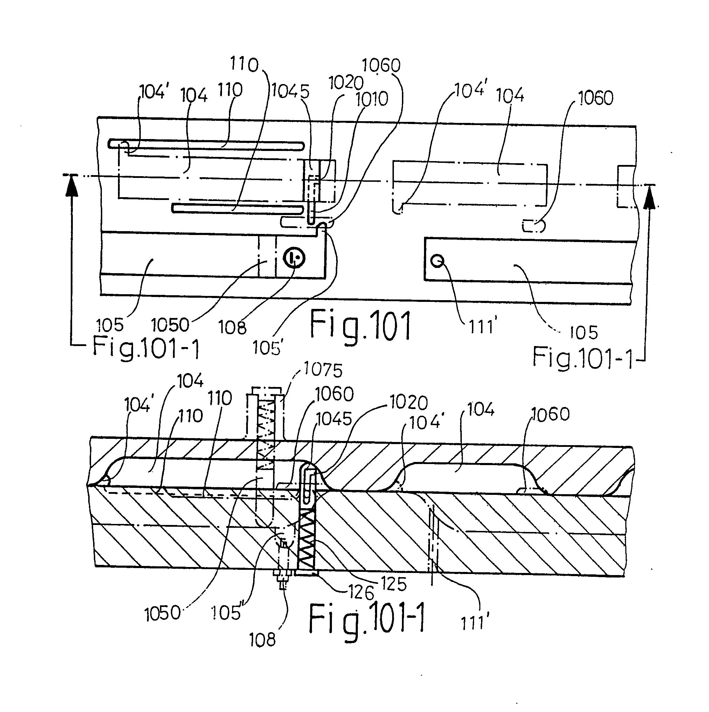

Figs. 101 to 101-1 are the graphic views of twice help combustion embodiment B wherein active body is motion body, gate plate set possesses guide hole, multi-set series gas chamber set Cx, single-set gate plate set Gx are in parallel with gas chamber Cy in different body.

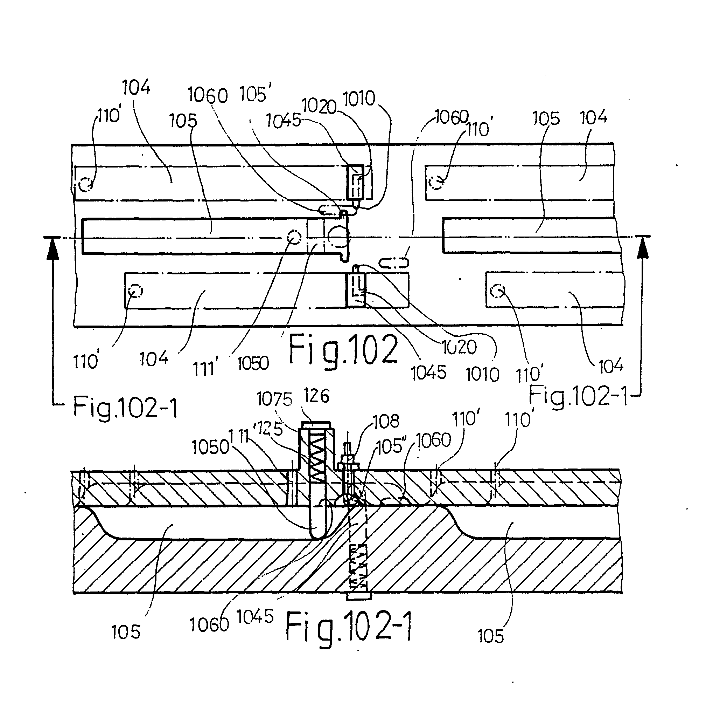

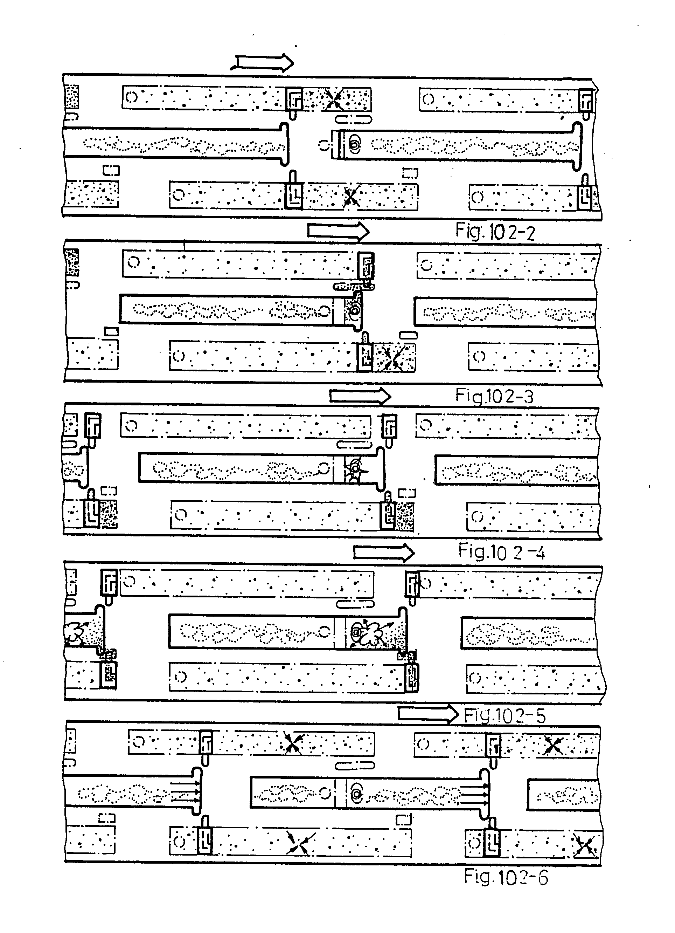

Figs. 102 to 102-1 are the graphic views of twice help combustion embodiment wherein active body is the fixed body, gate plate set possesses guide hole, multi-row parallel gas chamber Cx is in parallel with gas chamber Cy in different body.

Figs. 102-2 to 102-6 are the working procedure diagrams of twice help combustion wherein active body is the fixed body, gate plate set possesses guide hole, multi-row parallel gas chamber Cx is in parallel with gas chamber Cy in different body.

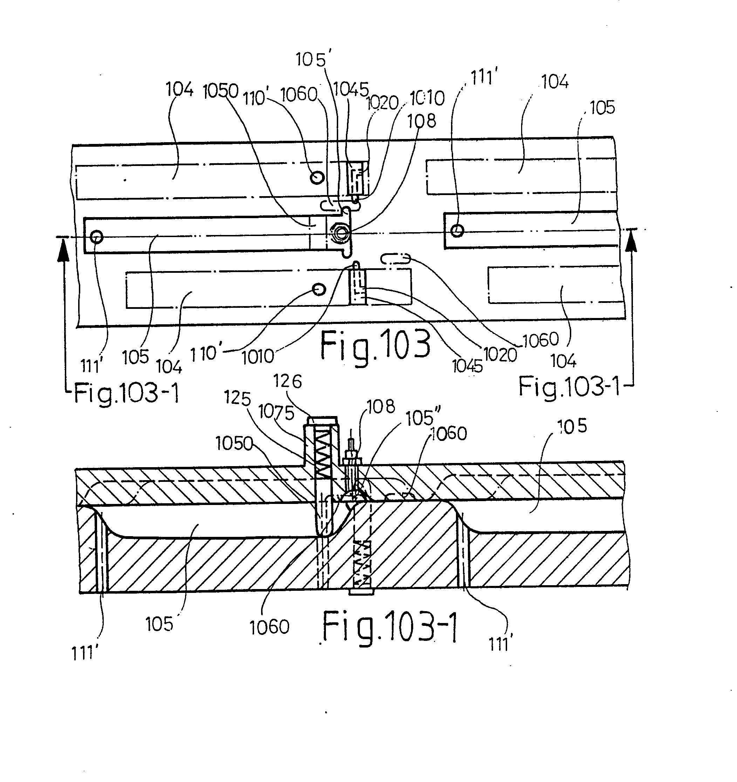

Fig. 103 to 103-1 are the graphic views of twice help combustion embodiment wherein active body is motion body, gate plate set possesses guide hole, multi-row parallel gas chamber Cx is in parallel gas chamber Cy in different body.

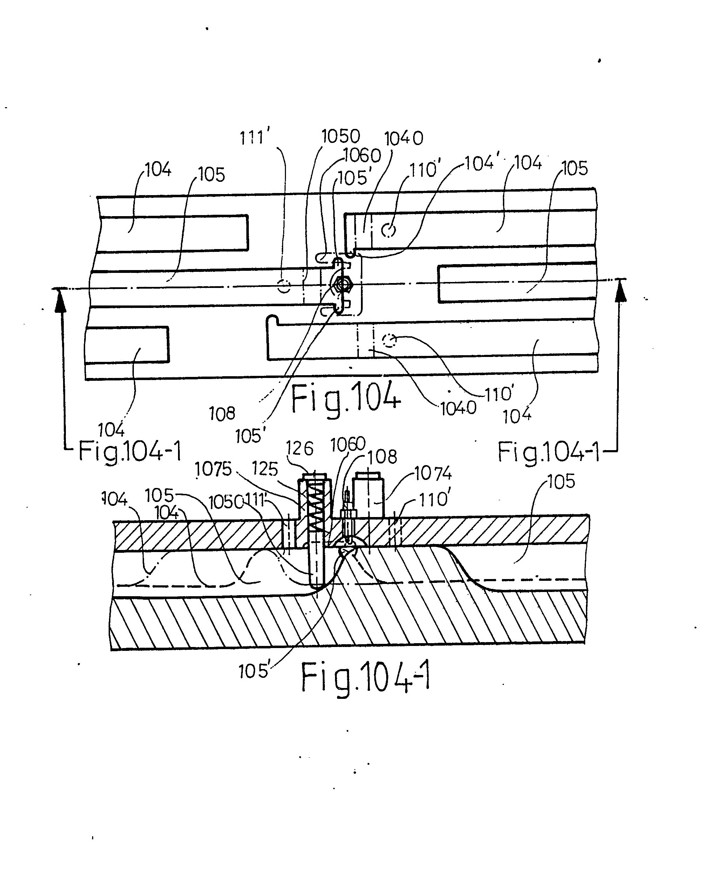

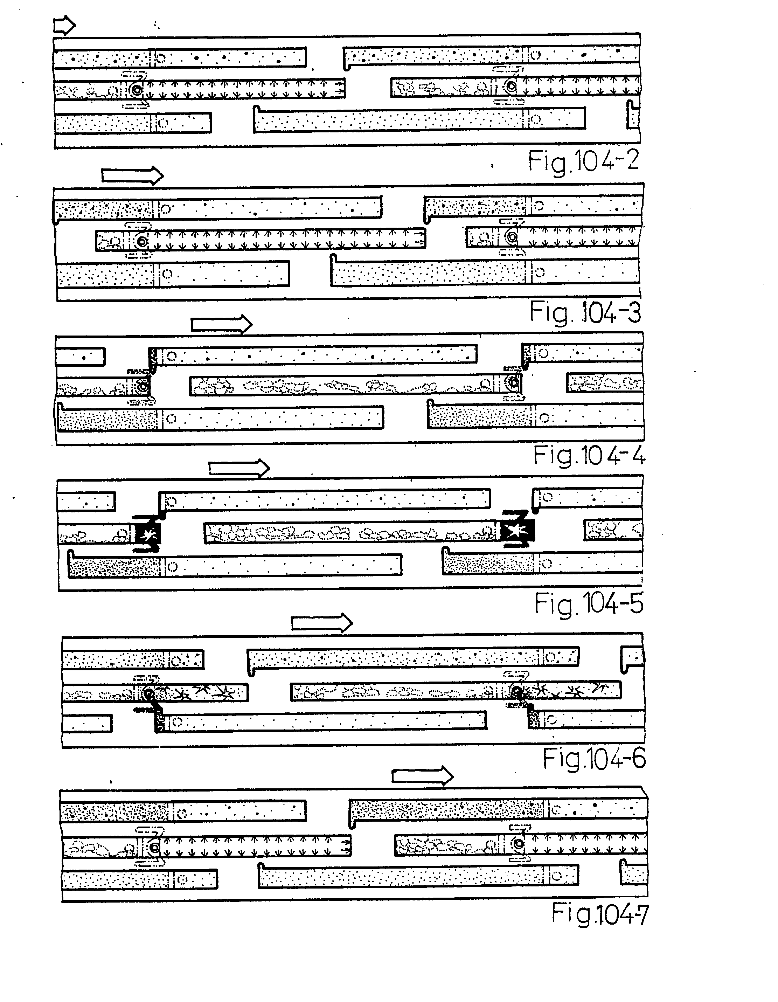

Figs. 104 to 104-1 are the graphic view of embodiment og compound fuel ignition and combustion structure.

Figs. 104-2 to 104-7 are the working diagrams of embodiment of compound fuel ignition and combustion structure.

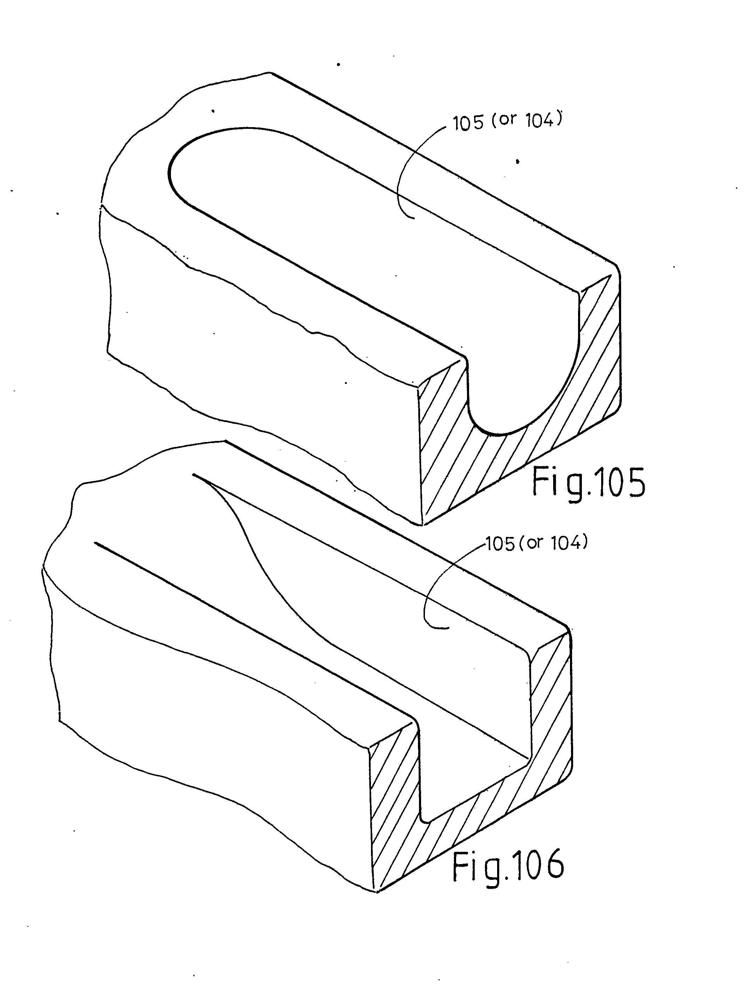

Fig. 105 is a graphic view of the embodiment wherein cross section of gas chambers Cx, Cy along direction of trace is rectangular shape.

Fig. 106 is a graphic view of the embodiment wherein cross section of gas chambers Cx, Cy along direction of is arc shape.

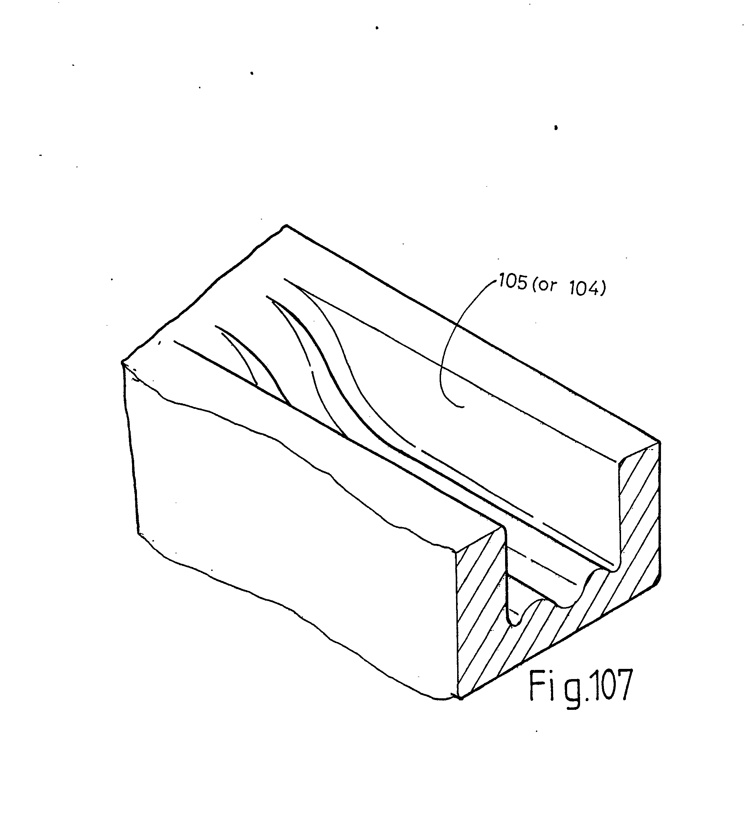

Fig. 107 is a graphic view of the embodiment wherein cross section of gas chambers Cx, Cy along direction of trace is labyrinth shape.

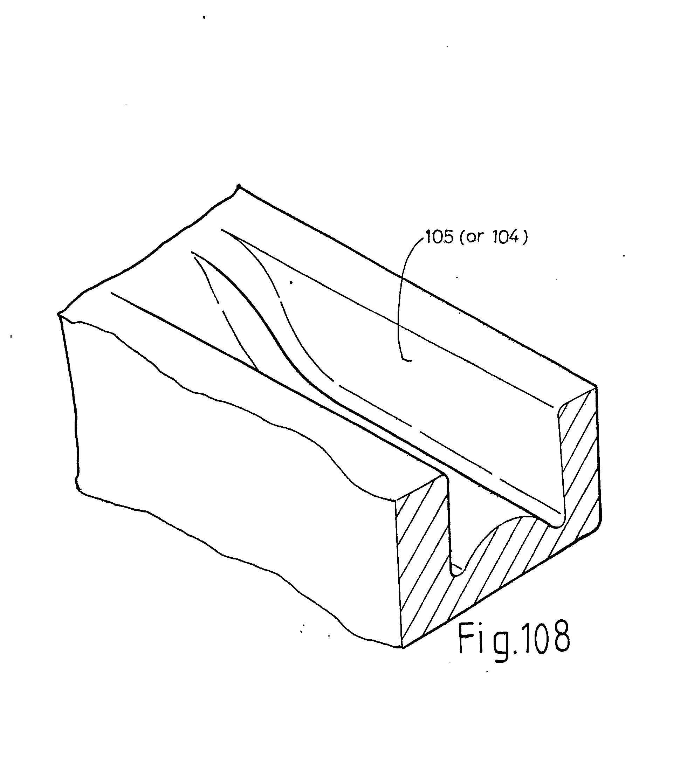

Fig. 108 is a graphic view of the embodiment wherein cross section of gas chambers Cx, Cy along direction of trace is concave arc shape.

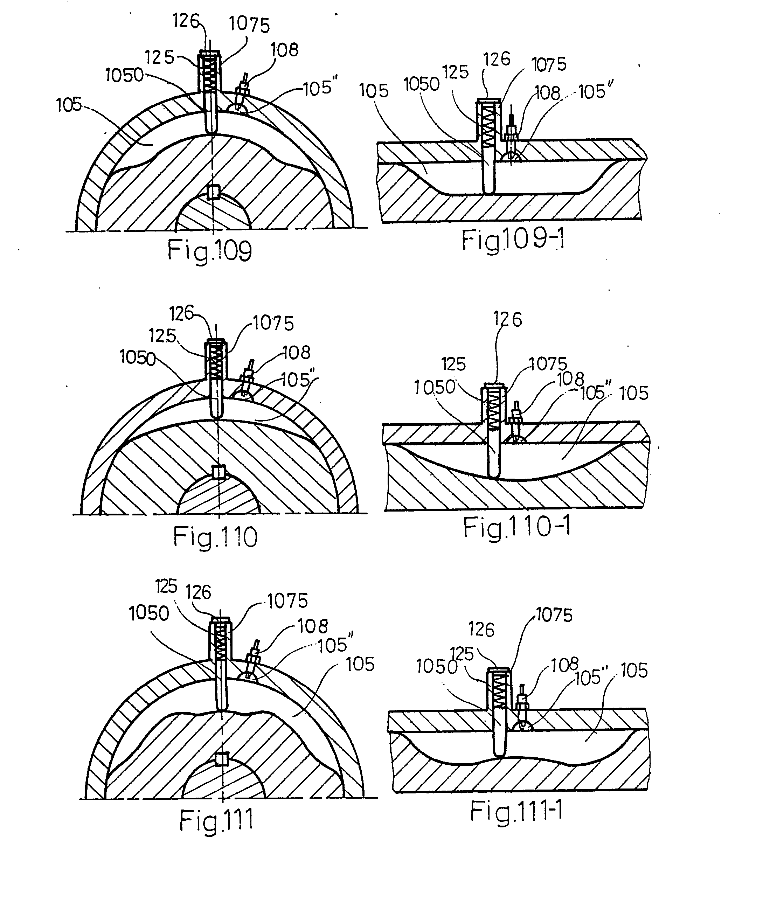

Figs. 109 to 109-1 are the graphic views of the embodiment of cross section of gas chambers Cx, Cy along direction of trace wherein two ends are the gradually deep and gradually shallow arc shape, the middle part is a unchanged section.

Figs. 110 to 110-1 are the graphic views of the embodiment wherein cross section of gas chambers Cx, Cy along direction of trace is a gradually deep and gradually shallow arc shape with same difference.

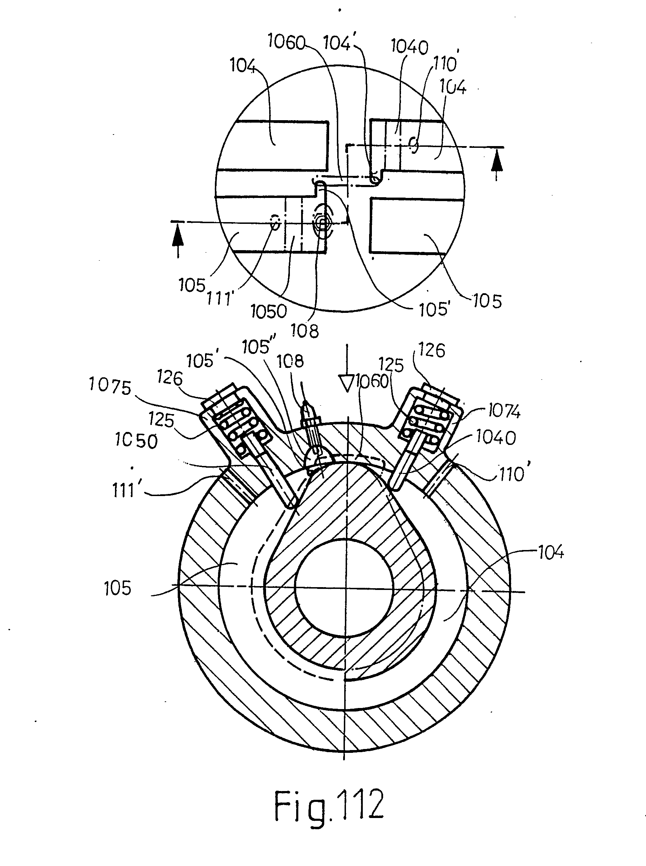

Figs. 111 to 111-1 are the graphic views of the embodiment wherein cross section of gas chambers Cx, Cy along direction of trace is wave shape.

Fig. 112 is a graphic view of the embodiment of single-set gas chambers Cx and Cy which are in parallel.

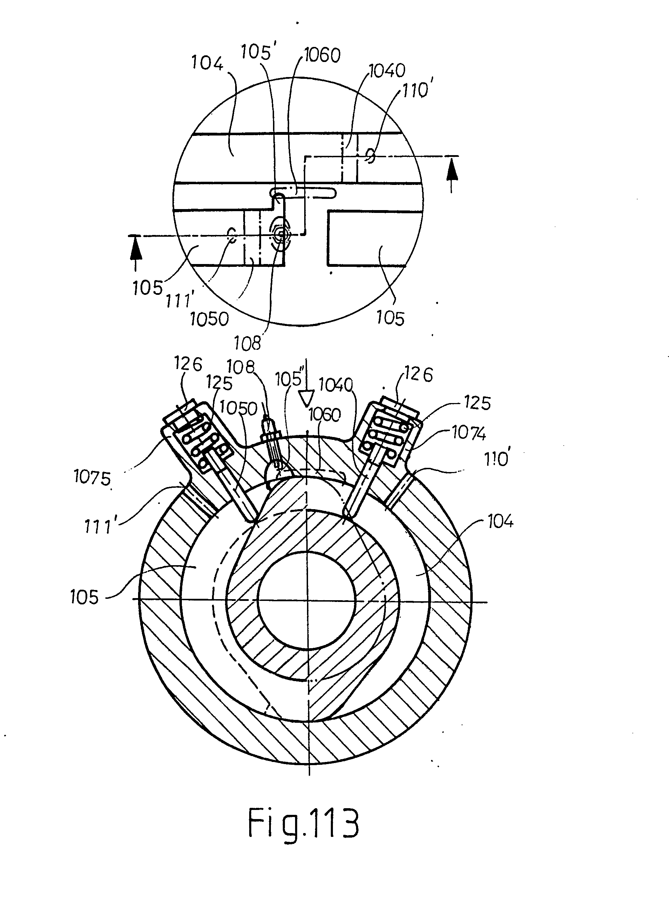

Fig. 113 is a graphic view of the embodiment of single-set gas chambers Cx and Cy which are in parallel with phase difference.

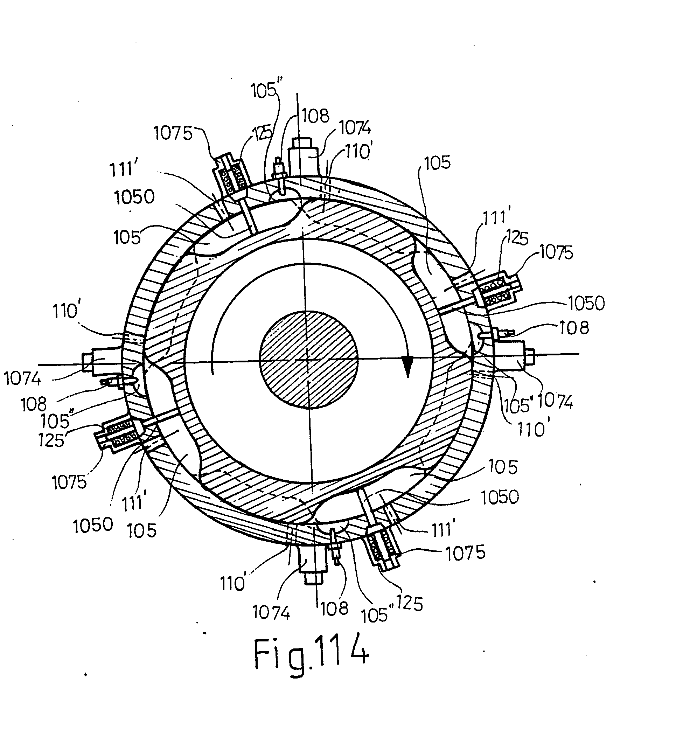

Fig. 114 is a graphic view of the embodiment of multi-set gas chambers Cx, Cy which are in parallel.

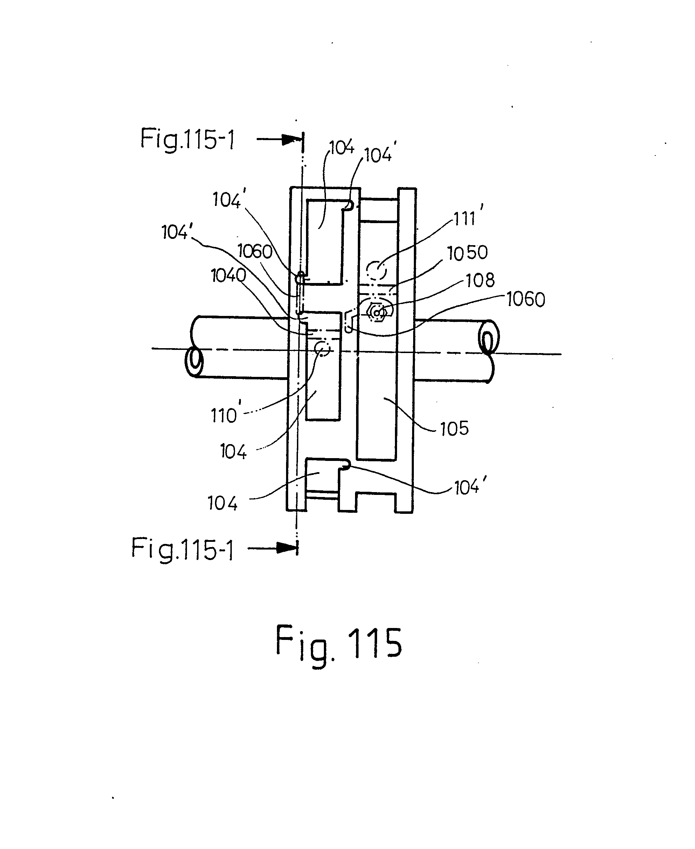

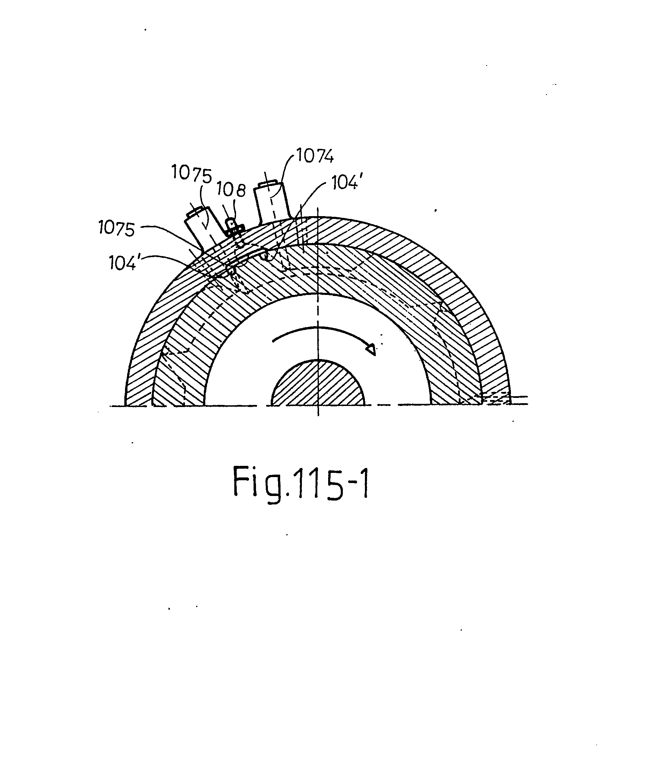

Figs. 115 to 115-1 are the graphic view of the embodiment of multi-section gas chamber Cx and single-set gas chamber Cy which are in parallel.

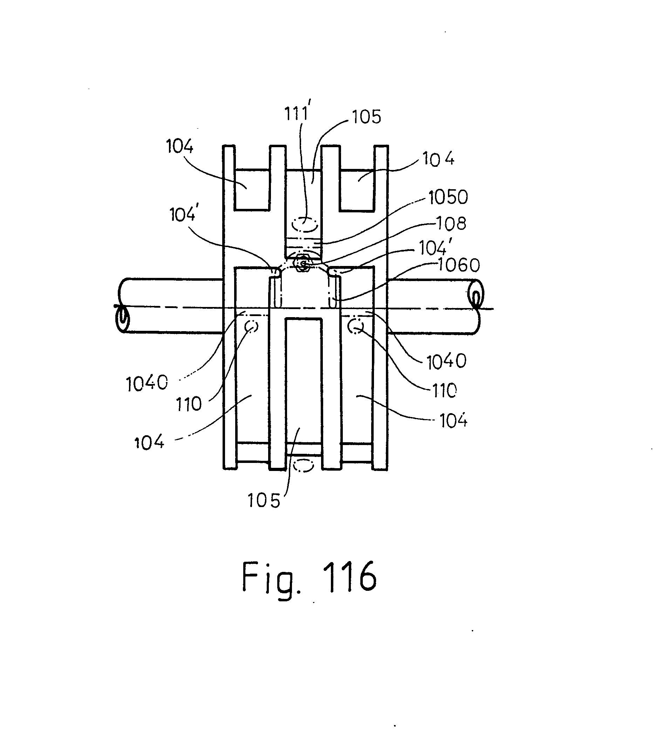

Fig. 116 is a graphic view of the embodiment of multi-row gas chamber Cx and single-set gas chamber Cy which are in parallel.

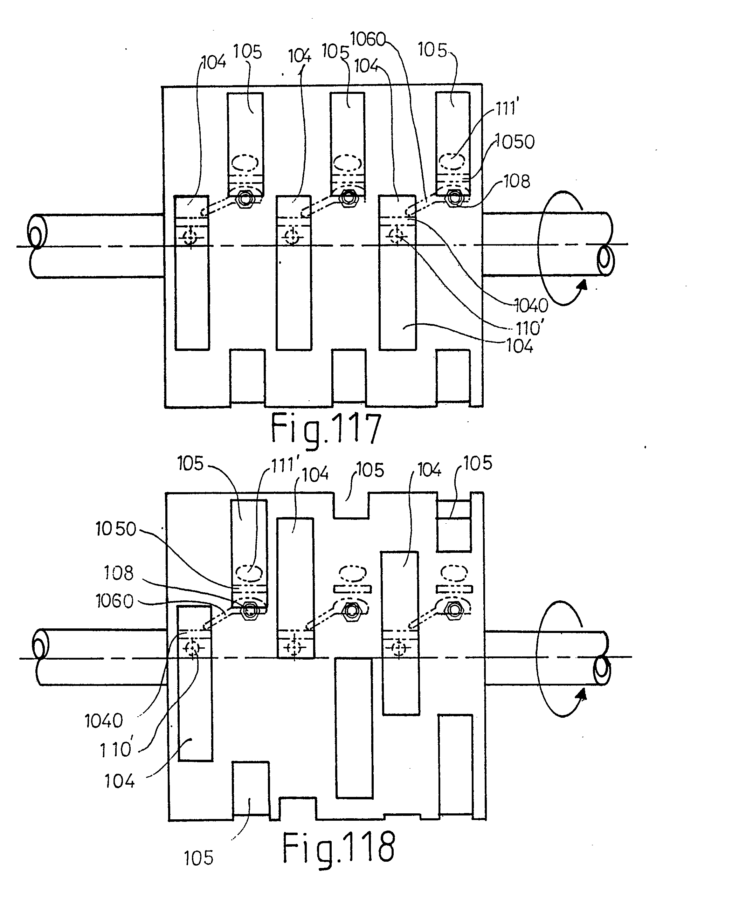

Fig. 117 is a graphic view of the embodiment of multi-row gas chambers Cx, Cy which are arranged in same phade.

Fig. 118 is a graphic view of the embodiment of multi-row gas chambers Cx, Cy which are arranged in different phase.

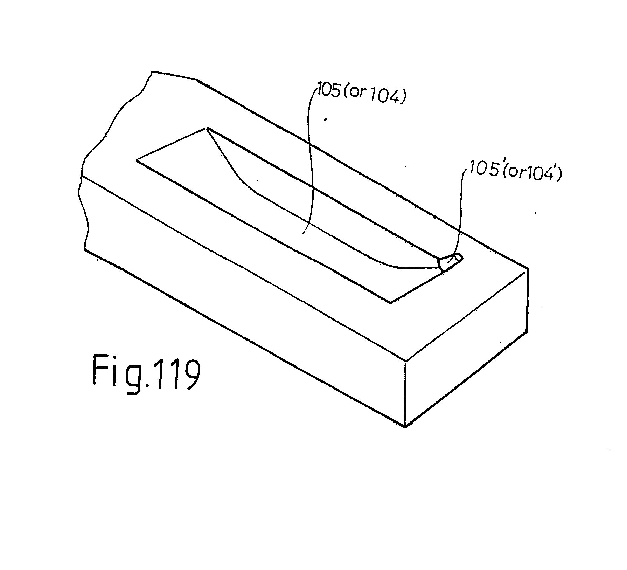

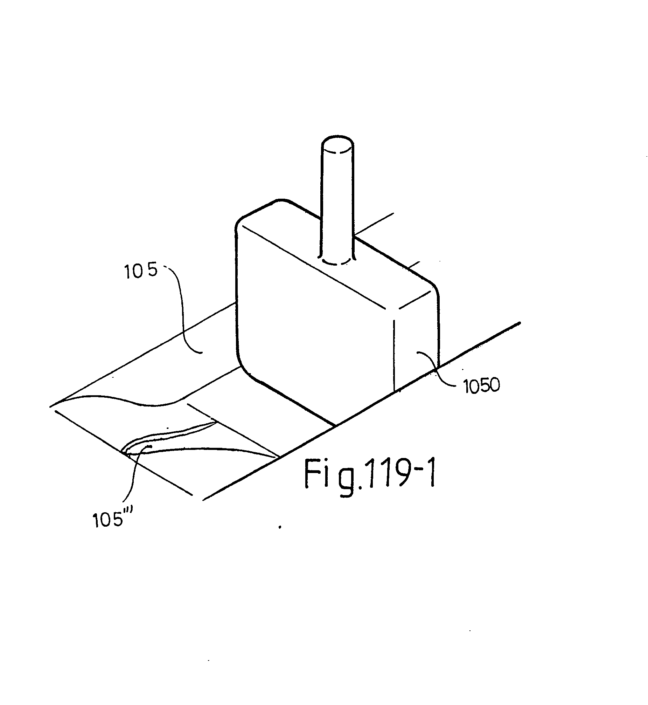

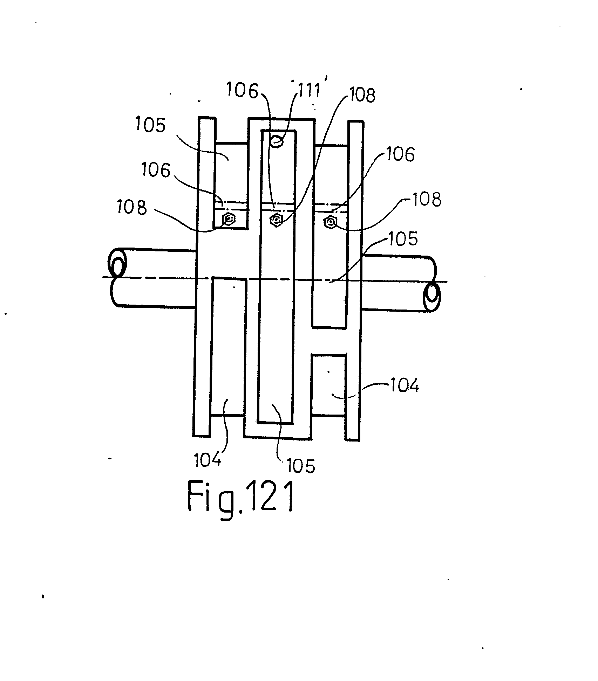

Fig. 119 is a graphic view of the embodiment of gas chamber set with guide transverse groove.

Fig. 119-1 is a graphic view of the embodiment of gas chamber set wherein its leading end possesses longitudinal guide groove.

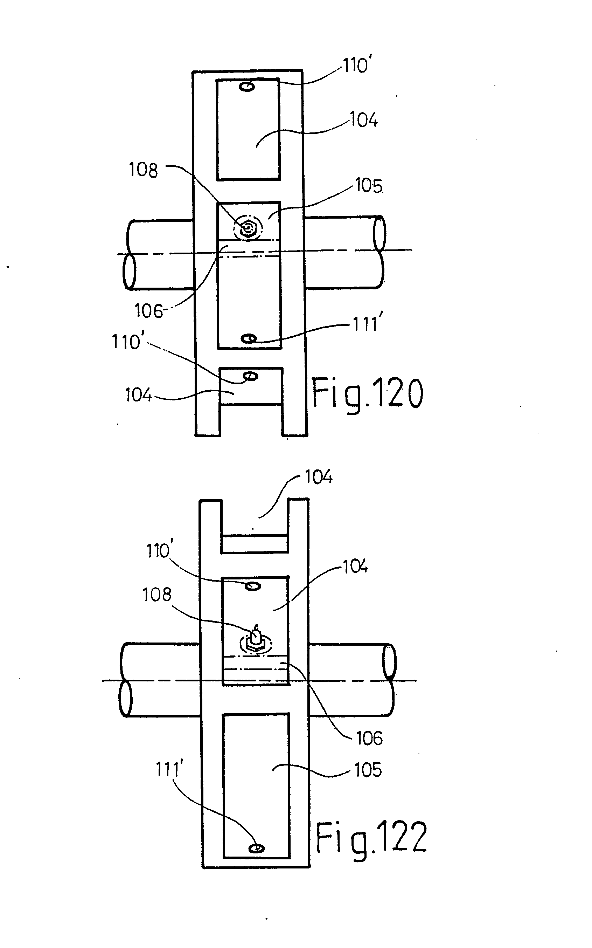

Fig. 120 is a graphic view of the embodiment of multi-set gas chambers Cx, Cy which criss cross in sequence and seriers.

Fig. 121 is a graphic view of the embodiment of multi-row series gas chamber set.

Fig. 122 is a graphic view of the embodiment of multi-section gas chamber Cx and single-set gas chamber Cy which are in series.

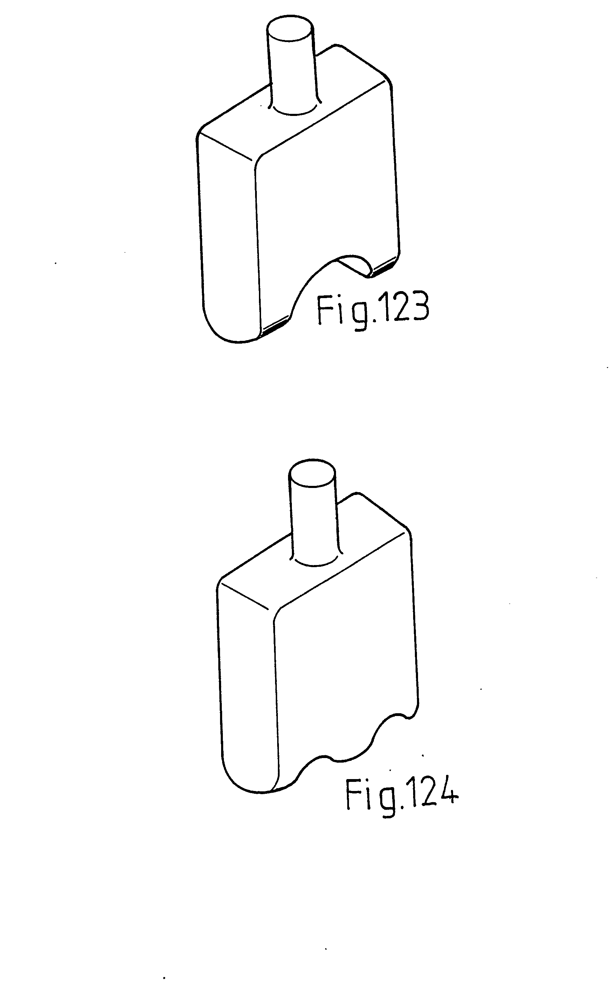

Fig. 123 is a graphic view of embodiment A of single-plate type gate plate set.

Fig. 124 is a graphic view of the embodiment B of single-plate type gate plate set.

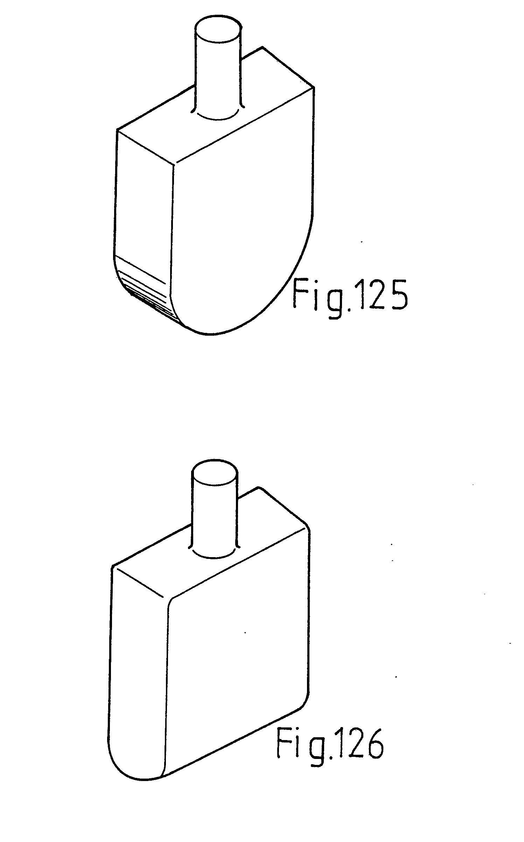

Fig. 125 is a graphic view of embodiment C of single-plate type gate plate set.

Fig. 126 is a graphic view of embodiment D of single-plate type gate plate set.

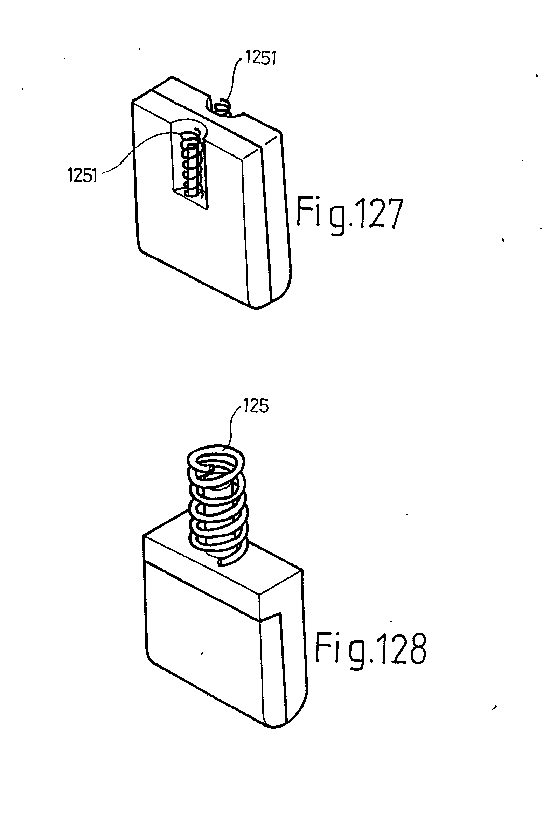

Fig. 127 is a graphic view of embodiment A of combination type gate plate set.

Fig. 128 is a graphic view of embodiment B of combination type gate plate set.

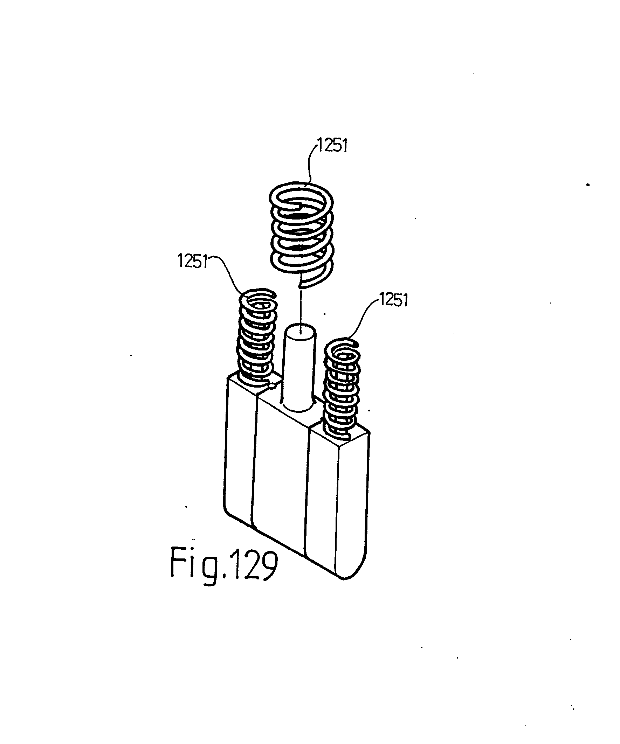

Fig. 129 is a graphic view of embodiment C of combination type gate plate set.

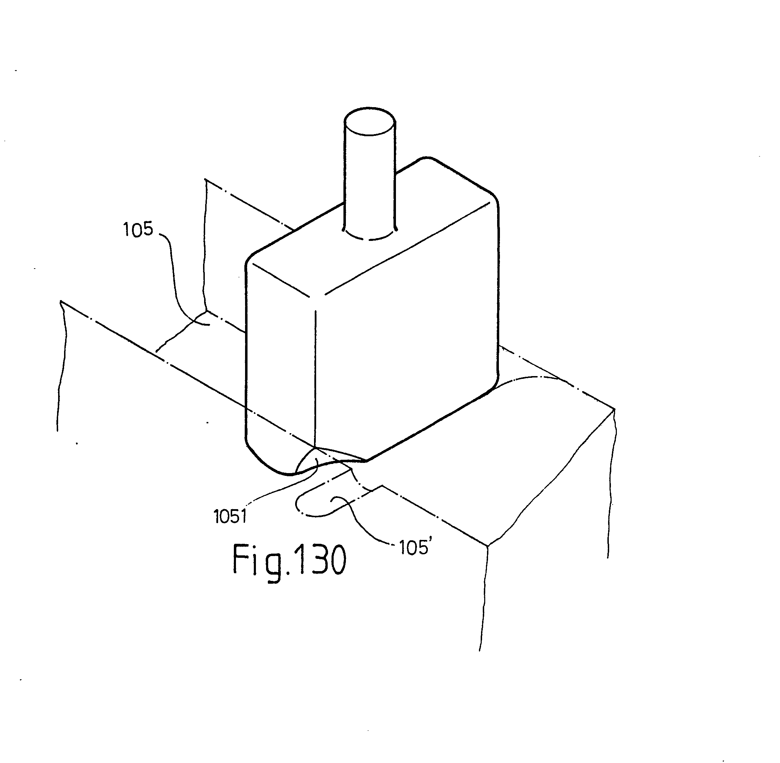

Fig. 130 is a graphic view of the embodiment of gate plate wherein its bottom end possesses inclined cracked angle.

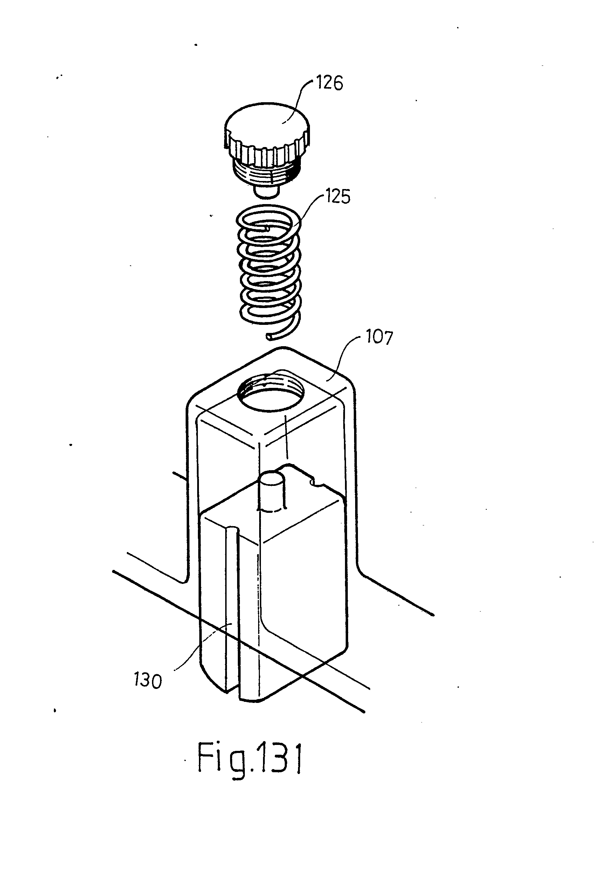

Fig. 131 is a graphic view of the embodiment of single-plate type gate plate set which possesses lubricant groove.

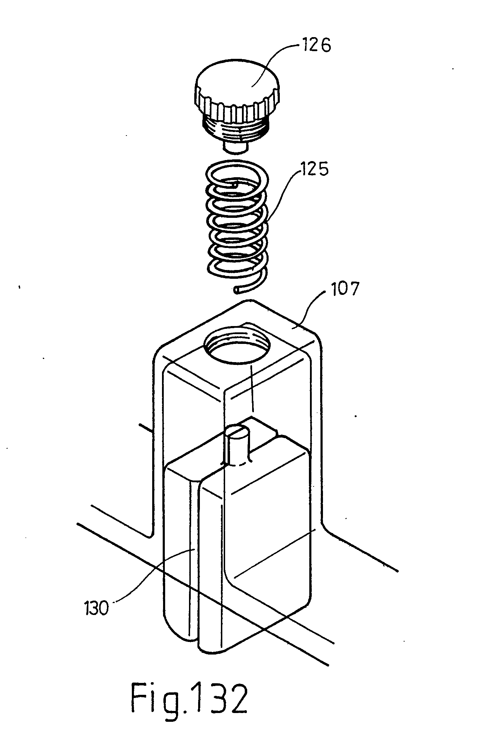

Fig. 132 is a graphic view of the embodiment of combination type gate plate set which possesses lubricant groove.

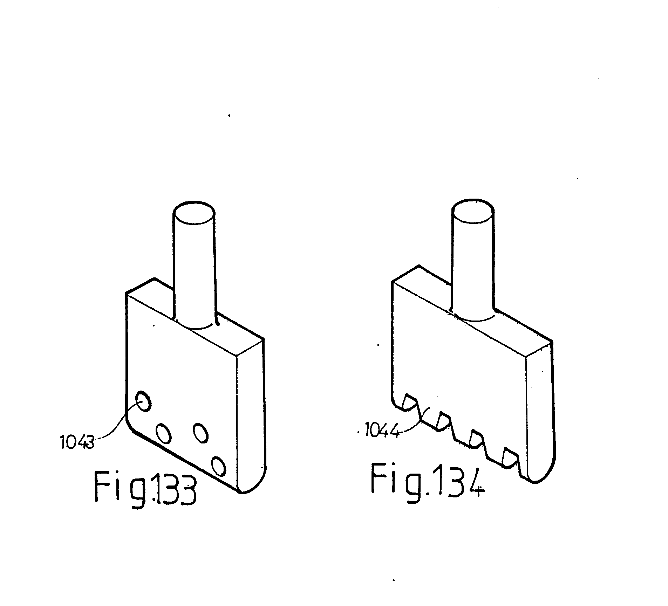

Fig. 133 is a graphic view of the embodiment of turbulent flow gate which possesses turbulent flow hole.

Fig. 134 is a graphic view of the embodiment of turbulent flow gate which possesses turbulent flow barrier.

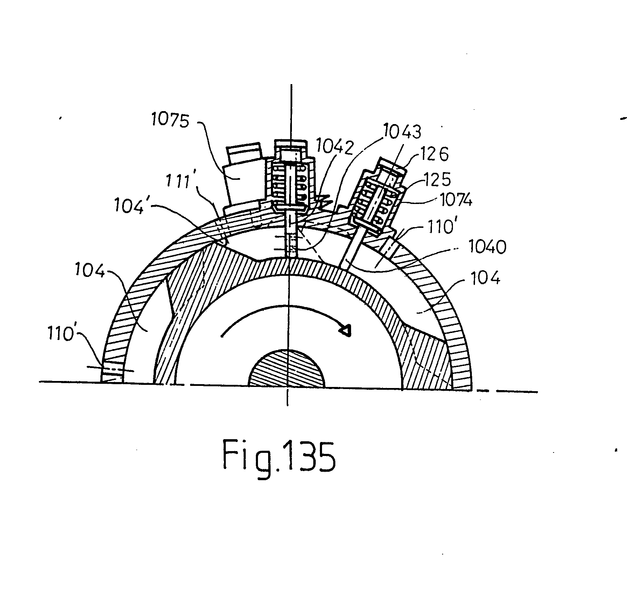

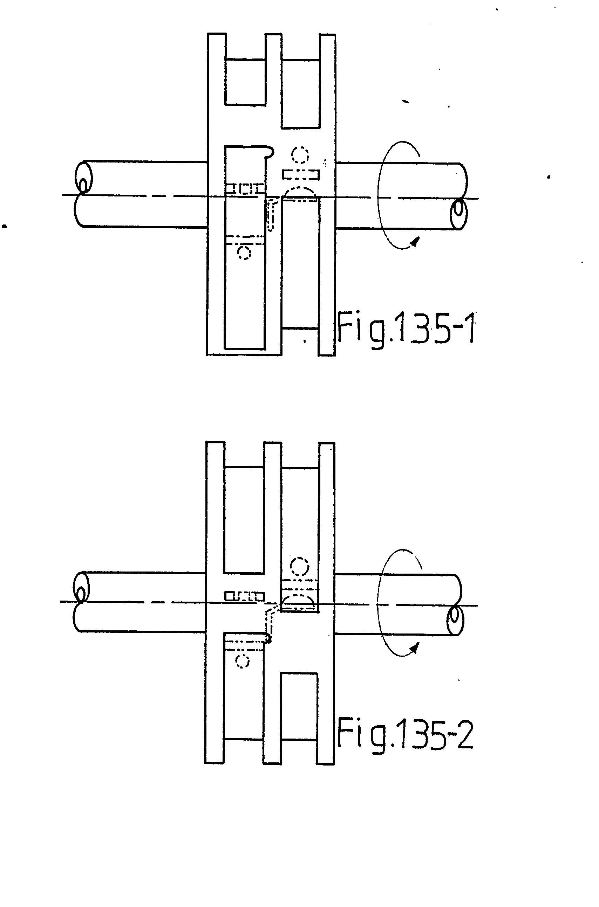

Fig. 135 is a graphic view of the embodiment of intake compressive gate plate Gx wherein its leading end possesses turbulent flow gate.

Figs. 135-1 to 135-2 are the working procedure diagrams of the embodiment of intake compressive gate plate Gx wherein its leading end possesses turbulent flow gate.

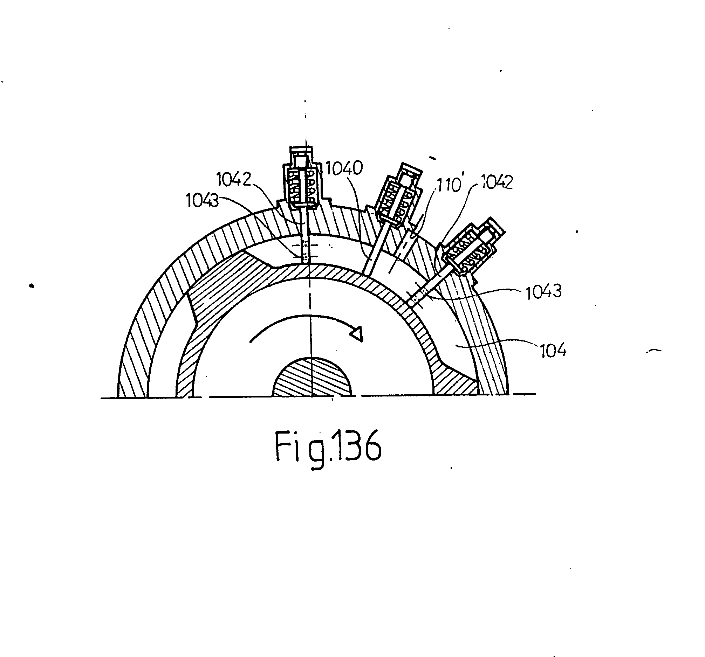

Fig. 136 is a graphic view of the embodiment of intake compressive gate plate Gx wherein its leading end and lagging end possess turbulent flow gate.

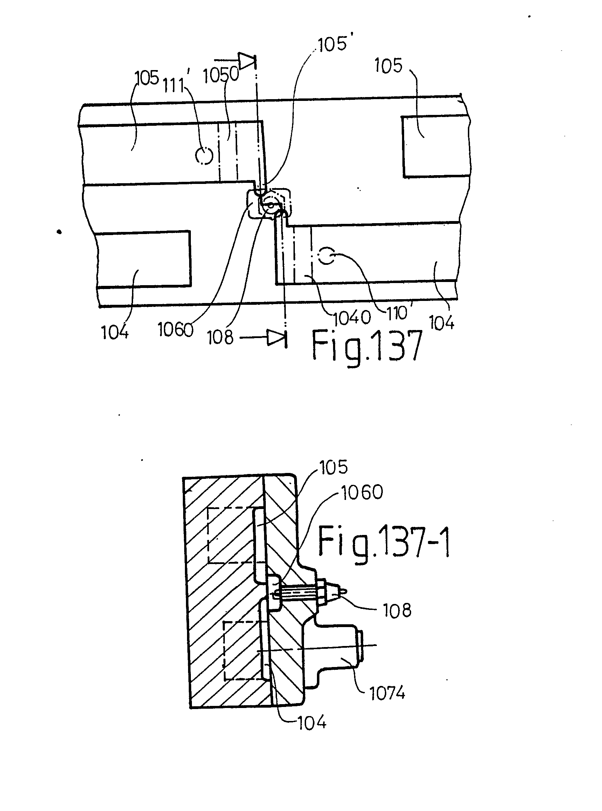

Figs. 137 to 137-1 are the graphic views of the embodiment of plug or fuel nozzle which is placed at the main chamber of exchange gas chamber coupled with gas chamber Cy.

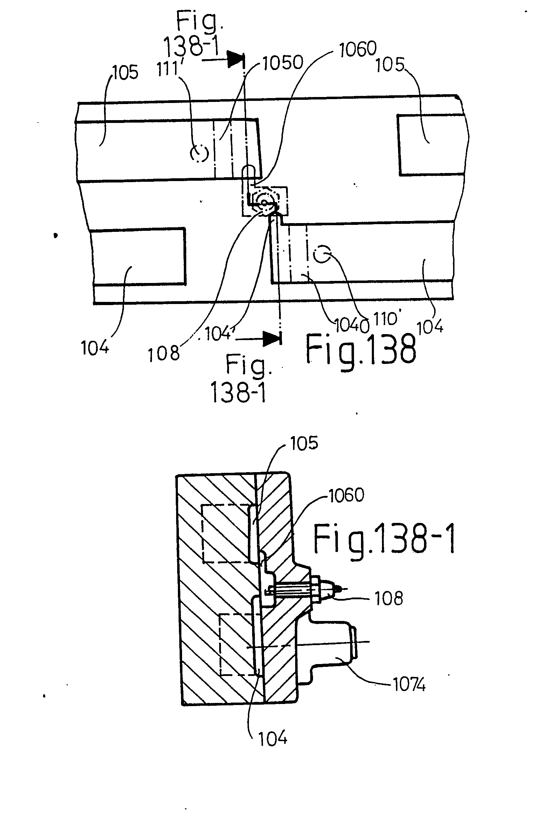

Figs. 138 to 138-1 are the graphic views of the embodiment of plug or fuel nozzle which is placed on the gas guide passage 1010 of active body.

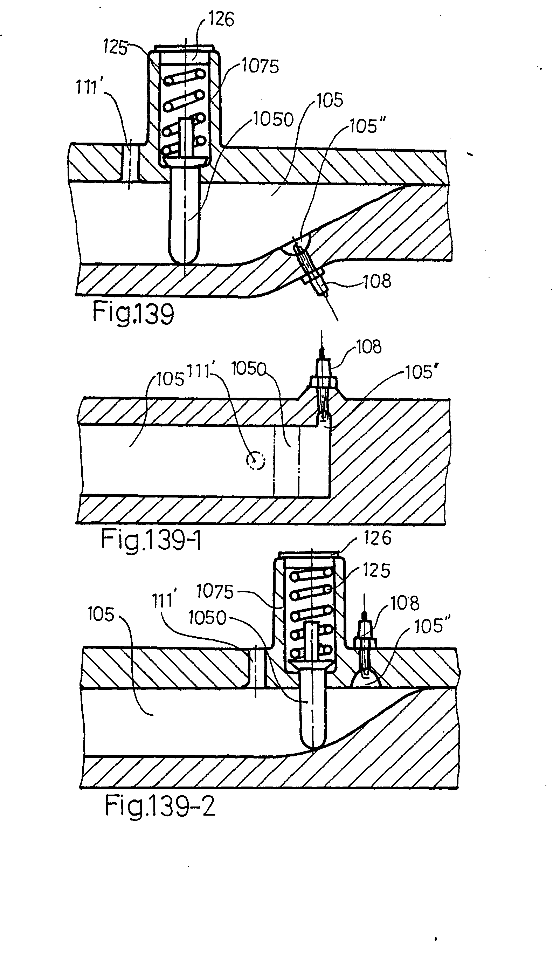

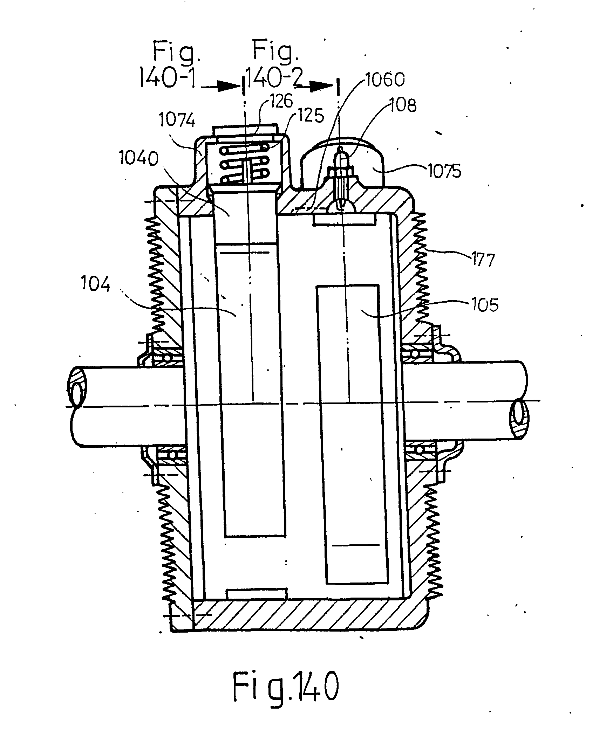

Fig. 139 is a graphic view of embodiment of plug or fuel nozzle placed in the concave chamber which is at the leading end of gas chamber Cy of passive body and can avoid to be interferred by explosive exhaust gate plate.

Fig. 139-1 is a graphic view of embodiment of plug or fuel nozzle placed in guide transverse groove which is at the leading end of gas chamber Cy of passive body and can avoid to be interferred by explosive exhaust gate plate.

Fig. 139-2 is a graphic view of embodiment of plug or fuel nozzle placed in the concave chamber of active body which couples the trace of gas chamber Cy, and can avoid to be interferred by gas chamber Cy.

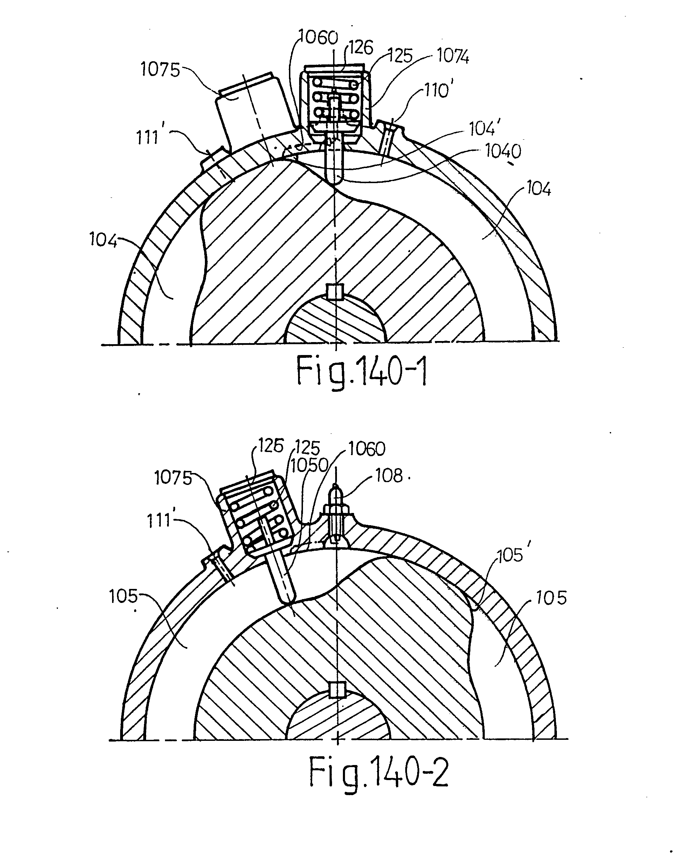

Figs. 140 to 140-2 are the graphic views of embodiment of cylindrical type internal rotor engine.

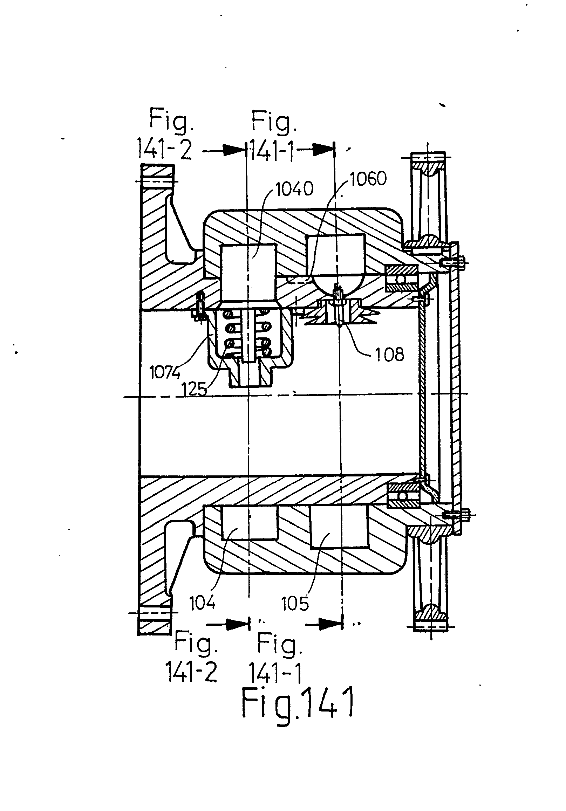

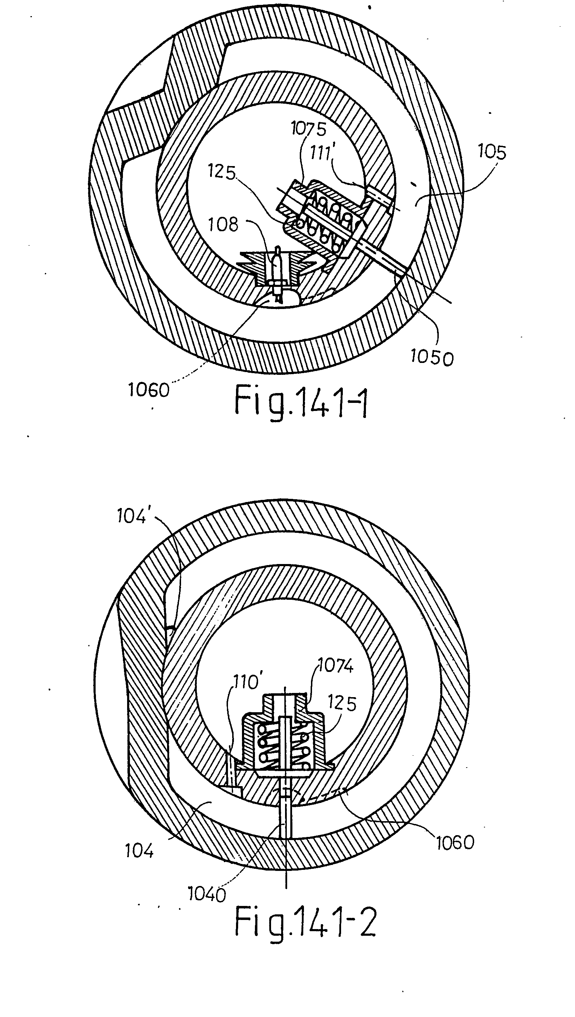

Figs. 141 to 141-2 are the graphic views of embodiment of cylindrical type external rotor engine.

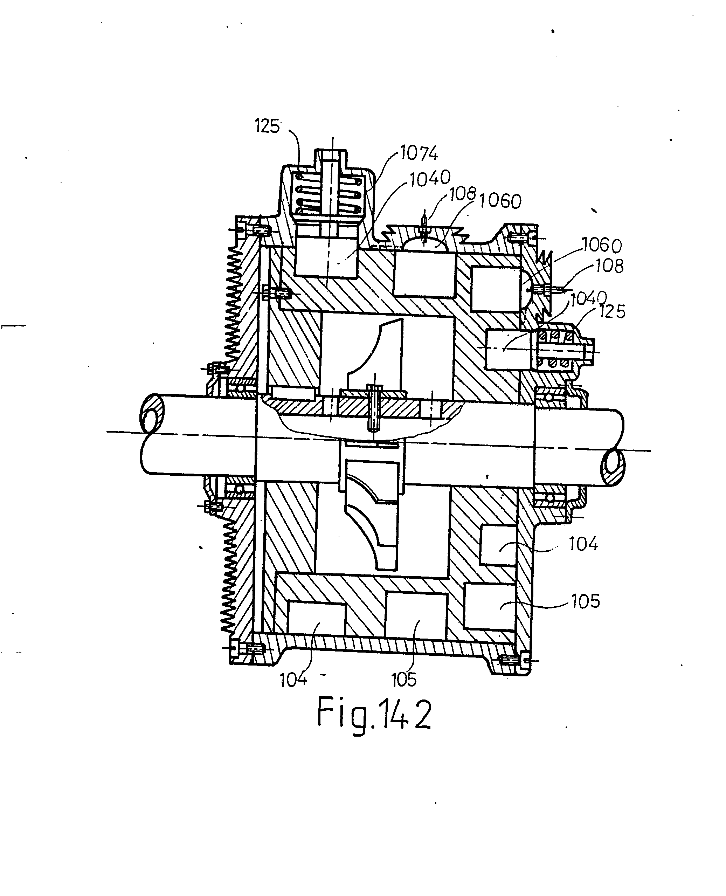

Fig. 142 is a graphic view of embodiment of column and surface of disk end mixed type engine.

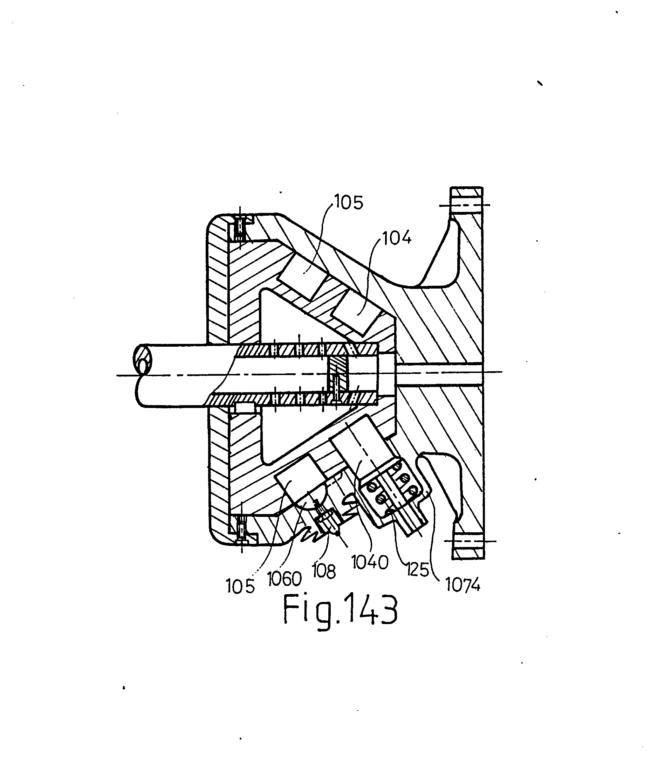

Fig. 143 is a graphic view of embodiment of conic surface coupling type internal combustion engine.

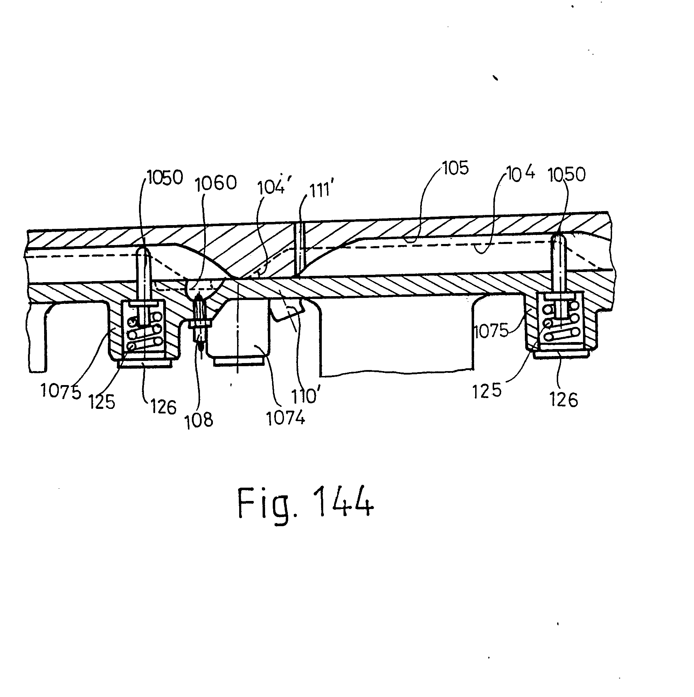

Fig. 144 is a graphic view of embodiment of internal combustion engine wherein active body is the fixed body, passive body is motion body.

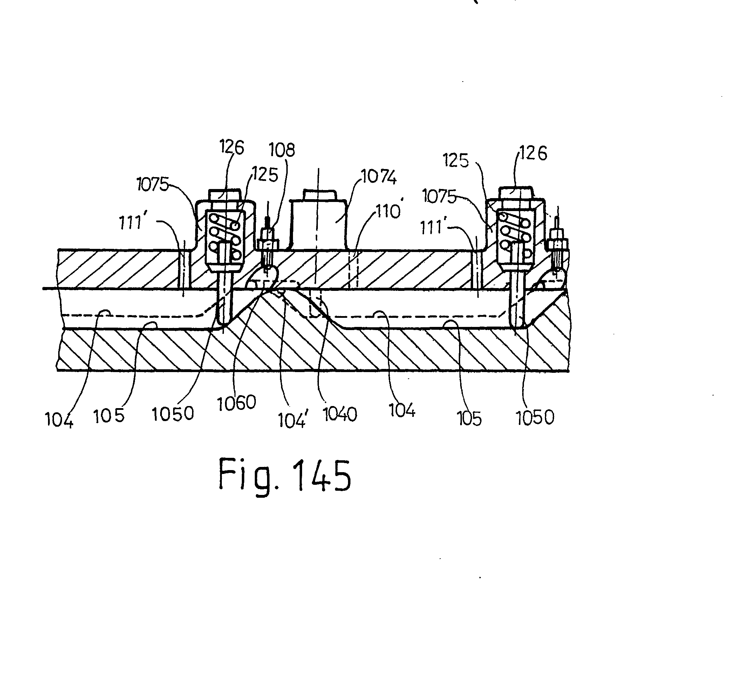

Fig. 145 is a graphic view of embodiment of internal combustion engine wherein active body is motion body, passive body is the fixed body.

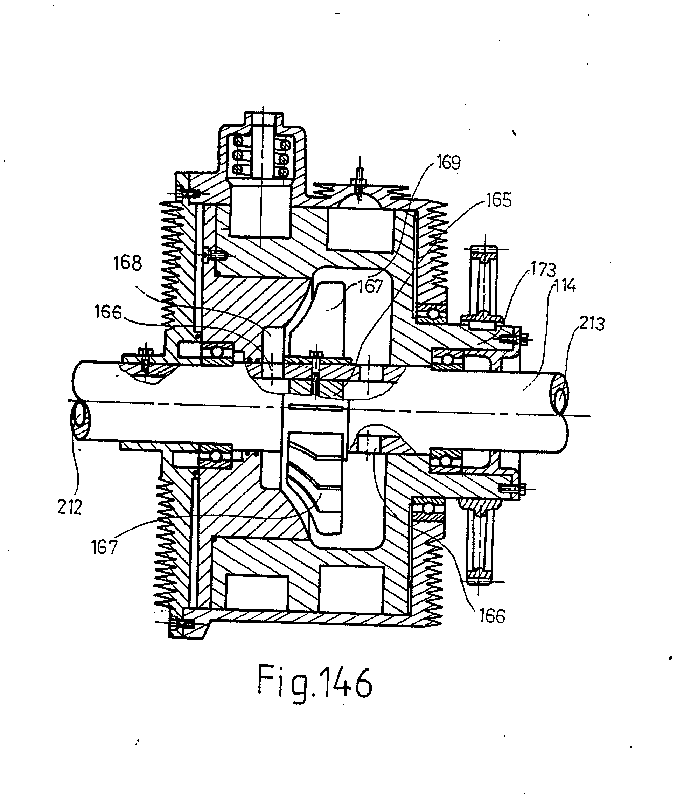

Fig. 146 is a graphic view of embodiment of circulative cooling structure which possesses turbine vane.

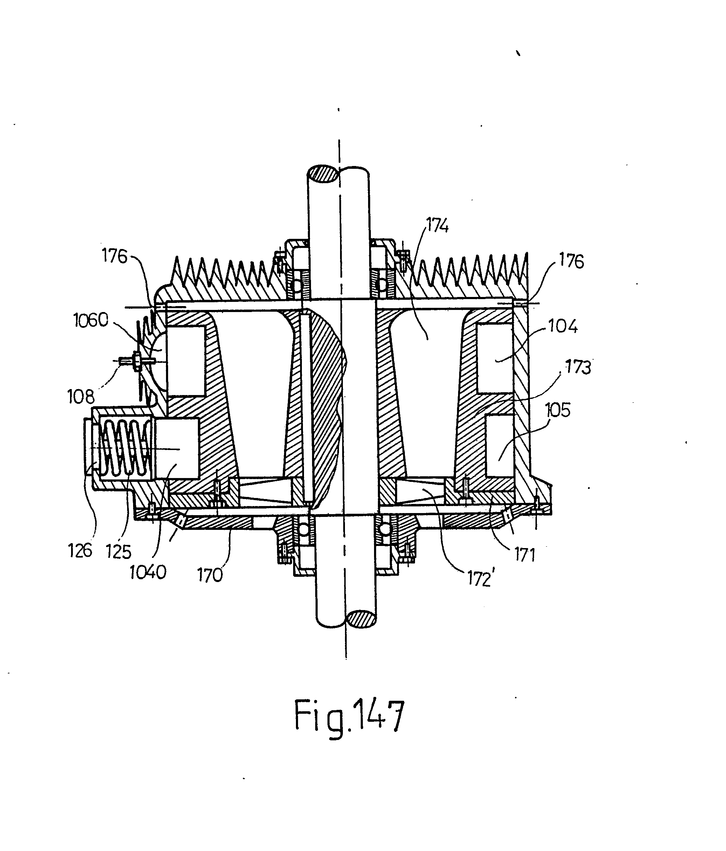

Fig. 147 is a graphic view of embodiment of open type cooling structure which possesses radial vane.

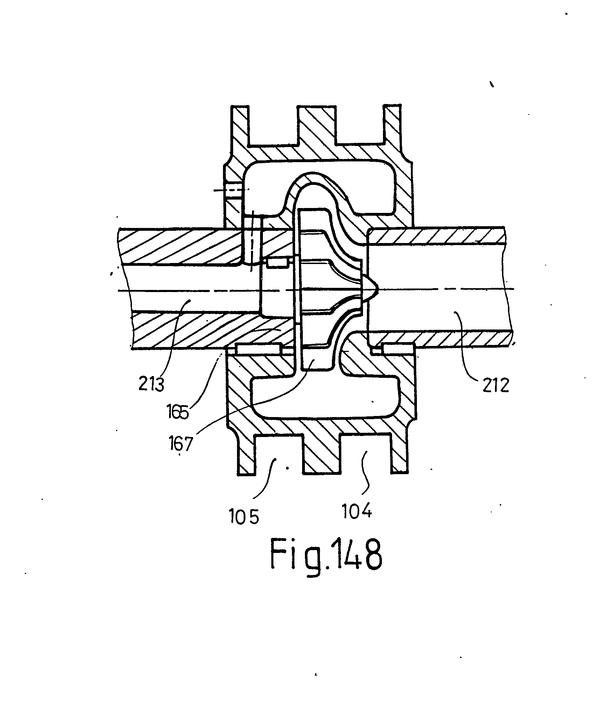

Fig. 148 is a graphic view of embodiment of Fig. 147 wherein intake port is placed at fixed side cover.

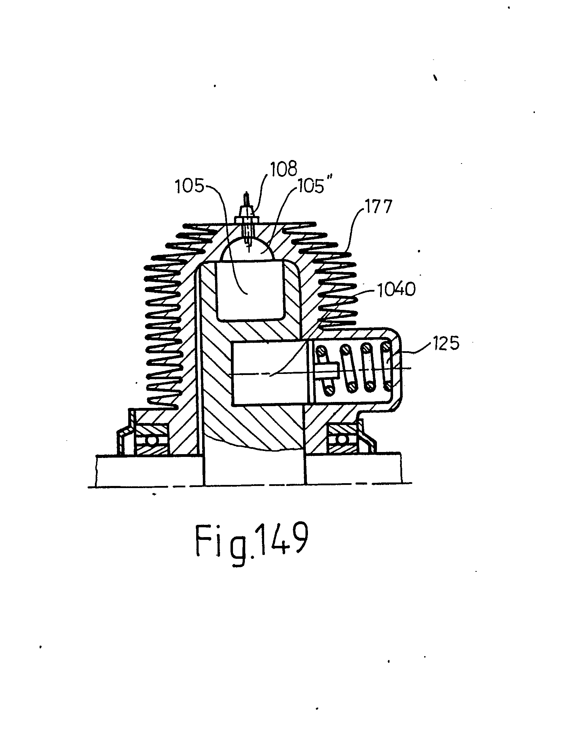

Fig. 149 is a graphic view of free air cooling structure which possesses radial cooling fin.

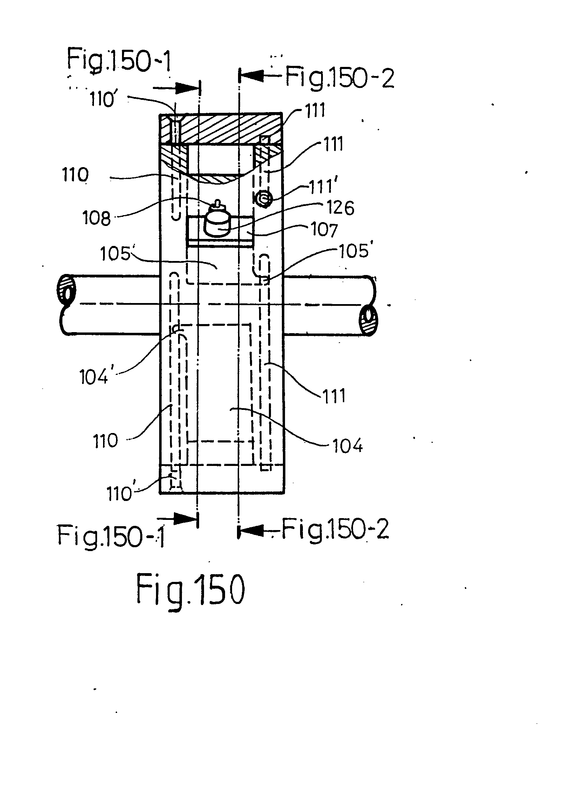

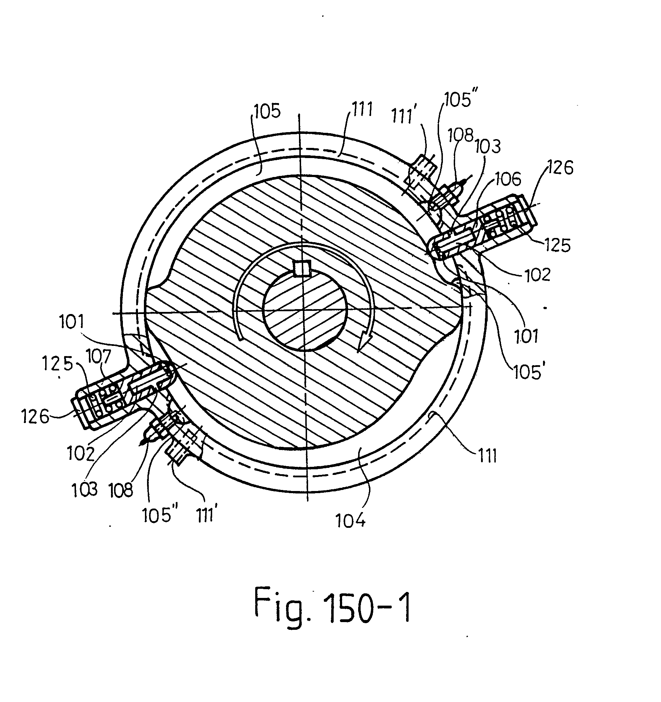

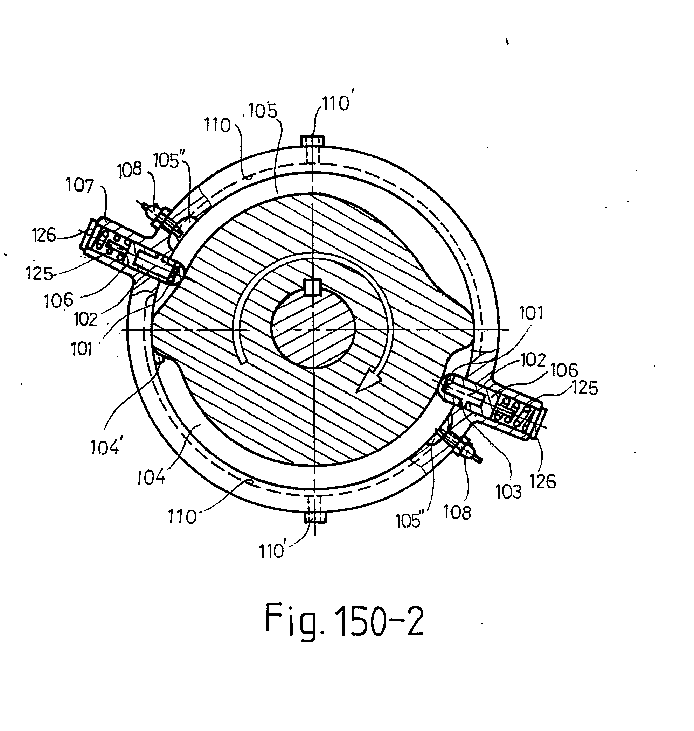

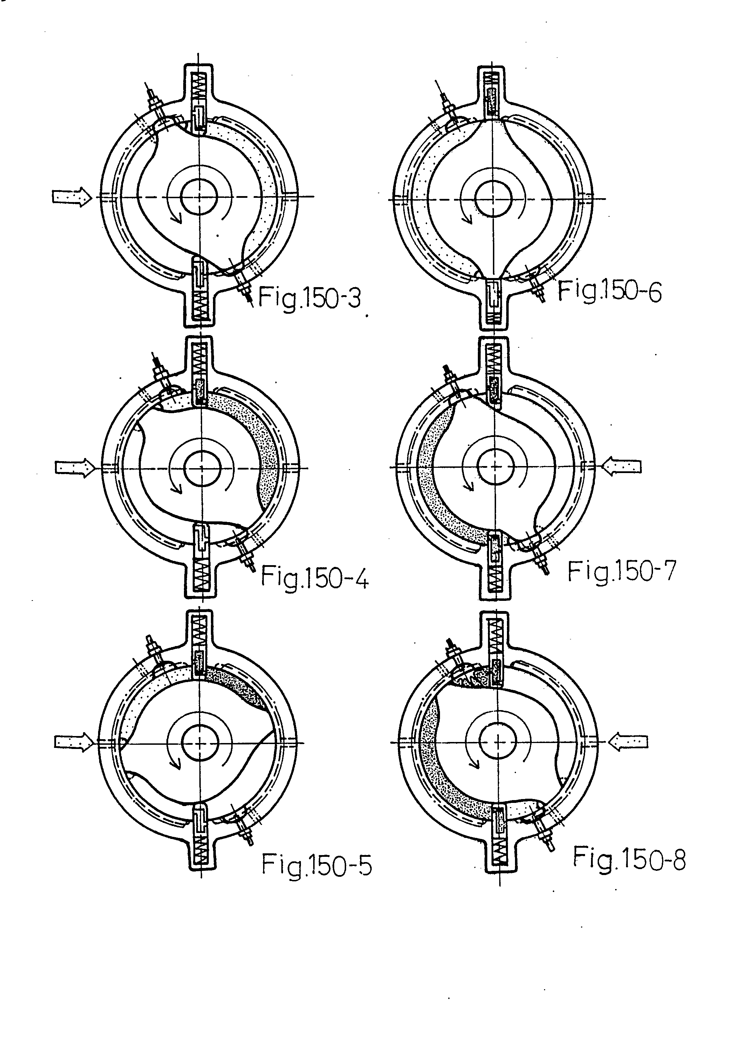

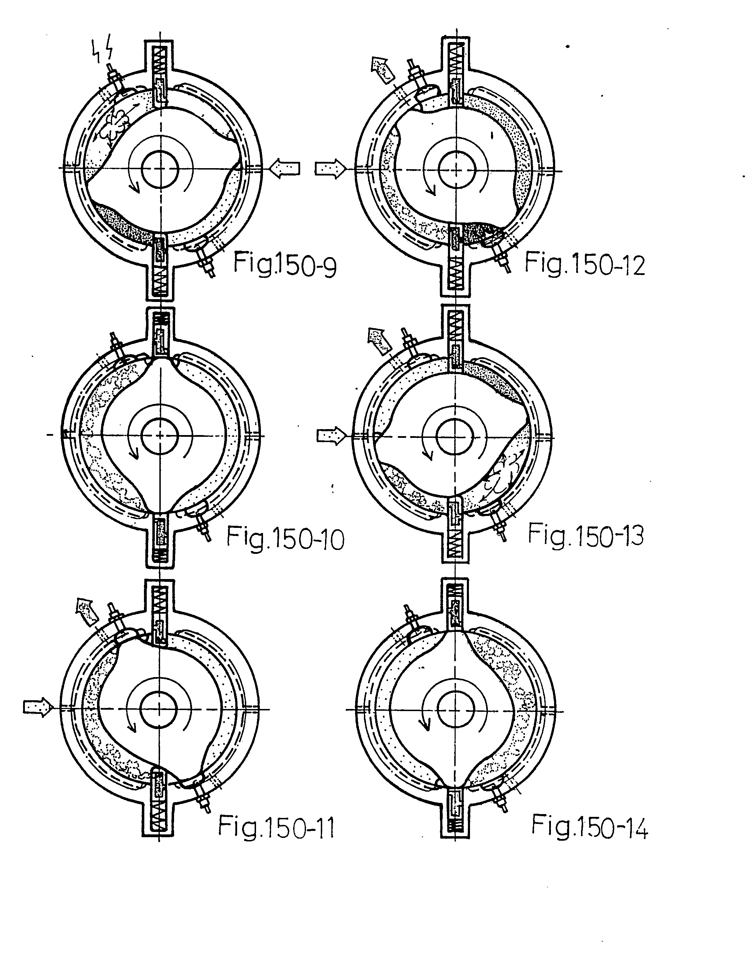

Figs. 150 to 150-2 are the graphic views of embodiment of common gate plate series gas chamber engine which is driven by double work.

Figs. 150-3 to 150-14 are the working procedure diagrams of common gate plate series gas chamber engine which is driven by double work.

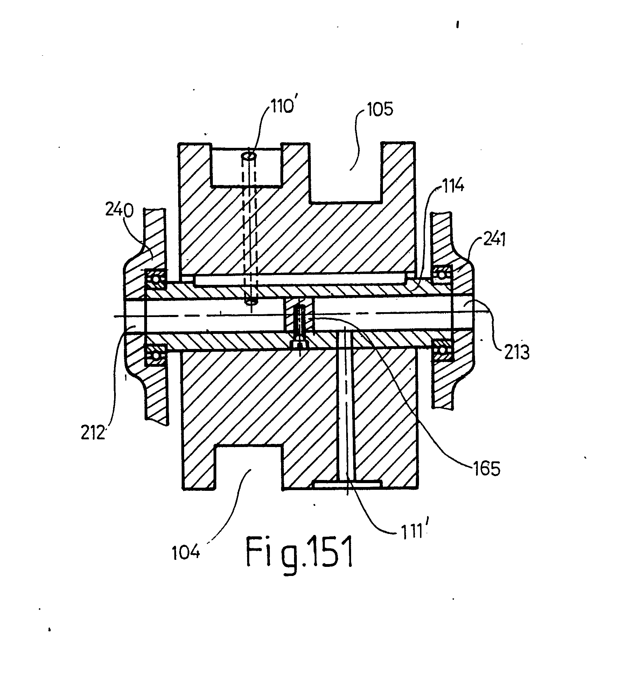

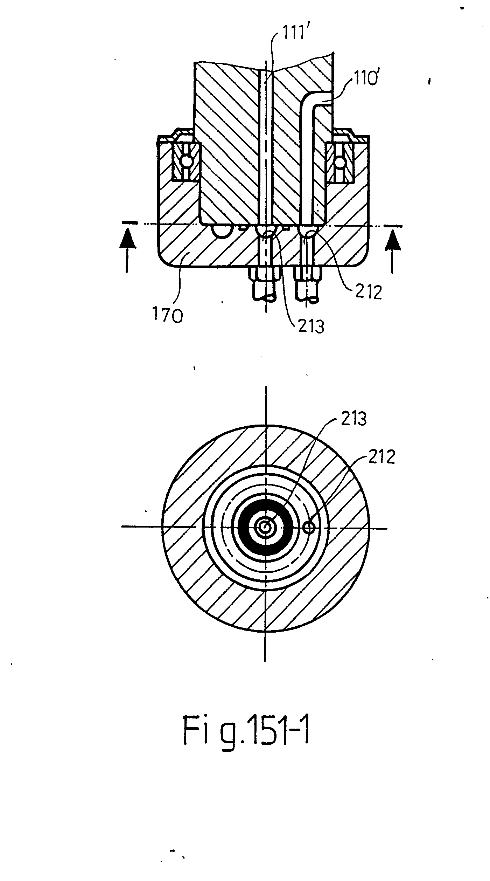

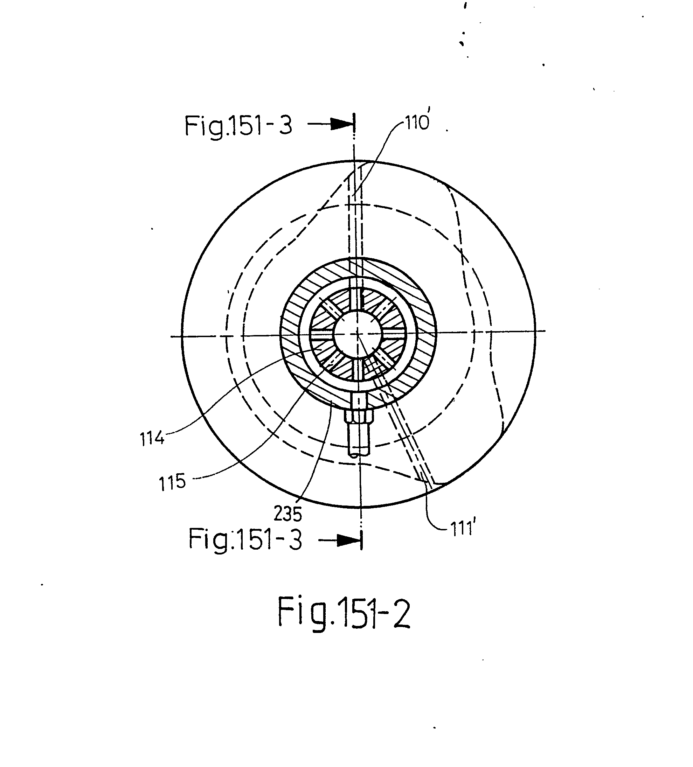

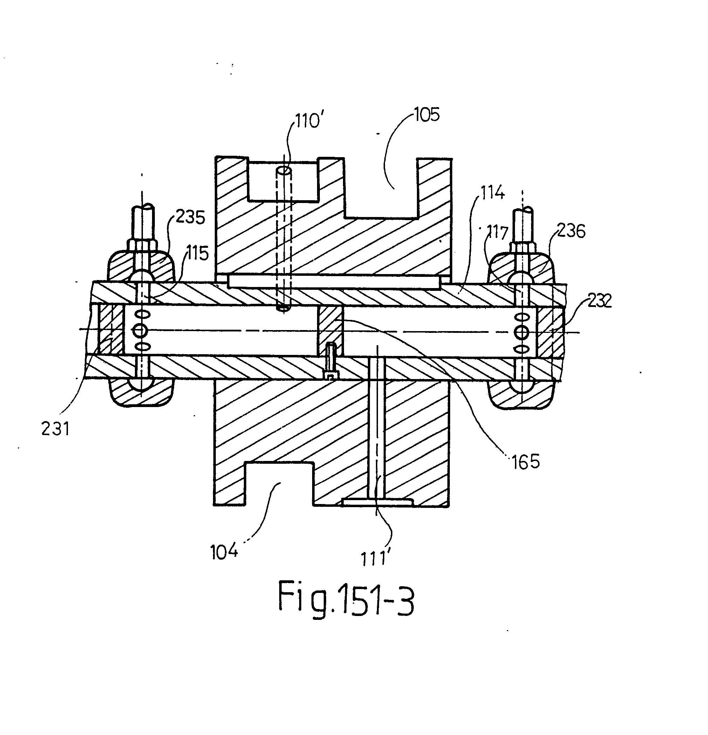

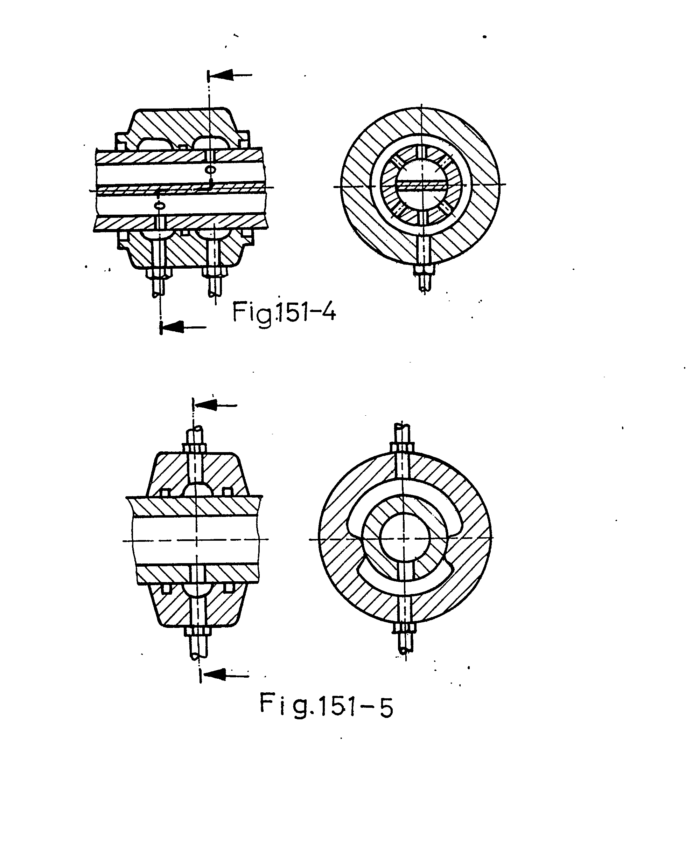

Figs. 151 to 151-1 are the graphic views of embodiment of the fixed end cover which couples between two ends of rotary axle and possesses guide hole and is used as gas guide passage.

Figs. 151-2 to 151-3 are the graphic views of embodiment of the seal ring structure which covers the guide hole of hollow rotary axle in ring and is used as gas guide passage.

Figs. 151-4 to 151-5 are the graphic views of embodiment of the seal ring structure which covers the guide hole of hollow rotary axle in ring and is used as synchronously distributive passage.

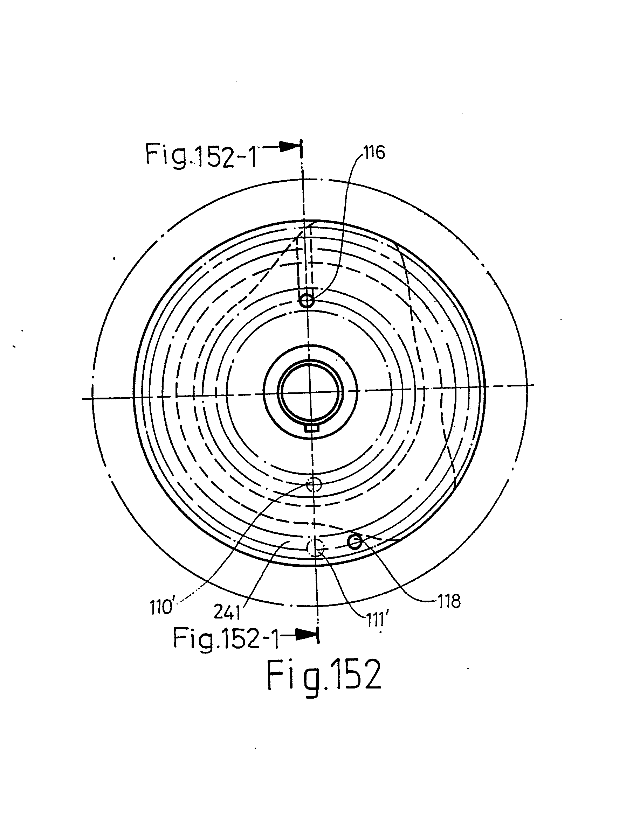

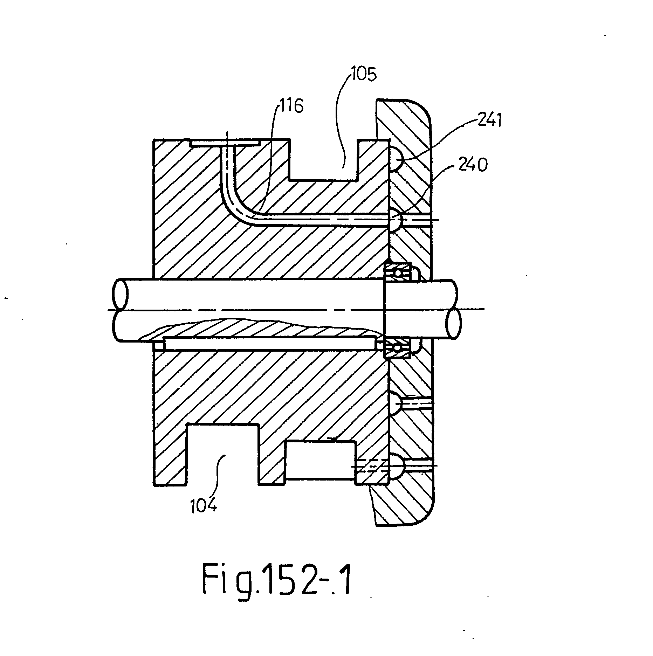

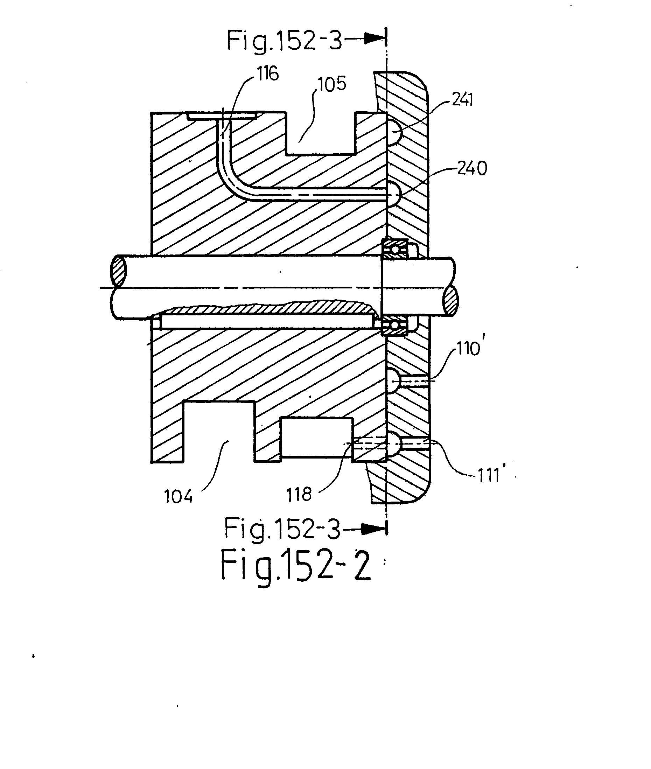

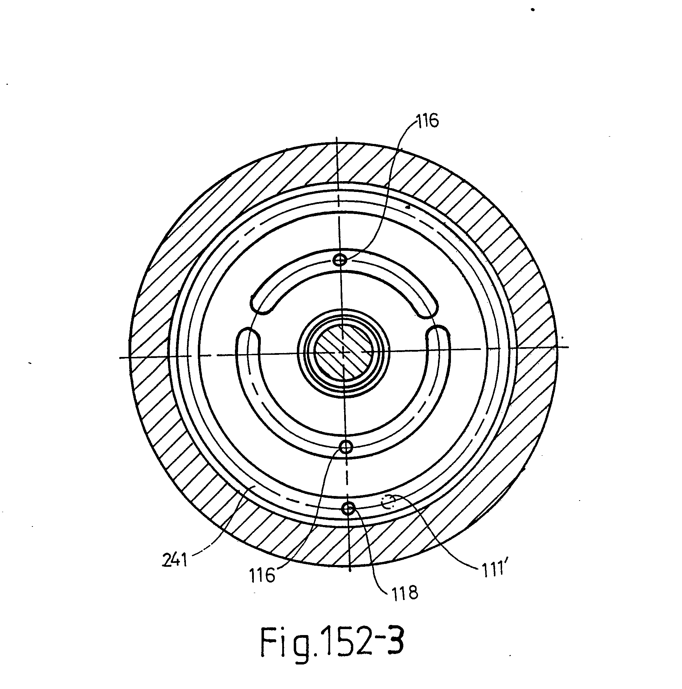

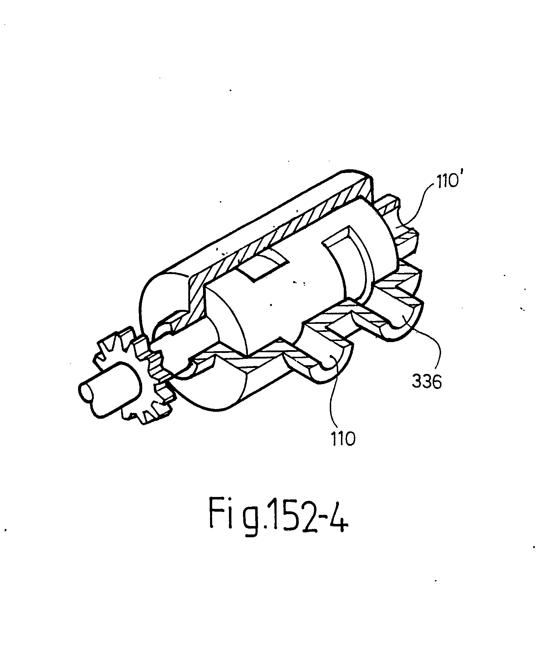

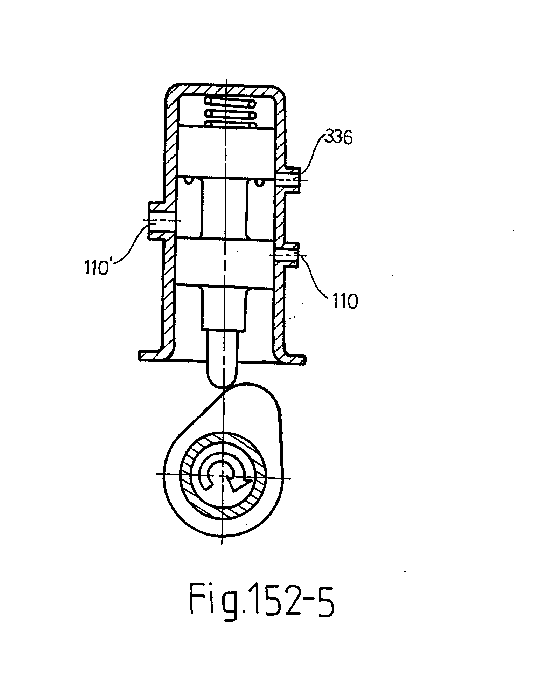

Figs. 152 to 152-1 are the graphic views of embodiment of the fixed structure which possesses arc shape pr ring shape guide groove and couples transverse hole at side wall of passive body to be used as gas guide passage.

Figs. 152-2 to 152-3 are the graphic views of the embodiment of the fixed structure which possesses arc shape or ring shape guide groove and couples transverse hole at side of passive body to be used as synchronously distributive passage.

Figs. 152-4 is the rotary type synchronous distribution diagram.

Fig. 152-5 is the eccentric driving type synchronous distribution diagram.

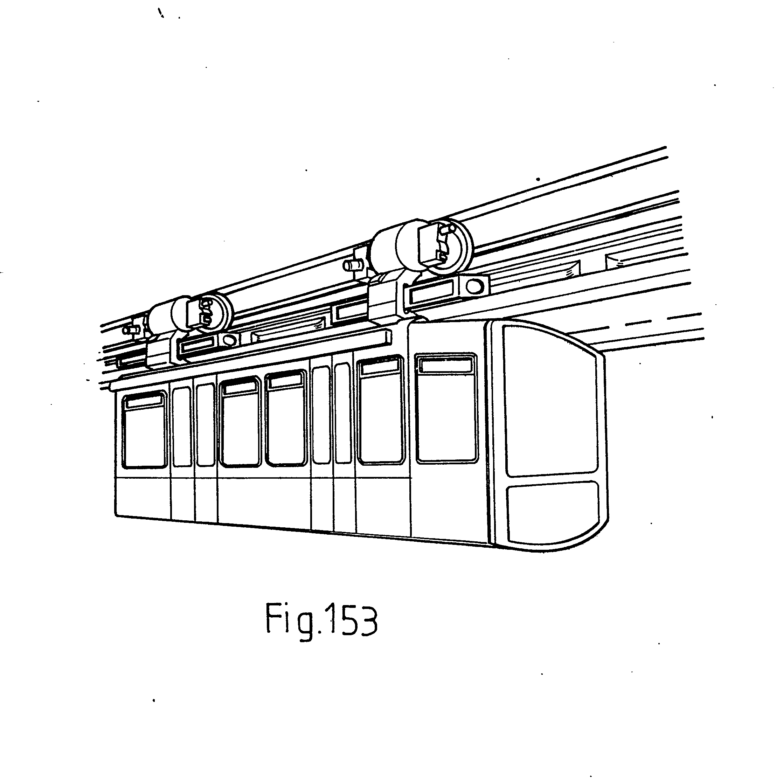

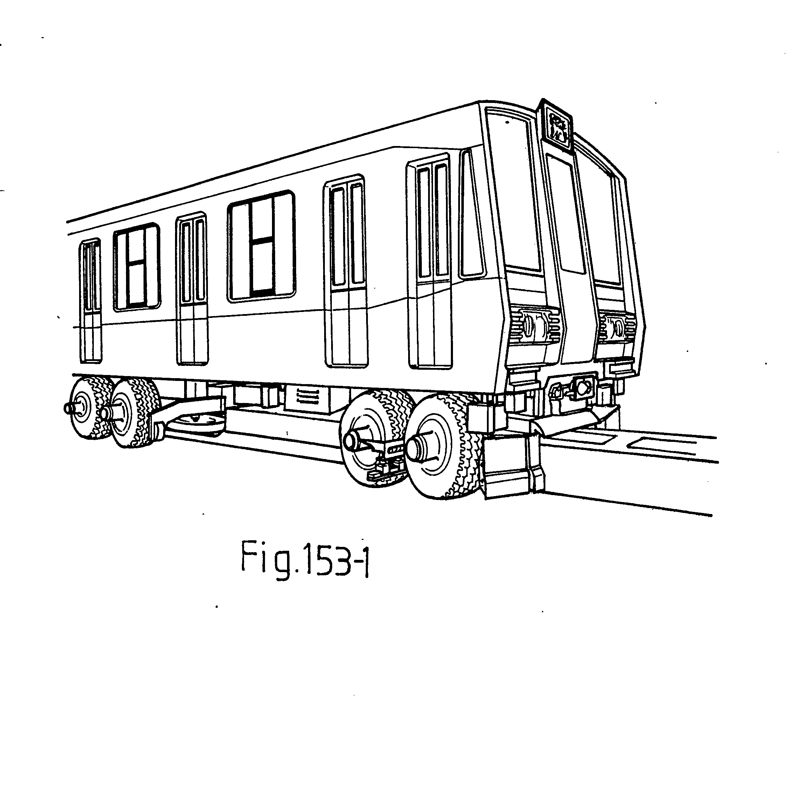

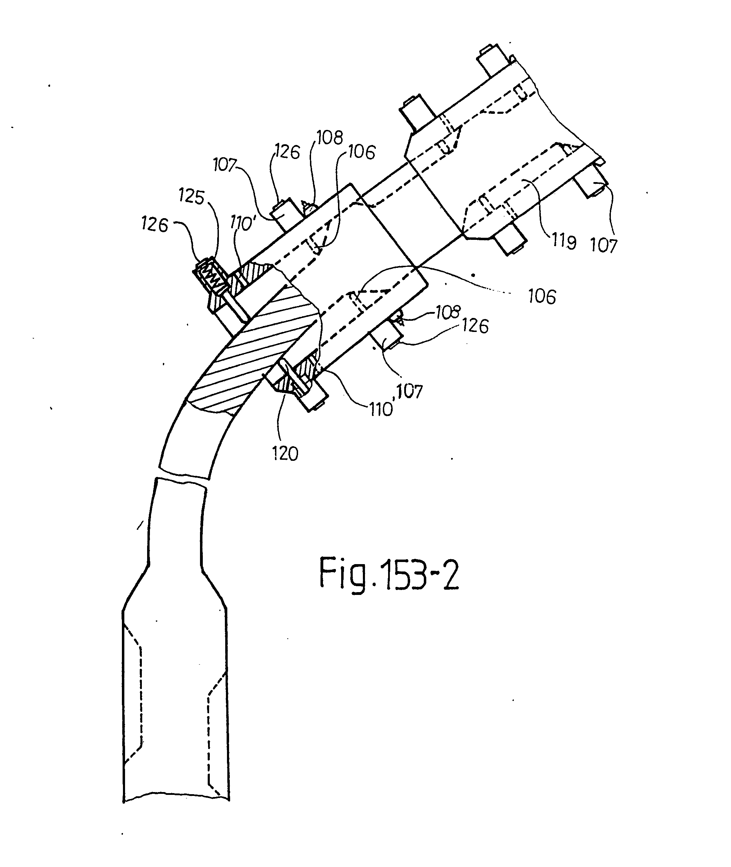

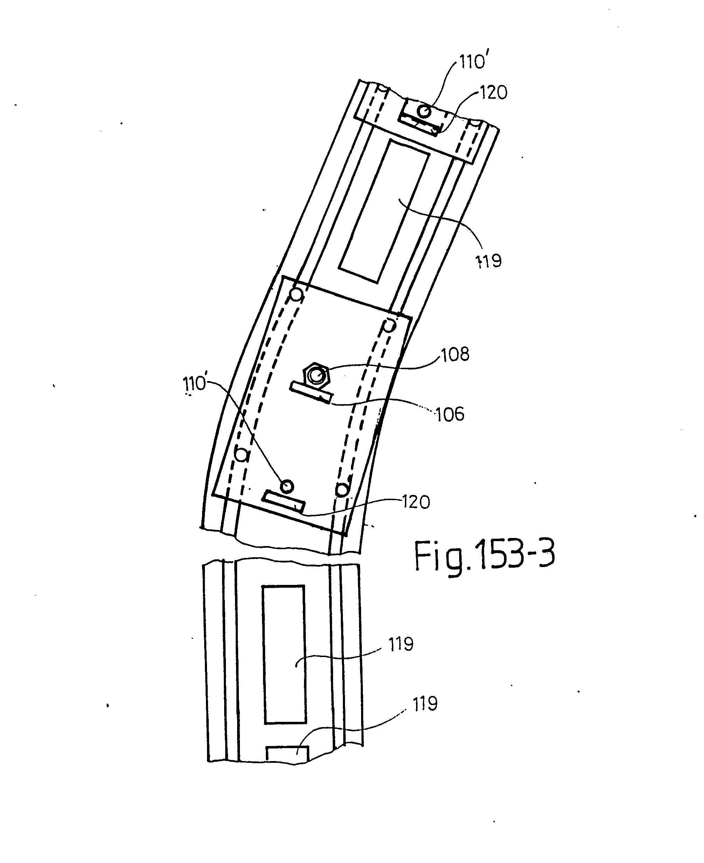

Fig. 153 is the graphic view A of the applied embodiment of linear type driving structure.

Fig. 153-1 is the graphic view B of the applied embodiment of linear type driving structure.

Fig. 153-2 is a graphic view of linear type driving structure, wherein passive body is the fixed rail curved path structure.

Fig. 153-3 is a graphic view of linear type driving structure, wherein gas chamber set is placed at the couved path at the upper of fixed rail.

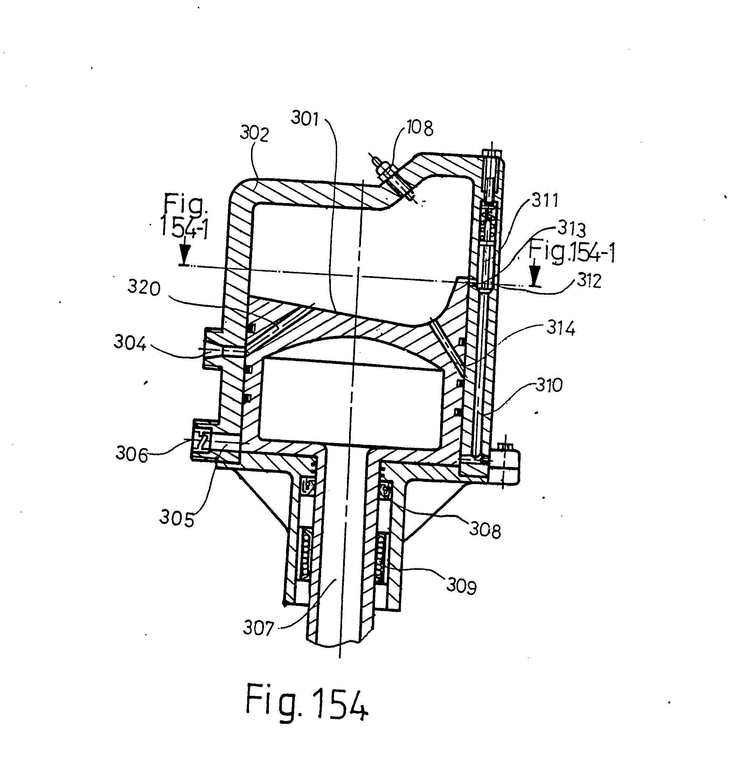

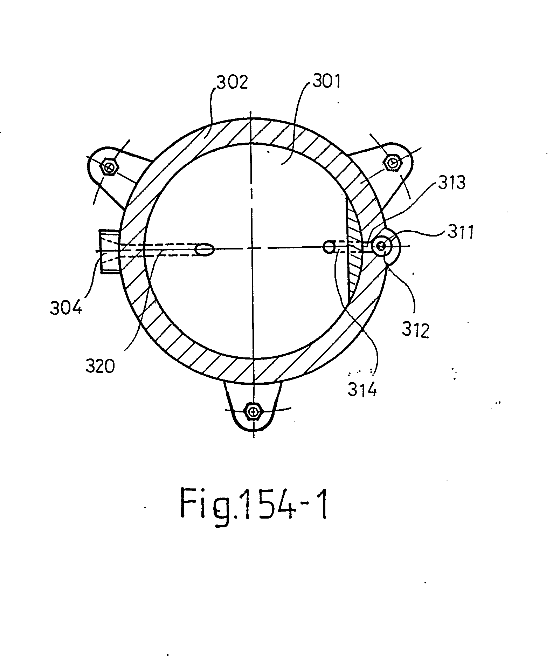

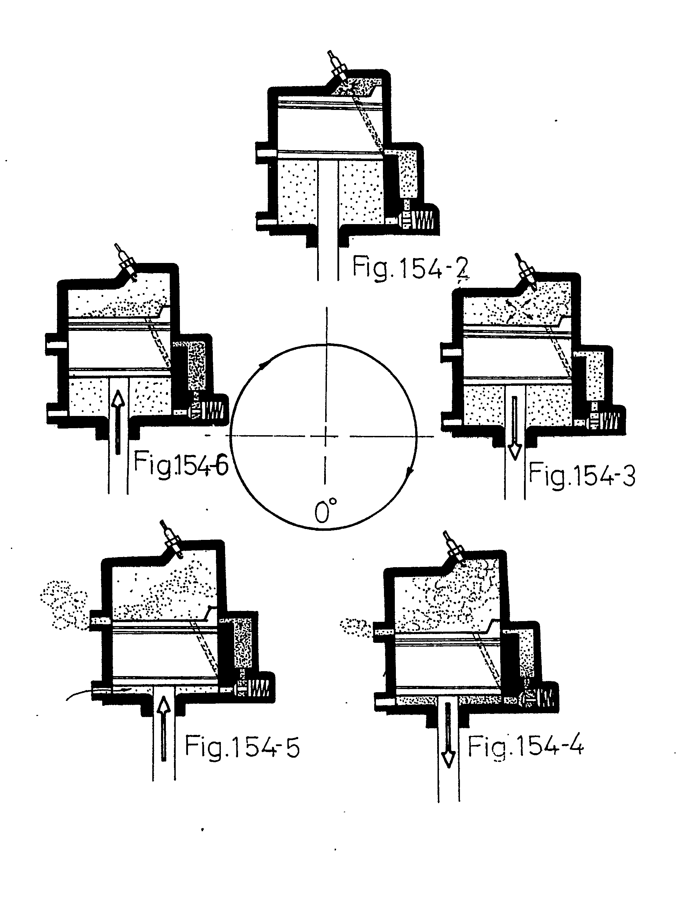

Figs. 154, 154-1 are the graphic view of embodiment of single-set double-face pistion drive without pressure-saved gas chamber.

Figs. 154-2 to 154-6 are the working procedure diagrams of embodiment of single-set double-face piston drive without pressure-saved gas chamber.

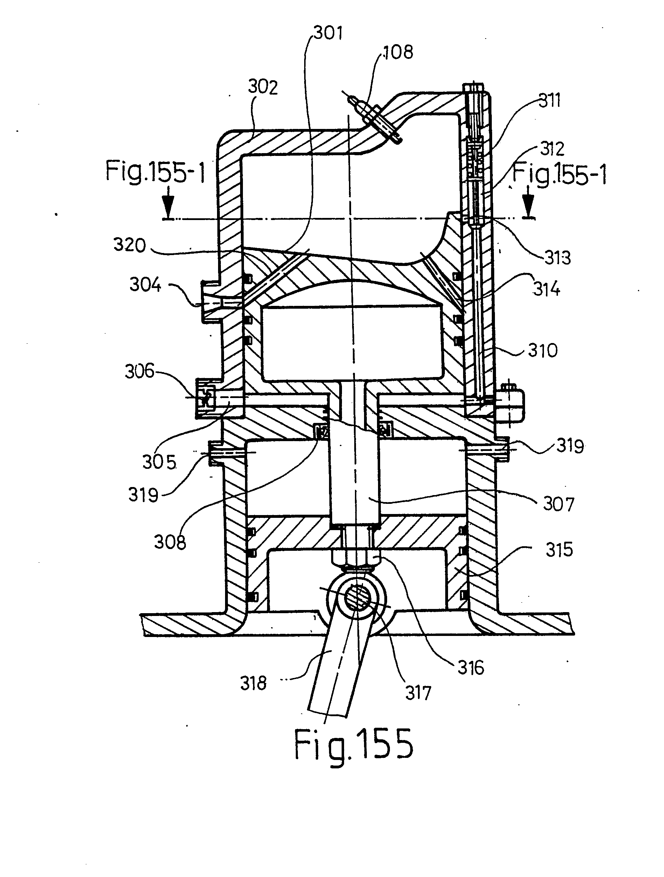

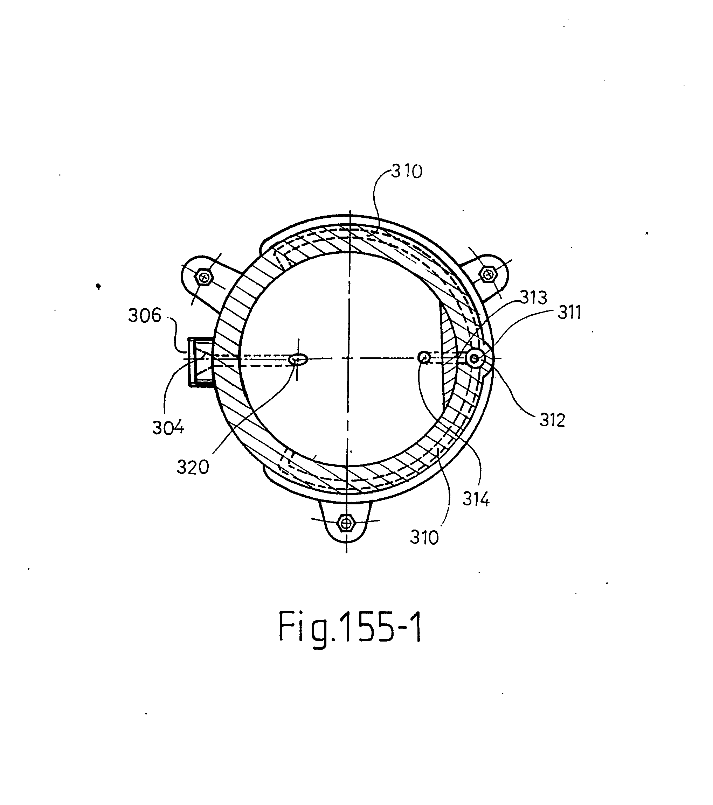

Figs. 155 to 155-1 are the graphic views of the embodiment of Figs. 154, 154-1 additionally assembled stable lower piston structure.

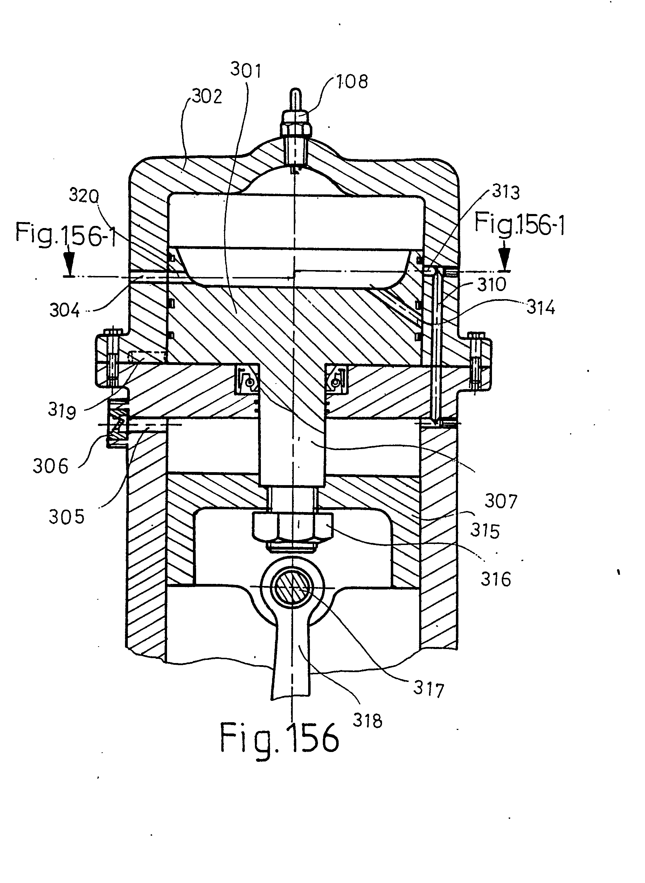

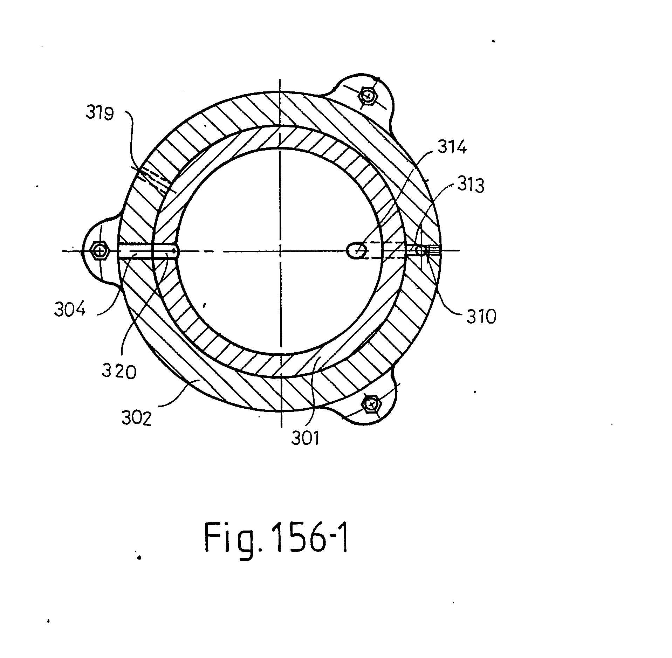

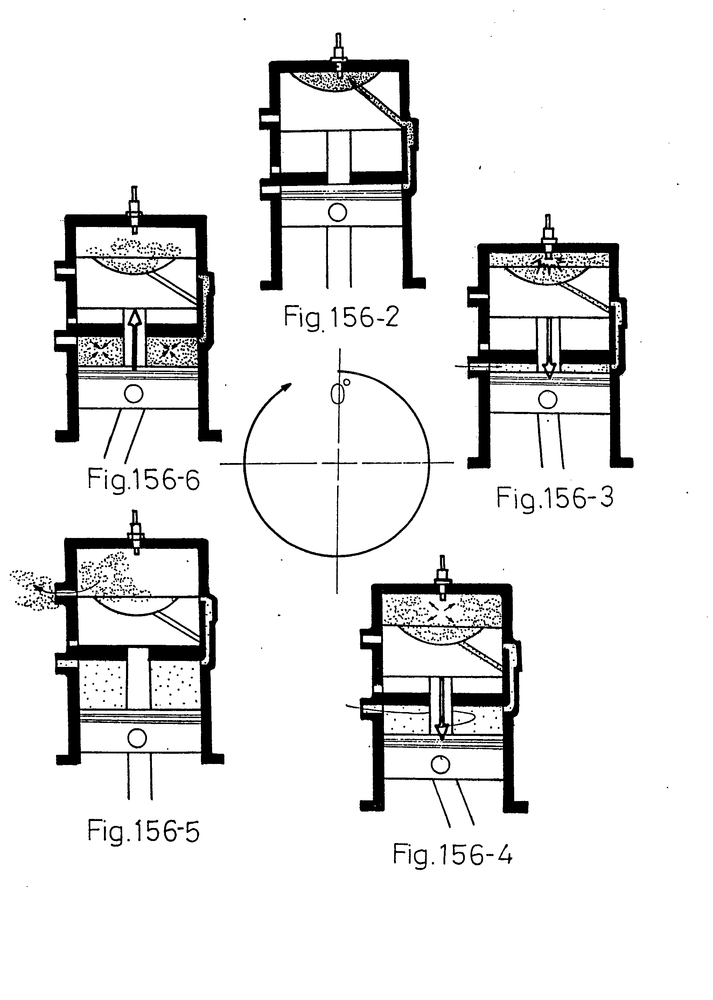

Figs. 156, 156-1 are the graphic views of embodiment of double piston drive without pressure-saved gas chamber.

Figs. 156-2 to 156-6 are the working procedure diagrams of double piston drive without pressure-saved gas chamber.

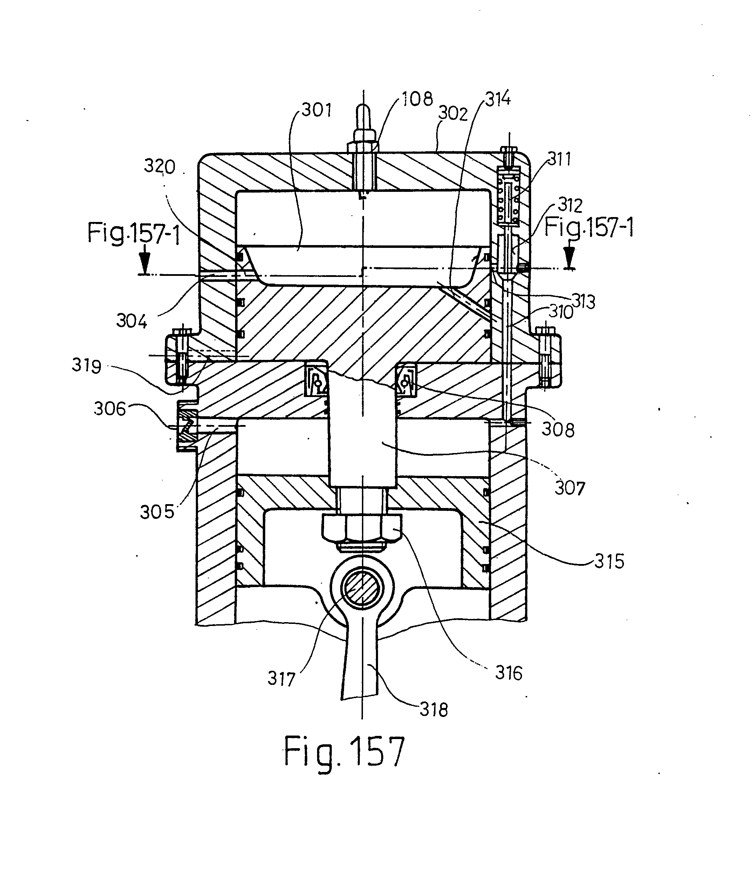

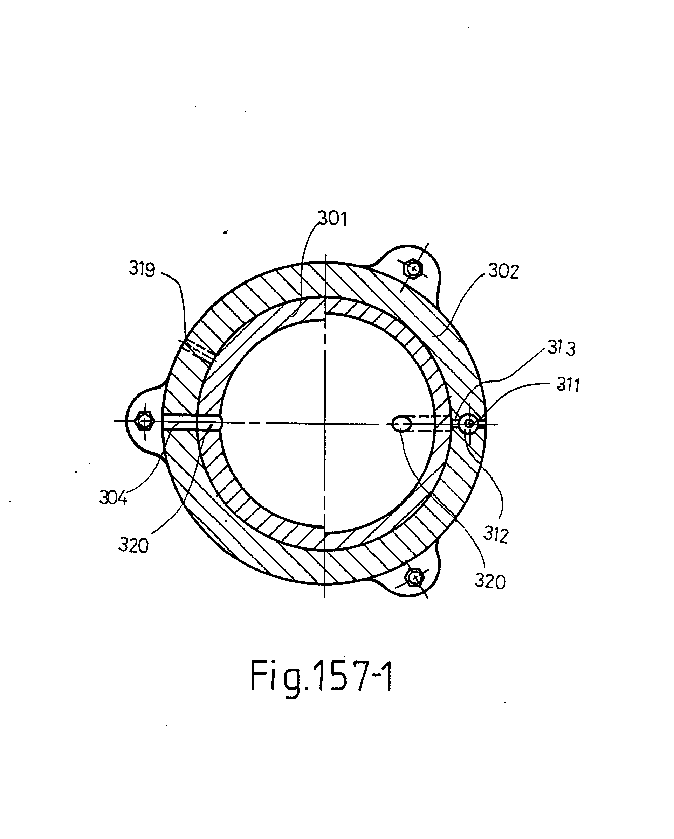

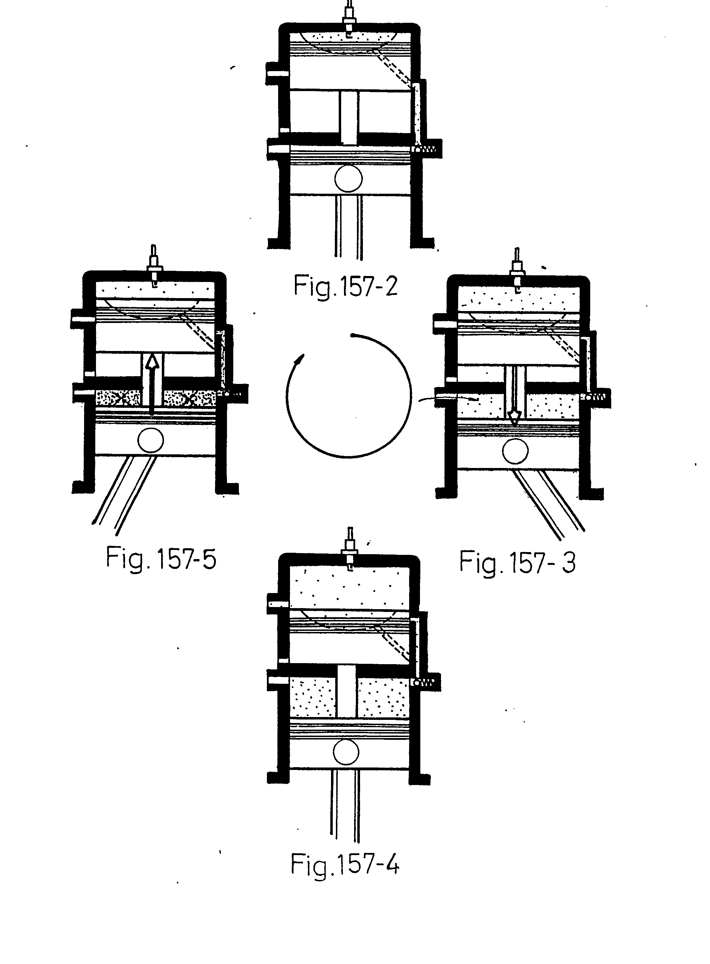

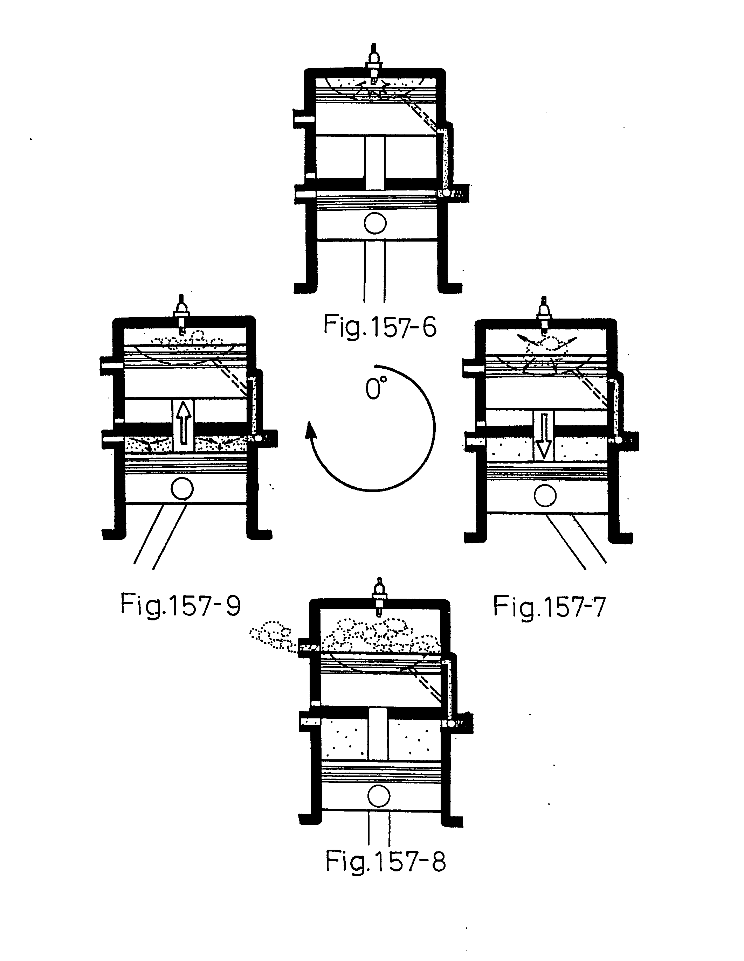

Figs. 157, 157-1 the graphic views of embodiment of double piston drive having pressure-saved gas chamber.

Figs. 157-2 to 157-9 are the working procedure diagrams of double piston drive having pressure-saved gas chamber.

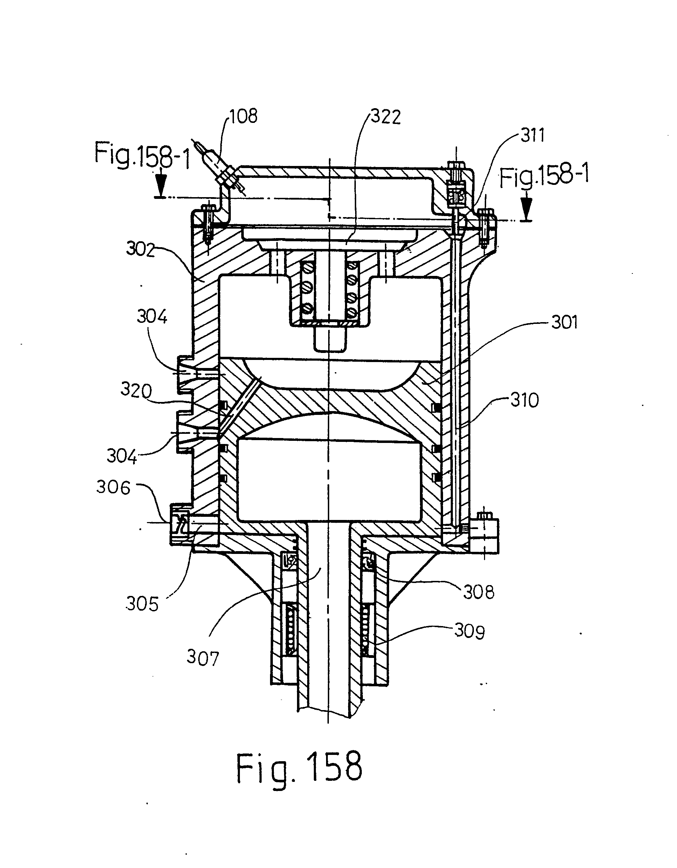

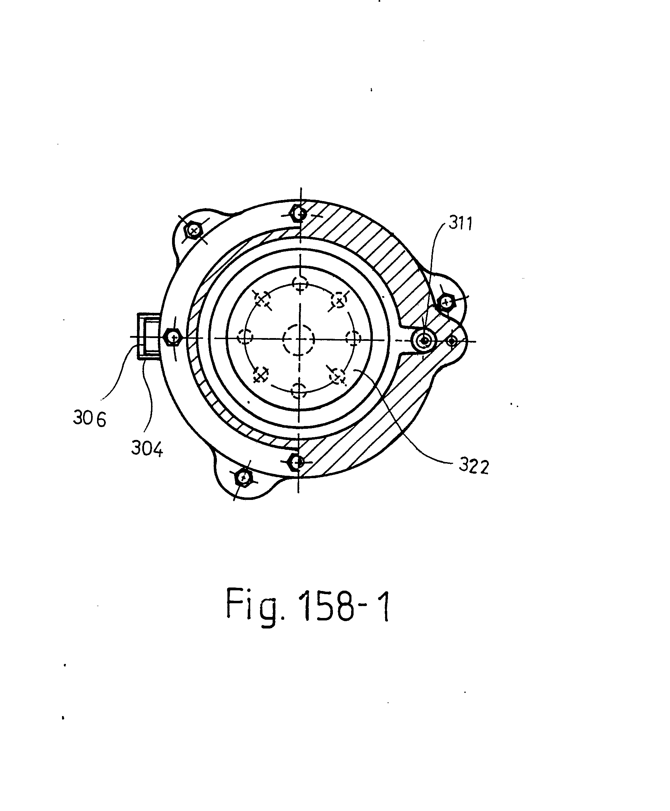

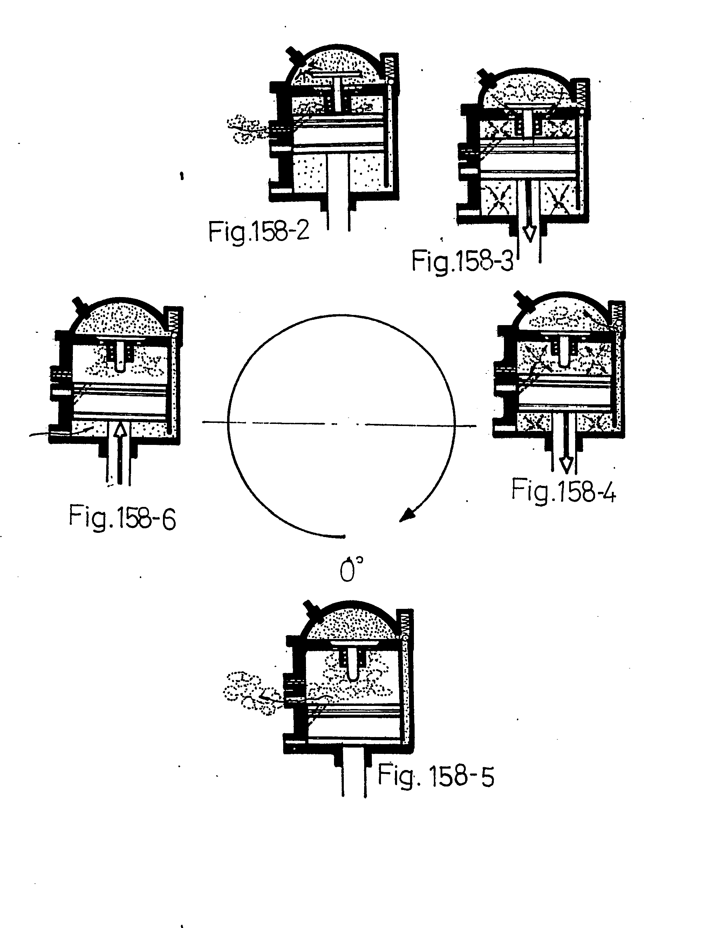

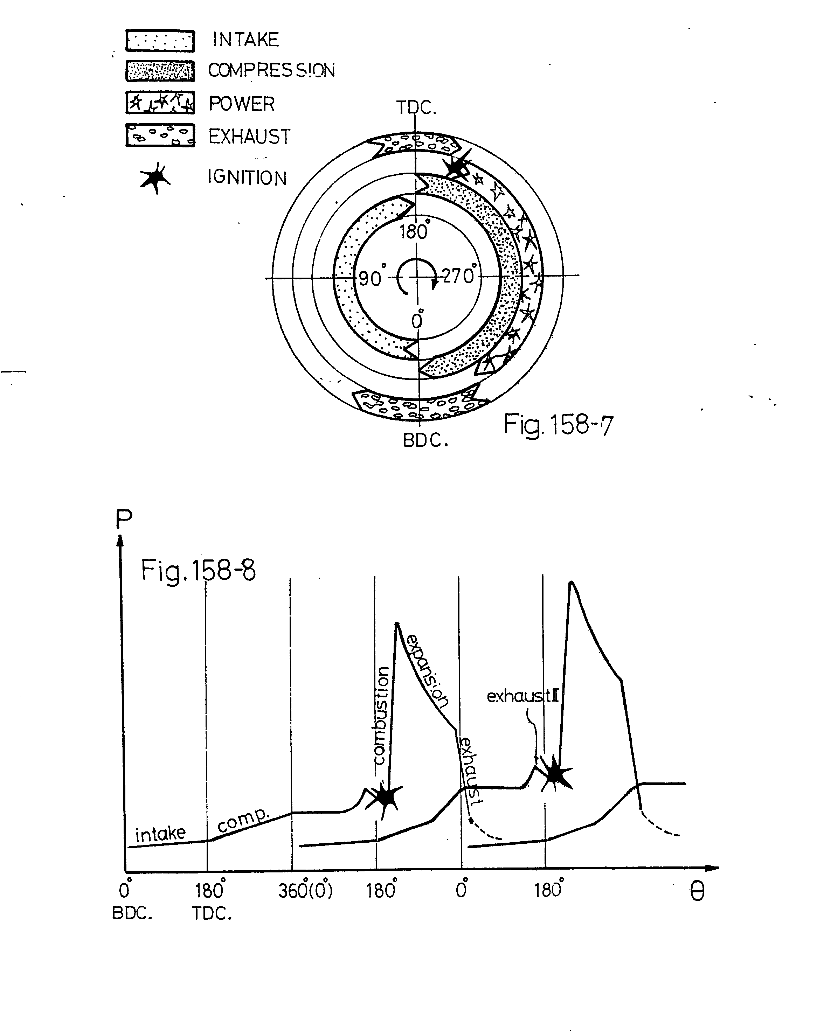

Figs. 158 to 158-1 are the graphic views of the embodiment which possesses the second exhaust port.

Figs. 158-2 to 158-6 are the working procedure diagrams of the embodiment which possesses the second exhaust port.

Fig. 158-7 is the working angle distribution diagram of the embodiment as shown in Figs. 158 to 158-1.

Fig. 158-8 is the pressure curve diagram of the embodiment as shown in Figs. 158, 158-1.

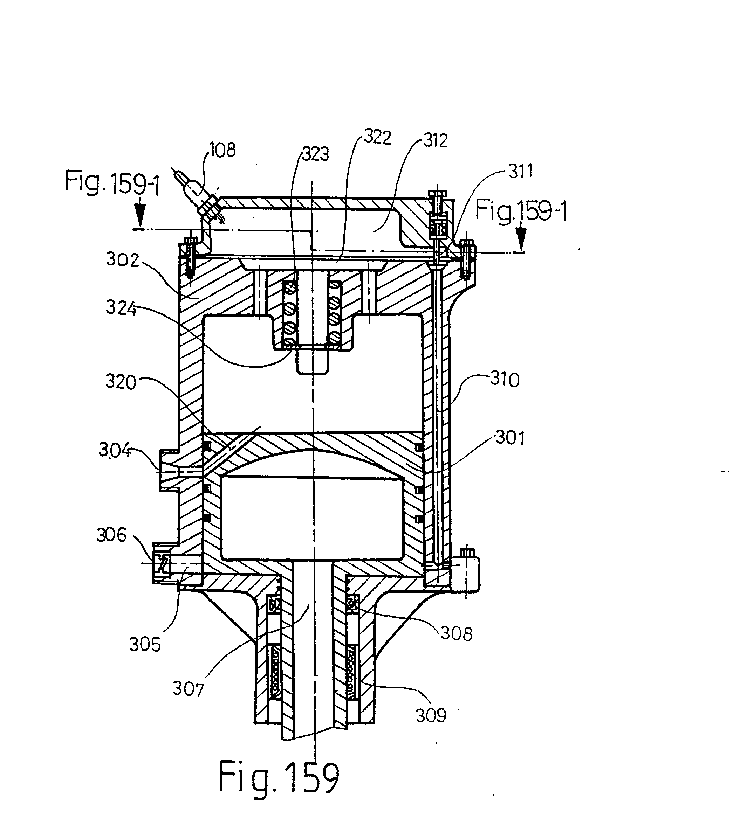

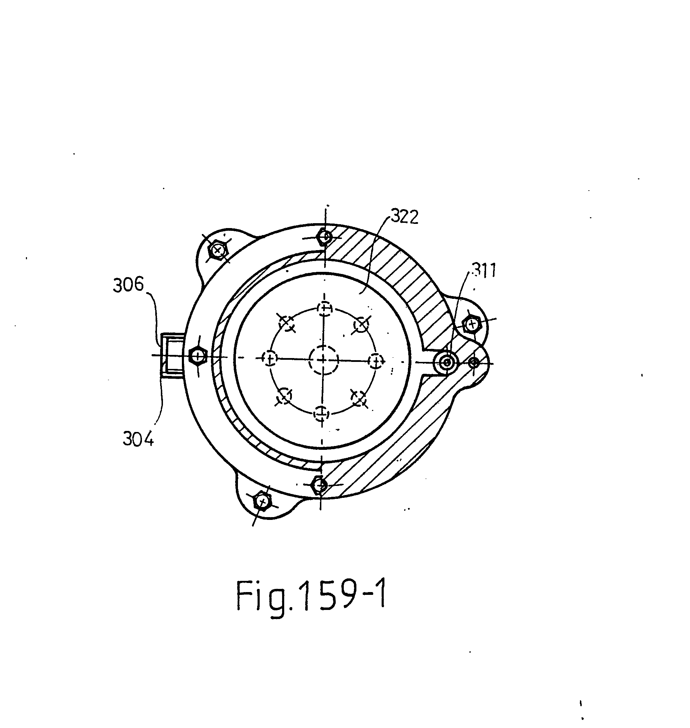

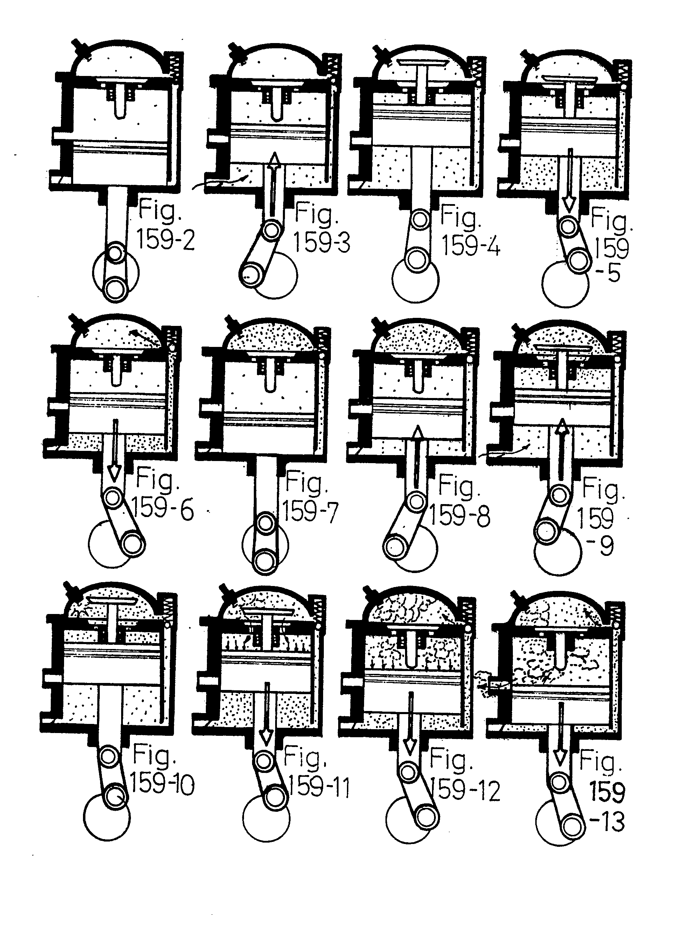

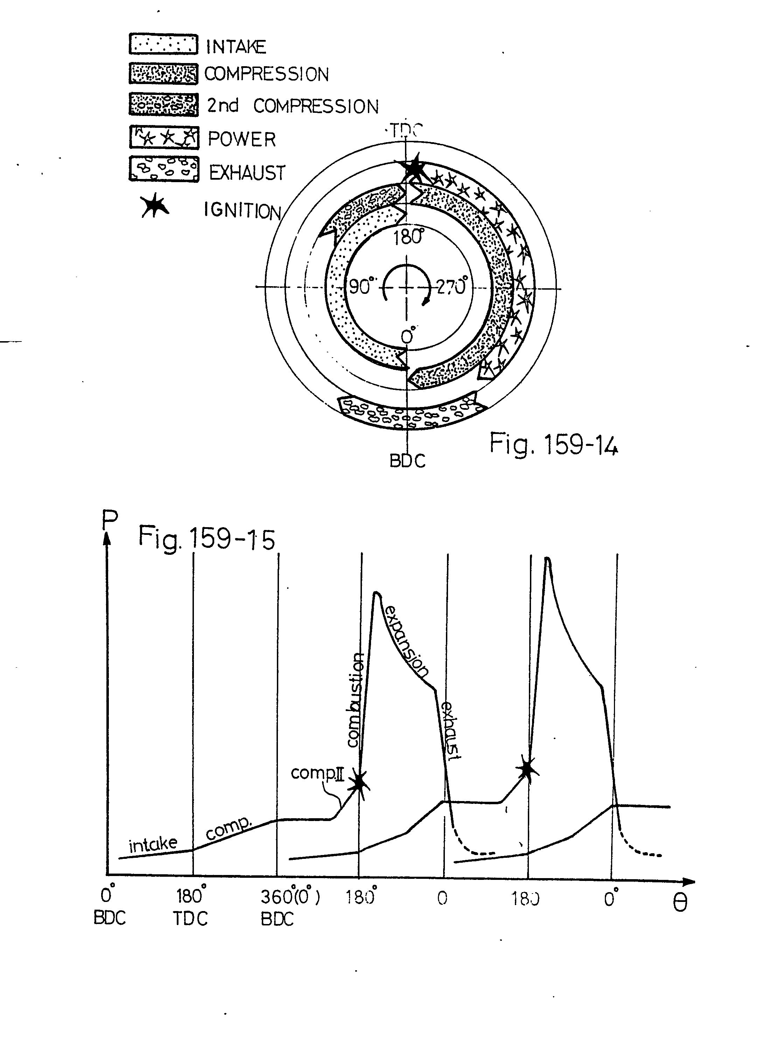

Figs. 159, 159-1 are the graphic views of embodiment which possesses single-set double-face piston drive and piston actuating type pressure-saved gas chamber.

Figs. 159-2 to 159-13 are the working procedure diagrams of embodiment which possesses single-set double-face piston drive and piston actuating type pressure-saved gas chamber.

Fig. 159-14 is the working angle distribution diagram of the embodiment as shown in Figs. 159, 159-1.

Fig. 159-15 is the pressure curve diagram of the embodiment as shown in Figs. 159, 159-1.

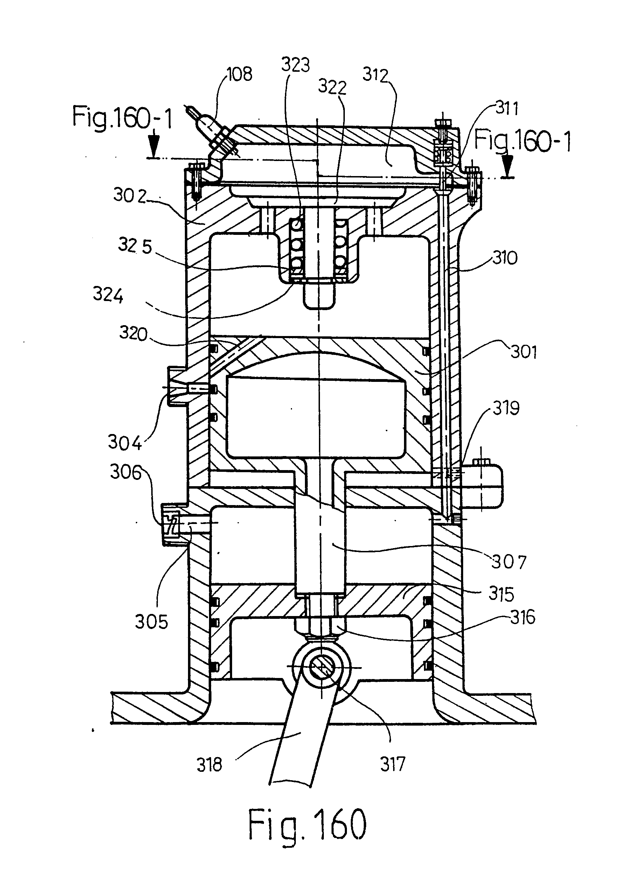

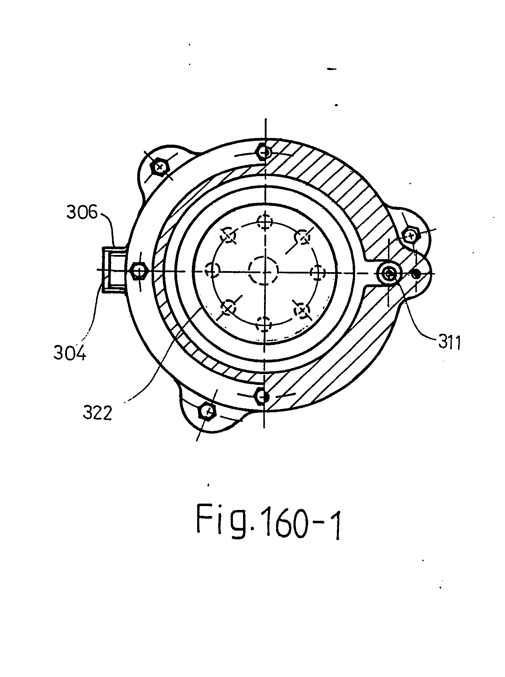

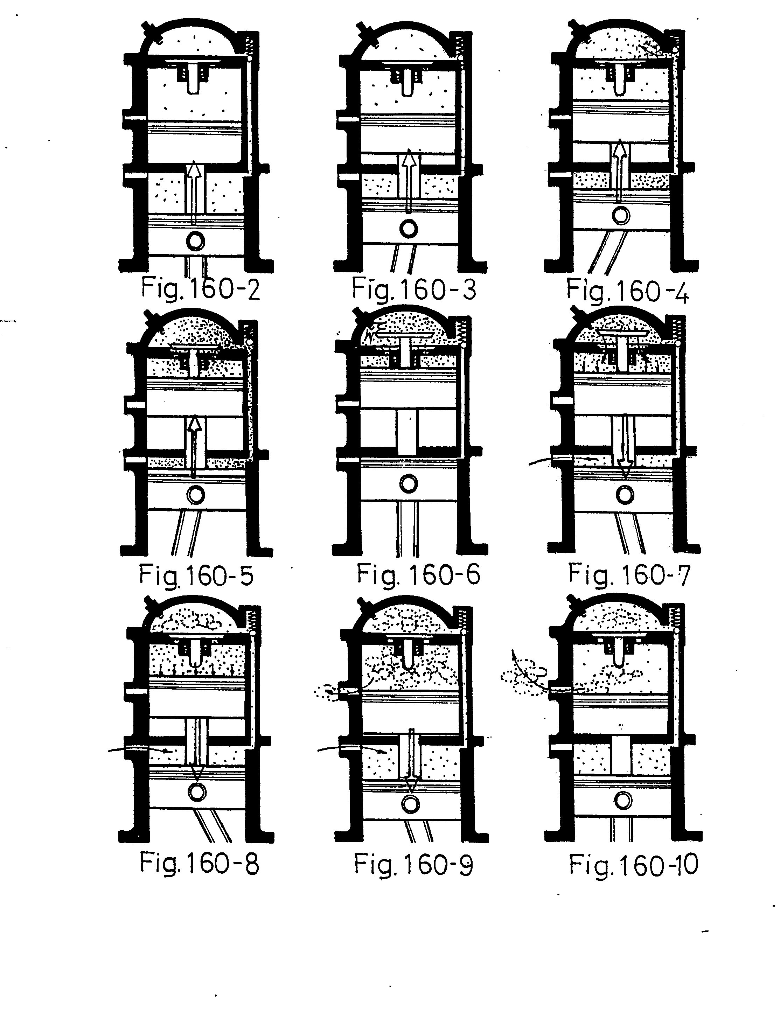

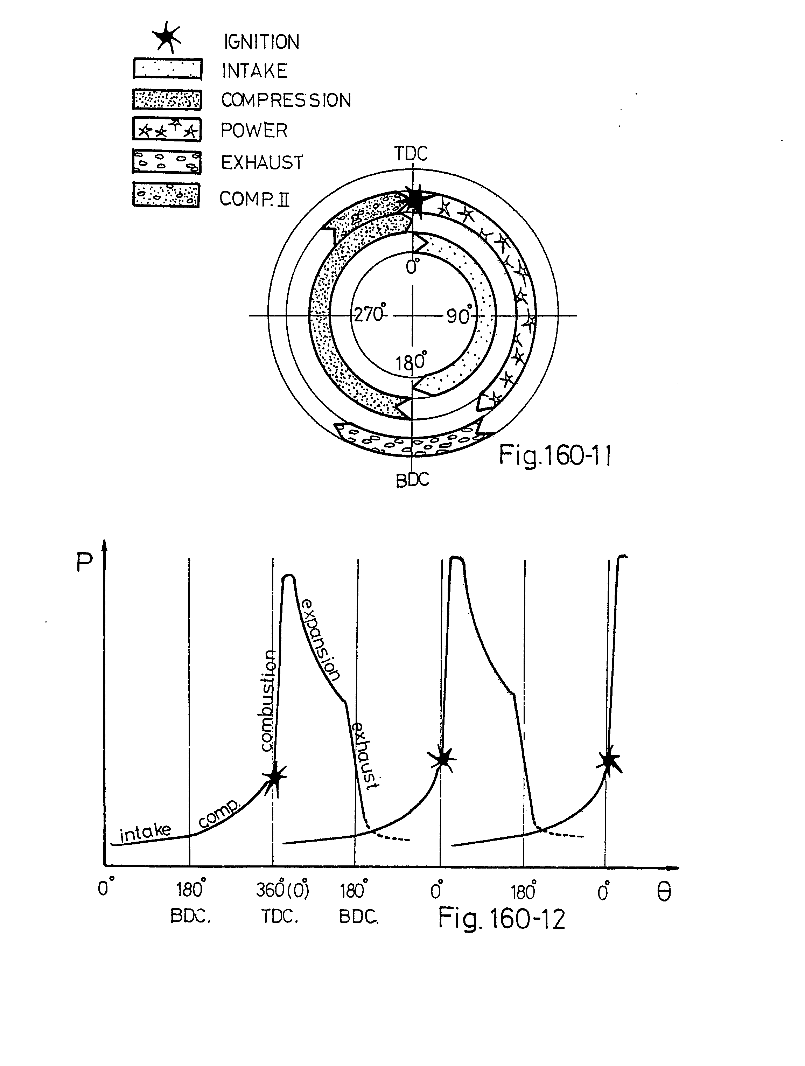

Figs. 160, 160-1 are the graphic views of the embodiment which possesses double piston drive and piston actuating type exchange gas valve and pressure-saved gas chamber.

Figs. 160-2 to 160-10 are the working procedure of the embodiment which possesses double piston drive and piston actuating type exchange gas valve and pressure-saved gas chamber.

Fig. 160-11 is the working angle distribution diagram of the embodiment as shown in Figs. 160, 160-1.

Fig. 160-12 is the pressure curve diagram of the embodiment as shown in Figs. 160, 160-1.

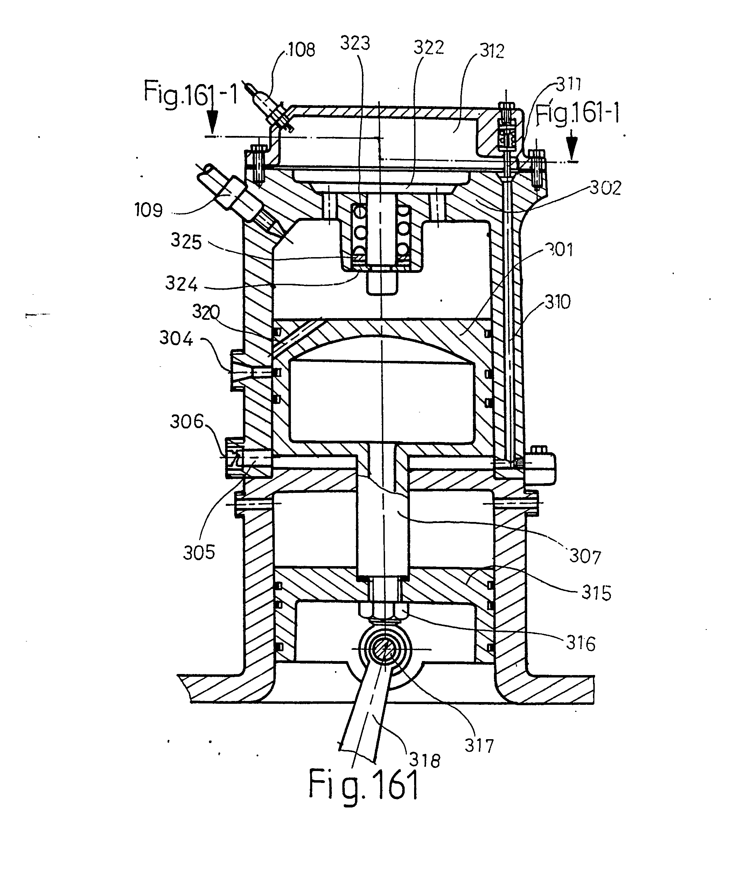

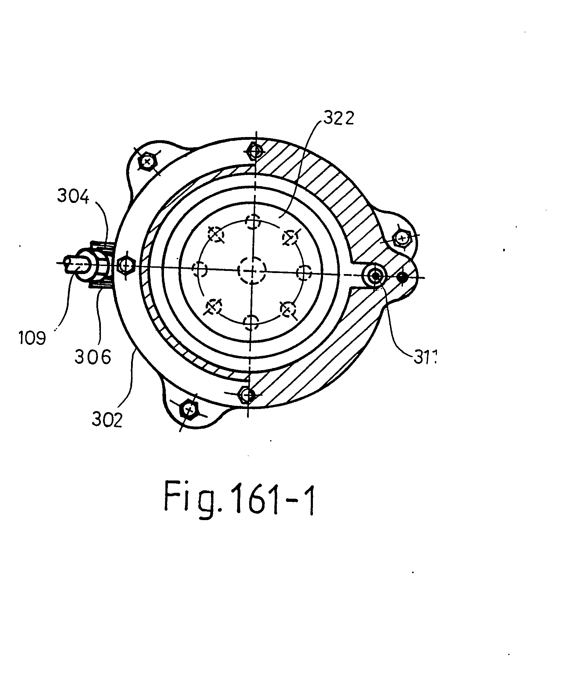

Figs. 161, 161-1 are the graphic views of the embodiment of compound fuel drive which possesses plug and fuel nozzle.

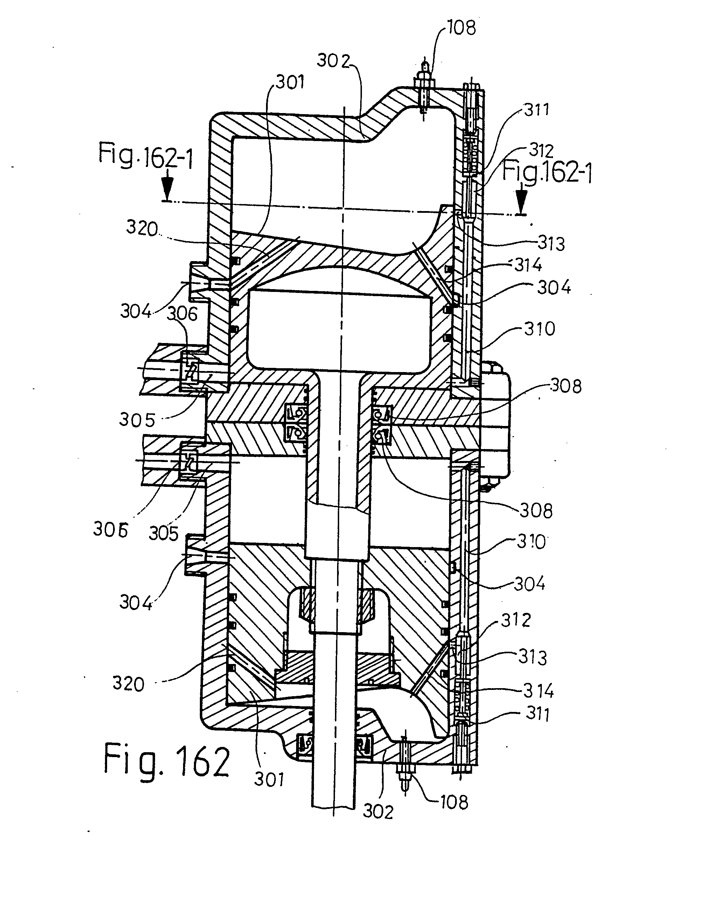

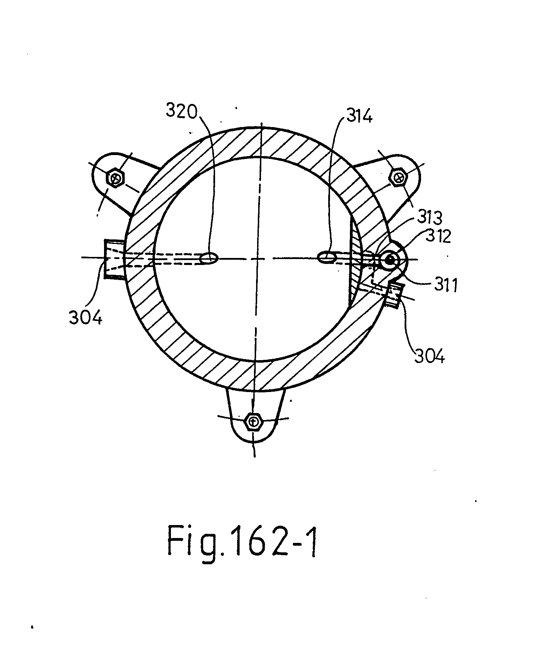

Figs. 162, 162-1 are the graphic views of the opposite coupling structure of the embodiment as shown in Figs. 156, 156-1.

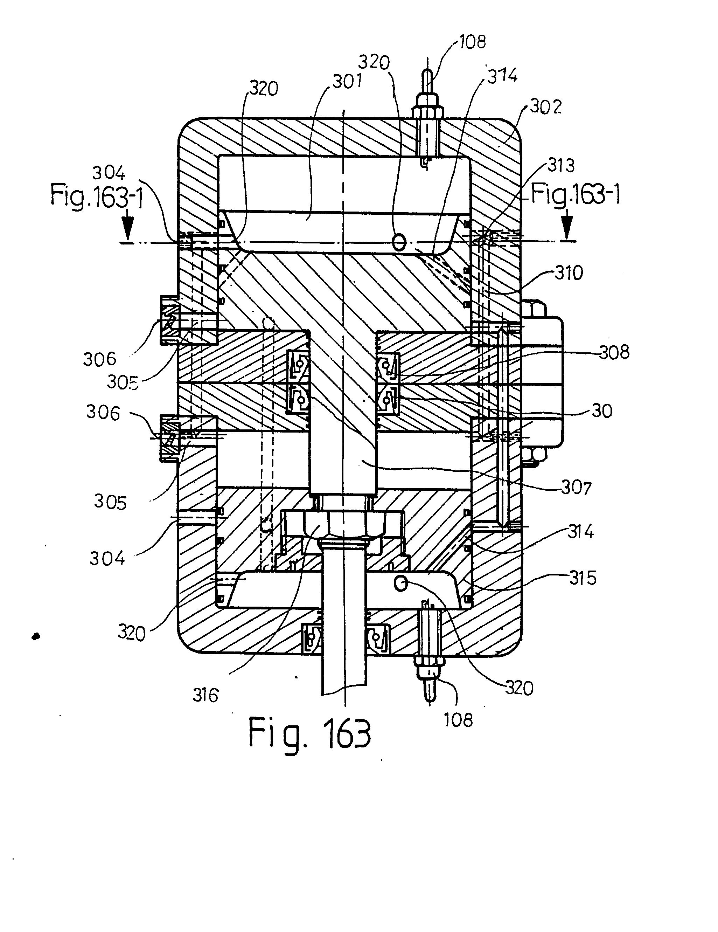

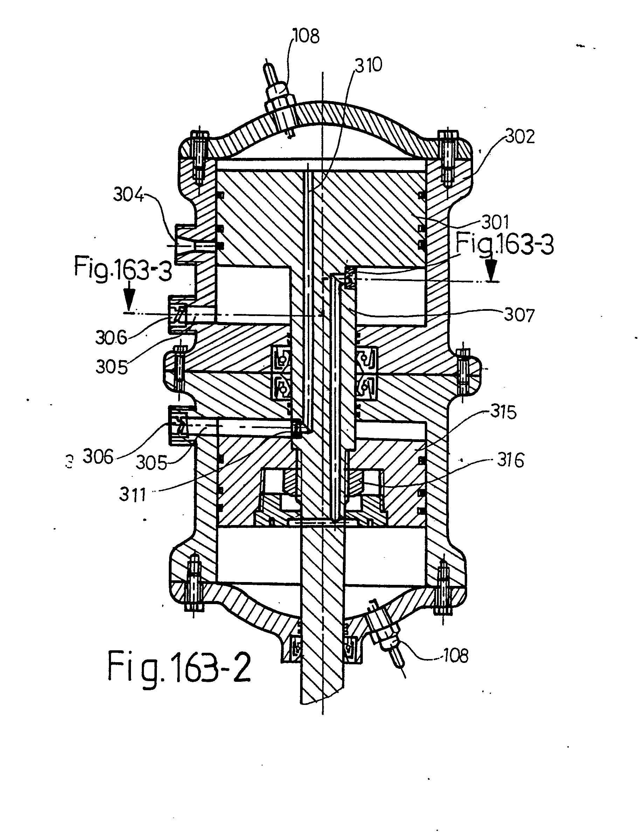

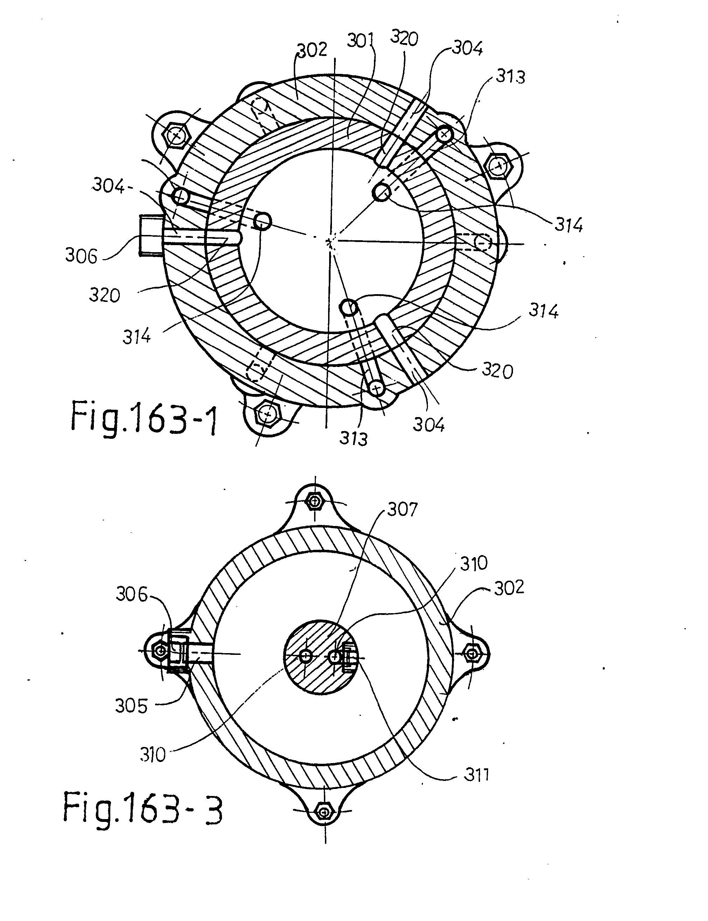

Figs. 163-2, 163-3 are the graphic views of the opposite coupling structure of the embodiment of Figs. 156, 156-1 which assembles gas guide passage in the piston.

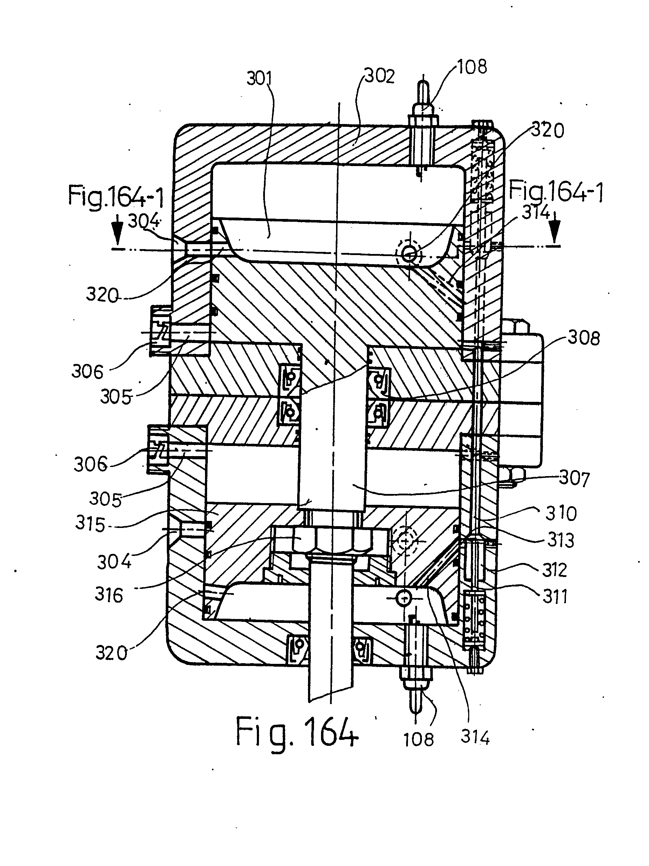

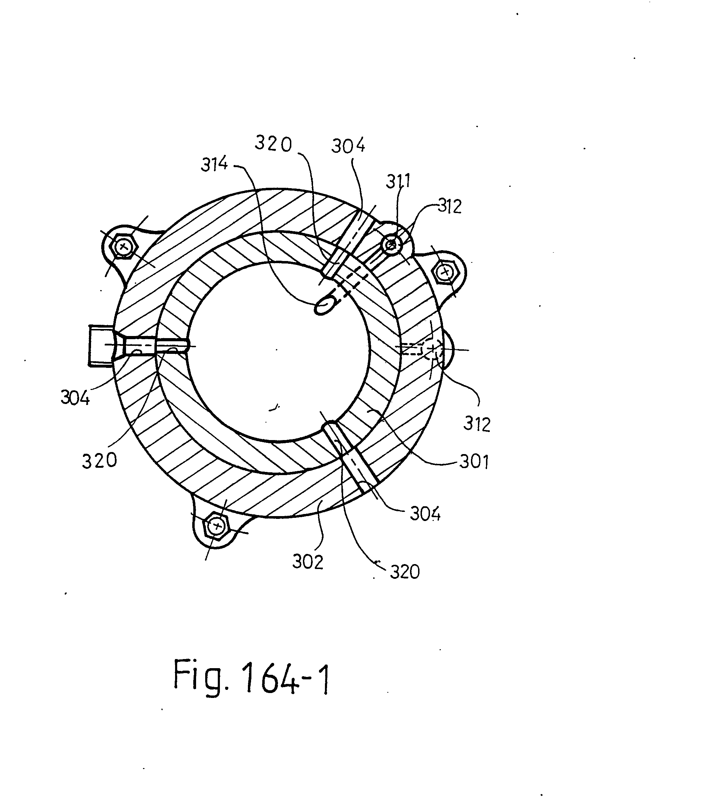

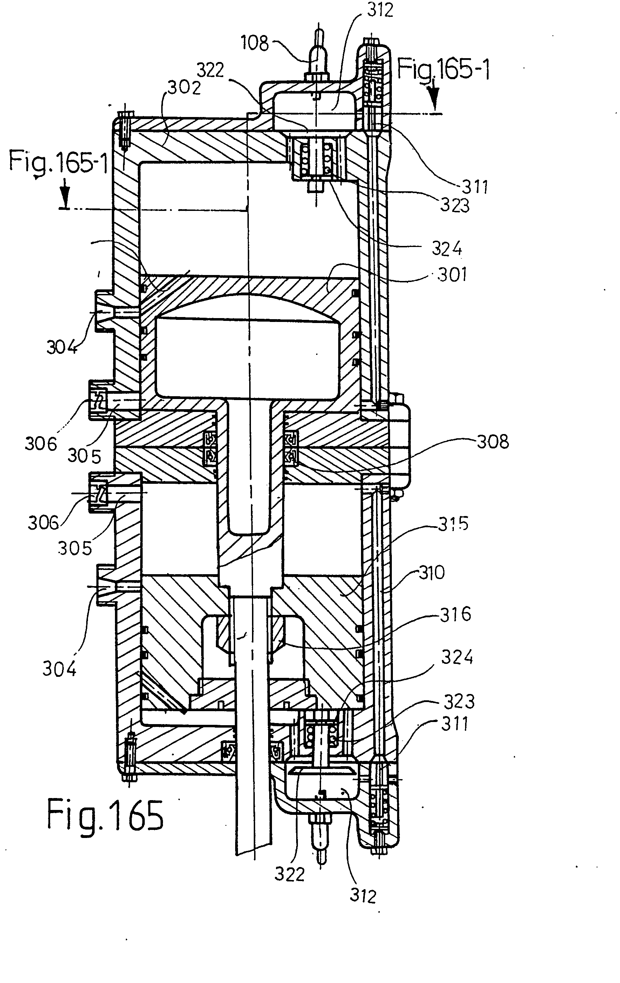

Figs. 164, 164-1 are the graphic views of embodiment of the opposite coupling structure as shown in Figs. 157, 157-1.

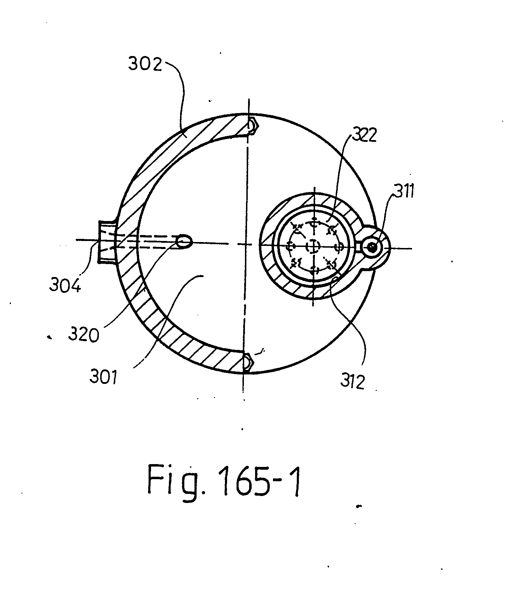

Figs. 165, 165-1 are the graphic views of embodiment of the opposite coupling structure as shown in Figs. 159, 159-1.

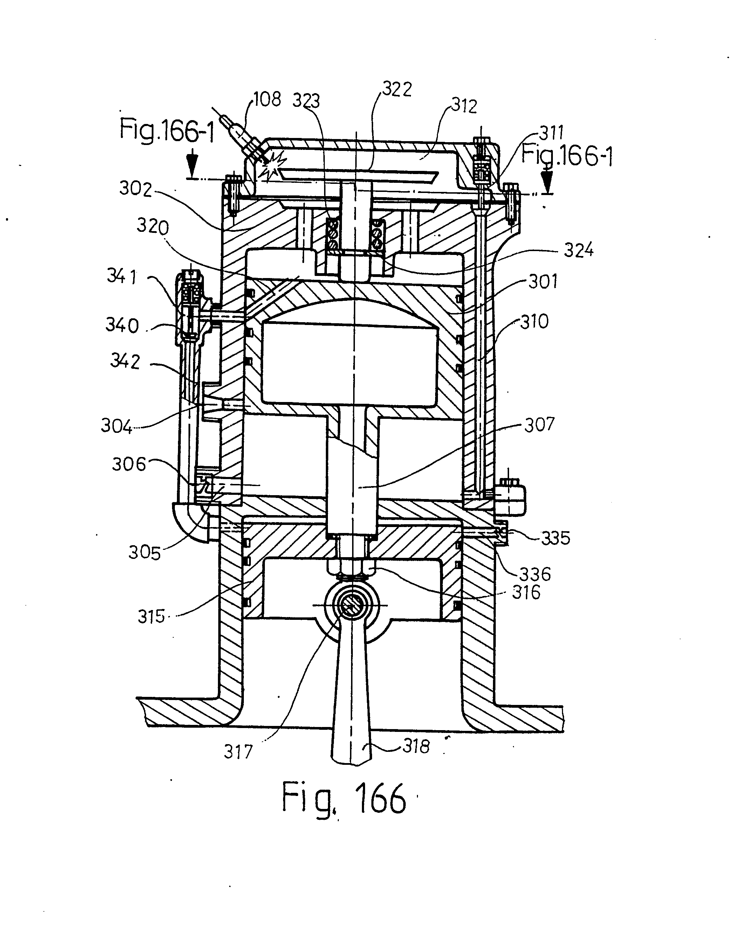

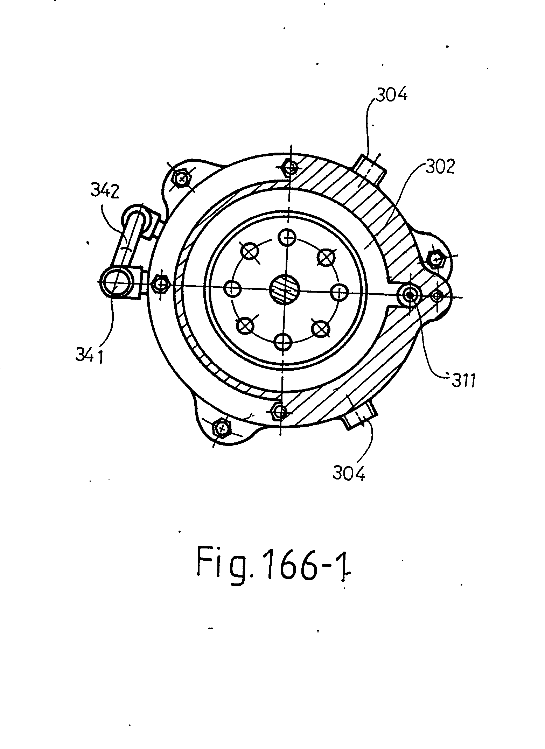

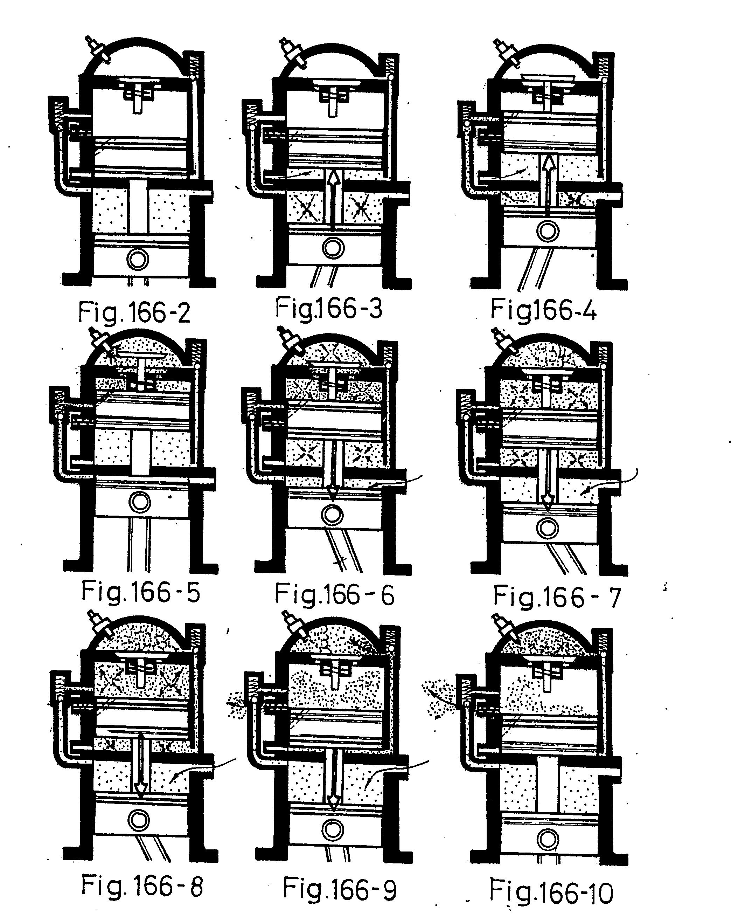

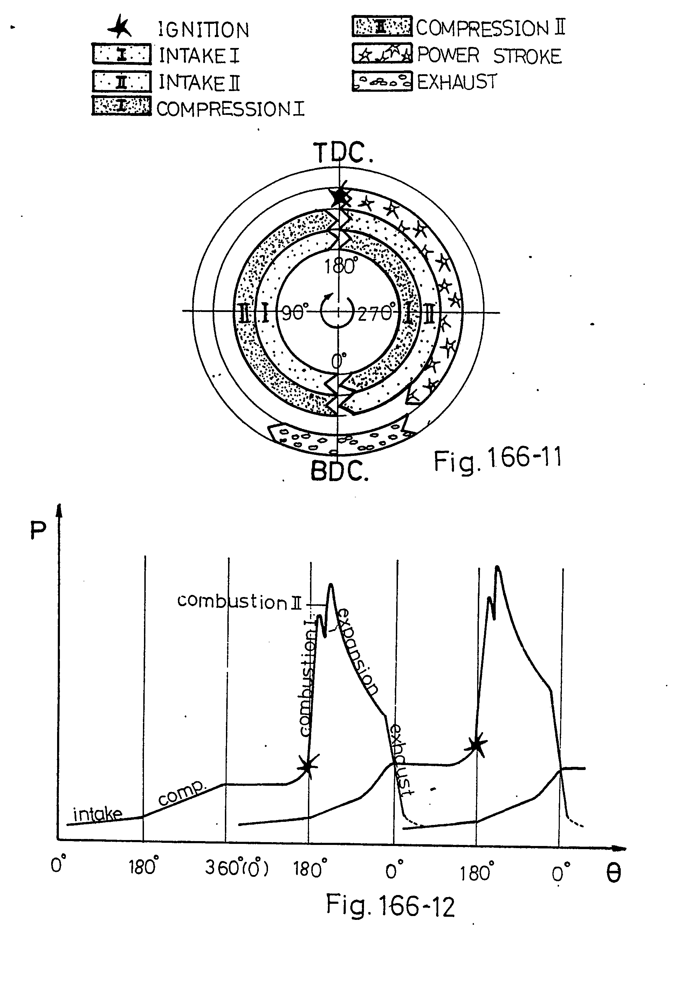

Figs. 166, 166-1 are the graphic views of embodiment which uses the stable piston of Figs. 155, 155-1 to form twice help combustion intake pressure gas chamber.

Figs. 166-2 to 166-10 are the working procedure diagram of the embodiment of Figs. 166, 166-1.

Fig. 166-11 is the working angle distribution diagram of embodiment of Figs. 166, 166-1.

Fig. 166-12 is a pressure curve diagram of the embodiment of Figs. 166, 166-1.

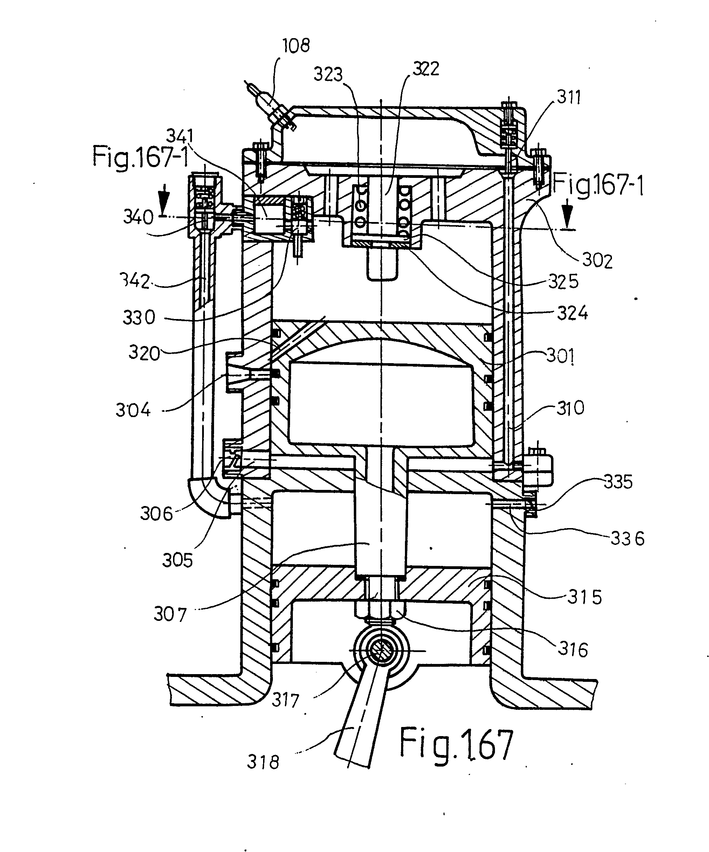

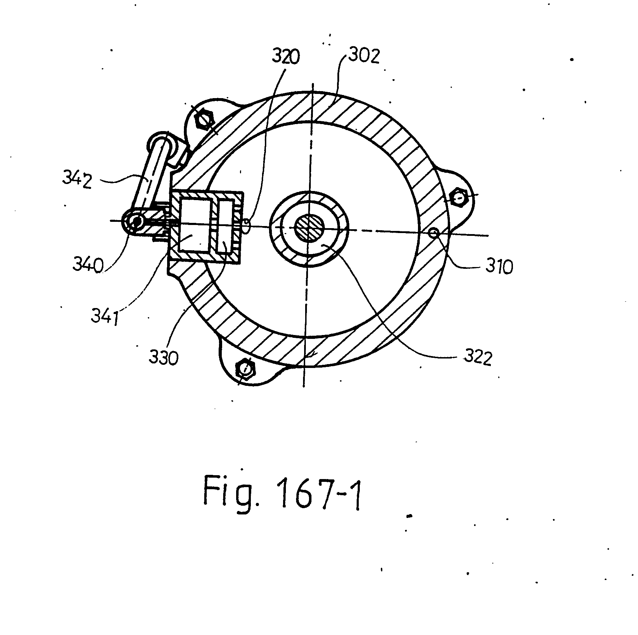

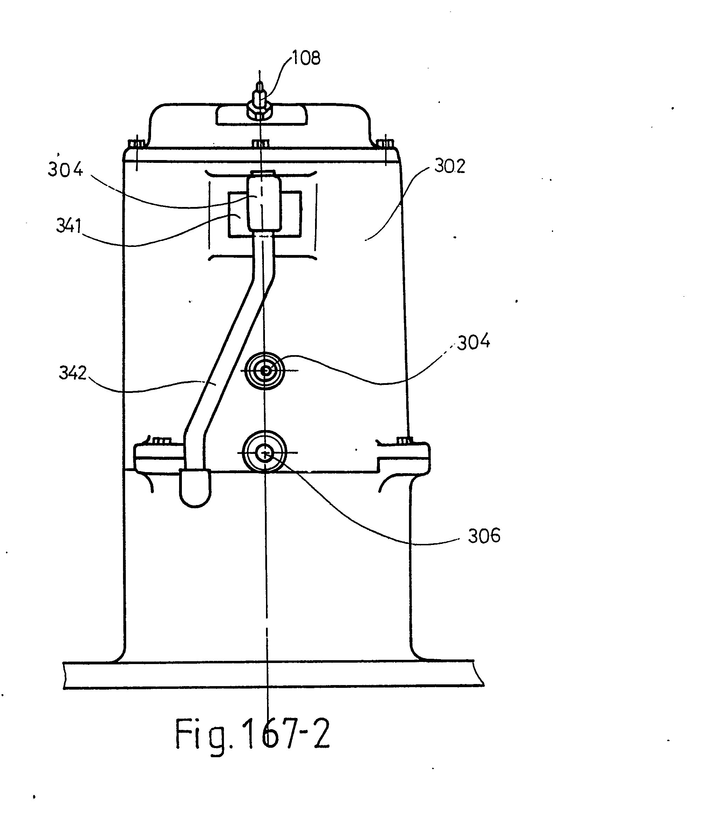

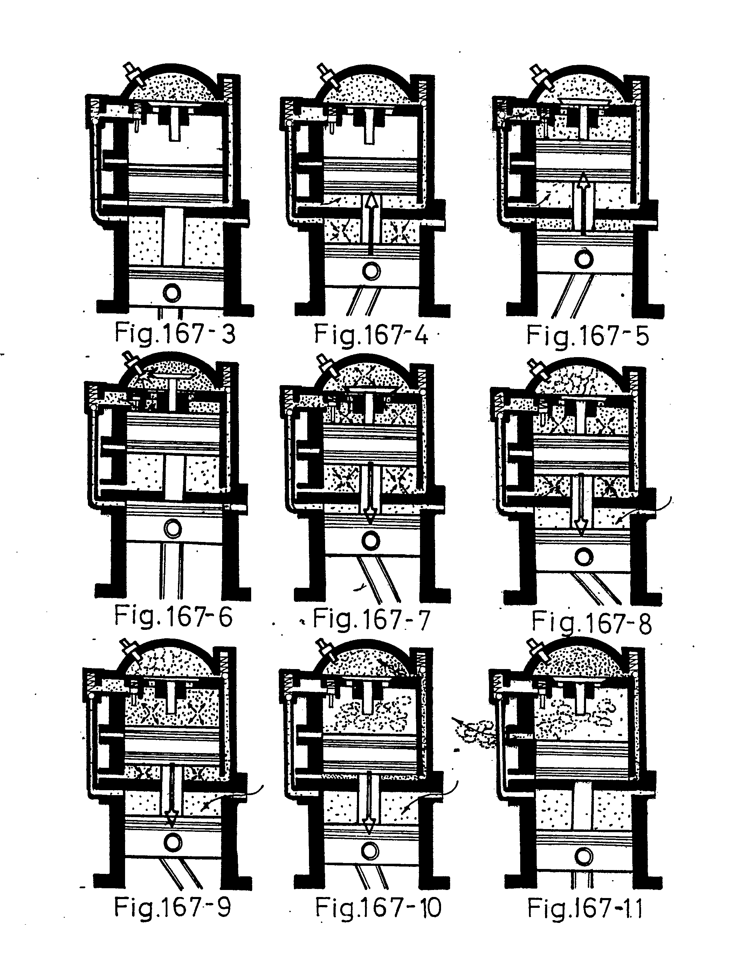

Figs. 167, 167-1, 167-2 are the graphic views of the embodiment which uses actuating valve to operate twice help combustion pressure-saved gas chamber.

Figs. 167-3 to 167-11 are the working procedure diagram of the embodiment of Figs. 167, 167-1.

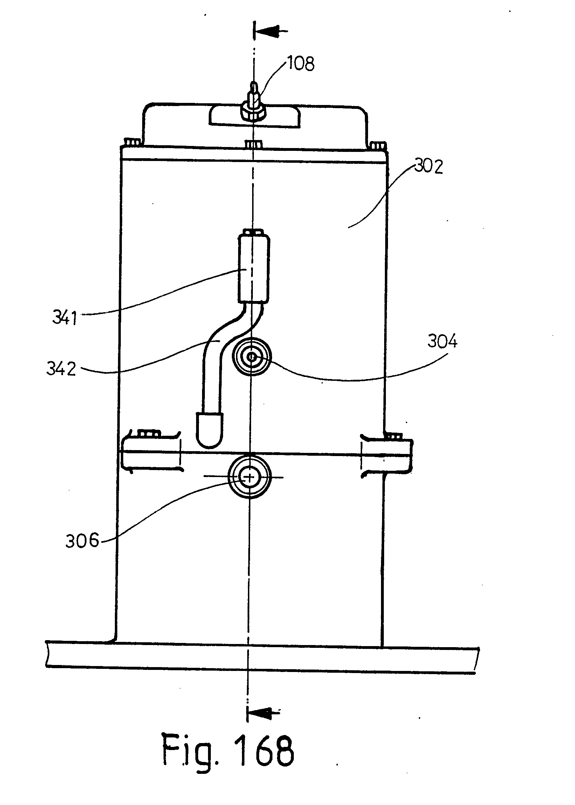

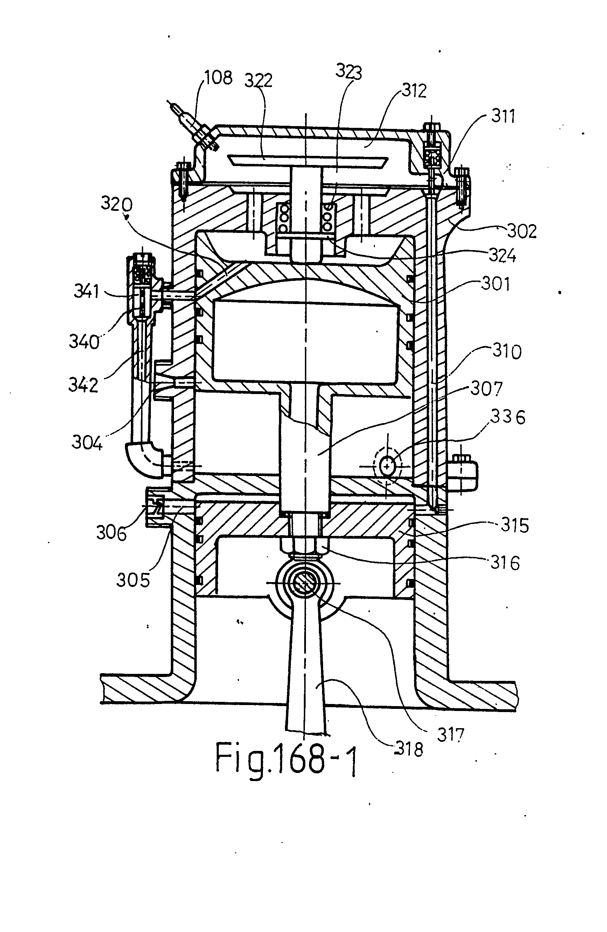

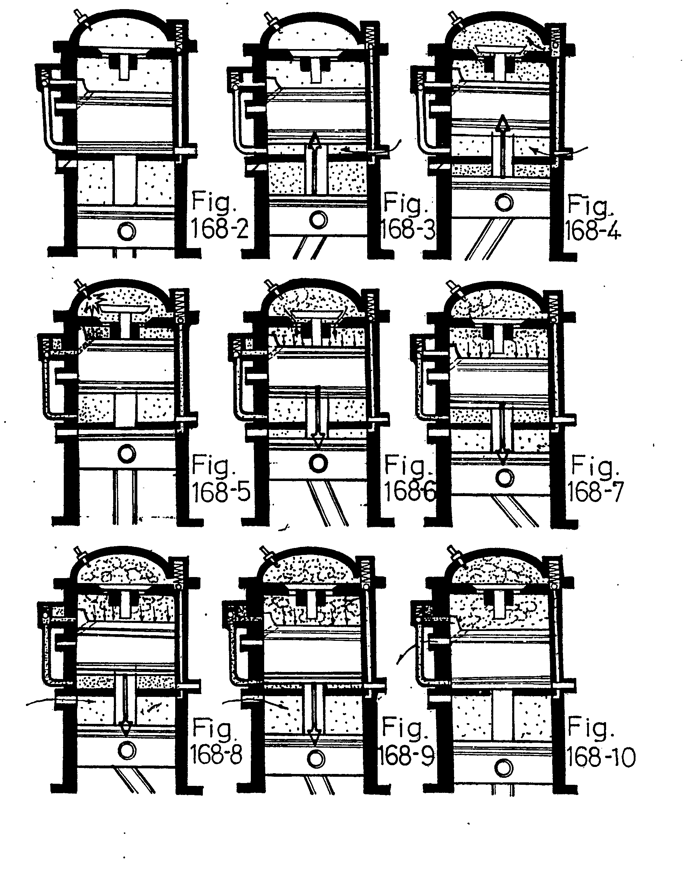

Figs. 168, 168-1 are the graphic views of embodiment of Figs. 159, 159-1, wherein the lower side of piston is formed as twice help combustion intake pressure gas chamber.

Figs. 168-2 to 168-10 are the working procedure diagrams of the emboviment of Figs. 168, 168-1.

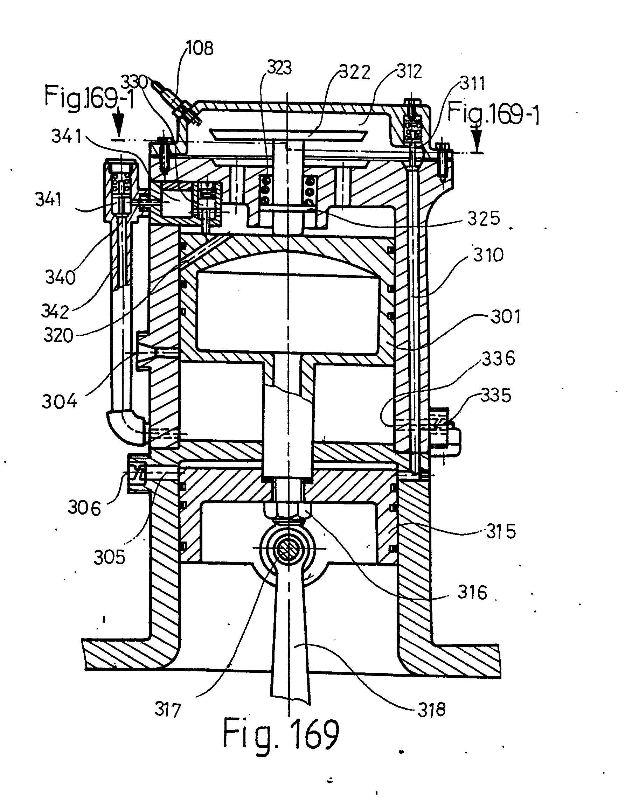

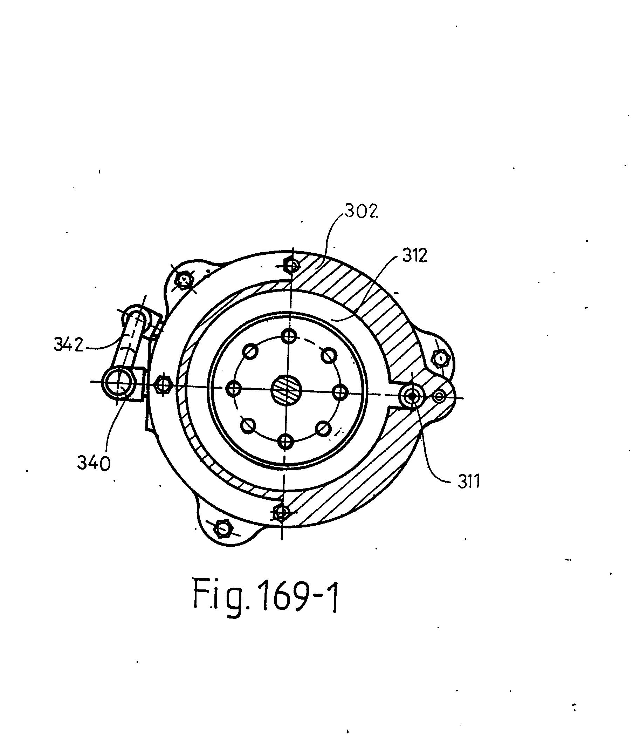

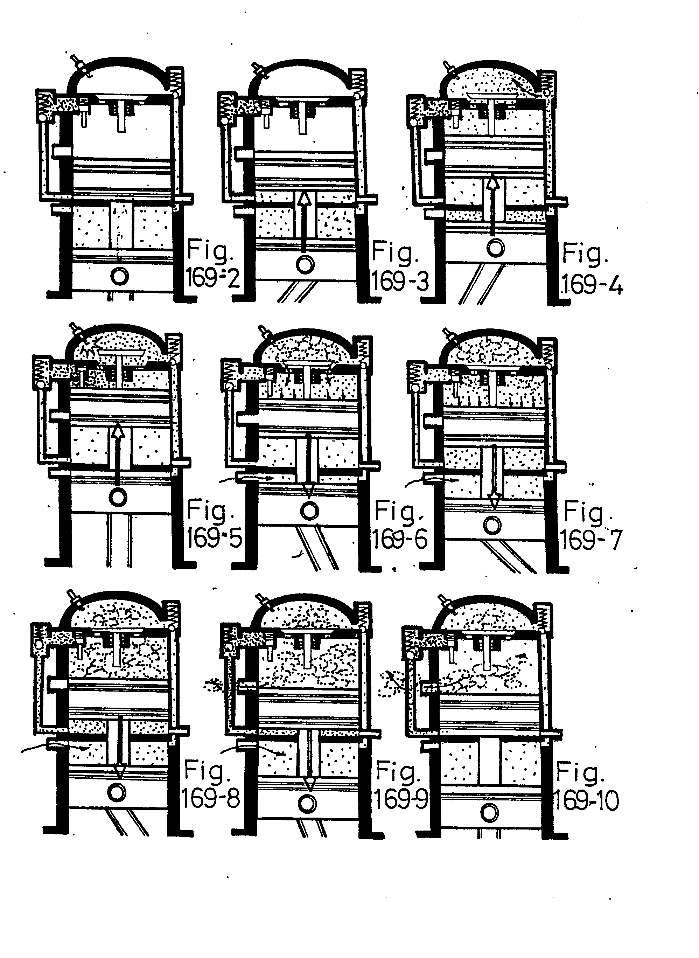

Figs. 169, 169-1 are the graphic views of embodiment as shown in Figs. 169, 169-1, wherein actuating type valve is used to operate twice help combustion pressure-saved gas chamber.

Figs. 169-2 to 169-10 are the working procedure diagram of embodiment as shown in Figs. 169, 169-1, wherein actuating type valve is used to operate twice help combustion pressure-saved gas chamber.

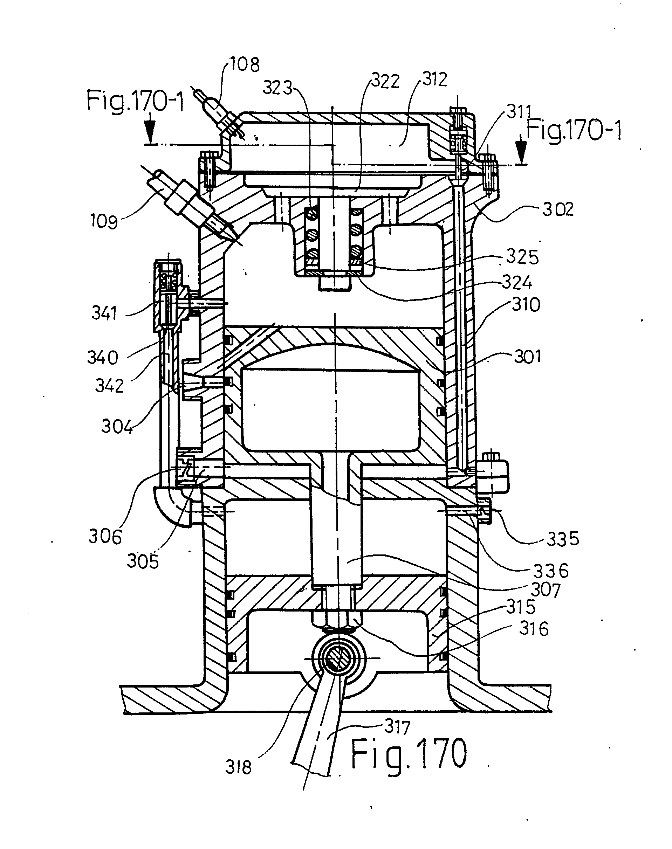

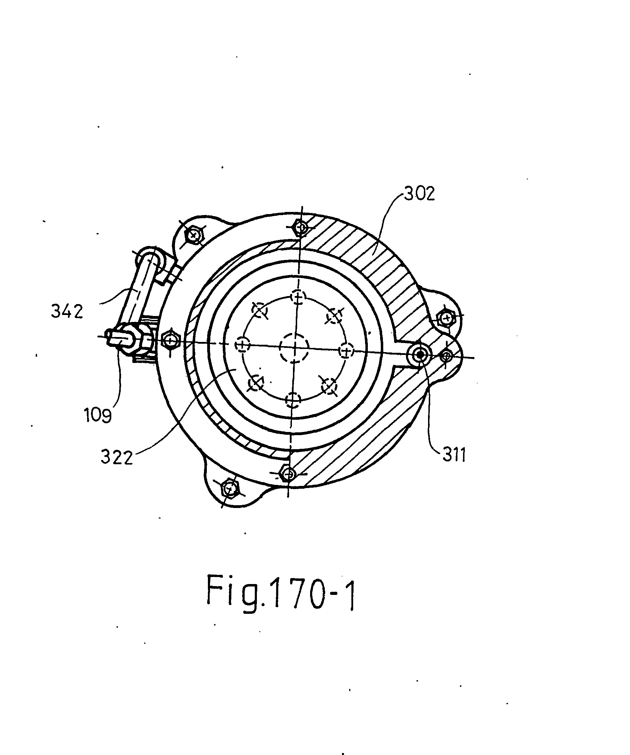

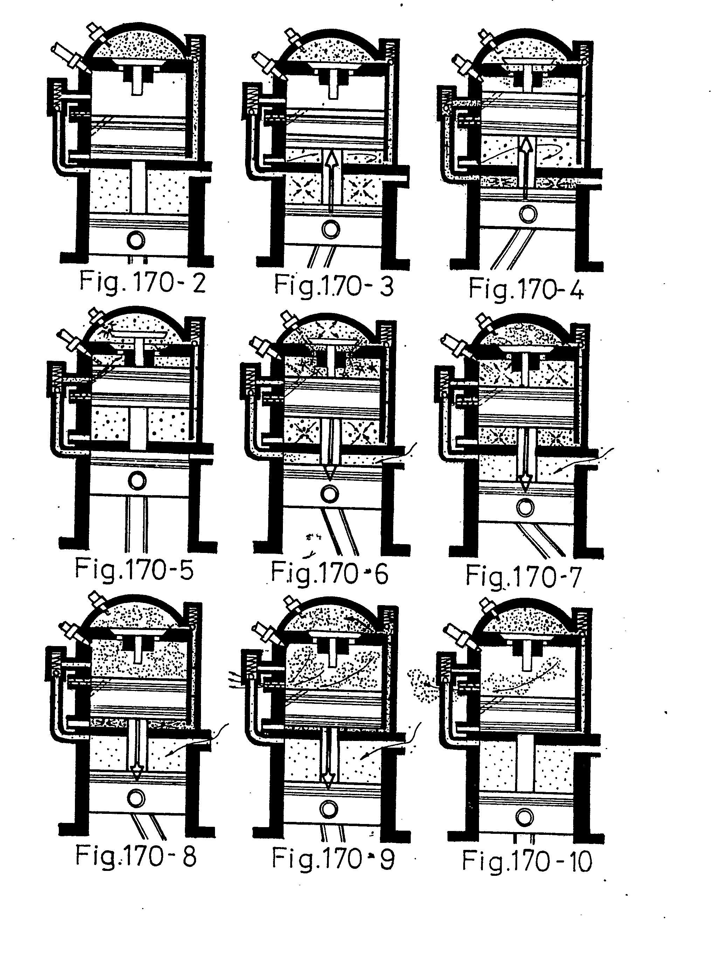

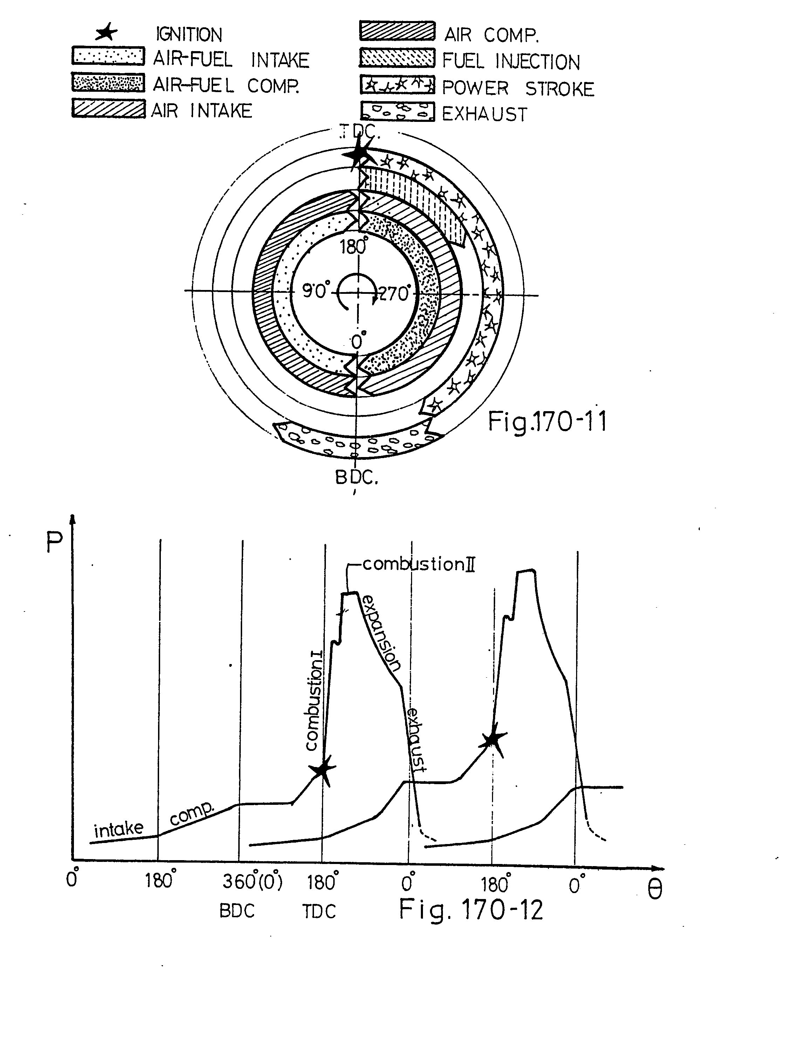

Figs. 170, 170-1 are the graphic views of embodiment of compound fuel engine which possesses twice help combustion function.

Figs. 170-2 to 170-10 are the working procedure diagrams of embodiment as shown in Figs. 170, 170-1.

Fig. 170-11 is the working angle distribution diagram of embodiment as shown in Figs. 170, 170-1.

Figs. 170-12 is a pressure curve diagram of embodiment as shown in Figs. 170, 170-1.

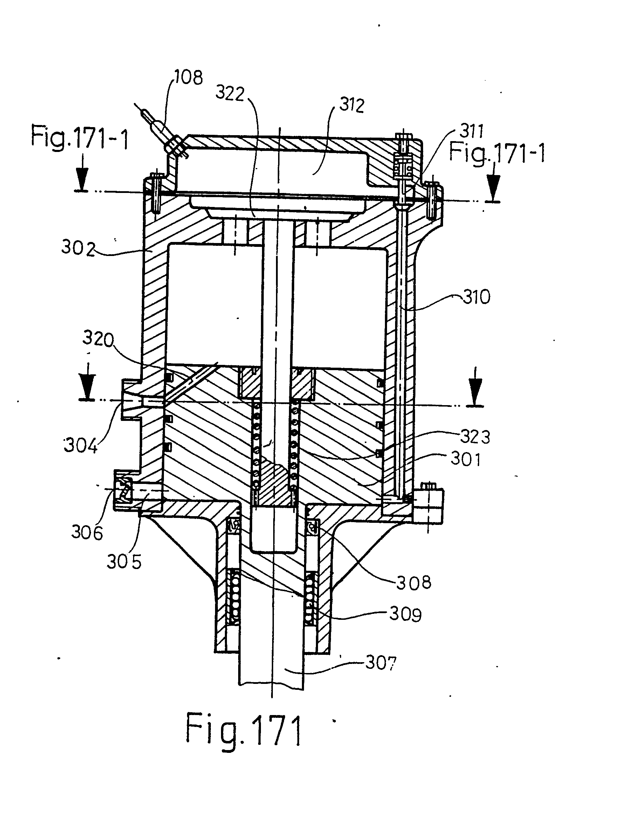

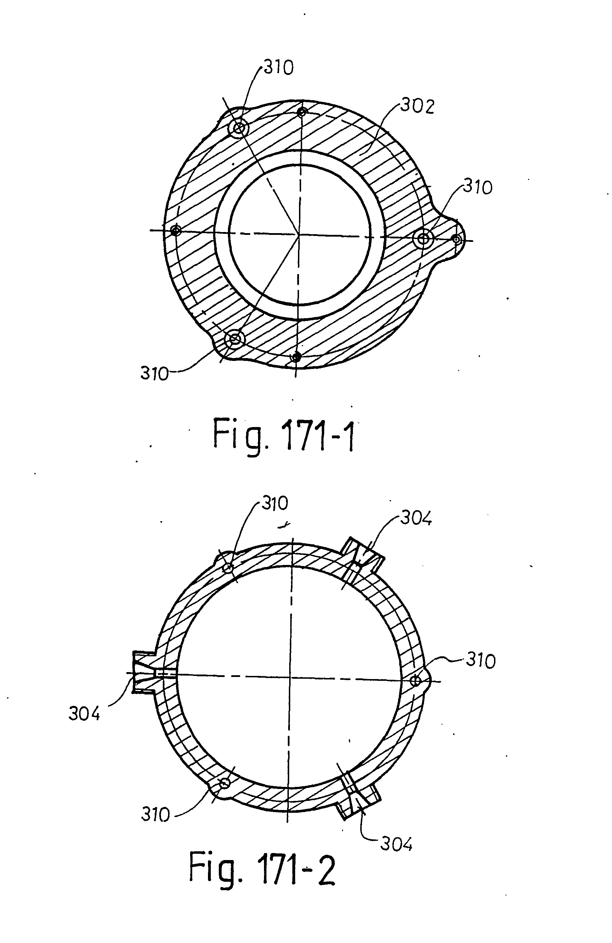

Fig. 171 is a graphic view of embodiment of actuating type exchange valve structure which is placed in the piston.

Fig. 171-1 is a graphic view of cross section of embodiment of each set of gas guide passage.

Fig. 171-2 is a graphic view of cross section of embodiment of each set of pressure-saved gas chamber.

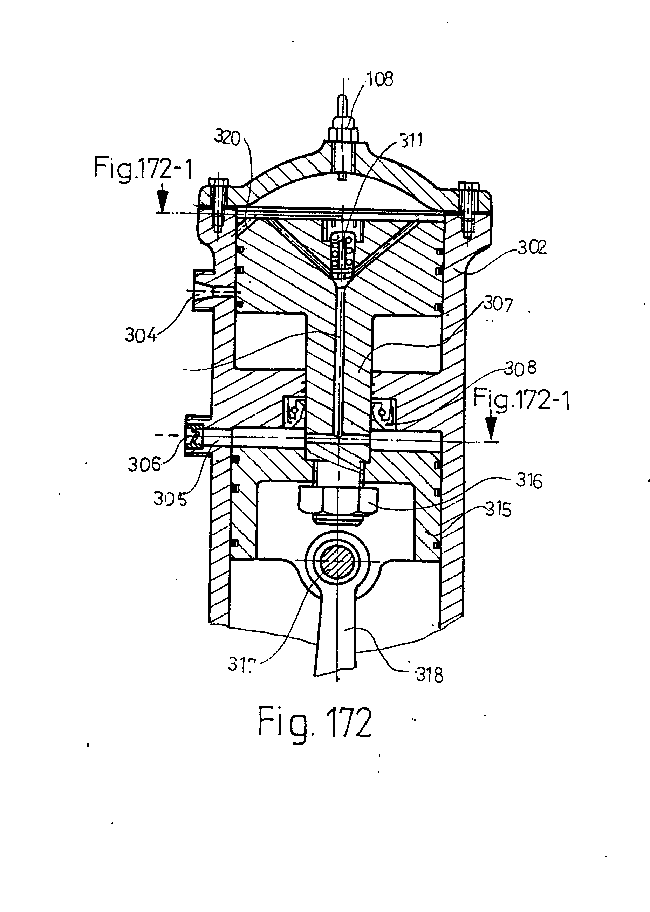

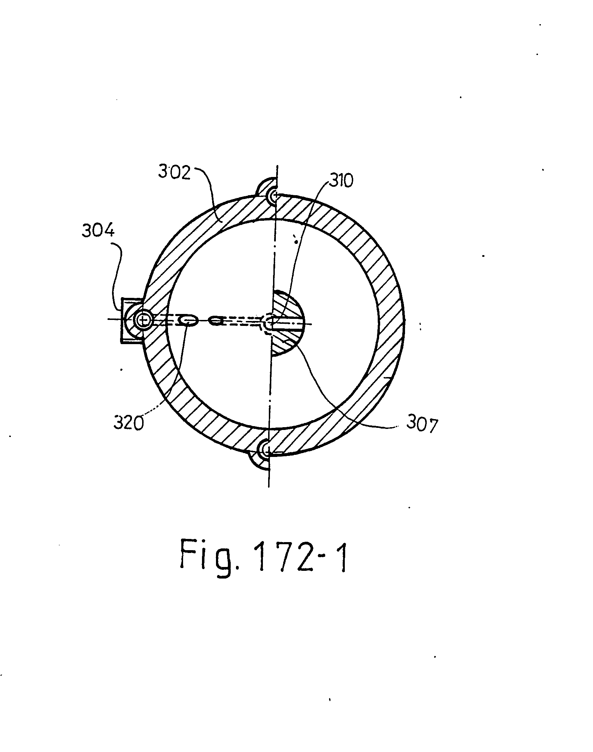

Figs. 172, 172-1 are the graphic views of the first embodiment wherein gas guide passage is placed in the piston.

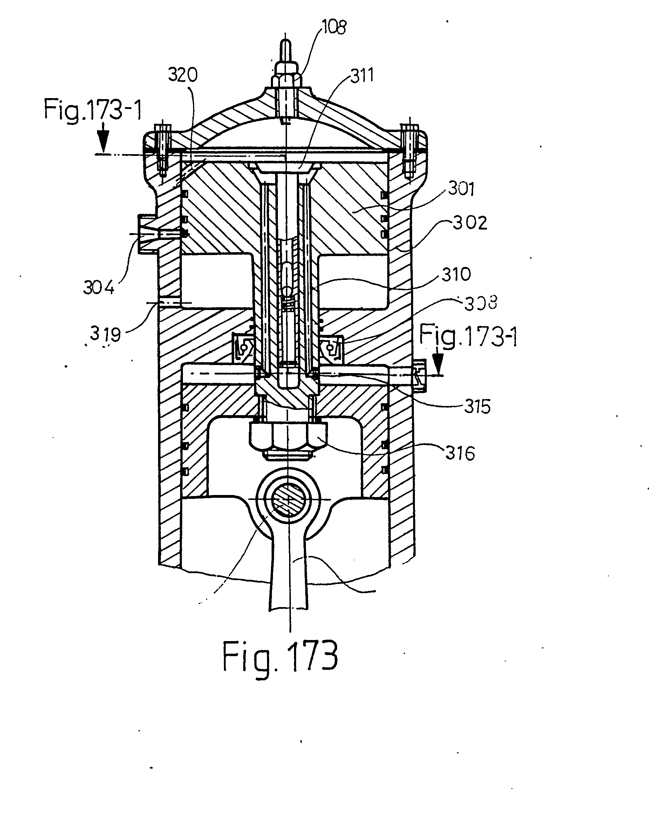

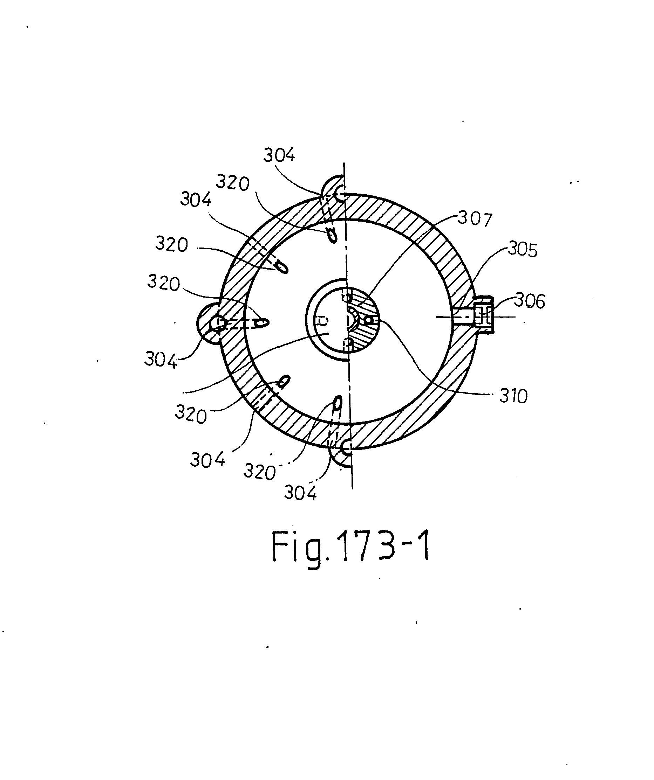

Figs. 173, 173-1 are the graphic views of the second embodiment wherein gas guide passage is placed in the piston.

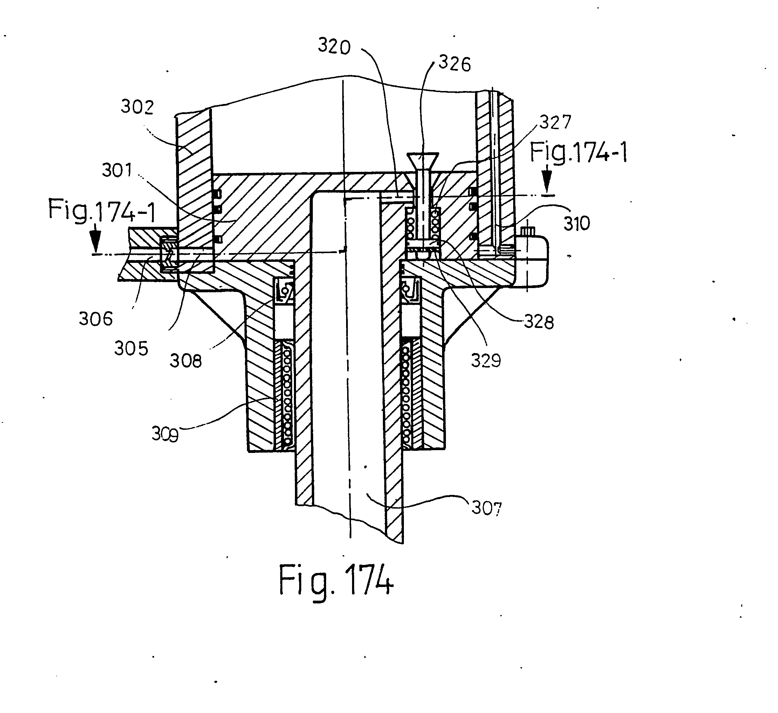

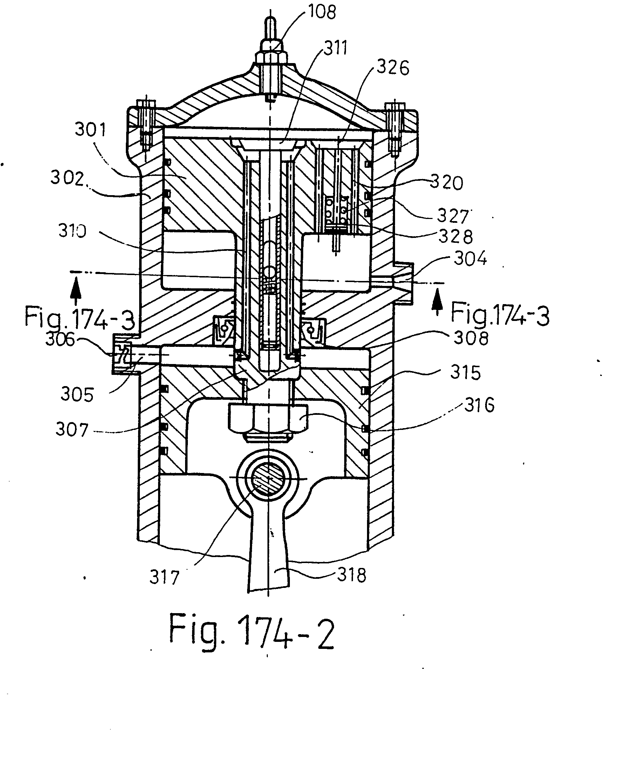

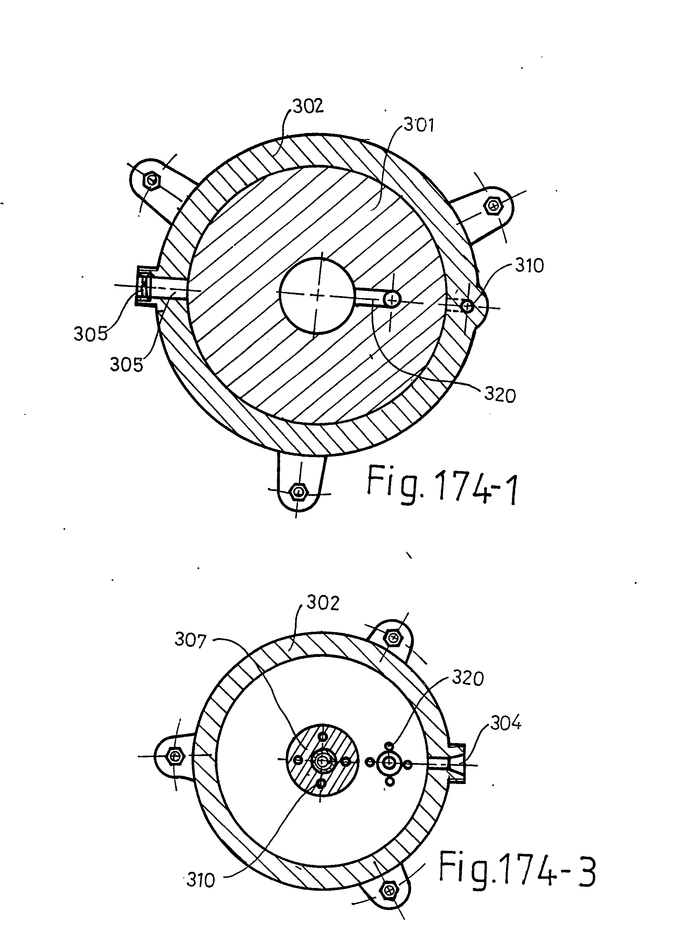

Figs. 174, 174-1 are the graphic views of embodiment wherein exhaust valve is placed in the piston.

Figs. 174-2, 174-3 are the graphic views of embodiment wherein double piston possesses gas guide passage, one-way valve and activating type exhaust valve.

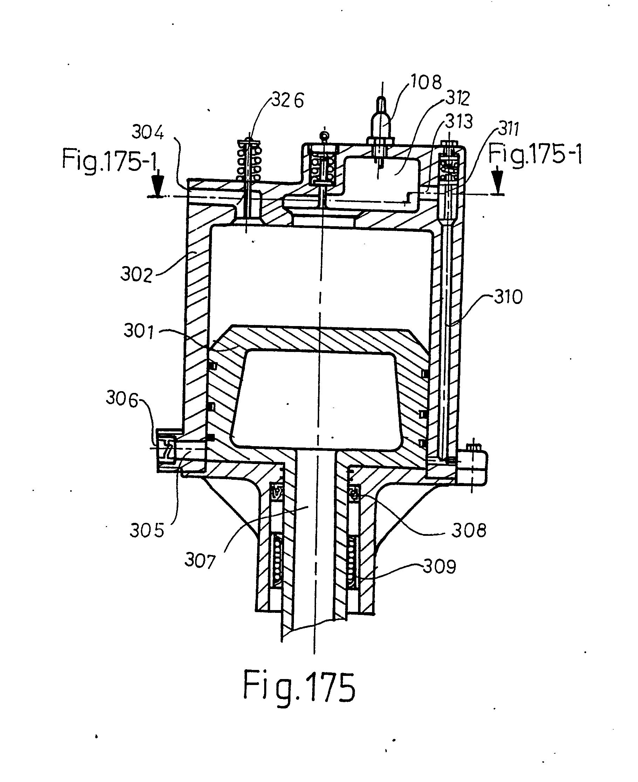

Figs. 175, 175-1 are the graphic views of embodiment wherein intake valve, exhaust valve and exchange valve help combustion valve and are driven by an externally added eccentric cam.

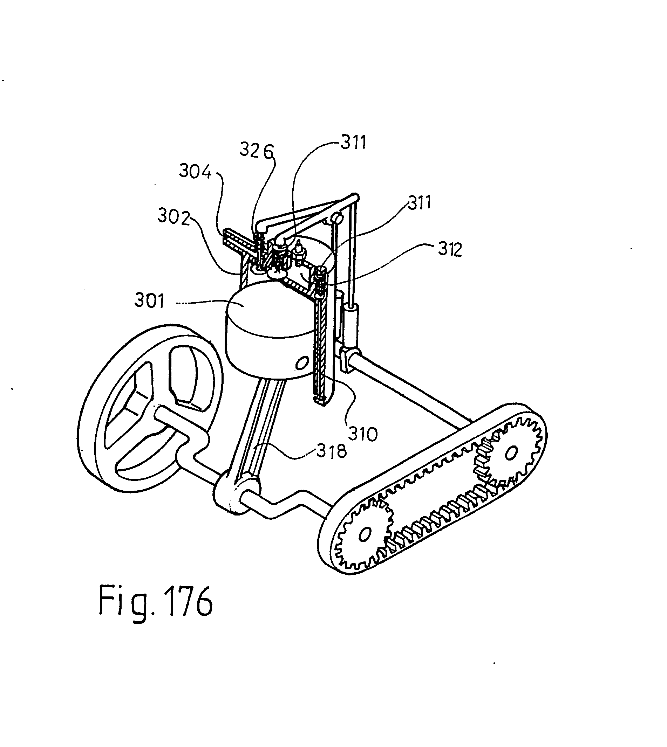

Fig. 176 is a graphic view of embodiment wherein intake valve, exhaust valve and exchange valve, help combustion valve are driven by an externally added accentric cam.

Numbers indicated in the specification are listed as follows:

101: Gate plate set one-way intake valve

101′: Gate plate set one-way intake valve

102: Pressure-saved chamber in gate plate set

103: Guide hole of gate plate set

104: Intake compressive gas chamber Cx

104′: Guide transverse groove of intake compressive gas chamber

104″: Turning type guide transverse groove

105: Explosive exhaust gas chamber Cy

105′: Guide transverse groove of explosive exhaust gas chamber

105″: Concave chamber for placing plug or fuel nozzle

105‴: Longitudinal crack of gas chamber set

106: Common gate plate set GC

107: Gate plate seat

108: Plug

109: Fuel nozzle

110: Intake groove

EP 0 397 996 A2

110′: Intake hole

110″: Transverse intake hole

111: Exhaust groove

111′: Exhaust hole

111″: Transverse exhaust hole

112: Intake guide groove

113: Exhaust guide groove

114: Hollow rotary axle

115: Intake axial hole

115′: Help combustion intake axial hole

116: Intake side wall transverse hole

116′: Help combustion side wall transverse hole

117: Exhaust axial hole

118: Exhaust side wall transverse hole

119: Common gas chamber set

119′: Guide transverse groove of common gas chamber set ( for the use of intake )

119″: Guide transverse groove of common gas chamber set ( for the use of exhaust )

120: Front guide gate plate set

121: Clockwise driving gate plate set

122: Counterclockwise driving gate plate set

123: Terminal sub-gate

125: Main spring of gate plate set

126: Pressure adjusting plug

130: Oil groove

150: Pressure release valve

151: Adjusting plug for pressure-saved gas chamber

152: Screw hole or grooved structure of active body for independent pressure-saved gas chamber to be assembled into

160: Externally added exchange gas guide pipe

161: Hole structure of active body for placing exchange gas guide pipe 160

165: Partition plug in the hollow rotary axle

166: Radial hole on the hollow rotary axle

167: Turbine vane

168: Ringed chamber at input side

169: Ringed chamber at output side

170: Fixed side cover

171: Joint ring

172: Snail vane

172′: Radial vane

173: Internal rotor of engine

174: Gas guide chamber

175: Ring surface of front side of stator housing

176: Radiating fuide hole of stator housing

177: Radial cooling fin

212: Intake end opening of hollow rotary axle

213: Exhaust end opening of hollow rotary axle

231: Close plug for intake end opening of hollow rotary axle

232: Close plug for exhaust end opening of hollow rotary axle

235: Seal ring type structure coupled with intake port of hollow rotary axle

235′: Seal ring type structure coupled with help combustion intake port of hollow rotary axle

236: Seal ring type structure coupled with exhaust port of hollow rotary axle

240: Intake transmission structure having arc or ring guide groove

240′: Help combustion intake transmission structure having arc or ring guide groove

241: Exhaust transmission structure having arc or ring guide groove

301: Double-face piston

302: Cylinder body

304: Reciprocating exhaust port

305: Reciprocating intake port

20

EP 0 397 996 A2

306: Valve of intake port
307: Output axle
308: Sealing ring
309: Bearing
310: Reciprocating gas guide passage
311: Checked valve
312: Pressure-saved gas chamber
313: Outlet of gas guide passage
314: Intake guide hole
315: The second piston
316: Fixing screw of the second piston
317: Crank pin
318: Crank
319: Gas release port
320: Gas guide groove or hole of piston
321: The second exhaust port
322: Transmission valve
323: Return spring
324: Retaining ring
325: Washer
326: Tongue of exhaust valve
327: Return spring of exhaust valve tongue
328: Retaining ring of exhaust valve tongue
329: Seal ring of exhaust valve tongue
330: Intake valve tongue placed between cylinder body help combustion gas chamber and combustion chamber
335: Intake valve of twice help combustion gas chamber
336: Intake port of twice help combustion gas chamber
340: One-way valve of twice help combustion intake port
341: Twice help combustion pressure-saved gas chamber
342: Gas guide passage of twice help combustion gas chamber
1010: Hole or groove type gas guide passage placed between two gate plates Gx, Gy of active body
1020: Intake hole of GTx
1030: Exhaust hole of GTy
1033: Penetration hole of gate plate set GS
1040: Intake compressive gate plate Gx
1041: Inclined cracked angle of intake compressive gate plate Gx
1042: Turbulent flow gate
1043: Hole type end face of turbulent flow gate
1044: Barrier type end face of turbulent flow gate
1045: Intake compressive gate plate Gx which possesses transverse guide hole
1046: Gate body of gate plate set GP which possesses penetration hole
1047: Penetration hole of front guide gate plate set
1050: Explosive exhaust gate plate Gy
1051: Inclined cracked angle of explosive exhaust gate plate Gy
1055: Explosive exhaust gate plate which possesses transverse guide hole
1060: Exchange gas chamber
1060': Independent pressure-saved gas chamber
1060": Auxiliary pressure-saved gas chamber
1061: Column type turbulent flow body
1062: Barrier type turbulent flow body
1063: Hole type turbulent flow body
1064: Granule type turbulent flow body
1065: Curved type turvulent flow guide groove
1066: Multi-set tiny tubular type turbulent flow guide groove
1074: Gate plate seat of intake compressive gate plate
1075: Gate plate seat of explosive exhaust gate plate
1241: Spring of terminal sub-gate

21

1251: Independent driving spring of each unit gate of combination type gate

DETAILED DESCRIPTION OF THE INVENTION:

A. Common gate plate type internal combustion unit with exchange gas chmaber and separate gas chamber:

CONCEPT:

One-way or two-way drive rotary or linear internal combustion engine with pressure-saved gas chamber and separate gas chamber, its main constitutions are:

Common gate plate set GC is designed in active body; and at least one set of common gate plate GC is placed on it, its characteristic is that the section toward motion is square shape or arc shape or wave shape or labyrinth shape, under the surface toward motion, there is a one-way intake valve which is used for fuel gas to enter into, its inner part possesses a pressure-saved gas chamber and at the upper of lagging end, there is a transmission guide hole, furthermore, it possesses intake exhaust gate plate GC and leading gate plate set of linear engine and two-way drive right rotating common gate plate set GCF, reverse rotating common gate plate set GCR, its characteristic is to design one-way intake valve at leading end, in which, there is pressure-saved gas chamber, at lagging end, there has a transmission guide hole, and all of these three structures are connected, distances among transmission guide hole, gate plate and contact end of gas chamber are higher than one-way intake valve, at contact end of transmission guide hole and gas chamber, there has terminal sub-gate which is pre-driven by spring and its terminal possesses guide hole or barrier, its constriction depends on the adjustment of static pressure of spring pressed on common gate plate set and under the normal working condition which the guide hole or barrier is hidden in the end of common gate plate set and extends out to let guide hole or barrier expose to the end of common gate plate set under leisured status, outlet end of transmission guide hole of above-mentioned common gate plate can further design pneumatic seal ring for reducing loss of leaking gas at low speed, in gate plate seat, there possesses a guide groove for placing common gate plate set GC, on common gate plate set GC, there designed driving spring for adding static pressure on common gate plate set GC, on the spring, there has an adjusting cover for adjusting up and down to press spring and adjust the static pressure of spring pressed on common gate plate set GC.

Passive body with serial connection gas chamber: it possesses at least a set of unequal depth, equal length or unequal length gas chamber sets Cy, Cx to connect in series along driving trace to form gas chamber sets Cx, Cy; wherein gas chamber Cx is shallower, gas chamber Cy is deeper, the sectional shapes of both of them along motion direction are same, and can closely joint with common gate plate GC, the largest depth of gas chamber Cx is used for its gate plate GC to slide into, and let one-way intake valve on GC completely face toward the gas in gas chamber Cx which will be compressed, in the meantime, transmission guide hole is still hidden and sealed in the gate plate sliding seat, the leading end of gas chamber Cy possesses a largest depth for gate plate GC to slide down, and transmission guide hole will completely expose in order to guide high pressure gas saved in the pressure-saved gas chamber of gate body into explosive exhaust gas chamber Cy, at the leading end of gas chamber Cy, there assembled a transverse crack for placing plug, or fuel nozzle, the deepest part of gas chamber section stridden by guide transverse groove can keep transmission guide hole hidden in the seat of gate plate, the leading end of gas chamber Cy is deeper and the lagging end is gradually shallow which is used for common gate plate to hide into gate plate seat and store high pressure gas in the sealed pressure-saved gas chamber after combustion, its hiding point is between igniting explosion point and exhaust point, the above-mentioned serial connection method of Cx and Cy can connect singly-set of gas chamber Cx and Cy in series or multi-set gas chamber Cx connects with single-set of gas chamber Cy in series, and furthermore, at least two sets of common gas chamber set CC are connected in series each other along trace of motion, its characteristic is that according to rotary direction, the depth varies from the deep to the shallow, the depth of leading section can make transmission guide hole of common gate plate GC expose out, and the output of fuel gas in the pressure-saved gas chamber can inginite and produce dynamics, the lagging shallower section can limit common gate plate set GC only to expose out of one-way intake valve, and let transmission guide hole hide into gate plate sliding seat.

Plug or fuel nozzle : it is assembled at the lagging end of common use gate plate set GC on active body which is used as fixing body and coupled with common gas chamber CC or guide transverse groove and can avoid the concave structure which is interfered by common use gas chamber.

INTAKE PORT: Groove or hole is placed on the active body or passive body which is used as fixing body, or groove or hole is placed on the active body or passive body which is used as motion body and leads to the supplying tube of fuel or help-combustion gas.

EXHAUST PORT: Groove or hole is placed on the active body or passive body which is used as fixing body, or groove or hole is placed on the active body or passive body which is used as motion body and leads to the exhaust pipe of waste gas.

This kind of structural method of rotary and linear type engine is the main characteristic of common gate plate serial connection gas chamber type and is combined by connecting in series with different depth gas chamber sets Cy, Cx along driving trace, and Cx, Cy are the structures of common use gate plates GC, GC as shown in Fig. 1 and Fig. 1-1, and its character is the section facing to the surface of motion is square shape or arc shape having wave or labyrinth type, at the lower side of gate plate facing to the surface of motion, there are one-way intake valve 101,101′ to let fuel gas enter into, and its inner part possesses a pressure-saved gas chamber 102, at the upper part of lagging surface, there is a transmission guide hole 103 as shown in Fig. 2 and 2-1, in this kind of structure, gas chamber Cx 104 is shallower, gas chamber Cy 105 is deeper , their sectional shapes along direction of motion are same and can closely joint with common gate plate GC 106, the largest depth of gas chamber Cx 104 is used for common gate plate GC 106 to slide into and can make one-way intake valve 101 of GC 106 completely face to the gas of gas chamber Cx 104 which will be compressed, and compress the gas and store it in the pressure-saved gas chamber 102, in the meantime, transmission guide hole 103 is still hidden in the gate plate sliding seat 107, and the leading end of gas chamber Cy possesses a larger depth for gate plate GC 106 to slide down, and transmission guide hole 103 completely expose out to guide high pressure gas stored in the pressure-saved gas chamber of gate body into explosive exhaust gas chamber Cy 105, and at the leading end of Cy, there assembled a guide transverse groove 105′ for placing plug 108 or fuel nozzle 109 for keeping the deepest part of gas chamber section stridden by guide transverse groove 105′.

Transmission guide hole 103 is under the status of hiding in the gate plate seat 107, and gas chamber Cy 105 passes through the deepest section and from the deep to the shallow to let common gate plate GC 106 be hidden into gate plate seat again, to seal high pressure gas stored in the pressure-saved gas chamber 102 after combustion, and its hiding point is between points of explosion and exhaust.

Outlet end of transmission guide hole 103 of common use gate plate GC 106 further assemble pneumatic seal ring for reducing the loss of leaking gas at low speed.

The serial connection method of above gas chambers Cx and Cy can be the serial connection of single-set gas chamber Cx and Cy or serial connection of multi-set gas chamber Cx and single-set gas chamber Cy.

According to the structural type, common gate plate type internal combustion engine with exchange gas chamber and separate gas chamber includes the following designs

    a. One-way drive common gate plate rotary type internal combustion engine includes:

        I. Design of internal rotor motion body assembled gate plate seat gate plate set structure.

        II. Design of external rotor motion body assembled gate plate seat gate plate set structure.

        III. Design of internal rotor motion body assembled gas chamber set structure.

        IV. Design of external rotor motion body assembled gas chamber set structure.

    b. One-way drive common gate plate common gas chamber rotary type internal combustion engine includes:

        I. Design of internal rotor motion body assembled gate plate seat gate plate set structure.

        II. Design of external rotor motion body assembled gate plate seat gate plate set structure.

        III. Design of internal rotor motion body assembled gas chamber set structure.

        IV. Design of external rotor motion body assembled gas chamber set structure.

    c. One-way drive common gate plate linear type internal combustion engine includes:

        I. Design of motion body assembled gate plate seat gate plate set structure.

        II. Design of fixed rail assembled gate plate seat gate plate set structure.

    d. One-way common gate plate common gas chamber linear type internal combustion engine includes:

        I. Design of motion body assembled gate plate seat and common gate plate set structure.

        II. Design of fixed rail assembled gate plate seat and common gate plate set structure.

    e. Two-way driven common gate plate rotary type internal combustion engine includes:

        I. Design of internal rotor motion body assembled gate plate seat gate plate set structure.

        II. Design of external rotor motion body assembled gate plate seat gate plate set structure.

III. Design of internal rotor motion body assembled gas chamber set structure.

IV. Design of external rotor motion body assembled gas chamber set structure.

f. Two-way drive common gate plate linear type internal combustion engine includes:

I. Design of motion body assembled gate plate seat gate plate set structure.

II. Design of motion body assembled gas chamber set structure.

Design of each item is explained as follows:

a. One-way drive common gate plate rotary type internal combustion engine:

I. As shown in Figs. 3, 3-1, One-way drive common gate plate rotary type internal combustion engine has design of internal rotor motion body which is assembled by gate plate seat gate plate set structure, this design is applied on the embodiment of rotary type disk or cylindrical or conic engine, if active body assembled gate plate seat 107, common gate plate set GC 106 is used as internal rotor motion body, and on the motion body, there designed gate plate set GC 106 and gate plate seat 107, gate plate set GC 106 possesses One-way intake valve 101 facing to the lagging end of gas chamber Cx, pressure-saved gas chamber 102, and transmission guide hole 103 facing to the leading end of gas chamber Cy. On the coupled surface of fixed body and motion body, there designed intake compression gas chamber Cx and explosive exhaust gas chamber cy which are connected in series and coupled with common gate plate GC 106 of motion body, gas chamber Cx 104 is shallower; gas chamber Cy 105 is deeper, or further, the leading end is deeper, the lagging end is shallower; plug 108 or fuel nozzle 109 on the fixed body is placed on the guide transverse groove 105$'$ at the leading end of fixed body gas chamber, or on the concave structure 106$'$ which can avoid to be interfered by common gate plate GC 106, if intake port and exhaust port are assembled on motion body, at side surface of leading end of gas chamber Cx 104, there designed guide transverse groove 104$'$, at the lagging end of gas chamber Cy 105, there designed guide transverse groove 105$'$, guide transverse grooves 104$'$, 105$'$ of gas chambers Cx 104 and Cy 105, are placed at different side position, at the extension of leading end of common gate plate GC 106, motion body designs a guide groove 111 which is at the same side of guide transverse groove 105$'$ of gas chamber Cy 105 and is parallel to gas chamber Cy 105 and has same arc length and in totation, is used to transmit guide transverse groove 105$'$ of the above gas chamber Cy 105, guide groove 111 leads to the exhaust pipe for exhausting waste gas in gas chamber Cy.

At the extension of lagging end of common gate plate GC 106, there designed a guide groove 111 which is at the same side of intake transverse groove 104$'$ and is parallel to gas chamber Cx 104, and has same arc length, and in rotation, it is used to guide through· guide transverse groove 104$'$ of gas chamber Cx 104, guide groove 111 leads to intake pipe to let fresh fuel gas enter in.

As shown in Fig. 3-2 and 3-5 intake port 110$'$ and exhaust port 111$'$ assembled on the passive body which is used as fixed body, and intake port is placed on the leading end of gas chamber Cx 104 for avoiding to be interfered by common gate plate GC 106, and penetrate through gas chamber Cx 104 to guide through gas chamber Cx 104 and fuel gas transmission pipe.

Exhaust port 111$'$ is placed on the lagging end of gas chamber Cy 105 and can avoid to be interfered by common gate plate GC 106 and penetrate through gas chamber Cy 105 to guide through gas chamber Cy 105 and transmission pipe of waste gas.

II. As shown in Figs. 4, 4-1 are the graphic view of external rotor type embodiment, there designed motion body with gate plate seat 107 and common gate plate set GC 106, it is ring type structure and is coupled with the cup fixed body which possesses serial connection gas chamber sets Cx 104 and Cy 105 to accept the drive of the latter, the relationship of intake port 110$'$, exhaust port 111$'$, plug 108 or fuel nozzle 109 and common gate plate set GC 106 of gas chambers Cx 104, Cy 105 are same as mentioned in Figs.3,3-1 if intake and exhaust ports are placed on the leading end of gas chamber Cx 104 and can avoid to be interferred by common gate plate GC 106 and penetrate through gas chamber Cx 104, to guide through gas chamber Cx 104 and transmission pipe of fuel gas. Exhaust port 111$'$ is placed at the lagging end of gas chamber Cy 105 and can avoid to be interferred by common gate plate GC 106 and penetrate through gas chamber Cy 105 to guide through gas chamber Cy 105 and transmission pipe of waste gas. If intake and exhaust ports are placed in the motion body of external rotor, the coupling of guide grooves 110 and 111 and intake exhaust pipes is coupled on the guide hole at the side wall surface of same side or different side or on the guide hole at the outer circumference of motion body in order to couple the transmission interface of fixed intake exhaust pipe, this transmission interface will be described hereafter. Therefore, the above internal rotor or external rotor rotary motion body assembled common gate plate set active body structure, and the passive body assembled with serial connection intake compressive gas chamber Cx 104 and explosive exhaust gas chamber Cy 105 used as fixed body, its structures mainly includes:

Active body used as motion body: on the internal or external rotor coupling with the passive body which is used as fixed body, it possesses:

24

--- at least one set of common gate plate set GC 106: common gate plate set GC 106 possesses one-way intake valve 101 facing to the lagging end of gas chamber Cx 104, pressure-saved gas chamber 102 and transmission guide hole 103 facing to the leading end of gas chamber Cy.

--- gate plate seat 107:it possesses a guide groove for placing common gate plate set GC 106, on the common gate plate set GC 106, there placed drive spring 125 to press static pressure on common gate plate set GC 106, and assembled an adjusting cover 126 for adjusting up and down and press spring 125 in order to adjust the static pressure of spring pressed on common gate plate set GC 106.

Passive body used as fixed body: on the coupled surface of active body and passive body, there assembled at least one set of intake compression gas chamber Cx 104 and at least one set of explosive exhaust gas chamber Cy 105 and both of them are connected in series, and coupled with common gate plate GC 106 of motion body, gas chamber Cx 104 is shallower, gas chamber Cy 105 is deeper, gas chamber Cy 105 further possesses deeper leading end and shallower lagging end.

--- plug 108 or fuel nozzle 109 is assembled on the guide transverse groove 105' at leading end of gas chamber Cy 105 of passive body which is used as fixed body, or assembled on the concave structure 105" which is coupled with gas chamber Cy 105 and can avoid to be interfered by common gate plate GC.

--- exhaust port 111' and intake port 110': if intake port 110' and exhaust port 111' are placed on the passive body which is used as fixed body, wherein intake port 110' is placed at the leading end of gas chamber Cx 104 and can avoid to be interfered by common gate plate GC 106, and penetrate through Cx 104 to guide through gas chamber Cx 104 and fuel gas transmission pipe.

--- exhaust port 111' is assembled at the lagging end of gas chamber Cy 105 and can avoid to be interferred by common gate plate GC 106 and penetrate through gas chamber Cy 105 to guide through gas chamber Cy and transmission pipe of waste gas.

If intake port 110' and exhaust port 111' are assembled on the active body which is used as motion body, wherein intake port 110' also can be placed on the guide transverse groove 104' at the side of leading end of gas chamber Cx 104, exhaust port 111' is placed on the guide transverse groove 105' at the lagging end of gas chamber Cy 105, guide transverse groove of gas chambers Cx 104 and Cy 105 are at different side position, at the extension of the leading end of common gate plate GC 106, active body which is used as motion body assembles a guide groove 111 which is at the same side of guide transverse groove 105' of gas chamber Cy 105 on the passive body which is used as fixed body, and is parallel to gas chamber Cy 105 and has same arc length, and in rotation, is used to transmit guide transverse groove 105' of the above gas chamber Cy 105 in order to exhaust waste gas in gas chamber Cy 105, at the extension of lagging end of common gate plate GC 106, there designed a guide groove 110 which is at the same side of guide transverse groove 104' of gas chamber Cx 104 on the passive body which is used as fixed body and is parallel to gas chamber Cx 104 and has same arc length, and in rotation, is used to guide through guide transver groove 104' of gas chamber Cx 104 in order to let fresh fuel gas enter into.

III. As shown in Figs. 5, 5-1 one-way drive common gate plate rotary type internal combustion engine has design of internal rotor motion body assembled gas chamber set, this design is applied on the embodiment of rotary type disk or cylindrical or conic engine, if fixed body is assembled gate plate seat 107 and common gate plate set GC 106, and the serial connection gas chamber set is used as internal rotor motion body, at fixed body, there assembled common gate plate set GC 106, and gate plate seat 107, gate plate set GC 106 possesses one-way intake valve 101 facing to the lagging end of gas chamber Cx, pressure-saved gas chamber 102, and transmission guide hole 103 facing to the leading end of gas chamber Cy, on the coupled surface of fixed body and motion body, there designed intake compression gas chamber Cx and explosive exhaust gas chamber Cy which are connected in series and coupled with common gate plate GC 106 of fixed body, gas chamber Cx 104 is shallower; gas chamber Cy is deeper, or further, the leading end is deeper, the lagging end is shallower; plug 108 or fuel nozzle 109 is placed on the lagging side of common gate plate set GC 106, and coupled on the gas chamber Cy 105 or guide transverse groove 105' and can avoid in the concave room to be interfered by motion body, if intake port and exhaust port are assembled on the motion body, intake port 110' is assembled at the leading end of gas chamber Cx 104 and can avoid to be interfered by common gate plate GC 106 and penetrate through gas chamber Cx 104 and guide through gas chamber Cx and fuel gas transmission pipe.

Exhaust port 111' is placed at the lagging end of gas chamber Cy 105 of motion body, and can avoid to be interferred by common gate plate GC 106 and penetrate through gas chamber Cy 105 to guide through gas chamber Cy and transmission pipe of waste gas.

If intake port and exhaust port are assembled on the fixed body, as shown in Figs. 5-2, 5-3 at one side of leading end of gas chamber Cx 104, there possesses guide transverse groove 104' coupling with a set of long groove type intake port 110 which is assembled on the fixed body and its length is almost same as length of gas chamber Cx 104, this long groove type intake port 110 is assembled at the lagging end of common gate plate set GC 106 and at the lagging end of gas chamber Cy 105 and the different side of guide transverse groove 104′ of gas chamber Cx 104, there also assembled guide transverse groove 105′ coupling with a set of long groove type exhaust port 113 which is assembled on the fixed body and its length is almost same as length of gas chamber Cy 105, this long groove type exhaust port 111 is assembled at the leading end of common gate plate set GC 106, the working procedure diagram of this embodiment are shown in Figs. 5-4 to 5-9, its working cylce is shown in Table 1.

IV. Figs. 6, 6-1 is a graphic view of external rotary type embodiment as shown in Figs. 5, 5-1 in figure, fixed body assembled gate plate seat 107 and gate plate set 106 is cup or ring type fixed type and is coupled with ring type part in which gas chambers Cx 104, Cy 105 are connected in series in order to accept the driving, relationship of intake port 110′, exhaust port 111′, plug 108 or fuel nozzle 109, gas chamber set Cx 104, Cy 105, common gate plate set GC 106 are same as shown in Figs. 5 and 5-1.

As above-mentioned, active body assembled common gate plate set GC 106 is used as fixed body and passive body assembled intake compression gas chamber Cx 104 and explosive exhaust gas chamber Cy 105 which are connected in series is used as internal rotor or external rotor rotary motion body, its structures mainly include:

Passive body used as motion body: internal or external rotor is coupled with active body which is used as fixed body and at the coupling surface of actice body and internal or external rotor, there at least assembled a set of intake compression gas chamber Cx 104 and a set of explosive exhaust gas chamber Cy 105 to couple with common gate plate GC 106 of motion body, gas chamber Cx 104 is shallower, gas chamber Cy 105 is deeper, gas chamber Cy 105 can further be deeper in the leading end and shallower in the lagging end. on the active body used as fixed body, it possesses:

at least one set of common gate plate set GC 106: common gate plate set GC 106 possesses one-way intake valve 101 facing to the lagging end of gas chamber Cx 104, pressure-saved gas chamber 102 and transmission guide hole 103 facing to the leading end of gas chamber Cy.

gate plate seat 107: it possesses a guide groove for placing common gate plate set GC 106, on the common gate plate set GC 106, there placed drive spring 125 to press static pressure on common gate plate set GC 106, and assembled an adjusting cover 126 for static pressure of spring pressed on common gate plate set GC 106.

plug 108 or fuel nozzle 109: it is assimbled on the lagging side of common gate plate set GC 106 of active body which is used as fixed body and is coupled on gas chamber Cy 105 or guide transverse groove 105′, in driving, it can avoid to be interferred by active body which is used as motion body in the concave structure 105″.

intake port 110′ and exhaust port 111′: if intake port 110′ and exhaust port 111′ are placed on the passive body which is used as motion body, wherein intake port 110′ is placed at the leading end of the gas chamber Cx 104 and can avoid to be interferred by common gate plate GC 106, and penetrate through Cx 104 to guide through gas chamber Cx 104 and fuel gas transmission pipe.

exhaust port 111′ is assembled at the lagging end of gas chamber Cy 105 and can avoid to be interferred by common gate plate GC 106 and penetrate through gas chamber Cy 105 to guide through gas chamber Cy and transmission pipe of waste gas.

If intake port 110′ and exhaust port 111′ are assembled on the active body which is used as fixed body, at one side of leading end of gas chamber Cx 104, there possesses guide transverse groove 104′ coupling with a set of long groove type intake port 110 which is assembled on the active body used as fixed body and its length is almost same as length of gas chamber Cx 104, this long groove type intake port 110 is assembled at the lagging end of common gate plate set GC 106 and at the lagging end of gas chamber Cy 105 on the active body which is used as motion body, and different side of guide transverse groove 105′ of gas chamber Cx 105, there also assembled guide transverse groove 105′ coupling with a set of long groove type exhaust port 111 which is assembled on the active body used as fixed body and its length is almost same as length of gas chamber Cy 105, this long groove type exhaust port 111 is assembled at the leading end of common gate plate set GC 106.

b. One-way drive common gate plate common gas chamber rotary type internal combustion engine:

(I) Figs. 7 and 7-1 show one-way drive common gate plate common gas chamber retary type internal combustion engine which has design of internal rotor motion body assembled gate plate seat gate plate set structure, it is the embodiment of above-mentioned common gate plate type engine with further assembly of common gas chamber CC 119, this embodiment possesses structure of gate plate seat 107 and common gate plate set 106, it is the embodiment of internal rotor motion body, the main characteristic of this design is that intake, compression, explosion, and exhaust are commonly performed in gas chamber CC 119 is varied from the deep to the shallow according to the rotary direction, when common gate plate GC 106 passes through the shallower section of lagging end of gas chamber CC 119, one-way intake valve 101 on

26

GC 106 will completely face to the gas in gas chamber CC 119 which will be compressed, and compress and store said gas in pressure-saved gas chamber 102, at that time, transmission guide hole 103 is hidden and sealed in gate plate sliding seat 107, the largest depth of leading end of gas chamber CC 119 is used for gate plate GC 106 to slide down and let transmission guide hole 103 completely expose out in order to guide high pressure gas stored in pressure-saved gas chamber 102 of gate body of last stroke into gas chamber CC 119, and is ignited by plug 108 or fuel nozzle 109 placed on the leading end of gas chamber CC 119, gas chamber CC119 is at least a unit of two sets which are connected in series, and at the fixed body with common gate plate set 106, and at the leading position of 180° working angle of common gate plate GC 106, there assembled an intake exhaust gate GG 120, this gate plate is a dense thin plate, its sectional shape facing to gas chamber set CC 119 is same as common gate plate GC 106, at leading end of GG 120, there assembled exhaust port 111′, at its lagging side, there is an intake port 110′ for intake and exhaust, its intake port and exhaust port are shown in Figs. 7-2, 7-3, guide transverse grooves 119′, 119″ and the corresponding gas grooves 110, 111 on fixed body are used as transmission means.

II. Figs. 8, 8-1 is a graphic view of external rotor type embodiment of Fig. 7,7-1, in figure, there designed motion body with gate plate seat 107 and gate plate sets 106, 120 and it is ring type structice and is coupled with cup type fixed body which possesses serial connection gas chamber set CC 119 to accept the drive of the latter, the placements of intake port 110′ or exhaust port 111′, plug 108 or fuel nozzle 109 and common gate plate set GC 106 on motion body is as same as shown in Fig.7 and Fig.7-1.

As above-mentioned, action body assembled common gate plate set is used as internal or external rotor rotary motion body and passive body assembled at least two sets of common gas chamber set CC 119 is used as fixed body, its structures mainly include:

Active body used as motion body is internal or external rotor coupling with passive body which is used as fixed body, and it possesses:

at least one set of common gate plate set GC 106: common gate plate set GC 106 possesses one-way intake va;ve facing to the lagging end of gas chamber CC 119, pressure-saved gas chamber, and transmission guide hole facing to the leading end of gas chamber CC 119.

at least one set of intake eshaust gate GG 120: it is a dense their plate, the sectional shape facing to common gas chamber set CC 119 is as same as common gate plate, it is placed at the leading position of 180° working angle of common gate plate set GC.

gate plate seat 107: it possesses a guide groove for placing gate plate set GC 106, GG 120, and on gate plate set GC and GG, there placed drive spring 125 to press static pressure on gate plate set GC and GG, and assembled an adjusting cover 126 for adjusting up and down and press spiing 125 in order to aduust the static pressure of spring pressed on gate plate set GC and GG.

Main structure of passive body used as fixed body includes:

at least two sets of common gas chamber set CC 119 are connected in series each other along trace of motion, its characteristic is that according to rotary direction, the depth varies from the deep to the shallow, the depth of leading section can make transmission guide hole 103 of common gate plate GC 106 expose out, and the output of fuel gas in the pressure-saved gas chamber 102 can ignite and produce dynamics, the leading shallower section can limit common gate plate set GC 106 only to expose one-way intake valve 101, and let transmission guide hole 103 hide into gate plate sliding seat 107.

plug 108 or fuel nozzle 109: it is assembled at the lagging end of common gate plate set GC 106 of active body which is used as fixed body and coupled with common gas chamber CC 119 or guide transverse groove 119′ at leading end and can avoid concave structure 105″ which is interfered by common gas chamber CC 119.

Intake port 110′ and exhaust port 111′: if intake port 110′ and exhaust port 111′ are assembled on active body which is used as motion body where in intake port 110′ is placed at the lagging end of intake exhaust plate GG 120 for penetrating through holes of gas chamber and hollow rotating axle and guiding through gas chamber CC 119 and fuel gas transmission pipe.

Exhaust port 111′ is placed at the leading end of intake exhaust gate GG 120, and used to penetrate through holes of gas chamber CC 119 and hole of hollow rotating axle and guide through gas chamber CC 119 and transmission pipe of waste pipe.

If intake port 110′ and exhaust port 111′ are assembled at passive body which is used as fixed body, and at the side of leading end of common gas chamber CC 119, there designed guide transverse groove 119′ at lagging end, there designed another guide transverse groove 119″, two guide transverse grooves are at different side, and there designed an intake groove 110 which has proper distance to end of guide transverse groove 119′ at leading end of common gas chamber CC 119 on the passive body which is used as fixed body and it is parallel to gas chamber CC 119, and has same phase angle and almost same length, or at the same phase angle proper distance of end of guide transverse groove at leading end of gas

EP 0 397 996 A2

chamber CC 119, there placed intake port 110′, and at same side of guide transverse groove 119″ of lagging end of gas chamber CC 119, and there is an exhaust groove 111 having proper distance to end of guide transverse groove 119″ and it is paralled to gas chamber CC 119 and has same phase angle and almost same length, or there assembled exhaust port 111′ at the position of same phase angle proper distance of guide transverse groove 119″ on lagging end of gas chamber CC 119, at the extension of lagging end of intake exhaust gate plate GG 120 of active body used as motion body, there designed a guide groove 112 which is at the same side of guide transverse groove 119′ of leading end of gas chamber CC 119 on passive body which is used as fixed body, and it is paralled to gas chamber 119 and has almost same arc length, and in rotation, it is used to transmit guide transverse groove 119′ of leading end of above gas chamber CC 119 and intake groove 110 or hole 110′, in order to let fresh fuel gas enter into, and at the extension of leading end of common gate plate GC 106, there designed a guide groove 113 which is at the same side of intake transverse groove 119″ of lagging end of common gas chamber CC 119 on passive body which is used as fixed body, and it is paralled to gas chamber CC 119 and has almost same arc length, and in rotation, it is used to guide through guide transverse groove 119″ of gas chamber CC 119 and exhaust groove 111 or hole 111′ for exhausting waste gas.

III. As shown in Fig. 9, it is one-way drive common gate plate common gas chamber rotary type internal combustion engine, wherein gas chamber structure is internal rotor motion body and the structure assembled gate plate seat 107 and gate plate set 106, 120 is used as fixed body and graphic view of embodiment of internal rotor possesses serial connection gas chamber set CC 119, and its structural characteristic is that:

intake, compression, explssion, and exhaust are commonly performed in gas chamber 119, and depth of gas chamber 119 is varied from the deep to the shallow and when common gate plate GC 106 passes through the shallower section of lagging end of gas chamber CC 119, GC 106 can be moved upward and let one-way intake valve 101 completely face to gas in gas chamber CC 119 which will be compressed, and compress and store said gas in the pressure-saved gas chamber 102, at that time, transmission guide hole 103 is hidden and sealed in gate plate sliding seat 107, the largest depth of leading end of gas chamber CC 119 is used for gate plate GC 106 to slide down, and let transmission guide hole 103 completely expose out in order to guide high pressure gas stored in pressure-saved gas chamber 102 of gate body into gas chamber CC 119 and ignited by plug 108 or fuel nozzle 109 placed on the leading end of gas chamber CC 119, gas chamber CC 119 is at least a unit of two sets which are connected in series, and at the fixed body with common gate plate set 106, and at the leading position of 180° working angle of common gate plate GC 106, there assembled an intake exhaust gate GG120, this gate plate is a dense thin plate, its sectional shape facing to gas chamber set CC 119 is same as common gate plate GC 106, at leading end of GC 106, there designed exhaust port 111′, at its lagging side, there is an intake port 110′ for intake and exhaust, its intake port 110′ and exhaust port 111′ also can be shown in Figs. 3, 3-1, 4, 4-1, 5, 5-1, 6, 6-1, guide transverse grooves 119′ and 119″ and the corresponding gas grooves 112, 113 on fixed body are used as transmission means, Figs. 9-1 to 9-6 are the working procedure diagram. Its working cycle are shown in Table 2.

IV. Figs. 10, 10-1 is a graphic view of external rotor type embodiment of Fig.9, 9-1, in figure, there designed fixed body with gate plate seat 107 and gate plate set 106, 120 and it is cup type or ring type structure and the structure having serial connection gas chamber set CC is ring type and coupled on it to accept the drive, the placements of intake port 110′, exhaust port 111′, plug 108 or fuel nozzle 109, pressure set CC 119, gate plate set GC 106, GG 120 are as same as mentioned in Fig. 9 and Fig. 9-1.

As above-mentioned, action body assembled common gate plate set is used as fixed body and passive body assembled at least two sets of common gas chamber set CC 119 is used as internal or external rotor rotary motion body, its structure mainly include:

Passive body used as motion body: is internal or external rotor used to couple active body which is used as fixed body, and it possesses:

at least two sets of common gas chamber set CC 119 which are connected in series each other along trace of motion, and it is characterized in that according to rotary direction, the depth varies from the deep to the shallow, the depth of leading section can make transmission guide hole 103 of common gate plate GC 106 expose out, and the output of fuel gas in the pressure-saved gas chamber 102 can ignite and produce dynamics, the lagging shallower section can limit common gate plate set GC 106 only to expose one-way intake valve 101, and let transmission guide hole 103 hide into gate plate sliding seat 107.

Main structures of active body used as fixed body include:

at least one set of common gate plate set GC 106:

common gate plate set GC 106 possesses one-way intake valve 101 facing to the lagging end of gas chamber CC 119, pressu pressure-saved gas chamber 102, and transmission guide hole 103 facing to the

28

leading end of gas chamber CC 119.

at least one set of intake exhaust gate GG: it is a dense thin plate, its sectional shape facing to common gas chamber set CC is as same as come gate plate, it is placed at the leading position of 180° working angle of common gate plate set GC.

gate plate seat: it possesses a guide groove for placing gate plate set GC 106, GG 120, and on gate plate set GC and GG, there placed drive spring 125 to press static pressure on gate plate set GC and GG, and assembled an adjusting cover 126 for adjusting up and down and press spring 125 in order to adjust the static pressure of spring pressed on gate plate set GC and GG.

plug 108 or fuel nozzle 109: it is assembled at the lagging end of common gate plate set GC 106 of active body which is used as fixed body and coupled with common gas chamber CC 119

and can avoid concave structure 105″ which is interfered by common gas chamber CC 119.

if intake port 110′ and exhaust port 111′ are assembled on active body which is used as fixed body, wherein intake port 110′ is assembled at lagging end of intake exhaust gate GG 120 and connect with intake pipe, exhaust port 111′ is placed at the leading end of intake exhaust gate GG 120 and connect with exhaust pipe.

If intake port 110′ and exhaust port 111′ are assembled at passive body which is used as motion body, at the side of leading end of common gas chamber CC 119, there designed guide transverse groove 119′, at lagging end, there designed another guide transverse groove 119″, two guide transverse grooves are at different sides, and there designed an intake groove 110 which has proper distance to end of guide transverse groove 119′ at leading end of common gas chamber CC 119 on the passive body which is used as motion body, and is paralled to gas chamber CC 119, and has same phase angle with almost same length, or at the same phase angle proper distance of end of guide transverse groove 119′ at leading end of gas chamber CC 119, there placed intake port 110′ for penetrating through pipe of hollow rotating axle, and at the same side of guide transverse groove 119″ of lagging end of gas chamber CC 119, and at the proper distance to the end of guide transver groove 119″, there designed exhaust groove 111 which is paralled to gas chamber CC 119 and has same phase angle with almost same length or at the same phase angle proper distance of guide transverse groove 119″ at lagging end of gas chamber CC 119, there designed exhaust port 111′ for penetrating through hollow rotating axle.

At the extension of lagging end of intake exhaust gate·plate GG 120 of active body used as fixed body, there designed a guide groove 112 which is at the same side of guide transverse groove 119′ of leading end of gas chamber 119 on passive body which is used as motion body and is paralled to gas chamber 119 and has almost same arc length, and in rotation, it is used to transmit guide transverse groove 119′ of leading end of above gas chamber CC 119 and intake groove 110 or hole 110′ in order to let fresh fuel gas enter into, and at the extension of leading end of common gate plate GC 106, there designed a guide groove 113 which is at the same side of guide transverse groove 119″ of lagging end of common gas chamber CC 119 on passive body which is used as motion body, and is paralled to gas chamber CC 119 and has almost same arc length, and in rotation, it is used to guide through guide transverse groove 119″ of gas chamber CC 119 and exhaust groove 111 or hole 111′ for exhausting waste gas.

C. One-way drive common gate plate linear type internal combustion engine:

I. When design of common gate plate serial connection gas chamber type is applied on linear drive, as shown in Figs. 11 and 11-1, it possesses structures of gate plate seat and common gate plate set GC 106 which are used as motion body, and structure of serial connection gas chamber Cx 104 and gas chamber Cy 105 which is deeper or its leading section is deeper than lagging section is used as fixed guide rail, and at the leading end of gas chamber Cx 104, there designed intake groove 110 or port 110′ or intake guide transverse groove 104′ which can avoid to be interfered by common gate plate GC 106 when it is driving, at lagging end of gas chamber Cy 105, there designed exhaust groove 111 or port 111′ or exhaust guide transverse groove 105′ which can avoid to be interfered by common gate plate set GC 106 when it is driving, guide transverse grooves 104′, 105′ of gas chambers Cx 104 and Cy 105 are at different side, its plug 108 or fuel nozzle 109 is placed on the lagging end of common gate plate set GC 106 at motion body, or placed in the guide transverse groove 105′ of leading end of gas chamber Cy 105 on fixed rail or placed on the concave structure 105″ which can avoid to be interfered by common gate plate GC 106, common gate plate set GC 106 possesses above-mentioned one-way intake valve 101, pressure-saved gas chamber 102 and transmission guide hole 103.

At the extension of leading end of common gate plate GC 106, there designed a guide groove 113 which is at the same side of exhaust transverse groove 105′ of gas chamber Cy 105 of the fixed body and is paralled to gas chamber Cy 105 with almost same arc length, and in rotation, it is used to guide through guide transverse groove 105' of gas chamber Cy 105 and exhaust groove 111 or port 111' to exhaust waste gas in Cy 105.

And at the extension of the lagging end of common gate plate GC 106, there designed a guide groove 112 which is at the same side of guide transverse groove of fixed body and is paralled to gas chamber Cx 104 with almost same arc length, and in rotation, it is used to guide through guide transverse groove 104' of gas chamber Cx 104 and intake groove 110 or port 110' to let fresh fuel gas enter into, the working procedure of this method is shown in Figs. 11-2 to 11-7, and its working cycle is shown in Table 2, and it also can place intake port 110', exhaust port 110', exhaust port 111', fuel supply system and exhaust system on the fixed rail, as shown in Figs. 12 and 12-1, guide transverse grooves 112, 113 of Cx and Cy on the fixed rail can directly exhaust waste gas and transmit fuel gas into it, the working procedure of this method is shown in Figs. 12-2 to 12-13.

The above passive body assembled intake compression gas chamber Cx and explosive exhaust gas chamber which are connected in series and used as fixed rail, its structure mainly include:

Active body used as motion body is coupled with passive body which is used as fixed raio, it possesses:

at least one set of common gate plate GC 106: common gate plate set GC 106 possesses one-way intake valve 101 facing to the lagging end of gas chamber Cx 104, pressure-saved gas chamber 102 and transmission guide hole 103 facing to the leading end of gas chamber Cy. Gate plate set GP 1046 with penetrated hole is placed at the leading end of common gate plate set GC 106 which is at the most leading end, this gate plate is solid structure, and at gate plate, it possesses guide hole 1047, the height of guide hole 1047 can be under hiding status in gate plate seat 107 when it passes shallower gas chamber Cx 104, and it will be under explosed status when it passes through deeper explosive exhaust gas chamber Cy 105.

gate plate seat 107: it possesses a guide groove for placing gate plate set GC and GP, on gate plate set GC and GP, there placed drive spring 125 to press static pressure on gate plate set GC 106, and assembled an adjusting cover 126 for adjusting up and down and press spring 125 in order to adjust the static pressure of spring pressed on gate plate set GC and GP.

Passive body used as fixed rail: at the surface of coupling with active body, there designed at least one set of intake compression gas chamber Cx 104 and at least one set of explosive exhaust gas chamber Cy 105 which are connected in series and coupled with common gate plate GC 106 on motion body, gas chamber Cx 104 is shallower, gas chamber Cy 105 is deeper, gas chamber Cy 105 can further be deeper in the leading end and shallower in the lagging end.

plug 108 or fuel nozzle 109 is assembled in guide transverse groove 105' of leading end of gas chamber Cy 105 of passive body which is used as fixed body or placed at the lagging end of common gate plate set GC 106 on motion body and can avoid the concave structure 105" which is interfered by common gate plate GC 106.

intake port 110' and exhaust port 111': if intake port 110' and exhaust port 111' are placed on the passive body which is used as fixed rail, wherein intake port 110' is placed at the leading end of gas chamber Cx 104 and can avoid to be interfered by common gate plate GC 106, and penetrate through gas chamber Cx 104 and hole of hollow rotating axle or transverse hole 110" leading to side wall in order to guide through gas chamber Cx 104 and fuel gas transmission pipe.

Exhaust port 111' is assembled at the lagging end of gas chamber Cy 105 and can avoid to be interfered by common gate plate GC 106, and penetrate through gas chamber Cy 105 and hole of hollow rotating axle or transverse hole 111" leading to the side wall and guide through gas chamber Cy 105 and transmission pipe of waste gas.

If intake port 110' and exhaust port 111' are assembled on active body which is used as motion body, wherein intake port 110' also can be placed in the transverse hole 110" at side of leading end of gas chamber Cx 104, exhaust port 111' is placed in the transverse hole 111" at lagging end of gas chamber Cy 105, guide transverse grooves of gas chambers Cx 104 and Cy 105 are at different side position, at the extension of leading end of common gate plate GC 106, active body which is used motion body assembles a guide groove 113 which is paralled to gas chamber Cy 105 and has almost same arc length at the same side of guide transverse groove 105' of gas chamber Cy 105 on the passive body which is used as fixed body, and in rotation, it is used to transmit guide transverse groove 105' of gas chamber Cy 105 and exhaust groove 111 or hole 111' to exhaust waste gas in Cy. And at the extension of lagging end of common gate plate GC 106, there designed guide groove 112 at the same side of guide transverse groove 104' of gas chamber Cx 104 on the passive body which is used as fixed body and it is paralled to gas chamber Cx 104 and has almost same arc length, and in rotation, it is used to guide through guide transverse groove 104' of gas chamber Cx 104 and intake groove 110 or hole 110' and transmit fresh fuel gas into.

30

II. As shown in Figs. 13 and 13-1, it is one-way drive common gate linear type internal combustion engine, structure of gate plate seat gate plate set is designed as fixed rail and fixed rail body possesses gate plate seat 107 and common gate plate set GC 106, and motion body possesses gas chamber set of serial connection gas chamber Cx 104 and deeper gas chamber Cy 105, at the leading end of gas chamber Cx 104, there designed intake port 110 or port 110' or intake guide transverse groove 104' which can avoid to be interfered by common gate plate set GC 106 in driving, guide transverse grooves 104', 105' of gas chambers Cx 104 and Cy 105 are at different sides, the driving plug 108 or fuel nozzle 109 is placed at the lagging end of common gate set GC 106 on fixed rail body or placed in the guide transverse groove 105' of leading end of gas chamber Cy 105 on motion body and can avoid concave structure 105" which is interfered by common gate plate GC 106.

Common gate plate set GC 106 possesses above-mentioned one-way intake valve 101, pressure-saved gas chamber 102 and transmission guide hole 103. And at the extension of leading end of common gate plate GC 106, there designed a guide groove 113 at the same side of exhaust transverse groove 105' of gas chamber Cy 105 of motion body and it is paralled to gas chamber Cy 105 and has almost same arc length, and in rotation, it is used to guide through guide transverse groove 105' of gas chamber Cy 105 and exhaust groove 111 or port 111' and exhaust waste gas in gas chamber Cy 105, and at the extension of lagging end of common gate plate GC 106, there designed a guide groove 112 at the same side of guide transverse groove 104 of gas chamber set Cx 104 on motion body and it is paralled to gas chamber Cx 104 and has almost arc length, and in rotation, it is used to guide through guide transverse groove 104' of gas chamber Cx 104 and intake groove 110 or port 110' and transmit fresh fuel gas into, the working procedure of above embodiment is shown in Figs. 13-2 to 13-7, and fuel supplying system and exhaust system also can be placed on motion body, as shown in Figs. 14 and 14-1, guide transverse grooves 104', 105' of gas chamber Cx 104 and Cy 105 on motion body directly exhaust waste gas and transmit fuel gas into, working procedure of this method is shown in Figs. 14-2 to 14-13.

As above-mentioned, active body with common gate plate set is used as fixed guide rail and passive body assembled serial connection intake compression gas chamber Cx 104 and explosive exhaust gas chamber Cy 105 is used as linear motion body, and its structures mainly include:

Passive body used as motion body: it is coupled with active body which is used as fixed guide rail and at the surface of coupling with active body, there designed at least one set of intake compression gas chamber Cx 104 and at least one set of explosive exhaust gas chamber Cy 105 which are connected in series, and coupled with common gate plate GC 106 on motion body, gas chamber Cx 104 is shallower, gas chamber Cy 105 is deeper, gas chamber Cy 105 can further be deeper in the leading end and shallower in the lagging end.

Active body used as fixed body, it possesses:

at least one set of common gate plate GC 106: common gate plate set GC 106 possesses one-way intake valve 101 facing to the lagging end of gas chamber Cx 104, pressure-saved gas chamber 102 and transmission guide hole 103 facing to the leading end of gas chamber Cy.

gate plate set 1046 with penetrated hole is placed at the leading end of common gate plate set GC 106 which is at the most leading end this gate plate is solid structure, and at gate plate, it possesses guide hole 1047, the height of guide hole 1047 can be under hiding status in gate plate seat 107 when it passes through shallower gas chamber Cx 104, and it will be under explosed status when it passes through deeper explosive exhaust gas chamber Cy 105.

gate plate seat 107: it possesses a guide groove for placing gate plate set GC and GP, on gate plate set GC and GP, there placed drive spring 125 to press static pressure on gate plate set GC 106 and assembled an adjusting cover 126 for adjusting up and down and press spring 125 in order to adjust static pressure of spring pressed on gate plate set GC and GP.

plug 108 or fuel nozzle 109: it is assembled in the concave structure at lagging end of common gate plate set GC 106 on active body which is used as fixed rail, or assembled in guide transverse groove 105' at leading end of gas chamber Cy 105 or concave structure which can avoid to be interfered by common gate plate set GC 106.

intake port 110' and exhaust port 111': if intake port 110' and exhaust port 111' are placed on the passive body which is used as motion body, wherein intake port 110' is placed at the leading end of gas chamber Cx 104 and can avoid to be interfered by common gate plate GC 106, and penetrate through hole of gas chamber Cx 104 and transverse hole 110" leading to side wall in order to guide through gas chamber Cx 104 and fuel gas transmission pipe.

Exhaust port 111' is assembled at the lagging end of gas chamber Cy 105 and can avoid to be interfered by common gate plate GC 106, and penetrate hole of gas chamber Cy 105 or transverse hole 111" leading to side wall and guide through gas chamber Cy and transmission pipe of waste gas.

If intake port 110′ and exhaust port 111′ are placed on active body which is used as fixed body, and at one side of leading end of gas chamber Cx 104, there designed guide transverse groove 104′ to couple with a set of long groove type intake groove 110 which has almost same length as gas chamber Cx 104 on active body used as fixed body, this long groove type intake groove 110 is assembled at the lagging end of common gate plate set GC 106, at different sides of lagging end of gas chamber Cy 105 on passive body which is used as motion body and guide transverse groove 104′ of gas chamber Cx 104, there also designed guide transverse groove 105 to couple with a set of long groove type exhaust groove 111 which has almost same length as gas chamber Cy 105 on active body which is used as fixed body, this long groove type exhaust groove 111 is placed at leading end of common gate plate set GC 106.

D. One-way drive common gate plate common gas chamber linear type internal combustion engine:

I. As shown in Figs. 15 and 15-1, it is one-way drive common gate plate common gas chamber linear type internal combustion engine wherein structure of gate plate seat and common gate plate set are used as motion body, and it is the embodiment of above-mentioned common gate plate linear type with further assembly of common gas chamber CC 119, this embodiment possesses structure of gate plate seat 107 and common gate plate set 106, it is the embodiment of motion body, the main characteristic of this design is that intake, compression, explosion, and exhaust are commonly performed in gas chamber 119, and depth of gas chamber 119 is deeper in the leading end and shallower in the lagging end, when common gate plate GC 106 passes through the shallower section of lagging end of gas chamber CC 119, one-way intake valve 101 on GC will completely face to the gas in gas chamber CC 119 which will be compressed, and compress and store said gas in pressure-saved gas chamber 102, at that time, transmission guide hole 103 is hidden and sealed in gate plate sliding seat 107, the largest depth of leading end of gas chamber CC 119 is used for gate plate GC 106 to slide down and let transmission guide hole 103 completely expose out in order to guide high pressure gas stored in pressure-saved gas chamber 102 of gate body into gas chamber CC 119,and is iginited by plug 108 or fuel nozzle 109 in the concave chamber 105 placed on the leading end of gas chamber CC 119 and can avoid to be interfered by gate plate set GC 106, gas chamber CC 119 is at least a unit of two sets which are connected in series, the interval of placement of common gate plate GC 106 on fixed body with common gate plate set GC 106 is 360° working angle, at position of each interval of 180° working angle, there respectively placed an intake exhaust gate GG 120, this gate plate is a dense thin plate, its sectional shape facing to gas chamber set CC 119 is as same as common gate plate GC 106 at its leading end, there placed exhaust groove 111 or port 111′, at its lagging end, there placed intake groove 110 or port 110′ for exhaust and intake, the working procedure of above embodiment is shown in Figs. 15-2 to 15-13, and its working cycle is shown in Table 4, and intake port 110′ and exhaust port 111′ also are shown in Figs. 16 and 16-1, guide transverse grooves 104′, 105′ at different sides of leading end and lagging end of gas chamber CC 119 are connected with corresponding gas grooves 112, 113 on fixed body, the working procedure of this method are shown in Figs. 16-2 to 16-3.

As above-mentioned active body with common gate plate set is used as motion body and passive body with at least two sets of common gas chamber sets CC is used as fixed guide rail structure, its structures mainly include:

Active body used as motion body is coupled with passive body which is used as fixed guide rail and acted as linear type motion body, it possesses:

at least one set of common gate plate GC 106: common gate plate set GC 106 possesses one-way intake valve 101 facing to the lagging end of gas chamber Cx 104, pressure-saved gas chamber 102 and transmission guide hole 103 facing to the leading end of gas chamber Cy.

at least one set of intake exhaust gate GG 120: it is a dense thin plate, its sectional shape facing to gas chamber set CC 119 is as same as common gate plate GC 106, and it is placed at the position of 180° working angle leading to common gate plate set GC.

gate plate 1046 with penetrated hole is placed at the leading end of common gate plate set GC 106 which is at the most leading end, this gate plate is solid structure, and at gate plate, it possesses guide hole 1047, the height of guide hole 1047 can be under hiding status in gate plate seat 107 when it passes through shallower gas chamber Cx 104, and it will be under exposed status when it passes through deeper explosive exhaust gas chamber Cy 105.

gate plate seat 107: it possesses a guide groove for placing gate plate set GC and GP, on gate plate set GC and GP,there placed drive spring 125 to press static pressure on gate plate set GC and GP and assembled an adjusting cover 126 for adjusting up and down and press spring 125 in order to adjust static pressure of spring pressed on gate plate set GC and GP.

Passive body structure used as fixed guide rail mainly includes:

at least two sets of common gas chamber set CC 119 which are connected in series each other along trace of motion, and it is characterized in that according to driving direction, the depth varies from the deep to the shallow, the depth of leading section can make transmission guide hole 103 of common gate plate GC 106 expose out, and the output of fuel gas in the pressure-saved gas chamber 102 can ignite and produce dynamics, the lagging shallower section can limit common gate plate set GC 106 only to expose one-way intake valve 101, and let transmission guide hole 103 hide into gate plate sliding seat 107.

plug 108 or fuel nozzle 109: it is assembled in the concave structure at the lagging end of common gate plate set GC 106 on active body which is used as motion body and can avoid to be interfered by common gas chamber 119 or guide transverse groove 119 at leading end, or placed in the concave structure 105″ or guide transverse groove 105′ at leading end of common gas chamber and can avoid to be interfered by common gate plate set GC 106.

intake port 110′ and exhaust port 111′: if intake port 110′ and exhaust port 111′ are assembled on active body which is used as motion body, wherein intake port 110′ is placed at the lagging end of intake exhaust plate GG 120 for penetrating through hole of gas chamber or transverse hole 110″ and guiding through gas chamber CC 119 and fuel gas transmission pipe.

Exhaust port 111′ is placed at the leading end of intake exhaust gate GG 120 and used to penetrate through hole of gas chamber Cy 105 or transverse hole 111″ and guide through gas chamber CC 119 and transmission pipe of waste pipe.

If intake port 110′ and exhaust port 111′ are assembled at passive body which is used as fixed body, and at the side of leading end of common gas chamber CC 119, there designed guide transverse groove 119′, at lagging end, there designed another guide transverse groove 119″, two guide transverse grooves are at different side, and there designed an intake groove 110 which has proper distance to end of guide transverse groove 119′ at leading end of common gas chamber CC 119 on the passive body which is used as fixed body and it is paralled to gas chamber CC 119, and has same phase angle and almost same length, or at position of same phase angle proper distance to end of guide transverse groove 119′ at leading end of gas chamber CC 119, there placed intake port 110′, and at same side of guide transverse groove 119″ of lagging end of gas chamber CC 119, and there is an exhaust groove 111 having proper distance to end of guide transverse groove 119″ and it is paralled to gas chamber CC 119 and has same phase angle and almost same length, or there assembled exhaust port 111′ at the position of same phase angle proper distance of guide transverse groove 119″ on lagging end of gas chamber CC 119, at the extension of lagging end of intake exhaust gate plate GG 120 of active body used as motion body, there designed a guide groove 112 which is at the same side of guide transverse groove 119′ of leading end of gas chamber CC 119 on passive body which is used as fixed body, and it is paralled to gas chamber 119 and has almost same arc length, and in rotation, it is used to transmit guide transverse groove 119′ of leading end of above gas chamber CC 119 and intake groove 110 or hole 110′, in order to let fresh fuel gas enter into, and at the extension of leading end of common gate plate GC 106 there designed a guide groove 113 which is at the same side of intake transverse groove 119″ of lagging end of common gas chamber CC 119 on passive body which is used as fixed body, and it is paralled to gas chamber CC 119 and has almost same arc length, and in rotation, it is used to guide through guide transverse groove 119″ of gas chamber CC 119 and exhaust groove 111 or hole 111′ for exhausting waste gas.

II. As shown in Figs. 17 and 17-1, it is one-way drive common gate plate common gas chamber linear type internal combustion engine wherein structure of gate plate seat 107 and common gate plate set GC 106 are used as fixed rail, and they are graphic views of embodiment of motion body possessing structure of serial connection gas chamber set CC 119, and this structure is characterized in that intake, compression, explosion, and exhaust are commonly performed in gas chamber 119, and depth of gas chamber 119 is deeper in the leading end and shallower in the lagging end, when common explosive compression gate GC 106 passes through the shallower section of lagging end of gas chamber 119, one-way intake valve 101 on GC will completely face to the gas in gas chamber CC 119 which will be compressed, and compress and store said gas in pressure-saved gas chamber 102, at that time, transmission guide hole 103 is hidden and sealed in gate plate sliding seat 107, the largest depth of leading end of gas chamber CC 119 is used for common gate plate GC 106 to slide down and let transmission guide hole 103 completely expose out in order to guide high pressure gas stored in pressure-saved gas chamber 102 of gate body into leading end of gas chamber CC 119 and is ignited by plug 108 or fuel nozzle 109 in the concave chamber 105″ which is placed at leading end of gas chamber CC 119 and can avoid to be interfered by gate plate set, gas chamber CC 119 is at least a unit of two sets which are connected in series, the interval of placement of common gate plate GC 106 on fixed body with common gate plate set GC 106 is 360° working angle, at position of each interval of 180° working angle, there respectively placed an intake exhaust gate GG 120, this gate plate is a dense thin plate, its sectional shape facing to gas chamber set CC 119 is as same as common gate plate GC 106, at its leading end, there placed exhaust groove 111 or port 111′ at its lagging end, there placed intake groove 110 or port 110′ for exhaust and intake, the working procedure of above internal combustion engine is shown in Figs. 17-2 to 17-13, another placement of intake groove 110 or port 110′ and exhaust groove 111 or port 111′ are shown in Figs. 18 and 18-1, guide transverse grooves 104′, 105′ at different sides of leading end and lagging end of gas chamber CC 119 are connected with corresponding gas grooves 112, 113 on fixed body, its acting procedure is shown in Figs. 18-2 to 18-13.

As above-mentioned active body with common gate plate set is used as fixed body and passive body with at least two sets of common gas chamber sets CC is used as linear type motion body structure, its structures mainly include:

Passive body used as motion body is coupled with active body which is used as fixed body and acted as linear type motion body it possesses:

at least two sets of common gas chamber set CC119 which are connected in series each other along trace of motion, and it is characterized in that according to driving direction, the depth varies from the deep to the shallow, the depth of leading section can make transmission guide hole 103 of common gate plate GC 106 expose out, and the output of fuel gas in the pressure-saved gas chamber 102 can ignite and produce dynamics, the lagging shallower section can limit common gate plate set GC 106 only to expose one-way intake valve 101, and let transmission guide hole 103 hide into gate plate sliding seat 107.

Active body used as fixed guide rail, its main structures include:

at least one set of common gate plate GC 106: common gate plate set GC 106 possesses one-way intake valve 101 facing to the lagging end of gas chamber Cx 104, pressure-saved gas chamber 102 and transmission guide hole 103 facing

end of gas chamber CC 119.

At least one set of intake exhaust gate GG 120: it is a dense thin plate, its sectional shape facing to gas chamber set CC 119 is as same as common gate plate GC 106, and it is placed at the position of 180° working angle leading to common gate plate set GC.

Gate plate set GP 1046 with penetrated hole: it is placed at the leading end of common gate plate set GC 106, this gate plate is solid structure, and at gate plate, it possesses guide hole 1047, the height of guide hole 1047 can be under hiding status in gate plate seat when it passes through shallower gas chamber section, and it will be under exposed status when it passes through deeper gas chamber section.

Gate plate seat 107: it possesses a guide groove for placing gate plate set GC and GP, on gate plate set GC and GP, there placed drive spring to press static pressure on gate plate set GC and GP and assembled an adjusting cover 126 for adjusting up and down and press spring 125 in order to adjust static pressure of spring pressed on gate plate set GC.

Plug 108 or fuel nozzle 109: it is assembled in the concave structure at the lagging end of common gate plate set GC 106 on active body which is used as fixed rail, or placed in the concave structure or guide transverse groove 119′ on common gas chamber CC 119 or its leading end which can avoid to be interfered by common gate plate set GC.

If intake port 110′ and exhaust port 111′ are assembled on active body which is used as fixed body, wherein intake port 110′ is assembled at lagging end of intake ex haust gate GG 120 and connect with intake pipe, exhaust port 111′ is placed at the leading end of intake exhaust gate GG 120 and connect with exhaust pipe.

If intake port 110′ and exhaust port 111′ are assembled at passive body which is used as motion body, at side of leading end of common gas chamber CC 119, there designed guide transverse groove 119′, at lagging end, there designed another guide transverse groove 119″, two guide transverse grooves are at different sides, and there designed an intake groove 110 which has proper distance to end of guide transverse groove 119′ at leading end of common gas chamber CC 119 on the passive body which is used as motion body, and is paralled to gas chamber CC 119, and has same phase angle with almost same length, or at the same phase angle proper distance of end of guide transverse groove 119′ at leading end of gas chamber CC 119, there placed intake port 110′ for penetrating through intake pipe, and at the same side of guide transverse groove 119″ of lagging end of gas chamber CC 119, and at the proper distance to the end of guide transverse groove 119″, there designed exhaust groove 111 which is parallel to gas chamber CC 119 and has same phase angle with almost same length or at the same phase angle proper distance of guide transverse groove 119″ at lagging end of gas chamber CC 119, there designed exhaust port 111′ for penetrating through exhaust pipe.

At the extension of lagging end of intake exhaust gate plate GG 120 of active body used as fixed body, there designed a guide groove 112 which is at the same side of guide transverse groove 119′ of leading end of gas chamber 119 on passive body which is used as motion body and is parallel to gas chamber 119 and has almost same arc length, and in rotation, it is used to transmit guide transverse groove 119′ of leading end of above gas chamber CC 119 and intake groove 110 or hole 110′ in order to let fresh fuel gas enter into, and at the extension of leading end of common gate plate GC106, there designed a guide groove 113 which is at the same side of guide transverse groove 119″ of lagging end of common gas chamber CC 119 on passive body which is used as motion body, and is parallel to gas chamber CC 119 and has almost same arc length, and in rotation, it is used to guide through guide transverse groove 119″ of gas chamber CC 119 and exhaust groove 111 or hole 111′ for exhausting waste gas.

E. Two-way drive common gate plate rotary type internal combustion engine:

Another special function of above common gate plate serial connection gas chamber type internal combustion engine is to change the driving direction of engine in accordance with changing ignition time and gas-guiding direction of common gate plate set, and method of changing gas-guiding direction of gate plate is to design two gate plate sets GCF and GCR with different gas-guiding directions and are respectively operated in different driving direction; it is described respectively according to the application on rotary type and linear type engine structures:

I. As shown in Fig. 19, two-way drive common gate plate rotary type internal combustion engine has design of internal rotor motion body which is assembled by gate plate seat gate plate set structure, this design is applied on the embodiment of rotary type disk or cylindrical or conic type, if structures of gate plate seat and common gate plate set are used as internal rotor motion body, and on the fixed body, there designed at least a set of serial connection gas chamber set of deeper gas chamber Cy 105 and shallower gas chamber Cx 104, at two ends which is at same side of gas chamber Cx 104, there placed guide transverse groove 104′, at two ends which is at same side of gas chamber Cy 105, there placed guide transverse groove 105′, guide transverse grooves 104′, 105′ of gas chambers Cx 104 and Cy 105 are placed at different sides, two sets of plug 108 or fuel nozzle 109 is assembled on the guide transverse groove 105′ at two sides of gas chamber Cy 105 of fixed body, or placed in the lower concave structure 105″ at two ends of gas chamber Cy 105 and can avoid to be interfered by motion body with common gate plate GCF 121 and GCR 122.

At the position of fixed body which is at the same side of guide transverse groove 105′ of gas chamber Cy 105 and has proper distance to end of guide transverse groove 105′, there designed an exhaust groove 111 which is parallel to gas chamber Cy 105 and has same phase angle and almost same length, or at the end of two guide transverse groove 105′ of gas chamber Cy with same phase angle and proper distance, there respectively placed exhaust port 111′, at the position of same side of guide transverse groove 104′ of gas chamber Cx 104, with proper distance to end of guide transverse groove 104′ of gas chamber Cx 104, there designed an intake groove 110 which is parallel to gas chamber Cx 104 and has same phase angle and almost same length, or at the position which has proper distance and same phase angle to the end of two sets of guide transverse groove 104′ of gas chamber Cx 104, there respectively placed exhaust port 110′, as shown in Figs. 19 and 19-1, on motion body, there designed positive rotating common gate plate set GCF 121 which is at the opposite gas guide direction and reverse rotating common gate plate set GCR 122 and gate plate seat 107, besides possessing above one-way intake valve 101, pressure-saved gas chamber 102, transmission guide hole 103, at the end contacting with gas chamber, it also possesses terminal subgate 123 which is prepressed by spring as shown in Figs.20, whether this terminal subgate 123 extends or not depends on the static pressure of spring pressed on common gate plates body GCF 121 and GCR 122, when static pressure of spring pressed on common gate plate is stronger, then end of common gate plate will constrict, at that time, common gate plate is under working status, when common gate plate is adjusted to possess smaller applied force, then subgate 123 will spring out a section, and at that time, it is under unworking status, the exposed section of terminal subgate 123 faces to the working surface, it is barrier type or possesses guide hole.

At above gate plate seat of common gate plates GCF 121 and GCR 122 there designed pressure adjusting device 126 of common gate plate which is driven by man poser or mechanism and is used to select whether common gate plate works or not, the placements of position of positive rotating gate plate set GCF 121 and reverse rotating gate plate set GCR 122 is placed in reversing relation, between the corresponding phase angles of two leading end of above two gate plates121, 122, motion body places a guide groove 113 which is at the same side of exhaust guide transverse groove of fixed body gas chamber Cy 105 and is parallel to gas chamber Cy 105 and has almost same arc length, and in rotation, it is used to guide through guide transverse groove 105′ of gas chamber Cy 105 and exhaust groove 111 or port 111′ in order to exhaust waste gas in gas chamber Cy 105.

Between the corresponding phase angles of two lagging end of positive rotating gate 121 and reverse rotating gate GCR 122 and at the same side of intake guide transverse groove 104′ of gas chamber Cx 104 on fixed body, there respectively placed a set of guide groove 102 which is parallel to gas chamber Cy 105 and has almost same arc length, and in rotation, it is used to guide through transverse groove 104$'$ of gas chamber Cx 104 and intake groove 110 or hole 110$'$ in order to let fresh fuel gas enter into.

Above mentioned changable driving direction disk type or cylindrical type or conic type internal rotor or external rotor rotary internal combustion engine with common gate plate serial connection gas chamber, its main structures include:

motion body is constituted by active body which possesses gate plate seat, gate plate set, it possesses:

common gate plate set: includes at least one set of positive rotating common gate plate set GCF 121: its characteristic is to assemble one-way intake valve 101 at leading end, and in it, it possesses pressure-saved gas chamber, and at lagging end, it possesses a transmission guide hole 103, all of three are connected through it is characterized in that when it is coupled by deeper gas chamber set Cy 105, transmission guide hole 103 of common gate plates GCF 121 will expose out to transmit fuel gas out of pressure-saved gas chamber for igniting and producing dynamics to pass through shallower gas chamber set Cx 104 and can limit common gate plate set GC to expose one-way intake valve 101 only, and transmission guide hole 103 is hidden in gate plate seat 107, the end contacting gas chamber possesses terminal subgate 123 which is prepressed and driven by spring 1241, and its terminal possesses guide hole or terminal is barrier type and strengthening the static pressure which is adjusted by spring and presses on common gate plate set and let guide hole or barrier hide into end of common gate plate set and it is under normal working status and extends out when static pressure is reduced, and let guide hole or barrier expose out of end of common gate plate set and it is under leisured status, and at least one set of reverse rotating common gate plate set GCR 122 has same structure as positive rotating common gate plate set GCF 121, both of them are placed in reverse relation.

gate plate seat 107: it possesses a guide groove for placing common gate plate set GCF 121, GCR 122, on common gate plate set GCF 121, GCR 122, there placed drive spring 125 to press static pressure on common gate plate set GCF 121, GCR 122, and assembled an adjusting cover 126 through man power or dynamic mechanism to drive and adjust up and down and press spring in order to adjust the static pressure pressed on common gate plate.

Active body structure used as fixed body: it possesses at least a set of deeper explosive exhaust gas chamber Cy 105 and shallower intake eompression gas chamber Cx 104 which are connected in series, when distance between two sets of gate plate GCF 121, GCR 122 is larger than length of passing through the leading end of gate plate set before ingiting gas chamber Cy 105, at least one set of plug 108 or fuel nozzle 109 used for positive rotating driving ignition and reverse rotating driving ignition will be respectively placed on guide transverse groove 105$'$ at two ends of gas chamber Cy 105 of passive body, or placed in the concave structure 105$''$ at two ends of gas chamber Cy 105 which can avoid to be interfered by common gate plated GCF 121 and GCR 122.

And distance between two sets of common gate plate GCF 121, GCR 122 is smaller than length of passing through the leading end of gate plate set before igniting gas chamber Cy 105, at least one set of positive reverse driving common igniting plug 108 or fuel nozzle 109 is placed on guide transverse groove 105$'$ at two ends of gas chamber Cy 105 of passive body, or placed in the lower concave structure 105$''$ at two ends of gas chamber Cy 105 which can avoid to be interfered by common gate plates GCF 121 and GCR 122.

If intake port 110$'$ and exhaust port 111$'$ are placed on active body which is used as motion body, wherein at same side of two ends of intake compression gas chamber Cx 104, there placed intake guide transverse groove 104$'$, at same side of two ends of explosive exhaust gas chamber Cy 105, there also placed exhaust guide transverse groove 105$'$, two kinds of guide transverse groove are at different sides, and between the extension of lagging end of positive rotating common gate plate set GCF 121 of active body used as motion body and the extension of the lagging end of reverse rotating common gate plate set GCR 122, there designed a guide groove 112 which is at the smme side of guide transverse groove 104$'$ at two ends of gas chamber Cx 104 on passive body used as fixed body and is parallel to gas chamber Cx and has almost same arc length and connects through intake pipe in order to let fresh fuel gas enter into in rotation.

And at the extension of leading end of positive rotating common gate plate set GCF 121 and reverse rotating common gate plate set GCR 122, there designed a guide groove 113 which is at the same side of guide transverse groove 105$'$ at two ends of explosive exhaust gas chamber Cy 105 on passive body which is used as motion body and is parallel to gas chamber Cy 105 and has almost same arc length and leads to exhaust pipe to exhaust waste gas in rotation.

If intake port 110$'$ and exhaust port 111$'$ are assembled at passive body which is used as fixed body, and at same side of two ends of gas chamber Cx 104, there placed guide transverse groove 104$'$, at same side of two ends of gas chamber Cy 105, there also placed guide transverse groove 105', guide transverse groove of gas chambers Cx 104 and Cy 105 are at different side positions, and at the same side of guide transverse groove 105' of gas chamber Cy 105 on the passive body which is used as fixed body, at the position which has proper distance to end of guide transverse groove 105', there designed an exhaust groove 111 which is parallel to gas chamber Cy 105 and has same phase angle and almost same length, or at the position of same phase angle and proper distance to end of guide transverse groove 105' at the lagging end of gas chamber Cy 105, there placed exhaust port 111' to lead to exhaust pipe, and at the same side of guide transverse groove 104' of gas chamber Cx 104, and at the position which has proper distance to end of guide transverse groove 104', there designed an intake groove 110 which is parallel to gas chamber Cx 104 and has same phase angle and almost same length, or at the position which has same phase angle and proper distantance to guide transverse groove 104' at leading end of gas chamber Cx 104, there placed intake port 110' leading to intake pipe.

At the extension of leading end of positive rotating common gate plate set GCF 121 and reverse common gate plate set GCR 122 of above-mentioned active body which is used as motion body, there designed to guide groove 113 which is at the same side of exhaust transverse pipe 105' of gas chamber Cy 105 on passive body used as fixed body and is parallel to gas chamber Cy 105 and has almost same arc length, and in rotation it is used to transmit guide transverse groove 105' and exhaust groove 111 or hole 111' of above gas chamber Cy 105 in order to exhaust waste gas of gas chamber Cy, and at the extension of lagging end of positive rotating common gate plate set GCF 121 and reverse rotating common gate plate set GCR 122, there placed guide groove 112 which is at the same side of intake transverse groove 104' of gas chamber set Cx 104 on passive body used as fixed body and is parallel to gas chamber Cx 104 and has almost same arc length, and in rotation, it is used to guide through guide transverse groove 104'; intake groove 110 or port 110' of gas chamber Cx 104 in order to let fresh fuel gas enter into.

II. As shown in Figs. 21 and 22, it is a graphic view of exteenal rotor type embodiment of Fig. 19, in figures, there designed motion body with gate plate seat 107 and common gate plate sets GCF 121 and GCR 122 and it is ring type structure and is coupled with cup type fixed body which possesses serial connection gas chamber set Cx 104 and Cy 105 to accept the drive of the latter, the placements of intake port 110 or exhaust port 111, plug 108 or fuel nozzle 109 and gas chambers Cx 104, Cy 105, common gate plate set GCF 121, GCR 122 are as same as shown in Fig. 19.

III. As shown in Figs. 23 and 24, it is two-way drive common gate plate rotary type internal combustion engine, wherein gas chamber set structure is internal rotor motion body and the structure assembled gate plate seat 107 and gate plate set GCF 121 and GCR 122 is used as fixed body and possesses at least one set of deeper gas chamber Cy 105 and shallower gas chamber Cx 104 which are gas chamber set connected in series and used as internal rotor motion body, and at the same side of two ends of gas chamber Cx 104, there designed guide transverse groove 104' to couple with intake groove 110 on fixed body, this long groove type intake port 110 is placed between the lagging end of positive rotating common gate plate set GCF 121 and reverse common gate plate set, and at two ends of gas chamber Cy 105 and different side of guide transverse groove 104' of gas chamber Cx 104, there also respectively placed guide transverse groove 105' to couple with exhaust groove 111 which is on fixed body and has almost same length as gas chamber Cy 105, this exhaust groove 111 is placed between the leading end of positive rotating common gate plate set GCF 121 and reverse rotating common gate plate set GCR 122; and plug 108 or fuel nozzle 109 is respectively placed at the lagging side of positive rotating common gate plate set GCF 121 and reverse rotating common gate plate set GCR 122 and coupled on the trace of gas chamber set Cy 105. or placed in the concave structure 105'' on exhaust transverse groove 105' which can avoid to be interfered by motion body; besides possessing above-mentioned one-way intake valve 101, pressure-saved gas chamber 102, transmission guide hole 103, at the end contacting with gas chamber, gate plate set also possesses a terminal subgate 123 which is pre-pressed by spring, whether this terminal subgate 123 extends or not depends on the static pressure of spring 125 pressed on common gate plate body GCF 121, GCR 122, when static pressure of spring pressed on common gate plate is stronger, then end of common gate plate will constrict, at that time, common gate plate is under working status, when common gate plate is adjusted to accept smaller applied force, then subgate will spring out a section, and at that time, it is under working status, the exposed section of terminal subgate 123 faces to the working surface, it is barrier type or possesses guide hole.

At above gate plate seat 107 of common gate plate, there also placed pressure adjusting device 126 of common gate plate which is driven by man power or mechanism and is used to select whether common gate plate works or not, the placement position of positive rotating gate plate set GCF 121 and reverse rotating gate plate set GCR 122 is placed in reverse relation.

IV. As shown in Figs. 25 and 26, it is a graphic view of external rotor type embodiment of Figs. 23, and 24,

EP 0 397 996 A2

in figures, the structures of gate plate seat 107 and gate plate set GCF 121 and GCR 122 are the cup type or ring type fixed body, and is coupled with ring type serial connected gas chamber set Cx 104, Cy 105 to accept the drive, and the placements of intake port 110′, exhaust port 111′, plug 108 or fuel nozzle 109, pressure set Cx 104, Cy 105, and common gate plate set GCF 121, GCR 122 are as same as shown in Fig. 20.

Above-mentioned changable driving direction disk type or cylindrical type or conic type internal rotor or external rotor rotary internal combustion engine with common gate plate serial connection gas chamber, its main structures include:

Fixed body is constituted by active body which possesses gate plate seat, gate plate set, it possesses:

common gate plate set: includes at least one set of positive rotating common gate plate set GCF 121, its characteristic is to assemble one-way intake valve 101 at leading end, and iniit, it possesses pressure-saved gas chamber, and at lagging end, it possesses a transmission guide hole 103, all of three are connected through, it is characterized in that when it is coupled by deeper gas chamber set Cy 105, transmission guide hole 103 of common gate plates GCF 121 will expose out to transmit fuel gas out of pressure-saved gas chamber for igniting and producing dynamics to pass through shallower gas chamber set Cx 104 and can limit common gate plate set GC to expose one-way intake valve 101 only, and transmission guide hole 103 is hidden in gate plate seat 107, at the end contacting with gas chamber there possessed terminal subgate 123 which is pre-pressed and driven by spring 1241 and its terminal possesses guide hole or terminal is barrier type and strengthens the static pressure which is adjusted by spring and presses on common gate plate set and let guide hole or barrier hide into end of common gate plate set and it is under normal working status and extends out when static pressure is reduced, and let guide hole or barrier expose out of end of common gate plate set and it is under leisured status, and at least one set of reverse rotating common gate plate set GCR 122 has same structure as positive rotating common gate plate set GCF 121, both of them are placed in reverse relation.

gate plate seat 107: it possesses a guide groove for placing common gate plate set GCF 121, GCR 122, on common gate plate set GCF 121, GCR 122, there placed spring 125 to press static pressure on common gate plate set GCF 121, GCR 122, and assembled and adjusting cover 126 driven by man power or dynamic mechanism to adjust up and down and press spring in order to adjust the static pressure pressed on common gate plate.

Active body structure used as motion body: it possesses at least a set of deeper explosive exhaust gas chamber Cy 105 and shallower intake compression gas chamber Cx 104 which are connected in series.

When distance between two sets of gate plate GCF 121, GCR 122 is larger than length of gas chamber Cy 105 passing through the leading end of gate plate set before ingiting, at least one set of plug 108 or fuel nozzle 109 used for positive rotating driving ignition and reverse rotating driving ignition is placed at the position on active body which is used as fixed body for coupling with guide transverse groove 105′ at two ends of gas chamber Cy 105 on the passive body which is used as motion body, or placed in the concave structure 105″ at the lagging end of common gate plate set GCF 121, GCR 122 which can avoid to be interfered by passive body; and distance between two sets of common gate plate GCF 121, GCR 122 is smaller than length of gas chamber Cy105 passing through the leading end of gate plate set before igniting, at least one set of plug 108 or fuel nozzle 109 used for positive reverse driving common ignition is placed on the position on active body which is used as fixed body for coupling with guide transverse groove 105′ at two ends of gas chamber Cy 105 on the passive body which is used as motion body, or placed in the concave structure 105″ at the lagging end of common gate plate set GCF 121, GCR 122 which can avoid to be interfered by motion body.

If intake port 110′ and exhaust port 111′ are placed o on active body which is used as fixed body, wherein at same side of two ends of intake compression gas chamber Cx 104, there placed intake guide transverse groove 104′, at same side of two ends of explosive exhaust gas chamber Cy 105, there also placed exhaust guide transverse groove 105′, two kinds of guide transverse groove are at different sides, and between the extension of lagging end of positive rotating common gate plate set GCF 121 of active body used as fixed body and between the lagging ends of reverse rotating common gate plate set GCR 122, there extended and designed a guide groove 112 which is at the same side of guide transverse groove 104′ at two ends of gas chamber Cx 104 on passive body used as fixed body and is parallel to gas chamber Cx and has almost same arc length and connects through intake pipe in order to let fresh fuel gas enter into in rotation; and between the leading ends of positive rotating common gate plate set GCF 121 and reverse rotating common gate plate set GCR 122, there extended and designed a guide groove 113 which is at the same side of guide transverse groove 105′ at two ends of explosive exhaust gas chamber Cy 105 on passive body which is used as motion body and is parallel to gas chamber Cy 105 and has almost same arc length and leads to exhaust pipe to exhaust waste gas in rotation.

38

If intake port 110′ and exhaust port 111′ are assembled at passive body which is used as motion body, and at same side of two ends of gascchamber Cx 104, there placed guide transverse groove 104″, at same side of two ends of gas chamber Cy 105, there also placed guide transverse groove 105′, guide transverse grooves of gas chambers Cx 104 and Cy 105 are at different side positions, and at the same side of guide transverse groove 105′ of gas chamber Cy 105 on the passive body which is used as motion body, at the position which has proper distance to end of guide transverse groove 105′, there designed an exhaust groove 111 which is parallel to gas chamber Cy 105 and has same phase angle and almost same length, or at the position of same phase angle and proper distance to end of guide transverse groove 105′ at the lagging end of gas chamber Cy 105, there placed exhaust port 111′ to lead to exhaust pipe, and at the same side of guide transverse groove 104′, of gas chamber Cx 104 and at the position which has proper distance to end of guide transverse groove 104′, there designed an intake groove 110 which is parallel to gas chamber Cx 104 and has same phase angle and almost same length, or at the position which has same phase angle and proper distance to guide transverse groove 104′ at leading end of gas chamber Cx 104, there placed intake port 110′ leading to intake pipe.

At the extension between leading ends of positive rotating common gate plate set GCF 121 and reverse common gate plate set GCR 122 of above-mentioned active body which is used as fixed body, there designed a guide groove 113 which is at the same side of exhaust transverse pipe 105′ of gas chamber Cy 105 on passive body used as motion body and is parallel to gas chamber Cy 105 and has almost same arc length, and in rotation, it is used to transmit guide transverse groove 105′ and exhaust groove 111 or hole 111′ of above gas chamber Cy 105 in order to exhaust waste gas of gas chamber Cy; and at the extension between lagging ends of positive rotating common gate plate set GCF 121 and reverse rotating common gate plate set GCR 122, there placed guide groove 112 which is at the same side of intake transverse groove 104′ of gas chamber set Cx 104 on passive body used as fixed body and is parallel to gas chamber Cx 104 and has almost same arc length, and in rotation, it is used to guide through guide transverse groove 104′, intake groove 110 or port 110′ of gas chamber Cx104 in order to let fresh fuel gas enter into.

F. Two-way drive common gate plate linear type internal combustion engine:

I. Above design of changable drive direction of engine is applied on linear drive, as shown in Figs. 27 and 27-1, it is two-way drive common gate plate linear type engine, wherein structure of gate plate seat gate plate set is motion body, and structure of gate plate seat 107 and clockwise, counter-clockwise common gate plate set GCF 121, GCR 122 is motion body, and structure of serial connection gas chamber set′ Cx 105, Cy 105 is the fixed rail, gas chamber Cy105 is deeper than gas chamber Cx 104, and at same side of two ends of gas chamber Cx104, there respectively designed intake guide transverse groove 104′; at same side of two ends of gas chamber Cy 105, there respectively designed exhaust guide transverse groove 105′, guide transverse grooves 104′, 105′ of gas chambers Cx 104, Cy 105 are at different sides; an exhaust groove 111 which is parallel to gas chamber Cy 105 and has same phase angle and almost same length is placed at the same side of guide transverse groove 105′ of gas chamber Cy 105 and has proper distance to end of guide transverse groove 105′, or at the position which has same phase angle and proper distance to the end of two guide transverse groove 105′ of gas chamber Cy 105, there respectively placed exhaust port 111′; or at the position which has proper distance to the end and same side of guide transverse groove 104′ of gas chamber Cx 104, there designed an intake groove 110 which is parallel to gas chamber Cx 104 and has same phase angle and almost same length, or at the position which has same phase angle and proper distance to the end of two guide transverse groove 104′ of gas chamber Cx 104, there respectively placed exhaust port 110′; its clockwise and counterclockwise driving plug 108 or fuel nozzle 109 is placed at the lagging end of common gate plate set GCF 121 and GCR 122 on motion body, or placed on the guide transverse groove 105′ at two ends of gas chamber Cy 105 of fixed rail, or placed on the concave structure 105″ which can avoid to be interfered by common gate plates GCF 121, GCR 122.

Common gate plate set GCF and GCR respectively have at least two pieces of gate plate, in which gate plate with same drive direction is placed at the interval of a working cycle, and another gate plate with different drive direction is placed at the position of the interval of $\frac{1}{2}$ working cycle as above-mentioned, besides possessing one-way intake valve 101, pressure-saved gas chamber 102 and transmission guide hole 103, gate plate also possesses a terminal subgate 123 prepressed by spring at the end which presses and contacts gas chamber, this terminal subgate 123 depends on the static pressure of spring 125 pressed on common gate plate body GCF 121 and GCR 122 to decide whether it will extend or not, when common gate plate is adjusted to accept smaller applied force, then subgate 123 will spring out a section, and at that time, it is under working status, the exposed section of terminal subgate 123 faces to the working surface, it is barrier type or possesses guide hole.

At base of common gate plate set GCF 121 and GCR 122, there also designed pressure adjusting device 126 of common gate plate which is driven by man power or mechanism and is used to select whether common gate plate works or not, the placement position of positive rotating common gate plate set GCF 121 and reverse rotating gate plate set GCR is placed in reverse relation, and between two leading ends of two sets of reverse gate plate set GCF 121 and GCR 122, there designed a guide groove 113 which is at the same side of exhaust guide transverse groove 105$'$ of gas chamber Cy 105 on fixed body and is parallel to gas chamber Cy 105 and has almost same length, and in rotation, it is used to guide through guide transverse groove 105$'$ of gas chamber Cy 105 and exhaust groove 111 or hole 111$'$ in order to exhaust waste gas of Cy; and between two lagging ends of positive rotating common gate plate GCF 121 and reverse rotating common gate plate GCR 122, there designed a set of guide groove 112 which is at the same side of intake guide transverse groove 104$'$ of gas chamber Cx 104 on fixed body and is parallel to gas chamber Cx 104 and has almost same length; and in rotation, it is used to guide through guide transverse groove 104$'$, intake groove 110 or hole 110$'$ of gas chamber Cx 104 in order to let fresh fuel gas enter into.

Figs. 27-2 to 27-7 are the side elevational views of the working procedure of above internal combustion engine, Figs. 27-8 to 27-13 are the top elevational view of the working procedure of above internal combustion engine.

Above-mentioned changable driving direction linear type engine, its main structures include:

Linear type motion body is constituted by active body which possesses gate plate seat, gate plate set, it possesses:

common gate plate set: includes at least one set of positive rotating common gate plate set GCF 121, its characteristic is to assemble one-way intake valve 101 at leading end, and in it, it possesses pressure-saved gas chamber, and at lagging end, it possesses a transmission guide hole 103, all of three are connected through, it is characterized in that when it is coupled by deeper gas chamber set Cy 105, transmission guide hole 103 of common gate plates GCF 121 will expose out to transmit fuel gas out of pressure-saved gas chamber for igniting and producing dynamics to pass through shallower gas chamber set Cx 104 and can limit common gate plate set GC to expose one-way intake valve 101 only, and transmission guide hole 103 is hidden in gate plate seat 107, at the end contacting with gas chamber, there possessed terminal subgate 123 which is pre-pressed and driven by spring 1241 and its terminal possesses guide hole or terminal is barrier type and strengthens the static pressure which is adjusted by spring and presses on common gate plate set and let guide hole or barrier hide into end of common gate plate set and it is under normal working status and extends out when static pressure is reduced, and let guide hole or barrier expose out of end of common gate plate set and it is under leisured status, and at least one set of reverse rotating common gate plate set GCR 122 has same structure as positive rotating common gate plate set GCF 121, both of them are placed in reverse relation.

gate plate set GP 1046 with penetrated hole: it is placed at the leading end of common gate plate set GC 106, this gate plate is solid structure, and at gate plate, it possesses guide hole 1047, the height of guide hole 1047 can be under hiding status in gate plate seat when it passes through shallower gas chamber Cx 104, and it will be under exposed status when it passes through deeper explosive exhaust gas chamber Cy 105.

When distance between two sets of gate plate GCF 121, GCR 122 is larger than length of gas chamber Cy 105 passing through the leading end of gate plate set before igniting, at least one set of plug 108 or fuel nozzed for positive rotating driving ignition and reverse rotating driving ignition is placed on guide transverse groove 105$'$ at two ends of gas chamber Cy 105 of passive body, or placed in the concave structure 105$''$ at two ends of gas chamber Cy 105 which can avoid to be interfered by common gate plates GCF 121 and GCR 122 on motion body; and distance betw between two sets of common gate plate GCF 121, GCR 122 is smaller than length of gas chamber Cy 105 passing through the leading end of gate plate set before igniting, at least one set of plug 108 or fuel nozzle 109 for positive reverse driving common ignition is placed on guide transverse groove 105$'$ at two ends of gas chamber Cy 105 of passive body, or placed in the concave structure 105$''$ at two ends of gas chamber Cy 105 which can avoid to be interfered by common gate plates GCF 121 and GCR 122.

gate plate seat: it possesses a guide groove for placing common gate plate set GCF 121, GCR 122, on common gate plate set GCF 121, GCR 122, there placed spring 125 to press static pressure on common gate plate set GCF 121, GCR 122, and assembled an adjusting cover 126 driven by man power or dynamic mechanism to adjust up and down and press spring in order to adjust the static pressure pressed on common gate plate.

Passive body used as fixed body: it is constituted by passive body which possesses at least one set of deeper explosive exhaust gas chamber Cy 105 and shallower intake compression gas chamber Cx 104 connected together in series.

If intake port 110$'$ and exhaust port 111$'$ are placed on active body which is used as fixed guide rail, wherein at same side of two ends of intake compression gas chamber Cx 104, there placed intake guide transverse groove 104′, at same side of two ends of explosive exhaust gas chamber Cy 105, there also placed exhaust guide transverse groove 105′, two kinds of guide transverse groove are at different sides, and between the extension of lagging end of positive rotating common gate plate set GCF 121 of active body used as fixed guide rail and between the lagging ends of reverse rotating common gate plate set GCR 122, there extenddd and designed a guide groove 112 which is at the same side of guide transverse groove 104′ at two ends of gas chamber Cx 104 on passive body used as motion body and is parallel to gas chamber Cx and has almost same length and connects through intake pipe in order to let fresh fuel gas enter into in rotation; and between the leading ends of positive rotating common gate plate set GCF 121 and reverse rotating common gate plate set GCR 122, there extended and designed a guide groove 113 which is coupled at the same side of guide transverse groove 105′ at two ends of explosive exhaust gas chamber Cy 105 on passive body which is used as motion body and is parallel to gas chamber Cy 105 and has almost same length and leads to exhaust pipe to exhaust waste gas in rotation.

If intake port 110′ and exhaust port 111′ are assembled at passive body which is used as fixed guide rail, as shown in Figs. 28 and 28-1, and at same side of two ends of gas chamber Cx 104, there placed guide transverse groove 104′, at same side of two ends of gas chamber Cy 105, there also placed guide transverse groove 105′, guide transverse grooves of gas chambers Cx 104 and Cy 105 are at different side positions, and at the same side of guide transverse groove 105′ of gas chamber Cy 105 on the passive body which is used as fixed guide rail, at the position which has proper distance to end of guide transverse groove 105′, there designed an exhaust groove 111 which is parallel to gas chamber Cy 105 and has same phase angle and almost same length, or at the position of same phase angle and proper distance to end of guide transverse groove 105′ at the lagging end of gas chamber Cy 105, there placed exhaust port 111′, and at the same side of guide transverse groove 104′ of gas chamber Cx 104, and at the position which has proper distance to end of guide transverse groove 104′, there designed as intake groove 110 which is parallel to gas chamber Cx 104 and has same phase angle and almost same length, or at the position which has same phase angle and proper distance to guide transverse groove 104′ at leading end of gas chamber Cx 104, there placed intake port 110′ leading to intake pipe.

At the extension between leading ends of positive rotating common gate plate set GCF 121 and reverse common gate plate set GCR 122 of above-mentioned active body which is used as motion body, there designed a guide groove 113 which is at the same side of exhaust transverse pipe 105′ of gas chamber Cy 105 on passive body used as fixed body and is parallel to gas chamber Cy 105 and has almost same arc length, and in rotation, it is used to transmit guide transverse groove 105′ and exhaust groove 111 or hole 111′ of above gas chamber Cy 105 in order to exhaust waste gas of gas chember Cy; and at the extension between lagging ends of positive rotating common gate plate set GCF 121 and reverse rotating common gate plate set GCR 122, there placed guide groove 112 which is at the same side of intake transverse groove 104′ of fixed guide rail and is parallel to gas chamber Cx 104 and has almost same arc length, and in rotation, it is used to guide through guide transverse groove 104′, intake groove 110 or port 110′ of gas chamber Cx 104 in order to let fresh fuel gas enter into.

Figs. 28-2 to 28-7 are the side elevational views of the working procedure of this method, Figs. 28-8 to 28-13 are the top elevational view of the working procedure of this method. Its working cycle is shown in Table 5.

II. As shown in Figs. 29 and 29-1, it is two-way drive common gate plate linear type internal combustion engine, wherein structure of gas chamber set is motion body, and structure of gate plate seat 107 and clockwise, counterclockwise common gate plate set GCF 121, GCR 122 is fixed rail, and structure of serial connection gas chamber set Cx 105, Cy 105 is motion body, gas chamber Cy 105 is deeper than gas chamber Cx 104, and at same side of two ends of gas chamber Cx 104, there respectively designed intake guide transverse groove 104′; at same side of two ends of gas chamber Cy 105, there respectively designed exhaust guide transverse groove 105′, guide transverse grooves 104′, 105′ of gas chambers Cx 104 and Cy 105 are at different sides; an exhaust groove 111 which is parallel to gas chamber Cy 105 and has same phase angle and almost same length is placed at the same side of guide transverse groove 105′ of gas chamber Cy 105 and has proper distance to end of guide transverse groove 105′, or at the position which has same phase angle and proper distance to the end of two guide transverse grooves 105′ of gas chamber Cy 105, there respectively placed exhaust port 111′, as shown in Fig. 29-1; and at the position which has proper distance to the end and same side of guide transverse groove 104′ of gas chamber Cx 104, there designed an intake groove 110 which is parallel to gas chamber Cx 104 and has same phase angle and almost same length, or at the position which has same phase angle and proper distance to the end of two guide transverse grooves 104′ of gas chamber Cx 104, there respectively placed intake port 110′, as shown in Fig. 29; its clockwise and counterclockwise driving plug 108 or fuel nozzle 109 is placed at the lagging end of common gate plate set GCF 121 and GCR 122 on fixed rail, or placed on the guide transverse groove 105′ at two ends of gas chamber Cy 105 of motion body, or placed on the concave structure 105″ which can avoid to be interfered by common gate plates GCF 121, GCR 122.

Common gate plate set GCF and GCR respectively has at least two pieces of gate plate, in which gate plate with same drive direction is placed at the interval of a working cycle, and another gate plate with different drive direction is placed at the position of the interval of $\frac{1}{2}$ working cycle as above-mentioned, besides possessing one-way intake valve 101, pressure-saved gas chamber 102 and transmission guide hole 103, gate plate also possesses a terminal subgate 123 prepressed by spring at the end which presses and contacts gas chamber, this terminal subgate 123 depends on the static pressure of spring 125 pressed on common gate plate body GCF 121 and GCR 122 to decide whether it will extend or not, when common gate plate is adjusted to accept smallel applied force, then subgate 123 will spring out a section, and at that time, it is under working status, the exposed section of terminal subgate 123 faces to the working surface, it is barrier type or possesses guide hole.

At base of common gate plate set GCF 121 and GCR 122, there also designed pressure adjusting device 126 of common gate plate which is driven by man power or mechanism and is used to select whether common gate plate works or not, the placement position of positive rotating common gate plate set GCF 121 and reverse rotating gate plate set GCR 122 is placed in reverse rotation, and between two leading ends of two sets of reverse gate plate set GCF 121 and GCR 122, there designed a guide groove 113 which is at the same side of exhaust guide transverse groove 105′ of gas chamber Cy 105 on motion body and is parallel to gas chamber Cy 105 and has almost same length, and in rotation, it is used to guide through guide transverse groove 105′ of gas chamber Cy 105 and exhaust groove 111 or hole 111′ in order to exhaust waste gas of Cy; and between two lagging ends of positive rotating common gate plate GCF 121 and reverse rotating common gate plate GCR 122, there designed a set of guide groove 112 which is at the same side of intake guide transverse groove 104′ of gas chamber Cx 104 on fixed body and is parallel to gas chamber Cx 104 and has almost same length, and in rotation, it is used to guide through guide transverse groove 104′, intake groove 110 or hole 110′ of gas chamber Cx 104 in order to let fresh fuel gas enter into, its working procedure is shown in Figs. 29-2 to 29-7.

And fuel supplying system and exhaust system also can be placed on fixed guide rail, as shown in Figs. 30 and 30-1, guide transverse grooves 104′, 105′ of gas chambers Cx 104, Cy 105 on fixed rail an directly transmit out waste gas and let fuel gas enter into, the working procedure of this method is shown in Figs. 30-2 to 30-7.

Above-mentioned changable driving direction linear type engine, its main structures include:
Linear type motion body is costituted by active body which possesses gate plate seat, gate plate set, it possesses:

common gate plate set: includes at least one set of positive rotating common gate plate set GCF 121, its characteristic is to assemble one-way intake valve 101 at leading end, and in it, it possesses pressure-saved gas chamber, and at lagging end, it possesses a transmission guide hole 103, all of three are connected through, it is characterized in that when it is coupled by deeper gas chamber set Cy 105, transmission guide hole 103 of common gate plates GCF 121 will expose out to transmit fuel gas out of pressure-saved gas chamber for igniting and producing dynamics to pass through shallower gas chamber set Cx 104 and can limit common gate plate set GC to expose one-way intake valve 101 only, and transmission guide hole 103 is hidden in gate plate seat 107, at the end contacting with gas chamber, there possessed terminal subgate 123 which is pre-pressed and driven by spring 1241 and its terminal possesses guide hole or terminal is barrier type and strengthens the static pressure which is adjusted by spring and presses on common gate plate set and let guide hole or barrier hide into end of common gate plate set and it is under normal working status and extends out when static pressure is reduced, and let guide hole or barrier expose out of end of common gate plate set and it is under leisured status, and at least one set of reverse rotating common gate plate set GCR 122 has same structure as positive rotating common gate plate set GCF 121, both of them are placed in reverse relation.

gate plate set GP 1046 with penetrated hole: it is placed at the leading end of common gate plate set GC 106, this gate plate is solid structure, and at gate plate, it possesses guide hole 1047, the height of guide hole 1047 can be under hiding status in gate plate seat when it passes through shallower gas chamber Cx 104, and it will be under exposed status when it passes through deeper explosive exhaust gas chamber Cy 105.

When distance between two sets of gate plate GCF 121 GCR 122 is larger than length of gas chamber Cy 105 passing through the leading end of gate plate set before igniting, at least one set of plug 108 or fuel nozzle 109 used for positive rotating driving ignition and reverse rotating driving ignition is placed at the position on active body which is used as fixed guide rail for coupling with guide transverse groove 105′ at two ends of gas chamber Cy 105 on the passive body which is used as motion body, or placed in the concave structure 105" at the lagging end of common gate plate set GCF 121, GCR 122 which can avoid to be interfered by passive body; and distance between two sets of common gate plate GCF 121, GCR 122 is smaller than length of gas chamber Cy 105 passing through the leading end of gate plate set before igniting, at least one set of plug 108 or fuel nozzle 109 used for positive reverse driving common ignition is placed on the position on active body which is used as fixed guide rail for coupling with guide transverse groove 105' at two ends of gas chamber Cy 105 on the passive body which is used as motion body, or placed in the concave structure 105" at the lagging end of common gate plate set GCF 121, GCR 122 which can avoid to be interfered by passive body.

gate plate seat: it possesses a guide groove for placing common gate plate set GCF 121, GCR 122, on common gate plate set GCF 121, GCR 122, there placed spring 125 to press static pressure on common gate plate set GCF 121, GCR 122, and assembled on adjusting cover 126 driven by man power or dynamic mechanism to adjust up and down and press spring in order to adjust the static pressure pressed on common gate plate.

Passive body used as fixed body: it is constituted by passive body which possesses at least one set of deeper explosive exhaust gas chamber Cy 105 and shallower intake compression gas chamber Cx 104 connected together in series.

If intake port 110' and exhaust port 111' are placed on active body which is used as fixed guide rail, wherein at same side of two ends of intake compression gas chamber Cx 104, there placed intake guide transverse groove 104', at same side of two ends of explosive exhaust gas chamber Cy 105, there also placed exhaust guide transverse groove 105' two kinds of guide transverse groove arc at defferent sides, and between the extension of lagging end of positive rotating common gate plate set GCF 121 of active body used as fixed guide rail and between the lagging ends of reverse rotating common gate plate set GCR 122, there extended and designed a guide groove 112 which is at the same side of guide transverse groove 104' at two ends of gas chamber Cx 104 on passive body used as motion body and is parallel to gas chamber Cx and has almost same length and connects through intake pipe in order to let fresh fuel gas enter into in rotation; and between the leading ends of positive rotating common gate plate set GCF 121 and reverse rotating common gate plate set GCR 122, there extended and designed a guide groove 113 which is coupled at the same side of guide transverse groove 105' at two ends of explosive exhaust gas chamber Cy 105 on passive body which is used as motion body and is parallel to gas chamber Cy 105 and has almost same length and leads to exhaust pipe to exhaust waste gas in rotation.

If intake port 110' and exhaust port 111' are assembled at passive body which is used as motion body, and at same side of two ends of gas chamber Cx 104, there placed guide transverse groove 104', at same side of two ends of gas chamber Cy 105, there also placed guide transverse groove 105', guide transverse groove of gas chambers Cx 104 and Cy 105 are at different side positions, and at the same side of guide transverse groove 105' of gas chamber Cy 105 on the passive body which is used as motion body, at the position which has proper distance to end of guide transverse groove 105', there designed an exhaust groove 111 which is parallel to gas chamber Cy 105 and has same phase angle and almost same length, or at the position of same phase angle and proper distance to end of guide transverse groove 105' at the lagging end of gas chamber Cy 105, there placed exhaust port 111' to lead to exhaust pipe, and at the same side of guide transverse groove 104' of gas chamber Cx 104, and at the position which has proper distance to end of guide transverse groove 104', there designed an intake groove 110 which is parallel to gas chamber Cx 104 and has same phase angle and almost same length, or at the position which has same phase angle and proper distance to guide transverse groove 104' at leading end of gas chamber Cx 104, there placed intake port 110' leading to intake pipe.

At the extension between leading ends of positive rotating common gate plate set GCF 121 and reverse common gate plate set GCR 122 of above-mentioned active body which is used as fixed body, there designed a guide groove 113 which is at the same side of exhaust transverse pipe 105' of gas chamber Cy 105 on passive body used as motion body and is parallel to gas chamber Cy 105 and has almost same arc length, and in rotation, it is used to transmit guide transverse groove 105' and exhaust groove 111 or hole 111' of above gas chamber Cy 105 in order to exhaust waste gas of gas chamber Cy 105, and at the extension between lagging ends of positive rotating common gate plate set GCF 121 and reverse rotating common gate plate set GCR 122, there placed guide groove 112 which is at the same side of intake transverse groove 104' of fixed guide rail and is parallel to gas chamber Cx 104 and has almost same arc length, and in rotation, it is used to guide through guide transverse groove 104', intake groove 110 or port 110' of gas chamber Cx 104 in order to let fresh fuel gas enter into.

Table 4 is the working cycle of common gate plate linear type internal combustion engine, Table 5 is the working cycle of common gate plate common gas chamber linear type internal combustion engine.

43

Above clockwise, counterclockwise driving engine as shown in Figs. 19,21,22, 23, 24, 25, 26, 27, 27-1, 29, 29-1, its selection method of positive, reverse rotating drive is that firstly it is selected and driven by man power or other electromagnetic or fluid drive or other dynamic drive element and then lock the adjusting plug of spring of the required rotating direction common gate plate set, and release adjusting plug of spring opposed to the required driving direction common gate plate set, and let terminal subgate expose out, and then starting motor or other starting device to start forward to the driving direction, due to the static pressure of spring which is opposed to the required driving direction of common gate plate set is smaller, and expose out subgate which is barrier type or possesses guide hole, before, when it is in rotation, it can avoid to be interfered, and let engine work in the same working procedure with one-way rotation; and change of ignition and combustion can be obtained by means of moving ignition time of conventional each item, for example, using photo-electric type time detecting device, it assembled two sets of photoelectric sensor with different phase in order to provide the evidence respectively for ignition and combustion time in different driving direction, or using came touch type time detecting device, through two sets of switch with different phase, it respectively provide evidence respectively for ignition and combustion time in different driving direction; if it uses other method of detecting device, electromagnetic sensor, it is also same as above-mentioned; if it is applied to the internal combustion engine ( i.e. diesed engine) which directly injet oil to high temperature high pressure air, and its injecting time can be reached by moving and controlling phase of cam through mechanical method.

Above clockwise, counterclockwise internal combustion engine, wherein, its fuel supplying system and exhaust system are placed in the fixed body when it is rotary drive type; and when it is the linear type embodiment, it depends on the requirement to select the outlet of intake and exhaust pipe in order to place fuel supplying system and exhaust system in the motion body or fixed body.

And the characteristic of the relating each gas chamber is: gas chamber Cx is shallower, gas chamber Cy is deeper, and both of them possess same lengths or different length, and same shapes along motion direction, and closely connect with common gate plates GCF and GCR, the largest depth of gas chamber Cx is used for common gate plates GCF and GCR to slide into, and let one-way intake valve on GCF and GCR completely face to the gas of gas chamber Cx which will be compressed, and compress and store in the pressure-saved gas chamber, and transmission guide hole is still hidden and sealed in the gate sliding seat, and the largest depth of gas chamber Cy is used for gate plates GCF and GCR to slide down and let transmission guide hole completely expose out in order to guide high pressure gas of pressure-saved gas chamber in gate body into explosive exhaust gas chamber Cy, and at the leading end of Cy, there designed a guide transverse groove which is used for placing plug or fuel nozzle, depth of gas chamber stridden by crack of transverse groove can keep transmission guide hole hidden in the gate plate seat, gas chambers Cx and Cy possess bottoms with even depth, in order to let the working condition of common gate plate set GCF and GCR which respectively slide into from two ends be same.

B. Independent gate plate type internal combustion engine with exchange gas chamber and separate gas chamber:

Comcept:

The design of independent gate plate type internal combustion engine with exchange gas chamber and separate gas chamber is to let active body with gate plate set and passive body with gas chamber set couple together to form a rotary type or linear type engine, and its main characteristic is to use the method of connecting gas chamber guide transverse groove and pressure-saved gas chamber set or method of striding over pressure-s saved gas chamber in order to increase the effective working angle of gas chamber in engine, as shown in Fig. 31, comparing the method of connecting gas chamber guide transverse groove 105' and pressure-saved gas chamber set 1060 with the conventional vertical groove method, difference between them is almost one time, the exhaust of working efficiency is reduced, and its effectiveness i is obvious, as shown in Fig. 32, it is the structure of stridding pressure-saved gas chamber 1060 which also can enlarge the working angle, and another characteristic of this design is that after ignition and combustion of fuel gas in gas chamber Cy 105, exchange gas chambers CZ 1060 and Cy 105 will separate firstly, and then Cy 105 exhaust, therefore, exchange gas chamber CZ 1060 can store waste gas of high pressure for return combustion of waste gas and release the saved pressure before next circulatory ignition, and let pressure of combustion gas be promoted. As shown in Figs. 32-1 and 33, it is the embodiment of disc type rotary internal combustion engine, in figur, active body with gate plate set Gx 1040, Gy 1050 and exchange gas chamber CZ 1060 is used as fixed and structure of passive body with gas chamber set Cx 104, Cy 105 is used as motion body, inner ring of ring type gas chamber set designed on motion body is intake compressive gas chamber set Cx 104, outer ring is explosive exhaust gas chamber set Cy 105, two sets of gas chamber Cx 104, Cy 105 couple with intake compressive gate plate set Gx 1040 and explosive exhaust gate plate set Gy 1050 which are placed on the fixed body, at the fixed body, there placed exchange gas chamber CZ 1060 for coupling with gas chamber set Cx 104 and Cy 105 in the working cycle in order to transmit fuel gas of gas chamber Cx 104 to gas chamber set Cy 105 and can store high pressure fuel gas after combustion to mix with fresh fuel gas of next cycle and promote pressure of fuel gas in next cycle for return combustion of partial waste gas in order to reduce pollution, therefore, in the same compressive ratio, the function of saving pressure can refuce the compressive ratio to decrease the mechanical loss.

Its structural key points are as follows:

1. At the lagging end of gas chamber Cx 104 near side of Cy 105, there designed a guide transverse groove.

2. Main chamber of pressure-saved gas chamber is semi-spherical type and couples with gas chamber set Cy 105, and extend through a guide groove to the trace which is coupled with guide transverse groove 104' of gas chamber set Cx 104 .

3. Gate plate set Gx 1040 is coupled with gas chamber set Cx 104.

4. Gate plate set Gx 1050 is coupled with gas chamber set Cx 105.

5. Intake port 110' is placed against gate plate set Gx 1040 at the lagging end of gate plate set Gx 1040.

6. Exhaust port 111' is placed against gate plate set Gy 1050 at the leading end of gate plate set Gy 1050.

7. Before ignition, gas chamber set CZ 1060, Cx 104, Cy 105 can communicate together to transmit fuel gas, or CZ 1060, Cx 104 firstly communicate each other and let fuel gas be transmitted to CZ 1060, after CZ 1060 is separated from Cx 104, then CZ 1060 communicates with Cy 105 to transmit fuel gas to Cy 105.

8. Ignition and combustion are completed after Cx 104 is separated from CZ 1060, Cy 105.

9. After CZ 1060 is separated from Cy 105, then exhaust is necessary to keep high pressure fuel gas saved in CZ 1060. not to leak out.

10. Separated working angle of gas chamber set Cy 105 and CZ 1060 is formed by that at the leading end of gas chamber Cy 105 near side of gas chamber set Cx 104, there assembled a guide transverse groove 105', and CZ 1060 is long groove type and intersects guide transverse groove 105' and separated working angle of gas chamber sets CZ 1060 and Cy 105 depends on the length of groove of gas chamber CZ 1060. Its working procedure is shown in Figs. 33-1 to 33-16, and its working cycle is shown in Tables 5-1 to 5-4.

This independent gate plate type internal combustion engine with ezchange gas chamber and separate gas chamber, according to the structures and characteristics of exchange gas chamber and method of driving of active body and passive body, includes design of each item as follows:

a. Driving method of active body and passive body:

1. Structure of intake compressive gas chamber Cx and explosive exhaust gas chamber Cy are assembled in a same body.

2. Structure of intake compressive gas chamber Cx and explosive exhaust gas chamber Cy are assembled in the different body.

3. Fuel gas is exchanged by guide hole of gate plate and gas guide passage of active body.

b. Structure and characteristic of exchange gas chamber CZ:

1. Structure of rectangular or oval shaped striding gas chamber set Cx, Cy.

2. Main chamber of exchange gas chamber is placed on the trace of gas chamber Cy and transversely strides over gas chamber Cx by inclined guide groove.

3. Outer duct type exchange gas chamber structure.

4. Exchange gas chamber structure in which gas chamber set possesses guide transverse groove.

5. Guide groove or guide transverse groove of exchange gas chamber possesses tubulent structure of turbulent column, barrier, hole, granule, curred path.

6. Structure of independent pressure-saved gas chamber CP which is placed at the lagging end of outside gas chamber Cy.

7. Structure of independent pressure-saved gas chamber which is placed at the lagging end of exchange gas chamber CZ.

8. It possessed function of leaking pressure.

Design of each item is described in sequence as follows:

a. Driving method of active body and passive body:

I. Structure of intake compressive gas chamber Cx and explosive exhaust gas chamber Cy are assembled in a same body, is that

1. When active body and passive body are respectively used as fixed body and motion body, its structure and characteristic are as follows:

Fixed body possesses ecchange gas chamber CZ 1060 and intake compressive gate plate set Gx 1040, gate plate set Gx 1040, at the lagging side of gate plate set Gx 1040, there designed intake port 110' and explosive exhaust gate Gy 1050 which is coupled with Gx 1040 on the different trace, at the leading side of Gy 1050, there designed exhaust port 111', at above-mentioned exchange gas chamber CZ 1060,, there designed plug 108 or fuel nozzle 109 or both of them.

Intake compressive chamber 104 is designed at motion body and coupled with Gx 1040 on active body and explosive exhaust gas chamber Cy 105 is designed on the motion body to couple with Gy 1050 on active body.

As shown in Fig. 34, this design is applied on the embodiment of rotary type engine, if structure which possesses gate plate seats 1074, 1075 and gate plate set Gx 1040, Gy 1050 is used as fixed body and structure which possesses gas chamber set Cx 104, Cy 105 is used as internal rotor motion body, on the fixed body, there designed common gate plate set, and gate plate seats 1074, 1075 and intake compressive gate plate set Gx 1040, and explosive exhaust gate plate set Gy 1050, and exchange gas chamber CZ 1060, on the coupling surface of motion body and fixed body, there designed intake compressive gas chamber Cx 104 and explosive exhaust gas chamber Cy 105 which are connected in parallel and coupled with gate plate set Gx 1040, Gy 1050 on fixed body.

Plug 108 or fuel nozzle 109 is placed on exchange gas chamber CZ 1060 or placed in the concave chamber which is coupled with guide transverse groove 105' when working angle is ignited, or placed at the leading end of motion body gas chamber Cy 105 and can avoid to be interferred by gate plate set Gy 1050 in the concave chamber or guide transverse groove 105'.

If intake port 110' and exhaust port 111' are placed at the passive body, then intake port 110' is placed at the leading end of gas chamber Cx 104 and penetrate through gas chamber Cx 104 in order to guide through gas chamber Cx 104 and transmission pipe of fuel gas exhaust port 111' is placed at the lagging end of gas chamber Cy 105 and can avoid to be interferred by explosive exhaust gate plate set Gy 1050 and penetrate through gas chamber 105 in order to guide through gas chamber Cy 105 and transmission pipe of waste gas.

If intake port 110' and exhaust port 111' are placed at the active body, this intake port 110' is assembled at the lagging end of gate plate set Gx 1040 and on the trace which is coupled with gas chamber Cx, this exhaust port 111' is assembled at the leading end of explosive exhaust gate plate set Gy 105 and on the trace which is coupled with gas chamber Cy in motion, the working procedure of this embodiment is shown in Figs. 35 to 35-5.

Fig. 36 is a graphic view of the external rotary type embodiment of above structure, as shown in figure, fixed body with gate plate seats 1074, 1075 and gate plate set Gx 1040 and Gy 1050 is cup or ring type structure,and possesses parallel connected gas chambers Cx 104, Cy 105 which are coupled on it in ring in order to accept drive; the relationship of intake port 110', exhaust port 111', plug 108 or fuel nozzle 109, gas chamber set Cx 104, Cy 105, gate plate set Gx 1040 and Gy 1050 is as same as Figs. 34 and 35.

2. As shown in Figs. 37 to 37-1, structure which possesses gate plate seats 1074, 1075, and intake gate plate set Gx 1040 explosive gate plate set Gy 1050 and exchange gas chamber CZ 1060 is used as fixed rail, and gas chamber set which possesses parallel connected gas chamber Cx 104, and gas chamber Cy 105 is used as motion body, at the leading end of gas chamber Cx 104, there designed intake port 110' which can avoid to be interferred by gate plate set Gx 1040, in driving, at the lagging end of gas chamber Cy 105, there designed exhaust port 111' which can avoid to be interferred by gate plate set Gy 1050 in driving, plug 108 or fuel nozzle 109 for ignition and combustion is placed in the exchange gas chamber on the fixed rail body or placed on the concave structure 105″ which is at the leading end of gas chamber Cy 105 on motion body and can avoid to be interferred by gate plate set Gy 1050.

If intake port 110' is assembled on the fixed rail of gate plate set Gx 1040, Gy 1050, and at the leading end of gate plate set Gy 1050, there designed exhaust port 111' which is coupled with gas chamber Cy 105 in driving in order to exhaust waste gas of gas chamber Cy 105, at the lagging end of intake compressive gate plate set Gx 1040, there designed intake port 110' which is coupled with gas chamber Cx 104 in driving in order to let fresh fuel gas enter into, the working procedure of above embodiment is shown in Figs. 37-2 to 37-7; and fuel supplying system and exhaust system also can be assembled on the motion body, and as shown in Figs. 38 to 38-1, at the leading end of gas chamber set Cx 104 on motion body,

46

there designed intake port 110′ which can avoid to be interferred by gate plate set Gx 1040 in driving in order to let fresh fuel gas enter into, at the lagging end of gas chamber set Cy, there designed exhaust port 111′ which can avoid to be interferred by gate plate set Gy 1050 in driving in order to exhaust waste gas.

3. As shown in Fig. 39, it is an embodiment of rotary type engine which designs active body as motion body and passive body as fixed body, active body which possesses gate plate seats 1074, 1075, and intake compressive gate plate set Gx 1040 and explosive exhaust gate plate set Gy 1050 and exchange gas chamber set CZ 1060 is used as internal rotor motion body, and passive body which possesses intake compressive gas chamber set Cx 104 and explosive exhaust gas chamber set Cy 105 is used as fixed body, on the coupling surface of fixed body and motion body, there designed intake compressive gas chamber Cx 104 and explosive exhaust gas chamber Cy 105 which are connected in parallel and coupled with gate plate set Gx 1040, Gy 1050 on motion body.

On the fixed body, plug 108 or fuel nozzle 109 is assembled on the concave structure 105″ which is at the leading end of gas chamber Cy 105 of fixed body and can avoid to be interferred by explosive exhaust gate plate set Gy 105, or assembled in the exchange gas chamber CZ 1060 on motion body; if intake port 110′ and exhaust port 111′ are assembled on the motion body, and then at the lagging end of gate plate Gx 1040, there designed an intake port 110′ which communicats gas chamber Cx 104 of fixed body Cx 104 for guide through gas chamber Cx 104 and intake duct in rotation in order to let fresh fuel gas enter into, at the leading end of gate plate Gy 1050, there designed an exhaust port 111′ which communicates gas chamber Cy 105 of fixed body to transmit gas of above gas chamber Cy 105 to exhaust duct in rotation and exhaust waste gas of Cy.

As shown in Fig. 40, intake port 110′ and exhaust port 111′ are assembled on the passive body which is used as fixed body, and intake port is placed at the leading end of gas chamber Cx 104 and can avoid to be interferred by common gate plate set Gx 1040 and penetrate through gas chamber Cx 104 to guide through gas chamber Cx 104 and fuel gas transmission duct; exhaust port 111′ is placed at the lagging end of gas chamber Cy 105 and can avoid to be interferred by gate plate set Gy 1050 and penetrate through gas chamber Cy 105 to guide through gas chamber Cy 105 and transmission duct of waste gas.

Fig. 41 is an external rotor structural embodiment in which active body is acted as motion body, and passive body is acted as fixed body, and the relationship of intake port 110′, exhaust port 111′, plug 108 or fuel nozzle 109, and gas chamber Cx 104, Cy 105, gate plate set Gx 1040, Cy 1050 is as same as Fig. 39,,if intake port is designed on the passive body which is used as fixed body, and its placement is that intake port is placed at the leading end of gas chamber Cx 104 and can avoid to be interferred by gate plate Gx 1040 and penetrate thorugh gas chamber Cx 104 to guide through gas chamber Cx 104 and transmission duct of fuel gas; exhaust port 111′ is placed at the lagging end of gas chamber Cy 105 and can avoid to be interferred by gate plate set Gy 1050 and penetrate through gas chamber Cy 105 in order to guide through gas chamber Cy 105 and transmission pipe of waste gas.

If intake port 110′ and exhaust port 111′ are placed on the active body which is used as external rotor,and guide grooves 112 and 113 and intake exhaust duct are coupled by guide hole on side wall which is at same side or at different side or guide hole on outer circumference o of motion body in order to couple with the fixed transmission interface of inatke exhaust duct, this kind of transmission interface will be described there in after.

I. Design of active body acted as motion body and passive body acted as fixed body is applied on the linear driving embodiment, as shown in Fig. 42, structure which possesses gate plate seats 1074, 1075 and gate plate set Gx 1040, Gy 1050 and exchange gas chamber CZ 1060 is used as motion body, and structure which possesses parallel connected gas chamber Cy 104 and gas chamber Cy 105 is used as fixed rail, at the leading end of gas chamber Cx 104, there designed intake oirt 110′ which can avoid to be interferred by intake exhaust gate plate set Gx 1040 in driving; at the lagging end of gas chamber Cy 105, there designed exhaust port 111′ which can avoid to be interferred by gate plate set Gy 1050 in driving, plug 108 or fuel nozzle 109 is placed in the exchange gas chamber CZ 1060 on motion body, or placed on the concave structure 105″ which is at the leading end of gas chamber Cy 105 on fixed rail and can avoid to be interferred by explosive exhaust gate plate set Gy 1050.

If intake port 110′ and exhaust port 111′ are assembled on the motion body, and at the leading end of explosive exhaust gate plate set Gy 1050, there designed exhaust port 111′ which is coupled by gas chamber Cy 105 in driving in order to exhaust waste gas of Cx 105; at the lagging end of intake compressive gate plate set Gx 1040, there designed intake port 110′ which is coupled by gas chamber set Cx in driving in order to let fresh fuel gas enter into. The working procedure of this method is shown in Figs.42-1 to 42-6.

II. Structure of intake compressive gas chamber Cx and explosive exhaust gas chamber Cy are placed at different body, is that Intake compressive gas chamber Cx 104 and explosive exhaust gas chamber Cy 105 are placed in different body, this design is to use the structure which possesses explosive exhaust gate plate set Gy 1050 and intake compressive gas chamber Cx 104 as active body, and structure which possesses intake compressive gate plate set Gx 1040 and explosive exhaust gas chamber Cy 105 is used as passive body. The relative position of intake compressive gas chamber set Cx 104 and explosive exhaust gas chamber set Cy 105 of this internal combustion engine is respectively assembled on the corresponding coupling surface of fixed body andmot motion body.

1. As shown in Figs. 43 and 43-1 to 43-2, it is a rotary type embodiment, on the passive body which is used as motion body, there designed explosive exhaust gas chamber set Cy 105 and intake compressive gate Gx 1040; and on the active body which is used as fixed body, there designed explosive exhaust gate Gy 1050, intake compressive gas chamber Cx 104, and intake port 110', exhaust port 111'.

Motion body possesses gas chamber set Cy 105 and gate plate driving seat 107, on the rotary trace of intake compressive gas chamber Cx 104 corresponding to fixed body, there is gate plate Gx 1040 extending out of intake compressive gas chamber Cx 104 which closely sticks against inear ring of stator, at the leading end of gas chamber Cx 104, there designed intake port 110', this intake port 110' is placed at the position which can avoid to be interferred by gate plate Gx 1040 for guiding through gas chamber set Cx 104 and intake duct; exhaust port 111' is placed at the leading end of gate plate set Gy 1050 on the fixed body and coupled with gas chamber set Cy 105 on motion body; plug 108 or fuel nozzle 109 for ignition and combustion is independently placed in the concave structure 105" on the trace of gas chamber Cy 105 which is placed at the lagging end of gate plate set Gy 1050 on active body and corresponds to rotor, or placed in the concave chamber 105" which is placed at the leading end of gas chamber set Cy 105 on the passive body and can avoid to be interferred by gate plate set Gy 1050.

The function of exchanging gas is that a guide groove 104' which is placed at the lagging end of intake eompressive gas chamber Cx 104 of fixed body near side of gas chamber Cy 105 turning back to the leading end and guide transverse groove 105' which is assembled on the explosive exhaust gas chamber Cy 105 of motion body and extends to gas chamber set Cx 104 are communicated each other in order to transmit fuel gas when rotary phase is overlapped, and on the lagging trace of guide groove of active body turning back to gas chamber set Cx 104, there further assembled a pressure-saved gas chamber CP 1060' which intersects guide transverse groove 105' of gas chamber set Cy 105 and gas chamber Cy 105 after ignition and combusiton, and is separated from guide transverse groove 105' before exhaust of this cycle in' order to save high pressure fuel gas of this cycle and mix with fresh fuel gas in the next cycle for promoting pressure of fresh fuel gas to be ignited and burned, its working precedure is shown in Figs. 43-3 to 43-6, and its working cycle is shown in Table 6.

If intake port 110', exhaust port 111' are assembled on motion body, and intake port 110' is placed at the lagging end of gate plate set Gx 1040 to couple with trace of gas chamber Cx 104, exhaust port 111' is placed at the lagging end and can avoid to be interferred by gate plate Gy 1050 and can guide through gas chamber Cy 105 to exhaust waste gas. Figs 43-7 to 43-9 is a graphic view of linear type embodiment, Figs. 43-10 to 43-13 is a diagram of working procedure.

2. This design is applied on the structure of passive body which is used as motion body, and the relationship of gas chamber set Cx 104, Cy 105, gate plate set Gx 1040, Gy 1050, plug 108 or fuel nozzle 109, pressure-saved chamber CP 1060', intake port 110' exhaust port 111' is as same as above-mentioned.

3. Above-mentioned guide groove 104" which is placed at the lagging end of gas chamber set Cx 104 near side of gas chamber set Cy 105 turning back to the leading end and guide transverse groove 105' which is assembled at the leading end of gas chamber set Cy 105 near side of gas chamber set Cx 104 constitutes exchange gas structure, and as shown in Figs. 44 to 44-1, also it can be constituted by guide transverse groove 104' which is placed at the lagging end of Cx 104 near side of gas chamber set Cy 105 and guide transverse groove 104' which is placed at the leading end of Cy 105 near side of gas chamber set Cx 104, length of two sets guide transverse groove 104' and 105' is suitable for communicating and overlapping each other in the range of working angle of exchange gas in driving and transmitting fuel gas, the working angle of exchange gas is set by the width of two sets of guide transverse groove 104' and 105'; or guide transverse groove which is placed in the gas chamber Cy 105 near gas chamber Cx 104 is bent and turned to the leading end, the bent part can be overlapped and communicated by guide transverse groove 104' which is placed at the lagging end of gas chamber set Cx 104 near side of gas chamber set Cy 105 and transmit fuel gas. Its working procedure is shown in Figs. 44-2 to 44-6.

Each method of transmitting fuel gas as above-mentioned, transmission of fuel gas must begin after gate plate set Gy 1050 slides into gas chamber Cy 105, and passes through guide transverse groove 105', and finish transmission before gate plate set Gx 1040 passes through guide transverse groove 104' or 104" of gas chamber set Cx 104, in order to present the mixing of fresh fuel gas and waste gate between two gas chambers.

4. Above intake compression gas chamber Cx 104 and explosive exhaust gas chamber Cy 105 are placed in the different body, another embodiment is that active body with explosive exhaust gate plate set Gy 1050 and intake compressive gas chamber Cx 104 is used as motion body; and passive body with intake compressive gate plate set Gx 1040 and explosive exhaust gas chamber Cy 105 is used as fixed body.

As shown in Fig. 45, it is a rotary type embodiment of the present design, and on the passive body which is used as fixed body, there designed explosive exhaust gas chamber set Cy 105 and intake compressive gate Gx 1040; and on the active body which is used as motion body, there designed explosive exhaust gate Gy 1050, intake compressive gas chamber Cx 104, and intake port 110′, exhaust port 111′.

Fixed body possesses gas chamber set Cy 104 and gate plate driving seat 107, on the rotary trace of intake compressive gas chamber Cx 104 corresponding to motion body, there is gate plate Gx 1040 extending out of intake compressive gas chamber Cx 104 which closely sticks against stator, at the leading end of gas chamber Cx 104, there designed intake port 110′, this intake port 110′ is placed at the position which can avoid to be interferred by gate plate Gx 1040 for guiding through gas chamber set Cx 104 and intake duct; exhaust port 111′ is placed at the leading end of gate plate set Gy 1050 on the motion body and coupled with gas chamber set Cy 105 on fixed body; plug 108 or fuel nozzle 109 of the present design is placed in the concave structure 105″ on the trace of gas chamber Cy 105 which is placed at the lagging end of gate plate set Gy 1050 on active body and corresponds to rotor, or placed in the concave chamber 105″ which is placed at the leading end of gas shamber set Cy 105 on the passive body and can avoid to be interferred by gate plate set Gy 1050.

The function of exchanging gas is that a guide groove 104″ which is placed at the lagging end of intake compressive gas chamber Cx 104 of motion body near side of gas chamber Cy 105 turning back to the leading end and guide transverse groove 105′ which is assembled on the explosive exhaust gas chamber Cy 105 of fixed body and extends to gas chamber set Cx 104 and communicated each other in order to transmit fuel gas when rotary phase is overlapped, and on the lagging trace of guide groove of active vody turning back to gas chamber set′ Cx 104, there further assembled a pressure-saved gas chamber CP 1060′ which intersects guide transverse groove 105′ of gas chamber set Cy 105 and gas chamber Cy 105, and is separated from guide transverse groove 105′ before exhaust of this cycle in order to save high pressure fuel gas of this cycle and mix with fresh fuel gas in the next cycle for promoting pressure of fresh fuel gas to be ignited and burned.

If intake port 110′, exhaust port 111′ are assembled on fixed body, and intake port 110′ is placed at the lagging end of gate plate set Gx 1040 to couple with trace of gas chamber Cx 104, exhaust port 111′ is placed at the lagging end and can avoid to be interferred by gate plate Gy 1050 and can guide through gas chamber Cy 105 to exhaust waste gas.

III. Fuel gas exchange structure constituted by guide hole of gate plate and gas guide passage of active body, relates to

1. As shown in Figs. 46 and 46-1, 46-2, 46-3, between gate plate seat 1074 of two gate plate set GTx 1045 on active body and gate plate seat 1075 of GTy 1055, there designed gas guide passage 1010, GTx possesses guide hole 1020 facing to compressive side, and GTy possesses guide hole 1030 facing to explosive side.

As shown in Figs. 46-4, 46-5, guide holes 1020, 1030 of said gate plate set GTx 1045, GTy 1055 can slide according to the depth of gas chambers Cx 104, Cy 105 and communicate each other through gas guide passage 1010 between gate plate seat 1074 of above gate plate set GTx 1045 and gate plate seat 1075 of GTy 1055, its characteristic is to assemble gas guide passage on active body between two gate plate sets GTx 1045, GTy 1055 which is closely sealed by side of GTx 1045, GTy 1055 to form a sealed surface, GTx 1045, GTy 1055 rrspectively assembles guide gas chambers 1020, 1030 which are opposite in direction, and gradually raised and lowered cross section fo Cx 104 and Cy 105 is used for driving GTx 1045, GTy 1055 to transfer up and down.

Intake compressive gate GTx 1045 faces to compressive surface and at least possesses an intake port 1020 which communicates from inner of gate plate to the exchange side near gas chamber set Cy 105; explosive exhaust gate Gy faces to explosive surface and at least possesses a guide hole 1030 which communicates from inner of gate plate to the exchange side near gas chamber set Cx 104, two guide holes are communicated each other through gas guide passage 1010 of active body when gate plate slide up and down to the eheight of exchange gas, height of exchange gas is between the highest points or between the highest point and the lowest point of gate plate set GTx 1045 and Gty 1055, it means that the gradually promoted section of gate plate set GTx 1045 which almost completes compression and the gradually lowered section of gate plate set GTy 1055 which slides into Cy 105 are the height of exchange gas, its working procedure is shown in Figs. 46-6, 46-7, and its working cycle is shown in Table 7. Guide hole 1030 of GTy 1055 can further be slightly large chamber type for saving pressure and the return combustion of waste gas, and further assemble a groove 1000 in gas guide passage 1010 of active body for placing the adjusting plug 151.

Above structure can be further shown in Figs. 47 and 47-1, wherein gate plate GTy 1055 possesses guide hole 1030, and at the lagging end of gas chamber set Cx 104 near side of GTy 1055, there possesses a transverse guide groove 104′, active body designes gas guide passage 1010 communicates from gate plate seat 1075 of GTy 1055 near side of gas chamber set Cx 104 to the postion coupling with trace of guide transverse groove 104′ of gas chamber set Cx and matches height of exchange fuel gas of guide hole 1030 in GTy 1055, when GTy 1055 raises up to guide hole 1030 through gas guide passage 1010 and communicates above guide transverse groove 104′, fuel gas of gas chamber Cx 104 is transmitted through guide transverse groove 104′ to the gas guide passage 1010 of active body and then enters into guide hole 1030 of gate plate set GTy 1055 to be transmitted to gas chamber Cy 105, its working procedure is shown in Figs. 47-2 and 47-3.

And depth of gas chamber Cy 105 can be further selected, as shown in Fig. 48, due to the leading end is deeper and the lagging end is shallower, in the stroke, guide hole 1030 of shallower section of gas chamber Cy 105 is hidden into gate plate seat 107 of gate plate set GTy 1055 and let high pressure fuel gas be saved in it for mixing with fresh fuel gas in the next cycle.

2. Figs.49 and 49-1 are the another embodiment, in which, GTx 1045 possesses guide hole 1020, and at the leading end of gas chamber setCy 105 near side of gas chamber set Cx 104, there is a guide transverse groove 105′, and active body assembles gas guide passage 1010 which communicates from gate plate seat 1074 of GTx 1045 near side of gas chamber set Cy 105 to the position coupling with trace of guide transverse groove 105′ of gas chamber set Cy and matches the height of exchange fuel gas of guide hole 1020 in GTx 1045, when GTx 1045 raises up to guide hole 1020 through gas guide passage 1010 and communicates above guide transverse groove 105′, fuel gas of gas chamber Cx 104 is transmitted through guide hole 1020 of gate plate set GTx 1045 into gas guide passage 1010 and then passes through guide transverse groove 105′ of gas chamber set Cy 105 and enters into the leading end of gas chamber set Cy 105 to be ignited and burned, its working procedure is shown in Figs. 49-2 to 49-3, fuel gas exchange structure constituted by guide hole of gate plate set and gas guide passage of active body is applied on linear type and rotary type embodiments in which active body is used as fixed body or active body is used as motion body, and its intake port 110′ and exhaust port 111′ are placed according to the principle of placement of each embodiment as mentioned in Item 1 of this section, and the principle of placing plug 108 or fuel nozzle 109 is as same as above-mentioned embodiment, furthermore, it also can be shown in Figs. 50 and 50-1, plug 108 and fuel nozzle 109 are penetrated and placed in the gas guide passage 1010 of active body and before ignition and combustion, GTx 1045 and intake compressive gas chamber set Cx must be separated each other. Function of saving pressure and return combustion of waste gas is to use gas guide passage 1010 of active body as pressure-saved chamber, and size of working angle which is formed by intersecting gas guide passage 1010 and guide transverse groove 105′ of gas chamber Cy 105 can change the saved pressure. The more stopping of intersection angle of guide transverse groove and gas guide passage 1010 is near the lagging end of gas chamber Cy, the less the pressure saved in gas guide passage is.

Characteristics of above structure are:

1. Gas chamber set Cx 104 of passive body and gate plate set GTx 1045 of active body coupled each other.

2. Gas chamber set Cy 105 of passive body and gate plate set Gy 105 of active body coupled each other.

3. Each dynamic unit is formed by that explosive exhaust structure constituted by coupling a set of gate plate set Gy 1050 and at least a set of gas chamber set Cy 105, and a set of gate plate GTx 1040 coupling with at least a set of gas chamber set Cx 104 connected in parallel.

4. Guide transverse groove 105′ is assembled at the leading end of gas chamber set Cy 105 near side of gas chamber set Cx 104.

5. Gas chamber Cx 104 possesses gate plate set GTx 1045 which has guide hole 1020, gate plate seat 1074 and between lagging ends of gate plate set Gy 1050, there is gas guide passage 1010 to communicate gate plate seat 1074 near side of gate plate seat 1074 and couple with guide transverse groove 105′ near side of gate plate set Gy 1050.

6. The time of ignition and combustion is after gate plate set GTx 1045 completely blocks gas guide passage 1010.

7. Function of saving waste gas is desided by selecting the separated working angle and ignition combustion working angle of gas guide passage 1010 and guide transverse groove 105′. b. Structure and characteristic of exchange gas chamber CZ:

I. Structure of rectangular or oval-shaped inclined stridding gas chamber Cx, Cy.

Exchange gas chamber CZ 1060 of this design is placed at the position of active body, from axial view, it is obliquely between intake compressive gate GX 1040 and explosive exhaust gate Gy 1050 and can be rectangular groove as shown in Fig. 51 or oval-shaped groove as shown in Fig. 52 for being placed to stride between gas chamber set Cx 104, Cy 105 and avoid to occupy working angle and obtain gas chamber set Cx 104, Cy 105 which length is longer than direct stridding type one in order to increase the effective working angle.

II. Main chamber of exchange gas chamber is located on the trace of gas chamber Cy and transversely strides over gas chamber Cx by inclined guide groove.

Exchange gas chamber possesses a spherical main chamber and inclined guide groove, main chamber is located on the rotary trace of explosive exhaust gas chamber Cy 105, and strides a smaller guide groove in the direction of rotary trace of intake compressive gas chamber Cx 104, and obliquely extending direction of said guide groove is decided by the phase relationship between the lagging end of gas chamber Cx 104, and the leading end of gas chamber Cy 105 in the gas chamber set of same working cycle, and extending to the lagging direction in certain slope as shown in Fig. 53, or extending to the leading direction as shown in Fig. 54, or extending in turning method as shown in Figs. 55 and 55-1, in order to match with gas chamber set Cx 104 or guide transverse groove 104', overlapping area of exchange gas chamber CZ 1060 and main chamber can obtain saved pressure in exchange gas chamber CZ 1060 after separating exchange gas chamber CZ 1060 and Cy 105, and before communicating Cy 105 and ignition again.

III. Structure of outer duct type exchange gas chamber.

Fig. 56 is an embodiment which transmit fuel gas by outer duct 160, in figure, on active body, hole 161 joining with duct respectively leads to gas chamber set Cx 104, Cy 105 or guide transverse groove 104', 105' to substitute for exchange gas chamber CZ 1060 on the coupling curface of active body and passive body.

IV. Structure of exchange gas chamber in which gas chamber possesses guide transverse groove.

As shown in Fig. 57, at the lagging end of gas chamber set Cx 104 and the near side of leading end of Cy 105 in the same working cycle of this design, there both designed guide transverse grooves 104' and 104', and exchange gas chamber Cz 1060 is placed between gas chambers Cx 104 and Cy 105, its width is not directly communicated by gas chambers Cx 104, Cy 105 and communicates two guide transverse grooves 104' and 105' for transmitting fuel gas when it intersects guide transverse grooves 104' and 105', before exhaust, the overlapping area of exchange gas chamber CZ 1060 can possesses function of storing pressure, or further it is shown in Fig. 58, communication of gas chambers Cx 104, Cy 105 is to assemble guide transverse groove 104' at lagging end of gas chamber set Cx 104 near side of Cy 105 for transmitting fuel gas, a section of working angle in motion is overlapped and communicated by exchange gas chamber which is coupled by the trace of gas chamber Cy 105 and guide transverse groove 104', and is not coupled directly by gas chamber set Cx 104, in order to transmit fuel gas.

V. Exchange gas chamber groove or guide transverse groove possesses turbulent structure of turbulent column, barrier, hole, granules, curved path.

Exchange gas chamber or guide transverse groove used for transmitting fuel gas from gas chamber Cx 104 to gas chamber Cy 105 as abobe-mentioned can further assemble column type turbulent structure 1060 which can possesses function of turbulence as shown in Fig. 59, barrier type 1062 as shown in Fig. 60, hole type 1063 as shown in Fig. 61, granule type 1064 as shown in Fig. 62, or curved type guide groove 1065 as shown in Fig. 63, or structure of each set of small thin tube 1066 as shown in Fig. 64 in order to let the mixture of fuel gas mix in average.

VI. Structure of independent pressure-saved gas chamber CP which is located at the lagging end outside gas chamber Cy.

As shown in Figs. 65, 65-1, 65-2, on the trace of gas chamber Cy 105 on passive body not near side of gas chamber set Cx 104, there assembled guide transverse groove 105' and on the active body which is coupled by guide transverse groove 105' oppositely there assembled independent pressure-saved gas chamber CP 1060', exchange gas chamber CZ 1060 of this design only communicates gas chambers Cx 104, Cy 105 in exchange of fuel gas, and before explosion, CZ 1060 is firstly separated from gas chamber Cy 105, and then CP 1060' and guide transverse groove 105' of gas chamber Cy 105 communicates each other and then ignite fuel gas, and after CP 1060' is separated from guide transverse groove 105', Cy 105 begins to exhaust, its working procedure is shown in Figs. 65-3, 65-4. Above structure can be further shown in Figs. 66, 66-1, at side of gas chamber Cy 105 of passive body not near gas chamber set Cx 104, there designed a guide transverse groove 105', at lagging end, there designed an auxiliary pressure-saved chamber CPS 1060", when at the moment of CPS 1060" and CP 1060" communicate guide transverse groove 105′, before ignition of fuel gas, high pressure waste gas stored in the last cycle is released from CP 1060′ and CPS 1060″, and before exhaust of this cycle, it is separated from guide transverse groove 105′ of gas chamber set Cy 105, in order to save the high pressure waste gas of this cycle, its working procedure is shown in Figs. 66-2, 66-3.

VII. Structure of independent pressure-saved gas chamber which is located at the lagging end of exchange gas chamber CZ.

As shown in Figs. 67 and 67-1, at the lagging end of gas chamber Cx 105 and at the near side of leading end of gas chamber Cy 105, there respectively possessed guide transverse grooves 104′ and 105′, exchange gas chamber CZ 1060 and pressure-saved gas chamber CP 1060′ are positioned on a same trace, exchange gas chamber CZ 1060 is at the leading place, CP 1060′ is at the lagging place, and both of them are in the middle of trace of gas chamber Cx 104, Cy 105, and communicate gas chambers Cx 104, Cy 105 on proper time, it means that exchange gas chamber set CZ 1060 and pressure-saved gas chamber CP 1060′ are respectively assembled as independent gas chamber, CP 1060′ is between the driving traces of intake compressive gas chamber Cx 104 and explosive exhaust gas chamber Cy 105 and at the lagging end of exchange gas chamber 1060; its method of exchanging fuel gas is to push and compress fuel gas of gas chamber Cx 104 by gate plate Gx 1040, and communicate and exchange gas when gas chamber set Cx 104 and guide transverse grooves 104′, 105′ of gas chamber set Cy 105 are overlapped by exchange gas chamber CZ 1060, and before fuel gas of gas chamber Cy 105 is ignited and burned, independent pressure-saved gas chamber CP 1060′ and guide transverse groove 105′ of gas chamber set Cy 105 are overlapped each other, after explosion and before exhaust to overlap with guide transverse groove 105′ of gas chamber set Cy 105, and after explosion and before exhaust to slide waay from guide transverse groove of gas chamber set Cy 105 in order to save high pressure fuel gas in gas chamber CP 1060′, and its working procedure is shown in Figs. 67-2, 67-3.

VIII. Structure possesses pressure release valve.

As shown in Figs. 68 and 68-1, the present design is to dig a hole 152 for screwing pressure release valve 150 on structure of exchange gas chamber CZ 1060 or pressure-saved gas chamber CP 1060′, or auxiliary pressure-saved chamber 1060″, critical pressure of constant pressure release valve 150 can be further adjusted.

Application of above-mentioned each exchange gas chamber set CZ 1060:

1. Transversely stridding width is overlapped by guide transverse groove of gas chambers Cx 104 and gas chamber Cy 105 for coupling with gas chambers Cx 104, Cy 105, its relationship with gas chamber Cx 104, gas chamber Cy 105 is: before exchanging gas, gas chamber CZ 1060 is separated from Cy 105; in exchange of gas, gas chamber CZ 1060 communicates Cx 104; in ignition and combustion gas chamber CZ 1060 communicates Cy 105; before exhaust gas chambers CZ 1060 and Cy 105 are separated.

2. Transversely stridding width of exchange gas chamber set CZ 1060 as above-mentioned possesses guide transverse grooves on Cx 104, Cy 105, its transversely striding width can couple with transverse guide groove, its relationship with gas chambers Cx 104, Cy 105 is: before exchanging gas. CZ 1060 is separated from Cy 105; in exchange of gas, CZ 1060 and Cx 104 communicate each other or Cx 104, Cy 105, and CZ 1060 communicate; in ignition and combustion, Cy 105 and CZ 1060 communicate each other; before exchaust, Cy 105 is separated from CZ 1060.

Besides exchange gas chamber is directly formed by coupling with engine body, it also can be shown in Gis. 69, as an independent plug type structure of exchange gas chamber CZ 1060 in order to plug in or screw on the active body of gate plate set Gy 1050, on the independent plug type exchange gas chamber, it can assemble plug 108 or fuel nozzle 109 or both of them. This independent plug type exchange gas chamber CZ 1060 can be placed on the active body which can be used as fixed body or motion body, and can assemble pressure release valve 150 of it is necessare. On the pressure release valve, it possesses an adjusting plug 151 which is placed in the screw hole or groove type structure 152 of active body and joined by screw or groove, and is locked and fixed on the active body by fixing screw nut, screw or button ring or pin, it is adjusted and locked by rotating or sliding in order to change the volume of exchange gas chamber.

In rotary or linear motion, above exchange gas chamber CZ 1060 will communicate explosive exhaust gas chamber Cy 105 and then ignite and explode after exchange gas chamber slides away from gas chamber Cx 104, explosive pressure of fuel gas in gas chamber Cy 105 will distribute at the leading end of gate plate Cy 1050 of gas chamber Cy 105 and in exchange gas chamber CZ 1060, motion body is driven to gas chamber Cy 105, before exhaust, gas chamber Cy 105 is firstly separated from exchange gas chamber CZ 1060 in order to save high pressure fuel gas in exchange gas chamber CZ 1060.

C. Gate plate set internal combustion engine twice help combustion structure of Item A and B.

Concept:

The second time input of help combustion fresh high pressure air of different working angle is made to single set Cy 105 by multi-section or multi-row of gas chamber Cx 104 or multi-set of intake compressive gate plate set Gx 1040 in order to let the first time combustion be more complete.

Due to the matched main structural body of the matched engine, this kind of function includes gas chamber sets which are in the same body or in the different bodies, and method of transmitting fuel gas, and the relationship of series connection or parallel connection between gas chamber set Cx 104 and Cy 105, and dynamic set in which above-mentioned multi-sectional gas chamber Cx 104 is matched by single set gas chamber Cy 105, or multi-row gas chamber 104 is matched by single set gas chamber Cy 105 to form a dynamic set, and structural selection of method of matching multi-set intake compressive gate plate set Gx 1040 with gas chamber Cx 104.

Gate plate set internal combustion engine twice help combustion structure includes the following main designs:

1. Twice help combustion structure in which gas chambers Cx, Cy are in the same body and connect in series and possess single-set gas chamber Cx, multi-set gate plate Gx.

2. Twice help combustion structure in which gas chambers Cx, Cy are in the same body and connect in series and possess multi-set gas chamber Cx, single-set gate plate Gx.

3. Twice help combustion structure in which gas chambers Cx, Cy are in the same body and connect in parallel and possess single-set gas chamber Cx, multi-set gate plate Gx.

4. Twice help combustion structure in which gas chambers Cx, Cy are in the same body and connect in parallel and possess multi-set gas chamber Cx, single-set gate plate Gx.

5. Twice help combustion structure possesses multi-row gas chamber Cx which connects single-set gas chamber Cy in parallel in the same body.

6. Twice help combustion structure possesses gas chambers Cx, Cy which are in the same body and connect and mix in series-parellel connection.

7. Twice help combustion structure possesses single-set gate plate Gx, and mult-set series connection gas chamber Cx which is connected in parallel by gas chamber Cy in different body.

8. Twice help combustion structure possesses multi-row gas chamber Cx which connects gas chamber Cy of different body in parallel.

9. Twice help combustion structure which gate plate set possesses guide hole and gas chamber Cx possesses multi-set gate plate Gx to connect gas chamber Cy in parallel in the same body.

10. Twice help combustion structure which gate plate set possesses guide hole, and multi-set serial connection gas chamber Cx is connected in parallel by single-set gas chamber Cy in the same body.

11. Twice help combustion structure which gate plate set possesses guide hole, and multi-row gas chamber Cx connected in parallel by single-set gas chamber in the same body.

12. Twice help combustion structure which gate plate set possesses guide hole, and gas chambers Cx, Cy are in the same body and connected and mixed in series-parallel.

13. Twice help combustion structure which gate plate possesses guide hole, multi-set series connection gas chamber set Cx, single-set gate plate set Gx connect gas chamber Cy of different body in parallel.

14. Twice help combustion structure which gate plate possesses guide hole, multi-row series connection gas chamber Cx connects gas chamber Cy of different body in parallel. Embodiment of structure of each item is as follows:

I. Twice help combustion structure in which gas chambers Cx, Cy are in the same body and connect in series and possess single-set gas chamber Cx, multi-set gate plate Gx.

1. Figs. 70 and 70-1 are the graphic views of twice help combustion embodiment A in which active body is used as fixed body, gas chambers Cx, Cy are connected in series in the same body and possess single-set gas chamber Cx, multi-set gate plate Gx, and its main characters are as follows:

Structural relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body: gas chamber sets Cx and Cy are placed in series connection.

Characteristic of gate plate set is that common gate plate GC 106 is in front, and gate GS 1048 with panetrating hole is in rear.

Intake compressive structure with function of twice help combustion is to place multi-set gate plate set GC 106, GP 1046 on single-set gas chamber set Cx 104, and possesses independent or common intake port 110'.

Fuel gas is transmitted from gas chamber set Cx 104 to gas chamber set Cy 105 by common gate plate set GC 106 and GP 1046 with pressure-saved gas chamber 102 and low position intake valve 101, and high position output guide hole 103.

Method and device of ignition and combustion include that plug ignites the mixed gas, or fuel nozzle injects fuel to mix with and ignite high pressure high temperature air, or the burned high termerature fuel is used to ignite fresh fuel.

Ignition device is placed in the concave chamber structure which is at the lagging end of gate plate set GC 106 of active body and can couple with gas chamber Cy, and avoid to be interferred by passive body; or it is placed in the concave chamber which is at the leading end of gas chamber set Cy 105 of passive body and can avoid to be interferred by gate plate GP 1046 or gate plate GC 106.

If intake method respectively possesses independent intake port which is placed at the active body used as fixed body, and each intake port is respectively placed at side of each gate plate set GC 106 and GP 1046 and coupled by intake guide transverse groove 104' of gas chamber set Cx 104.

If exhaust method is to be placed at the active body which is used as fixed body, and wxhaust port 111' is placed at the side of leading end of gate plate set GC 106, and couples with wxhaust guide transverse groove 105' of gas chamber set Cy 105;

If exhaust method is to be placed at the passive body which is used as motion body, and exhaust port 111' is respectively placed in the hole structure which is at the lagging end of each gas chamber set Cy 105, and can avoid to be interferred by gate plate set GC 106, and transmit fuel gas through transmission pipe which is coupled by exhaust port 111' on motion body; or it is respectively placed in groove type structure which is at the lagging end of each gas chamber set Cy 105 and can avoid to be interferred by gate plate set GC 106 and transmit fuel gas through transmission pipe which is coupled by exhaust groove 111 on motion body.

Characteristics of above-mentioned twice help combustion structure are as follows:

It possesses gate plate set GC 106 which is connected in series with twice help combustion structure on the same driving track, and gate plate set GP 1046 for twice intake.

Each dynamic cycle is constituted by a set of gas chamber set Cx 104 and Cy 105.

Time of help combustion can be set by the difference of working angle of gate plate set GC 106 and GP 1046.

It possesses gate plate set GP 1046 with penetrating hole, as shown in Fig. 70-2, at the surface which faces to the motion body and is near the coupled contact end of gas chamber, there places one-way intake valve 101, in the gate body, there possesses pressure-saved chamber 102, at the far distance, there possesses a guide hole 1033 which penetrates the leading end and the lagging end of gate plate set GP 1046.

Gas chamber set Cx 104 is shallower and when gate plate set GC 106 and GP 1046 slides in, one-way intake valve can expose and face to the gas which will be compressed, and guide hole 103 of gate plate set GC and penetrating guide hole 1033 of GP 1046 are hidden into gate plate seat.

Gas chamber set Cy is deeper or its leading section is deeper, and when gate plate set GC 106 and GP 1046 slide into the deeper section, guide hole 103 of gate plate set GC 106 and penetrating guide hole 1033 of GP 1046 expose outside gas chamber.

At the leading end of gas chamber set Cy, there is a ventilated crack which can avoid to the resistance caused by the pressure difference of two ends of gate plate before rrleasing the gas of pressure-saved chamber 102 in the instant of gate plate set to slide into, and ventilated crack is in the front of working angle of pressure-saved chamber for releasing gas.

Figs. 70-3 to 70-8 are the working procedure diagrams of above twice help combustion embodiment A in which active body is used as fixed body, gas chambers Cx, Cy are connected in series in the same body, and possess single-set gas chamber Cx, multi-set gate plate Gx. Its working cycle is shown in Table 8.

2. Figs 71 and 71-1 are the graphic views of twice help combustion embodiment B in which gas chambers Cx, Cy are connected in series in the same body and possess single-set gas chamber Cx, multi-set gate plate Gx, and its main characters are as follows:

Active body is used as fixed body; passive body is used as motion body.

At least a set of gas chambers Cx and Cy is connected in series in the same body.

Twice help combustion intake compressive structure is to place multi-set gate plate GC 106, GP 1046 on single-set gas chamber set Cx 104, and possesses common intake port 110′.

If common intake port is placed on the active body which is used as fixed body, and intake port 110′ is placed at side of lagging end of gate plate set GC 106 and couples with intake guide transverse groove of gas chamber set Cx;   .

If common intake port is placed on the passive body which is used as motion body, and intake port 110′ is placed in the hole structure which is at the leading end of gas chamber Cx 104 and can avoid to be interferred by gate plate set GC 106, and transmit fuel gas through transmission pipe which is coupled on the intake port 110′ on motion body; or it is placed in the groove type structure which is at the leading end of gas chamber Cx 104 and can avoid to be interferred by gate plate set GC 106, GP 1046 and transmit fuel gas through transmission pipe which is coppled by intake groove 110 on motion body.

3. Figs. 72 and 72-1 are the graphic views of twice help combustion embodiment in which active body is used as motion body, gas chambers Cx, Cy are connected in series in the same body, and possess gas chamber Cx, multi-set gate plate Gx, and its main characters are as follows:

Structural relation between active body and passive body is that active body is used as motion body; passive body is used as fixed body.

Relation between gas chamber sets Cx 104 and Cy 105 is that gas chamber set Cx is placed at passive body, gas chamber set Cy is placed at passive body; gas chamber sets Cx and Cy are placed in series connection.

Characteristic of gate plate set is that common gate plate GC 106 is in front, and gate GP 1046 with penetrating hole is in rear.

Intake compressive structure with function of twice help combustion is to place multi-set gate plate set GC 106, Gp 1046 and possesses common intake port 110′.

Fuel gas is transmitted from gas chamber set Cx 104 to gas chamber set Cy 105 by common gate plate set GC 106 and GP 1046 with pressure-saved gas chamber 102 and low position intake valve 101, and high position output guide hole 103.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GC 106 of active body and can couple with gas chamber Cy and avoid to be interferred by passive body; or it is placed in the concave chamber which is at the leading end of gas chamber set Cy 105 of passive body and can avoid to be interferred by gate plate GP 1046 or gate plate GC 106.

If intake method respectively possesses independent intake port which is placed at the passive body used as fixed body, and intake port 110′ is placed in the hole structure or guide transverse groove which is at the leading end of gas chamber set Cx 104, and can avoid to be interferred by gate plate set GC 106;

If it is placed at the active body which is used as motion body, and intake port 110′ is placed at side of lagging end of and couples with intake guide transverse groove of gas chamber set Cx and can transmit fuel gas through transmission pipe which is coupled by intake port 110′ on motion body.

If exhaust method is to be placed at the passive body which is used as fixed body, and exhaust port 111′ is placed in the hole structure which is at the lagging end of gas chamber set Cy 105 and can avoid to be interferred by gate plate set GC 106;

If it is placed at the active body which is used as motion body, and exhaust port 111′ is respectively placed at side of leading end of each gate plate set GC 106, and couples with exhaust guide transverse groove 105′ of gas chamber set Cy 105 and can transmit fuel gas through transmission pipe which is coupled by exhaust port 111′ on motion body.

II. Twice help combustion structure in which gas chambers Cx, Cy are in the same body and connect in series and possess multi-set gas chamber Cx, single-set gate plate Gx.

1. Gigs. 73 and 73-1 are the graphic views of twice help combustion embodiment in which active body is used as fixed body, gas chambers Cx, Cy are connected in series in the same body and possess multi-set gas chamber Cx, single-set gate plate Gx, and its main characters are as follows:

Atructural relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body; gas chamber sets Cx and Cy are placed in series connection.

Characteristic of gate plate set possesses transverse guide hole gate GTx 1045, and each set is placed at interval of 120° working angle.

Intake compressive structure with function of twice help combustion is constituted by connecting multi-set gas chamber Cx 104 in series and on which there has independent intake port 110'.

Fuel gas is transmitted from gas chamber set Cx 104 to gas chamber set Cy 105 by gate plate set GTx 1045 with guide hole 1020, transverse guide pass 1010 of active body, and guide transverse groove 105' of gas chamber set Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTx 1045 of active body, and can avoid to be interferred by passive body; or it is placed in the guide groove 1010 of active body; or it is placed in the concave chamber which is at the leading end of gas chamber set Cy 105 of passive body and can avoid to be interferred by gate plate GTx 1045.

If intake method respectively possesses independent intake port which is placed at the active body used as fixed body, and each sectional intake port 110' is respectively placed at the lagging end of each gate plate set GTx 1045, and coupled by intake guide transverse groove 104' of gas chamber Cx 104';

If it is placed at the passive body which is used as motion body, and intake port 110' is respectively placed in the hole structure which is at the leading end of each gas chamber Cx 104 and can avoid to be interferred by gate plate set GTx 1045 and transmit fuel gas through transmission pipe which is coupled by intake port on motion body.

If exhaust method is to plate exhaust port on the active body which is used as fixed body, and exhaust port 111' is placed at the side of leading end of gate plate set GTx 1045 and is coupled by exhaust guide transverse groove 105' of gas chamber set Cy 105;

if it is placed at the passive body which is used as motion body, and exhaust port 111' is respectively placed in the hole structure which is at the lagging end of each gas chamber set Cy 105 and can avoid to be interferred by gate plate set GTx 1045, and transmit fuel gas through transmission pipe which is coupled by exhaust port 111' on motion body; or it is respectively placed in the groove type structure which is at the lagging end of each gas chamber set Cy 105 and can avoid to be interferred by gate plate set GTx 1045, and can transmit fuel gas through transmission pipe which is coupled by exhaust groove 111 on motion body.

Characteristics of twice help combustion structure of this item are as follows:

Structure which possesses gate plate set GTx 1045 is used as active body.

Intake compression gas chamber which is constituted by two sectional gas chamber set Cx 104 is connected in series by a set of explosive exhaust gas chamber set Cy 105 and used as passive body.

The coupled and guided position of gate plate set GTx 1045 between the leading gas chamber set and the lagging gas chamber set and transverse guide hole 1010 of active body is the point of exchanging gas.

The largest length from ignition point to the lagging end on gas chamber set Cy 105 is the length of 120° working angle, the largest length of the leading gas chamber set Cx 104 is 120° working angle, the lagging set of gas chamber set Cx 104 is designed to be closely behind the leading set, the gradually raising surface of lagging end lets the position which gate plate set GTx 1045 is coupled and guided again by transverse guide hole 1010 of active body is the point of help combustion, its length is similar to the corresponding length of working angle from ignition, combustion to twice help combustion.

Each dynamic unit includes a set of gas chamber set Cy 105, and intake compressive gas chamber set which is constituted by a set of leading gas chamber and a set of lagging gas chamber, and three sets of gate plate set GTx 1045 and it is placed at interval of 120° working angle.

Guide groove which is placed on active body and coupled with transverse guide hole 1020 wxtends toward the leading end of GTx 1045 to the position which it can be coupled by guide transverse groove 105' of gas chamber set Cy 105.

Ignition point, exchange gas point, and the interval point between gas chamber Cy 105 and the leading gas chamber set Cx are distanced with 120° working angle.

Figs. 73-2 to 73-7 are the working procedure diagrams of above twice help combustion in which active body is used as fixed body, gas chambers Cx, Cy are connected in series in the same body, and possess multi-set gas chamber Cx, single-set gate plate Gx. Its working cycle is shown in Table 9.

2. Figs. 74 and 74-1 are the graphic view of twice help combustion embodiment in which active body is used as motion body, gas chambers Cx, Cy are connected in series in the same body and possess multi-set gas chamber Cx, single-set gate plate Gx, and its main characters are as follows:

Structureal relation between active body and passive body is that active body is used as motion body; passive body is used as fixed body.

Relation between gas chamber sets Cx 104 and Cy 105 is that gas chamber set Cx is placed at passive body; gas chamber set Cy is placed at passive body; gas chamber sets Cx and Cy are placed in series connection.

Characteristic of gate plate set possesses transverse guide hole gate GTx 1045, and each set is placed at interval of 120° working angle.

Intake compressive structure with function of twice help combustion is constituted by connecting multi-set gas chamber Cx 104 in series and on which there has independent intake port 110'.

Fuel gas is transmitted from gas chamber set Cx 104 to gas chamber set Cy 105 by gate plate set GTx 1045 with guide hole 1020, transverse guide pass 1010 of active body, and guide transverse groove 105' of gas chamber set Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTx 1045 of active body, and can avoid to be interferred by passive body; or it is placed in the guide groove 1010 of active body; or it is placed in the concave chamber which is at the leading end of gas chamber set Cy 105 of passive body and can avoid to be interferred by gate plate GTx 1045.

If intake method respectively possesses independent intake port which is placed at the active body used as fixed body, and each sectional intake port is respectively placed in the hole structure which is at the leading end of each gas chamber set Cx 104, and can avoid to be interferred by gate plate set GTx 1045;

If it is placed at the active body which is used as motion body, and intake port is respectively placed at side of each gate plate set GTx 1045 and coupled with intake guide transverse groove 104' at the leading end of gas chamber set Cx 104, and can transmit fuel gas through transmission pipe which is coupled by intake port 110' on motion body.

If exhaust method is to place exhaust port on the passive body which is used as fixed body, and exhaust port 111' is placed in the hole structure which is at the lagging end of gas chamber set Cy 105, and can avoid to be interferred by gate plate set GTx 1045;

If it is placed at the active body which is used as motion body, and exhaust port 111' is respectively placed at side of leading end of each gate place set GTx 1045, and is coupled by exhaust guide transverse groove 105' which is at the lagging end of gas chamber set Cy 105, and can transmit fuel gas through transmission pipe which is coupled by exchaust port 111' on motion body.

III. Twice help combustion structure in which gas chambers Cx, Cy are in the same body and connect in parallel and possess single-set gas chamber Cx, multi-set gate plate Gx.

1. Figs. 75 and 75-1 are the graphic views of twice help combustion embodiment A in which active body is used as fixed body, gas chambers Cx, Cy are connected in parallel in the same body, and possess single-set gas chamber Cx, multi-set gate plate set Gx, and its main characters are as follows:

Structural relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate is that each dynamic unit possesses multi-set Gx 1040 and single-set Gy 1050.

Intake compressive structure with function of twice help combustion is to place multi-set gate plate set Gx 1040 on signle-set gas chamber Cx 104, and possesses common intake port 110'.

Fuel gas is transmitted by exchange gas chamber CZ 1060 or groove on active body from gas chamber set Cx 104 to gas chamber Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the exchange gas chamber CZ 1060 of active body; or it is placed in the concave chamber structure which is at the lagging end of gate plate set Gy 1050 of active body and can couple with gas chamber Cy, and avoid to be interferred by passive body; or it is placed in the concave chamber which is at the leading end of gas chamber set Cy 105 of passive body and can avoid to be interferred by gate plate Gy 1050.

If intake method possesses common intake port which is placed at the active body used as fixed body, and intake port 110' is placed at side of lagging end of gate plate set Gx 1040, and is coupled by intake guide transverse groove of gas chamber set Cx;

if it is placed on the passive body which is used as motion body, and intake port 110' is placed in the hole structure at the leading end of gas chamber Cx 104 and can avoid to be interferred by gate plate set Gx 1040, GC 1060, and transmit fuel gas through transmission Pipe which is coupled by intake port 110′ on motion body; or it is placed in the groove type structure which is at the leading end of gas chamber Cx 104 and can avoid to be interferred by gate plate set Gx 1040, GC 106, GTx 1045, and transmit fuel gas through transmission pipe which is coupled by intake groove 110 on motion body.

If exhaust method is to place exhaust port at the active body which is used as fixed body, and exhaust port 111′ is placed at the leading end of gate plate set Gy 1050 and couples on the track of gas chamber Cy 105; or it is placed at side of leading end of gate plate set Gy 1050, and is coupled by exhaust guide transverse groove 105′ of gas chamber set Cy 105;

if it is placed on the passive body which is used as motion body, and exhaust port 111′ is respectively placed in the hole structure which is at the lagging end of each gas chamber set Cy 105, and can avoid to be interferred by gate plate set Gy 1050, and transmit fuel gas through transmission pipe which is coupled by exhaust port 111′ on motion body; or it is respectively placed in the groove type structure which is at the lagging end of each gas chamber set Cy 105 and can avoid to be interferred by gate plate set Gy 1050, and transmit fuel gas through transmission pipe which is coupled by exhaust port 111 on motion body.

Characteristics of twice help combustion structure of this item are as follows:

Structure which possesses gate plate sets Gx 1040, Gy 1050 and two sets of exchange gas chamber CZ 1060 is used as active body;

Structure which possesses gas chamber sets Cx 104, Cy 105 is used as passive body;

Intake compressive gate plate set Gx 1040 is consstituted by the leading set and the lagging set, and at least is coupled by a set of gas chamber set Cx 104;

Gate plate set Gy 1050 at least is coupled by a set of gas chamber Cy;

At the lagging end of gas chamber set Cx 104 near side of gas chamber set Cy 105, there is guide transverse groove 104′;

Each dynamic unit is constituted by serial connection of a set of gas chamber which is matched by two gate plate sets Gx 1040, and a set of gas chamber set Cy 105 which is matched by a set of gate plate set Gy 1050;

Two sets of exchange gas chamber is placed between gas chambers Cx 104 and Cy 105 and only intersect guide transverse grooves 104′ and 105′ to transmit fuel gas during driving, and its leading set is placed at the lagging end of the leading gate plate set Cx, and its lagging set is placed at the lagging end of the lagging gate plate set Cy;

Time of twice help combustion is after fuel gas of gas chamber set Cy 105 is ignited;

When it is in twice help combustion, firstly, exchange gas chamber CZ 1060 of the lagging set intersects and communicates guide groove 104′ of gas chamber set Cy 105, and then intersects guide transverse groove 105′ of gas chamber set Cy 105, exchange gas chamber CZ 1060 of the lagging set, intersects and communicates guide transverse grooves 104′ and 105′ in difference in order to prevent fuel gas flowing to gas chamber set Cx 104.

Before exhaust, exchange gas chamber CZ 1060 of the lagging set separates from guide transverse groove 105′ of exchange gas chamber Cy to store high pressure fuel gas for the return combustion of the saved pressure.

Figs. 75-2 to 75-7 are the working procedure diagrams of above twice help combustion embodiment A in which active body is used as fixed body, gas chambers Cx, Cy are connected in parallel in the same body, and possess single-set gas chamber Cx, multi-set gate plate set Gx, and its working cycle is shown in Table 10.

2. Figs. 76 and 76-1 are the graphic views of twice help combustion embodiment B in which active body is used as fixed body, gas chambers Cx, Cy are connected in parallel in the same body and possess single-set gas chamber Cx, multi-set gate plate set Gx, and its main characters are as follows:

Intake compressive structure with function of twice help combustion is to place multi-set gate plate set Gx 1040 on single-set gas chamber set Cx 104 and possesses independent intake port 110′.

If each independent intake port is assembled on the active body which is used as fixed body, and intake port 110′ is respectively placed at side of each gate plate set Gx 1040 to couple with intake guide transverse groove 104′ of gas chamber set Cx 104.

3. Figs. 77 and 77-1 are the graphic views of twice help combustion embodiment in which active body is used as motion body, gas chambers Cx, Cy are connected in parallel in the same body and possess single-set gas chamber Cx, multi-set gate plate set Gx, and its main characters are as follows:

Structural relation between active body and passive body is that active body is used as motion body; passive body is used as fixed body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate set is that each dynamic unit possesses multi-set GX 1040 and single-set Gy 1050.

Intake compressive structure with function of twice help combustion is to place multi-set gate plate set Gx 1040 on single-set gas chamber set Cx 1040 and possesses common intake port 110′.

Fuel gas is transmitted by exchange gas chamber CZ 1060 or groove on active body from gas chamber set Cx 104 to gas chamber set Cy 105.

Method and device of ignition and combustion include that plug ignites the mixed gas, or fuel nozzle injects fuel to mix with and ignite high pressure high temperature air, or the burned high temperature fuel isused to ignite fresh fuel.

Ignition device is placed in the exchange gas chamber CZ 1060 of active body; or it is placed in the concave chamber structure which is at the lagging end of gate plate set Gy 1050 of active body and can couple with gas chamber Cy, and avoid to be interferred by passive body; or it is placed in the concave chamber which is at the leading end of gas chamber set Cy 105 of passive body and can avoid to be interferred by gate plate Gy 1050.

If intake method possesses common intake port which is placed at the active body used as fixed body, and intake port 110′ is placed in the hole structure or guide transverse groove which is at the leading end of gas chamber set Cx 104 and can avoid to be interferred by gate plate set Gx 1040;

if it is placed on the active body which is used as motion body, and intake port is placed at the lagging end of gate plate set Gx 1040 and is coupled on the track of gas chamber Cx, and can transmit fuel gas through transmission pipe which is coupled by intake port 110′ on motion body; or it is placed at side of lagging end of gate plate set Gx 1040, Gtx 1045, and is coupled by intake guide transverse groove 104′ of gas chamber set Cx 104, and can rransmit fuel gas through transmission pipe which is coupled by intake port 110′ on motion body.

if exhaust method is to place exhaust port on the passive body which is used as fixed body, and exhaust port 111′ is placed in the hole structure which is at the lagging end of gas chamber set Cy 105, and can void to be interferred by gate plate set Gy 1050;

if it is placed at the active body which is used as motion body, and exhaust port 111′ is placed at the leading end of gate plate set Gy 1050, and couples on the track of gas chamber Cy, and can transmit fuel gas through transmission pipe which is coupled by exhaust port 111′ on motion body; or it is respectively placed at side of leading end of gate plate set Gy 1050, and is coupled by exhaust guide transverse groove 105′ of gas chamber set Cy 105, and can transmit fuel gas through transmission pipe which is coupled by exhaust port 111′ on motion body.

IV. Twice help combustion structure in which gas chambers Cx, Cy are in the same body and connect in parallel and possess multi-set gas chamber Cx, single-set gate plate set Gx.

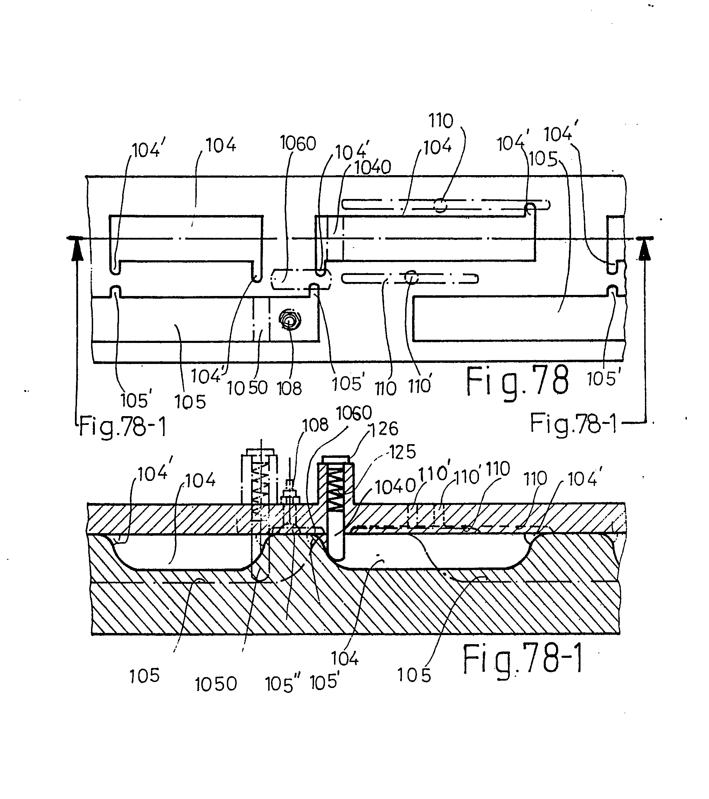

1. Figs. 78 and 78-1 are the graphic views of twice help combustion embodiment A in which active body is used as fixed body, gas chambers Cx, Cy are connected in parallel in the same body, and possess multi-set gas chamber Cx, single-set gate plate Gx, and its characters are as follows:

Structural relation between active body and passive body is that active body is used as fixed body; passive body is used as motion body.

Relation between gas chamber sets Cx 104 and Cy 105 is that gas chamber set Cx is placed at passive body; gas chamber set Cy isalso placed at passive body; gas chamber sets Cx and Cy are placed in parallel connection.

Characteristic of gate plate set is to be constituted by gate plate set Gx 1040, Gy 1050 without guide hole.

Intake compressive structure with function of twice help combustion is connected in series by multi-set gas chamber set Cx 104, and places independent or common intake port 110′ on it.

Fuel gas is transmitted by exchange gas chamber CZ 1060 or groove on active body from gas chamber set Cx 104 to gas chamber set Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the exchange gas chamber CZ 1060 of active body; or it is placed in the concave chamber structure which is at the lagging end of gate plate set Gy 1050 of active body and can couple with gas chamber Cy, and avoid to be interferred by passive body; or it is placed in the concave chamber which is at the leading end of gas chamber set Cy 105 of passive body and can avoid to be interferred by gate plate Gy 1050.

If intake method respectively possesses independent intake port which is placed at the passive body used as motion body, and intake port is respectively placed in the hole structure which is at the leading end of each gas chamber set Cx 104, and can avoid to be interferred by gate plate set Gx 1040;

if it is common intake port, and is placed at the active body which is used as fixed body, and intake port 110$'$ is placed at the side of lagging end of gate plate set Gx 1040 or Gc 106 or GTx 1045 and is coupled by intake guide transverse groove of gas chamber set Cx;

if it is placed on the passive body which is used as motion body and intake port 110$'$ is placed in the hole structure which is at the leading end of gas chamber Cx 104 and can avoid to be interferred by gate plate set Gx 1040 and transmit fuel gas through transmission pipe which is coupled by intake port 110$'$ on motion body; or it is placed in the groove type structure which is at the leading end of gas chamber Cx 104 and can avoid to be interferred by gate plate set Gx 1040 and can transmit fuel gas through transmission pipe which is coupled by intake groove 110 on motion body.

If exhaust method is to place exhaust port at the active body which is used as fixed body, and exhaust port 111$'$ is placed at the leading end of gate plate set Gy 1050 and couples on the track of gas chamber Cy 105; or it is placed at side of leading end of gate plate set Gy 1050, and is coupled by exhaust guide transverse groove 105$'$ of gas chamber set Cy 105;

If it is placed on the passive body which is used as motion body, and exhaust port 111$'$ is respectively placed in the hole structure which is at the lagging end of each gas chamber set Cy 105, and can avoid to be interferred by gate plate set Gy 1050, and transmit fuel gas through transmission pipe which is coupled by exhaust port 111$'$ on motion body; or it is respectively placed in the groove type structure which is at the lagging end of each gas chamber set Cy 105 and can avoid to be interferred by gate plate set Gy 1050, and transmit fuel gas through transmission pipe which is coupled by exhaust port 111 on motion body.

Characteristics of twice help combustion structure of this item are as follows:

Structure which possesses gate plate sets Gx 1040, Gy 1050 and exchange gas chamber is used as active body;

Structure which possesses

Cy 105 is used as passive body;

Gate plate set Gx 1040 at least couples a set of intake compressive gas chamber set which is constituted by two sections of series connection gas chamber Cx 104;

Gate plate set Gy 1050 at least couples a set of gas chamber set Cy 105;

The lagging end of each section of gas chamber Cx 104 is near side of gas chamber set Cy, and there is guide transverse groove;

At the leading end and middle section of gas chamber near side of gas chamber set Cx 104, there respectively places guide transverse groove 105$'$;

Each dynamic unit is constituted by intake compressive gas chamber which is connected in series by a set of explosive exhaust gas chamber set Cy 105 and at least two sections of gas chamber Cx 104;

The coupled track of wxchange gas chamber CZ 1060 is between gas chambers Cx 104 and Cy 105, and intersects guide transverse grooves 104$'$, 105$'$ to transmit fuel gas;

After ignition and combustion and the lagging set gas chamber Cx 104 intersects exchange gas chamber, exchange gas chamber CZ 1060 intersects guide transverse groove 105$'$ in the middle section of gas chamber set Cy 105 and transmit, and exchange gas chamber CZ 1060 and guide transverse grooves 104$'$, 105$'$ of gas chamber sets Cx 104, Cy 105 intersect and communicate at different time;

Side cross area of gate plates Gx 1040 and Gy 1050 can cover guide transverse grooves 104$'$, 105$'$ when it intersects guide transverse grooves 104$'$ and 105 during drive.

2. Figs. 79 and 79-1 are the graphic views of twice help combustion embodiment B in which active body is used as fixed body, gas chambers Cx, Cy are connected in parallel in the same body and possess multi-set gas chamber Cx, single-set gate plate Gx, and its main characters are as follows:

Active body is used as fixed body; passive body is used as motion body.

At least a set of gas chamber Cy 105 is connected in parallel by gas chamber Cx 104 which is at least two times of series connection of Cy 105.

Series connection gas chamber Cx 104 is used as common gate plate Gx 1040.

Common intake port is placed at the active body which is used as fixed body, and intake port 110$'$ is placed at the lagging end of gate plate set Gx 1040, and is coupled on the track of gas chamber Cx 104.

3. Figs. 80 and 80-1 are the graphic views of twice help combustion embodiment in which active body is used as motion body, gas chambers Cx, Cy are connected in parallel in the same body, and possess multi-set gas chamber Cx, single-set gate plate Gx, and its main characters are as follows:

Active body is used as motion body; passive body is used as fixed body.

60

Relation between gas chamber sets Cx 104 and Cy 105 is that gas chamber set Cx is placed at passive body; gas chamber set Cy is also placed at passive body; gas chamber sets Cx and Cy are placed in parallel connection.

Characteristic of gate plate set is to be constituted by gate plate set Gx 1040, Gy 1050 without guide hole.

Intake compressive structure with function of twice help combustion is connected in series by multi-set gas chamber set Cx 104, and places independent or common intake port 110' on it.

Fuel gas is transmitted by exchange gas chamber CZ 1060 or groove on active body from gas chamber set Cx 104 to gas chamber set Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the exchange gas chamber CZ 1060 of active body; or it is placed in the concave chamber structure which is at the lagging end of gate plate set Gy 1050 of active body and can couple with gas chamber Cy, and avoid to be interferred by passive body; or it is placed in the concave chamber which is at the leading end of gas chamber set Cy 105 of passive body and can avoid to be interferred by gate plate Gy 1050.

If intake method respectively possesses independent intake port which is placed at the passive body used as fixed body, and intake port is respectively placed in the hole structure which is at the leading end of each gas chamber set Cx 104, and can avoid to be interferred

Gx 1040;

if it is common intake port, and is placed at the passive body which is used as fixed body, and intake port 110' is placed in the hole structure or guide transverse groove which is at the leading end of gas chamber set Cx 104, and can avoid to be interferred by gate plate set Gx 1040;

if it is placed·on the active body which is used as motion body, and intake port is placed at the lagging end of gate plate set Gx 1040 and is coupled on the track of gas chamber Cx, and transmit fuel gas through transmission pipe which is coupled by intake port 110' on motion body; or it is placed at side of lagging end of gate plate set Gx 1040 and is coupled by guide transverse groove, and can transmit fuel gas through transmission pipe which is coupled by intake port 110' on motion body.

If exhaust method is to place exhaust port on the passive body which is used as fixed body, and exhaust port 111' is placed in the hole structure which is at the lagging end of gas chamber set Cy 105, and can avoid to be interferred by gate plate set Gy 1050;

if it is placed at the active body which is used as motion body, and exhaust port 111' is placed at the leading end of gate plate set Gy 1050, and couples on the track of gas chamber Cy, and can transmit fuel gas through transmission pipe which is coupled by exhaust port 111' on motion body; or it is respectively placed at side of leading end of each gate plate set Gy 1050, and is coupled by exhaust guide transverse groove 105' of gas chamber set Cy 105, and can transmit fuel gas through transmission pipe which is coupled by exhaust port 111' on motion body.

Figs. 80-2 to 80-7 are the working procedure deagrams of twice help combustion embodiment in which active body is used as motion body, gas chambers Cx, Cy are connected in parallel in the same body, and possess multi-set gas chamber Cx, single-set gate plate Gx; and its working cycle is shown in Table 11.

V. Twice help combustion structure possesses multi-row gas chamber Cx which connects single-set gas chamber Cy in parallel in the same body.

1. Figs. 81 and 81-1 are the graphic views of twice help combustion embodiment in which active body is used as fixed body, and it possesses multi-row gas chamber Cx which is connected by single-set gas chamber Cy in parallel in the same body, and its main characters are as follows:

Structure relation between active body and passive body is that active body is used as fixed body; passive body is used as motion body.

Relation between gas chamber sets Cx 104 and Cy 105 is that gas chamber set Cx is placed at passive body; gas chamber set Cy is also placed at passive body; gas chamber sets Cx and Cy are placed in parallel connection.

Characteristic of gate plate set is to be constituted by gate plate set Gx 1040, Gy 1050 without guide hole.

Intake compressive structure with function of twice help combustion which connects single-set gas chamber set Cy 105 in parallel by multi-row gas chambers set Cx 104, gas chamber set Cx 104 possesses independent intake port 110'.

Fuel gas is transmitted by exchange gas chamber CZ 1060 or groove on active body from gas chamber set Cx 104 to gas chamber set Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the exchange gas chamber CZ 1060 of active body; or it is placed in the concave chamber structure which is at the lagging end of gate plate set Gy 1050 of active body and can couple with gas chamber Cy, and avoid to be interferred by passive body; or it is placed in the concave chamber which is at the leading end of gas chamber set Cy 105 of passive body and can avoid to be interferred by gate plate Gy 1050.

If intake method respectively possesses independent intake port which is placed at active body used as fixed body, and intake port 110$'$ is respectively placed at the lagging end of each gate plate set Gx 1040 and is coupled on the track of gas chamber Cx 104; or intake port 110$'$ is respectively placed at side of gate plate set Gx 1040 and is coupled by ntake guide transverse groove 104$'$ of gas chamber set Cx 104;

if it is placed on the passive body which is used as motion body, and intake port 110$'$ is respectively in the hole structure which is at the leading end of each gas chamber Cx 104, and can avoid to be interferred by gate plate set Gx 1040, and transmit fuel gas through transmission pipe which is coupled by intake port on motion body;

if it is common intake port, and is placed at the active body which is used as fixed body, and intake port 110$'$ is placed at the lagging end of gate plate set Gx 1040, and is coupled on the track of gas chamber Cx 104; or intake port 110$'$ is placed at side of lagging end of gate plate set Gx 1040, and is coupled by intake guide transverse groove of gas chamber set Cx;

if it is placed on the passive body which is used as motion body, and intake port 110$'$ is placed in the hole structure which is at the leading end of gas chamber Cx 104, and can avoid to be interferred by gate plate set Gx 1040, and transmit fuel gas through transmission pipe which is coupled by intake port 110$'$ on motion body; or it is placed in the groove type structure which is at the leading end of gas chamber Cx 104, and can avoid to be interferred by gate plate set Gx 1040; and transmit fuel gas through transmission pipe which is coupled by intake groove 110 on motion body.

If exhaust method is to place exhaust port on the active body which is used as fixed body, and exhaust port 111$'$ is placed at the leading end of gate plate set Gy 1050, and is coupled on the track of gas chamber Cy 105; or it is placed at side of leading end of gate plate set Gy 1050, and is coupled by exhaust guide transverse groove 105$'$ of gas chamber set Cy 105;

If it is placed at passive body which is used as motion body, and exhaust port 111$'$ is respectively placed in the hole structure which is at the lagging end of each gas chamber set Cy 105, and can avoid to be interferred by gate plate set Gy 1050, and transmit fuel gas through transmission pipe which is coupled by exhaust port 111$'$ or motion body; or it is respectively placed in the groove type structure which is at the lagging end of each gas chamber set Cy 105, and can avoid to be interferred by gate plate set Gy 1050, and transmit fuel gas through transmission pipe which is coupled by exhaust groove 111 on motion body.

Characteristics of above twice help combustion structure are as follows:

Structure which possesses gate plate set Gx 1040, Gy 1050 and exchange gas chamber set is used as active body;

Structure which possesses gas chamber sets Cx 104, Cy 105 is used as passive body;

Each dynamic unit is constituted by at least a set of gas chamber Cy 105 and at least two sets of gas chamber set Cx 104 which is located at its two sides, at two sides of leading end of gas chamber set Cy 105, there respectively possesses a guide transverse groove 105$'$, at the lagging end of two sets of gas chamber Cx 104 near side of gas chamber set Cy 105, there also respectively possesses guide transverse groove 104$'$;$\cdot$

Two sets of exchange gas chamber set are respectively used to couple gas chamber set Cy 105 and gas chamber set Cx 104 at two sides in sequence, wherein, the leading coupled set is used to transmit fuel to gas chamber Cy 105, and the lagging set is used to transmit fresh fuel gas of twice help combustion to gas chamber Cy 105;

Transmission time of the lagging set exchange gas chamber CZ 1060 and the lagging gas chamber set Cx 104 is after fuel gas of gas chamber Cy 105 is ignited;

The lagging set exchange gas chamber CZ 1060 firstly intersects and communicates guide transverse groove 104$'$ of lagging gas chamber set Cx, and then communicates guide transverse groove of gas chamber set Cy 105, and both of them intersect and communicate at different time.

Figs. 81-2 to 81-7 are the working procedure diagrams of twice help combustion embodiment in which active body is used as fixed body, and multi-row gas chamber Cx is connected by single set gas chamber Cy in parallel in the same body; and its working cycle is shown in Table 12.

62

2. Figs. 82 and 82-1 are the graphic views of twice help combustion embodiment in which active body is used as motion body, and multi-row gas chamber Cx is connected by single set gas chamber Cy in parallel in the same body, and its main characters are as follows:

Structure relation between active body and passive body is that active body is used as motion body; passive body is used as fixed body.

Relation between gas chamber sets Cx 104 and Cy 105 is that gas chamber set Cx is placed at passive body; gas chamber set Cy is also placed at passive body; gas chamber sets Cx and Cy are placed in parallel connection.

Characteristic of gate plate set is to be constituted by gate plate set Gx 1040, Gy 1050 without guide hole.

Intake compressive structure with function of twice help combustion which connects single-set gas chamber set Cy 105 in parallel by multi-row gas chamber set Cx 104, gas chamber set Cx 104 possesses independent intake port 110'.

Fuel gas is transmitted by exchange gas chamber CZ 1060 or groove on active body from gas chamber set Cx 104 to gas chamber set Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the exchange gas chamber CZ 1060 of active body; or it is placed in the concave chamber structure which is at the lagging end of gate plate set Gy 1050 of active body and can couple with gas chamber Cy, and avoid to be interferred by passive body; or it is placed in the concave chamber which is at the leading end of gas chamber set Cy 105 of passive body and can avoid to be interferred by gate plate Gy1050.

If intake method respectively possesses independent intake port which is placed at the passive body used as fixed body, and intake port is respectively placed in the hole structure or guide transverse groove which is at the leading end of each gas chamber set Cx 104, and can avoid to be interferred by gate plate set Gx 1040;

if it is placed on the active body which is used as motion body, and intake port is respectively placed at the lagging end of each gate plate set Gx 1040, and is coupled on the track of gas chamber Cx, and can transmit fuel gas through transmission pipe which is coupled by intake port on motion body; or it is respectively placed at side of gate plate set Gx 1040 and is coupled by guide transverse groove 104', and can transmist frel gas through transmission pipe which is coupled by intake port 110' on motion body.

If exhaust method is to place exhaust port on the passive body which is used as fixed body, and exhaust port 111' is placed in the hole structure which is at the lagging end of gas chamber set Cy 105, and can avoid to be interferred by gate plate set Gy 1050;

if it is placed at the active body which is used as motion body, and exhaust port 111' is placed at the leading end of gate plate set Gy 1050, and couples on the track of gas chamber Cy, and can transmit fuel gas through transmission pipe which is coupled by exhaust port 111' on motion body; or it is respectively placed at side of leading end of each gate plate set Gy 1050, and is coupled by exhaust guide transverse groove 105' of gas chamber set Cy 105, and can transmit fuel gas through transmission pipe which is coupled by exhaust port 111' on motion body.

VI Twice help combustion structure possesses gas chambers Cx, Cy which are in the same body and connect and mix in series and parallel connection.

1. Figs. 83 and 83-1 are the graphic views of twice help combustion embodiment in which active body is used as fixed body, gas chambers Cx and Cy are connected and mixed in series andparallel, and its main characters are as follows:

Structure relation between active body and passive body is that active body is used as fixed body; passive body is used as motion body.

Relation between gas chamber sets Cx 104 and Cy 105 is that gas chamber set Cx is placed at passive body; gas chamber set Cy is also placed at passive body; gas chamber sets Cx and Cy are placed and mixed in series and parallel connection.

Characteristic of gate plate set is to be constituted by gate plate GTx 1045 with transverse guide hole and common gate plate set GC 106.

Intake compressive structure with function of twice help combustion is connected and mixed by multi-set gas chamber sets Cx and Cy in series and parallel, in order to transmit fuel gas from different working angle to gas chamber Cy 105, and each gas chamber set Cx 104 possesses independent intake port 110'.

Fuel gas is transmitted by exchange gas chamber CZ 1060 or groove on active body from gas chamber set Cx 104 to gas chamber set Cy 105, and it is also transmitted by common gate plate set GC 106 which possesses pressure-saved gas chamber 102 and low position intake valve 101, high position output guide hole 103.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the exchange gas chamber CZ 1060 of active body; or it is placed in the concave chamber structure which is at the lagging end of gate plate set GC 106 of active body and can couple with gas chamber Cy, and avoid to be interferred by passive body; or it is placed in the concave chamber which is at the leading end of gas chamber set Cy 105 of passive body and can avoid to be interferred by gate plate GC 106.

If intake method respectively possesses independent intake port which is placed at active body which is used as fixed body, and intake port 110' of series and parallel connection gas chamber Cx 104 is respectively placed at lagging end of each gate plate set Gx 1040 and is coupled on the track of gas chamber Cx 104; and intake port 110' of series and parallel connection gas chamber Cx 104 is placed at side of gate plate set GC 106 and is coupled by intake guide transverse groove 104' of gas chamber set Cx 104, if serial and parallel connection gas chamber possesses guide transverse groove, intake port can be also placed and coupled at side of gate plate set Gx 1040;

If it is placed at passive body which is used as motion body, and intake port 110' is respectively placed in the hole structure which is at leading end of each gas chamber Cx 104 and can avoid to be interferred by gate plate set Gx 1040 or GC 106, and transmit fuel gas through transmission pipe which is coupled by intake port on motion body.

If exhaust method is to place exhaust port on the active body which is used as fixed body, and exhaust port 111' is placed at side of leading end of gate plate set GC 106, and is coupled by exhaust guide transverse groove 105' of gas chamber set Cy 105;

if it is placed at passive body which is used as motion body, and exhaust port 111' is respectively placed in the hole structure which isat the lagging end of each gas chamber set Cy 105 and can avoid to be interferred by gate plate set GC 106, and transmit fuel gas through transmission pipe which is coupled by exhaust port 111' on motion body; or it is respectively placed in the groove type structure which is at the lagging end of each gas chamber set Cy 105 and can avoid to be interferred by gate plate set GC 106, and transmit fuel gas through transmission pipe which is coupled by exhaust groove 111 on motion body.

Characteristics of above twice help combustion structure ·are as follows:

Structure which possesses gate plate sets Gx 1040, GC 106 and exchange gas chamber CZ 1060 is used as active body;

Structure which possesses gas chamber sets Cx 104, Cy 105 is used as passive body;

Each dynamic is constituted by at least a set of shallower gas chamber Cx 104 which is coupled by common gate plate set GC 106 and is connected by gas chamber Cy 105 in series and parallel, and at least a set of gas chamber set Cx 104 which is connected in parallel by the above series and parallel connection gas chamber set Cx 104, Cy 105, andthe parallel connection gas chamber set Cx 104 is coupled by gate plate set Gx 1040, at its leading end near side of gas chamber Cy, there is a guide transverse groove 104';

In the middle section of gas chamber set Cy near side of series and parallel connection gas chamber set Cx 104, there also possesses a guide transverse groove 105', the size and position of this kind of guide transverse groove in certain period of driving can be covered by side of gate plate set GC 106;

Fuel gas transmission of serial and parallel connection of gas chamber sets Cx, Cy is that when common gate plate set GC 106 passes through shallower gas chamber Cx, its guide hole 103 is hidden into gate plate seat, and store fuel gas which will enter from one-way intake valve 101 in the pressure-saved chamber 102, and when it passes through deeper gas chamber Cy 105, guide hole 103 is exposed and transmits fuel gas to gas chamber Cy;

Twice help combustion exchange gas chamber CZ 1060 is placed among the lagging end of gate plate set GC 106, the leading end of Gx 1040, and gas chamber set Cy 105 and the parallel connection gas chamber Cx 104, and can intersect and communicate guide transverse grooves 104' and 105';

Exchange gas chamber CZ firstly intersects and communicates the serial and parallel connection gas chamber set Cx 104, and then intersects and communicates guide transverse groove 105' in the middle section of gas chamber Cy, and both two guide transverse grooves are intersected and communicated at different time.

Figs. 83-2 to 83-6 is the working procedure diagrams of twice help combustion in which above active body is used as fixed body, and gas chambers Cx, Cy are connected and mixed in series and parallel in the same body. Its working cycle is shown in Table 13.

2. Figs. 84 and 84-1 are the graphic views of twice help combustion embodiment in which active body is used as motion body, gas chambers Cx and Cy are connected and mixed in series and parallel, and its main characters are as follows:

Structure relation between active body and passive body is that active body is used as motion body; passive body is used as fixed body.

Relation between gas chamber sets Cx 104 and Cy 105 is that gas chamber Cx is placed at passive body; gas chamber set Cy is also placed at passive body; gas chamber sets Cx and Cy are placed and mixed in series and parallel connection.

Characteristic of gate plate set is to be constituted by gate plate GTx 1045 with transverse guide hole and common gate plate set GC 106.

Intake compressive structure with function of twice help combustion is connected and mixed by multi-set gas chamber sets Cx and Cy in series and parallel, in order to transmit fuel gas from different working angle to gas chamber Cy 105, and each gas chamber set Cx 104 possesses independent intake port 110′.

Fuel gas is transmitted by exchange gas chamber CZ 1060 or groove on action body from gas chamber set Cx 104 to gas chamber set Cy 105, andit is also transmitted by common gate plate set GC 106 which possesses pressure-saved gas chamber 102 and low position intake valve 101, high position output guide hole 103.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the exchange gas chamber CZ 1060 of active body; or it is placed in the concave chamber structure which is at the lagging end of gate plate set GC 106 of active body and can couple with gas chamber Cy, and avoid to be interferred by passive body; or it is placed in the concave chamber which is at the leading end of gas chamber set Cy 105 of passive body and can avoid to be interferred by gate plate GC 106.

If intake method respectively possesses independent intake port which is placed at the passive body used as fixed body, and intake port is respectively placed in the hole structure which is at the leading end of each gas chamber set Cx 104, and can avoid to be interferred by gate plate set Gx 1040 or GC 106;

if it is placed on the active body which is used as motion body,and intake port is respectively placed at the lagging end of gate plate set Gx 1040 or GC 106 and is coupled on the track of gas chamber Cx 104 and transmit fuel gas through transmission pipe which is coupled by intake port on motion body; or it is respectively placed at side of gate plate set Gx 1040 or GC 106 and is coupled by guide transverse groove 104′, and can transmit fuel gas through transmission pipe which is coupled by intake port 110′ on motion body.

If exhaust method is to place exhaust port on the passive body which is used as fixed body, and exhaust port 111′ is placed in the hole structure which is at the lagging end of gas chamber set Cy 105, and can avoid to be interferred by gate plate set GC 106;

if it is placed at the active body which is used as motion body, and exhaust port 111′ is placed at the leading end of gate plate set GC 106 and couples on the track of gas chamber Cy, and can transmit fuel gas through transmission pipe which is coupled by exhaust port 111′ on motion body; or it is respectively placed at side of leading end of each gate plate set GC 106, and is coupled by exhaust guide transverse groove 105′ of gas chamber set Cy 105, and can transmit fuel gas through transmission pipe whichis coupled by exhaust port 111′ on motion body.

VII. Twice help combustion structure possesses single-set gate plate Gx, and multi-set series connection gas chamber Cx which is connected in parallel by gas chamber Cy in different body.

1. Figs.85 and 85-1 are the graphic views of twice help combustion embodiment A in which active body is used as fixed body, and different body gas chamber Cy is parallel connection and possesses single-set gate plate Gx, multi-set series connection gas chamber Cx, and its main characters are as follows:

Active body is used as fixed body; passive body is used as motion body.

Relation between gas chamber sets Cx 104 and Cy 105 is that gas chamber set Cx is placed at active body, gas chamber set Cy is placed at passive body; gas chamber sets Cx and Cy are placed in parallel connection.

Characteristic of gate plate set is to be constituted by gate plates Gx 1040, Gy 1050 without guide hole.

Intake compressive structure with function of twice help combustion is connected in series by multi-set gas chamber Cx 104, and placed in dependent or common intake port 110′ on it.

Fuel gas is transmitted from gas chamber set Cx 104 to gas chamber set Cy 105 by guide transverse groove which is overlapped by trace of guide transverse groove 105′ of gas chamber Cy on active body and turning guide transverse groove 104″ of gas chamber set Cx on passive body.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at active body and couples with guide transverse groove of gas chamber Cy; or it is placed in the concave chamber structure which is at the lagging end of gate plate set Gy 1050 of active body, and can couple with gas chamber Cy, and avoid to be interferred by passive body; or it is placed in the concave chamber or guide transverse groove which is at the leading end of gas chamber set Cy 105 of passive body, and can avoid to be interferred by gate plate.

If intake method respectively possesses independent intake port which is placed at passive body used as motion body, and intake port 110$'$ is respectively placed at the lagging end of each gate plate set Gx 1040, and is coupled on the track of gas chamber Cx 104; or it is respectively placed at side of each gate plate set Gx 1045, or GC 106 or GTx 1045, and is coupled by intake guide transverse groove 104$'$ of gas chamber set Cx 104; and can transmit fuel gas through transmission pipe which is coupled by intake port on motion body;

if it is placed at active body which is used as fixed body, and intake port 110$'$ is respectively placed in the hole structure which is at the leading end of each gas chamber Cx 104 and can avoid to be interferred by gate plate set Gx 1040;

if intake method possesses common intake port which is placed at the passive body of motion body, and intake port 110$'$ is placed at the lagging end of gate plate set Gx 1040 and is coupled on the track of gas chamber set Cx 104; or it is placed at side of lagging end of gate plate set Gx 1040 or GC 106 or GTx 1045, and is coupled by intake guide transverse groove of gas chamber set Cx, and can transmit fuel gas through transmission pipe which is coupled by intake groove 110 on motion body;

if it is placed on the active body which is used as fixed body, and intake port 110$'$ is placed in the hole structure which is at the leading end of gas chamber Cx 104, and can avoid to be interferred by gate plate set Gx 1040, and transmit fuel gas through transmission pipe which is coupled by intake port 110$'$ on active body; or it is placed in the groove type structure which is at the leadingend of gas chamber Cx 104, and can avoid to be interferred by gate place set Gx 1040, GC 106, GTx 1045.

If exhaust method is to place exhaust port on the active body which is used as fixed body, and exhaust port 111$'$ is placed at the leading end of gate plate set Gy 1050, and is coupled on the track of gas chamber Cy 105; or it is placed at side of leading end of gate plate set Gy 1050 or GTy 1055 or GC 106 and is coupled by exhaust guide transverse groove 105$'$ of gas chamber set Cy 105.

Characteristics of above twice help combustion are as follows:

Gas chamber set Cx 104 and gate plate set Gy 1050 are placed on active body;

Gas chamber set Cy 105 and gate plate set Gx 1040 are placed on passive body;

Each dynamic unit is constituted by parallel connection of explosive exhaust structure which is formed by coupling a set of gate plate set Gy 1050 with at least a set of gas chamber set Cy 105, and intake compressive structure which is formed by coupling a set of gate plate set Gx 1040 with at least two sections series connection gas chamber set Cx 104;

At leading end of gas chamber set Cy 105 near side of gas chamber set, there is guide transverse groove 105$'$;

Each section of gas chamber Cx 104 possesses guide transverse groove 104$''$ which extends from the lagging end forward to side of gas chamber Cy 105, and then turns to the leading end, each section of guide transverse groove 104$''$ intersects and communicates guide transverse groove 105$'$ of gas chamber set Cy at different time;

Above guide transverse grooves 104$''$ and 105$''$ of gas chambers Cx 104 and Cy 105 are covered by side of gate plate set Gx 1040 in certain period of driving;

Time of ignition and combustion is after side of gate plate set Gx 1040 completely covers guide transverse groove 104$''$ which is at leading end of gas chamber set Cx 104 of the leading section;

Gas chamber set Cx 104 of leading section separates from gas chamber Cy 105 before side of gate plate set Gx 1040 separates from guide transverse groove 104$''$ of gas chamber set Cx of the leading section;

Time of ignition and combustion is when side of gate plate set Gx 1040 completely covers guide transverse groove 104$''$ which is at the leading end of gas chamber set of the lagging end;

After finishing help combustion, gas chambers Cx 104, Cy 105 are separated before side of gate plate Gx 1040 separates from guide transverse groove 104$''$ of gas chamber Cx 104 of the lagging section;

Fuel gas is transmitted after gate plate set Gy 1050 passes through guide transverse groove 105$'$ of gas chamber Cy 105.

66

Figs. 85-2 to 85-7 is the working procedure diagrams of twice help combustion embodiment A in which above active body is used as fixed body, and different body gas chamber Cy is parallel connection and possesses multi-set connection gas chamber Cx, single-set gate plate Gx; and its working cycle is shown in Table 14.

2. Figs. 86 and 86-1 are the graphic views of twice help conbustion embodiment B in which active body is used as fixed body, and different body gas chamber Cy is parallel connection and possesses single-set gate plate Gx, multi-set series gas chamber Cx, and its main characters are as follows:

Active body is used as fixed body, passive body is used as motion body.

Gas chambers Cx, Cy are connected in parallel in the different body.

Cx is at least two times of Cy and connects Cy in parallel after series connection.

Single set gate plate Gx is matched by series connection gas chamber set.

If intake method respectively possesses independent intake port which is placed at active body used as passive body , and intake port 110$'$ is respectively placed in the hole structure which is at the leading end of each gas chamber Cx 104, and can avoid to be interferred by gate plate set Gx 1040.

If exhaust method is to place exhaust port on the passive body which is used as motion body, and exhaust port 111$'$ is respectively placed in the hole structure which is at the lagging end of each gas chamber set Cy 105 and can avoid to be interferred by gate plate set Gy 1050; or it is respectively placed in the groove type structure which is at the lagging end of each gas chamber set Cy 105, and can avoid to be interferred by gate plate set Gy 1050 or GTx 1055 or GC 106.

3. Figs.87 and 87-1 are the graphic views of twice help combustion embodiment in which active body is used as motion body, and different body as chamber Cy is parallel connection and possesses single-set gate plate Gx, multi-set series connection gas chamber Cx, and its main characters are as follows:

Structure relation between active body and passive body is that active body is used as motion body; passive body is used as fixed body.

Relation between gas chamber sets Cx 104 and Cy 105 is that gas chamber set Cx is placed at active body; gas chamber set Cy is placed at passive body; gas chamber sets Cx and Cy are placed in parallel connection.

Characteristics of gate plate set is to be constituted by gate plates Gx 1040, Gy 1050 without guide hole.

Intake compressive structure with function of twice help combustion is connected in series by multi-set gas chamber Cx 104, and places independent or common intake port 110$'$ on it.

Fuel gas is transmitted from gas chamber set Cx 104 to gas chamber set Cy 105 by overlapping trace of guide transverse groove 105$'$ of gas chamber Cy on active body and turning guide transverse groove 104$''$ of gas chamber set Cx on passive body.

Method and device of ignition and combustion include that plug ignites the mixed gas, or fuel nozzle injects fuel to mix with and ignite high pressure high temperature air, or the burned high temperature fuel is used to ignite fresh fuel.

Ignition deviee is placed in the concave chamber structure which is at the active body and couples with guide transverse groove; or it is placed in the concave chamber structure which is at the lagging end of gate plate set Gy 1050 of active body, and can couple with gas chamber Cy, and avoid to be interferred by passive body; or it is placed in the concave chamber or guide transverse groove which is at the leading end of gas chamber set Cy 105 of passive body and can avoid to be interferred by gate plate.

If intake method respectively possesses independent intake port which is placed at active body used as motion body, and intake port is respectively placed in the hole structure which is at the leading end of each gas chamber set Cx 104, and can avoid to be interferred by gate plate set Gx 1040, and transmit fuel gas through transmission pipe which is coupled by intake port on motion body;

if it is placed on the passive body which is used as fixed body, and intake port is respectively placed at the lagging end of each gate plate set Gx 1040, and is coupled on the track of gas chamber Cx 104, and can transmit fuel gas through transmission pipe which is coupled by intake port on active body; or it is respectively placed at side of each gate plate set Gx 1040, and is coupled by intake guide transverse groove 104$'$ of gas chamber set Cx 104;

if it is common intake port which is placed at the active body used as motion body, and intake port 110$'$ is placed in the hole structure or guide transverse groove which is at the leading end of gas chamber set Cx 104, and can avoid to be interferred by gate plate set Gx 1040, and transmit fuel gas through transmission pipe which is coupled by intake port 110$'$ on motion body;

if it is placed on the passive body which is used as fixed body, and intake port is placed at the lagging end of gate plate set, and is coupled on the track of gas chamber Cx 104; or it is placed at side of lagging end of gate plate set Gx 1040, and is coupled by intake guide transverse groove of gas chamber set Cx, and can transmit fuel gas through transmission pipe which is coupled by intake port 110′ on active body.

If exhaust method is to place exhaust port on the passive body which is used as fixed body, and exhaust port 111′ is placed in the hole structure which is at the lagging end of gas chamber set Cy 105, and can avoid to be interferred by gate plate set Gy 1050;

if it is placed at active body which is used as motion body, and exhaust port 111′ is placed at the leading end of gate plate set Gy 1050, and is coupled on the track of gas chamber Cy 105, and can transmit fuel gas through transmission pipe which is coupled by exhaust port 111′ on motion body; or it is respectively placed at side of leading end of each gate plate set Gy 1050, and is coupled by exhaust guide transverse groove 105′ of gas chamber set Cy 105, and can transmit fuel gas through transmission pipe which is coupled by exhaust port 111′ on motion body.

VIII. Twice help combustion structure possesses multi-row gas chamber Cx which connects gas chamber Cy of different body in parallel .

1. Figs. 88 and 88-1 are the graphic views of twice help combustion embodiment in which active body is used as fixed body, and it possesses multi-row gas chamber Cx to connect different body gas chamber Cy in parallel, and its main characters are as follows:

Structure relation between active body and passive body is that active body is used as fixed body; passive body is used as motion body.

Relation between gas chamber sets Cx 104 and Cy 105 is that gas chamber set Cx is placed at active body; gas chamber set Cy is placed at passive body; gas chamber sets Cx and Cy are placed in parallel connection.

Characteristic of gate plate is to be constituted by gate plates Gx 1040, Gy 1050 without guide hole.

Intake compressive structure with function of twice help combustion possesses multi-row gas chamber set Cx 104 which is connected by gas chamber Cy 105 in parallel, gas chamber set Cx 104 possesses independent intake port 110′ and different transmission working angle in order to let fuel gas enter into gas chamber set Cy in sequence.

Fuel gas is transmitted from gas chamber set Cx 104 to gas chamber set Cy 105 by overlapping trace of guide transverse groove 105′ of gas chamber Cy on active body and turning guide transverse groove 104″ of gas chamber set Cx on passive body.

Method and device of ignition and combustion include that plug ignites the mixed gas, or fuel nozzle injects fuel to mix with andignite high pressure high temperature air, or the burned high temperature fuel is used to ignite fresh fuel.

Ignition device is placed in the concave chamber structure which is on active body and couples with guide transverse groove 105′; or it is placed in the concave chamber structure which is at the lagging end of gate plate set Gy 1050 of active body; and can couple with gas chamber Cy, and avoid to be interferred by passive body; or it is placed in the concave chamber or guide transverse groove which is at the leading end of gas chamber set Cy 105 of passive body, and can avoid to be interferred by gate plate.

If intake method respectively possesses independent intake port which is placed at passive body used as motion body, and intake port 110′ is respectively placed at the lagging end of each gate plate set Gx 1040, and is coupled on the track of gas chamber Cx 104; or it is respectively placed at side of each gate plate set, and is coupled by intake guide transverse groove 104′ of gas chamber set Cx 104; and can transmit fuel gas through transmission pipe which is coupled by intake port on motion body;

if it is placed on the active body which is used as fixed body, and intake port 110′ is placed in the hole structure which is at the leading end of each gas chamber Cx 104 and can avoid to be interferred by gate plate set Gx 1040.

If exhaust method is to place exhaust port on the active body which is used as fixed body, and exhaust port 111′ is placed at the leading end of gate plate set Gy 1050, and is coupled on the track of gas chamber Cy 105; or it is placed at side of leading end of gate plate set Gy 1050, and is coupled by exhaust guide transverse groove 105′ of gas chamber set Cy 105;

if it is placed at the passive body which is used as motion body, and exhaust port 111′ is respectively placed in the hole structure which is at thelagging end of gas chamber set Cy 105 and can avoid to be interferred by gate plate set Gy 1050, and transmit fuel gas through transmission pipe which is coupled by exhaust port 111′ on motion body; or it is respectively placed in the groove type structure which is at the lagging end of each gas chamber set Cy 105, and can avoid to be interferred by gate plate set Gy 1050, and transmit fuel gas through transmission pipe which is coupled by exhaust groove 111 on motion body.

Characteristics of above twice help combustion are as follows:

Gas chamber set Cx 104 and gate plate set Gy 1050 are placed on active body;

Gas chamber Cy 105 and gate plate set Gx 1040 are placed on passive body;

Each dynamic unit is constituted by connecting a set of gas chamber set Cy 105 and two sets of gas chamber set Cx 104 in parallel;

Each set of gate plate set Gy 1050 at least couples with a set of gas chamber Cy 105;

Each set of gate plate set Gx 1040 at least couples a set of gas chamber set Cx 104;

Each set of gas chamber Cx possesses guide groove 104″ which extends from the lagging end to side of Cy, and then turns to the leading end, and each set of guide groove 104″ intersects and communicates guide transverse groove of gas chamber set Cy 105 at different time;

Above guide transverse grooves 104″ and 105″ of gas chambers Cx 104 and Cy 105 are covered by side of gate plate set Gx 1040 in certain period of driving;

Time of ignition and combustion is after side of gate plate set Gx 1040 completely covers guide transverse groove 104″ which is at the leading end of gas chamber set Cx 104 of the leading section;

Gas chamber set Cx 104 of leading section separates from gas chamber Cy 105 before side of gate plate set Gx 1040 separates from guide transverse groove 104″ of gas chamber set Cx of the leading section;

Time of ignition and conbustion is when side of gate plate set Gx 1040 completely covers guide transverse groove 104″ which is at the leading end of gas chamber set of the lagging end;

After finishing help combustion, gas chambers Cx 104, Cy 105 of the lagging section are separated before side of gate plate Gx 1040 separates from guide transverse groove 104″ of gas chamber set Cx 104 of the lagging section;

Fuel gas is transmitted after gate plate set Gy 1050 passes through guide transverse groove 105′ of gas chamber set Cy 105.

2. Figs. 89 and 89-1 are the graphic views of twice help combustion embodiment in which active body is used as motion body, and it possesses multi-row gas chamber Cx which connects different body gas chamber Cy in parallel, and its main characters are as follows:

Structure relation between action body and passive body is that active body is used as motion body; passive body is used as fixed body.

Relation between gas chamber sets Cx 104 and Cy 105 is that gas chamber set Cx is placed at active body; gas chamber set Cy is placed at passive body; gas chamber sets Cx and Cy are placed in parallel connection.

Characteristic of gate plate is to be constituted by gate plate Gx 1040, Gy 1050 without guide hole.

Intake compressive structure with function of twice help combustion possesses multi-row gas chamber set Cx 104 which is connected by gas chamber Cy 105·in parallel, gas chamber set Cx 104 possesses independent intake port 110′ and different transmission working angle in order to let fuel gas enter into gas chamber set Cy in sequence.

Fuel gas is transmitted from gas chamber set Cx 104 to gas chamber set Cy 105 by overlapping trace of guide transverse groove 105′ of gas chamber Cy on active body and turning guide transverse groove 104″ of gas chamber Cx on passive body.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at active body and couples with guide transverse groove 105′; or it is placed in the concave chamber structure which is at the lagging end of gate plate set Gy 1050 of active body; and can couple with gas chamber Cy, and avoid to be interferred by passive body; or it is placed in the concave chamber or guide transverse groove which is at the leading end of gas chamber set Cy 105 of passive body, and can avoid to be interferred by gate plate, and transmit fuel gas through transmission pipe which is coupled by intake port on motion body.

If intake method respectively possesses independent intake port which is placed at active body used as motion body, and intake port is respectively placed in the hole structure which is at the leading end of each gas chamber set Cx 104, and can avoid to be interferred by gate plate set Gx 1040;

if it is placed on the passive body which is used as fixed body, and intake port 110′ is respectively placed at the lagging end of each gate plate set Gx 1040, and is coupled on the track of gas chamber Cx 104; or it is respectively placed at side of each gate plate set Gx 1040, and is coupled by intake guide transverse groove 104′ of gas chamber set Cx 104, and can transmit fuel gas through transmission pipe which is coupled by intake port 110′ on active body.

If exhaust method is to place exhaust port on the passive body which is used as fixed body, and exhaust port 111′ is placed in the hole structure which is at the lagging end of gas chamber set Cy 105, and can avoid to be interferred by gate plate set Gy 1050;

if it is placed at active body which is used as motion body, and exhaust port 111′ is placed at the leading end of gate plate set Gy 1050, and is coupled on the track of gas chamber Cy 105, and can transmit fuel gas through transmission pipe which is coupled by exhaust port 111' on motion body; or it is respectively placed at side of leading end of each gate plate set Gy 1050, and is coupled by exhaust guide transverse groove 105' of gas chamber set Cy 105, and can transmit fuel gas through transmission pipe which is coupled by exhaust port 111' on motion body.

Figs.89 - 2 to 89-6 are the working procedure diagrams of twice help combustion in which above active body is used as motion body, and it possesses multi-row gas chamber which connects different body gas chamber Cy in parallel; and its working cycle is shown in Table 15.

IX. Twice help combustion structure which gate plate set possesses guide hole and gas chamber Cx possesses multi-set gate plate Gx to connect gas chamber Cy in parallel in the same body.

1. Figs. 90 and 90-1 are the graphic views of twice help combustion embodiment A in which active body is used as fixed body, gate plate set GTx 1045 possesses guide hole, gas chamber Cx possesses multi-set gate plate GTx 1045 and they are connected by gas chamber Cy in parallel in the same body, and its main characters are as follows:

Structure relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate set is to be constituted by gates GTx 1045 and GTy 1055 or Gy 1050 which possess transverse guide hole.

Intake compressive structure with function of twice help combustion is to place multi-set gate plate set Gx 1040 on single-set gas chamber set Cx 104 and possesses common intake port 110'.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can aooid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 1 of Article III.

Figs. 90-2 to 90-7 are the working procedure diagrams of twice help combustion embodiment A in which above active body is used as fixed body, gate plate possesses guide hole, gas chamber Cx possesses multi-set gate plate Gx, and they are connected by gas chamber Cy in parallel in the same body.

2. Gigs.91 and 91-1 are the graphic views of twice help combustion embodiment B in which active body is used as fixed body, gate plate set possesses guide hole, gas chamber Cx possesses multi-set gate plate Gx, and they are connected by gas chamber Cy in the same body, and its main characters are as follows:

Structure relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice help combustion is to place multi-set gate plate set Gx 1040 on single-set gas chamber set Cx 104 and possesses common intake port 110'.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 2 of Article III.

3. Figs. 92 and 92-1 are the graphic views of twice help combustion embodiment in which active body is used as fixed body, gate plate set possesses guide hole, gas chamber Cx possesses multi-set gate plate Gx, and they are connected by gas chamber Cy in parallel in the same body, and its main characters are as follows:

Structure relation between active body and passive body is that active body is used as motion body; passive body is used as fixed body.

Relation between gas chamber sets Cx 104 and Cy105 is that gas chamber set Cx is placed at passive body; gas chamber set Cy is placed at passive body; gas chamber sets Cx and Cy are placed in parallel connection.

Characteristic of gate plate set is to be constituted by gates GTx 1045 and GTy 1055 which possess transverse guide hole.

Intake compressive structure with function of twice help combustion is to place multi-set gate plate set Gx 1040 on single-set gas chamber set Cx 104 and possesses common intake port 110$'$.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 3 of Article III.

X. Twice help combustion structure which gate plate set possesses guide hole and multi-set series connection gas chamber Cx is connected in parallel by single-set gas chamber Cy in the same body.

1. Figs. 93 and 93-1 are the graphic views of twice help combustion embodiment in which active body is used as fixed body, gate plate set possesses guide hole, multi-set series connection gas chamber Cx is connected in parallel by single-set gas chamber Cy in the same body, and its main characters are as follows:

Structure relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice help combustion is connected in series by multi-set gas chamber set Cx, and possesses independent or common intake port 110$'$.

FUel gas is transmitted from gas chamber set Cx 104 to gas chamber set Cy 105 by groove or hole type guide passage 1010 on active body which is at transverse side of gate plate, and gate plate sets GTx 1045, FTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guid3 groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 1 of Article IV.

2. Figs. 94 and 94-1 are the graphic views of twice help combustion embodiment in which active body is used as motion body, gate plate set possesses guide hole, multi-set series connection gas chamber Cx is connected in parallel by single-set gas chamber Cy in the same body, and its main characters are as follows:

Structure relation between active body and passive body is that active body is used as motion body; passive body is used as fixed body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice help combustion is connected in series by multi-set gas chamber set Cx, and possesses independent or common intake port 110'.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 3 of Article IV.

Figs. 94-2 to 94-7 are the working precedure diagrams of twice help combustion in which above active body is used as motion body, gate plate set possesses guide hole, multi-set series connection gas chamber Cx is connected in parallel by single-set gas chamber Cy in the same body.

XI. Twice help combustion structure which gate plate set possesses guide hole, and multi-row gas chamber Cx is connected in parallel by single-set gas chamber in the same body.

1. Figs. 95 and 95-1 are the graphic views of twice help combustion embodiment in which active body is used as fixed body, gate plate set possesses guide hole, multi-row gas chamber Cx is connected in parallel by single-set gas chamber in the same body, and its main characters are as follows:

Structure relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice help combustion whichconnects single-set gas chamber set Cy 105 in parallel by multi-row gas chamber set Cx 104, gas chamber set Cx 104 possesses independent intake port 110'.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GRy 1055 or Gy 1050 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 1 of Article V.

Figs. 95-2 to 95-7 are the working procedure diagrams of twice help combustion embodiment in which active body is used as motion body, gate plate set possesses guide hole, multi-row gas chamber Cx is connected in parallel by single-set gas chamber in the same body.

2. Figs. 96 and 96-1 are the graphic views of twice help combustion embodiment in which active body is used as motion body, gate plate set possesses guide hole, multi-row gas chamber Cx is connected in parallel by single-set gas chamber in the same body, and its main characters are as follows:

Structure relation between active body and passive body is that active body is used as motion body; passive body is used as fixed body.

Relation between gas chamber sets Cx 104 and Cy 105 is that gas chamber set Cx is placed at passive body; gas chamber set Cy is placed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice hlep combustion which connects single-set gas chamber set Cy 105 in parallel by multi-row gas chamber set Cx 104, gas chamber set Cx 104 possesses independent. intake port 110'.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 2 of Article V.

XII. Twice help combustion structure which gate plate set possesses guide hole, and gas chambers Cx, Cy are in the same body and connected and mixed in series and parallel.

1. Figs. 97 and 97-1 are the graphic views of twice help combustion embodiment in which active body is used as fixed body, gate plate set possesses guide hole, gas chambers Cx, Cy are connected and mixed in series and parallel in the same body, and its main characters are as follows:

Structure relation between active body and passive body is that active body is used as fixed body; passive body is used as motion body.

Relation between gas chamber sets Cx 104 and Cy 105 is that gas chamber set Cx is placed at passive body; gas chamber set Cy is placed at passive body; gas chamber sets Cx and Cy are placed in serial and parallel connection.

Characteristic of gate plate set is to be constituted by gates GTx 1045 which possess transverse guide hole, and gate plate set GC 106.

Intake compressive structure with function of twice help combustion is connected and mixed by multi-set gas chamber sets Cx and Cy in series and parallel, in order to transmit fuel gas from different working angle to gas chamber Cy 105, and each gas chamber set Cx 104 possesses independent intake port 110'

Fuel gas is transmitted from gas chamber set Cx 104 to gas chamber set Cy 105 by common gate plate set GC 106 which possesses pressure-saved gas chamber 102 and low position intake valve 101, high position output guide hole 103; and by groove or hole type guide passage 1010 on active body which is at transverse side of gate plate, and gate plate sets GTx 1045 which are coupled by guide transverse groove 105' of gas chamber Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GC 106 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GC 106.

The placement of intake port and exhaust port is as same as embodiment mentioned in Item 1 of Article VI.

Figs. 97-2 to 97-6 are the working procedures diagrams of twice help combustion in which above active body is used as fixed body, gate plate set possesses guide hole, gas chambers Cx, Cy are connected and mixed in series and parallel in the same body.

2. Figs 98 and 98-1 are the graphic views of twice help combustion embodiment in which active body is used as motion body, gate plate set possesses guide hole, gas chambers Cx, Cy are connected and mixed in series and parallel in the same body, and its main characters are as follows:

Structure relation between active body and passive body is that active body is used as motion body; passive body is used as fixed body.

Relation between gas chamber sets Cx 104 and Cy 105 is that gas chamber set Cx is placed at passive body; gas chamber set Cy is placed at passive body; gas chamber sets Cx and Cy are placed in series and parallel connection.

Characteristic of gate plate set is to be constituted by gates GTx 1045 which possess transverse guide hole, and gate plate set GC 106.

Intake compressive structure with function of twice help combustion is connected and mixed by multi-set gas chamber sets Cx and Cy in series and parallel, in order to transmit fuel gas from different working angle to gas chamber Cy 105, and each gas chamber set Cx 104 possesses independent intake port 110'.

Fuel gas is transmitted from gas chamber set Cx 104 to gas chamber set Cy 105 by common gate plate set GC 106 which possesses pressure-saved gas chamber 102 and low position intake valve 101, high position output guide hole 103; and by groove or hole type guide passage 101 on active body which is at transverse side of gate plate and gate plate sets GTx 1045 which are coupled by guide transverse groove 105' of gas chamber Cy 105.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GC 106 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interfered by gate plate GC 106.

The placement of intake port and exhaust port is as same as embodiment mentioned in Item 2 of Article VI.

XIII. Twice help combustion structure which gate plate possesses guide hole, multi-set serial connection gas chamber set Cx, single-set gate plate set Gx connect gas chamber Cy of different body in parallel.

1. Figs. 99 and 99-1 are the graphic views of twice help combustion embodiment in which active body is used as fixed body, gate plate set possesses guide hole, multe-set series connection gas chamber set Cx, single-set gate plate set Gx connect gas chamber Cy of different body in parallel, and its main characters are as follows:

Structure relation between active body and passive body is that active body is used as fixed body; passive body is used as motion body.

Relation between gas chamber sets Cx 104 and Cy 105 is that gas chamber set Cx is placed at active body; gas chamber set Cy is placed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice help combustion is connected in series by multi-set gas chamber set Cx, and possesses independent or common intake port 110'.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of those two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 1 of Article VII>

2. Figs. 100 and 100-1 are the graphic views of twice help combustion embodiment A in which active body is used as motion body, gate plate set possesses guide hole, multi-set series connection gas chamber set Cx, single-set gate plate set Gx connect gas chamber Cy of different body in parallel, and its main characters are as follows:

Structuee relation between active body and passive body is active body is used as motion body; passive body is used as fixed body.

Relation between gas chamber sets Cx 104 and Cy 105 is that gas chamber set Cx is placed at active body; gas chamber set Cy is plaeed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice help combustion is connected in series by multi-set gas chamber set Cx, and possesses independent or common intake port 110'.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole; or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guide groove 1010 of active body; or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 3 of Article VII.

Figs. 100-2 to 100-7 are the working procedure diagrams of twice help combustion embodiment A in which above active body is used as motion body, gate plate set possesses guide hole, multi-set serial connection gas chamber set Cx, single-set gate plate set Gx connect gas chamber Cy of different body in parallel.

3. Figs. 101 and 101-1 are the graphic views of twice help combustion embodiment B in which active body is used as motion body, gate plate set possesses guide hole, multi-set serial connection gas chamber set Cx, single-set gate plate set Gx connect gas chamber Cy of different body in parallel, and its main characters are as follows:

Intake port 110' is placed in the hole structure which is at the leading end of gas chamber set Cx 104 on passive body, and can avoid to be interferred by gate plate set Gx 1040 or GTx 1045.

Exhaust port 111' is placed in the hole structure which is at the lagging end of gas chamber set Cy 105, and can avoid to be interferred by gate plate set Gy 1050 or GTy 1055 or GC 1060.

XIV. Twice help combustion structure which gate plate possesses guide hole, multi-row series connection gas chamber Cx connects gas chamber Cy of different body in parallel.

1. Figs. 102 and 102-1 are the graphic views of twice help combustion embodiment in which active body is used as fixed body, gate plate set possesses guide hole, multi-row parallel connection gas chamber Cx connects gas chamber Cy of different body in parallel, and its main characters are as follows:

Structure relation between active body and passive body is that active body is used as fixed body; passive body is used as motion body.

Relation between gas chamber sets Cx 104 and Cy 105 is that gas chamber set Cx is placed at active body; gas chamber set Cy is placed at passive body; gas chamber sets Cx and Cy are placed in parallel connection.

Characteristic of gate plate set is to be constituted by gates GTx 1045, GTy 1055 which possess transverse guide hole.

Intake compressive structure with function of twice help combustion possesses multi-row gas chamber set Cx 104 which is connected by gas chamber set Cy 105 in parallel, gas chamber set Cx 104 possesses independent intake port 110′ and different transmission working angle in order to let fuel gas enter into gas chamber set Cy in sequence.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferfed by p passive body; or it is placed in the guide groove 1010 of active body, or it is placed in the concave chamber which is at the leading end of gas chamber set Cy 105 of passive body and can avoid to be interfered by gate plate GTy 1055 or Gy 1050.

The placement of intake port and exhaust port is as same as embodiment mentioned in Item 1 of Article VIII.

Figs. 102-2 to 102-6 are the working procedure diagrams of twice help combustion in which above active body is used as fixed body, gate plate set possesses guide hole, multi-row parallel connection gas chamber Cx connects gas chamber Cy of different body in parallel.

2. Figs. 103 and 103-1 are the graphic view of twice help combustion embodiment in which active body is used as motion body, gate plate set possesses guide hole, multi-row parallel connection gas chamber Cx connects gas chamber Cy of different body in parallel, and its main characters are as follows:

Structure relation between active body and passive body is that active body is used as motion body; passive body is used as fixed body.

Relation between gas chamber sets Cx 104 and Cy 105 is that gas chamber set Cx is placed at active body; gas chamber set Cy is placed at passive body; gas chamber sets Cx and Cy are placed in parallel connection.

Characteristic of gate plate set isto be constituted by gates GTx 1045, GTy 1055 which possess transverse guide hole.

Intake compressive structure with function of twice help combustion possesses multi-row gas chamber set Cx 104 which is connected by gas chamber set Cy 105 in parallel, gas chamber set Cx 104 possesses independend intake port 110′ and different transmission working angle in order to let fuel gas enter into gas chamber set Cy in sequence.

Fuel gas is transmitted from gas chamber set Cx 104 to gas chamber set Cy 105 by groove or hole type guide passage 1010 on active body which is at transverse side of gate plate, and gate plate sets GTx 1045, GTy 1055 with transverse guide hole, or one of these two gate plate sets and the other set is substituted by guide transverse groove.

Method and device of ignition and combustion include that plug ignites the mixed gas, or fuel nozzle injects fuel to mix with and ignite high pressure high temperature air, or the burned high temperature fuel is used to ignite fresh fuel.

Ignition device is placed in the concave chamber structure which is at the lagging end of gate plate set GTy 1055 or Gy 1050 on active body, and is coupled by gas chamber Cy, and can avoid to be interferred by passive body; or it is placed in the guide groove 1010 of active body, or it is placed in the concave chamber which is at the leading end of gas chamber set Cy 105 of passive body and can avoid to be interferred by gate plate GTy 1055 or Gy 1050.

The placement of intake port and exhaust port is as same as embodiment mentioned in Item 2 of Article VIII.

D. Ignition and combustion structure of compound fuel for internal combustion engine of Item C.

Concept:

The present design can make the second input of fresh high pressure air on single set Cy 105 at different working angle by multi-sectional or multi-row gas chamber Cx 104, or multi-sectional intake compressive gate plate set Gx 1040 in order to let the first combustion be more complete, and further can make twice help combustion by compound fuel, the method is to transmit fresh high pressure air into the lagging gas chamber set Cx 104, and simultaneously jet fuel into from fuel nozzle 109, and the retransmitted fuel can be same or different fuel which can be ignited by the originally ignited high pressure high temperature combustion gas or ignited again by plug, for the ignition combustion and drive on compound fuel. Figs. 104 and 104-1 are the graphic view of structural embodiment, and it is characterized in that it simultaneously assembles plug 108, fuel nozzle 109 and two kinds of fuel supply system, ignition time and inject time contral device in order to act in sequence appropriately and produce twice help combustion function of above compound fuel.

Figs. 104-2 to 104-7 are the diagrams of working procedure, its working cycle is referred as shown in Table 8-5, and it is characterized in that at the moment of help combustion air is transmitted into gas chamber Cy, and it simultaneously jets same or different fuel into from fuel nozzle, in order to produce drive of compound fuel.

E. Structure of gas chamber sets Cx, Cy of internal combustion engine as mentioned in Items A, B, C, D:

Concept

Cross-section of each gas chamber set mentioned in the present case can be rectangular shapr, arc shape or labyrinth shape or concave arc shape, and has same depth or unequal depth, same length or unequal depth, same length or unequal length, forming structure of entity as shown in Figs. 105, 106, 107, 108 depends on the demand of dynamic output of engine to be selected. And gas chamber Cx can be further shown in Figs. 109, 109-1, 110, 110-1, 111, 111-1, its cross section along direction of trace is an even smooth deep are, two ends are gradually deep and shallow arc shape, and the middle part is on unchanged section or gradually deep and shallow arc or wave shape with variation of depth, in order to stir fuel gas to let it mix more averagely during the intake stroke.

Design of each item includes:

I. Dynamic unit formed by ingle-set intake compressive gas chamber Cx 104 and single-set explosive exhaust gas chamber Cy 105 in parallel.

As shown in Fig. 112, single-set gas chambers Cx 104, Cy 105 respectively stride over 180° up working angle, and let both phases overlap, and provide a larger working angle in explosion and push the lagging end of intake compressive gas chamber and the leading end of explosive exhaust gas chamber Cy 105 can oppositely connect in same phase, or as shown in Fig. 113, they possess difference of phase and overlap proper length.

II. Dynamic unit formed by multi-set gas chamber sets Cx, Cy in parallel.

As shown in Fig. 114, the present design possesses internal rotor engine structure with two sets of gas chamber set Cx 104 and Cy 105, wherein phases of gas chambers Cx 104 and Cy 105 are crisscross and are not overlapped to let it possess 180° working angle, and relatively possess housing of fixed body of gate plate seat gate plate set and exchange gas chamber set, and also match the distance between gas chamber sets Cx 104, Cy 105 to design exchange gas chamber CZ 1060, gate plate Gx 1040, Gy 1050, intake port 110', exhaust port 111'.

III. Dynamic unit constituted by multi-sectional gas chamber Cx and single-set gas chamber Cy.

As shown in Figs. 115 and 115-1, its main purpose is to let fuel gas of gas chamber set Cx 104 be stirred several times to be under the best mixing status before explosion, or further it uses the present design of multi-sectional gas chamber set Cx 104 as one of means of above twice help combustion embodiment.

IV. Dynamic unit constituted by multi-row gas chamber Cx and single-row gas chamber Cy.

As shown in Fig. 116, rotor of the present design possesses single-row gas chamber Cy 105 which opposes to multi-row chamber Cx 104 and directly exchanges fuel gas by single exchange gas chamber CZ 1060; or further structure for wxchanging fuel gas by multi- set exchange gas chamber CZ 1060 in which different row gas chamber Cx 104 is arranged in equal phase or unequal phase, and this design of parallel arrangement gas chamber set Cx 104 can press fresh air into gas chamber Cy 105 again for twice help combustion after ignition and combustion.

V. Dynamic unit constituted by multi-row gas chamber sets Cx, Cy in parallel arrangement.

As shown in Fig. 117, it is the matching structure of multi-row gas chamber sets Cx 104, Cy 105, at the corresponding position, each row of gas chamber sets Cx, Cy is in same phase, or as shown in Fig. 118, it is placed in different phase, wherein placement of same phase can let moment directly plus together, placement of different phase can let moment overlap in order to reduce pulsation.

VI. Dynamic unit constituted gas chamber sets Cx, Cy which possess structure of guide transverse groove.

Structure of gas chambers Cx 104, Cy 105 as shown in Fig. 119, wherein the near side of the lagging end of gas chamber Cx 104 and the leading end of gas chamber Cy 105, both of them design guide transverse grooves 104′, 105′ or at one of set, there is guide transverse groove, and in the multi-sectional intake compressive gas chamber Cx 104, it connects gas chamber Cx in series, at the same side of near end of each series connection section, there is guide transverse groove 104′, for coupling exchange gas chamber to transmit fuel gas. And further, at the leading end of Cy, there is a longitudinal guide groove Cy 105″, and in the instant of gate plate set which coupled with gas chamber Cy 105 slides into Cy 105, and before fresh fuel gas transmit into, it can reduce the difference of pressure formed by two sides of gate plate for an instance and cause damping, as shown in Fig. 119-1.

Series gas chamber set on the passive body of internal combustion engine as mentioned in Item A also can be crisscrossed in sequence and series by multi-set gas chambers Cx 104, Cy 105, and multi-set series gas chamber set connects in the same direction or in series with difference of phase, and further, multi-sectional gas chamber Cx 104 are single-set gas chamber Cy 105 are in series. Fig. 120 is a graphic view of embodiment of multi-set gas chambers Cx 104, Cy 105 are crisscrossed in sequence and series, it let driving moment be more close by the present design; Fig. 121 is a graphic view of embodiment of multi-row series gas chamber set, by this design, the added moment can be obtained in the drive of same direction, and when it possesses drive of phase difference, it can reduce pulsation of moment; Fig. 122 is a graphic view of embodiment of multi-sectional gas chamber Cx 104 and single-set gas chamber Cy 105 in series, each section of gas chamber respectively possesses intake port, due to this design, it can let fuel gas mix more averagely.

F. Gate plate set structure of internal combustion engine as mentioned in items A, B, C, D:

Structure and character of each item include:

I. Single sheet type structure

As shown in Figs. 123, 124, 125, 126, gate plate of above-mentioned Items A, B can single sheet type structure of gate plate, cross section of gate plate bottom end of entity along driving trace is smooth arc for slidding into smoothy and separating from the coupled gas chamber set.

II. Combination type gate plate set structure

As shown in Figs 127, 128, 129, gate plate set of above mentioned Items A,B can be combined by combining or overlapping multiple unit gate, each unit gate can be independently driven by spring 1251, or drive active gate by a active spring 125, and other gates is pressed statically, in order to keep the atatic pressure of each gate on the sliding surface of gas chamber.

III. Bottom end of gate plate possesses structure of inclined cracked angle

At bottom end of gate plate set which contacts gas chamber, there is inclined cracked angle for pressure intake gas gate 1040 and explosive exhaust gas gate 1050 to push and sweep fuel gas and the accumulated carbon. Inclined cracked angle of the present design is as shown in Fig. 130, if it is on gate plate set Gx 1040, near side of gas chamber Cy, there is inclined cracked angle 1040 forward to the direction of exchange gas chamber. CZ 1000, height of said cracked gngle is smaller than depth of gas chamber Cx 104, through this cracked angle 1040, gate plate Gx 1040 can completely press and transmit fuel gas; and gate plate Gy 1050 in gas chamber Cy 105, at leading end near side of exhaust port 111', there is inclined cracked angle 1051 forward to the direction of exhaust port 111', and when it scrapes waste gas away and it can completely exhaust waste gas, and the accumulated carbon will be collected by cracked angle of Gy 1050 and exhausted.

IV. Structure which possesses lubricant groove.

Each type of gate plate set as indicated in above items I, II,is shown in the graphic view of embodiment of Figs. 131 and 132, between its side and the coupling sliding face of gas chambers Cx 104, Cy 105, there is oil groove 130, its function is to produce pumping action when gate plate set slides up and down and let oil liquid in gate plate seat 107 be pumped to the contact face of gate plate set and gas chamber set along oil groove 130, and then diffuse to form lubrication effectiveness.

V. Structure of turbulence gate GM which is placed at the front and rear end of trace of gate plate set Gx or GC.

As shown in Figs. 133, 134, the present design relates to the front and rear turbulence gate GM 1042 of intake compressive gate plate Gx 1040 as shown in Fig. 135 and it is assembled at the leading end of gate plate Gx 1040, when it compresses, it simultaneously make surbulence, its working procedure is as shown in Figs. 135-1, 135-2; Fig. 136 is an embodiment in which there are turbulence gates which are assembled respectively at the leading end and the lagging end of gate plate set Gx, the character of this turbulence gate GM 1042 is that along the motion direction the cross section of contact end which contacts gas chamber Cx 104 has at least a hole 1043 or the shape of barrier 1044, for stirring fuel gas, design of common gate plate set GC 106 applied on Item A is also same as above-mentioned.

VI. Sectional structure of gate plate set.

Cross section of contact end of gate plates Gx 1040, Gy 1050 and gas chamber along motion trace can be square shape, arc shape or ladder type or labyrinthic shape, wave shape, or the middle part is larger arc shape, two side are smaller arc shape.

VII. Structure which possesses gas guide hole.

As shown in Figs. 46-4, 46-5, at side of gate plate Gx 1040 facing to compression, there is guide hole 1020, at side of gate plate Gy 1050 facing to explosion, there is gas guide hole 1030, both gas guide holes lead from the facing side in gate plate Gx 1040, Gy 1050 to couple with gas guide hole 1010 on active body, when gate plates Gx 1040, Gy 1050 make gradually rising or gradually lowering displacement to the set height of exchanging gas ace cording to the depth of gas chamber, gas guide holes of Gx 1040, Gy 1050 communicate with gas guide hole 1010 on machine body of active body between gas chambers Cx 104, Cy 105 in order to transmit fuel gas.

G. Ignition and conbustion device:

Concept:

This kind of internal combustion engine can be applied on the structure which is ignited and burned by plug or high pressure high temperature air or both of them, and further possesses twice help combustion which can transmit fresh air into again after ignition and combustion, and transmit same or different compound fuel into again to ignite and burn, and the character of each item is as follows:

I. It assembles plug or fuel nozzle.

The dynamics of the present design is produced by exploding the fuel gas of gas chamber Cy 105, the placement of plug 108 or fuel nozzle 109 is better near Cy 105, therefore, the inclined striding grooved exchange gas chamber CZ 1060 assembles ignition and combustion device at the position which exchange gas chamber CZ 1060 couples with trace of gas chamber Cy 105, as shown in Figs. 137 to 137-1; and exchange gas chamber CZ 1060 with guide groove uses its main chamber which couples with trace of Cy 105 as position of placement, as shown in Figs. 138 to 138-1; when CZ 1060 is positioned between traces of gas chambers Cx, Cy, the ignition and combustion device is placed at the position 105″ in the concave chamber which is at the leading end of gas chamber Cy which can avoid to be interferred by gate plate Gy in driving, or guide transverse groove, or the reservered concave of active body on the trace of Cy 105 which will not be interferred by Cy in driving, as shown in Figs. 139, 139-1,

II. Plug and fuel nozzle are used together.

Ignition and combustion device of the present design can simultaneously assembles plug 108 and fuel nozzle 109 according to the quality of fuel gas, The compression of fuel gas of the present design can determine the compressive ratio required by diesel oil, gasoline by means of gas chamber Cx 104, and instant volume of combustion chamber of CZ 1060 and Cy 105 before ignition, and high pressure waste gas of the previons working cycle which is originally saved by CZ 1060, and further determin the suitable fuel.

H. Shape of internal combustion engine as mentioned in Items A, B, C, D:

I. columned or cylindrical coupling type internal combustion engine .

1. As shown in Figs. 140, 140-1 and 140-2, internal combustion engine of the present design mainly includes fixed body structure and motion body structure, wherein motion body structure is combined by internal rotor, driving axle, joint ring, key, and cooling structure; at the column face of rotor, there are two parallel gas grooves which respectively are intake compressive gas chamber Cx 104, explosive exhaust gas chamber Cy 105, joint ring is fixed and locked by fixed body at one side of rotor, and linked the driving axle by key.
Structure of fixed body is constituted by housing,

CZ 1060 can be made in the overlap form or radial type cooling fin 177 and used as air cooling medium.
The character of above-mentioned internal combustion engine is that active body and passive body can be different diameter cylinders which can be sleeved co-axially, and its main structure includes:
Inner ring cylinder is passive body, at its coupling sliding surface corresponding to outer ring active body, there assembles:
Intake compressive gas chamber set Cx 104: it is arranged on the trace of different circumference;

Explosive exhaust gas chamber set Cy 105: it is arranged on the trace of same circumference. Outer ring cylinder is a fixed active body, at its coupling sliding surface corresponding to passive body, there assembles:

At least one set of exchange gas chamber set CZ 1060, and its largest number of set is as same as gas chamber set Cy 105: for guiding across Cx 104, Cy 105 to exchange fuel gas, accumulate pressure and reburn waste gas;

Intake compressive gate Gx 1040: it is placed at the lagging end of each exchange gas chamber CZ 1060 and it is on the trace of same circumference with gas chamber Cx 104;

Intake port 110′: it is placed at the lagging end of Gx 104 on active body, and on the circumferential trace of gas chamber Cx 104 or at the leading end of gas chamber set Cx 104 on passive body;

Explosive exhaust gas gate Gy 1050: it is placed at the leading of each exchange gas chamber CZ 1060, and positioned on the circumferential trace of Cy 105;

Exhaust port 111′: it is positioned at the leading end of Gy 1050 on active body, and on the circumferential trace of gas chamber Cy 105, or at the laging end of gas chamber set Cy 105 on passive body;

Plug 108 or fuel nozzle 109: it is placed in exchange gas chamber CZ or placed in the concave structure 105″ which is at the leading end of gas chamber set Cy 105 on passive body and can avoid to be interfered by gate plate set Gy 1050; and

Structure which possesses lubricant system and cooling system.

2. The relative coupling drive structure of fixed body and motion body in above internal combustion engine also can be shown in Figs. 141 and 141-1, 141-2, and structure of motion is constituted by outer rotor, driving element, and side cover, wherein at the coupled surface of inner ring of outer rotor and stator of active body, there are two sets of gas chamber set which respectively are intake compressive gas chamber Cx 104, explosive compressive gas chamber Cy 105, and one end links driving element by key, and then is set by side cover screw as dynamic output.

Fixed body coupled by inner ring of above outer rotor is active body structure, which includes cylindrical stator and on the coupling rotary trace of cylindrical stator corresponding to intake compressive gas chamber Cx 104, there assembles pressure intake gate plate seat 1074 and intake port 110′, said pressure intade gate plate seat is used for placing spring 125 and intake compressive gate Gx 1040, and intake port 110′ is positioned at the lagging side of pressure intake gate plate seat 1074; and at the coupling surface cylinder type stator and explosive exhaust gas chamber Cy 105, there assembles gate plate seat 1075, exhaust port 111′ and exchange gas chamber CZ 1060, said explosive gate plate seat 1075 is at the leading end of exchange gas chamber CZ 1060, for placing spring 125 and explosive exhaust gate Gy 1050, and exhaust port 111′ is at the leading side of explosive exhaust gate plate seat 1075; exchange gas chamber CZ 1060 can be an inclined striding type or turning type guide groove, and let gas chamber sets Cx 104, Cy 105 of motion body be communicated by exchange gas chamber CZ 1060 to transmit fuel gas and place plug 108 or fuel nozzle 109. The inner ring space of cylindrial fixed body of active body can be used to place fuel sppply system and waste gas exhaust pipe system and ignition device, the wall of inner ring also can be made as ringed overlap sheet or radial sheet 177 cooling system structure.

The above structure mainly includes:

Outer ring cylinder is passive body, at its coupling sliding surface corresponding to inner ring active body, there assembles:

Intake compressive gas chamber set Cx 104: it is arranged on the trace of same circumference;

Explosive exhaust gas chamber set Cy 105: it is arranged on the trace of different circumference.

Inner ring cylinder is a fixed active body, at its coupling sliding surface corresponding to passive body, there assembles:

At least one set of exchange gas chamber set CZ 1060, and its largest number of set is as same as gas chamber set Cy 105: for guiding across Cx 104, Cy 105 to exchange fuel gas, accumulate pressure and reburn waste gas;

Intake compressive gate Gx 1040: it is placed at the lagging end of each exchange gas chamber CZ 1060 and it is on the trace of same circumference with gas chamber Cx 104;

Exhaust port 111′: it is positioned at the leading end of Gy 1050 on active body, and on the circumferential trace of gas chamber Cy 105, or at the lagging end of gas chamber set Cy 105 on passive body;

Plug 108 or fuel nozzle: both of them are placed at the exchange gas chamber CZ 1060, or placed in the concave structure 105″ which is at the leading end of gas chamber set Cy 105, and can avoid to be interferred by gate plate set Cy 1050: and

81

Structure which possesses lubricant and cooling system.


II. Disc end face coupling type internal combustion engine.

As shown in Fig. 33, it is an embodiment applied on the inner rotor, in figur, passive body is a motive inner rotor, active body is a fixed housing, at disc end face of one end of inner rotor, there assembles at least a pair of gas chamber set Cx 104, Cy 105 with different radius trace, said inner rotor links the driving axle by key, at housing of fixed body and side end face of the corresponding gas chamber set Cx 104, Cy 105, there assembles gate plate seat set 1074, 1075 and exchange gas chamber CZ 1060 in order to match gas chamber set Cx 104, Cy 105, and further the phase-overlapped gas chambers Cx, Cy couple with housing which possesses arc guide groove.

The arrangeds sequence of structures of gate plate seats 1074, 1075 and exchange gas chamber CZ 1060, intake port 110´, exhaust port 111´ which are placed on fixed body are also as mentioned on above Item I, exchange gas chamber CZ 1060 and explosive exhaust gate plate seat 1075, exhaust port 111´ are placed on the trace of relative explosive exhaust gas chamber Cy 105 to let wxplosive exhaust gate Gy 1050 can properly constringe into gas chamber Cy 105; exchange gas chamber extends a guide groove to the coupling face of gas chamber Cx 104, intake gate plate seat 1074 and intake port 110´ are placed on the trace of intake compressive gas chamber set Cx 104; gas chamber set Cx 104, Cy 105 of the present design can let gas chamber Cx 104 be inner ring or Cy 105 be inner ring according to the requirement, the arc of each gas chamber Cx 104, Cy 105 also can be same length or different length, and can be single-section single-set or multi-section multi-set.

The character of above-mentioned this kind of structure is that at least one disc type active body and at least a disc type passive body are co-axially overlapped to form at least one or more relative driving working surface;

Sliding surface structure of passive body includes:

At least one set of intake compressive gas chamber set Cx 104: it uses axle as central ring, and it is placed on the coupling surface of passive body;

At least one set of explosive exhaust gas chamber set Cy 105: it corresponds to the set number, position of Cx 104, and is matched and placed at the trace of different radius.

The structure of sliding surface of active body corresponding to passive body includes:

At least one set of exchange gas chamber set CZ 1060: it corresponds to the set number of Cx 104, Cy 105,and assemble at least one set, and the largest set numbers are as same as set number of gas chamber set Cy 105, for guiding across Cx 104, Cy 105;

Intake compressive gate Gx 1040: it is placed at the lagging end of each exchange gas chamber CZ 1060, and positioned on the motion trace of gas chamber Cx 104 on the relative passive body and it is pushed and pressed by spring 125, to keep contacting and coupling with gas chamber Cx on passive body;

Intake port: it is placed at the lagging end of Gx on active body, and positioned on the motion trace of gas chamber Cx 104 on passive body, or placed at the leading end of gas chamber set Cx 104 on passive body;

Explosive exhaust gas gate Gy 1050: it is placed at the leading end of each exchange gas chamber CZ 1060, and positioned on the motion trace of gas chamber Cy 105 of passive body;

Exhaust port 111´: it is placed at the leading end of Gy on active body; and positioned on the motion trace of gas chamber Cy 105 on passive body, or placed at the lagging end of gas chamber set Cy 105 on passive body;

Plug 108 or fuel nozzle 109: both of them are placed at the exchange gas chamber CZ 1060, or placed in the concave structure 105″ which is at the leading end of gas chamber set Cy 105, and can avoid to be interferred by gate plate set Gy 1050;

Lubricant system: it is pumped by dynamic power of motor, or pumped by gate plate Gx 1040, Gy 1050 to lubricate sliding surface; and

Air-cooling or liquid-cooling and an integral cooling structure which is pumped in the rotary part.


III. Column surface and disc end mixed type internal combustion engine .

Structure of each part of the present design combines above items I, II as an intergral, as shown in Fig. 142, its operational method also can be internal rotor type or external rotor type, this design can let dynamic power of ring column surface and disc end surface are transmitted out synchronously or non-

82

synchronously.

This type of internal combustion engine, the coupling structure of its active body and passive body can possess cylindrical type and disc type structure simultaneously;

Sliding surface of passive body corresponding to active body simultaneously possesses coupling sliding surface of ring type end surface and ring tupe column surface, on it, there are:

At least one set of intake compressive gas chamber set Cx 104;

At least one set of explosive exhaust gas chamber set Cy 105.

Sliding surface of active body corresponding to passive body simultaneously possesses coupling sliding surface of ring type end surface and ring type column surface, on it, there are:

at least one set of exchange gas chamber set CZ 1060 and its largest number of set is as same as gas chamber set Cy 105: its position of placement, number of set are corresponding to Cx 104, Cy 105, for guiding across the guide groove of Cx 104, Cy 105;

intake compressive gate Gx 1040: it is placed at the lagging end of exchange gas chamber CZ 1060, and on the motion trace of gas chamber set Cx 104 on ring shaped end surface and ring shaped column surface of the relative passive body;

intake port 110′: it is placed at the lagging end of active body Gx 1040, and on the motion trace of gas chamber Cx on passive body, or at the leading end of gas chamber set Cx 104 of passive body;

explosive exhaust gate Gy 1050: it is placed at the leading end of each gas chamber CZ 1060, and on the motion trace of gas chamber set Cy 105 on ring shaped end surface and ring shaped column surface of the relative passive body;

exhaust port 111′: it is placed at the leading end of active body Gy 1050, and on the motion trace of gas chamber Cy on passive body, or at the lagging end of gas chamber set Cy 105 of passive body;

plug 108 or fuel nozzle 109: both of them are placed at the exchange gas chamber CZ 1060, or placed in the concave structure 105″ which is at the leading end of gas chamber set Cy 105, and can avoid to be interferred by gate plate set Gy 1050;

lubricant system: it is pumped by dynamic power of motor, or pumped by gate plate Gx 1040, Gy 1050 to lubricate sliding surface; and

air-cooling or liquid-cooling and an integral cooling structure which is pumped in the rotary part.

IV. Conic surface coupling type internal combustion engine.

This design is applied on the operation of internal, external rotor, Fig. 143 is a internal rotor type embodiment, wherein, internal rotor possesses conic ringed column surface with proper length to couple the conic seat at housing of stator, at the conic ringed column surface, there is gas chamber set Cx 104, Cy 105 to match gate plates 1074, 1075 of conic seat, exchange gas chamber CZ 1060, intake port 110′, exhaust port 111′, one end of fixed body housing can be set on the engine body, another end can set internal rotor by a protective cover, the cooling liquid or gas can enter into the hollow part of internal rotor, and then flow out to form a circulating return passage.

Coupling surface of this design is only changed from parallel ringed column surface of above Item I into conic ringed surface, therefore, each equipment of this design i. e. gas chamber set Cx 104, Cy 105. exchange gas chamber CZ 1060 are as same as mentioned in Item I.

The coupling structure of motion body and fixed body of this type internal combustion engine also can be conic seat which places gas chamber set Cx 104, Cy 105, and at the relative conic column surface, there places exchange gas chamber set CZ 1060, and gate plate Gx 1040, Gy 1050, intake port 110′. exhaust port 111′ and plug 108 or fuel nozzle 109, and lubricant cooling system.

V. Linear driving internal combustion engine.

Fig. 144 is the structure of the present internal combustion engine which is applied on the linear drive, this strictire assembles passive body with gas chamber, and at the relative coupling surface which possesses gate plate seat gate plate set and exchange gas chamber set, there has at least one more row of gas chamber set Cx 104, and at least one row of gas chamber set Cy 105, said gas chamber set Cx 104 or Cy 105 is linear arrangement, two sets of gas chamber set are parallel each other; active body is a fixed seat or rail for passive body of motion body slides on it, on the trace of sliding coupling surface of active body corresponding to gas chamber set Cx 104, Cy 105, there are at least one set or more of intake gate plate 1040, and exhaust gate plate 1050, and exchange gas chamber CZ 1060, and intake port 110′,

exhaust port 111'.

The time of igniting, jetting oil, and intaking exhausting fuel gas of exchange gas chamber CZ 1060 of the present design depends on the length of motion body, number of set of gas chamber Cx 104, Cy 105, and relation of relative phase, if it is single-set gas chamber set Cx 104, Cy 105, ignition time is ignited and burned one by one according to the transfer of motion body; if it is multi-set gas chamber set Cx 104, Cy 105 which distributed in different phase, it can be ignited and burned time after time in order to reduce pulsation.

Above design can be designed to let active body be motion body, passive body be fixed body, as shown in Fig. 145, the motion length of this design is at least the length of two sets of relative gas chamber set Cx 104, Cy 105 or up, and possesses at least two sets or more gate plate Gx 1040 and Gy 1050, exchange gas chamber CZ 1060, intake port 110', exhaust port 111', and a set of fuel gas supply device, above gate plate set Gy 1050, and exchange gas chamber CZ 1060 can be only placed at the second set and each lagging set, the front leading set may not place explosive exhaust gate Gy 1050 and exchange gas chamber CZ 1060.

Summing up, this kind of engine possesses linear driving passive body;

wherein passive body is motion body, at its corresponding sliding surface coupled on the fixed body, there are:

at least one set of intake compressive gas chamber Cx 104;

at least one set of explosive exhaust gas chamber Cy 105.

Active body is fixed body, at the sliding surface corresponding to motion body, there places:

at least one set of exchange gas chamber set CZ 1060 and its largest number of set is as same as gas chamber set Cy 105: it is arranged to match gas chambers Cx 104, Cy 105 corresponding to active body, and it can guide across between Cx 104, Cy 105, or it is placed in the concave structure 105″ which is at the leading end of gas chamber set Cy 105,

intake compressive gate Gx 1040: it is placed at the lagging end of exchange gas chamber CZ 1060, and on the plane trace of relative gas chamber Cx 104;

intake port 110': it is placed at the lagging end of Gx 1040 on active body, and together with Gx 1040 on the same linear plase, or it is placed at the leading end of gas chamber set Cx 104 on passive body;

explosive exhaust gate Gy 1050: it is placed at the leading end of exchange gas chamber CZ 1060 and on the plane trace of relative gas chamber Cy 105;

exhaust port 111': it is placed at the lagging end of Gy 1050 on active body, and arranged on the same linear trace with Gy 1050, or it is placed at the lagging end of gas chamber set Cy 105 on passive body;

plug 108 or fuel nozzle 109: both of them are placed at the exchange gas chamber CZ 1060;

lubricant system: it is pumped by dynamic power of motor or gate plates Gx, Gy; and

air cooling or liquid cooling structure.


I. Lubricant structure of internal eombustion engine as mentioned in Items A, B, C, D:

includes:


(I). Structure in which oil is pumped into coupling surface of Cx 104, Cy 105 by independent pump.

The main coupling sliding surface of the present design are the coupling surface of fixed body and motion body, and coupling surface of gate plate and gas chamber set, and each coupling surface can discontinuously or continuously pump oil into by independent pump through traditional oil passate in order to lubricate.


(II). Gate plate motion osmotic lubricant structure

The upper part of gate plate seat of the present design can store lubricant, to let passive body move to caust gate plate moving up and down to pump oil and force oil to pass through oil groove 130 at side of gate plate and infiltrate downward.

Above gate plate pumping type lubricant system further can diffuse lubricant to the frictional surface of circumference by multi-layer gate plate, and oil guide groove 130 between the overlapped surfaces of gate plate.

J. Cooling structure of internal combustion engine as mentioned in Items A, B, C, D:

includes:

I. Circulative cooling structure which possesses turbine vane.

Its structural character is that cooling liquid pump is integral with engine, as shown in Fig. 146, in figure, driving axle 114 is hollow tubular axle, and penetrates through center of internal rotor 173 to be fixed and locked, the interior part of hollow tubular body is partitioned by internal partition plug 165 to form two internal chambers, on it, there is radial hole 166, at the hollow tubular axle, there penetrates a turbine bane 167 to be fixed and locked, two ringed chambers 168, 169 are formed in the inner space of rotor of engine by turbine vane 167 and internal partition plug 165, when engine is driven, turbine bane will produce one-way absorbing foree, and absorb cooling liquid into from input end 212 of hollow tubular axle, through radial hole 166 at input end 212 of hollow tubular axle into ringed chamber 168, and then go through turbine vane 167 into ringed chamber 169 at another side, and flow through radial hole 166 at output end to transmit out the cooling liquid from output end 213 of hollow tubular axle and form a kind of integral type pump, or further let cooling liquid flow into cooling radiator, and recirculate to input end of hollow tubular axle, to form a circular cooling system.

II. Open type cooling structure which possesses radial vane.

Its structural character is as shown in Fig. 147, wherein driving axle 114 is hollow tubular axle, and penetrates through center of internal rotor 173 to be fixed and locked, the interior part of hollow tubular body is partitioned by internal partition plug 165 to form two internal chambers, on it, there is radial hole 166, at the hollow tubular axle, there penetrates an radial vane 167 to be fixed and locked, two ringed chambers 168, 169 are formed in the inner space of engine by radial vane 167 and internal partition plug 165, when engine is driven, it has air pump effect, in order to absorb the external air, and flow through input end 212 of hollow tubular axle, and enter into gas chamber 168 through radial hole 166 on input end, and then enter into gas chamber 169 through radial vane 167, and penetrate through radial hole 166 of output end of hollow tubular axle, and transmit out to the outside from output end 213 of hollow tubular axle.

The air cooling structure of this design, when driving axle of engine is solid axle rod, as shown in Fig. 148, its intake port can be placed on the fixed side cover 170 and designed as turbine vane 172 or radial vane 172' by the inner ring of joint ring, and link with internal rotor 173, internal rotor 173 assembles high density gas guide chamber 174 in ring at the position coupling with radial vane 172', said gas guide chamber 174 can be enlarged toward one side, or possess turning curved, arc shape guide passage, between ring surface 175 of this structure at front side of housing of stator and internal rotor 173, there has proper gap, at the ring passage of stator housing corresponding to said gap, there is high density guide hole 176 which is used as hole for diffusing and transmitting air out.

III. Free air cooling structure equipped with radial cooling fin.

This structure radiates heat through radial vane, as shown in Fig. 149, it can cast radial vane 177 on the non-coupling surface of fixed body, in order to enlarge the radiating area.

K. Single work or double work dynamic output structure of internal combustion engine in Items A, B, C, D:

In the engine as mentioned in Items A, B, C, D, the matching number between common gate plate and gas chamber Cx, Cy is as above-mentioned each embodiment, that is to assemble a set of common gate plate set at interval of each working cycle or at longer interval, it places common gate plate set, in order to lower down the density of output working efficiency and let it be under single work drive type, when it is in single work drive, gas chamber set Cx 104 and gas chamber set Cy 105 can be matched in the same length type or unequal length type, or at interval of each ½ working cycle, there placed common gate plate set Figs. 150, 150-1, 150-2 are common gate plate of Item A, graphic view of embodiment of gas chamber motion internal rotor type engine, graphic view of embodiment in which at interval of each ½ working cycle,

there placed a set of common gate plate set, the merit of this design is to have higher working efficiency. Its working procedure is as shown in Figs 150-3 to 150-14, in the embodiment of Item B, wherein, there are at least two sets of Cx, Cy, and when the occupied working angle of each set is lower than 180° stroke,the number of set of exchange gas chamber CZ and gate plate set Cx, Cy is from one set to once or twice of number of set of intake compressive gas chamber and explosive exhaust gas chamber; when working angle is higher than 180° stroke, the number of set of exchange gas chamber CZ is at least one set and up to the same number of set of intake compressive gas chamber Cx and explosive exhaust gas chamber Cy.

L. Intake and exhaust coupling interface device of internal combustion engine as mentioned in Items A, B, C, D:

Above-mentioned each structure of Items A, B, C, D, the intake and exhaust system assembled on fixed bydy is similar to the traditional type, therefore, it is not described here, and the above-mentioned each structure which places intake port, exhaust port on motion body, and its transmission pipe includes the following method:

I. Ring type coupling interface device .

The middle part of hollow rotary axle 114 of this device has partition structure, on the fixed body, there are fuel transmission pipe which couples with intake port 212 at one end of above rotary axle and waste gas transmission pipe which couples with exhaust port 213 at another end, method of coupling with hollow rotary axle is that covers 240, 241 at fixed end of rotary axle which possesses guide hole, coupled with hollow rotary axle, as shown in Figs. 151 and 151-1, if two ends of hollow rotary axle are sealed by the sealing plugs 231, 232, and at rotary axle, there are fuel intake guide hole 115 and exhaust guide hole 117, and seal ring type structure 235 for intake of fuel gas and seal ring type structure 236 for exhaust of fuel gas which cover in ring on the intake guide hole and lead to fuel gas supply system are used for transmission, Figs. 151-2 and 151-3 are the graphic views of the embodiments.

II. Ring type coupling synchronous distributive interface device.

As shown in Figs. 151-4 and 151-5, ring type coupling interface device assembles help combustion intake port and ring type fuel gas intake sealing ring type structure 235′ for help combustion which leads to fresh air supply system, and on the hollow axle, there also has help combustion intake axle hole 115′ to couple with hollow axle, fuel gas intake axle hole is synchronous with fuel gas intake working angle on engine main body, and help combustion intake axle hole is synchronous with help combustion intake working angle of engine as its features.

III. Side coupling interface device

The method that transverse guide hole is placed to lead to side wall, in which fuel gas intake transverse hole 116 and exhaust transverse hole 118 can be placed in the position of different side or different driving trace, and through the coupling of fixed structure which can communicate with transverse holes 116 and 118 in rotation, and closely contact side wall of transverse holes 116 and 118 and possess arc shape or ring shape fuel gas intake guide groove 240 and exhaust guide groove 241, in order to have function of transmission, Figs. 152 and 152-1 are graphic view of the embodiment.

IV. Side coupling synchronous distributive interface device

As shown in Figs. 152-2 and 152-3, the above method of placing transverse guide hole to communicate with side wall, wherein, help combustion intake transverse hole 116′ is placed to lead to the help combustion arc shape or ring shape guide groove 240′ of fresh air supply system, its fuel gas intake guide groove is synchronous with intake working angle of engine main body, and help combustion guide groove is synchronous with help combustion working angle of engine main body as its features.

V. Electromagnetic valve or mechanical valve synchronous distributive interface device

Above-mentioned fuel and help combustion air common intake port structure, another method of its synchronous distribution is to use conventional electromagnetic valve, wherein the outlets of another set of electromagnetic valve are parallel connection and lead to fuel gas supply system, inlet of a set of electromagnetic valve leads to help combustion air supply system, and the driving coil is driven loy the switch device which is synchronous with fuel gas intake and help combustion working angle of engine; or by the mechanical valve which is synchronous with the rotation of engine as shown is Fig. 152-4, or the mechanical valve driven by the eccentric machine which is synchronous with engine as shown in Fig. 152-5, and its outlet communicates with common intake port, and two inlets respectively communicate with fuel gas supply system and help combustion air supply system in order to be synchronous with fuel gas intake and help combustion intake working angle of engine.

The design of engine as mention in Items A, B, C, D, if it is the design of linear type internal combustion engine, the coupling of motion body and fixed body is to make use of weight of motion body in order to keep the close contact between both of them and the sliding and guidance, further it can limit the motion trace of motion body by the externally added guidance and the limitation of guide rail, the method of limitation is that the wheel or sliding rail which is fixed and locked in the fixed body and parallel with the driving rail of motion body is coupled by motion body and is used for motion body to make linear drive in accordance with the limitation, Figs. 153 and 153-1 are the embodiment, and further it can additionally place pre-pressed spring on the limiting wheel or guide rail in the vertical direction of motion body and fixed body in order to keep the close contact of the coupling surface of motion body and fixed body, the bended section of fixed guide rail is made with active body to form a gap between them to the finear section avoiding to be wedged and locked by actibe body and then return to the normal closely adjacent status, and the gap section also can further be filled and pluged by reflexible things, its embodiment as shown in Fig. 153-2. If its gas chamber set is placed at the upper part of fixed guide rail, at the upper part of guide rail of bended section, it is smooth sliding surface, and the one which does not place gas chamber is shown in Fig. 153-3.

M. Reciprocating type internal combustion engine unit which possesses exchange gas chamber and separate gas chamber:

Basic structural of this design includes:

Cylinder bolock: this is a block having an internal space of the shape of parallel cylinder for the reciprocating movement of at least a set of piston. The internal space on two ends in the cylinder block forms gas chambers with the side of piston. At least a set of gas chamber in the structure of the cylinder block serve as combustion gas chamber, at least a set of gas chamber serve as compressive gas chamber for absorbing and compressing air or combustible gas, at least one path for transmitting compressed gases communicates between the compression gas chamber and the combustion gas chamber, at least a set of exhaust port or slot is provided on the cylinder block or the piston and communicate with the combustion gas chamber for relieving waste gas;

Piston: this is a reciprocating piston block coupled with the cylinder block and is comprised of a set of two-sided piston or is constructed with a fundamental set having an upper set and a lower set of piston, the main body of the piston is provided with sealing ring transmission linking rod and can further be provided with intake exhaust guide hole, intake exhaust valve set and gas path;

Ignition system: it is used to ignite compressed bombustion gas or injection system so that the combustion oil can be duly injected into combustion gas chamber and mixed with high pressure air and burned;

Cooling, lubricating system, intake exhaust interface device, and the mechanism for transmitting the movement of the piston.

This kind of internal combustion engine unit includes:

a. structural type, and b. fuel gas transmission structure, it is described as follows according to the design of each item:

a. Structural type

I. Single-work driving structure

1. Figs. 154, 154-1 are structures of single-set double-sided piston drive without pressure-saved gas chamber, in figures, 301 is double-sided pistion, 302 is cylinder block, 108 is plug, 304 is exhaust port, 305 is intake port, 306 is intake valve, 307 is output axle, 308 is sealing ring, 309 is bearing 310 is gas guide path , 311 is check valve, 312 is pressure-saved gas chamber, 313 is gas guide path ouplet, 314 is intake guide hole, 321 is exhaust guide hole.

Engine structure includes: the combination of a set of double-sided piston 301 and a cylinder block 302, the inner wall of one end of the cylinder block 302 forming a combustion gas chamber with the combustion side of the pistion 301, plugs 108 for ignition, at least one set of exhaust ports 304 and at least one set of intake ports 305 being provided on the cylinderblock 302, the other end of the piston 301 having an output axle 307 communicating with the other end of the cylinder block 302 and forming an pressure intake gas chamber with the inner wall of the cylinder block, a sealing ring 308 and a slide bearing 309 are provided at the communicating and linking position so that the piston 301 can make reciprocating movement therein, at least one gas guide path 310 communicating the combustion gas chamber and compressive chamber, and a check valve 311 is provided to be clockwise connected in series with intake end of gas guide path 310, at least one set of pressure-saved gas chamber 312 is provided between the check valve 311 and the gas guide path outlet 313, the combustion side of the piston 301 has a flange which is contiguous to the wall of cylinder, and which is provided with at least one set of intake guide hole 314 for overlapping with the aforementioned gas guide path outlet 313 around top dead center so that the high pressure combustion gas in the pressure-saved gas chamber 312 can be guided and enter into the combustion gas chamber, the intake guide hole 314 is not overlapped with the gas guide path outlet 313 and the aforementioned path is blocked when the engine is not at the intake stroke, the bottom ded center of the piston 301 is lower than the exhaust port 304 or at the circumference of the piston, at least a set of guide gas guide holes 321 are provided around the bottom dead center and are communicated with exhaust port, Figs. 154-2 to 154-6 show the working process diagram of the engine. The driving cycle there of is shown in Table 16.

The working cycle is characterized in that the waste gas in the combustion gas chamber is re-compressed simultaneously with the intake stroke and that the fuel gas in the intake compressive gas chamber is pre-pressed into the pressure-saved gas chamber simultaneously with the explosive stroke. Furthermore, high pressure fuel gas is transmitted into the combustion chamber before ignition. The separation of the pressure-saved gas chamber and the combustion gas chamber is defined before ignition, or at the instant of ignition, or after ignition and before exhaust by means of the positioning of the guide hole or the setting of the ignition time.

2. Figs. 155, 155-1 shownthe engine as shown in Figs. 154, 154-1 which has further been provided with second set of pistons 315 for serving as auxiliary fluid pump and providing relatively stable output, in figure 155, designating 315 is the second piston, 316 is set screw of the second piston, 317 is crank pin, and 318 is crank.

The structure of above mentioned engine includes a combination of a set of double-sided upper piston 301, lower piston 314 and cylinder block 302, the liner wall of on end of the cylinder block constucting a combustion gas chamber with the combustion side of the upper piston; a plug 108 for ignition, at least one set of exhaust port 304 and at least one set of intake port 305 and intake valve 306 being provided on the cylinder block 302, the other side of the upper piston 301 constructing an intake compressive gas chamber with the inner wall of the cylinder block, an output axle 307 being provided to communicate with the other end of the cylinder blodk and be linked with lower piston 315, a sealing ring 308 being provided at the communicating and linking position, lower pistion 315 forming a third gas chamber with the inner wall of the cylinder block 302, the structure of the wall of the cylinder of the third gas chamber comprises of an intake valve 306 and an output valve for serving as fluid pump or open type structure for stable reciprpcating movement of upper and lower piston sets. The working of this engine structure is as same as that of the engine structure shown in Figs. 154, 154-1.

The main advantage of the embodiments shown in Figs. 154, 154-1, 155, 155-1 is that they provide the function of separated gas chamber so that the pollution and the waste of fuel caused by the two-stroke engine at the instant of simultaneous intake and exhaust can be prevented.

3. The embodiment shown in Figs. 156, 156-1 is a further evolution of the embodiments shown in Figs. 154, 154-1 and 155, 155-1, and it is a structure of double-piston drive without pressure-saved gas chamber, the gas chamber formed by the lower piston in Figs.155 155-1 and the cylinder block is used as intake compressive gas chamber so that another kind of cycle of working can be formed. In Fig. 156 designating numeral 319 is a relief valve.

This kind of engine structure is comprised of: a combination of a set of upper piston 301, lower piston 315 and cylinder block 302, the inner wall of one end of the cylinder block 302 forming a combustion chamber with the combustion side of the upper piston 301, at least one set of plug 108 for ignition, at least one set of exhaust port 304, at least one set of intake port 305 and intake check valve 306 being provided on the cylinder block, the other end of the upper piston 301 having an output axle 307 communicating with a partitioning wall on the other end of the cylinder block to the inner wall of the other end and combining with lower piston 315 to form an intake compressive gas chamber, sealing ring 308 being provided at the communicating and linking position so that the piston can make reciprocating movement therein.

The combustion side of the above-mentioned piston 301 has a flange which is contiguous to the wall of the wall of the cylinder block and which is provided with at least one set of intake guide hole 314 for overlapping with the above-mentioned gas guide path outlet 313 around the top dead center in order to guide high pressure fuel gas in the pressure intake gas chamber into the combustion chamber, the above-mentioned path is blocked when the engine is not at the intake stroke. The bottom dead center of the piston 301 is lower than the exhaust port 304 or at the circumference of the piston, at least a set of gas guide grooves or holes 320 are provided around the bottom dead center and are communicated with exhaust port, and at least one gas guide path 310 is communicated with the combustion chamber and compressive chamber, Figs. 156-2 to 156-6 show the working process diagrams of the engine. The driving cycle there of is shown in Table 17.

The working cycle is characterized in that the explosive exhaust stroke works simultaneously with the intake stroke, and the compressive stroke of the compressive gas chamber works simultaneously with the re-compression of the waste gas of the combustion gas chamber, and that the ignition is taken place when the piston passes through top dead center, after the guide hole on the flange has completed the guiding of gas and after the guide hole on the cylinder block has been separated.

4. The embodiment shown in Figs. 157, 157-1 is an evolution double piston driving structure with pressure-saved gas chamber of that shown in Figs. 156, 156-1 and is provided with a check valve which is clockwise connected in series with the intake end of the gas guide path, and at least a set of pressure-saved gas chamber between above check valve and the outlet of the gas guide path.

The working cycle of the embodiment is characterized in that the explosive exhaust stroke works simultaneously with the intake stroke, and the compressive stroke of the compressive gas chamber works simultaneously with the re-compression of the waste gas of the combustion gas chamber, and that the ignition is taken place when the piston passes top dead center and at the instant when the guide hole on the flange has completed the guiding of gas, or after the gas hole on the piston has been separated from that of the cylinder bloke. That is to say, the ignition can be taken place at the instant when the guide hole has completed the guiding of gas because of the providing of the check valve, and therefore, the working angle can be made wider than that of the embodiment shown in Figs. 156, 156-1. The working process is shown in Figs 157-2 to 157-9, the working cycle is shown in Table 18.

5. In the above-mentioned embodiments, the release of waste gas is taken place immediately after the completion of the combustion driving stroke of the engine. However, Figs. 158, 158-1 are the structure of the second exhaust port and possesses design in which the release of waste gas is taken place again when the piston reach the highest point in the return travel and before the intake stroke, in figure, 321 is the second exhaust port.

The above engine structure includes: at least one set of the second exhaust port 321 around the top dead center and it is characterized in that the combustion side of the piston 301 has a flange which is contiguous to the wall of the cylinder block and which is provided with at least a set of intake guide hole and at least a set of exhaust guide hole 321, the cylinder block has at least a gas guide path communicating with the combustion gas chamber and compressive gas chamber, a check valve is provided to be clockwise connected in series with the intake end of the gas guide path, at least a set of pressure-saved gas chamber is provided between the check valve and the outlet of the gas path, another check valve also provided clockwise at the outlet of gas path, at least a set of guide hole is communicated with the exhaust port around the bottom dead center, and at least a set of guide hole is communicated with the exhaust port around the top dead center, The working process there of is shown in Figs. 158-2 to 158-6. The working cycle there of is shown in Table 19, Fig 158-7 is an working angle distribution diagram of the embodiment shown in Figs. 158, 158-1 . Fig. 158-8 is pressure cure diagam of Figs. 158, 158-1.

The working of above engine is characterized in that the high pressure gas compressed by the pressure intake gas chamber passes through the check valve of the intake end of the gas path to the pressure-saved gas chamber, that the communication of the check valve provided at the outlet of the gas path is blocked by the pressure formed by the combustion gas chamber when the piston has been raised to the position such that the guide hole of the piston side is overlapped with the outlet of the gas guide path of the inner wall of the cylinder block, and that the check valve of the outlet of the gas guide path is opened and the compressed gas is guided in and ignited when the piston passes the above-mentioned overlapping position after the piston has been passed through the second exhaust position and the pressure has been relieved.

6. In the above-mentioned engine of each item, the pressure-saved gas chambers thereof are provided around the cylinder block. However, in the embodiment shown in Figs. 159, 159-1, a transmission valve is utilized to replace the intake guide hole of piston shown in the single-set double-side design shown in Figs. 154, 154-1, 155 155-1 in Figures, 322 is transmission valve, 323 is return spring, 324 is retaining ring, and 325 is washer.

The structural design of this kind of engine is characterized in that at least a set of transmission valve 322 is used to replace the intake guide hole on the flange of the piston, its structure includes at least a set of gas guide path 310 is provided to communicate between the compressive gas chamber and the combustion gas chamber, and a check valve 311 is provided to be clockwise connected in series with the intake end of the gas path, at least a set of transmission valve 322 is provided between the pressure-saved gas chamber and the combustion gas chamber, and at least a set of pressure-saved gas chamber 312 is placed between above check valve and transmission valve, and that at least a set of plug 108 is provided in the same pressure gas chamber or the combustion gas chamber. The working process thereof is shown in Figs. 159-2 to 159-13, Fig. 159-13 is its working angle distribution diagram its workingcycle is shown in Table 20, Fig. 159-15 is its pressure curve diagram.

Its working characteristic is that: the compressive gas in the intake compressive gas chamber through check valve enters into pressure-saved gas chamber and due to the isolation of transmission valve and combustion and transmission valve is opened before piston returns to top dead center, high pressure gas in the pressure-saved gas chamber enters into combustion chamber and then ignite to let pressure-saved gas chamber form as an auxiliary combustion chamber; and transmission valve is closed before exhaust in order to let pressure-saved gas chamber under high pressure status for one stroke and mix with high pressure gas to raise up compressive ratio.

7. Figs. 160, 160-1 is the embodiment of the present invention which uses transmission valve to substitute for piston gas intake guide hole of double-set piston as shown in Figs. 156, 156-1, 157, 157-1, and its transmission structure is as same as the structure shown in Figs. 159, 159-1, and its working procedure is shown in Figs. 160-2 to 160-10, its working cycle is shown in Table 21, Fig. 160-11 is the distribution diagram of working angle of the embodiment of Fig. 160, Fig. 160-1 is the pressure curve chart of the embodiment of Figs. 160, 160-1.

Referring to Fig. 159 upon ignition long rod under 322 pushed aside by piston top, spring 323 pressed, burned air through ring holes pushing piston. Key point is selection of spring force must at the highest speed of engine running to let 320 and 304 through at reaching piston to permit perfect closed before exhaust, 322 making room 312 storing high pressure fuel after burned before exhaust to supply next cycle fresh fuel mixture as waste air recycled and raising compression ration.

## II. Ignition and combustion of compound fuel

In the design of the above-mentioned engine of pressure-saved gas chamber, the position of assembling plug 108 depends on the selection of space to place in the combustion chamber or pressure-saved chamber or both of them to become double plug, if engine is the diesel engine egnited by high temperature and high pressure air, the above-mentioned plug 108 is substituted by fuel nozzle 109; and if it is driven by compound fuel, and possesses both of plug 108 and fuel nozzle 109 and designes double set fuel supplying system and relevant interface for selecting fuel. In the design of compound fuel drive, besides selective fuel, furthermore, there is a compound fuel engine which can work simultaneously through the arrangement of fuel supply and the sequence of ignition, Figs. 161, 161-1 are the graphic views of compound fuel driving structure which possesses plug and fuel nozzle.

Its characteristic is: to assemble plug 108 in the pressure-saved gas chamber and place fuel nozzle 109 in the combustion chamber. In the explosion stroke, after combustion gas is ignited by plug 108, and then fuel is injected again through fuel nozzle and complete the second ignition and explosion by high temperature and high pressure combustion gas in the cylinder.

## III. Double work driving structure

The above-mentioned structure of each engine is single cylinder, and design of each item can further be the coupled type stracture.

The characteristic of its structure is that: the cylinder block and output axle in the same body can make receiprocating movement, and the mechanical structure is multual-reverse working cycle, Figs. 162, 162-1 is the coupled embodiment of mutual reverse coupled structure with two sets of single-set double-sided piston drive without pressure-saved gas chamber in Figs. 154, 154-1, its working principle is similar to Figs.

154, 154-1; Figs. 163, 163-1 are the coupled embodiments of Figs. 156, 156-1 which possess mutual-rever coupled tructure with two sets of double piston drive without pressure-saved gas chamber, Fig. 163-2 is coupled embodiment of Figs 156, 156-1, its characteristic is that the that transmissionstructure of compressive gas has designed gas guide path in the piston, Figs 164, 164-1 are the coupled embodiments of Figs. 157, 157-1 it is mutual reverse coupled structure with two sets of double piston drive without pressure-saved gas chamber, and Figs. 165, 165-1 are the coupled embodiments of Figs.159, 159-1, its working principle is similar to the single set, therefore, its is not described again.

## IV. Twice help combustion

1. In the design of structual type engine as mentioned in Figs. 155, 155-1, gas chamber formed by lower piston and cylinder block can be used as pressure intake gas chamber for help combustion, as shown in Figs. 166, 166-1, it possesses single-set double piston drive without pressure-saved gas chamble added stable lower piston to form twice help pressure intake gas chamber structure.

Its structural characteristic is that at least a set of intake valve 335 is assembled in the pressure intake gas chamber for helping combustion, intake port 336 communicated with pressure intake gas chamber, and at least a set of check valve 340 and gas guide path 342 lead to help combustion pressure-saved gas chamber 341, between combustion chamber and pressure-saved gas chamber for help combustion, are communicated by gas guide hole 330 in the cylinder block, on the piston, there designed gas guide hole or used together with exhaust hole.

Its working characteristic is to ignite on the top dead center, the pressure-saved gas chamber for help combustion will communicate with guide hole of piston to let air in the pressure-saved gas chamber for help combustion into combustion chamber to have effect of help combustion. Its working procedure is shown in Figs. 166-2 to 166-10, and driving cycle as shown in Fig. 22, Fig. 166-11 is the distribution diagram of working angle of the embodiment in Figs. 166, 166-1, Fig. 166-12 is the pressure curve chart of the embodiment in Figs. 166, 166-1.

2. Above-mentioned helping combustion type engine can further be the design controlled by tongue of intake valve of actuating type piston, Figs. 167, 167-1, 167-2 are the twice help pressure-saved gas chamber controlled by actuating type valve. In figures, 326 is tongue of intake valve, 327 is return spring, 328 is retaining ring.

Its structural character is that: tongue of intake valve 326 is placed between combustion chamber and pressure-saved gas chamber for help combustion 341, in the gas chamber for help combustion, there designed at least one set of intake valve 335 and communicated with gas chamber for help combutsion by intake port 336, and at least one set of check valve 340 and gas guide path 342 lead to pressure-saved gas chamber for help combustion 341, between pressure-saved gas chamber for help combustion and combustion chamber, piston is used to actuate tongue of intake valve 330 near top dead center to let fresh high pressure air in the pressure-saved gas chamber for help combustion mix with combustion gas burned in the combustion chamber to possess the effect of helping combustion. Its working procedure as shown from Figs. 167-3 to 167-11, and drive cycle as shown in Table 23.

3. The helping combustion structure design of intake valve tongue controlled by actualing piston is applicable on the engine shown in Figs 155, 155-1, and also can combine the engines as shown in the embodiment of Figs. 156, 156-1 to 161, 161-1, Figs 168, 168-1are the embodiment in which twice help combustion pressure intake gas chamber is constituted by single set double-sided piston drive and piston actuating type pressure-saved gas chamber.

Its structural character is that: between the bottom face of upper piston and cylinder block, there formed pressure intake gas chamber for help combustion, and designed at least one set of intake valve 335, from intake port 336 to communicate with gas chamber for pressure-saved and help combustion, and at least one set of check valve 340 and gas guide path 342 lead to pressure-saved gas chamber for help combustion 341, and combined with the above help dombustion structure of piston-actuating controlled intake gate tongue, and actuated intake valve tongue 330 by piston near top dead center, and let fresh high pressure gas in the gas chamber for saving pressure and helping combustion mix with combustion gas burning in the combustion chamber to have the effect of twice help combustion. Its working procedure as shown from Figs. 168-2 to 168-10, its drive cycle us shown in Table 24.

The theory of help combustion chamber is disclosed by the Stratified Charge S C Engine developed by Crantield Industitute of Technology ( and only its application should occupy plane space independently and possess crank, but the design of the present invention only occupies a section of high stroke and shares crank and there is no reverse turning tonque existed and guided through by instantly help combustion, its merits is obvious.

Figs. 169, 169-1 is a twice help combustion pressure-saved structure which is operated by single-set double-sided piston drive and actuating type valve, its character is to assemble valbe which is touched by piston at twice help combustion intake port in order to control time of twice help combustion, its working procedure diagram as shown in Figs. 169-2 to 169-10, and above engine structuee when fuel nozzle of combustion chamber inject fuel oil, twice help combustion air enters into simultaneously to promote combustion effectiveness.

4. Figs. 170, 170-1 are the graphic views of embodiment of compound fuel engine with twice help combustion function, the main structure of the design includes: exchange gas valve with pressure-saved gas chamber, combustion chamber, pressure intake gas chamber, help combustion pressure-saved gas chamber, intake valve tongue, plug, fuel nozzle, and gas guide path and upper and lower pistons, crank and cylinder block. Pressure-saved gas chamber possesses plug, for ignition the combustion gas which is the output gas from pressure intake gas chamber after exchange gas valve is opened, and the fuel nozzle in the combustion chamber is used to inject fuel again after ignition and combustion of gas in the pressure-saved gas chamber and in the meantime, air in the help combustion pressure-saved gas chamber is also led into for helping combustion, Figs 170-2 to 170-10 is the working procedure, and its drive cycle as shown in Table 25, Fig. 170-11 is the working distribution diagram, Fig. 170-12 is the pressure curve chart.

b. Fuel gas transmission structure

Structure of exhaust hole, gas guide path and check valve, pressure-saved gas chamber and transmission valve of above-mentioned each engine, can be assembled in the cylinder block or piston body, and transmission valve and exhaust valve can be opened and closed by external synchronous eccentric motion structure, or piston-actuated valve with return spring, or by the pressure difference of gas of output and input ends.

I. Piston-actuating valve which possesses return spring

Figs. 159, 159-1 are the structural embodiments of transmission valve returned by spring which is actuated by piston. The isolation wall in the cylinder block in figure is used for partition pressure-saved gas chamber and gas chamber, and transmission valve penetrates through and is placed on it, to couple with the return spring by the retatining ring and washer when lower end of transmission valve and piston separated, valve is returned by the force of spring to separate pressure-saved gas chamber and combustion chamber and actuated and opened valve when piston raised up.

Fig. 171 is the embodiment of the exchange valve designed on the isolation wall between pressure-saved gas chamber and combustion chamber, and return spring designed on the piston, in figure, at the piston, there is guide hole, exchange valve which are coupled by the retaining ring and returning spring, in the course of railing and lowering piston to actuate exchange valve. As shown in Figs. 171-1 and 171-2, it is a graphic view of cross section of each set of gas guide path and single transmission valve.

II. Valve is placed in piston

Figs. 172, 172-1 and Figs 173, 173-1, are the embodiments in where gas guide path is placed in the piston, in figures valve compressed the gas in the pressure intake gas chamber when piston is raised up, and open valve by said high pressure gas, and furthermore, at the intake port of guide path, there assembled a check valve, and form pressure-saved gas chamber between exchange valve and the gas guide space of piston.

Figs. 174, 174-1 are the embodiments of exhaust valve placed in the piston, wherein 326 is the tongue of exhaust valve, 327 is return spring, 328 is the retaining ring, 329 is the sealing ring. Tongue of exhaust valve 326 penetrates through the exhaust port of piston, end of said tongue extends outside bottom margin of piston in order to actuate and open exhaust valve when piston is near bottom dead point; return spring

92

327 and retaining ring 328 let exhaust valve tongue close in usual time sealing ring 329 is used to avoid leaking gas, and exhaust path leads to the exhaust pipe from the inner transmission axle in the exhaust port of piston. Figs 174-2, 174-3 are the graphic views of the embodiment of intake valve and exhaust valve assembled on the piston: fresh fuel gas goes from the pressure intake gas chamber of lower piston through intake valve of piston to combustion chamber, the waste gas after combustion actuates the exhaust valve of piston to exhaust waste gas when upper piston lowered down near bottom dead center.

Figs. 175, 175-1 are the embodiments of structure of double piston assembled on the exhaust valve piston. In figure, exhaust valve tongue 326 penetrates through piston and slightly extendes out, by return spring 327 and retaining ring 328, exhaust valve tongue usually is under closed status , exhaust path 320 is controlled by exhaust valve tongue 326, when piston is near the bottom dead center, to actuate exhaust gate to let waste gas exhaust out through exhaust pathes 320 and 304.

Above gas chamber for saving pressure furthermore can be as above pressure-saved gas chamber structure of item B-b to possess volume regulating cock screwed externally for regulating the volume of pressure-saved gas chamber in order to further design a relief valve which can regulate the rated acting pressure to stabilize the saved pressure.

III. It is touched by additionally assembling synchronous eccentric motion structure.

The above-mentioned help combustion intake valve tongue, transmission valve and action of intaking and exhausting gas, besides the method of openning and closing by piston to actuate or the pressure difference of compressing gas, also it can use the traditional method of driving the eccentric cam synchronized with crank of piston; Fig. 176 is the structural graphic view of friving intake valve, exchange valve, help combustion valve by additionally eccentric cam.

Summing up, the merit of engineering technique of the structure of the embodiment of independent pressure intake gas chamber and explosive exhaust gas chamber of the present invention is to possess the merit of high performing work of two-stroke engine, but it does not cause the loss and pollution of incomplete combustion during same section of intake and exhaust gas, the pressure saving function raised the compression ratio, its effect obviously possesses the condition of application.

## FEATURES OF THE INVENTION

Main features of the invention (referred to herein as "claims"), are as follows:-

1. An internal combustion engine possesses : the working procedure of intake - compression - fuel gas exchange - explosion - pressure storage - exhaust, and its main structure is characterized in that:
at least two sets of gas chamber set are in series or parallel each other, and used as working gas chamber for intake, compression, explosion and exhaust;
at least one set of gate plate or plug or plug type structure which couples with gas chamber set, and its two ends are formed as gas chamber;
at least an exchange pressure-saved structure which is constituted by hole, groove or chamber type of transmission fuel gas for exchange fuel gas and saving pressure. Its working cycle is characterized in that:
the time of separating the exchange pressure-saved structure and explosive exhaust gas chamber is before exhaust.

2. Internal combustion engine as claimed in claim 1, possesses:
passive body which possesses gas chamber set, at least there are two sets of gas chamber set on it, and both of them are grooved gas chamber and connected each other in series, the extension direction of grooved gas chamber structure is parallel to the driving direction of motion body;
active body which possesses gate plate set, at least there is a set of common plate set GC 106 coupled with gas chamber set, common gate plate set GC 106 possesses pressure-saved chamber 102, at leading end, there is one-way intake port 101, at lagging end, there is guide hole 103, three of them communicate together; one-way intake port near end of gate plate set GC will be under exposed status when it passes through two gas chambers, and when guide hole passes through intake compressive gas chamber, it hides in the gate plate seat, and the deeper section passes through explosive exhaust gas chamber, it is under exposed status, in order to release high pressure fuel gas to explosive exhaust gas chamber for ignition. combustion and explosion;
The time of saving pressure of guide hole which hides into gate plate seat depends on the length of deeper section of explosive exhaust gas chamber.

3. Series gas chamber common gate plate set one-way drive engine structure as claimed in claim 2 is constituted by active body with gate plate set and passive body with gas chamber set; its structural method includes: internal rotor or external rotor engine structure active body is the fixed body, passive body is motion body; and active body is motion body, passive body is the fixed body, and its main character is that :

(1) Structure of active body possesses :

at least one set of common gate plate set GC 106: common gate plate set GC 106 possesses one-way intake valve 101 facing to the lagging end of gas chamber Cx104, there is pressure-saved gas chamber 102 in gate plate set, and there is transmission guide hole 103 facing to the leading end of gas chamber Cy, three of them communicate together; one-way intake valve is near the working end of common gate plate set and far away from transmission guide hole;

gate plate seat 107: a guide groove is placed in for placing gate plate set GC 106, at common gate plate set GC 106, there places drive spring 125 to press static pressure on common gate place set GC 106, and assembled an adjusting cover 126 for adjusting up and down and press spring 125 in order to adjust the static pressure of spring pressed on common gate plate set GC 106.

(2) Structure of passive body possesses :

intake compressive gas chamber Cx104 and its number is just one time of number of common gate plate set, and is as same as number of explosive exhaust gas chamber Cy105, and couples with common gate plate set GC 106 on motion body;

gas chamber Cx104 is shallower and is only used for common gate plate set exposes out of one-way intake valve;

gas chamber Cy105 is deeper, and used for transmission guide hole exposes out.

gas chamber Cy105 further can possess deeper leading end, shallower lagging end, the size of working angle of deeper leading end is used to select the pressure saving time of transmission guide hole which constringes into gate plate seat.

4. Rotary engine structure as claimed in Claim 3, wherein the placement of plug or fuel nozzle for ignition and combustion, in the structure of which passive body is the fixed body, active body is motion body, and it is placed in the guide transver groove 105$'$ at the leading end of gas chamber Cy105.

5. Rotary engine structure as claimed in Claim 3, wherein the placement of plug or fuel nozzle for ignition and combustion, in the structure of which passive body is the fixed body, active body is motion body, and it is placed in the concave structure 105$''$ which couples with gas chamber Cy105 and can avoid to be interferred by common gate plate GC.

6. Rotary engine structure as claimed in Claim 3, wherein the placement of plug or fuel nozzle for ignition and combustion in the structure of which active body is the fixed body, passive body is motion body, and it is placed in the concave structure 105$''$ which is placed at the lagging end of common gate plate set GC106 and couples with gas chamber Cy105.

7. Rotary engine structure as Claimed in Claim 3, sherein the placement of plug or fuel nozzle for ignition and combustion in the structure of which active body is the fixed body, passive body is motion body, and it is placed in the concave chamber which is in the guide transverse groove 105$'$ and can avoid to be interferred by motion body.

8. Engine as Claim in Claim 3, wherein the intake and exhaust structure, if intake port and exhaust port are placed at the active body which is acted as motion body, then:

at side of leading end of gas chamber Cx104, there is guide transverse groove 104$'$, at the lagging end of gas chamber Cy105, also there is guide transverse groove 105$'$ , guide transverse grooves 104$'$, 105$'$ of gas chambers Cx104 and Cy105 are at the position of different side;

at the leading end of common gate plate set GC106, motion body extends and assembles guide groove 113 which is at the same side of guide transverse groove 105$'$ of fixed body gas chamber Cy105, and is parallel to gas chamber Cy105 and has same arc length as gas chamber Cy105, it is used for transmitting guide transverse groove 105$'$ of gas chamber Cy105 in operation, guide transverse 113 leads to exhaust pipe;

and at the lagging end of common gate plate CG106, there extends and assembles guide groove 112 which is at the same side of guide transverse groove 104$'$ of fixed body gas chamber Cy104, and is parallel to gas chamber Cx104 and has same arc length as gas chamber Cx104, it is used to guide through guide transverse groove 104$'$ of gas chamber Cx104, in operation, guide groove 112 leads to intake pipe.

9. Engine as Claimed in Claim 3, wherein exhaust structure, if intake port 110$'$ and exhaust port111$'$ are placed at the passive body which is acted as fixed body, then :

intake port is placed at the leading end of gas chamber Cx104 in order to penetrate gas chamber Cx104, and communicate gas chamber Cx104 and fuel gas transmission pipe;

exhaust port 111' is placed at the lagging end of gas chamber Cy105 to penetrate gas chamber Cy105, and communicate gas chamber Cy105 and waste gas transmission pipe.

10. Engine as Claimed in Claim 3, wherein exhaust structure, if intake port 110' and exhaust port 111' are placed at the passive body which is acted as motion body, then :

intake port 110' is placed at the leading end of gas chamber Cx104 to penetrate gas chamber Cx104, and communicate gas chamber Cx104 and fuel gas transmission pipe;

exhaust port 111' is placed at the lagging end of gas chamber Cy105 to penetrate gas chamber Cx104, and communicate gas chamber Cy105 and waste gas transmission pipe.

11. Engine as Claimed in Claim 3, wherein intake and exhaust structure, if intake port 110' and exhaust port 111' are placed at active body which is acted as fixed body, then :

one side of leading end of gas chamber Cx104 possesses guide transverse groove 104' which couples with a set of long grooved intake port 110 having almost same length as gas chamber Cx104 on active body used as fixed body;

this long grooved intake port 110 is placed at the lagging end of common gate plate set GC104;

at the lagging end of gas chamber Cy105 of passive body which is used as motion body, and at the different side of guide transverse groove 105' of gas chamber Cx105, there assembles gas transverse groove 105' to couple with a set of long gorrved exhaust port 111 which has almost same length as gas chamber Cy105 and is at the active body used as fixed body;

long grooved exhaust port 111 is placed at the leading end of common gate plate set GC106.

12. Structure of two-way drive common gate plate common gas chamber rotary internal combustion engine as Claim in Claim 2 is constituted by active body with gate plate set and passive body with gas chamber set. its constitution method includes: internal rotor or external rotor rotary engine structure wherein active body is the fixed body, passive body is motion body, and active body is motion body, passive body is the fixed body, and its main character is that :

(1) Structure of active body possesses :

at least a set of common gate plate set GC 106 as Claimed in Claim 3;

intake exhaust gate GG 120 which has same number of set as common gate plate set : it is a dense thin plate, shape of cross facing to common gas chamber set CC 119 is as same as common gate plate and it is placed at the position of 180° working angle of the leading common gate plate set GC;

gate plate seat 107 : a guide groove is placed in for placing gate plate set GC 106, at common gate plate set GC 106, there places drive spring 125 to press static pressure on common gate plate set GC 106, and assembles an adjusting cover 126 for adjusting up and down and press spring 125 in order to adjust the static pressure of spring pressed on common gate plate set GC 106.

(2) Structure of passive body possesses :

Common gas chamber set CC 119 which has at least two times of number of set of common gate plate set along motion trace in series each other:

according to the rotary direction, there is variation of depth which is deep firstly and then shallow, the depth of the leading end can let transmission guide hole 103 of common gate plate set GC 106 expose out in order to transmit out fuel gas of pressure-saved gas chamber 102 for ignition, combustion and producing dynamic power, the lagging shallower section can let common gate plate set GC 106 be limited only to expose out one-way intake valve 101 and let transmission guide hole 103 hide in the gate plate seat 107.

13. Rotary engine structure as Claimed in Claim 12, wherein the placement of plug or fuel nozzle for ignition and combustion is that the action body is motion body, passive body is the fixed body, plug 108 or fuel nozzle 109 is placed in the concave structure which is at the leading end of gas chamber CC 119 of passive body which is used as fixed body and can avoid to be interferred by gate plate set.

14. Rotary engine structure as Claimed in Claim 12, wherein the placement of plug or fuel nozzle for ignition and combustion is that the active body is motion body, passive body is the fixed body, plug 108 or fuel nozzle 109 is placed in the guide transverse groove which is at the leading end of gas chamber CC 119 of passive body used as fixed body, and can avoid to be interferred by gate plate set.

15. Rotary engine structure as Claimed in Claim 12, wherein the placement of plug or fuel nozzle for ignition and combustion is that active body is the fixed body, passive body is the motion body, plug 108 or fuel nozzle 109 is placed at the lagging end of common gate plate set GC 106 on active body used as fixed body and ocuples with common gas chamber CC 119 or guide transverse groove 119' at its leading.

16. Rotary engine structure as Claimed in Claim 12, wherein the placement of plug or fuel nozzle for ignition and combustion is that active body is the fixed body, passive body is motion body, plug 108 or fuel nozzle 109 is placed in the concave structure 105" which is at the lagging end of common gate plate set GC 106 on active body used as fixed body, and can avoid to be interferred by common gas chamber CC 119.

17. Engine as Claimed in Claim 12, wherein structure of intake and exhaust, if intake port and exhaust port 111 are placed at active body used as motion body, then :

intake port 110′ is placed at the lagging end of intake exhaust gate plate GG 120 to penetrate gas chamber CC 119 and hole of hollow rotary axle, and communicate gas chamber CC 119 and fuel gas transmission pepe;

exhaust port 111′ is placed at the leading end of intake exhaust gate GG 120 to penetrate gas chamber CC 119 and hole of hollow rotary axle and communicate gas chamber CC 119 and waste gas transmission pipe.

18. Engine as Claimed in Claim 12, wherein structure of intake and exhaust, if intake port 110′ and exhaust port 111′ are placed at the passive body used as fixed body, then :

at the side of leading end of common gas chamber CC 119, there is guide transverse groove 119′, at different side of lagging end, there is another guide transverse groove 119″;

on passive body, at proper distance of end of guide transverse groove 119′ of leading end of common gas chamber CC 119, there places intake port 110′, or places an intake groove 110 which is parallel to gas chamber CC 119 and has same phase angle and almost same length,

at same side of guide transverse groove 119″ of leading end of gas chamber CC 119, and at proper distance of end of guide transverse groove 119″, there places exhaust port 111′, or places an exhaust groove 111 which is parallel to gas chamber CC 119, and has same phase and almost same length;

at the lagging end of intake exhaust gate plate GG 120, active body extends guide groove 112 which is at the same side of guide transverse groove 119′ of leading end of gas chamber CC 119 on passive body, and is parolled to gas chamber CC 119 and has almost same arc length, in operation, it is used to transmit guide transverse groove 119′ and intake groove 110 or hole 110′ of leading end of gas chamber CC 119;

and at the leading end of common gate plate set GC106, there extends guide groove 113 which is at the same side of intake transverse groove 119″ at lagging end of common gas chamber CC 119 on passive body, and is parallel to gas chamber CC 119 and has almost arc length, in operation, it is used to guide through guide transverse groove 119″, and exhaust groove 111 or hole 111′ of gas chamber CC 119.

19. Engine as Claimed in Claim 12, wherein structure of intake and exhaust, if intake port 110′ and exhaust port 111′ are placed at active body which is used as fixed body, then :

intake port 110′ is placed at the lagging end of intake exhaust gate plate GG 120, and communicates intake pipe;

exhaust port 111′ is placed at the leading end of intake exhaust gate plate GG 120, and communicates exhaust pipe.

20. Engine as Claimed in Claim 12, wherein structure of intake and exhaust, if intake port 110′ and exhaust port 111′ are placed at the passive body which is used as motion body, then :

at side of leading end of common gas chamber CC 119, there is guide transverse groove 119″, at different side of lagging end, there is another guide transverse groove 119″;

on passive body, at proper distance of end of guide transverse groove 119′ of leading end of common gas chamber CC 119, there places intake port 110′ to penetrate through hollow rotary axle pipe, or places an intake groove 110 which is parallel to gas chamber CC 119 and has same phase angle and almost same length;

at same side of guide transverse groove 119″ of leading end of gas chamber CC 119, and at proper distance of end of guide transverse groove 119″, there places exhaust port 111′ to penetrate through hollow rotary axle, or places an exhaust groove 111 which is parallel to gas chamber CC 119, and has same phase and almost same length;

at the lagging end of intake exhaust gate plate GG 120, active body extends and assembles guide groove 112 which is at the same side of guide transverse groove 119′ of leading end of gas chamber CC 119 on passive body used as motion body, and is parallel to gas chamber CC 119′ and has almost same arc length, and is used to transmit guide transverse groove 119′ and intake groove 110 or hole 110′ at leading end of gas chamber CC 119;

and at the leading end of common gate plate set GC 106, there extends guide groove 113 which is at the same side of intake transverse groove 119″ at lagging end of common gas chamber CC 119, on passive body used as motion body, and is parallel to gas chamber CC 119 and has almost arc length, and is used to guide through guide transverse groove 119″, and exhaust groove 111 or hole 111′ of gas chamber CC 119.

21. Two-way drive common gate plate linear type internal combustion engine structure as claimed in Claim 2, wherein active body with gate plate set couples with passive body having gas chamber set, its coupling method includes :

active body with gate plate set is motion body, passive body with gas chamber set is the fixed rail;
active body with gate plate set is the fixed rail, passive body with gas chamber set is motion body.
Its main character is that :

(1) structure of active body possesses :

at least a set of common gate plate set GC 106 as Claimed in Claim 3;

gate plate set GP 1046 with penetration hole : it is placed at leading end of the most leading end common gate plate set GC 106, this gate plate is solid structure, and possesses guide hole 1047, height of guide hole 1047 hides into gate plate seat 107 when it passes through, shallower gas chamber Cx 104, and when it passes through deeper explosive exhaust gas chamber Cy 105, it is under exposed status;

gate plate seat 107 : a guide groove is placed in for placing gate plate sets GC and GP, at gate plate sets GC and GP, there places drive spring 125 to press static pressure on gate plate set GC 106, and assembles an adjusting cover 126 for adjusting press spring 125 in order to adjust the static pressure of spring pressed on gate plate sets GC and GP.

(2) Structure of passive body possesses :

at the coupling face of active body, there is at least a set of intake compressive gas chamber Cx 104 and at least a set of explosive exhaust gas chamber Cy 105, both of them are in series each other, and couple with common gate plate set GC 106 on motion body; gas chamber Cx 104 is shallower, gas chamber Cy 105 is deeper, gas chamber Cy 105 further can be deeper at the leading, shallower at lagging end.

22. Linear type engine structure as Claimed in Claim 21, wherein the placement of plug of fuel nozzle for ignition and combustion is that active body is motion body, passive body is the fixed body, plug 108 or fuel nozzle 109 is placed in the guide transverse groove 105′ at the leading end of gas chamber Cy 105 of passive body used as fixed rail.

23. Linear type engine structure as Claimed in Claim 21, wherein the placement of plug or fuel nozzle for ignition and combustion is that active body is motion body, passive body is the fixed body, plug 108 or fuel nozzle 109 is placed in the concave structure 105″ which is at the lagging end of common gate plate set GC 106 on motion body and can avoid to be interferred by common gate plate set GC 106.

24. Linear type engine structure as Claimed in Claim 21, wherein the placement of plug or fuel nozzle for ignition and combustion is that active body is the fixed rail, passive body is motion, plug 108 or fuel nozzle 107 is placed in the concave structure which is at the lagging end of common gate plate set GC 106 on active body used as fixed rail.

25. Linear type engine structure as Claimed in Claim 21, wherein the placement of plug or fuel nozzle for ignition and combustion is that active body is the fixed rail, passive body is motion body, plug 108 or fuel nozzle 107 is placed in the concave structure or guide transverse groove 105′ which is at the leading end of gas chamber, and can avoid to be interferred by gate plate set GC.

26. Linear engine as Claimed in Claim 21, wherein structure of intake and exhaust, if intake port 110′ and exhaust port 111′ are placed at passive body which is acted as fixed rail, then :

intake port 110′ is placed at the leading end of gas chamber Cx 104, and can avoid to be interferred by common gate plate set GC 106, and penetrate through gas chamber Cx 104 and hole of hollow rotary axle, or lead to the transverse hole 110″ on side wall in order to guide through gas chamber Cy 104 and fuel gas trans mission pipe.

exhaust port 111′ is placed at the lagging end of gas chamber Cy 105, and can avoid to be interferred by common gate plate set GC 106, and penetrate through gas chamber Cy 105 and hole of hollow rotary axle, or lead to the transverse hole 111″ on side wall in order to guide through gas chamber Cy 105 and waste gas transmission pipe.

27. Linear type engine as Claimed in Claim 21, wherein structure of intake and exhaust, if intake port 110′ and exhaust port 111′ are placed at active body which is acted as motion body, then :

intake port 110′ can be also placed in the transverse hole 110″ at side of leading end of gas chamber Cx 104;

exhaust port 111′ is placed in the transverse hole 111″ at lagging end of gas chamber Cy 105;

guide transverse groove of gas chamber Cx 104 and gas chamber Cy 105 is at different side position ;

at leading end of common gate plate set GC 106, active body extends and assembles guide groove 113 which is at the same side of guide transverse groove 105′ of gas chamber Cy 105 on passive body and is parallel to gas chamber Cy 105 and has almost same arc length, in operation, it is used to transmit guide transverse groove 105′ of gas chamber Cy 105 and exhaust groove 111 or hole 111′.

at lagging end of common gate plate set GC 106, there extends guide groove 112 which is at same side of guide transverse groove 104′ of gas chamber Cx 104 on passive body, and is parallel to gas chamber Cx 104 and has almost same arc length, in operation, it is used to transmit guide transverse groove 104′ and intake groove 110 or hole 110′.

28. Linear engine as Claimed in Claim 21, wherein structure of intake and exhaust, if intake port 110′ and exhaust port 111′ are placed at passive body which is acted as motion body, then :

intake port 110′ is placed at the leading end of gas chamber Cx 104 and can avoid to be interferred by common gate plate set GC 106, and penetrate through hole of gas chamber Cx 104, or lead to the transverse hole 110″ on side wall in order to guide through gas chamber Cx 104 and fuel gas transmission pipe;

exhaust port 111′ is placed at the lagging end of gas chamber Cy 105 and can avoid to be interferred by common gate plate set GC 106, and penetrate through hole of gas chamber Cy 105, or lead to the transverse hole 111″ on side wall, in order to guide through gas chamber Cy 105 and waste gas transmission pipe.

29. Linear engine as Claimed in Claim 21, wherein structure of intake and exhaust, if intake port 110′ and exhaust port 111′ are placed at active body which is acted as fixed body, then :

at side of leading end of gas chamber Cx 104, there is guide transverse groove 104′ to couple with a set of long grooved type intake groove 110 which has similar length as gas chamber Cx 104 on active body, this kind of long grooved type intake groove 110 is placed at the lagging end of common gate plate set GC 106; at lagging end of gas chamber Cy 105 of passive body and at different side of guide transverse groove 104′ of gas chamber Cx 104, there also assembles guide transverse groove 105 to couple with a set of long grooved exhaust groove 111 which has almost same length as gas chamber Cy 105 and is on the active body, this kind of long grooved exhaust groove 111 is placed at the leading end of common gate plate set GC 106.

30. One-way drive common gate plate linear type internal combustion engine structure as Claimed in Claim 2, wherein active body with gate plate set couples with passive body having gas chamber set, its coupling method includes :

active body with gate plate set is motion body, passive body with gas chamber set is the fixed rail; active body with gate plate set is the fixed rail, passive body with gas chamber set is motion body.

Its main character is that :

(1) structure of active body possesses :

at least a set of common gate plate set GC 106 as Claimed in Claim 3;

at least a set of intake exhaust gate GG 120: it is a dense thin plate, shape of cross facing to common gas chamber set CC 119 is as same as common gate plate GC 106 and it is placed at the position of 180° working angle of leading common gate plate set GC ;

at least a set of gate plate set GP 1046 with penetration hole as Claimed in Claim 21 : it is placed at leading end of the most leading end common gate plate set GC 106;

gate plate seat 107: a guide groove is placed in for placing gate plate sets GC and GP, at gate plate sets GC and GP, there places drive spring 125 to press static pressure on gate plate sets GC and GP and assembles an adjusting cover 126 for adjusting press spring 125 up and down in order to adjust the static pressure of spring pressed on gate plate sets GC and GP.

(2) Structure of passive body possesses :

at least two sets of common gas chamber set CC 119 which are in series each other along motion trace : it is characterized in that according to the drive direction, there is variation of depth which is deep firstly and then shallow, the depth of leading end can let transmission guide hole 103 of common gate plate set GC 106 expose out in order to transmit out fuel gas of pressure saved gas chamber 102 for ignition, combustion and producing dynamic power, the lagging shallower section can let common gate plate set GC 106 be limited only to expose out one-way intake valve 101 and let transmission guide hole 103 hide in the gate plate seat 106.

31. Engine structure as Claimed in Claim 30, wherein the placement of plug or fuel nozzle for ignition and combustion is that active body is motion body, passive body is the fixed rail, and plug 108 or fuel nozzle 109 is placed in the concave structure which is at the lagging end of common gate plate set GC 106 on active body which is used as motion body, and can avoid to be interferred by common gas chamber CC 119 or guide transverse groove 119′ at leading end.

32. Engine structure as claimed in Claim 30, wherein the placement of plug or fuel nozzle for ignition and combustion is that active body is motion body, passive body is the fixed rail, and plug 108 or fuel nozzle 109 is placed in the concave structure 105″ or guide transverse groove 105′ which is at the leading end of common gas chamber CC, and can avoid to be interferred by common gate plate set GC 106.

33. Engine structure as Claimed in Claim 30, wherein the placement of plug or fuel nozzle for ignition and combustion is that active body is the fixed rail, passive body is motion body, and plug 108 or fuel nozzle 109 is placed in the concave structure which is at the lagging end of common gate plate set GC 106 on active body which is acted as fixed rail.

34. Engine structure as Claimed in Claim 30, wherein the placement of plug or fuel nozzle for ignition and combustion is that active body is the fixed rail, passive body is motion body, and plug 108 or fuel nozzle 109 is placed in the concave structure or guide transverse groove 109′ which is at the leading end of common gas chamber CC 119, and can avoid to be interferred by common gate plate set GC.

35. Engine as Claimed in Claim 30, wherein structure of exhaust, if intake port 110′ and exhaust port 111′ are placed at active body which is acted as motion body, then:

intake port 110′ is placed at the lagging end of intake exhaust gate GG 120, and penetrate through hole of gas chamber Cx 104 or transverse hole 110″, in order to guide through gas chamber CC 119 and fuel gas transmission pipe;

exhaust port 111′ is placed at the leading end of intake exhaust gate GG 120, and penetrate through hole of gas chamber Cy 105 or transverse hole 111″, in order to guide through gas chamber CC 119 and waste transmission pipe.

36. Engine as Claimed in Claim 30, wherein structure of intake and exhaust, if intake port 110′ and exhaust port 111′ are placed at the passive body which is used as fixed rail, then :

at side of leading end of common gas chamber CC 119, there is guide transverse groove 119′, at lagging end, there is another guide transverse groove 119″, both of two kinds of guide transverse groove are at different side;

on passive body, at proper distance of end of guide transverse groove 119′ of leading end of common gas chamber CC 119, there places intake port 110′, or places an intake groove 110 which is parallel to gas chamber CC 119 and has same phase angle and almost same length;

at same side of guide transverse groove 119″ of leading end of gas chamber CC 119, and at proper distance of end of guide transverse groove 119″, there places exhaust port 111′, or places an exhaust groove 111 which is parallel to gas chamber CC 119, and has same phase and almost same length;

at the lagging end of intake exhaust gate plate GG 120, active body extends guide groove 112 which is at the same side of guide transverse groove 119′ of leading end of gas chamber CC 119 on passive body, and is parallel to gas chamber CC 119 and has almost same arc length, it is used to transmit guide transverse groove 119′ and intake groove 110 or hole 110′ of leading end of gas chamber CC 119;

and at the leading end of common gate plate set GC 106, there extends guide groove 113 which is at the same side of intake transverse groove 119″ at leading end of common gas chamber CC 119 on passive body, and is parallel to gas chamber CC 119 and has almost arc length, it is used to guide through guide transverse groove 119″, and exhaust groove 111 or hole 11-1′ of gas chamber CC 119.

37. Engine as Claimed in Claim 30, wherein structure of intake and exhaust, if intake port 110′ and exhaust port 111′ are placed at active body which is used as fixed rail, then :

intake port 110′ is placed at the lagging end of intake exhaust gate plate GG 120, and communicates intake pipe ;

exhaust port 111′ is placed at the leading end of intake exhaust gate plate GG 120, and communicates exhaust pipe.

38. Engine as Claimed in Claim 30, wherein structure of intake and exhaust, if intake port 110′ and exhaust port 111′ are placed at the passive body which is used as motion body, then :

at side of leading end of common gas chamber CC 119, there is guide transverse groove 119″, at lagging end, there is another guide transverse groove 119″, both of two kinds of guide transverse groove are at different side;

on passive body, at proper distance of end of guide transverse groove 119′ of leading end of common gas chamber CC 119, there places intake port 110′, or places an intake groove 110 which is parallel to gas chamber CC 119 and has same phase angle and almost same length is order to penetrate through intake pipe;

at same side of guide transverse groove 119′ of leading end of gas chamber CC 119, and at proper distance of end of guide transverse groove 119″, there places exhaust port 111′, or places an exhaust groove 111 which is parallel to gas chamber CC 119, and has same phase and almost same length in order to penetrate through exhaust pipe;

at the lagging end of intake exhaust gate plate GG 120, active body extends and assembles guide groove 112 which is at the same side of guide transverse groove 119′ of leading end of gas chamber CC 119 on passive body, and is parallel to gas chamber CC 119 and has almost same arc length, and in operation it is used to transmit guide transverse groove 119′ and intake groove 110 or hole110′ at leading end of gas chamber CC 119;

and at the leading end of common gate plate set GC 106, there extends guide groove 113 which is at the same side of intake transverse groove 119″ at lagging end of common gas chamber CC 119 on passive body, and is parallel to gas chamber CC 119 and has almost arc length, and in operation, it is used to guide through guide transverse groove 119″, and exhaust groove 111 or hole 111′ of gas chamber CC 119.

39. Engine as Claimed in Claim 2, wherein structure of two-way drive common gate plate rotary type internal combustion engine is constituted by active body with gate plate set and passive body with gas chamber set; its constitution method includes : internal rotar or external rotor rotary engine structure wherein active body is the fixed body, passive body is motion body, and active body is motion body, passive body is the fixed body, and its main character is that.

(1) Structure of active body possesses:

common gate plate set : includes at least a set of positive rotary common gate plate set GCF 121, its character is to assemble one-way intake valve 101 at leading end and possesses pressure-saved gas chamber 102, and at lagging end there is a transmission guide hold 103, three of them are communicated, it is characterized in that it is coupled with deeper gas chamber set Cy 105, transmission guide hole 103 of common gate plates GCF 121 and GCR 122 expose out in order to transmit out fuel gas of pressure-saved gas chamber for ignition, combustion and producing dynamic power when dynamic power passes through shallower gas chamber set Cx 104, and it can let common gate plate set GC 106 be limited only to expose out one-way intake valve 101 and transmission guide hole 103 hides in the gate plate seat 107, at its end which contacts gas chamber, there is a gas guide hole or terminal sub gate 123 which is pressured and driven by spring 1241; and constringes due to the static pressure of spring pressed on common gate plate set is adjusted and strengthened, to let guide hole or barrier hides into tail end of common gate plate set GC 106, and extends out when static pressure is reduced, and let gas guide hole or barrier expose out of tail end of common gate plate set GC 106; and at least a set of reverse rotary common gate plate set GCR 122 has same structure as positive rotary common gate plate set GCF 121, both of them are placed in reverse relation;

gate plate set 107 : a guide groove is placed in for placing common gate plate set GCF 121, GCR 122, at common gate plate set GCF 121, GCR 122, there places drive spring 125 to press static pressure on common gate plate set GC 121, GC 122, and assembles an adjusting cover 126 for adjusting up and down and press spring 125 by man power or dynamic mechanism in order to adjust the static pressure of spring pressed on common gate plate set.

(2) Structure of passive body possesses :

deeper gas chamber gas chamber Cy 105 which has at least one time of number of common gate plate GCF 121, and series gas chamber set which has same number of shallow gas chamber Cx 104: at end of same side of gas chamber Cx 104, there assembles guide transverse groove 104′, at two ends of same side of gas chamber Cy 105, there assembles guide transverse groove 105′, guide transverse grooves 104′, 105′ are placed at different sides.

40. Engine structure as Claimed in Claim 39, wherein the placement of plug or fuel nozzle for ignition and combustion is that active body is motion body, passive body is the fixed body, and it is placed when distance between two sets of gate plate GCF 121, GCR 122 is larger than length of gas chamber Cy 105 passes through the leading end of gate plate set before ignition and combustion, at least a set of plug 108 or fuel 109 used for positive rotary driving ignition and combustion, and at least a set of plug 108 or fuel nozzle 109 used for reverse rotary driving ignition and combustion are placed on the guide transverse groove 105′ at two ends of passive body gas chamber Cy 105.

41. Engine structure as Claimed in Claim 39, wherein the placement of plug or fuel nozzle for ignition and combustion is that active body is motion body, passive body is the fixed body, and it is placed when distance between two sets of gate plate GCF 121, GCR 122 is longer than length of gas chamber Cy 105 passes through the leading end of gate plate set before ignition and combustion, at least a set of plug 108 or fuel nozzle used for positive rotary driving ignition and combustion , and at least a set of plug 108 or fuel nozzle 109 used for reverse rotary driving ignition and combustion are placed in the concave structure 105″ which is at two ends of gas chamber Cy 105 and can avoid to be interferred by common gate plate GCF 121 and GCR 122.

42. Engine structure as Claimed in Claim 39, wherein the placement of plug or fuel nozzle for ignition and combustion is that active body is motion body, passive body is the fixed body, and it is placed when distance between two sets of common gate plate GCF 121, GCR 122 is smaller than length of gas chamber Cy 105 passes through the leading end of gate plate set before ignition and combustion, at least a set of plug 108 or fuel nozzle 109 used for positive and reverse rotary driving common ignition and combustion are placed on the guide transverse groove 105′ at two ends of passive body gas chamber Cy 105.

43. Engine structure as Claimed in Claim 39, wherein the placement of plug or fuel nozzle for ignition and combustion is that active body is motion body, passive body is the fixed body, and it is placed when distance between two sets of common gate plate GCF 121, GCR 122 is smaller than length of gas chamber Cy 105 passes through the leading end of gate plate set before ignition and combustion, at least a set of plug 108 or fuel nozzle 109 used for positive and reverse rotary driving common ignition and combustion, are placed in the concave structure 105″ which is at two ends of gas chamber, and can avoid to be interferred by common gate plate GCF 121 and GCR 122.

44. Engine structure as Claimed in Claim 39, wherein the placement of plug or fuel nozzle for ignition and combustion is that active body is the fixed body, passive body is motion body, and it is placed when distance between two sets of common gate plate GCF 121, GCR 122 is larger than length of gas chamber Cy 105 passes through the leading end of gate plate set before ignition and combustion, at least a set of plug 108 or fuel nozzle 109 used for positive and reverse rotary driving common ignition and combustion are placed at the position which guide transverse grooves 105′ at two ends of gas chamber Cy 105 on passive body are coupled.

45. Engine structure as Claimed in Claim 39, wherein the placement of plug or fuel nozzle for ignition and combustion is that active body is the fixed body, passive body is motion body, and it is placed when distance between two sets of common gate plate GCF 121, GCR 122 is larger than length of gas chamber Cy 105 passes through the leading end of gate plate set ignition and combustion, at least a set of plug 108 or fuel nozzle 109 used for positive and reverse rotary driving common ignition and combustion are placed in the concave structure 105″ which is at the lagging end of common gate plate set GCF 121, GCR 122, and can avoid to be interferred by passive body.

46. Engine structure as Claimed in Claim 39, wherein the placement of plug or fuel nozzle for ignition and combustion is that active body is the fixed body, passive body is motion body, and it is placed when distance between two sets of common gate plate GCF 121, GCR 122 is smaller than length of gas chamber Cy 105 passes through the leading end of gate plate set before ignition and combustion, at least a set of plug 108 or fuel nozzle 109 used for positive and reverse rotary driving common ignition and combustion are placed at the position which guide transverse groove 105′ at two ends of gas chamber Cy 105 on passive body are coupled.

47. Engine structure as claimed in Claim 39, wherein the placement of plug or fuel nozzle for ignition and combustion is that active body is the fixed body, passive body is motion body, and it is placed when distance between two sets of common gate plate GCF 121, GCR 122 is smaller than length of gas chamber Cy 105 passes through the leading end of gate plate set before ignition and combustion, at least a set of plug 108 or fuel nozzle 109 used for positive and reverse rotary driving common ignition and combustion are placed in the concave structure 105″ which is at the lagging end of common gate plate set GCF 121, GCR 122, and can avoid to be interferred by passive body .

48. Engine as claimed in Claim 39, wherein structure of intake and exhaust, if intake port 110′ and exhaust port 111′ are placed on the active body which is acted as motion body, then at same side of two ends of pressure intake gas chamber Cx 104, there assembles intake guide transverse groove 104′, at same side of two ends of explosive exhaust gas chamber Cx 104, there also assembles exhaust guide transverse groove 105′, two kinds of guide transverse groove are at different sides. Between the lagging end of positive rotary common gate plate set GCF 121 and lagging end of reverse rotary common gate plate set GCR 122 on active body, there extends and assembles a guide groove 112 which is at same side of guide transverse groove 104′ at two ends of gas chamber on passive body and is parallel to gas chamber Cx 104 with almost same arc length and leads to exhaust pipe.

49. Engine as claimed in Claim 39, wherein intake and exhaust structure, if intake port 110′ and exhaust port 111′ are placed at passive body which is acted as fixed body, then:
at the same side of two ends of gas chamber Cx 104, there is guide transverse groove 104′, at the same side of two ends of gas chamber Cy 105, there also has guide transverse groove 105′, two kinds of guide transverse groove are at different sides;
at the same side of guide transverse groove 105′ of gas chamber Cy 105 on passive body, and at the proper internal of end of guide transverse groove 105′, there assembles exhaust port 111′, or it assembles an exhaust groove 111 which is parallel to gas chamber Cy 105, and has same phase angle and almost same length as gas chamber Cy 105 in order to lead to exhaust pipe;
at the same side of guide transverse groove 104′ of gas chamber Cx 104, and at the proper interval of end of guide transverse groove 104′, there assembles intake port 110′, or it assembles intake groove 110 which is parallel to gas chamber Cx 104 and has same phase angle and almost same length as chamber Cy 105 in order to lead to intake pipe;
between the leading end of positive rotary com mon gate plate set GCF 121 and the leading end of reverse rotary common gate plate set GCR 122 on active body, there extends and assembles guide groove 113 which is at the same side of guide transverse groove 105′ of gas chamber Cy 105 on passive body, and is parallel to gas chamber Cy 105 and has almost same length, in operation, it is used to transmit guide transverse groove 105′, and exhaust groove 111 or hole 111′ of gas chamber Cy 105;

101

and between the lagging end of positive rotary common gate plate set GCF 121 and the lagging end of reverse rotary common gate plate set GCR 122, there extends and assembles guide groove 112 which is at the same side of guide transverse groove 104' of gas chamber Cx 104 on passive body and is parallel to gas chamber Cx 104 and has almost same arc length, in operation, it is used to guide through guide transverse groove 104' and intake groove 110 or hole 110' of gas chamber Cx 104.

50. Engine as claimed in Claim 39, wherein structure of intake and exhaust, if intake port 110' and exhaust port 111' are placed on the active body which is acted as fixed body, then :
at same side of two ends of pressure intake gas chamber Cx 104 on passive body, there assembles intake guide transverse groove 104', at same side of two ends of explosive exhaust gas chamber Cx 104, there also assembles exhaust guide transverse groove 105', two kinds of guide transverse groove are at different sides;
between the lagging end of positive rotary common gate plate set GCF 121 and lagging end of reverse rotary common gate plate set GCR 122 on active body, there extends and assembles a guide 112 which is at same side of guide transverse groove 104' at two ends of gas chamber on passive body and is parallel to gas chamber Cx 104 with almost same arc length and leads to intake pipe;
between the leading end of positive rotary common gate plate set GCF 121 and the leading end of reverse rotary common gate plate set GCR 122, there extends and assembles guide groove 113 which is at the same side of guide transverse groove 105' at two ends of gas chamber Cy 105 on passive body, and is parallel to gas chamber Cy 105 and has almost same length in order to lead to exhaust pipe.

51. Engine as claimed in Claim 39, wherein structure of intake and exhaust, if intake port 110' and exhaust port 111' are placed at passive body which is acted as motion body, then :
at the same side of two ends of gas chamber Cx 104, there is guide transverse groove 104', at the same side of two ends of gas chamber Cy 105, there also has guide transverse groove 105', two kinds of guide transverse groove are at different sides;
at the same side of guide transverse groove 105' of gas chamber Cy 105 on passive body, and at the proper interval of end of guide transverse groove 105', there assemble exhaust port 111', or it assembles an exhaust groove 111 which is parallel to gas chamber Cy 105, and has same phase angle and almost same length as gas chamber Cy 105 in order to lead to exhaust pipe;
at the same side of guide transverse groove 104' of gas chamber Cx 104, and at the proper internal of end of guide transverse groove 104', there assembles intake port 110', or it assembles intake groove 110 which is parallel to gas chamber Cx 104 and has same phase angle and almost same length as gas chamber Cy 105 in order to lead to intake pipe;
between the leading end of positive rotary common gate plate set GCF 121 and the leading end of reverse rotary common gate plate set GCR 122 on active body, there extends and assembles guide groove 113 which is at the same side of guide transverse groove 105' of gas chamber Cy 105 on passive body, and is parallel to gas chamber Cy 105 and has almost same length, in operation, it is used to transmit guide transverse groove 105', and exhaust groove 111 or hole 111' of gas chamber Cy 105;
between the lagging end of positive rotary common gate plate set GCF 121 and the lagging end of reverse rotary common gate plate set GCR 122, there extends and assembles guide groove 112 which is at the same side of guide transverse groove 104' of gas chamber Cx 104 on passive body and is parallel to gas chamber Cx 104 and has almost same arc length, in operation, it is used to guide through guide transverse groove 104' and intake groove 110 or hole 110' of gas chamber Cx 104.

52. Two-way drive common gate plate linear type internal combustion engine structure as claimed in Claim 2, wherein active body with gate plate set couples with passive body having gas chamber set, its coupling method includes :
active body with gate plate set is motion body, passive body with gas chamber set is the fixed rail;
active body with gate plate set is the fixed rail, passive body with gas chamber set is motion body.
Its main character is that :
(1) structure of active body possesses :
common gate plate set : includes at least a set of positive rotary common gate plate set GCF 121 as claimed in Claim 39, and at least a set of reverse rotary common gate plate set GCR 122, its structure is as same as positive rotary common gate plate set GCF 121, both of them are placed in reverse relationshipe :
gate plate set GP 1046 with penetration hole : it is placed at leading end of common gate plate set GC 106, this gate plate is solid structure. and possesses guide hole 1047, height of guide hole 1047 hides into gate plate seat when it passes through shallower gas chamber Cx 104, and when it passes through deeper gas chamber Cy 105, it is under exposed status;
gate plate set 107: a guide groove is placed in for placing common gate plate set GCF 121, GCR 122, at common gate plate set, there places drive spring 125 to press static pressure on common gate plate set, and assembles an adjusting cover 126 for adjusting up and down and press spring 125 by man power or dynamic mechanism in order to adjust the static pressure of spring pressed on common gate plate set.

(2) Structure of passive body possesses :

structure which assembles gas chamber set of series gas chamber Cl 104, Cy 105 is acted as motion body, gas chamber Cy 105 is deeper than gas chamber Cx 104, and at same side of two ends of gas chamber Cx 104, there respectively assemble intake transverse groove 104'; at same side of two ends of gas chamber Cy 105, there respectively assemble exhaust guide transverse groove 105', two kinds of guide transverse groove 104', 105' are at different sides.

53. Engine structure as claimed in Claim 52, wherein the placement of plug $\frac{1}{2}$ m fuel nozzle for ignition and combustion is that active body is motion body, passive body is the fixed rail, and it is placed when distance between two sets of gate plate GCF 121, GCR 122 is larger than length of gas chamber Cy 105 passes through the leading end of gate plate set before ignition and combustion, at least a set of plug 108 or fuel nozzle 109 used for positive rotary driving ignition and combustion, and at least a set of plug 108 or fuel nozzle 109 used for reverse rotary driving ignition and combustion are placed on the guide transverse groove 105' at two ends of passive body gas chamber Cy 105.

54. Engine structure as claimed in Claim 52, wherein the placement of plug or fuel nozzle for ignition and combustion is that active body is motion body, passive body is the fixed body, and it is placed when distance between two sets of gate plate GCF 121, GCR 122 is longer than length of gas chamber Cy 105 passes through the leading end of gate plate set before ignition and combustion, at least a set of plug 108 or fuel nozzle used for positive rotary driving ignition and combustion, and at least a set of plug 108 or fuel nozzle 109.used for reverse rotary driving ignition and combustion are placed in the concave structure 105" which is at two ends of gas chamber Cy 105 and can avoid to be interferred by common gate plate GCF 121 and GCR 122.

55. Engine structure as claimed in claim 52, wherein the placement of plug or fuel nozzle for ignition and combustion is that active body is motion body, passive body is the fixed body, and it is placed when distance between two sets of common gate plate GCF 121, GCR 122 is amaller than length of gas chamber Cy 105 passes through the leading end of gate plate set before ignition and combustion, at least a set of plug 108 or fuel nozzle 109 used for positive and reverse rotary driving common ignition and ocmbustion, are placed on the guide transverse groove 105' at two ends of passive body gas chamber Cy 105.

56. Engine structure as claimed in Claim 52, wherein the placement of plug or fuel nozzle for ignition and combustion is that active body is motion body, passive body is the fixed body, and it is placed when distance between two sets of common gate plate GCF 121, GCR. 122 is smaller than length of gas chamber Cy 105 passes through the leading end of gate plate set before ignition and combustion, at least a set of plug 108 or fuel nozzle 109 used for positive and reverse rotary driving common ignition and combustion, are placed in the concave structure 105" which is at two ends of gas chamber, and can avoid to be interferred by common gate plate GCF 121 and GCR 122.

57. Engine structure as claimed in Claim 39, wherein the placement of plug or fuel nozzle for ignition and combustion is that active body is the fixed body, passive body is motion body, and it is placed when distance between two sets of common gate plate GCF 121, GCR 122 is larger than length of gas chamber Cy 105 passes through the leading end of gate plate set before ignition and combustion, at least a set of plug 108 or fuel nozzle 109 used for positive and reverse rotary driving common ignition and combustion, for are placed at the position which guide transverse grooves 105' at two ends of gas chamber Cy 105 on passive body are coupled.

58. Engine structure as claimed in Claim 52, wherein the placement of plug or fuel nozzle for ignition and combustion is that active body is the fixed body, passive body is motion body, and it is placed when distance between two sets of common gate plate GCF 121, GCR 122 is longer than length of gas chamber Cy 105 passes through the leading end of gate plate set before ignition and combustion, at least a set of plug 108 or fuel nozzle 109 used for positive and reverse rotary driving common ignition and combustion are placed in the concave structure 105" which is at the lagging end of common gate plate set GCF 121. GCR 122, and can avoid to be interferred by passive body.

59. Engine structure as claimed in Claim 52, wherein the placement of plug or fuel nozzle for ignition and combustion is that active body is the fixed body, passive body is motion body, and it is placed when distance between two sets of common gate plate GCF 121, GCR 122 is smaller than length of gas chamber Cy 105 passes through the leading end of gate plate set before ignition and combustion, at least a set of plug 108 or fuel nozzle 109 used for positive and reverse rotary driving common ignition and combustion are placed at the position which guide transverse groove 105' at two ends of gas chamber Cy 105 on passive body are coupled.

60. Engine structure as claimed in Claim 52, wherein the placement of plug or fuel nozzle for ignition

103

and combustion is that active body is the fixed body, passive body is motion body, and it is placed when distance between two sets of common gate plate GCF 121, GCR 122 is smaller than length of gas chamber Cy 105 passes through the leading end of gate plate set before ignition and combustion at least a set of plug 108 or fuel nozzle 109 used for positive and reverse rotary driving common ignition and combustion are placed in the concave structure 105″ which is at the lagging end of common gate plate set GCF 121, GCR 122, and can avoid to be interferred by passive body.

61. Engine as claimed in Claim 52, wherein structure of intake and exhaust, if intake port 110′ and exhaust port 111′ are placed on the active body which is acted as motion body then :

at same side of two ends of pressure intake gas chamber Cx 104 on passive body, there assembles intake guide transverse groove 104′, at same side of two ends of explosive exhaust gas chamber Cx 104, there also assembles exhaust guide transverse groove 105′, two kinds of guide transverse groove are at different sides;

between the lagging end of positive rotary common gate plate set GCF 121 and lagging end of reverse rotary common gate plate set GCR 122 on active body, there extends and assembles a guide groove 112 which is at same side of guide transverse groove 104′ at two ends of gas chamber on passive body and is parallel to gas chamber Cx 104 with almost same arc length and lead to intake pipe;

between the leading end of positive rotary common gate plate set GCF 121 and the leading end of reverse rotary common gate plate set GCR 122, there extends and assembles guide groove 113 which is at the same side of guide transverse groove 105′ at two ends of gas chamber Cy 105 on passive body, and is parallel to gas chamber Cy 105 and has almost same length in order to lead to exhaust pipe.

62. Engine as claimed in Claim 52, wherein intake and exhaust, if intake port 110′ and exhaust port 111′ are placed at the passive body which is acted as fixed rail, then:

at the same side of two ends of gas chamber Cx 104, there is guide transverse groove 104′, at the same side of two ends of gas chamber Cy 105, there also has guide transverse groove 105′, two kinds of guide transverse groove are at different sides;

at the same side of guide transverse groove 105′ of gas chamber Cy 105 on passive body, and at the proper internal of end of guide transverse groove 105′, there assembles exhaust port 111′, or it assembles an exhaust groove 111 which is parallel to gas chamber Cy 105, and has same phase angle and almost same length as gas chamber Cy 105 in order to lead to exhaust pipe;

at the same side of guide transverse groove 104′ of gas chamber Cx 104, and at the proper interval of end of guide transverse groove 104′, there assembles intake port·110′, or it assembles intake groove 110 which is parallel to gas chamber Cx 104 and has same phase angle and almost same length as gas chamber Cy 105 in order to lead to intake pipe;

between the leading end of positive rotary common gate plate set GCF 121 and the leading end of reverse rotary common gate plate set GCR 122 on active body, there extends and assembles guide groove 113 which is at the same side of guide transverse groove 105′ of gas chamber Cy 105 on passive body, and is parallel to gas chamber Cy 105 and has almost same length, in operation, it is used to transmit guide transverse groove 105′, and exhaust groove 111 or hole 111′ of gas chamber Cy 105;

between the lagging end of positive rotary common gate plate set GCF 121 and the lagging end of reverse rotary common gate plate set GCR 122, there extends and assembles guide groove 112 which is at the same side of guide transverse groove 104′ of gas chamber Cx 104 on passive body, and is parallel to gas chamber Cx 104 and has almost same arc length in operation, it is used to guide through guide transverse 104′ and intake groove 110 or hole 110′ of gas chamber Cx 104.

63. Engine as claimed in Claim 52, wherein structure of intake and exhaust, if intake port 110′ and exhaust port 111′ are placed on the active body which is acted as fixed rail then :

at same side of two ends of pressure intake gas chamber Cx 104 on passive body, there assembles intake guide transverse groove 104′, at same side of two ends of explosive exhaust gas chamber Cx 104, there also assembles exhaust guide transverse groove 105′, two kinds of guide transverse groove are at different sides;

between the lagging end of positive rotary common gate plate set GCF 121 and lagging end of reverse rotary common gate plate set GCR 122 on active body, there extends and assembles a guide groove 112 which is at same side of guide transverse groove 104′ at two ends of gas chamber on passive body and is parallel to gas chamber Cx 104 with almost same arc length and leads to intake pipe;

between the leading end of positive rotary common gate plate set GCF 121 and the leading end of reverse rotary common gate plate set GCR 122, there extends and assembles guide groove 113 which is at the same side of guide transverse groove 105′ at two ends of gas chamber Cy 105 on passive body, and is parallel to gas chamber Cy 105 and has almost same length in order to lead to exhaust pipe.

64. Engine as claimed in Claim 52, wherein intake and exhaust structure, if intake port 110′ and exhaust port 111' are placed at passive body which is acted as motion body, then:

at the same side of two ends of gas chamber Cx 104, there is guide transverse groove 104', at the same side of two ends of gas chamber Cy 105, there also has guide transverse groove 105', two kinds of guide transverse groove are at different sides;

at the same side of guide transverse groove 105' of gas chamber Cy 105 on passive body, and at the proper interval of end of guide transverse groove 105', there assembles exhaust port 111', or it assembles an exhaust groove 111 which is parallel to gas chamber Cy 105, and has same phase angle and almost same length as gas chamber Cy 105 in order to lead to exhaust pipe;

at the same side of guide transverse groove 104' of gas chamber Cx 104, and at the proper interval of end of guide transverse groove 104',there assembles intake port 110', or it assembles intake groove 110 which is parallel to gas chamber Cx 104 and has same phase angle and almost same length as gas chamber Cy 105 in order to lead to intake pipe;

between the leading end of positive rotary common gate plate set GCF 121 and the leading end of reverse rotary common gate plate set GCR 122 on active body, there extends and assembles guide groove 113 which is at the same side of guide transverse groove 105' of gas chamber Cy 105 on passive body, and is parallel to gas chamber Cy 105 and has almost same length,in operation, it is used to transmit guide transverse groove 105', and exhaust groove 111 or hole 111' of gas chamber Cy 105;

between the lagging end of positive rotary common gate plate set GCF 121 and the lagging end of reverse rotary common gate plate set GCR 122, there extends and assembles guide groove 112 which is at the same side of guide transverse groove 104' of gas chamber Cx 104 on fixed guide rail and is parallel to gas chamber Cx 104 and has almost same arc length, in operation, it is used to guide through guide transverse groove 104' and intake groove 110 or hole 110' of gas chamber Cx 104.

65. Gas chamber as claimed in Claims 2, 3, 21, 39, 52, its characters are that: gas chamber Cx 104 is shallower, gas chamber Cy 105 is deeper, both of them have same lengths or different lengths, and shapes along motion direction are same, and closely contact gate plate set.

66. Engine as claimed in Claims 2, 3, 12, 21, 30, 39, 52, wherein the largest depth of explosive exhaust gas chamber Cy 105 can let gate plates GC or GCF and GCR slide down, and let transmission guide hole completely expose out, in order to guide high pressure gas of pressure-saved gas chamber in gate body into explosive exhaust gas chamber Cy 105.

67. Engine as claimed in Claims 2, 3, 12, 21, 30, 39, 52, wherein the largest depth of intake compressive gas chamber Cx 104 is used for common gate plates GCF and GCR or GC slides into and let one-way intake valve on GCF and GCR or GC completely face to gas of gas chamber Cx 104 which will be compressed, and compress gas and save gas in the pressure-saved gas chamber, and transmission guide hole still hides and seals in the gate plate sliding seat.

68. Engine as claimed in Claims 2, 3, 12, 21, 30, 39, 52, wherein guide transverse groove placed at the leading end of explosive exhaust gas chamber is used to place plug or fuel nozzle, the depth of crack which strides over section of gas chamber can keep transmission guide hole under the status of hiding into gate plate seat.

69. Engine as clained in Claim 1, possesses:

at least a set of intake compressive gas chamber set Cx, and at least a set of explosive exhaust gas chamber set Cy, both of them are the grooved type gas chambers in parallel each other, the direction of extension of grooved type gas chamber structure is parallel to the driving direction of motion body and constitutes passive body;

at least a set of intake compressive gate plate set Gx 1040 which couples with intake compressive gas chamber set Cx, and at least a set of explosive exhaust gate plate set Gy 1050 which couples with explosive exhaust gas chamber set Cy and constitutes active body;

at lagging end of gas chamber Cx 104 near side of Cy 105, there is a guide transverse groove;

at least a set of pressure-saved exchange gas chamber CZ 1060, its structural character is that: main chamber is semi-spherical shape and couples with gas chamber set Cy 105, and by a guide groove extends to the rail trace which couples with guide transverse groove 104' of gas chamber set Cx 104;

gate plate set Gx 1040 couples with gas chamber set Cx 104;

gate plate set Gy 1050 couples with gas chamber set Cy 105;

before ignition, gas chamber sets CZ 1060, Cx 104, Cy 105 can communicate, in order to transmit fuel gas, or firstly CZ 1060, Cx 104 communicate each other, and transmit fuel gas to CZ 1060, after Cz 1060 separates from Cx 104, then CZ 1060 communicates Cy 105 in order to transmit fuel gas to Cy 105;

ignition and combustion is executed after gas chamber set Cx 104 separates from gas chamber sets CZ 1060, Cy 105;

due to the selection of position of exhaust port, exhaust will keep high pressure fuel gas saved in CZ 1060 not to lead out, after CZ 1060 separates from Cy 105;

at leading end of gas chamber Cy 105 near side of gas chamber set Cx 104, there is a guide transverse groove 105′ which interlocks long grooved type CZ 1060, the groove length of gas chamber CZ 1060 can decide the working angle of separating from Cy 105.

70. Engine as claimed in Claim 69 is rotary type structure, and its main structures include:

active body with gate plate sets Gx 1040, Gy 1050 and exchange gas chamber GZ 1060 is the internally placed type fixed body or outer ring fixed body;

passive body with intake compressive gas chamber Cx 104 and explosive exhaust gas chamber Cy 105 is internal rotor or external rotor motion body.

71. Engine as claimed in Claim 69 is rotary type str structure, its main structures include:

active body with gate plate sets Gx 1040, Gy 1050 and exchange gas chamber CZ 1060 is internal rotor or external rotor motion body;

passive body with intake compressive gas chamber Cx 104 and explosive exhaust gas chamber Cy 105 is the internally placed type fixed body or outer ring fixed body.

72. Engine as climed in Claim 69 is linear type structure, its main structures include:

active body structure as claimed in Claim 69 which possesses gate plate seats 1074, 1075 and gate plate sets Gx 1040, Gy 1050 and exchange gas chamber CZ 1060 is the fixed rail;

passive body structure as claimed in Claim 69 which possesses gas chamber sets Cx 104, Cy 105 in parallel is motion body.

73. Linear type engine structure as claimed in Claim 69 possesses:

active body which possesses gate plate seats 1074, 1075 and gate plate sets Gx 1040, Gy 1050 and exchange gas chamber CZ 1060 is motion body;

passive body which possesses gas chamber set Cx 104, Cy 105 in parallel is the fixed rail.

74. Engine as claimed in Claims 70 to 73; wherein plug 108 or fuel nozzle 109 for ignition and combustion is placed at the exchange gas chamber CZ 1060 on active body.

75. Engine as claimed in Claims 70 to 73, wherein plug 108 or fuel nozzle 109 for ignition and combustion is placed in the concave chamber which is on active body and couples with guide transverse groove 105′ of gas chamber Cy 105 ingniting the working angle in motion.

76. Engine as claimed in Claims 70 to 73, wherein plug 108 or fuel nozzle 109 for ignition and combustion is placed in the guide transverse groove 105′ at leading end of gas chamber Cy 105 on passive body.

77. Engine as claimed in Claims 70 to 73 wherein plug 108 or fuel nozzle 109 for ignition and combustion is placed in the convave chamber which is at the leading end of gas chamber Cy 105 on passive body, and can avoid to be interferred by gate plate set Gy 1050.

78. Engine as claimed in Claims 70, 72, wherein active body is the fixed body, passive body is motion body, if intake port 110′ and exhaust port 111′ are placed at passive body, then:

Intake port 110′ is placed at the leading end of gas chamber Cx 104, and can avoid to be interferred by intake compressive gate plate set Gx 1040, and penetrate through gas chamber Cx 104 to guide through gas chamber Cx 104 and fuel gas transmission pipe;

Exhaust port 111′ is placed at the lagging end of gas chamber Cy 105, and can avoid to be interferred by explosive exhaust gate plate set Gy 1050, and penetrate through gas chamber Cy 105 to guide through gas chamber Cy 105 and waste gas transmission pipe.

79. Engine as claimed in Claims 70, 72, wherein active body is the fixed body, passive body is motion body, if intake port 110′ and exhaust port 111′ are placed at active body, then:

intake port 110′ is placed at the lagging end of gate plate set Gx 1040, and on the trace which couples with gas chamber Cx in motion;

exhaust port 111′ is placed at the leading end of gate plate set Gy 1050 and on the trace which couples with gas chamber Cy in motion.

80. Engine as claimed in Claims 71, 73, wherein active body is motion body, passive body is the fixed body, if intake port 110′ and exhaust port 111′ are placed at motion body, then:

at the lagging end of gate plate Gx 1040, there is an intake port 110′ which is opposite to gas chamber Cx 104 of fixed body, and guides through gas chamber Cx 104 and intake pipe in operation;

at the leading end of gate plate Gy 1050, there is an exhaust port 111′ which is opposite to gas chamber Cy 105 of fixed body and transmits guide gas of gas chamber Cx 105 to exhaust pipe in order to exhaust waste gas in Cy.

81. Engine as claimed in Claims 71, 73, wherein active body is motion body, passive body is the fixed body, if intake port 110′ and exhaust port 111′ are placed in the fixed body, then:

intake port 110′ is placed at the leading end of gas chamber Cx 104, and can avoid to be interferred by gate plate set Gx 1040, and penetrate through gas chamber Cx 104 in order to guide through gas chamber Cx 104 and fuel gas transmission pipe;

exhaust port 111' is placed at the lagging end of gas chamber Cy 105 and can avoid to be interferred by gate plate set Gy 1050, and penetrate through gas chamber Cy 105 in order to guide through gas chamber Cy 105 and waste gas transmission pipe.

82. Engine as claimed in Claim 1, wherein intake compressive gas chamber Cx 104 and explosive exhaust gas chamber Cy 105 are placed in different body, its main structures include:

active body which possesses explosive exhaust gate plate set Gy 1050 and intake compressive gas chamber Cx 104;

passive body which possesses intake compressive gate plate set Gx 1040 and explosive exhaust gas chamber Cy 105;

intake compressive gate plate Gx 1040 which extends out to stick closely against intake compressive gas chamber Cx 104 on active body;

expolosive exhaust gate plate Gy 1050 which extends out to stick closely against explosive exhaust gas chamber Cy 105 on passive body;

at the lagging end of intake compressive gas chamber Cx 104 on active body near side of gas chamber Cy 105, there is guide transverse groove 104" which turns back to leading end;

at explosive exhaust gas chamber Cy 105 on passive body, there extends guide transverse groove 105' forward to gas chamber Cx 104, and overlaps phase of guide transverse groove 104" and communicates each other to transmit fuel gas;

the beginning of transmitting fuel gas should be after gate plate set Gy 1050 slides into gas chamber Cy 105, and passes through guide transverse groove 105', and completes transmission before gate plate set Gx 1040 passes through guide transverse groove 104' or 104" of gas chamber set Cx 104;

in certain section of driving, guide transverse grooves 104" and 105' of gas chambers Cx 104 and Cy 105 can be covered by side of gate plate set Gx 1040;

time of ignition and combustion is after side of gate plate set Gx 1040 completely cover guide transverse 104" at leading end of gas chamber set Cx 104;

the separation of gas chamber set Cx 104 and gas chamber Cy 105 is before side of gate plate set Gx 1040 separates from guide transverse groove 104" of gas chamber set Cx 104.

83. Engine as claimed in Claim 82 is rotary type sturcture, its main structures include:

active body which possesses explosive exhaust gate plate set Gy 1050 and intake compressive gas chamber Cx 104 is the fixed body;

passive body which possesses intake compressive gate plate set Gx 1040 and explosive exhaust gas chamber Cy 1050 is motion body.

84. Engine as claimed in Claim 82 is rotary type structure, its main structures include:

active body which possesses explosive exhaust gate plate set Gy 1050 and intake compressive gas chamber Cx 104 is motion body;

passive body which possesses intake compressive gate plate set Gx 1040 and explosive exhaust gas chamber Cy 105 is the fixed body.

85. Engine as claimed in Claim 82 is linear type structure, its main structures include:

active body which possesses explosive exhaust gate plate set Gy 1050 and intake compressive gas chamber Cx 104 is the fixed rail;

passive body which possesses intake compressive gate plate set Gx 1040 and explosive exhaust gas chamber Cy 105 is motion body.

86. Engine as claimed in Claim 82 is linear type structure; its main structures include;

active body which possesses explosive exhaust gate plate set Gy 1050 and intake compressive gas chamber Cx 104 is motion body;

passive body which possesses intake compressive gate plate set Gx 1040 and explosive exhaust gas chamber Cy 105 is the fixed rail.

87. Engine as claimed in Claims 82 to 86, plug 108 or fuel nozzle 109 for ignition and combustion is placed in the concave structure 105" which is at the lagging end of gate plate set Gy 1050 of active body opposite to trace of gas chamber Cy 105 of rotor.

88. Engine as claimed in Claims 82 to 86, plug 108 or fuel nozzle 109 for ignition and combustion is placed in the concave structure 105" which is placed at the leading end of gas chamber set Cy 105 of passive body, and can avoid to be interferred by gate plate set Gy 1050.

89. Engine as claimedin Claims 82 to 86, wherein structure of intake and exhaust, if intake port 110' and exhaust port 111' are placed at active body, then:

intake port 110' is placed at the leading end of gas chamber Cx 104 and can avoid to be interferred by gate

plate Gy 1040 in order to guide through gas chamber Cx 104 and intake pipe;

exhaust port 111′ is placed at the leading end of gate plate set Gy 1050 of active body, and couples with gas chamber set Cy 105 on passive body, in order to guide through gas chamber Cy 105 and exhaust pipe.

90. Engine as claimed in Claims 82 to 86, wherein its structural method of intake and exhaust, if intake port 110′ and exhaust port 111′ are placed at passive body, and intake port 110′ is placed at the lagging end of gate plate set Gx 1040, and couples with trace of gas chamber Cx 104; exhaust port 111′ is placed at the lagging end of gas chamber Cy 105, and can avoid to be interferred by gate plate Gy 1050, and can guide through gas chamber Cy 105 to exhaust waste gas.

91. Engine as claimed in Claims 82 to 86, its fuel gas exchange structure includes:

it is constituted by guide transverse groove 104′ which is placed at the lagging end of Cx 104 near side of gas chamber set Cy 105, and guide transverse groove 105′ which is placed at leading end of Cy 105 near side of gas chamber set Cx 104;

lengths of two sets of guide transverse groove 104′ and 105′ are in the range of exchange gas working angle in driving and can overlap and communicate each other in order to transmit fuel gas:

working angle of exchange gas is set by the width of two sets of guide transverse groove 104′ and 105′.

92. Engine as claimed in Claims 82 to 86, wherein structure of exchange fuel gas includes:

structure of guide transverse which is placed at gas chamber Cy 105 near side of gas chamber Cx 104 and turns back to the leading end;

guide transverse groove 104′ which is placed at the lagging end of gas chamber set Cx 104 in driving, near side of gas chamber set Cy 105 and overlaps and communicates each other in order to transmit fuel gas.

93. Engine as claimed in Claims 82 to 86, wherein at the lagging trace of the turning guide transverse groove of gas chamber set Cx 104 of active body, it further assembles a pressure-saved gas chamber CP 1060′, and interlocks guide transverse groove 105′ of gas chamber set Cy 105 after ignition and combustion of gas chamber Cy 105, and separates from guide transverse groove 105′ before exhaust of said cycle.

94. Engine as claimed in Claim 1, wherein structure of exchange fuel gas through guide hole of gate plate and guide passage of active body, mainly includes:

at least a set of intake compressive gas chamber set Cx, and at least a set of explosive exhaust gas chamber set Cy, both of them are the grooved type gas chambers, are in parallel each other, the direction of extension of grooved type gas chamber is parallel to the driving direction of motion body and constitutes passive body;

at least a set of intake compressive gate plate set GTx 1045 which possesses guide hole and couples with intake compressive gas chamber set Cx, and at least a set of explosive exhaust gate plate set GTy 1055 which possesses guide hole and couples with explosive exhaust gas chamber set Cy to constitute active body;

intake compressive gate GTx 1045 faces to surface of compression, and possesses at least an intake port 1020, which communicates to exchange side near gas chamber set Cy 105 from inside of gate plate;

explosive exhaust gate GTy 1055 faces to surface of explosion, and possesses at least a guide hole 1030, which communicates to exchange side near gas chamber set Cy 104 from inside of gate plate;

two guide holes 1020, 1030 communicates each other through guide passage 1010 of active body when gate plate slides up and down to the height of exchange gas;

height of exchange gas is between the highest points or between the highest point and the lowest point of gate plate sets GTx 1045 and GTy 1055;

guide hole 1030 of FTy can further be slightly large chamber type for saving pressure and the return combustion of waste gas, and further places a hole groove 1000 at guide passage 1010 of enging body of

of GTy 1055, there is guide passage 1010;

due to the selection of depth variation of gas chambers Cx, Cy in stroke, it can change the inter-locked working angle of guide passage 1010 and guide holes 1020, 1030 after ignition and combustion before blockade in order to save high pressure waste gas.

95. Fuel gas transmission structure of engine as claimed in Claim 94 possess:

gate plate GTy 1055 with guide hole 1030;

at the lagging end of gas chamber set Cx 104 near side of GTy 1055, there possesses a transverse guide groove 104′;

at active body, there is guide passage 1010 which communicates to the position coupling with trace of guide transverse groove 104′ of gas chamber set Cx 104 from side of gate plate seat 1075 of GTy 1055 near gas chamber set Cx 104 matching with exchange gas height of guide hole 1030 of GTy 1055.

96. Engine as claimed in Claim 95, it is characterized in that:

gas chamber set Cx 104 of passive body couples with gate plate set Gx 1040 of active body;

gas chamber set Cy 105 of passive body couples with gate plate set GTy 1055 of active body;

each dynamic unit is that explosive exhaust structure which a set of gate plate set GTy 1055 couples at least a set of gas chamber set Cy 105, and a set of gate plate set Gx 1040 couples with at least a set of gas chamber set Cx 104 in parallel;

at the leading end of gas chamber set Cx 104 near side of gas chamber set Cx 104, there is guide transverse groove 104';

gas chamber set possesses gate plate set GTy 1055, gate plate set GTy 1055 possesses guide hole 1030;

between gate plate set Gx 1040 and gate plate seat 1075, there is guide passage 1010 which communicates gate plate seat 1075 near side of gas chamber Cy 105, and couples with guide transverse groove 104' of gas chamber Cx near side of gas chamber Cx 104;

time of ignition and combustion is after gate plate set GTy 1055 blockades guide passage 1010, or after guide passage 1010 separates from guide transverse groove 104';

due to the selection of separate working angle and ignition and combustion of working angle of guide passage 1010 and gate plate seat 1075 and selection of separating gas chamber Cy 105, it can set function of saving high pressure waste gas.

97. Fuel transmission structures of engine as claimed in Claim 94 are:

gate plate GTx 1045 with guide hole 1020;

at leading end of gas chamber set Cy 105 near side of gas chamber set Cx 104, there is guide transverse groove 104';

active body possesses guide passage 1010 which communicates to the position coupling with trace of guide transverse 105' of gas chamber set Cy 105 from side of gate plate seat 1074 of GTx 1045 near gas chamber set Cy 105 matching with height of exchange fuel gas of guide hole 1020 of GTx 1045.

98. Structure of engine as claimed in Claim 97, it is characterized in that:

gas chamber set Cx 104 of passive body couples with gate plate set GTx 1045 of active body;

gas chamber set Cy 105 of passive body couples with gate plate set Gy 1050 of active body;

each dynamic unit is that explosive exhaust structure which a set of gate plate set Gy 1050 couples at least a set of gas chamber set Cy 105, and a set of gate plate set GTx 1045 couples with at least a set of gas chamber set Cx 104 inpparallel;

at the leading end of gas chamber set Cy 105 near side of gas chamber set Cx 104, there is guide transverse groove 105';

gas chamber set Cx 104 possesses gate plate set GTx 1045, gate plate set GTx 1045 possesses guide hole 1020;

between the lagging end of gate plate set Gy 1050 and gate plate seat 1074, there is guide passage 1010 which communicates gate plate seat 1074 near side of gate plate seat 1074, and couples with guide transverse groove 105' of gas chamber Cy near side of gate plate set Gy 1050;

time of ignition and combustion is after gate plate set GRx 1045 completely blockade guide passage 1010;

due to the selection of separate working angle and ignition combustion of working angle of guide passage 1010 and guide transverse groove 105', and selection of separating gas chamber Cy 105, it can set function of saving high pressure waste gas.

99. Engine as claimed in Claims 94 to 98 is rotary type structure, its main structures include:

active body with gate plate set is the externally placed type fixed body or outer ring fixed body;

passive body with intake compressive gas chamber Cx 104 and explosive exhaust gas chamber Cy 105 is internal rotor or external rotor motion body.

100. Engine as claimed in Claims 94 to 98 is rotary type structure, its main structures include:

active body with gate plate set is internal rotor or external rotor motion body;

passive body with intake compressive gas chamber Cx 104 and explosive exhaust gas chamber Cy 105 is the externally placed type fixed body or outer-ring fixed body.

101. Engine as claimed in Claims 94 to 98 is linear type structure, its main structures include:

active body with gate plate set is the fixed rail;

passive body with gas chamber Cx 104 in parallel, gas chamber set Cy 105 is motion body.

102. Linear type engine structure as claimed in Claims 94 to 98 possesses:

active body with gate plate set is motion body;

passive body with gas chamber Cx 104 in parallel, gas chamber set Cy 105 is the fixed rail.

103. Engine as claimed in Claims 94 to 98, wherein plug 108 or fuel nozzle 109 for ignition and combustion is placed at the guide passage 1010 of active body.

104. Engine as claimed in Claims 94 to 98, wherein plug 108 or fuel nozzle 109 for ignition and combustion is placed in the convave chamber which is on active body and couples with gas chamber Cy 105 igniting the working angle in motion.

105. Engine as claimed in Claims 94 to 98, wherein plug 108 or fuel nozzle 109 for ignition and combustion is placed in the guide transverse groove 105' at leading end of gas chamber Cy 105 on passive body.

106. Engine as claimed in Claims 94 to 98, wherein plug 108 or fuel nozzle 109 for ignition and combustion is placed in the concave chamber which is at the leading end of gas chamber Cy 105 of passive body, and can avoid to be interferred by gate plate set Gy 1050.

107. Engine as claimed in Claims 94 to 98, wherein structural method of intake and exhaust is as same as claimed in Claims 77 to 81.

108. Exchange gas chamber CZ 1060 as claimed in Claim 69 is placed at active body, it is characterized in that:
it is placed obliquely between intake compressive gate Gx 1040 and explosive exhaust gate Gy 1050;
it is a rectangular groove which is abliquely placed and stridden between gas chamber sets Cx 104, Cy 105.

109. Exchange gas chamber CZ 1060 as claimed in Claim 69 possesses the following characters:
a spherical main chamber is placed on the rotary trace of explosive, and obliquely strides a smaller guide groove to the direction of rotary trace of intake compressive gas chamber Cx 104;
direction of extension of inclined guide groove extends to the lagging or leading direction in certain obliquity, or extends in the turning type, and can interlock gas chamber set Cx 104 or its guide transverse groove 104' in operation.

110. Exchange gas chamber CZ 1060 as claimed in Claim 69 is outer duct type exchange gas chamber structure, it is characterized in that:
it connects active body by externally added duct 160 in order to guide through gas chamber set Cx 104, Cy 105 or hole 161 of guide transverse groove 104', 105'.

111. Exchange gas chamber CZ 1060 as claimed in claim 69 possesses guide transverse groove, it is characterized in that:
at the lagging end of gas chamber set Cx 104 of same working cycle on passive body and the near side of leading end of Cy 105, there are guide transverse grooves 104' and 105';
exchange gas chamber CZ 1060 is placed between Cx 104, Cy 105, and its width indirectly communicates gas chambers Cx 104, Cy 105;
through interlocking fuide transverse grooves 104' and 105', two guide transverse grooves 104' and 105' are communicated to transmit fuel gas;
before exhaust, the overlapping area of guide transverse groove 105' and exchange gas chamber CZ 1060 can have function of saving pressure.

112. Guide transverse groove as claimed in Claim 111, it is characterized in that:
at the lagging end of gas chamber set Cx 104 near side of Cy 105, there is guide transverse groove 104' which can transmit fuel gas;
in motion, a section of working angle couples with trace of gas chamber Cy 105 and guide transverse groove 104' and will not overlap and communicate exchange gas chamber 1060 which directly couples with gas chamber set Cx 104.

113. Exchange gas chamber guide groove or guide transverse groove as claimed in Claim 69 possesses turbulent flow structure of turbulent flow column, barrier, hole granule, curved passage, it is characterized in that :
at the fuel gas passage of exchange gas chamber or guide transverse groove, there assembles turbulent flow structure of column 1061, or barrier 1062, or hole 1063, or granule 1064, or curved passage 1065, or each set of tiny pipe 1066.

114. Exchange gas chamber structure of engine as claimed in Claim 69 includes independent pressure-saved gas chamber CP which is placed at the lagging end outside gas chamber Cy, it is characterized in that:
at trace of gas chamber set Cy 105 of passive body not near side of gas chamber set Cx 104, there is guide transverse groove 105';
at the active body which is opposite and couples with guide transverse groove 105', there is independent pressure-saved gas chamber CP 1060';
exchange gas chamber CZ 1060 only communicates gas chambers Cx 104, Cy 105 when it exchanges fuel gas;
before explosion, CZ 1060 firstly separates from gas chamber Cy 105, and after explosion, CP 1060 communicates guide transverse groove 105′ of gas chamber Cy 105;

after CP 1060′ separates from guide transverse groove 105′, Cy 105 starts to exhaust.

115. Further structure of the structure as claimed in Claim 114 is:

at the lagging end of guide transverse groove 105′, there is an auxiliary pressure-saved chamber CPS 1060″;

before ignition and combustion, the instance of communicating CPS 1060″ and CP 1060′ and guide transverse groove, CP 1060′ and CPS 1060″ release high pressure waste gas of saved in the last cycle;

CPS 1060″ and CP 1060′ separate from guide transverse groove 105′ of gas chamber set Cy 105 before exhaust of said cycle.

116. Exchange gas chamber structure as claimed in Claim 69 includes independent pressure-saved gas chamber at lagging end of exchange gas chamber, its constitutive character is:

at lagging end of gas chamber Cx 104, the near side of leading end of Cy 105, there are guide transverse grooves 104′ and 105′;

exchange gas chamber CZ 1060 and pressure-saved gas chamber CP 1060′ are on the same trace, exchange gas chamber CZ 1060 is at the leading,CP 1060′ is at the lagging, both of them are placed in the middle of trace of gas chambers Cx 104, Cy 105, and properly communicates gas chambers Cx 104, Cy 105 by guide transverse grooves 104′ and 105′ only;

CP 1060′ is between the driving trace of intake compressive gas chamber Cx 104 and explosive exhaust gas chamber Cy 105, and is placed at lagging end of exchange gas chamber 1060;

method of exchanging gas is to push and press fuel gas of gas chamber Cx 104 by gate plate Gx 1040, and guide and exchange gas when guide transverse grooves 104′, 105′ of gas chamber sets Cx 104 and Cy 105 overlap exchange gas chamber CZ 1060;

before igniting fuel gas of gas chamber Cy 105, independent pressure-saved gas chamber CP 1060′ overlaps guide transverse groove 105′ of gas chamber set Cy 105;

after explosion and before exhaust, it slides away from guide transverse groove of gas chamber set Cy 105, in order to save high pressure fuel gas in gas chamber CP 1060′.

117. Exchange gas chamber as claimed in claim 69 possesses function of leaking pressure, it is characterized in that:

at structure of exchange gas chamber CZ 1060 or pressure-saved gas chamber CP 1060′ or auxiliary pressure-saved chamber 1060″, there is a hole 152 for assembling or screwing the pressure relief valve 150;

the critical pressure of certain pressure relief valve 150 can be adjusted.

118. Exchange gas chamber as claimed in Claim 69, besides, it is directly formed by coupling engine body, also it can be independent plug type structure, it is characterized in that:

it is telescoped or screwed tightly on the active body which possesses gate plate set Gy 1050;

independent plug type exchange gas chamber structure can place plug 108 or fuel nozzle 109 or both of them;

independent plug type exchange gas chamber structure can be placed on the above-mentioned active body which can be used as fixed body or motion body;

according to the requirement, there assembles pressure relief valve 150 and the adjusting plug 151;

adjusting plug 151 is placed in the screw hole or grooved type structure 152 of active body by screw or groove, and it is locked and fixed on the active body by fixing screw nut, screw, or retaining ring or pin, and further it can change volume of exchange gas chamber by rotation or sliding adjustment and lock and fixation.

119. Exchange gas chamber CZ 1060 as claimed in Claim 69, wherein the time of ignition of rotary or linear type engine is after exchange gas chamber CZ 1060 slides away from gas chamber Cx 104, and after CZ 1060 communicates explosive exhaust gas chamber Cy 105; before exhaust, firstly gas chamber Cy 105 separates from exchange gas chamber CZ 1060 in order to save high pressure fuel gas in exchange gas chamber Cz 1060.

120. Structure as claimed in Claims 1, 2, 3, 12, 30, 39, 52, 69, 82, 94, its further character is the twice help combustion structure of internal combustion engine with gate plate set, its constitution is that through multi-section or multi-row gas chamber Cx 104 or multi-set intake compressive gate plate set Gx 1040 makes the second time of input help combustion fresh high pressure air on single set Cy 105 at different working angle, in order to let combustion more complete.

121. Twice help combustion structure as claimed in Claim 120, wherein gas chambers Cx, Cy are in series in the save body and possesses single-set gas chamber Cx, multi-set gate plate Gx, its structural character is:

it possesses gate plate set GC 106 which has save driving trace in series each other, and gate plate set GP

1046 for twice intake;

each dynamic cycle is constituted by a set of gas chamber set Cx 104 and Cy 105;

time of help combustion can be set by the difference of working angle of gate plate set GC 106 and GP 1046;

it possesses gate plate set GP 1046 with penetration hole, at the surface near the coupling and contacting end of gas chamber facing to motion body, there is one-way intake valve 101, in the gate body, there possesses pressure-saved chamber 102, at far distance, there is penetrating guide hole 1033 having the leading end and lagging end which penetrate through gate plate set GP 1046;

gas chamber set Cx 104 is shallower, and when gate plate sets GC 106 and GP 1046 slide into, one-way intake valve can expose out to face to gas which will be compressed, both of peretrating guide hole 1033 of GP 1046 and guide hole 103 of gate plate set GC hide into gate plate seat;

gas chamber set Cy is deeper or leading section is deeper, gate plate sets GC 106 and GP 1046 slide into deeper section, guide hole 103 of gate plate set GC 106 and the penetrating guide hole 1033 of GP 1046 are under the status of exposing out of gas chamber;

at the leading end of gas chamber set Cy, there is a ventilative crack in order to avoid causing resistace by pressure difference of two ends of gate plate for the instace of sliding gate plate set into, before releasing gas of pressure-saved chamber 103, ventilative crack is in front of working angle for releasing gas of pressure-saved chamber.

122. Engine as claimed in Claim 121, if twice help combustion structure in which active body is the fixed body, gas chambers Cx, Cy are in series in the same body, and it possess single-set gas chamber Cx, and multi-set gate plate Gx, its main character is as follows:

structural relation between active body and passive body is that active body is the fixed body; passive body is motion body;

relation between gas chamber sets Cx 104 and Cy 105 is that gas chamber set Cx is placed at passive body; gas chamber set Cy is placed at passive body; gas chamber set Cx and Cy are placed in series;

character of gate plate set is that common gate plate GC 106 is in front, and gate plate GP 1046 with penetration hole is in rear;

intake compressive structure having function of twice help combustion is to assemble multi-set gate plate set GC 106, GP 1046, and possesses independent or common intake port 110′;

method of transmitting fuel gas from gas chamber set Cx 104 to gas chamber set Cy 105 is to transmit fuel gas by common gate plate sets GC 106 and GP 1046 which possess pressure-saved gas chamber 102 and low position intake valve 101, high position output guide hole 103.

123. Inginition combustion method and device of engine as claimed in Claim 122 include plug to ignite mixed gas or fuel nozzle to inject fuel which mixes and ignites high pressure high temperature air, or ignite fresh fuel by the burning high temperature fuel.

124. Position of placing ignition combustion device as claimed in Claim 123 is to be placed in the concave structure which is at the lagging end of gate plate set GC 106 of active body, and can couple with gas chamber Cy, and avoid to be interferred by passive body.

125. Ignition device as claimed in Claim 123 is placed in the concave chamber which is at the leading end of gas chamber set Cy 105 of passive body, and can avoid to be interferred by gate plate GP 1046 or gate plate GC 106.

126. Structure of engine as claimed in Claim 122, wherein each independent intake port 110′ is respectively placed at side of each gate plate set GC 106 and GP 1046 on active body to couple with intake guide transverse groove 104′ of gas chamber set Cx 104.

127. Structure of engine as claimed in Claim 122, wherein exhaust port 111′ is placed at side of leading end of gate plate set GC 106 of passive body to couple with exhaust guide transverse groove 105′ of gas chamber set Cy 105.

128. Structure of engine as claimed in Claim 122, wherein exhaust port 111′ is respectively placed in the hole structure which is at the lagging end of each gas chamber set Cy 105 on passive body, and can avoid to be interferred by gate plate set GC 106, and transmit fuel gas through transmission pipe which couples with exhaust port 111′ on motion body.

129. Exhaust port as claimed in Claim 122 is respectively placed in the grooved structure which is at the lagging end of each gas chamber set Cy 105 on passive body, and can avoid to be interferred by gate plate set GC 106, and transmit fuel gas through transmission pipe which couples with exhaust groove 111 on motion body.

130. Engine as claimed in Claim 121, wherein twice help combustion structure in which active body is the fixed body, gas chambers Cx, Cy are in series in the same body, and it possesses single-set gas chamber Cx, multi-set gate plate Gx, and its main characters are as follows:

EP 0 397 996 A2

active body is the fixed body, passive body is motion body;

at least a set of gas chambers Cx and Cy which are in series in the same body;

intake compressive structure with twice help combustion function which places multi-set gate plate sets GC 106, GP 1046 on single-set gas chamber set Cx 104 and possesses common intake port 110′.

131. Engine as claimed in Claim 130, wherein common intake port 110′ is placed at side of lagging end of gate plate set GC 106 on active body, and couples with intake guide transverse groove of gas chamber set Cx.

132. Engine as claimed in Claim 130, wherein common intake port 110′ is placed in the hole structure which is at the leading end of gas chamber Cx 104 of passive body, and can avoid to be interferred by gate plate set GC 106, and transmit fuel gas through transmission pipe which couples with intake port 110′ on motion body.

133. Engine as claimed in Claim 130, wherein common intake port is placed in the grooved type structure which is at the leading end of gas chamber Cx 104 on passive body, and can avoid to be interferred by gate plate sets GC 106, GP 1046, and transmit fuel gas through transmission pipe which couples intake groove 110 on motion body.

134. Engine as claimed in Claim 121 wherein twice help combustion structure in which active body is motion body, gas chambers Cx, Cy are in series in the same body, and it possesses single-set gas chamber Cx, multi-set gate plate Gx, the main characters are as follows:

Structural relation between active body and passive body is that active body is motion body; passive body is the fixed body;

relation between gas chamber sets Cx 104 and Cy 105 is that gas chamber set Cx is placed at passive body; gas chamber set Cy is placed at passive body, gas chamber sets Cx and Cy are placed in series;

character of gate plate set is that common gate plate GC 106 is in front, gate plate GS 1048 with penetration hole is in rear;

intake compressive structure with twice help combustion function is to place multi-set gate plate sets GC 106, GP 1046 on single-set gas chamber set Cx 104 and possesses common intake port 110′;

method of transmit fuel gas from gas chamber set Cx 104′ to gas chamber set Cy 105 is to transmit fuel gas by common gate plate sets GC 106 and GP 1046 which possesses pressure-saved gas chamber 102 and low position intake valve 101, high position output guide hole 103.

135. Ignition combustion method and device of engine as claimed in claim 134 includes plug to ignite mixed gas, or fuel nozzle to inject fuel and mix and ignite high pressure high temperature air, or ignite fresh fuel by the burning high temperature fuel.

136. Position of placing ignition combustion device as claimed in Claim 135 is to be placed in the concave structure which is at the lagging end of gate plate set GC 106 of active body, and can couple with gas chamber Cy, and avoid to be interferred by passive body.

137. Ignition device as claimed in Claim 135 is placed in the concave chamber which is at the leading end of gas chamber set Cy 105 of passive body, and can avoid to be interferred by gate plate GP 1046 or gate plate GC 106.

138. Structure of engine as claimed in Claim 134, wherein each independent intake port 110′ is placed in the hole structure or guide transverse groove which is at the leading end of gas chamber set Cx 104 on passive body, and can avoid to be interferred by gate plate set GC 106.

139. Structure of engine as claimed in Claim 134, wherein each independent intake port 110′ is placed at side of lagging end of gate plate set GC 106 on active body, and couples with intake guide transverse groove of gas chamber set Cx.

140. Engine as claimed in Claim 134, wherein exhaust port 111′ is placed in the hole structure which is at the lagging end of gas chamber set Cy 105, and can avoid to be interferred by gate plate set GC 106.

141. Engine as claimed in Claim 134, wherein exhaust port 111′ is respectively placed at side of leading end of each gate plate set GC 106 of active body to couple with exhaust guide transverse groove 105′ of gas chamber set Cy 105, and transmit fuel gas through transmission pipe which couples with exhaust port 111′ on motion body.

142. Engine as claimed in Claim 120, if twice help combustion structure in which gas chambers Cx. Cy are in series in the same body and it possesses multi-set gas chamber Cx single-set gate plate Gx, it is characterized in that:

structure with gate plate set GTx 1045 is active body;

intake compressive gas chamber set with two sections of gas chamber set Cx 104 connects a set of explosive exhaust gas chamber set Cy 105 in series is acted as passive body;

point of exchange gas is the position which gate plate set GTx 1045 between the leading gas chamber set and the lagging gas chamber set couples and communicates with transverse guide hole 1010 of active

113

body;

the largest length from the ignition combustion point of gas chamber set Cy 105 to the lagging end is length of 120° working angle, the largest length of the leading gas chamber set Cx 104 is 120° working angle, the lagging set of gas chamber set Cx 104 is just after the leading set, the gradually raised surface of the lagging end let gate plate set GTx 1045 communicate the couple with transverse guide hole 1010 of active body again, and the position of coupling and communicating is the point of help combustion, its length is similar to the corresponding length from ignition combustion to the twice help combustion working angle;

each dynamic unit includes a set of gas chamber set Cy 105, and intake compressive gas chamber set which is consittuted by a set of leading gas chamber set and a set of lagging gas chamber, and three sets of gate plate set GTx 1045, each dynamic unit is placed at interval of 120° working angle.

guide groove hole which is placed at active body and couples with transverse guide hole 1020 of GTx 1045 extends forward to the leading end of GTx 1045 and at the position which can couple with guide transverse groove 105$'$ of gas chamber set Cy 105;

ignition point, exchange gas point, and partition point between the leading gas chamber set Cx, each of them is distanced by 120° working angle.

143. Engine as claimed in Claim 142, wherein twice help combustion structure in which active body is the fixed body, gas chambers Cx, Cy are in series in the same body, and it possesses gas chamber Cx, single-set gate plate Gx, its main character are as follows:

structural relation between active body and passive body is that active body is the fixed body; passive body is motion body;

relation between gas chamber set Cx 104 and Cy 105 is that gas chamber set Cx is placed at passive body; gas chamber set Cy is placed at passive body; gas chamber sets Cx and Cy are placed in series;

character of gate plate set is to possess transverse guide hole gate GTx 1045, at interval of 120° working angle, there places a set;

intake compressive structure with twice help combustion function is to assemble independent intake port 110$'$ on the multi-set gas chamber set Cx 104 in series;

method of transmitting fuel gas from gas chamber set Cx 104 to gas chamber set Cy 105 is to transmit fuel gas by gate plate set GTx 1045 with guide hole 1020, transverse guide passage 1010 on active body and guide transverse groove 105$'$ of gas chamber set Cy 105.

144. Ignition combustion method and device of engine as claimed in Claim 144 includes plug to ignite mixed gas, or fuel nozzle to inject fuel and mix and ignite high pressure high temperature air, or ignite fresh fuel by the burning high temperature fuel.

145. Position of placing ignition combustion device as claimed in Claim 144 is to be placed in the concave chamber structure which is at the lagging end of gate plate set GTx 1045 of active body, and can avoid to be interferred by passive body.

146. Position of placing ignition combustion device as claimed in Claim 144 is to be placed in the guide groove hole 1010 of active body.

147. Ignition device as claimed in Claim 144 is placed in the concave chamber which is at the leading end of gas chamber set Cy 105 of passive body, and can avoid to be interferred by gate plate GTx 1045.

148. Engine as claimed in Claim 143, wherein each independent intake port 110$'$ is respectively placed at the lagging end of each gate plate set GTx 1045 on active body and coupled with intake guide transverse groove 104$'$ of gas chamber Cx 104.

149. Engine as claimed in Claim 143, wherein each independent intake port 110$'$ is respectively placed in the hole structure which is at the leading end of each gas chamber Cx 104 on passive body, and can avoid to be interferred by gate plate set GTx 1045 and transmit fuel gas through transmission pipe which couples with intake port on motion body.

150. Engine as claimed in Claim 143, wherein exhaust port 111$'$ is placed at side of leading end of gate plate set GTx 1045 on active body, and couples with exhaust guide transverse groove 150$'$ of gas chamber set Cy 105.

151. Engine as claimed in Claim 143, wherein exhaust port 111$'$ is respectively placed in the hole structure which is at the lagging end of each gas chamber set Cy 105 on passive body, and can avoid to be interferred by gate plate set GTx 1045.

152. Engine as claimed in Claim 151, wherein wxhaust port is respectively placed in the grooved structure which is at the lagging end of each gas chamber set Cy 105 on passive body, and can avoid to be interferred by gate plate set GTx 1045.

153. Engine as claimed in Claim 142, wherein twice help combustion structure in which active body is motion body, gas chambers Cx, Cy are in series in the same body, and it possesses multi-set gas chamber Cx, single-set gate plate Gx the main characters are as follows:

structural relation between active body and passive body is that active body is motion body; passive body is the fixed body;

relation between gas chamber set Cx 104 and Cy 105 is that gas chamber set Cx is placed at passive body; gas chamber set Cy is placed at passive body; gas chamber sets Cx and Cy are placed in series;

character of gate plate set is to possess transverse guide hole gate GTx 1045, at interval of 120° working angle, there places a set;

intake compressive structure with twice help combustion function is to assemble independent intake port 110' on the multi-set gas chamber set Cx 104 in series;

method of transmitting fuel gas from gas chamber set Cx 104 to gas chamber set Cy 105 is to transmit fuel gas by gate plate set GTx 1045 with guide hole 1020, transverse gruide passage 1010 on active body and guide transverse groove 105' of gas chamber set Cy 105.

154. Ignition combustion method and device of engine as claimed in Claim 153 includes plug to ignite mixed gas, or fuel nozzle to inject fuel and mix and ignite high pressure high temperature air, or ignite fresh fuel by the burning high temperature fuel.

155. Position of placing ignition combustion device as claimed in Claim 154 is to be placed in the concave structure which is at the lagging end of gate plate set GTx 1045 of active body, and can avoid to be interferred by passive body.

156. Position of placing ignition combustion device as claimed in Claim 154 is to be placed in guide groove hole 1010 of active body; or placed in the concave chamber which is at the leading end of gas chamber set Cy 105 of passive body, and can avoid to be interferred by gate plate GTx 1045.

157. Structure of engine as claimed in Claim 153, wherein each independent intake port is respectively placed in the hole structure which is at the leading end of each gas chamber set Cx 104 on passive body, and can avoid to be interferred by gate plate set GTx 1045.

158. Engine as claimed in Claim 153, whreein each independent intake port is respectively placed at side of lagging end of each gate plate set GTx 1045 on active body, and couples with intake guide transverse groove 104' at leading end of gas chamber set Cx 104.

159. Engine as claimed in Claim 153, wherein exhaust port 111' is placed in the hole type structure which is at the lagging end of gas chamber set Cy 105 on passive body, and can avoid to be interferred by GTx 1045.

160. Engine as claimed in Claim 153, wherein exhaust port 111' is respectively placed at side of leading end of each gate plate set GTx 1045 on active body to couple with exhaust guide transverse groove 105' at lagging end of gas chamber set Cy 105, and transmit fuel gas through transmission pipe which couples with exhaust port 111' on motion body.

161. Engine as claimed in Claim 120, if twice help combustion structure in which gas chambers Cx, Cy are in series in the same body and it possesses single-set gas chamber Cx multi-set gate plate set Gx, it is characterized in that:

structure with gate plate sets Gx 1040, Gy 1050 and two sets of exchange gas chamber CZ 1060 is active body;

structure with gas chamber sets Cx 104, Cy 105 is passive body;

intake compressive gas chamber set Gx 1040 is constituted by the leading set and the lagging end and couples with at least of gas chamber set Cx 104;

gate plate set Gy 1050 at least couples with a set of gas chamber Cy;

at the lagging end of gas chamber set Cx 104 near side of gas chamber set Cy 105, there is guide transverse groove 104';

at the leading end of gas chamber set Cy 105 near side of gas chamber set Cx 104, there is guide transverse groove 105';

each dynamic unit is constituted by a set of gas chamber Cx 104 which matches two sets of gate plate set Gx 1040, and a set of gas chamber set Cy 105 which matches a set of gate plate set Gy 1050, both of them are in series each other;

two sets of exchange gas chamber is placed between gas chambers Cx 104 and Cy 105, it only interlaces guide transverse groove 104' and 105' and transmist fuel gas in driving, its lagging set is assembled at the lagging end of the lagging gate plate set Cy;

time of twice help combustion is after fuel gas of gas chamber set Cy 105 is ignited;

when it is twice help combustion, the lagging set exchange gas chamber CZ 1060 and guide groove 104' of gas chamber set Cx 104 interlace and communicate firstly, and then interlace guide transverse groove 105' of gas chamber set Cy 105, the lagging set exchange gas chamber CZ 1060 interlace and communicates with guide transverse grooves 104′, 105′ respectively and differently in order to prevent fuel gas flowing to gas chamber set Cx 104;

the lagging set exchange gas chamber CZ 1060 separates from guide transverse groove 105′ of exchange gas chamber Cy before exhaust, to save high pressure fuel gas for storing pressure and returning combustion.

162. Engine as claimed in Claim 161, wherein twice help combustion structure in which active body is the fixed body, gas chambers Cx, Cy are in series in the same body, and it possesses single-set gas chamber Cx, multi-set gate plate Gx its main characters are as follows:

structural relation between active body and passive body is that active body is the fixed body; passive body is motion body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is that each dynamic unit possesses multi-set Gx 1040, single-set Gy 1050;

intake compressive structure with twice help combustion function is to place multi-set gate plate sets Gx 1040 on single-set gas chamber set Cx 104 and possesses common intake port 110′;

method of transmitting fuel gas from gas chamber set Cx 104 to gas chamber set Cy 105 is to transmit fuel gas by exchange gas chamber CZ 1060 or groove on active body.

163. Ignition combustion method and device of engine as claimed in Claim 162 includes plug to ignite mixed gas, or fuel nozzle to inject fuel and mix and ignite high pressure high temperature air, or ignite fresh fuel by the burning high temperature fuel.

164. Position of placing ignition combustion device as claimed in Claim 163 is to be placed on the exchange gas chamber CZ 1060 on active body.

165. Position of placing ignition combustion device as claimedin Claim 163 is to be placed in the concave structure which is at the lagging end of gate plate set Gy 1050 of active body, and can avoid to be interferred by passive body.

166. Ignition device as claimed in Claim 163 is placed in the concave chamber which is at the leading end of gas chamber set Cy 105 of passive body,and can avoid to be interferred by gate plate Gy 1050.

167. Engine as claimed in Claim 162, wherein common intake port 110′ is placed at side of lagging end of gate plate set Gx 1040 on active body and couples with intake guide transverse groove of gas chamber Cx.

168. Engine as claimed in Claim 162, wherein common intake port 110′ is placed in the hole structure which is at the leading end of gas chamber Cx 104 on passive body, and can avoid to be interferred by gate plate sets Gx 1040, GC 106, GTx 1045.

169. Engine as claimed in Claim 168, wherein common intake port 110′ is placed in the groove structure which is at the leading end of gas chamber Cx 104 on passive body, and can avoid to be interferred by gate plate sets Gx 1040, GC 106, GTx 1045.

170. Engine as claimed in Claim 162, wherein exhaust port 111′ is placed at the leading end of gate plate set Gy 1050 on active body and couples with the trace of gas chamber Cy 105.

171. Engine as claimed in Claim 170, wherein exhaust port is placed at side of leading end of gate plate set Gy 1050 on active body and couples with the exhaust guide transverse groove 105′ of gas chamber set Cy 105.

172. Engine as claimed in Claim 162, wherein exhaust port 111′ is respectively placed in the hole structure which is at the lagging end of each gas chamber set Cy 105, and can avoid to be interferred by gate plate set Gy 1050.

173. Engine as claimed in Claim 172, wherein exhaust port 111′ is respectively placed in the grooved type structure which is at the lagging end of each gas chamber set Cy 105 on passive body, and can avoid to be interferred by gate plate set Gy 1050.

174. Engine as claimed in Claim 161, wherein active body is the fixed body, gas chambers Cx, Cy are in parallel in the same body, twice help combustion structure possesses dingle-set gas chamber Cs, multi-set gate plate set Gx, its main characters are as follows:

intake compressive structure with twice help combustion function is to assemble multi-set gate plate set Gx 1040 on single-set gas chamber set Cx 204, and possesses independent intake port 110′;

each independent intake port is placed at active body which is acted as fixed body, and intake port 110′ is respectively placed at side of each gate plate set Gx 1040 and couples with intake guide transverse groove 104′ of gas chamber set Cx 104.

175. Engine as claimed as claim 161, wherein twice help combustion structuee in which active body is motion body, gas chambers Cx, Cy are in parallel in the same body, and it possesses single-set gas chamber Cx, multi-set gate plate set Gx, its main characters are as follows:

structural relation between active body and passive body is that active body is motion body; passive body is the fixed body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is that each dynamic unit possesses multi-set Gx 1040, single-set Gy 1050;

intake compressive structure with twice help combustion function is to place multi-set gate plate sets Gx 1040 on single-set gas chamber set Cx 104 and possesses common intake port 110$'$;

method of transmitting fuel gas from gas chamber set Cx 104 to gas chamber set Cy 105 is to transmit fuel gas by exchange gas chamber CZ 1060 or groove on active body.

176. Ignition combustion method and device of engine as claimed in Claim 17 includes plug to ignite mixed gas, or fuel nozzle to inject fuel and mix and ignite high pressure high temperature air, or ignite fresh fuel by the burning high temperature fuel.

177. Position for placing ignition combustion device as claimed in Claim 176 is to be placed on the exchange gas chamber CZ 1060 on active body.

178. Ignition combustion device as claimed in Claim 176 is placed in the concave chamber structure which is at the lagging end of gate plate set Gy 1050 on active body, and can couple with gas chamber Cy and avoid to be interferred by passive body.

179. Ignition device as claimed in Claim 176 is placed in the concave chamber which is at the leading end of gas chamber set Cy 105 of passive body, and can avoid to be interferred by gate plate Gy 1050.

180. Engine as claimed in Claim 175, wherein common intake port 110$'$ is placed in the hole structure or guide transverse groove which is at the leading end of gas chamber set Cx 104 on passive body, and can avoid to be interferred by gate plate set Gx 1040.

181. Engine as claimed in Claim 175, wherein common intake port is placed at the lagging end of gate plate set Gx 1040 on active body, and couples with trace of gas chamber Cx.

182. Engine as claimed in Claim 175, wherein common intake port is placed at side of the lagging end of gate plate sets Gx 1040, GTx 1045 on active body, and couples with intake guide transverse groove 104$'$ of gas chamber set Cx 104.

183. Engine as claimed in Claim 175, wherein exhaust port 111$'$ is placed in the hole structure which is at the lagging end of gas chamber set Cy 105, and can avoid to be interferred by gate plate set Gy 1050.

184. Engine as claimed in Claim 175, wherein exhaust port 111$'$ is placed at the leading end of gate plate set Gy 1050 on active body, and couples on trace of gas chamber Cy, and transmit through transmission pipe which couples with exhaust port 111$'$ on motion body.

185. Engine as claimed in Claim 175, wherein exhaust port is respectively placed at side of leading end of gate plate set Gy 1050 on active body, and couples with exhaust guide transverse groove 105$'$ of gas chamber set Cy 105.

186. Engine as claimed in Claim 120, wherein twice help combustion structure in which gas chambers Cx, Cy are in parallel in the same body, and it possesses multi-set gas chamber Cx single-set gate plate set Gx, its structural characters are that:

structure which assembles gate plate sets Gx 1040, Gy 1050 and exchange gas chamber is active body;

structure which assembles gas chamber sets Cx 104, Cy 105 is passive body;

gate plate set Gx 1040 at least couples with a set of intake compressive gas chamber set which is constituted by two sectional series gas chamber Cx 104;

gate plate set Gy 1050 at least couples a set of gas chamber set Cy 105;

at the lagging of each section of gas chamber Cx 104 near side of gas chamber set Cy, there is guide transverse groove;

at the leading end of gas chamber set Cy 105 and the middle section near side of gas chamber set Cx 104, there also respectively assembles guide transverse groove 105$'$;

each dynamic unit is constituted by intake compressive gas chamber set which is connected in series by a set of explosive exhaust gas chamber set Cy 105 and at least two sectional gas chamber Cx 104;

the coupling trace of exchange gas chamber CZ 1060 is between gas chamber set Cx 104, Cy105, and only interlaces and couples with guide transverse grooves 104$'$, 105$'$ in order to transmit fuel gas;

exchange gas chamber CZ 1060 interlaces middle guide transverse groove 105$'$ of gas chamber set Cy 105 and transmit fuel gas after ignition and combustion, and after the lagging set gas chamber Cx 104 interlaces exchange gas chamber, and exchange gas chamber CZ 1060 and gas chamber set Cx 104, Cy 105, and exchange gas chamber CZ 1060 and guide transverse grooves 104$'$, 105$'$ of gas chamber sets Cx 104, Cy 105 interlace and communicate at different time;

117

Cross section of side of gate plate set Fx 1040 and Gy 1050 interlaces guide transverse grooves 104' and 105' in driving, and can respectively cover guide transverse grooves 104', 105'.

187. Engine as claimed in Claim 186, wherein twice help combustion structure in which active body is the fixed body, gas chambers Cx, Cy are in parallel in the same body and it possesses multi-set gas chamber Cx single-set gate plate Gx, its main characters are as follows:

structural relation between active body and passive body is that active body is the fixed body; passive body is motion body;

relation between gas chamber sets Cx 104 and Cy 105 is that gas chamber set Cx is placed at passive body, gas chamber set Cy is also placed at passive body; gas chamber sets Cx and Cy are placed in parallel;

character of gate plate set is to be constituted by gate plate sets Gx 1040, Gy 1050 without guide hole;

intake compressive structure with twice help combustion function is to assemble independent or common intake port 110' on multi-set gas chamber set Cx 104 in series;

method of transmitting fuel gas from gas chamber set Cx 104 to gas chamber set Cy 105 is to transmit fuel gas by exchange gas chamber CZ 1060 or groove on active body.

188. Ignition combustion method and device of engine as claimed in Claim 187 includes plug to ignite mixed gas, or fuel nozzle to inject fuel and mix and ignite high pressure high temperature air, or ignite fresh fuel by the burning high temperature fuel.

189. Position of placing ignition combustion device as claimed in Claim 188 is to be placed on the exchange gas chamber CZ 1060 on active body.

190. Ignition combustion device as claimed in Claim 188 is placed in the concave chamber structure which is at the lagging end of gate plate set Gy 1050 on active body, and can couple with gas chamber Cy and avoid to be interferred by passive body.

191. Ignition device as claimed in Claim 188 is placed in the concave chamber which is at the leading end of gas chamber set Cy 105 of passive body, and can avoid to be interferred by gate plate Gy 1050.

192. Engine as claimed in Claim 187, wherein each independent intake port is placed in the hole structure or guide transverse groove which is at the leading end of each gas chamber set Cx 104 on passive body which is acted as motion body, and can avoid to be interferred by gate plate set Gx 1040.

193. Engine as claimed in Claim 187, if common intake port is assembled at the active body which is acted as fixed body, and intake port 110' is assembled at side of lagging end of gate plate set Gx 1040 or GC 106 or GTx 1045, and couples with intake guide transverse groove of gas chamber set Cx.

194. Engine as claimed in Claim 187, wherein common intake port 110' is placed in the hole structure which is at the leading end of gas chamber Cx 104 on passive body, and can avoid to be interferred by gate plate set Gx 1040.

195. Engine as claimed in Claim 187, wherein common intake port 110' is placed in the grooved type structure which is at the leading end of gas chamber Cx 104 on passive body, and can avoid to be interferred by gate plate set Gx 1040.

196. Engine as claimed in Claim 187, wherein exhaust port 111' is placed at the leading end of gate plate set Gy 1050 on active body and couples on the trace of gas chamber Cy 105.

197. Engine as clained in Claim 187, wherein exhaust port 111' is placed at side of leading end of gate plate set Gy 1050 on active body, and couples with exhaust guide transverse groove 105' of gas chamber set Cy 105.

198. Engine as claimed in Claim 187, wherein exhaust port 111' is placed in the hole structure which is at the lagging end of each gas chamber set Cy 105 on passive body, and can avoid to be interferred by gate plate set Gy 1050.

199. Engine as claimed in Claim 187, wherein exhaust port 111' is placed respectively in the grooved type structure which is at the lagging end of each gas chamber set Cy 105, and can avoid to be interferred by gate plate set Gy 1050.

200. Engine as claimed in Claim 186, wherein twice help combustion structure in which active body is the fixed body, gas chambers Cx, Cy are in parallel in the same body, and it possesses multi-set gas chamber Cx, single-set gate plate Gx, its main characters are as follows:

active body is the fixed body; passive body is motion body;

at least a set of gas chamber Cy 105 connects in series with series gas chamber Cx 104 which is at least twice as Cy 105;

series gas chamber set Cx 104 is common gate plate Gx 1040;

common intake port is assembled at active body which is used as fixed body, and intake port 110' is placed at the lagging end of gate plate set Gx 1040 and couples on the trace of gas chamber Cx 104.

201. Engine as claimed in Claim 186, wherein twice help combustion structure in which active body is motion body, gas chambers Cx, Cy are in parallel in the same body, and it possesses multi-set gas chamber Cx, single-set gate plate Gx, its main characters are as follows:

structural relation between active body and passive body is that active body is motion body; passive body is the fixed body;

relation between gas chamber sets Cx 104 and Cy 105 is that gas chamber set Cx is placed at passive body; gas chamber set Cy is also placed at passive body; gas chamber sets Cx and Cy are placed in parallel;

character of gate plate set is to be constituted by gate plates Gx 1040, Gy 1050 without guide hole;

intake compressive structure with twice help combustion function is to assemble independent or or common intake port 110′ on multi-set gas chamber set Cx 104 in series;

method of transmitting fuel gas from gas chamber set Cx 104 to gas chamber set Cy 105 is to transmit fuel gas by exchange gas chamber CZ 1060 or groove on active body.

202. Ignition combustion method and device of engine as claimed in Claim 187 includes plug to ignite mixed gas, or fuel nozzle to inject fuel and mix and ignite high pressure high temperature air, or ignite fresh fuel by the burning high temperature fuel.

203. Position of placing ignition combustion device as claimed in Claim 202 is to be placed on the exchange gas chamber CZ 1060 on active body.

204. Ignition combustion device as claimed in Claim 202 is placed in the concave chamber structure which is at the lagging end of gate plate set Gy 1050 on active body, and can couple with gas chamber Cy and avoid to be interferred by passive body.

205. Ignition device as claimed in Claim 202 is placed in the concave chamber which is at the leading end of gas chamber set Cy 105 of passive body, and can avoid to be interferred by gate plate Gy 1050.

206. Engine as claimed in Claim 201, wherein each independent intake port is respectively placed in the hole structure or guide transverse groove which is at the leading end of each gas chamber set Cx 104 on passive body, and can avoid to be interferred by gate plate set Gx 1040.

207. Engine as claimed in Claim 201, wherein common intake port 110′ is placed in the guide transverse groove which is at the leading end of gas chamber set Cx 104 on passive body, and can avoid to be interferred by gate plate set Gx 1040.

208. Engine as claimed in Claim 201, wherein common intake port 110′ is placed at the lagging end of gate plate set Gx 1040 on active body, and couples on the trace of gas chamber Cx.

209. Engine as claimed in Claim 201, wherein common intake port 110′ is placed at side of lagging end of gate plate set Gx 1040 on active body, and couples with intake guide transverse groove of gas chamber set Cx.

210. Engine as claimed in Claim 201, wherein exhaust port is placed in the hole structure which is placed at the lagging end of gas chamber set Cy 105 on passive body, and can avoid to be interferred by gate plate set Gy 105.

211. Engine as claimed in Claim 201, wherein exhaust port 111′ is placed at the leading end of gate plate set Gy 1050 on active body, and couples on the trace of gas chamber Cy.

212. Engine as claimed in Claim 201, wherein exhaust port 111′ is placed at side of leading end of each gate plate set Gy 1050 on active body, and couples with exhaust guide transverse groove 105′ of gas chamber set Cy 105.

213. Engine as claimed in Claim 120, wherein twice help combustion structure possesses multi-row gas chamber Cx which connects single-set gas chamber Cy in parallel in the same body, its structural characters are that:

structure which assembles gate plate set Gx 1040, Gy 1050 and exchange gas chamber set is active body;

structure which assembles gas chamber sets Cx 104, Cy 105 is passive body;

each dynamic unit is constituted by at least a set of gas chamber Cy 105 and at least two sets of gas chamber sets Cx 104 at its two sides, at two sides of leading end of gas chamber set Cy 105, there respectively possesses a guide transverse groove 105′, at lagging end of two sets of gas chamber set Cz 104 near side of gas chamber set Cy 105, there also respectively possesses guide transverse groove 104′;

two sets of exchange gas chamber set are respectively used to couple gas chamber set Cy 105 and gas chamber set Cy 104 at two sides in sequence, wherein the leading coupled set is used to transmit fuel to gas chamber Cy 105, and the lagging set is used to transmit twice help combustion fresh fuel gas to gas chamber Cy 105;

the transmission time of the lagging set exchange gas chambers CZ 1060 and the lagging gas chamber set Cx 104 is after igniting fuel gas in gas chamber Cy 105;

119

the lagging set exchange gas chamber CZ 1060 interlaces and communicates with guide transverse groove 104' of the lagging gas chamber set Cx firstly, and then communicates with guide transverse groove of gas chamber set Cy 105, and both of them interlace and communicate at different time.

214. Engine as claimed in Claim 213, wherein twice help combustion structure in which active body is the fixed body, and it possesses multi-row gas chamber Cx which connects single-set gas chamber Cy in parallel in the same body, its main characters are as follows:

structural relation between active body and passive body is that active body is the fixed body; passive body is motion body;

relation between gas chamber sets Cx 104 and Cy 105 is that gas chamber set Cx is placed at passive body; gas chamber set Cy is also placed at passive body; gas chamber sets Cx and Cy are placed in parallel;

character of gate plate set is to be constituted by gate plates Gx 1040, Gy 1050 without guide hole;

intake compressive structure with twice help combustion function connects single-set gas chamber set Cy 105 in parallel by multi-row gas chamber set Cx 104, gas chamber set Cx 104 possesses independent intake port 110';

method of transmitting fuel gas from gas chamber set Cx 104 to gas chamber set Cy 105 is to transmit fuel gas by exchange gas chamber CZ 1060 or groove on active body.

215. Ignition combustion method and device of engine as claimed in Claim 214 includes plug to ignite mixed gas, or fuel nozzle to inject fuel and mix and ignite high pressure high temperature air,or ignite fresh fuel by the burning high temperature fuel.

216. Position of placing ignition combustion device as claimed in Claim 215 is to be placed on the exchange gas chamber CZ 1060 on active body.

217. Ignition combustion device as claimed in Claim 215 is placed in the concave chamber structure which is at the lagging end of gate plate set Gy 1050 on active body, and can couple with gas chamber Cy and avoid to be interferred by passive body.

218. Ignition device as claimed in Claim 215 is placed in the concave chamber which is at the leading end of gas chamber set Cy 105 of passive body, and can avoid to be interferred by gate plate Gy 1050.

219. Engine as claimed in Claim 214, wherein each independent intake port 110' is respectively placed at the lagging end of each gate plate set Gx 1040 on active body, and couples on the trace of gas chamber Cx 104.

220. Engine as claimed in claim 214, wherein each independent intake port 110' is respectively placed at side of gate plate set Gx 1040 on active body, and couples with intake guide transverse groove 104' of gas chamber set Cx 104.

221. Engine as claimed in Claim 214, wherein each independent intake port is respectively placed in the hole structure which is at the leading end of each gas chamber set Cx 104 on passive body, and can avoid to be interferred by gate plate set Gx 1040.

222. Engine as claimed in Claim 214, wherein common intake port 110' is placed at the lagging end of gate plate set Gx 1040 on active body, and couples on the trace of gas chamber Cx 104.

223. Engine as claimed in Claim 214, wherein common intake port 110' is placed at side of gate plate set Gx 1040 on active body, and couples with intake guide transverse groove 104' of gas chamber set Cx.

224. Engine as claimed in Claim 214, wherein common intake port 110' is placed in the hole structure which is at the leading end of gas chamber Cx 104 on passive body, and can avoid to be interferred by gate plate set Gx 1040.

225. Engine as claimed in Claim 214, wherein common intake port 110' is placed in the grooved type structure which is at the leading end of gas chamber Cx 104 on passive body, and can avoid to be interferred by gate plate set Gx 1040.

226. Engine as claimed in Claim 214, wherein exhaust port 111' is placed at the leading end of gate plate set Gy 1050, and couples on traee of gas chamber Cy 105.

227. Engine as claimed in Claim 214, wherein exhaust port 111' is placed at side of leading end of gate plate set Gy 1050 and couples with exhaust guide transverse groove 105' of gas chamber set Cy 105.

228. Engine as claimed in Claim 214, wherein exhaust port 111' is respectively placed in the hole structure which is at the lagging end of each gas chamber set Cy 105 on passive body, and can avoid to be interferred by gate plate set Gy 1050.

229. Engine as claimed in Claim 214, wherein exhaust port 111' is respectively placed in the grooved type structure which is at lagging end of each gas chamber set Cy 105, and can avoid to be interferred by gate plate set Gy 1050.

230. Engine as claimed in Claim 213, wherein twice help combustion structure in which active body is motion body, and it possesses multi-row gas chamber Cx which connects single-set gas chamber Cy in prarllel in the same body, its main characters are as follows:

structural relation between active body and passive body is that active body is the fixed body; passive body is motion body;

relation between gas chamber sets Cx 104 and Cy 105 is that gas chamber set Cx is placed at passive body; gas chamber set Cy is also placed at passive body; gas chamber sets Cx and Cy are placed in parallel;

character of gate plate set is to be constituted by gate plates Gx 1040, Gy 1050 without guide hole;

intake compressive structure with twice help combustion function connects single-set gas chamber set Cy 105 in parallel by multi-row gas chamber set Cx 104, gas chamber set Cx 104 possesses independent intake port $110'$;

method of transmitting fuel gas from gas chamber set Cx 104 to gas chamber set Cy 105 is to transmit fuel gas by exchange gas chamber CZ 1060 or groove on active body.

231. Ignition combustion method and device of engine as claimed in Claim 230 includes plug to ignite mixed gas, or fuel nozzle to inject fuel and mix and ignite high pressure high temperature air, or ignite fresh fuel by the burning high temperature fuel.

232. Position of placing ignition combustion device as claimed in Claim 231 is to be placed on the exchange gas chamber CZ 1060 on active body.

233. Ignition bombustion device as claimed in Claim 231 is placed in the concave chamber structure which is at the lagging end of gate plate set Gy 1050 on active body, and can couple with gas chamber Cy and avoid to be interferred by passive body.

234. Ignition device as claimed in Claim 231 is placed in the concave chamber which is at the leading end of gas chamber set Cy 105 of passive body, and can avoid to be interferred by gate plate Gy 1050.

235. Engine as claimed in Claim 230, wherein each independent intake port is respectively placed in the hole structure or guide transverse groove which is at the leading end of each gas chamber set Cx 104 on passive body, and can avoid to be interferred by gate plate set Gx 1040.

236. Engine as claimed in Claim 230, wherein each independent intake port $110'$ is respectively placed at the lagging end of each gate plate set Gx 1040 on active body, and couples on the trace of gas chamber Cx.

237. Engine as claimed in Claim 230, wherein each independent intake port $110'$ is respectively placed at side of gate plate set Gx 1040 on active body, and couples with intake guide transverse groove $104'$ of gas chamber set Cx 104.

238. Engine as claimed in Claim 230, wherein exhaust port $111'$ is placed in the hole structure which is at lagging end of gas chamber set Cy 105, and can avoid to be interferred by gate plate set Gy 1050.

239. Engine as claimed in Claim 230, wherein exhaust port $111'$ is placed at the leading end of gate plate set Gy 1050 on active body and couples on the trace of gas chamber Cy.

240. Engine as claimed in Claim 230, wherein exhaust port $111'$ is respectively placed at side of leading end of each gate plate set Gy 1050 on active body, and couples with exhaust guide transverse groove $105'$ of gas chamber set Cy 105.

241. Engine as claimed in Claim 120, wherein twice help combustion structure in which same body gas chambers Cx, Cy are connected in series and parallel, its structural characters are that:

structure which assembles gate plate set Gx 1040, GC 106 and exchange gas chamber CZ 1060 is active body;

structure which assembles gas chamber sets Cx 104, Cy 105 is passive body;

each dynamic unit is constituted by a set of gas chamber Cx 104 which couples with common gate plate set GC 106 and connects gas chamber Cy 105 in series, and at least a set of gas chamber set Cx 104 which connects above series shallower gas chamber sets Cx 104, Cy 105 in parallel, parallel gas chamber set Cx 104 couples a set of gate plate set Gx 1040, at side of leading end near side of gas chamber Cy, there possesses a guide transverse groove $104'$;

at middle section of gas chamber set Cy near side of parallel gas chamber set Cx 104, there also possesses a guide transverse groove $105'$, size and position of this kind of guide transverse groove can be covered by side of gate plate set GC 106 at certain section in driving,

fuel transmission of series gas chamber sets Cx, Cy is when common gate plate set GC 106 passesees through shalllower gas chamber Cx, its guide hole 103 hides into gate plate seat, and stroe fuel gas which will enter into from one-way intake valve 101 in the pressure-saved chamber 102, and when it passesses through deeper gas chamber Cy 105, guide hole 103 exposes out and transmits fuel gas to gas chamber Cy;

twice help combustion exchange gas chamber CZ 1060 is placed among lagging end of gate plate set GC 106, leading end of Gx 1040, and gas chamber set Cy 105 and parallel gas chamber Cx 104, and can interlace and communicate with guide transverse groove 104';

exchange gas chamber CZ 1060 firstly interlaces and communicates parallel gas chamber set Cx 104, and then interlaces and communicates with guide transverse groove 105' in middle section of gas chamber Cy, and two guide transverse groove are not interlaced and communicated at same time.

242. Engine as claimed in Claim 241, wherein twice help combustion structure in which active body is the fixed body, same body gas chambers Cx, Cy are in series and parallel, its main characters are that:

structural relation between active body and passive body is that active body is the fixed body; passive body is motion body;

relation between gas chamber sets Cx 104 and Cy 105 is that gas chamber set Cx is placed at passive body; gas chamber set Cy is also placed at passive body; gas chamber sets Cx and Cy are placed in series and parallel;

character of gate plate set is to be constituted by transverse guide hole gate plate GTx 1045 and common gate plate set GC 106;

intake compressive structure with twice help combustion transmits fuel gas to gas chamber Cy 105 at different working angle by multi-set gas chamber set Cx and Cy in series and parallel, each set of gas chamber set Cx 104 possesses independent intake port 110';

method of transmitting fuel gas from gas chamber set Cx 104 to gas chamber set Cy 105 is to transmit fuel gas by exchange gas chamber CZ 1060 or groove on active body, and common gate plate set GC 106 which possesses pressure-saved gas chamber 102 and low position intake valve 101, high position output guide hole 103.

243. Ignition combustionmethod and device of engine as claimed in Claim 242 includes plug to ignite mixed gas, or fuel nozzle to inject fuel and mix and ignite high pressure high temperature air, or ignite fresh fuel by the burning high temperature fuel.

244. Position of placing ignition combustion device as claimed in Claim 243 is to be placed on the exchange gas chamber CZ 1060 on active body.

245. Ignition combustion device as claimed in claim 243 is placed in the concave chamber structure which is at the lagging end of gate plate set GC 106 on active body, and can couple with gas chamber Cy' and avoid to be interferred by passive body.

246. Ignition device as claimed in Claim 243 is placed in the concave chamber which is at the leading end of gas chamber set Cy 105 of passive body, and can avoid to be interferred by gate plate GC 106.

247. Engine as claimed in Claim 242, wherein intake method if it respectively possesses independent intake port, and intake port 110' of parallel gas chamber Cx 104 is respectively placed at the lagging end of each gate plate set Gx 1040 on active body, and couples on trace of gas chamber Cx 104, and intake port 110' of parallel gas chamber Cx 104 is placed at side of gate plate set GC 106 on active body and couples with intake guide transverse groove 104' of gas chamber set Cx 104.

248. Parallel gas chamber as claimed in Claim 247, if it possesses guide transverse groove, its intake port is assembled at side of gate plate set Gx 1040 and couples each other.

249. Engine as claimed in Claim 242, if each independent intake port is placed at passive body which is acted as motion body, and intake port 110' is respectively placed in the hole structure which is at leading end of each gas chamber Cx 104, and can avoid to be interferred by gate plate set Gx 1040 or Gc 106.

250. Engine as claimed in Claim 242, wherein exhaust port 111' is placed at side of leading end of gate plate set GC 106 on active body, and couples with exhaust guide transverse groove 105' of gas chamber set Cy 105.

251. Engine as claimed in Claim 242, wherein exhaust port 111' is respectively placed in the hole structure which is at lagging end of gas chamber set Cy 105 on passive body, and can avoid to be interferred by gate plate set GC 106.

252. Engine as claimed in Claim 242, wherein exhaust port 111' is respectively placed in the grooved type structure which is at the lagging end of each gas chamber set Cy 105, and can avoid to be interferred by gate plate set GC 106.

253. Engine as claimed in Claim 241, wherein twice help combustion structure in which active body is motion body, same body gas chambers Cx,Cy connects in series and parallel, its main characters are as follows:

structural relations between active body and passive body is that active body is motion body; passive body is the fixed body;

relation between gas chamber sets Cx 104 and Cy 105 is that gas chamber set Cx is placed at passive body; gas chamber set Cy is also placed at passive body; gas chamber sets Cx and Cy are placed in series and parallel;

character of gate plate set is to be constituted by transverse guide hole gate plate GTx 1045 and common gate plate set GC 106;

intake compressive structure with twice help combustion transmits fuel gas to gas chamber Cy 105 at different working angle by multi-set gas chamber set Cx and Cy in series and parallel, each set of gas chamber set Cx 104 possesses independent or common intake port $110'$;

method of transmitting fuel gas from gas chamber set Cx 104 to gas chamber set Cy 105 is to transmit fuel gas by exchange gas chamber CZ 1060 or groove on active body, and common gate plate set GC 106 which possesses pressure-saved gas chamber 102 and low position intake valve 101, high position output guide hole 103.

254. Ignition combustion method and device of engine as claimed in Claim 253 includes plug to ignite mixed gas, or fuel nozzle to inject fuel and mix and ignite high pressure high temperature air, or ignite fresh fuel by the burning high temperature fuel.

255. Position of placing ignition combustion device as claimed in Claim 254 is to be placed on the exchange gas chamber CZ 1060 on active body.

256. Ignition combustion device as claimed in Claim 254 is placed in the concave chamber structure which is at the lagging end of gate plate set GC 106 on active body, and can couple with gas chamber Cy and can avoid to be interferred by passive body.

257. Ignition device as claimed in Claim 254 is placed in the concave chamber which is at the leading end of gas chamber set Cy 105 of passive body, and can avoid to be interferred by gate plate GC 106.

258. Engine as claimed in Claim 253, wherein intake method if it respectively possesses independent intake port, and intake port is respectively placed in the hole structure which is at the leading end of each gas chamber set Cx 104 on passive body, and can avoid to be interferred by gate plate set Gx 1040, or GC 106.

259. Engine as claimed in Claim 253, wherein each independent intake port $110'$ is respectively placed at lagging end of gate plate set Gx 1040 or GC 106 on active body, and couples on the trace of gas chamber Cx 104.

260. Engine as claimed in Claim 253, wherein each independent intake port $110'$ is respectively placed at side of gate plate set Gx 1040 or GC 106 on active body, and couples with intake guide transverse groove $104'$ of gas chamber set Cx 104.

261. Engine as claimed in Claim 253, wherein exhaust port $111'$ is placed in the hole structure which is at the lagging end of gas chamber set on passive body, and can avoid to be interferred by gate plate set GC 106.

262. Engine as claimed in Claim 253, wherein exhaust port $111'$ is placed at the leading end of gate plate set GC 106 and couples on the trace of gas chamber Cy.

263. Engine as claimed in Claim 253, wherein exhaust port $111'$ is respectively placed at side of leading end of each gate plate set GC 106, and couples with exhaust guide transverse groove $105'$ of gas chamber set Cy 105.

264. Engine as claimed in Claim 120, if twice help combustion structure possesses single-set gate plate Gx, multi-set series gas chamber Cx which connect different body gas chamber Cy in parallel; its structure characters are that:

gas chamber set Cx 104 and gate plate set Gy 1050 are placed at active body;

gas chamber set Cy 105 and gate plate set Gx 1040 are placed at passive body;

each dynamic unit is constituted in parallel by explosive exhaust structure which a set of gate plate set Gy 1050 couples at least a set of gas chamber set Cy 105, and intake compressive structure which at least a set of gate plate set Gx 1040 couples at least two sectional parallel gas chamber set Cx 104;

at leading end of gas chamber set Cy 105 near side of gas chamber set Cx 104, there is guide transverse groove $105'$;

each section of gas chamber Cx 104 possesses guide transverse groove $104''$ which extends from the lagging end to side of gas chamber Cy 105, and then turns to the leading end, each section of guide transverse groove $104''$ interlaces and communicates guide transverse groove $105'$ of gas chamber set Cy at different time;

the certain section of guide transverse grooves $104''$ and $105''$ of above gas chambers Cx 104 and Cy 105 can be covered by side of gate plate set Gx 1040 in driving;

time of ignition and combustion is after side of gate plate set Gx 1040 completely covers guide transverse groove 104$''$ at leading end of the leading sectional gas chamber set Cx 104;

leading sectional gas chamber set Cx 104 separates from gas chamber Cy 105 is before side of gate plate set Gx 1040 leaves guide transverse groove 104$''$ of the leading sectional gas chamber set Cx;

time of help combustion is that side of gate plate set Gx 1040 completely covers guide transverse groove 104$''$ at leading end of lagging sectional gas chamber set Cx 104;

completing help combustion, the separation of the lagging sectional gas chambers Cx 104 and Cy 105 is before side of gate plate set Gx 1040 leaves guide transverse groove 104$''$ of the lagging sectional gas chamber set Cx 104;

the beginning of transmitting fuel gas is after gate plate set Gy 1050 passesses through guide transverse groove 105$'$ of gas chamber set Cy 105.

265. Engine as claimed in Claim 264, wherein twice help combustion engine in which active body is the fixed body, different body gas chamber Cy is in parallel and it possesses dingle-set gate plate Gx, multi-set series gas chamber Cx, its main characters are as follows:

structural relation between active body and passive body is that active body is the fixed body; passive body is motion body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is to be constituted by gate plates Gx 1040, Gy 1050 without guide hole;

intake compressive structure with twice help combustion function is to assemble independent or common intake port 110$'$ on multi-set gas chamber Cx 104 in series;

method of transmitting fuel gas from gas chamber set Cx 104 to gas chamber set Cy 105 is to transmit fuel gas by overlapping trace of both of guide transverse groove 105$'$ of gas chamber Cy 105 on active body and turning guide transverse groove 104$''$ of gas chamber Cx 104 on passive body.

266. Ignition combustion method and device of engine as claimed in Claim 265 includes plug to ignite mixed gas or fuel nozzle to inject fuel and mix and ignite high pressure high temperature air, or ignite fresh fuel by the burning high temperature fuel.

267. Position of placing ignition combustion device as claimed in Claim 266 is to be placed in the concave chamber structure which couples with guide transverse groove 105$'$ on active body.

268. Ignition combustion device as claimed in Claim 266 is placed in the concave chamber structure which is at the lagging end of gate plate set Gy 1050 on active body, and can couple with gas chamber Cy, and can avoid to be interferred by passive body.

269. Ignition combustion device as claimed in Claim 266 is placed in the concave chamber or guide transverse groove which is at the leading end of gas chamber set Cy 105 of passive body, and can avoid to be interferred by gate plate Gy 1050.

270. Engine as claimed in Claim 265, wherein intake method if it respectively possesses independent intake port which is placed at passive body which is acted as motion body, and intake port 110$'$ is respectively placed at the lagging end of each gate plate set Gx 1040 and couples on the trace of gas chamber Cx 104.

271. Engine as claimed in Claim 265, wherein each independent intake port is respectively placed at side of each gate plate set Gx 1045 or GC 106 or GTx 1045, and couples with intake guide transverse groove 104$'$ of gas chamber set Cx 104.

272. Engine as claimed in Claim 265, if each independent intake port is placed at action body which is acted as fixed body, and intake port 110$'$ is respectively placed in the hole structure which is at the leading end of each gas chamber Cx 104, and can avoid to be interferred by gate plate set Gx 1040.

273. Engine as claimed in Claim 265, wherein intake method, if common intake port is placed at passive body which is acted as motion body, and intake port 110$'$ is placed at lagging end of gate plate set Gx 1040, and couples on the trace of gas chamber Cx 104.

274. Engine as claimed in Claim 265, wherein common intake port is placed at side of lagging end of gate plate set Gx 1040 or GC 106 or GTx 1045, and couples with intake guide transverse groove of gas chamber set Cx.

275. Engine as claimed in Claim 265, wherein common intake port is placed at active body which is acted as fixed body, and intake port 110$'$ is placed in the hole structure which is at the leading end of gas chamber Cx 104, and can avoid to be interferred by gate plate set Gx 1040.

276. Engine as claimed in Claim 265, wherein common intake port is placed in the grooved type structure which is at the leading end of gas chamber Cx 104, and can avoid to be interferred by gate plate set Gx 1040, GC 106, GTx 1045.

277. Engine as claimed in Claim 265, wherein exhaust method if exhaust port is placed at active body which is acted as fixed body, exhaust port 111$'$ is placed at leading end of gate plate set Gy 1050,

124

and couples on the trace of gas chamber Cy 105.

278. Exhaust port as claimed in Claim 277 is placed at side of leading end of gate plate set Gy 105 or GTy 1055 or GC 106 and couples with exhaust guide transverse groove 105' of gas chamber set Cy 105.

279. Engine as claimed in Claim 264, wherein twice help combustion structure in which active body is the fixed body, different body gas chamber Cy is in parallel and it possesses single-set gate plate Gx, multi-set series gas chamber Cx, its main characters are as follows:

active body is the fixed body; passive body is motion body;

gas chambers Cx, Cy are in parallel in different body;

after series, Cx which is at least twice as Cy connects Cy in parallel;

single-set Gx matches series gas chamber set.

280. Engine as claimed in Claim 279, wherein intake method if it respectively possesses independent intake port which is placed at active body acted as fixed body, and intake port 110' is respectively placed in the hole structure which is at the leading end of each gas chamber Cx 104, and can avoid to be interferred by gate plate set Gx 1040.

281. Engine as claimed in Claim 279, wherein exhaust method if exhaust port is placed at passive body which is acted as motion body, and exhaust port 111' is respectively placed in the hole structure which is at the lagging end at each gas chamber set Cy 105, and can avoid to be interferred by gate plate set Gy 1050.

282. Engine as claimed in Claim 279, wherein exhaust port is respectively placed in the grooved type structure which is at lagging end of each gas chamber set Cy 105, and can avoid to be interferred by gate plate set Gy 1050 or GTx 1055 or GC 106.

283. Engine as claimed in Claim 264, wherein twice help combustion structure in which active body is motion body, different body gas chamber Cy is in parallel and it possesses single-set gate plate Gx, multi-set series gas chamber Cx, its main characters are as follows:

structural relation between active body and passive body is that active body is motion body; passive body is the fixed body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is to be constituted by gate plates Gx 1040, Gy 1050 without guide hole;

intake compressive structure with twice help combustion function is to assemble independent or common intake port 110' on multi-set gas chamber Cx 104 in series;

method of transmitting fuel gas from gas chamber set Cx 104 to gas chamber set Cy 105 is to transmit fuel gas by overlapping trace of both of guide transverse groove 105' of gas chamber Cy 105 on active body and turning guide transverse groove 104'' of gas chamber Cx 104 on passive body.

284. Ignition combustion method and device of engine as claimed in Claim 283 includes plug to ignite mixed gas, or fuel nozzle to inject fuel and mix and ignite high pressure high temperature air, or ignite fresh fuel by the burning high temperature fuel.

285. Position of placing ignition combustion device as claimed in Claim 284 is to be placed in the concave chamber structure which couples with guide transverse groove 105' on active body.

286. Ignition combustion device as claimed in Claim 284 is placed in the concave chamber structure which si at the lagging end of gate plate set Gy 1050 on active body, and can couple with gas chamber Cy, and can avoid to be interferred by passive body.

287. Ignition combustion device as claimed in Claim 284 is placed in the concave chamber or guide transverse groove which is at the leading end of gas chamber set Cy 105 of passive body, and can avoid to be interferred by gate plate Gy 1050.

288. Engine as claimed in Claim 283, wherein intake method if it respectively possesses independent intake port which is placed at active body used as motion body, and intake port 110' is respectively placed in the hole structure which is at the leading end of each gas chamber set Cx 104, and can avoid to be interferred by gate plate set Gx 1040.

289. Engine as claimed in Claim 283, if each independent intake port is placed at passive body which is acted as fixed body, and intake port is respectively placed at the lagging end of each gate plate set Gx 1040, and couples on the trace of gas chamber Cx 104.

290. Engine as claimed in Claim 283, wherein each independent intake port is respectively placed at side of each gate plate set Gx 1040 and couples with intake guide transverse groove 104' of gas chamber set Cx 104.

291. Engine as claimed in Claim 283, if common intake port is placed at active body which is acted as motion body, and intake port 110 is placed in the hole structure or guide transverse groove which is at leading end of gas chamber set Cx 104, and can avoid to be interferred by gate plate set Gx 1040.

292. Engine as claimed in Claim 283, if common intake port is placed at passive body which is acted as fixed body, and intake port is placed at lagging end of gate plate set Gx 1040, and couples on the trace of gas chamber Cx 104.

293. Engine as claimed in Claim 283, wherein common intake port is placed at side of lagging end of gate plate set Gx 1040, and couples with intake guide transverse groove of gas chamber set Cx.

294. Engine as claimed in Claim 283, wherein exhaust method, if exhaust port is placed at passive body which is acted as fixed body, and exhaust port 111$'$ is placed in the hole structure which is at the lagging end of gas chamber set Cy 105, and can avoid to be interferred by gate plate set Gy 1050.

295. Engine as claimed in Claim 283, if exhaust port is placed at active body which is acted as motion body, and exhaust port 111$'$ is placed at leading end of gate plate set Gy 1050, and couples on the trace of gas chamber Cy 105, and transmits fuel gas through transmission pipe which couples with exhaust port 111$'$ on motion body.

296. Engine as claimed in Claim 283, wherein exhaust port is respectively placed at side of leading end of each gate plate set Gy 1050, and couples with exhaust guide transverse groove 105$'$ of gas chamber set Cy 105, and transmits fuel gas through transmission pipe which couples with exhaust port 111$'$ on motion body.

297. Engine as claimed in Claim 120, if twice help combustion structure possesses multi-row gas chamber which connects different body gas chamber Cy, its structural characters are that:
gas chamber set Cx 104 and gate plate set Gy 1050 are placed at active body;
gas chamber set Cy 105 and gate plate set Gx 1040 are placed at passive body;
each dynamic unit as constituted by connecting a set of gas chamber set Cy 105 and two sets of gas chamber set Cx 104 on parallel;
each set of gate plate set Gy 1050 at least couples with a set of gas chamber Cy 105;
each set of gate plate set Gx 1040 at least couples with a set of gas chamber set Cx 104;
each set of gas chamber Cx possesses guide transverse groove 104$''$ which extends from the lagging end to side of Cy, and turns to the leading end, each set of guide groove 104$''$ interlaces and communicates guide transverse groove of gas chamber set Cy 105 at different time;
the certain section of guide transverse grooves 104$''$ and 105$''$ of above gas chambers Cx 104 and Cy 105 can be covered by side of gate plate set Gx 1040 in driving;
time of ignition and combustion is after side of gate plate set Gx 1040 completely covers guide transverse groove 104$''$ at leading end of the leading sectional gas chamber set Cx 104;
leading sectional gas chamber set Cx 104 separates from gas chamber Cy 105 is before side of gate plate set Gl 1040 leaves guide transverse groove 104$''$ of the leading sectional gas chamber set Cx;
time of help combustion is that side of gate plate set Gx 1040 completely covers guide transverse groove 104$''$ at leading end of lagging sectional gas chamber set Cx 104;
completing help combustion, the separation of the lagging sectional gas chambers Cx 104 and Cy 105 is before side of gate plate set Gx 1040 leaves guide transverse groove 104$''$ of the lagging sectional gas chamber set Cx 104;
the beginning of transmitting fuel gas is after gate plate set Gy 1050 passesses through guide transverse groove 105$'$ of gas chamber set Cy 105.

298. Engine as claimed in Claim 297, wherein graphic view of twice help combustion embodiment in which active body is the fixed body, and it possesses multi-row gas chamber Cx which connects different body gas chamber Cy in parallel, its main characters are as follows:
structural relation between active body and passive body is that active body is the fixed body; passive body is motion body;
relation between gas chamber sets Cx 104 and Cy 105 is that gas chamber set Cx is placed at active body; gas chamber set Cy is placed at passive body; gas chamber sets Cx and Cy are placed in parallel;
character of gate plate set is to possess gate plates Gx 1040, Gy 1050 without guide hole;
intake compressive structure with twice help function possesses multi-row gas chamber set Cx 104 which connects gas chamber set Cy 105 in parallel, gas chamber set Cx 104 possesses independent intake port 110$'$ and different transmitting working angle, in order to transmit into gas chamber set Cy in sequence;
method of transmitting fuel gas from gas chamber set Cx 104 to gas chamber set Cy 105 is to transmit fuel gas by overlapping trace of both of guide transverse groove 105$'$ of gas chamber Cy 105 on active body and turning guide transverse groove 104$''$ of gas chamber Cx 104 on passive body.

299. Ignition combustion method and device of engine as claimed in Claim 298 includes plug to ignite mixed gas, or fuel nozzle to inject fuel and mix and ignite high pressure high temperature air, or ignite fresh fuel by the burning high temperature fuel.

300. Position of placing ignition combustion device as claimed in Claim 299 is to be placed in the concave chamber structure which couples with guide transverse groove 105′ on active body.

301. Ignition combustion device as claimed in Claim 299 is placed in the concave chamber structure which is at the lagging end of gate plate set Gy 1050 on active body, and can couple with gas chamber Cy, and can avoid to be interferred by passive body.

302. Ignition combustion device as claimed in Claim 299 is placed in the concave chamber or guide transverse groove which is at the leading end of gas chamber set Cy 105 of passive body, and can avoid to be interferred by gate plate Gy 1050.

303. Engine as claimed in Claim 298, wherein intake method if it is respectively to possess independent intake port which is placed at active body used as motion body, and intake port 110′ is respectively placed in the hole structure which is at the leading end of each gas chamber set Cx 104, and can avoid to be interferred by gate plate set Gx 1040.

304. Engine as claimed in Claim 298, wherein each intake method is respectively possess independent intake port which is respectively placed at side of each gate plate set Gx 1040 and couples with intake guide transverse groove 104′ of gas chamber set Cx 104.

305. Engine as claimed in Claim 298, if each independent intake port is placed at active body which is acted as fixed body, and intake port is respectively placed in the hole structure which is at the leading end of each gas chamber Cx 104, and can avoid to be interferred by gate plate set Gx 1040.

306. Engine as claimed in Claim 298, if exhaust port is placed at active body which is acted as fixed body, and exhaust port 111′ is placed at leading end of gate plate set Gy 1050, and couples on the trace of gas chamber Cy 105.

307. Engine as claimed in Claim 298, wherein exhaust port is placed at side of leading end of gate plate set Gy 1050 on active body, and couples with exhaust guide transverse groove 105′ of gas chamber set Cy 105.

308. Engine as claimed in Claim 298, if exhaust port is placed at passive body which is acted as motion body, and exhaust port 111′ is respectively placed in the hole structure which is at the lagging end of gas chamber set Cy 105, and can avoid to be interferred by gate plate set Gy 1050.

309. Engine as claimed in Claim 298, wherein exhaust port is respectively placed in the grooved type structure which is at the lagging end of each gas chamber on passive body, and can avoid to be interferred by gate plate set Gy 1050.

310. Engine as claimed in Claim 297, wherein twice help combustion structure in which active body is used as motion body, and it possesses multi-row gas chamber Cx to connect different body gas chamber Cy in parallel, its main characters are as follows:

structural relation between active body and passive body is that active body is motion body; passive body is the fixed body;

relation between gas chamber sets Cx 104 and Cy 105 is that gas chamber set Cx is placed at active body; gas chamber set Cy is placed at passive body; gas chamber sets Cx and Cy are placed in parallel;

character of gate plate set is to possess gate plates Gx 1040, Gy 1050 without guide hole;

intake compressive structure with twice help function possesses multi-row gas chamber set Cx 104 which connects gas chamber set Cy 105 in parallel, gas chamber set Cx 104 possesses independent intake port 110′ and different transmitting working angle, in order to transmit into gas chamber set Cy in sequence;

method of transmitting fuel gas from gas chamber set Cx 104 to gas chamber set Cy 105 is to transmit fuel gas by overlapping trace of both of guide transverse groove 105′ of gas chamber Cy 105 on active body and turning guide transverse groove 104″ of gas chamber Cx 104 on passive body.

311. Ignition combustion method and device of engine as claimed in Claim 310 includes plug to ignite mixed gas, or fuel nozzle to inject fuel and mix and ignite high pressure high temperature air, or ignite fresh fuel by the burning high temperature fuel.

312. Position of placing ignition combustion device as claimed in Claim 311 is to be placed in the concave chamber structure which couples with guide transverse groove 105′ on active body.

313. Ignition combustion device as claimed in Claim 311 is placed in the concave chamber structure which is at the lagging end of gate plate set Gy 1050 on active body, and can couple withgas chamber Cy, and can avoid to be interferred by passive body.

314. Ignition combustion device as claimed in Claim 311 is placed in the concave chamber or guide transverse groove which is at the leading end of gas chamber set Cy 105 of passive body, and can avoid to be interferred by gate plate Gy 1050.

315. Engine as claimed in Claim 310, wherein intake method if it respectively possesses independent intake port which is placed at active body used as motion body, and intake port 110′ is respectively placed in the hole structure which is at the leading end of each gas chamber set Cx 104, and can avoid to be interferred by gate plate set Gx 1040.

316. Engine as claimed in Claim 310, if each independent intake port is placed at passive body which is acted as fixed body, and intake port is respectively placed at the lagging end of each gate plate set Gx 1040, and couples on the trace of gas chamber Cx 104.

317. Engine as claimed in Claim 310, wherein each independent intake port is respectively placed at side of each gate plate set Gx and couples with intake guide transverse groove 104' of gas chamber set Cx 104.

318. Engine as claimed in Claim 310, wherein exhaust method, if exhaust port is placed at passive body which is acted as fixed body, and exhaust port 111' is placed in the hole structure which is at the lagging end of gas chamber set Cy 105, and can avoid to be interferred by gate plate set Gy 1050.

319. Engine as claimed in Claim 310, if exhaust port is placed at active body which is acted as motion body, and exhaust port 111' is placed at leading end of gate plate set Gy 1050, and couples on the trace of gas chamber Cy 105.

320. Engine as claimed in Claim 310, wherein exhaust port 111' is respectively placed at side of leading end of each plate set Gy 1050 on active body, and couples with exhaust guide transverse groove 105' of gas chamber set Cy 105.

321. Engine as claimed in Claim 161 assembles twice help combustion structure which possesses gate plate set with guide hole, and gas chamber Cx with multi-set gate plate which connects gas chamber Cy in parallel in the same body.

322. Engine as claimed in Claim 321, wherein twice help combustion structure in which active body is the fixed body, and it possesses gate plate set with guide hole, and gas chamber Cx with multi-set gate plate which connects gas chamber Cy in parallel in the same body, its main characters are as follows:
structural relation between active body and passive body is that active body is the fixed body, passive body is motion body;
relation between gas chamber sets Cx 104 and Cy 105 is that gas chamber set Cx is placed at passive body; gas chamber set Cy is placed at passive body; gas chamber sets Cx and Cy are placed in parallel;
character of gate plate set is to be constituted by transverse guide hole gates GTx 1045 and GTy 1055 or Gy 1050;
intake compressive structure with twice help combustion function is to assemble multi-set gate plate set Gx 1040 by single-set gas chamber set Cx 104 and possess common intake port 110';
me method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substituted by guide transverse groove.

323. Ignition combustion method and device of engine as claimed in Claim 322 includes plug to ignite mixed gas, or fuel nozzle to inject fuel and mix and ignite high pressure high temperature air, or ignite fresh fuel by the burning high temperature fuel.

324. Ignition combustion device as claimed in Claim 323 is placed in the concave chamber structure which is at the lagging end of gate plate set GTy 1055 or Gy 1050 on active body, and can couple with gas chamber Cy, and can avoid to be interferred by passive body.

325. Ignition combustion device as claimed in Claim 323 is placed in the guide groove hole 1010 of active body.

326. Ignition combustion device as claimed in Claim 323 is placed in the concave chamber which is at the leading end of gas chamber set Cy 105 of passive body, and can avoid to be interferred by gate plate GTy 1055 or Gy 1050.

327. Engine as claimed in Claim 322, wherein the placement of intake port and exhaust port is as same as mentioned in Claims 167 to 172.

328. Engine as claimed in Claim 321, wherein twice help combustion structure in which active body is the fixed body, and it possesses gate plate set with guide hole, and gas chamber Cx with multi-set gate plate Gx which connects gas chamber Cy in parallel in the same body, its main characters are as follows:
structural relation between active body and passive body is that active body is the fixed body, passive body is motion body;
relation between gas chamber sets Cx 104 and Cy 105 is that gas chamber set Cx is placed at passive body; gas chamber set Cy is placed at passive body; gas chamber sets Cx and Cy are placed in parallel;
character of gate plate set is to be constituted by transverse guide hole gates GTx 1045, GTy 1055;
intake compressive structure with twice help combustion function is to assemble multi-set gate plate set Gx 1040 by single-set gas chamber set Cx 104 and possess common intake port 110';
method of transmitting fuel gas from gas chamber set Cx 104 to gas chamber set Cy 105 is to transmit fuel gas by groove or hole type gas guide passage 1010 on active body at transverse side of gate plate, and

gate plate sets GTx 1045, GTy 1055 with transverse guide hole, or one set of these two gate plate sets, and the other set is substituted by guide transverse groove.

329. Ignition combustion method and device of engine as claimed in Claim 328 includes plug to ignite mixed gas, or fuel nozzle to inject fuel and mix ang ignite high pressure high temperature air, or ignite fresh fuel by the burning high temperature fuel.

330. Ignition combustion device as claimed in Claim 329 is placed in the concave chamber structure which is at the lagging end of gate plate set GTy 1055 or Gy 1050 on active body, and can couple with gas chamber Cy, and can avoid to be interferred by passive body.

331. Ignition combustion device as claimed in Claim 329 is placed in the guide groove hole 1010 of active body.

332. Ignition combustion device as claimed in Claim 329 is placed in the concave chamber which is at the leading end of gas chamber set Cy 105 of passive body, and can avoid to be interferred by gate plate GTy 1055 or Gy 1050.

333. Engine as claimed in Claim 328, wherein the placement of intake port and exhaust port is as same as mentioned in Claim 174.

334. Engine as claimed in Claim 321, wherein twice help combustion structure in which active body is motion body, and it possesses gate plate set with guide hole, and gas chamber Cx with multi-set gate plate Gx which connects gas chamber Cy in parallel in the same body, its main characters are as follows:

structural relation between active body and passive body is that active body is motion body, passive body is the fixed body;

relation between gas chamber sets Cx 104 and Cy 105 is that gas chamber set Cx is placed at passive body; gas chamber set Cy is also placed at passive body; gas chamber sets Cx and Cy are placed in parallel;

character of gate plate set is to be constituted by transverse gride hole gates GTx 1045, GTy 1055,

intake compressive structure with twice help combustion function is to assemble multi-set gate plate set Gx 1040 by single-set gas chamber set Cx 104 and possess common intake port 110′;

method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substituted by guide transverse groove.

335. Ignition combustion method and device of engine as claimed in Claim 334 includes plug to ignite mixed gas, or fuel nozzle to inject fuel and mix and ignite high pressure high temperature air, or ignite fresh fuel by the burning high temperature fuel.

336. Ignition combustion device as claimed in Claim 335 is placed in the concave chamber structure which is at the lagging end of gate plate set GTy 1055 or Gy 1050 on active body, and can couple with gas chamber Cy, and can avoid to be interferred by passive body.

337. Ignition combustion device as claimed in Claim 335 is placed in the guide groove hole 1010 of active body.

338. Ignition combustion device as claimed in Claim 335 is placed in the concave chamber which is at the leading end of gas chamber set Cy 105 of passive body, and can avoid to be interferred by gate plate GTy 1055 Gy 1050.

339. Engine as claimed in Claim 334 wherein the placement of intake port and exhaust port is as same as mentioned in Claims 180 to 185.

340. Engine as claimed in Claim 186 assembles twice help combustion structure which possesses gate plate set with guide hole, and multi-set series gas chamber Cx connects single-set gas chamber Cy in parallel in the same body.

341. Engine as claimed in Claim 340, wherein twice help combustion structure in which active body is the fixed body, and it possesses gate plate set with guide hole, and multi-set series gas chamber Cx connects single-set gas chamber Cy in parallel in the same body, its main characters are as follows:

structural relation between active body and passive body is that active body is the fixed body, passive body is motion body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is to be constituted by transverse guide hole gates GTx 1045, GTy 1055;

intake compressive structure with twice help combustion is to assemble independent or common intake port 110′ on multi-set gas chamber set Cx 104 in series;

method of transmitting fuel gas from gas chamber set Cx 104 to gas chamber set Cy 105 is to transmit fuel gas by groove or hole type gas guide passage 1010 on active body at transverse side of gate plate , and

gate plate sets GTx 1045, GTy 1055 with transverse guide hole, or one set of these two gate plate sets, and the other set is substituted by guide transverse groove.

342. Ignition combustion method and device of engine as claimed in Claim 341 includes plug to ignite mixed gas, or fuel nozzle to inject fuel and mix and ignite high pressure high temperature air, or ignite fresh fuel by the burning high temperature fuel.

343. Ignition combustion device as claimed in Claim 342 is placed in the concave chamber structure which is at the lagging end of gate plate set GTy 1055 or Gy 1050 on active body, and can couple with gas chamber Cy, and can avoid to be interferred by passive body.

344. Ignition combustion device as claimed in Claim 342 is placed in the guide groove hole 1010 of active body.

345. Ignition combustion device as claimed in Claim 342 is placed in the concave chamber which is at the leading end of gas chamber set Cy 105 of passive body, and can avoid to be interferred by gate plate GTy 1055 or Gy 1050.

346. Engine as claimed in Claim 341 wherein the placement of intake port and exhaust port is as same as mentioned in Claims 192 to 199.

347. Engine as claimed in Claim 340, wherein twice help combustion structure in which active body is motion body, and it possesses gate plate set with guide hole, and multi-row gas chamber Cx connects single-set gas chamber Cy in parallel in the same body, its main characters are as follows:

structural relation between active body and passive body is that active body is motion body, passive body is the fixed body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is to be constituted by transverse guide hole gates GTx 1045, GTy 1055;

intake compressive structure with twice help combustion is to assemble independent or common intake port 110' by multi-set gas chamber set Cx 104 in series;

method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substituted by guide transverse groove.

348. Ignition combustion method and device of engine as claimed in Claim 347 includes plug to ignite mixed gas, or fuel nozzle to inject fuel and mix and ignite high pressure high temperature air, or ignite fresh fuel by the burning high temperature fuel.

349. Ignition combustion device as claimed in Claim 348 is placed in the concave chamber structure which is at the lagging end of gate plate set GTy 1055 or Gy 1050 on active body, and can couple with gas chamber Cy, and can avoid to be interferred by passive body.

350. Ignition combustion device as claimed in Claim 348 is placed in the guide groove hole 1010 of active body.

351. Ignition combustion device as claimed in Claim 348 is placed in the concave chamber which is at the leading end of gas chamber set Cy 105 of passive body, and can avoid to be interferred by gate plate GTy 1055 or Gy 1050.

352. Engine as claimed in Claim 347 wherein the placement of intake port and exhaust port is as same as mentioned in Claims 206 to 212.

353. Engine as claimed in Claim 213 assembles twice help combustion structure which possesses gate plate set with guide hole, and multi-row gas chamber Cx connects single-set gas chamber Cy in parallel in the same body.

354. Engine as claimed in Claim 353, wherein twice help combustion structure in which active body is the fixed body, and it possesses gate plate set with guide hole, and multi-row gas chamber Cx connects single-set gas chamber Cy in parallel in the same body, its main characters are as follows:

structural relation between active body and passive body is that active body is the fixed body, passive body is motion body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is to be constituted by transverse guide hole gates GTx 1045, GTy 1055;

intake compressive structure with twice help combustion function connects gas chamber set Cy 105 in parallel by multi-row gas chamber set Cx 104, gas chamber set Cx 104 possesses independent intake port 100';

method of transmitting fuel gas from gas chamber set Cx 104 to gas chamber set Cy 105 is to transmit fuel gas by groove or hole type gas guide passage 1010 on active body at transverse side of gate plate, and

gate plate sets GTx 1045, GTy 1055 with transverse guide hole, or one set of these two gate plate sets, and the other set is substituted by guide transverse groove.

355. Ignition combustion method and device of engine as claimed in Claim 354 includes plug to ignite mixed gas, or fuel nozzle to ignite fuel and mix and ignite high pressure high temperature air, or ignite fresh fuel by the burning high temperature fuel.

356. Ignition combustion device as claimed in Claim 355 is placed in the concave chamber structure which is at the lagging end of gate plate set GTy 1055 or Gy 1050 on active body, and can couple with gas chamber Cy, and can avoid to be interferred by passive body.

357. Ignition combustion device as claimed in Claim 355 is placed in the guide groove hole 1010 of active body.

358. Ignition combustion device as claimed in Claim 355 is placed in the concave chamber which is at the leading end of gas chamber set Cy 105 of passive body, and can avoid to be interferred by gate plate GTy 1055, Gy 1050.

359. Engine as claimed in Claim 355, wherein the placement of intake port and exhaust port is as same as mentioned in Claims 219 to 229.

360. Engine as claimed in Claim 353, wherein twice help combustion structure in which active body is motion body, and it possesses gate plate set with guide hole, and multi-row gas chamber Cx connects single-set gas chamber Cy in parallel in the same body, its main characters are as follows:

structural relation between active body and passive body is that active body is motion body, passive body is the fixed body;

relation between gas chamber sets Cx 104 and Cy 105 is that gas chamber set Cx is placed at passive body; gas chamber set Cy is placed at passive body; gas chamber sets Cx and Cy are placed in parallel;

character of gate plate set is to be constituted by transverse guide hole gates GTx 1045, GTy 1055;

intake compressive structure with twice help combustion function connects gas chamber set Cy 105 in parallel by multi-row gas chamber set Cx 104, gas chamber set Cx 104 possesses independent intake port 110';

method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substituted by guide transverse groove.

361. Ignition combustion method and device of engine as claimed in Claim 360 includes plug to ignite mixed gas, or fuel nozzle to ignite fuel and mix and ignite high pressure high temperature air, or ignite fresh fuel by the burning high temperature fuel.

362. Ignition combustion device as claimed in Claim 361 is placed in the concave chamber structure which is at the lagging end of gate plate set GTy 1055 or Gy 1050 on active body, and can couple with gas chamber Cy, and can avoid to be interferred by passive body.

363. Ignition combustion device as claimed in Claim 361 is placed in the guide groove hole 1010 of active body.

364. Ignition combustion device as claimed in Claim 361 is placed in the concave chamber which is at the leading end of gas chamber set Cy 105 of passive body, and can avoid to be interferred by gate plate GTy 1055 or Gy 1050.

365. Engine as claimed in Claim 360, wherein the placement of intake port and exhaust port is as same as mentioned in Claims 235 to 240.

366. Engine as claimed in Claim 241 assembles twice help combustion structure which possesses gate plate set with guide hole, and gas chambers Cx and Cy are mixed in series and parallel in the same body.

367. Engine as claimed in Claim 366, whrerin twice help combustion structure in which active body is the fixed body, gate plate set possesses guide hole, same body gas chambers Cx, Cy are mixed in series and parallel, its main characters are as follows:

structural relation between active body and passive body is that active body is the fixed body; passive body is motion body;

relation between gas chamber sets Cx 104 and Cy 105 is that gas chamber set Cx is placed at passive body; gas chamber set Cy is placed at passive body; gas chamber sets Cx and Cy are placed in series and parallel;

character of gate plate set is to be constituted by transverse guide hole gate GTx 1045, and common gate plate set GC 106;

intake compressive structure with twice help combustion function transmits fuel gas into gas chamber Cy 105 at different working angle by multi-set gas chamber sets Cx and Cy which are mixed in series and

parallel, and each set of gas chamber set Cx 104 possesses independent intake port 110′;

method of transmitting fuel gas from gas chamber set Cx 104 to gas chamber set Cy 105 is to transmit fuel gas by common gate plate set GC 106 which possesses pressure-saved gas chamber 102, and low position intake valve 101, high position output guide hole 103; and by groove or hole type gas guide passage 1010 on active body at transverse side of gate plate, and gate plate sets GTx 1045 with transverse guide hole which are coupled by guide transverse groove 105′ of gas chamber Cy 105.

368. Ignition combustion method and device of engine as claimed in Claim 367 includes plug to ignite mixed gas, or fuel nozzle to ignite fuel and mix and ignite high pressure high temperature air, or ignite fresh fuel by the burning high temperature fuel.

369. Ignition combustion device as claimed in Claim 368 is placed in the concave chamber structure which is at the lagging end of gate plate set GC 106 on active body, and can couple with gas chamber Cy, and can avoid to be interferred by passive body.

370. Ignition combustion device as claimed in Claim 368 is placed in the guide groove hole 1010 of active body.

371. Ignition combustion device as claimed in Claim 368 is placed in the concave chamber which is at the leading end of gas chamber set Cy 105 of passive body, and can avoid to be interferred by gate plate GC 106.

372. Engine as claimed in Claim 367, wherein the placement of intake port and exhaust port is as same as mentioned in Claims 247 to 252.

373. Engine as claimed in Claim 366, wherein twice help combustion structure in which active body is mention body, gate plate set possesses guide hole, same body gas chambers Cx, Cy are mixed in series and parallel, its main characters are as follows:

structural relation between active body and passive body is that active body is motion body; passive body is the fixed body;

relation between gas chamber sets Cx 104 and Cy 105 is that gas chamber set Cx is placed at passive body; gas chamber set Cy is placed at passive body; gas chamber sets Cx and Cy are placed in series and parallel;

character of gate plate set is to be constituted by transverse guide hole gate GTx 1045, and common gate plate set GC 106;

intake compressive structure with twice help combustion function transmits fuel gas into gas chamber Cy 105 at different working angle by multi-set gas chamber sets Cx and Cy which are mixed in series and parallel, and each set of gas chamber set Cx 104 possesses independent intake port 110′;

method of transmitting fuel gas from gas chamber set Cx 104 to gas chamber set Cy 105 is to transmit fuel gas by common gate plate set GC 106 which possesses pressure-saved gas chamber 102, and low position intake valve 101, high position output guide hole 103; and by groove or hole type gas guide passage 1010 on active body at transverse side of gate plate, and gate plate sets GTx 1045 with transverse guide hole which are coupled by guide transverse groove 105′ of gas chamber Cy 105.

374. Ignition combustion method and device of engine as claimed in Claim 373 includes plug to ignite mixed gas, or fuel nozzle to ignite fuel and mix and ignite high pressure high temperature air, or ignite fresh fuel by the burning high temperature fuel.

375. Ignition combustion device as claimed in Claim 374 is placed in the concave chamber structure which is at the lagging end of gate plate set GTy 1055 or Gy 1050 on active body, and can couple with gas chamber Cy, and can avoid to be interferred by passive body.

376. Ignition combustion device as claimed in Claim 374 is placed in the guide groove hole 1010 of active body.

377. Ignition combustion device as claimed in Claim 374 is placed in the concave chamber which is at the leading end of gas chamber set Cy 105 of passive body, and can avoid to be interferred by gate plate GC 106.

378. Engine as claimed in Claim 373, wherein the placement of intake port and exhaust port is as same as mentioned in Claims 258 to 263.

379. Engine as claimed in Claim 264 assembles twice help combustion structure which possesses gate plate set with guide hole, and multi-set series gas chamber Cx, single-set gate plate set connect different body gas chamber Cy is parallel.

380. Engine as claimed in Claim 379, wherein twice help combustion structure in which active body is the fixed body, gate plate set possesses guide hole, multi-set series gas chamber set Cx, single-set gate plate set Gx connect different body gas chamber Cy in parallel, its main characters are as follows:

strucal relation between active body and passive body is that active body is the fixed body, passive body is motion body;

relation between gas chamber sets Cx 104 and Cy 105 is that gas chamber set Cx is placed at active body; gas chamber set Cy is placed at passive body; gas chamber sets Cx and Cy are placed in parallel; character of gate plate set is to be constituted by transverse guide hole gates GTx 1045, GTy 1055; intake compressive structure with twice help combustion is to assemble independent or common intake port 110' on multi-set gas chamber set Cx 104 in series;

method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substitued by guide transverse groove.

381. Ignition combustion method and device of engine as claimed in Claim 379 includes plug to ignite mixed gas, or fuel nozzle to ignite fuel, and mix and ignite high pressure high temperature air, or ignite fresh fuel by the burning high temperature fuel.

382. Ignition combustion device as claimed in Claim 381 is placed in the concave chamber structure which is at the lagging end of gate plate set GTy 1055 or Gy 1050 on active body, and can couple with gas chamber Cy, and can avoid to be interferred by passive body.

383. Ignition combustion device as claimed in Claim 381 is placed in the guide groove hole 1010 of active body.

384. Ignition combustion device as claimed in Claim 381 is placed in the concave chamber which is at the leading end of gas chamber set Cy 105 of passive body, and can avoid to be interferred by gate plate GTx 1055 or GTy 1050.

385. Engine as claimed in Claim 380, wherein the placement of intake port and exhaust port is as same as mentioned in Claims 270 to 278.

386. Engine as claimed in Claim 379, wherein twice help combustion structure in which active body is motion body, gate plate set possesses guide hole, multi-set series gas chamber set Cx, single-set gate plate set Gx connect different body gas chamber Cy in parallel, its main characters are as follows:

structural relation between active body and passive body is that active body is motion body, passive body is the fixed body;

relation between gas chamber sets Cx 104 and Cy 105 is that gas chamber set Cx is placed at active body; gas chamber set Cy is placed at passive body; gas chamber sets Cx and Cy are placed in parallel; character of gate plate set is to be constituted by transverse guide hole gates GTx 1045, Gty 1055; intake compressive structure with twice help combustion is to assemble independent or common intake port 110' on multi-set gas chamber set Cx 104 in series;

method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substituted by guide transverse groove.

387. Ignition combustion method and device of engine as claimed in Claim 386 includes plug to ignite mixed gas ; or fuel nozzle to ignite fuel, and mix and ignite high pressure high temperature air or ignite fresh fuel by the burning high temperature fuel.

388. Ignition combustion device as claimed in Claim 387 is placed in the concave chamber structure which is at the lagging end of gate plate set GTy 1055 or Gy 1050 on active body, and can couple with gas chamber Cy, and can avoid to be interferred by passive body.

389. Ignition combustion device as claimed in Claim 387 is placed in the guide groove hole 1010 of active body.

390. Ignition combustion device as claimed in Claim 387 is placed in the concave chamber which is at the leading end of gas chamber set Cy 105 of passive body, and can avoid to be interferred by gate plate GTx 1055 or GTy 1050.

391. Engine as claimed in Claim 386 wherein the placement of intake port and exhaust port is as same as mentioned in Claims 288 to 296.

392. Engine as claimed in Claim 386, wherein another structure of twice help combustion in which active body is motion body, gate plate set possesses guide hole, multi-set series gas chamber set Cx, single-set gate plate set Gx connect different body gas chamber Cy in parallel, its main characters are as follows:

intake port 110' is placed in the hole structure which is at the leading end of each gas chamber set Cx 104 on passive body, and can avoid to be interferred by gate plate set Gx 1040 or GTx 1045;

exhaust port 111' is placed in the hole structure which is at the lagging end of gas chamber set Cy 105, and can avoid to be interferred by gate plate set Gy 1050 or GTy 1055 or GC 1060.

393. Engine as claimed in Claim 297, assembles twice help combustion structure which possesses

EP 0 397 996 A2

gate plate set with guide hole, and multi-row parallel gas chamber Cx connects different body gas chamber Cy in parallel.

394. Engine as claimed in Claim 393, wherein twice help combustion structure in which active body is the fixed body, gate plate set possesses guide hole, multi-row parallel gas chamber Cx connects different body gas chamber Cy in parallel, its main characters are as follows:

structural relation between active body and passive body is that active body is the fixed body; passive body is motion body;

relation between gas chamber sets Cx 104 and Cy 105 is that gas chamber set Cx is placed at active body; gas chamber set Cy is placed at passive body; gas chamber sets Cx and Cy are placed in parallel;

character of gate plate set is to be constituted by transverse guide hole gates GTx 1045, GTy 1055;

intake compressive structure with twice help function possesses multi-row gas chamber set Cx 104 which connects gas chamber set Cy 105 in parallel, gas chamber set Cx 104 possesses independent intake port 110' and different transmitting working angle, in order to transmit into gas chamber set Cy in sequence;

method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substituted by guide transverse groove.

395. Ignition combustion method and device of engine as claimed in Claim 394 includes plug to ignite mixed gas; or fuel nozzle to ignite fuel, and mix and ignite high pressure high temperature air or ignite fresh fuel by the burning high temperature fuel.

396. Ignition combustion device as claimed in Claim 395 is placed in the concave chamber structure which is at the lagging end of gate plate set GTy 1055 or Gy 1050 on active body, and can couple with gas chamber Cy, and can avoid to be interferred by passive body.

397. Ignition combustion device as claimed in Claim 395 is placed in the guide groove hole 1010 of active body.

398. Ignition combustion device as claimed in Claim 395 is placed in the concave chamber which is at the leading end of gas chamber set Cy 105 of passive body, and can avoid to be interferred by gate plate GTx 1055 or GTy 1050.

399. Engine as claimed in Claim 394, wherein the placement of intake port and exhaust port is as same as mentioned in Claims 303 to 309.

400. Engine as claimed in Claim 393, wherein twice help combustion structure in which active body is motion body, gate plate set possesses guide hole, multi-row parallel gas chamber Cx connects different body gas chamber Cy in parallel, its main characters are as follows:

structural relation between active body and passive body is that active body is motion body, passive body is the fixed body;

relation between gas chamber sets Cx 104 and Cy 105 is that gas chamber set Cx is placed at active body; gas chamber set Cy is placed at passive body; gas chamber sets Cx and Cy are placed in parallel;

character of gate plate set is to be constituted by transverse guide hole gates GTx 1045, GTy 1055;

intake compressive structure with twice help combustion function possesses multi-row gas chamber set Cx 104 which connects gas chamber set Cy 105 in parallel, gas chamber set Cx 104 possesses independent intake port 110' and different transmitting working angle, in order to transmit into gas chamber set Cy in sequence.

method of transmitting fuel gas from gas chamber set Cx 104 to gas chamber set Cy 105 is to transmit fuel gas by groove or hole type gas guide passage 1010 on active body at transverse side of gate plate, and gate plate sets GTx 1045, GTy 1055 with transverse guide hole, or one set of these two gate plate sets, and the other set is substituted by guide transverse groove.

401. Ignition combustion method and device of engine as claimed in Claim 400 includes plug to ignite mixed gas; or fuel nozzle to ignite fuel, and mix and ignite high pressure high temperature air or ignite fresh fuel by the burning high temperature fuel.

402. Ignition combustion device as claimed in Claim 401 is placed in the concave chamber structure which is at the lagging end of gate plate set GTy 1055 or Gy 1050 on active body, and can couple with gas chamber Cy, and can avoid to be interferred by passive body.

403. Ignition combustion device as claimed in Claim 401 is placed in the guide groove hole 1010 of active body.

404. Ignition combustion device as claimed in Claim 401 is placed in the concave chamber which is at the leading end of gas chamber set Cy 105 of passive body, and can avoid to be interferred by gate plate GTx 1055 or GTy 1050.

405. Engine as claimed in Claim 400, wherein the placement of intake port and exhaust port is as same as mentioned in Claims 315 to 317.

406. Engine as claimed in Claim 120 can make twice help combustion on single-set Cy 105 at different working angle through multi-sectional or multi-row gas chamber Cx 104, or multi-sectional intake compressive gate plate set Gx 1040, further it can make twice help combustion by fuel, its structure includes:

when fresh high pressure air is transmitted into the lagging gas chamber set Cx 104, and simultaneously fuel is injected into by fuel nozzle 109;

fuel which is transmitted into again can be same or different fuel as before;

it is ignited and burned by the riginally ignited high pressure high temperature fuel gas or it is ignited again by plug;

there simultaneously assembles plug 108, fuel nozzle 109 and two kinds of fuel supply system, control apparatus for controlling the igniting time and the injecting time.

407. Structural characters of gas chamber set of above-mentioned engine includes:

transverse cross section of gas chamber set along trace can be rectangular shape, arc shape or labyrinthic shape or concaved arc shape;

direction of length is equal depth or unequal depth, equal length or unequal length;

cross section along direction of trace is an even smooth deep arc, two ends are gradually deep gradually shallow arc shape, its middle part possesses a unchanged section of gradually deep and gradually shallow arc shape or wave shape with lariation of depth.

408. Above-mentioned parallel type gas chamber set includes:

at least a set of single-set gas chambers Cx 104 and Cy 105 which respectively strides over 180° up working angle to let phase of both of them overlap together;

according to the positional structure of exchange gas chamber CZ 1060, the lagging end of intake compressive gas chamber Cx 104 and the leading end of explosive exhaust gas chamber Cy 105 are connected oppositely at same phase, or they possess difference of phase and overlap proper length.

409. Engine structure of above each item includes gas chamber set which possesses multi-sectional gas chamber Cx and single-set gas chamber Cy.

410. Above-mentioned engine structure has gas chamber set which possesses multi-row gas chamber Cx and single-row gas chamber Cy, its main characters include:

single-row gas chamber Cy 105 corresponds to multi-row gas chamber Cx 104;

it exchanges fuel gas directly by single exchange gas chamber CZ 1060;

it exchanges fuel gas by compound exchange gas chamber CZ $1060''$;

different row gas chamber Cx 104 is arranged in equal phase or unequal phase;

according to the design of multi-row gas chamber set Cx 104, after ignition and combustion, fresh air will be pressed into gas chamber set Cy 105 for twice help combustion.

411. Above engine structure possess multi-row gas chamber sets Cx, Cy which are arranged in parallel to form gas chamber set, its main character includes:

multi-row gas chamber sets Cx 104, Cy 105 are matched;

at opposite position, each row of gas chamber sets Cx, Cy is placed in same phase or different phase.

412. Above engine structure in which gas chamber sets Cx, Cy possess guide transverse groove structure to form gas chamber set, its main structure includes:

at side near lagging end of gas chamber Cx 104 and leading end of gas chamber Cy 105, there assembles guide transverse grooves $104'$, $105'$;

one of sets assembles guide transverse groove; when it is at multi-sectional intake compressive gas chamber Cx 104, at same side of near end of each serial connecting section of serial connecting gas chamber Cx, there is guide transverse groove $104'$ to couple with exchange gas chamber for transmitting fuel gas.

413. Structure of gas chamber set as claimed in Claim 412 is to assemble a longitudinal guide groove Cy $105''$ at leading end of Cy; in order to reduce the pressure difference which is formed at two sides of gate plate in the instance of sliding into and cause damping.

414. Above internal engine possesses series gas chamber set, wherein structurel character of series gas chamber set on passive body includes:

at least a set of gas chambers Cx 104 and Cy 105 crisscross in series and sequence;

at least a set of series gas chamber set is in the same direction or possesses difference of phase in parallel;

at least two sections of gas chamber Cx 104 and single set gas chamber Cy 105 are in series;

at least a set of gas chamber Cx 104 which respectively possesses intake port connects single-set gas chamber Cy 105 in series.

415. Single-plate type gate plate set of engine of above each item, its structure is:
cross section driving along trace possesses shape which closely connects gas chamber set;
transverse cross section of bottom end of gate plate along driving trace is smooth arc shape.

416. Gate plate as claimed in Claim 415 is com bination type gate plate set structure, its main characters include:
it is combined by combining or overlapping several unit gates;
each unit gate can be independently driven by spring 1251, or active gate is driven by active spring 125, and other gate is applied static pressure by independent spring 1251 of active gate, in order to keep the static pressure on the sliding surface of gas chamber.

417. Gate plate set as claimed in Claims 415, 416, wherein bottom end of gate plate possesses structure of inclined cracked angle 1041, height of said cracked is very smaller than depth of gas chamber Cx 104;
at side of leading end of gate plate Gy 1050 in gas chamber Cy 105 near exhaust port 111′, there is inclined cracked angle 1051 which is forward to the direction of exhaust port 111′.

418. Gate plate set as claimed in Claims 415, 416, possesses lubricant groove, its character includes:
between side surface of gate plate set and coupled sliding surface of gas chambers Cx 104, Cy 105, there is oil groove 130, which produces pumping action when gate plate set slides up and down, for oil liquid is pumped to the contact surface along oil groove 130, and then diffuses again.

419. At front and rear end of trace of gate plate set Gx or GC in the engine mentioned in the above each item, there is structure of turbulent flow gate GM, its characters include:
character of turbulent flow gate GM 1042 is that the cross section of contact end of gas chamber Cx 104 along motion direction is the shape which possesses at least a hole 1043, or barrier 1044 for stirring fuel gas;
turbulent flow gate GM 1042 is assembled at the leading end of gate plate Gx 1040;
at the leading end and the lagging end of gate plate set Gx, there respectively possesses turbulent gate.

420. Structure of cross section of gate plate set as claimed in Claims 415, 416, its character includes:
transverse cross section of contact end of gas chamber along motion trace can be square shape, arc shape or ladder shape or labyrinthic shape, wave shape, or arc shape which middle part is larger arc, and two sides are smaller arcs.

421. Gate plate set as claimed in Claims 415, 416 possesses structure of guide hole, it is characterized in that:
at gate plate Gx 1040 facing to the compressive side, there is guide hole 1020;
at gate plate Gy 1050 facing to the explosive side, there is guide hole 1030;
two guide holes communicates from the opposite side in gate plate Gx 1040, Gy 1050 to gas guide hole 1010 on active body and couples with it;
according to the depth of gas chamber, gate plates Gx 1040, Gy 1050 makes transver of gradual ascent or gradual descent to the designed height of exchanging gas, guide hole of Gx 1040, Gy 1050 and communicates with guide hole 1010 on engine body of active body between gas chambers Cx 104, Cy 105 in order to transmit guel gas.

422. Internal combustion engine as claimed in above each item is column or cylindrical coupled type structure which possesses inner ring cylinder acted as passive body, at its coupled sliding surface corresponding to outer ring active body, there are:
intake compressive gas chamber set Cx 104: it is arranged on the same circumferential trace;
explosive exhaust gas chamber set Cy 105: it is arranged on the same circumferential trace;
Outer ring cylinder is a fixed active body, at its coupled sliding surface corresponding to passive body,there are:
at least a set of exchange gas chamber set CZ 1060, in which the most numbers of set are as same as gas chamber set Cy 105: it is used for guiding over Cx 104, Cy 105 to exchange fuel gas, save pressure and return combustion of waste gas;
intake compressive gate Gx 1040: it is placed at the lagging end of each exchange gas chamber CZ 1060, and on the same circumferential trace of gas chamber Cx 104;
intake port 110′: it is placed at the lagging end of Gx 104 on active body, and at the circumferential trace of gas chamber Cx 104 or the leading end of gas chamber set Cx 104 of passive body;
explosive exhaust gate Gy 1050: it is placed at the leading end of each exchange gas chamber CZ 1060, and on the circumferential trace of Cy 105;
exhaust port 111′ : it is placed at the leading end of Gy 1050 on active body, and on the circumferential trace of gas chamber Cy 105, or at the lagging end of gas chamber set Cy 105 on passive body;
plug 108 or fuel nozzle 109: it is placed in the concave structure 105″ which is at exchange gas chamber CZ or at the leading end of gas chamber set Cy 105 on passive body, and can avoid to be interferred by gate plate set Gy 1050;

and it assembles structure of lubricant system and cooling system.

423. The corresponding coupled driving structure of the fixed body and the motion body in internal combustion engine as claimed in Claim 422, wherein outer ring cylinder is passive body, and at its coupled sliding surface corresponding to inner ring active body, there assembles:

intake compressive gas chamber set Cx 104: it is arranged on the same circumferential trace;

explosive exhaust gas chamber set Cy 105: it is arranged on the circumferential trace which is different from the circumferential trace of Cx 104.

Inner ring cylinder is the fixed active, at its coupled sliding surface corresponding to passive body, therre assembles:

at least a set of exchange gas chamber set CZ 1060 in which the most numbers of set are as same as gas chamber set Cy 105: it is used for guiding over Cx 104, Cy 105 to exchange fuel gas, save pressure and return combustion;

intake compressive gate Gx 1040: it is placed at the lagging end of each exchange gas chamber CZ 1060, and on the same circumferential trace of gas chamber Cx 104;

exhaust port 111′: it is placed at the leading end of Gy 1050 on active body, and on the circumferential trace of gas chamber Cy 105, or at the lagging end of gas chamber set Cy 105 on passive body;

plug 108 or fuel nozzle 109: both of them are placed in the concave structure 105″ which is at exchange gas chamber CZ 1060, or at the leading end of gas chamber set Cy 105, and can avoid to be interferred by gate plate set Gy 1050:

and it assembles lubricant and cooling system.

424. Engine as mentioned in above each item is disk end surface coupling type structure, it is characterized in that at least a disk type active body and at least a disk type passive body are overlapped coaxially to form at least one surface or more of the corresponding drive working surface;

the sliding surface structure of passive body includes:

at least a set of intake compressive gas chamber set Cx 104: it uses axle as central ring, and it is placed in the gas chamber on the coupled surface of the passive body;

at least a set of explosive exhaust gas chamber set Cy 105: it is placed and matched with numbers of set, position of Cx 104.

The sliding surface structure of active body corresponding to passive body includes:

at least a set of exchange gas chamber set CZ 1060: corresponding to the numbers of set of Cx 104, Cy 105, there assembles at least a set of exchange gas chamber set CZ 1060 in which the most numbers are as same as gas chamber set Cy 105 for guiding over Cx 104, Cy 105;

intake compressive gate Gx 1040: it is placed at the lagging end of each exchange gas chamber CZ 1060, and on positioned on motion trace of gas chamber Cx 104 on the corresponding passive body, and keeps the contact and couple with gas chamber Cx on passive body by the push and press of spring 125;

intake port 110′: it is placed at the lagging end of Gx on active body and positioned on the motion trace of gas chamber Cx 104 on passive body, or placed at the leading end of gas chamber set Cx 104;

explosive exhaust Gate Gy 1050: it is placed at the leading end of each exchange gas chamber CZ, and positioned on the motion trace of gas chamber Cy 105 on passive body;

exhaust port 111′: it is placed at the leading of Gy on active body, and positioned on the motion trace of gas chamber Cy 105 on passive body, or placed at the lagging end of gas chamber set Cy 105 on passive body;

plug 108 or fuel nozzle 109: both of them are placed in the concave structure 105″ which is at ex change gas chamber Cz 1060, or placed at the leading end of gas chamber Cy 105, and can avoid to be interferred by gate plate set Cy 1050;

lubricant system: it can be pumped by dynamic poser of motor, or it is pumped by gate plates Gx 1040, Gy 1050 to lubricate the sliding surface;

and an intergral type cooling structure which is air-cooling or liquid-cooling and pumped in the rotating part.

425. Internal combustion engine as mentioned in above each item is a mixed type structure of column surface and disk end, wherein the coupled structure of active body and passive body can simultaneously possess cylindricay shape and pan shape structure;

its sliding surface of passive body corresponding to active body simultaneously possesses sliding surface coupled by ring shaped end surface and ring shaped column surface, on it, there assembles:

at least a set of intake compressive gas chamber set Cx 104;

at least a set of explosive exhaust gas chamber set Cy 105.

its sliding surface of active body corresponding to passive body simultaneously possesses sliding surface

coupled by ring shaped end surface and ring shaped column surface, on it, there assembles:

at least a set of exchange gas chamber set CZ 1060 in which the most numbers of set are as same as gas chamber set Cy 105: it corresponds to the placement, number of set of Cx 104, Cy 105 for guiding over guide groove of Cx 104, Cy 105;

intake compressive gate Gx 1040: it is placed at the lagging end of each exchange gas chamber CZ 1060, and positioned on the motion trace of gas chamber set Cx 104 on the ring shaped end surface and ring shaped column surface corresponding to passive body;

intake port 110′: it is placed at the lagging end of Gx 1040 on active body, and positioned on the motion trace of gas chamber Cx on passive body, or it is placed at the leading end of gas chamber set Cx 104 on passive body;

explosive exhaust gate Gy 1050: it is placed at the leading end of each exchange gas chamber CZ 1060, and positioned on the motion trace of gas chamber set Cy 105 on the ring shaped end surface and ring shaped solumn surface corresponding to passive body;

exhaust port 111′: it is placed at the leading end of Gy 1050 on active body, and positioned on the motion trace of gas chamber Cy on passive body, or it is placed at the lagging end of gas chamber set Cy 105 on passive body;

plug 108 or fuel nozzle 109: both of them are placed in the concave structure 105″ which is at exchange gas chamber CZ 1060, or placed at the leading end of gas chamber Cy 105, and can avoid to be interferred by gate plate set Gy 1050;

lubricant system: it can be pumped by dynamic power of motor, or it is pumped by gate plates Gx 1040, Gy 1050 to lubricate and couple the sliding surface;

and an intergral type cooling structure which is air-cooling or liquid-cooling and pumped in the rotating part.

426. Internal combustion engine as mentioned in above each item is conic column surface coupled type structure, it is characterized in that:

internal rotor possesses conic type ring surface with proper length to couple conic seat on the housing of stator;

at the conic ring surface, there assembles gas chamber sets Cx 104, Cy 105;

at conic seat, there assembles gate plates 1074, 1075, exchange gas chamber CZ 1060, intake port 110′, exhaust port 111′ which match with conic seat.

427. Internal combustion engine as mentioned in above each item is linear driving structure, this kind of engine possesses linear driving passive body;

wherein, passive body is motion body, at the corresponding sliding surface which couples with the filed body, there assembles:

at least a set of intake compressive gas chamber Cx 104;

at least a set of explosive exhaust gas chamber Cy 105.

wherein, active body is the fi-ed body, at the sliding surface corresponding to the motion body, there assembles:

at least a set of exchange gas chamber set CZ 1060 in which the most numbers of set is as same as gas chamber set Cy 105: it is arranged by matching with gas chambers Cx 104, Cy 105 of the corresponding active body to guide and stride between Cx 104, Cy 105, or it is placed in the concave structure 105″ which is at the leading end of gas chamber set Cy 105, and can avoid to be interferred by gate plate set Gy 1050;

intake compressive gate Gx 1040: it is placed at the lagging end of exchange gas chamber CZ 1060, and positioned on the place trace of the corresponding gas chamber Cx 104;

intake port 110′: it is placed at the lagging end of Gx 1040 on active body, and on the same linear type phase of Gx 1040, or it is placed at the leading end of gas chamber set Cx 104 on passive body;

explosive exhaust gate Gy 1050: it is placed at the leading end of exchange gas chamber CZ 1060, and positioned on the plane trace of the corresponding gas chamber Cy 105;

exhaust port 111′: it is placed at the lagging end of Gy 1050 on the active body, and it is arranged on the same linear type trace with Gy 1050, or it is placed at the lagging end of gas chamber set Cy 105 on passive body;

plug 108 or fuel nozzle 109: both of them are placed at exchange gas chamber CZ 1060;

lubricant system: it can be pumped by dynamic power of motor or gate plates Gx, Gy;

and air-cooling or liquid-cooling type cooling structure.

428. Internal combustion engine as mentioned in above each item; wherein lubricant structure includes:

oil liquid is pumped by independent pump to be injected into the structure which is at the coupled face of Cx 104, Cy 105;

lubricant is stored in the upper part of gate plate seat to let passive body move to cause gate plate moving

EP 0 397 996 A2

up and down and pumping oil liquid and force oil liquid to filtrate down through oil groove 130 at side of gate plate;

lubricant is diffused to the frictional surface around circumference by multi-layer gate plate which possesses oil guide grooved thread 130 on the overlapped surface between gate plates.

429. Internal combustion engine as mentioned in the above each item possesses turbine vane pumping structure, it is characterized in that liquid pump is integral with engine, and includes:

driving axle 114 is hollow tubular axle, and penetrates through center of internal rotor 173 to be fixed and locked;

the interior part of hollow tubular body is partitioned by internal partition plug 165 to form two internal chambers, on it, there is radial hole 166;

at the hollow tubular axle, there penetrates a turbine vane 167 to be fixed and locked;

two ringed chambers 168, 169 are formed in the inner space of rotor of engine by radial vane 167 and internal partition plug 165;

when engine is driven, turbine vane will pro duce one-way absorbing force and absorb cooling liquid into from input end 212 of hollow tubular axle, through radial hole 166 at output end 212 of hollow tubular axle into ringed chamber 168, and then go through turbine vane 167 into ringed chamber 169 at another side, and flow through radial hole 166 at output end;

the cooling liquid is transmited out from output end 213 of hollow tubular axle.

430. Internal combustion engine as mentioned in the above each item possesses radial vane open type structure, its structural character includes:

driving axle 114 is hollow tubular axle, and penetrates through center of internal rotor to be fixed and locked;

the interior part of hollow tubular body is partitioned by internal partition plug 165 to form two internal chambers, on it, there is radial hole 166;

at the hollow tubular axle, there penetrates a turbine vane 167 to be fixed and locked;

two ringed chambers 168, 169 are formed in the inner space of rotor of engine by radial vane 167 and internal partition plug 165;

when engine is driven, it has air pump effect, in order to absorb the external air and flow through input end 212 of hollow tubular axle, and enter into gas chamber 168 through radial hole 166 on input end, and then enter into gas chamber 169 through radial vane 167, and penetrate through radial hole 166 of output end of hollow tubular axle;

and transmit out to the outside from output end 213 of hollow tubular axle.

431. Internal combustion engine as claimed in Claim 430, when driving axle of engine is solid axle rod, its structural character is that:

intake port can be placed on the fixed side cover 170, and designed as turbine vane 172 or radial vane 172' by the inner ring of joint ring and link with internal rotor 173, internal rotor 173 assembles high density gas guide chamber 174 in ring at the position coupling with radial vane 172';

gas guide chamber 174 can be enlarged toward one side, or possess turning curved, arc shape guide passage;

between ring surface 175 of this structure at front side of housing of stator and internal rotor 173, there has proper gap;

at the ring passage of stator housing corresponding to said gap, there is high density guide hole 176 which is used as hole for diffusing and transmitting air out.

432. Dynamic output structure of internal combustion engine as mentioned in the above each item, wherein the matching number between common gate plate set and gas chamber set Cx, Cy includes:

there assembles a set of common gate plate set at interval of each working cycle, or at longer interval there assembles common gate plate set;

at interval of each $\frac{1}{2}$ working cycle, there assembles a set of common gate plate set.

433. Engine as claimed in Claim 432, character of dynamic output structure is that:

there are at least two sets of Cx, Cy and when the occupied working angle of each set is lower than 180° stroke, the number of set of exchange gas chamber CZ and gate plate set Cx, Cy is from one set to once or twice of number of set of intake compressive gas chamber and explosive exhaust gas chamber;

when working angle is higher than 180° stroke, the number of set of exchange gas chamber CZ is at least one set and up to the same number of set of intake compressive gas chamber Cx and explosive exhaust gas chamber Cy.

434. Structure in which assembles intake port, exhaust port on motion body as mentioned in above each item, wherein the ring type coupling interface device of transmission pipe, its constitution includes:

the middle part of hollow rotary axle 114 of motion body has partition structure;

139

on the fixed body, there are fuel transmission pipe which couples with intake port 212 at one end of above rotary axle and waste gas transmission pipe which couples with exhaust port 213 at another end;

covers 240, 241 with guide hole at fixed end of rotary axle couple with hollow rotary axle.

435. Transmission pipe as claimed in Claim 434, if two ends of hollow rotary alle are sealed by the sealing plugs 231, 232, and at rotary axle, there are fuel intake guide hole 115 and exhaust guide hole 117, and hollow seal ring type structure 235 for intake of fuel gas and seal ring type structure 236 for exhaust of fuel gas which cover in ring on the intake guide hole and lead to fuel gas supply system are used for transmission.

436. Structure in which assembles intake port, exhaust port on motion body as mentioned in above each item, wherein the ring type coupling synchronous distributive interface device of transmission pipe, its constitution includes:

ring type coupling interface device additionally assembles help combustion intake port and ring type fuel gas intake sealing ring type structure 235' for help combustion which lends to fresh air supply system;

on hollow axle, there also has help combustion intake axle hole 115' to couple with hollow axle; fuel gas intake axle hole is synchronous with fuel gas intake working angle on main body of engine;

help combustion intake axle hole is synchronous with help combustion intake working angle.

437. Structure in which assembles intake port, exhaust port on motion body as mentioned in above each item, wherein side coupling interface device of transmission pipe, its constitution includes:

there assembles transverse guide hole which leads to side wall;

fuel gas intake transverse hole 116 and exhaust transverse hole 118 can be placed in the position of different side or different driving trace;

the coupling is completed by the fixed structure of fuel gas which possesses are or ring shape intake guide groove 240 and exhaust guide groove 241 which can communicate with transverse holes 116 and 118 in rotation, and closely contact side wall of transverse holes.

438. Structure in which assembles intake port, exhaust port on motion body as mentioned in above each item, wherein side coupling synchronous distributive interface device of transmission pipe, its constitution includes:

there assembles help combustion intake transverse hole 116' which leads to the help combustion arc shape or ring shape guide groove 240' of fresh air supply system;

fuel gas intake guide groove is synchronous with intake working angle of engine main body;

help combustion guide groove is synchronous with help combustion working angle of engine main body.

439. Structure in which assembles intake port, exhaust port on motion body as mentioned in above each item, wherein electromagnetic valve or mechanical valve synchronous distributive interface device of transmission pipe, its constitution includes:

fuel and help combustion air common intake port;

it possesses electromagnetic valve for synchronous distribution;

outlets of two sets of electromagnetic valve are in parallel and lead to common intake port;

wherein, inlet of one set of electromagnetic valve leads to fuel gas supply system;

inlet of another set of electromagnetic valve leads to help combustion air supply system;

the driving coil is driven by the switch device which is synchronous with fuel gas intake and help combustion working angle of engine.

440. Synchronous distributive device as claimed in Claim 439 is constituted by the mechanical valve which is synchronous with the rotation of engine, or the mechanical valve driven by the eccentric machine which is synchronous with engine, its constitution includes:

its outlet leads to common intake port;

its two inlets respectively lead to fuel gas supply system and help combustion air supply system.

441. Above-mentioned engine structure of each item, if it is designed as linear type internal combustion engine, the coupling and sliding guidance of motion body and the fixed body include:

the motion trace of motion body can be limited by the externally added guidance and the limitation of guide rail;

the wheel or sliding rail which is fixed and locked in the fixed body and parallel with the driving rail of motion body is coupled by motion body and is used for motion body to make linear drive according to the limitation;

pre-pressed spring is placed on the limiting wheel or guide rail in the vertical direction of motion body and fixed body in order to keep the close contact of the coupling surface of motion body and fixed body and lock the fixed guide rail of the curve sective and form a gap with active body.

442. Internal combustion engine as claimed in Claim 1, in cludes:

cylinder block which has an inner space of the shape of parallel cylinder, for at least a set of pistion makes

reciprocating movement;

the inner space of two ends of cylinder block and surface of piston form gas chamber;

at least a set of gas chamber in the structure of cylinder block is used as combustion chamber; and at least of gas chamber is used as compressive gas chamber for absorbing and compressing air or combustible gas;

at least one path for transmitting compressive gases communicates between the compressive gas chamber and combustion gas chamber;

at least a set of exhaust port or groove is provided on the cylinder block or the piston and communicates with the combustion gas chamber for exhaust waste gas;

a reciprocating piston block which couples with cylinder block has a set of double-sided piston or further has upper and lower two sets of piston used as basic set, the main body of piston is provided with sealing ring transmitting linking rod and can further be provided with intake exhaust guide hole groove, intake exhaust valve set and gas path;

ignition system is used to ignite compressed fuel gas or oil injection system so that fuel can be duly injected into combustion gas chamber to mix with high pressure air and burn it;

cooling, lubricant system and intake exhaust interface device, and the mechanism for transmitting, driving and moving piston.

443. Engine structure as claimed in Claim 442 includes:

a set of double-sided piston combines with cylinder block, the inner wall of one end of the cylinder block forming a combustion gas chamber with the combustion side of the piston, and there assembles a plug for ignition;

at least a set of intake port, and at least a set of intake port are placed on cylinder block;

another end of piston possesses an output axle penetrates through another end of cylinder bldock to form an intake gas chamber with inner wall of cylinder block, sealing ring and sliding bearing are placed at the communicating and linking position for piston to reciprocate;

it at least possesses a guide guide path communicating combustion chamber and compressive chamber, and assembles a check valve which clockwise connects intake end of gas guide path in series;

at least a set of pressure-saved gas chamber is positioned between outlets of check valve and gas guide path;

the combustion side of the piston possesses a flange which is consiguous to the wall of cylinder block ánd which is provided with at least one set of intake guide hole for overlapping with above-mentioned outlet of gas guide path around the top dead center so that the high pressure combustion gas in the pressure-saved gas chamber can be guided and enter into the combustion gas chamber. The intake guide hole is not overlapped with the gas path outlet and the above-mentioned path is blocked when the engine is not at the intake stroke;

the bottom dead center of the piston is lower than the exhaust port or at the circumference of the piston, at least a set of guide gas holes are provided around the bottom dead center and are communicated with exhaust port;

waste gas in the combustion gas chamber is re-compressed simultaneously with the intake stroke;

the fuel gas in the intake compresive gas chamber is pre-pressed into the save pressure gas chamber simultaneously with the explosion stroke;

high pressure fuel gas is transmitted into the combustion gas chamber from pressure-saved gas chamber before ignition;

the separation of the pressure-saved gas chamber and the combustion gas chamber is defined before ignition, or at the instant of ignition, or after ignition and before exhaust by means of the positioning of the guide hole or the setting of the ignition time.

444. Engine structure as claimed in Claim 443 includes:

the combination of a set of double-sided upper piston lower piston and cylinder block;

the inner wall of one end of the cylinder block cons structing a combustion gas chamber with the combustion side of the upper piston, a plug is placed for ignition;

at least one set of exhaust port and at least one set of intake port are placed on the cylinder block;

the other side of upper piston and the inner wall of the cylinder block constitutes an intake compressive gas chamber, another end of an output axle communicating with cylinder block connects lower piston, and assembles a sealing ring at the communicating and linking position;

lower piston and the inner wall of the cylinder block form a third gas chamber, the wall structure of cylinder of the third gas chamber comprises of an intake valve and an output valve for serving as fluid pump or open type structure for stable reciprocating movement of upper and lower piston set.

445. Engine structure as claimed in Claim 422 includes:

a combination of a set of upper piston, lower piston and cylinder block;

the inner wall of one end of the cylinder block forming a combustion gas chamber with the combustion side of the upper piston, and possesses at least one set of plug for ignition;

at least one set of exhaust port, at least one set of intake port are placed on the cylinder block;

the other end of the upper pistion having an output axle communicating with a partitioning wall on the other end of the cylinder block to the inner wall of the other end and combining with lower piston to form an intake compressive gas chamber, sealing ring being provided at the communicating and linking position so that the piston can make reciprocating movement therein;

the combustion side of piston possesses a flange which is contiguous to the wall of the cylinder block and which is provided with at least one set of intake guide hole for overlapping with center so that the high pressure fuel gas in the pressure-saved gas chamber can be guided and enter into the combustion gas chamber, the above path is blocked when the engine is not at the intake stroke;

the bottom dead center of the piston is lower than the exhaust port or, at the circumference of the piston , at least a set or up of guide gas holes are provided around the bottom dead center and are communicated with exhaust port, at least one gas guide path is communicated with the combustion gas chamber and the compressive gas chamber;

the explosive exhaust stroke works simultaneously with the intake stroke, that the compressive stroke of the compressive gas chamber works simultaneously with the recompression of the waste gas of the combustion gas chamber;

ignition time is that when the piston passes through top dead center, after the guide hole on the flange has completed the guiding of gas and after the guide hole on the cylinder block has been separated.

446. The further characterictic of engine structure as claimed in Claim 445 includes:

there assembles a check valve clockwise connectes in series with the intake end of the gas guide path, and at least a set of pressure-saved gas chamber between the said check valve and the outlet of the gas path;

the explosive exhaust stroke works simultaneously with the intake stroke, that the compressive stroke of the compressive gas chamber works simultaneously with the recompression of the waste gas of the combustion gas chamber;

the ignition time is that when the piston passes through top dead center and at the instant when the guide hole on the flange has completed the guiding of gas, or after the gas hole on the piston has been separated from that of the cylinder block.

447. Engine as claimed in Claims 443, 446 includes:

at least one set of the second exhaust port near the top dead center;

the combustion side of the piston possesses a flange which is contiguous to the wall of the cylinder block and which is provided with at least a set of intake guide hole and at least a set of exhaust guide hole;

the cylinder block has at least a gas guide path communicating with the combustion gas chamber and compressive gas chamber, a check valve is provided to be clockwise connected in series with the intake end of the gas guide path;

at least a set of pressure-saved gas chamber is provided between the check valve and the outlet of the gas guide path, another check valve is also provided clockwise at the outlet of gas guide path;

at least a set of guide hole is communicated with the exhaust port near the bottom dead center;

at least a set of guide hole is communicated with the exhaust port near the top dead center;

high pressure gas compressed by the intake compressive gas chamber passes through the check valve of the intake end of the gas guide path to the pressure-saved gas chamber when the piston has been raised to the position such that the guide hole of the piston side is overlapped with the outlet of the gas guide path of the inner wall of the cylinder block;

the communication of the check valve provided at the outlet of the gas path is blocked by the pressure formed by the fuel gas chamber;

the check valve of the outlet of the gas guide path is opened and the compressive gas is guided in and ignited when the piston passes through the above-mentioned over-lapping position after the piston has been passed through the second exhaust position and the pressure has been relieved.

448. Engine structure as claimed in Claims 442, 443, 444, 446 is further characterized in that at least a set of transmission valve is used to replace the intake guide hole on the flange of the piston, and includes:

at least a set of gas guide path is provided to communicate between the compressive gas chamber and the combustion gas chamber, and a check valve is placed to be clockwise connected in series with the intake end of the gas guide path;

at least a set of transmission valve is provided between the pressure-saved gas chamber and the combustion gas chamber;

at least a set of plug is placed in the pressure-saved gas chamber or the combustion gas chamber;

compressive gas is the intake compressive gas chamber enters into pressure-saved gas chamber through check valve;

due to the isolation of transmission valve and combustion and opening transmission valve before piston returns to top dead center, high pressure gas in the pressure-saved gas chamber will enter into combustion chamber and then ignite;

pressure-saved gas chamber can form auxiliary combustion chamber;

transmission valve is closed before exhaust in order to let pressure-saved gas chamber under high pressure status for one stroke and mix with high pressure gas to raise up compressive ratio.

449. Engine as claimed in Claims 442 to 448, wherein its structure with high compressive ratio is ignited and burned by high temperature and high pressure, and its ignition system and plug are substituted by high pressure fuel pump and injection nozzle.

450. Engine structure as claimed in Claim 444, wherein gas chamber formed by lower piston and cylinder block can be used as help combustion pressure intake gas chamber, its character includes:

at least a set of intake valve and intake port are assembled in help combustion pressure intake gas chamber which communicates with help combustion pressure intake gas chamber;

at least a set of one-way valve and gas guide path lead to help combustion pressure-saved gas chamber;

between combustion chamber and help combustion pressure-saved gas chamber are communicated by gas guide hole in the cylinder block; on the piston, there is gas guide hole or common exhaust hole;

when it is ignited on the top dead center, the help combustion pressure-saved gas chamber will communicate with guide hole or piston to let air in the help combustion pressure-saved gas chamber duly enter into combustion chamber to have effect of helping combustion.

451. Help combustion type engine as claimed in Claim 450 possesses structure which is controlled by piston-actuating type intake valve tongue, its character includes:

between help combustion pressure-saved gas chamber and combustion chamber, there assembles intake valve tongue, return spring, fixing retaining ring;

help combustion gas chamber assembles at least one set of intake valve which communicates with help combustion gas chamber from intake port;

at least one set of one-way valve and gas guide path lead to help combustion pressure-saved gas chamber;

between help combustion pressure-saved gas chamber and combustion chamber, piston is used to actuate tongue of intake valve near top dead center to let fresh high pressure air in the help combustion pressure-saved gas chamber mix with combustion gas burned in the combustion chamber to possess the effect of helping combustion.

452. The help combustion structure which is controlled by piston-actuating type intake gate tongue as claimed in Claim 451 can be combined by the engines as claimed in Claims 443, 445, 446, 447, 448, its character includes:

between bottom face of upper piston and cylinder block there forms help combustion pressure intake gas chamber;

at least a set of intake valve and intake port communicate with help combustion pressure intake gas chamber;

at least one set of one-way valve and gas guide path lead to help combustion pressure-saved gas chamber;

on the help combustion pressure-saved gas chamber, there assembles a piston-actuating control type intake valve tongue;

intake valve tongue is actuated by piston near top dead center to let fresh high pressure air in the pressure-saved gas chamber for help combustion mix with the burning gas burned in the combustion chamber to possess the effect of helping combustion.

453. Engine structure as claimed in Claims 443, 444, 446, 447, 448,450, 451, 452, wherein its further character includes:

plug or fuel injection nozzle is placed in the pressure-saved gas chamber;

in the combustion chamber, there assembles fuel injection nozzle and places the relevant interface of double-set fuel supply system;

in the instant of combustion of fuel gas in the pressure-saved gas chamber in order to let fuel nozzle inject fuel into combustion chamber.

454. Double-set fuel supply system and the relevant interface as claimed in Claim 452 can be the same fuel or different fuel for simultaneous operation or independent operation or operation in sequence.

455. Engine structure as claimed in Claims 442 to 454 can be further combined by two sets as a pair, and its structural character is that its mechanical structure is a multi-reverse working cycle.

456. Engine structure as claimed in Claims 442 to 454, wherein exhaust port groove, gas guide path and checked valve, pressure-saved gas chamber and transmission valve can be placed in the cylinder block or main body of piston.

457. Transmission valve and exhaust valve of engine structure as claimed in Claims 442 to 454, wherein valve is opened and closed by externally added synchronous eccentric motion structure, or valve with return spring and actuated by piston or the pressure difference of gas at input and output ends.

The invention relates to internal combustion engines. An object of the invention is to provide an improved internal combustion engine of high efficiency, giving lower pollution and less vibration. The invention is applicable to rotary engines, to linear engines and to two-stroke reciprocating piston engines.

In the present invention the combustible mixture is first drawn into an intake chamber, from which it is highly compressed into a high pressure chamber, and from which it is then released into a combustion chamber at an instant immediately prior to ignition.

In a preferred construction the high pressure chamber is provided with a non-return inlet valve through which the combustible mixture is compressed into the chamber, and with an outlet port which in operation is uncovered by relative sliding movement of the parts of the engine so as to release the compressed mixture at the required moment.

In a rotary or a linear engine one of the relatively moving parts is shaped to provide the intake chamber and the combustion chamber, and the other carries a sliding vane which acts as a piston. This vane may be hollow, the interior providing the high pressure chamber.

The invention is also applicable to reciprocating two-stroke piston engines, the part of the cylinder below the piston being sealed to provide the intake chamber, and a passageway within the piston uncovering the outlet port of the high pressure chamber at top dead centre of the piston stroke.

The invention will now be further described with reference to the accompanying drawings, in which:

Figure 3-4 is a transverse section of a rotary engine incorporating the invention;

Figure 3-5 is an axial section of the engine of Figure 3-4;

Figures 2 and 2-1 are details showing a vane incorporating the high pressure chamber;

Figures 11 and 11-1 are respectively horizontal and vertical longitudinal sections of a linear engine incorporating the invention;

Figures 11-2 to 11-7 are diagrams illustrating the operation of the engine of Figures 11 and 11-1;

Figure 154 is an axial section through the piston and cylinder of a two-stroke reciprocating engine incorporating the invention;

Figure 154-1 is a transverse section of the cylinder and the top of the piston of the engine of Figure 154; and

Figures 154-2 to 154-6 are diagrams illustrating the operation of the engine of Figures 7 and 8.

Figures 3-4 and 3-5 show a rotary engine employing the present invention. The engine comprises a cylindrical rotor working within a body which is shaped so as to provide an intake chamber 104 and an explosion chamber 105. Apart from these two chambers the rotor is a close fit within the body.

A pair of spring loaded vanes 106, seal the gap between the rotor and the body and act as pistons for drawing in and compressing the combustion mixture, and for transmitting the force of the explosion to the rotor.

The structure of these vanes is shown in more detail in Figures 2 and 2-1. The vanes consist of a hollow body, the interior of which forms a high pressure chamber 102. A non-return inlet valve 101 opening in the forward direction of motion of the vane permits the combustion mixture to be compressed into this chamber and an outlet port 103 is covered during the compression of the combustion mixture as shown in Figure 2, but is uncovered as shown in Figure 201 when it is required to release the highly compressed combustion mixture from the chamber.

In operation, referring to Figure 3-4, the rotor rotates clockwise in the view shown. As the vane 106 passes down the intake chamber 104, it draws in combustion mixture through the inlet 110, and compresses it. As the vane approaches the end of the intake chamber the mixture is compressed through the inlet valve 101 into the high pressure chamber 102. It cannot escape from this chamber, because the outlet port 103 lies within the body of the rotor in the position shown in Figure 2, where it is sealed.

As rotation continues, the vane 106 leaves the intake chamber 104 and enters the explosion chamber 105. Close to the beginning of this chamber a spark plug 108 is provided in a hemispherical recess 105″, and this is energised immediately the vane has passed it. The chamber is widened at this point, so that the vane moves outwards, uncovering the outlet port 103 as shown in Figure 2-1 and releasing the high pressure combustion mixture, which is immediately fired by the plug 108. The vane then acts as a power piston, tranferring the pressure developed by the explosion gases into rotation of the rotor until the vane reaches the far end of the explosion chamber 105, when it uncovers an exhaust port 111. During this process the diametrically opposite vane 106 has been compressing the combustion mixture in the intake chamber 104, and the process repeats itself.

The engine shown in Figures 11 and 11-1 is a linear engine working on exactly the same principles as the rotary engine just described. The engine comprises a body running along a trackway, the trackway being provided with recesses of alternately deeper and shallower depth, the shallower ones providing the intake chambers 104, and the deeper ones providing the explosion chambers 105. The body is provided with vanes 106 whose construction is similar to that shown in Figures 2 and 2-1 and already described. Adjacent to each of the vanes, and immediately behind it in relation to the direction of motion, is a spark plug 108 in a hemispherical recess 105″. At the front of the motor is a vane 120 of different construction. This does not have a high pressure chamber within it, but it is provided with a hole 1047 which acts as a port, and is uncovered when the vane is in the deeper explosion chamber 105, but is sealed when the vane is in the shallower intake chamber 104. The function of this leading vane is merely to act as a piston to fill the chamber 104 with combustible mixture as the engine passes over it, ready for compression by the next vane. An opening 111′ immediately in front of it prevents the build-up of unwanted pressure.

A notch 104′ in the end of the chamber 104 allows it to communicate with an inlet groove 110 in the engine body and a notch 105′ in the front end of the explosion chamber 105 allows it to communicate with an exhaust groove 111 in the engine body.

The operation of this engine will now be explained with reference to Figures 11-2 to 11-7. In Figure 6a the front end of the engine with the vane 120 is passing over an explosion chamber 105, but the depth of the chamber is such that the port 1047 is exposed and allows gas to pass through it, so this vane produces no effect. On the other hand, when this vane passes through the shallower intake chamber, as shown in Figures 11-4 and 11-5 the port 1047 is closed and the vane produces suction, drawing combustion mixture into the chamber.

In Figure 11-6 the next vane, which contains a high pressure chamber, has entered the intake chamber, and the gas is being compressed in front of it and forced through the non-return valve into the high pressure chamber within the vane. When this vane reaches the end of the intake chamber, the high pressure chamber is filled with highly compressed gas. This position is shown on the lefthand side of Figure 11-3. The motor continues to move so that the vane enters the deeper explosion chamber 105, when it protrudes far enough to uncover the outlet port 103 (see Figure 2-1) and release the compressed mixture, at which instant the plug 108 is fired. This starts the power stroke for this vane.

At the end of this stroke the vale leaves the explosion chamber and enters the next intake chamber leaving the explosion chamber 105 communicating with the exhaust ports and groove 111 by way of the notch 105′. The vane continues through the next intake chamber, compressing the gas in it into the high pressure chamber within the vane and the cycle repeats itself.

Figures 154 and 154-1 are respectively axial and transverse sections of the piston and cylinder of a two-stroke engine embodying the present invention. The lower end of the cylinder is sealed and provided with an inlet valve 306 for the combustible mixture. The piston rod 307 passes through a sealing gland 308 which seals it against the escape of the mixture, and the top of the cylinder is provided in the usual manner with a spark plug 108. A passageway 320 in the piston communicates with an exhaust port 304 when the piston is in its lowest position, as shown in Figure 154.

A passageway 310 leads from the bottom of the cylinder to a high pressure chamber 312, the entrance from the passageway to this chamber being closed by a non-return valve 311. At the bottom of the high pressure chamber 312 is an outlet port 313 opening into the interior of the cylinder and normally covered by the sidewall of the piston. However, at the top dead centre position of the piston a passageway 314 comes opposite the outlet port 313.

Figures 154-2 to 154-6 illustrate the functioning of this engine. At Figure 154-2 the piston is at the top of its stroke, and the space below it has been filled with the combustion mixture. As the piston moves downwards, as shown in Figure 154-3 and 154-4, this is compressed and forced through the non-return valve into the high pressure chamber at the side of the cylinder. At the bottom of its stroke the exhaust port in the cylinder side is uncovered, and exhaust gases above the piston can escape. The upward stroke, shown in Figures 154-5 and 154-6, compresses the residual gases on top of the piston and draws fresh mixture into the space below it. At top dead centre, as shown in Figure 154-2, the passageway 314 comes opposite the outlet port 313 (see Figure 154) and the highly compressed combustion mixture is transmitted through this passage to the combustion chamber at the top of the piston, at which moment the spark plug is fired. This cycle is repeated indefinitely.

It will be appreciated that the essential feature of the present invention is the provision of a high pressure chamber into which the combustion mixture is compressed and from which it is released into the combustion chamber just at the moment of ignition. Many variations in the mechanical constructions of engines employing this principle may be envisaged. For example, in the rotary engine of Figure 3-4 the vanes could be fixed in the outer member, and the inner member could be shaped to provide the intake chamber and combustion chamber. The linear motor of Figures 11 to 11-7 could be inverted in construction, the moving member having the intake and combustion chambers, and the fixed members having the vanes. The two-stroke reciprocating engine of Figures 154 to 154-6 could be varied by the provision of a double piston, the second piston providing the function of compressing the combustion mixture into the high pressure chamber.

These and many other variations are set out in British Patent Application No. 8420682 from which the present application claims priority, and to which reference should be made.

## TABLE 1

| FIG | ANG | pressure intake gas chamber $C_x$ | | Gc | Explosive Exhaust gas chamer $C_y$ | |
|---|---|---|---|---|---|---|
| | | Intake | Compression | | Dynamic power | Exhaust |
| | 0° | | | | | |
| | 60° | Intake stroke (—) | | | | |
| | 120° | | | | | |
| | 180° | | | | | |
| | 240° | | | | | |
| | 300° | | | | | |
| | 360° | | | | | |
| 5-4 | 60° | Intake stroke (=) | Compressive stroke (—) | fuel gas of gas chamber $C_x$ compresses and passes through one-way valve of Gc to enter into pressure-saved chamber in Gc. | | |
| 5-5 | 120° | | | | | |
| 5-6 | 180° | | | Gc —— $C_y$ | Intake | |
| 5-7 | 240° | | | | Ignition | |
| 5-8 | 300° | | | Gc is affected by shape of $C_y$ and Constringes into gate plate seat, Gc saves gas of $C_y$ after combustion | Dynamic power (—) | |
| 5-9 | 360° | | | | | |
| | 60° | Intake stroke (≡) | Compressive stroke (=) | | | |
| | 120° | | | $C_x$ —— Gc | | |
| | 180° | | | Gc —— $C_y$ | Intake | |
| | 240° | | | | Ignition | Exhaust (—) |
| | 300° | | | Save pressure | Dynamic power (=) | |
| | 360° | | | | | |

Gc : common gate plate set

Gc——Cy : pressure saved gas chamber of gate plate Gc communicates with Cy

Cx——Gc : gas chamber $C_x$ and pressure-saved gas chamber of gate plate Gc (in one way)

147

## TABLE 2

| FIG | ANG | OPERATION OF A-b-(3) | | | | | | | | |
|-----|-----|------|------|------|------|------|------|------|------|------|
| | | Cc | | | | Gy | Cc' | | | |
| | | Intake | Compression | Dynamic power | Exhaust | | Intake | Compression | Dynamic power | Exhaust |
| | 0° | | | | | | | | | |
| | 30° | Intake stroke (一) | | | | | | | | |
| | 60° | | | | | | | | | |
| | 90° | | | | | | | | | |
| | 120° | | | | | | | | | |
| | 150° | | | | | | | | | |
| | 180° | | | | | | | | | |
| | 210° | | Compressive Stroke (一) | | | fuel gas of gas chamber Cc compresses and passes through one-way valve of Gy to enter into pressure-saved chamber. (Cc—Gy) | Intake Stroke (二) | | | |
| | 240° | | | | | | | | | |
| | 270° | | | | | | | | | |
| | 300° | | | | | | | | | |
| | 330° | | | | | | | | | |
| | 360° | | | | | | | | | |
| 9-2 | 30° | Intake stroke (三) | | | | Gy—Cc' | | Compressive stroke (二) | Ignition / Dynamic stroke (一) | |
| 9-3 | 60° | | | | | | | | | |
| 9-3 | 90° | | | | | Save pressure | | | | |
| | 120° | | | | | | | | | |
| 9-4 | 150° | | | | | Cc'—Gy | | | | |
| 9-4 | 180° | | | | | | | | | |
| 9-5 | 210° | | Compressive stroke (三) | Ignition / Dynamic stroke (三) | | Gy—Cc | Intake Stroke (四) | | | Exhaust Stroke (一) |
| | 240° | | | | | | | | | |
| 9-6 | 270° | | | | | Save pressure | | | | |
| 9-6 | 300° | | | | | | | | | |
| | 330° | | | | | Cc—Gy | | | | |
| 9-7 | 360° | | | | | | | | | |

Cc : Common gas chamber
Cc' : Common gas chamber which has reverse phase with Cc.
Gy : Gate plate with pressure-saved chamber

## TABLE 3

| FIG | POSITION | OPERATION OF A−c−(1) | | | | | | | |
| --- | --- | --- | --- | --- | --- | --- | --- | --- | --- |
| | | Cx | | Cy | | Cx | | Cy | |
| | | Intake | Compression | Dynamic Power | Exhaust | Intake | Compression | Dynamic Power | Exhaust |
| | 1 | Intake | | | | | | | |
| 11−2 | 2 | Intake | Compression | | | | | | |
| 11−3 | | | | | | | | | |
| 11−4 | 3 | Intake | Compression | Ignition / Dynamic Power | | Intake | | | |
| 11−5 | | | | | | | | | |
| 11−6 | 4 | Intake | Compression | Ignition / Dynamic Power | Exhaust | Intake | Compression | | |
| 11−7 | 5 | Intake | Compression | Ignition / Dynamic Power | Exhaust | Intake | Compression | Ignition / Dynamic Power | |

Cx : Pressure intake gas chamber set.

Cy : Explosive exhaust gas chamber set.

## TABLE 4

| FIG | POSITION | OPERATION OF A-d-(1) Cc | | | |
|---|---|---|---|---|---|
| | | 1 | 2 | 3 | 4 |
| | 1 | Intake | | | |
| 15-2 | 2 | Ignition / Dynamic Power \| Compression | Intake | | |
| 15-3 15-4 15-5 | 3 | Intake \| Exhaust | Ignition / Dynamic Power \| Compression \| Intake | | |
| 15-6 15-7 | 4 | Ignition / Dynamic Power \| Compression | Intake \| Exhaust | Ignition / Dynamic Power \| Compression \| Intake | |
| | 5 | Intake \| Exhaust | Ignition / Dynamic Power \| Compression | Intake \| Exhaust | Ignition / Dynamic Power \| Compression |

Cc : pressure intake explosive exhaust common gas chamber set

## TABLE 5-1

| FIG | ANG | OPERATION OF B FIG.33 | | | | |
|---|---|---|---|---|---|---|
| | | Cx | | Cz | Cy | |
| | | Intake | Compression | | Dynamic power | Exhaust |
| | 0° | | | MOTOR STARTING | | |
| | 20° | | | | | |
| | 40° | | | | | |
| | 60° | | | | | |
| | 80° | The leading end | | | | |
| | 100° | of Cx passes | | | | |
| | 120° | through Gx, | | | | |
| | 140° | mixed fuel gas | | | | |
| | 160° | enters into | | | | |
| | 180° | Cx (intake | | | | |
| | 200° | stroke (→)) | | | | |
| | 220° | | | | | |
| | 240° | | | | | |
| | 260° | | | | | |
| | 280° | | | | | |
| | 300° | | | | | |
| | 320° | | | | | |
| | 340° | | | | | |
| 33-1 | 360° | | | | | |

Cx : pressure intake gas chamber set.

Cy : explosive exhaust gas chamber set.

Cz : exchange gas chamber set.

## TABLE 5-2

| FIG | ANG | OPERATION OF B FIG.33 | | | | |
|---|---|---|---|---|---|---|
| | | Cx | | Cz | Cy | |
| | | Intake | Compression | | Dynamic power | Exhaust |
| 33-1 | 0° | | | | | |
| | 20° | | | | | |
| 33-2 | 40° | the leading end of Cx passes through Gx, mixed fuel gas enters into Cx (intake stroke (=)) | gate plate Gx compresses the mixed fuel gas in the lagging end of Cx (Compressive stroke (→)) | | | |
| | 60° | | | | | |
| | 80° | | | | | |
| | 100° | | | | | |
| | 120° | | | | | |
| | 140° | | | | | |
| | 160° | | | | | |
| 33-3 | 180° | | | | | |
| | 200° | | | | | |
| | 220° | | | | | |
| | 240° | | | | | |
| | 260° | | | | | |
| | 280° | | | | | |
| 33-4 | 300° | | $C_x$—$C_z$ | $C_x$—$C_z$ | | |
| 33-5 | 320° | | | $C_x$—$C_z$—$C_y$ | $C_z$—$C_y$ | |
| | 340° | | | | | |
| 33-6 | 360° | | | $C_y$—$C_z$ | Ignition | |

$C_x$—$C_z$: gas chambers $C_x$, $C_z$ communicate each other, the following direction of gas is from $C_x$ to $C_z$.

$C_y$—$C_z$: gas chambers $C_y$, $C_z$ communicate each other, the following direction of gas is from $C_y$ to $C_z$.

$C_z$—$C_y$: gas chambers $C_z$, $C_y$ communicate each other, the following direction of gas is from $C_z$ to $C_y$.

$C_x$—$C_z$—$C_y$: gas chambers $C_x$, $C_y$, $C_z$ communicate together, the following direction of gas is from $C_x$ through $C_z$ to $C_y$.

## TABLE 5-3

| FIG | ANG | OPERATION OF B FIG. 33 | | | | |
|---|---|---|---|---|---|---|
| | | $C_x$ | | $C_z$ | $C_y$ | |
| | | Intake | Compression | | Dynamic Power | Exhaust |
| 33-6 | 0° | – – – | – – | – – | – – | – – – |
| | 20° | | | | | |
| 33-7 | 40° | | | | | |
| | 60° | the leading end of $C_x$ passes through $G_x$, mixed fuel gas enters into $C_x$ (intake stroke (≡)) | Gate plates $G_x$ compresses the mixed fuel gas in the lagging end of $C_x$ (Compressive stroke (=)) | $C_y \rightarrow C_x$ | gas after combustion violently expands and provide dynamic power to operate (dynamic stroke (→)) | |
| | 80° | | | | | |
| | 100° | | | | | |
| | 120° | | | | | |
| | 140° | | | | | |
| | 160° | | | | | |
| 33-8 | 180° | | | | | |
| | 200° | | | | | |
| | 220° | | | | | |
| | 240° | | | | | |
| | 260° | | | | | |
| | 280° | | | save pressure | | |
| 33-9 | 300° | | | | | |
| | 320° | | $C_x \rightarrow C_z$ | mixing action | | the leading end of $C_y$ passes through exhaust port |
| 33-10 | 340° | | | | $C_z \rightarrow C_y$ | |
| 33-11 | 360° | | | $C_y \rightarrow C_z$ | Ignition | |

153

## TABLE 5-4

| FIG | ANG | OPERATION OF B FIG. 33 | | | | |
|---|---|---|---|---|---|---|
| | | Cx | | Cz | Cy | |
| | | Intake | Compression | | Dynamic power | Exhaust |
| 33-11 | 0° | | | | | |
| | 20° | | | | | |
| 33-12 | 40° | | | | | |
| | 60° | | | | | |
| | 80° | the leading end of Cx passes through Gx, mixed fuel gas enters into Cx (intake stroke (□)) | Gate plates Gx compresses the mixed fuel gas in the lagging end of Cx (Compressive stroke (≡)) | Cy — Cz | Gas after combustion violently expands and provide dynamic power to operate (Dynamic stroke (-)) | the leading end of Cy passes through exhaust port, waste gas exhausts out (exhaust stroke (→)) |
| | 100° | | | | | |
| | 120° | | | | | |
| | 140° | | | | | |
| | 160° | | | | | |
| 33-13 | 180° | | | | | |
| | 200° | | | | | |
| | 220° | | | | | |
| | 240° | | | | | |
| | 260° | | | | | |
| | 280° | | | save pressure | | |
| 33-14 | 300° | | Cx — Cz | mixing action | | the leading end of Cy passes through exhaust port |
| 33-15 | 320° | | | | Cz — Cy | |
| | 340° | | | | | |
| 33-16 | 360° | | | Cy — Cz | Ignition | |

154

## TABLE 6

| FIG | ANG | OPERATION OF B-2-(1) | | | | | |
|---|---|---|---|---|---|---|---|
| | | Cx | | | Cy | | |
| | | Intake | Compression | Transmission | save pressure | Dynamic power | Exhaust |
| | 0° | | | | | | |
| | 20° | fuel gas | fuel gas | | | Dynamic | Exhaust |
| | 40° | enters into | is compressed | | | stroke | |
| 43-3 | 60° | Cx | | | | | |
| | 80° | | | | | | |
| 43-4 | 100° | | | Cx→Cy | | | |
| | 120° | | | | | | |
| 43-5 | 140° | | | | | | |
| | 160° | | | | Cp→Cy | Ignition | |
| 43-6 | 180° | | | | Cp→Cy | | |
| | 200° | | | | | Dynamic | Exhaust |
| | 220° | fuel gas | fuel gas | | | stroke | |
| | 240° | enters into | is compressed | | | | |
| | 260° | Cx | | | | | |
| | 280° | | | Cx→Cy | | | |
| | 300° | | | | | | |
| | 320° | | | | | | |
| | 340° | | | | Cp→Cy | Ignition combustion | Exhaust |
| | 360° | | | | Cp→Cy | | |

Cx : intake compressive    Cx↔Cy : gas flows from gas chamber Cx to Cy

Cy : dynamic exhaust gas chamber    Cp↔Cy : gas flows from gas chamber Cp to Cy

Cp : independent pressure-saved gas chamber    Cy↔Cp : gas flows from gas chamber Cy to Cp

## TABLE 7

| FIG | ANG | Cx | | Gas transmission | | | Cy | |
|---|---|---|---|---|---|---|---|---|
| | | | | | | OPERATION OF B-3-(1) | | |
| | | $C_x$ | | Gas transmission | | | $C_y$ | |
| | | Intake | Compression | $GT_x$ | 1010 | $GT_y$ | Dynamic power | Exhaust |
| | 0° | | | | | | | |
| | 20° | mixed fuel | mixed fuel | | | | Dynamic | |
| | 40° | gas enters | gas is | $C_x \rightarrow GT_x$ | | $C_y \rightarrow GT_y$ | Stroke | Exhaust |
| | 60° | into $C_x$ | compressed | | | | | |
| | 80° | | | | | | | |
| | 100° | | | | | | | |
| 46-6 | 120° | | | | | | | |
| | 140° | | | $GT_x \rightarrow 1010$ | $1010 \rightarrow GT_y$ | $GT_y \rightarrow C_y$ | | |
| | 160° | | | | | | Ignition | |
| 46-7 | 180° | | | | | | | |
| | 200° | mixed fuel | mixed fuel | $C_y \rightarrow GT_x$ | | $C_y \rightarrow GT_y$ | Dynamic | |
| | 220° | gas enters | gas is | | | | Stroke | Exhaust |
| | 240° | into $C_x$ | compressed | | | | | |
| | 260° | | | | | | | |
| | 280° | | | | | | | |
| | 300° | | | | | | | |
| | 320° | | | $GT_x \rightarrow 1010$ | $1010 \rightarrow GT_y$ | $GT_y \rightarrow C_y$ | | |
| | 340° | | | | | | | |
| | 360° | | | | | | Ignition | |

$C_x$ : pressure intake gas chamber set  $GT_x$ : pressure intake gas chamber gate plate set with transverse guide groove.
$C_y$ : explosive exhaust gas chamber set $GT_y$ : explosive exhaust gas chamber gate plate set with transverse guide groove.
1010 : gas guide groove assembled at active body.

156

# TABLE 8

EP 0 397 996 A2

| FIG | ANG | OPERATION OF C—(1) | | | |
|---|---|---|---|---|---|
| | | **Cx** | | **Cy** | |
| | | Intake | Compression | Dynamic power | Exhaust |
| | 0° | | | | |
| 70-3 | 20° | mixed fuel gas enters into Cx | Compressed mixed fuel gas enters into pressure-saved chamber of gate plate Gc | Dynamic stroke | Exhaust |
| | 40° | | | | |
| 70-4 | 60° | | | | |
| | 80° | | | | |
| 70-5 | 100° | | Compressed air enters into pressure-saved chamber of gate plate Gc | | Exhaust |
| 70-6 | 120° | | | Transmission of fuel gas | |
| | 140° | air enters into Cx | | Ignition and combustion | |
| | 160° | | | Air help combustion | |
| 70-7 | 180° | | Compressed mixed fuel gas enters into pressure-saved chamer of gate plate Gc | | |
| | 200° | mixed fuel gas enters into Cx | | Dynamic Stroke | |
| | 220° | | | | |
| 70-8 | 240° | | | | |
| | 260° | | | | |
| | 280° | | Compressed air enters into pressure-saved chamber of gate plate Gc | | Exhaust |
| | 300° | | | Transmission of fuel gas | |
| | 320° | air enters into Cx | | Ignition and combustion | |
| | 340° | | | | |
| | 360° | | | Air help combustion | |

Cx : pressure intake gas chamber set

Cy : explosive exhaust gas chamber set

## TABLE 9

| FIG | ANG | OPERATION OF C-(2) | | | | | |
| --- | --- | --- | --- | --- | --- | --- | --- |
| | | Cx | | Cx' | | Cy | |
| | | Intake | Compression | Intake | Compression | Dynamic power | Exhaust |
| 73-2 | 0° | --- | --- | --- | --- | Cx → Cy | |
| | 20° | | | | air is compressed to Gtx | Ignition and combustion | |
| 73-3 | 40° | mixed fuel gas enters into Cx | mixed fuel gas is compressed into gate plate set Gtx | air enters into Cx' | | | Exhaust |
| 73-4 | 60° | | | | | Cx' → Cy | |
| | 80° | | | | | Dynamic stroke | |
| | 100° | | | | | | |
| | 120° | | | | | Cx → Cy | |
| 73-5 | 140° | | | | air is compressed to Gtx | Ignition and combustion | |
| | 160° | mixed fuel gas enters into Cx | mixed fuel gas is compressed into gate plate set Gtx | air enters into Cx' | | | Exhaust |
| 73-6 | 180° | | | | | Cx' → Cy | |
| | 200° | | | | | Dynamic stroke | |
| 73-7 | 220° | | | | | | |
| | 240° | | | | | Cx → Cy | |
| | 260° | | | | air is compressed to Gtx | Ignition and combustion | |
| | 280° | mixed fuel gas enters into Cx | mixed fuel gas is compressed into gate plate set Gtx | air enters into Cx' | | | Exhaust |
| | 300° | | | | | Cx' → Cy | |
| | 320° | | | | | Dynamic stroke | |
| | 340° | | | | | | |
| | 360° | | | | | | |

Cx : pressure intake gas chamber set. Cx↔Cy: fuel gas in Cx is transmitted through Gtx to Cy.

Cx' : help combustion pressure intake gas chamber set.

Cy : explosive exhaust gas chamber set. Cx'↔Cy: air in Cx' is transmitted through Gtx to Cy.

## TABLE 10

| FIG | ANG | OPERATION OF C—(3) | | | | | |
|---|---|---|---|---|---|---|---|
| | | Cx | Cz | Cz' | Cy | | |
| | | Intake | Compression | Transmission | Transmission | Dynamic power | Exhaust |
| 75-2 | 0° | — — — — — | — — — — | Cz—Cy | — — — — | Ignition and combustion | — — — — |
| | 20° | help combustion air enters into Cx | | | | | |
| | 40° | | | | Cz'—Cy | Imput of help combustion air | Exhaust |
| | 60° | | Compressed mixed fuel gas enters into Cz | | | | |
| | 80° | mixed fuel gas enters into Cx | | | | Dynamic stroke | |
| 75-3 | 100° | | | | | | |
| | 120° | | | | | | |
| | 140° | | | | | | |
| 75-4 | 160° | | Compressed help combustion air enters into Cz' | Cz—Cx | | Imput of mixed combustion air | |
| 75-5 | 180° | | | | Cz'—Cx | | |
| 75-6 | | | | Cz—Cy | | Ignition and Combustion | |
| 75-7 | 200° | help combustion air enters into Cx | | | | Imput of help combustion air | Exhaust |
| | 220° | | | | Cz'—Cy | | |
| | 240° | | compressed mixed fuel gas enters into Cz | | | | |
| | 260° | mixed fuel gas enters into Cx | | | | Dynamic stroke | |
| | 280° | | | | | | |
| | 300° | | | | | | |
| | 320° | | | | | | |
| | 340° | | Compressed help combustion air enters into Cz' | Cz—Cx | | Imput of mixed combustion air | |
| | 360° | | | | Cz'—Cx | | |

Cx: pressure intake gas chamber set　Cz: exchange gas chamber set

Cy: explosive exhaust gas chamber set　Cz': help combustion exchange gas chamber set

## TABLE 11

| FIG | ANG | OPERATION OF C—(4). | | | | | | | |
|---|---|---|---|---|---|---|---|---|---|
| | | Cx | | Cx' | | Cz | | Cy | |
| | | Intake | Compression | Intake | Compression | Input | Output | Dynamic Power | Exhaust |
| 80-2 | 0° | | | | | | Cz—Cy | | |
| | 20° | | | | | | | help combustion | |
| 80-3 | 40° | mixed fuel gas enters into Cx | compressed mixed fuel gas into Cz | | | | | Dynamic stroke | Exhaust |
| | 60° | | | | | | | | |
| | 80° | | | | | | | | |
| 80-4 | 100° | | | | | C—Cz | Cz—Cy | Cz—Cy | |
| 80-5 | 120° | | | | | | | | |
| | 140° | | | help combustion air enters into Cx' | help combustion air is compressed | | | Ignition and combustion | |
| | 160° | | | | | | | | Exhaust |
| 80-6 | 180° | | | | | Cx'—Cz | | | |
| 80-7 | 200° | | | | | | Cz—Cy | help combustion | |
| | 220° | mixed fuel gas enters into Cx | compressed mixed fuel gas into Cz | | | | | Dynamic stroke | |
| | 240° | | | | | | | | |
| | 260° | | | | | | | | |
| | 280° | | | | | Cx—Cz | Cz—Cy | Cz—Cy | |
| | 300° | | | | | | | | |
| | 320° | | | help combustion air enters into Cx' | help combustion air is compressed | | | Ignition and combustion | Exhaust |
| | 340° | | | | | | | | |
| | 360° | | | | | | | | |

Cx: pressure intake gas chamber set. Cx ←→ Cz: gas chambers Cx, Cz communication each other.

Cx': help combustion pressure intake gas chamber set. Cx' ←→ Cz: gas chambers Cx', Cz communication each other.

Cz: exchange gas chamber set. Cz ←→ Cy: gas chambers Cz, Cy communication each other.

Cy: explosive exhaust gas chamber set.

# TABLE 12

| | | OPERATION OF C—(5) | | | | | | | | |
|---|---|---|---|---|---|---|---|---|---|---|
| FIG | ANG | Cx | | Cx' | | Cz | | Cz' | | Cy | |
| | | Intake | Compression | Intake | Compression | Input | Output | Input | Output | Dynamic power | Exhaust |
| | 0° | | | | | | | | Cz'→Cy | help combustion of air | |
| 81-2 | 20°–100° | mixed fuel gas enters into Cx | mixed fuel gas is compressed into Cz | help combustion air enters into Cx | help combustion air is compressed into Cz' | | | | | Dynamic stroke | Exhaust |
| 81-3 | 120° | | | | | | | | | | |
| 81-4 | 140° | | | | | Cz→Cx | Cz→Cy | | | Input of fuel gas | |
| 81-5 | 160° | | | | | | | Cz'→Cx' | | Ignition and combustion | |
| 81-6 | 180° | | | | | | | | Cz'→Cy | air help combustion | Exhaust |
| 81-7 | 200°–280° | mixed fuel gas enters into Cx | mixed fuel gas is compressed into Cz | help combustion air enters into Cx | help combustion air is compressed into Cz' | | | | | Dynamic stroke | |
| | 300° | | | | | | | | | | |
| | 320° | | | | | Cz→Cx | Cz→Cy | | | Input of fuel gas | |
| | 340° | | | | | | | Cz'→Cx' | | Ignition and combustion | |
| | 360° | | | | | | | | | | |

Cx : pressure intake gas chamber set.
Cx': help combustion pressure intake gas chamber set.
Cz : the leading exchange gas chamber set.
Cz': the lagging exchange gas set.
Cy: explosive exhaust gas chamber set.

Cx↔Cz: gas chambers Cz, Cx communicate each other.
Cx↔Cz': gas chambers Cz', Cx' communicate each other.
Cy↔Cz: gas chambers Cz, Cy communicate each other.
Cy↔Cz': gas chambers Cz', Cy communicate each other.

# TABLE 13

| FIG | ANG | Cx | | Cx' | | Cz | | Cy | |
|---|---|---|---|---|---|---|---|---|---|
| | | Intake | Compression | Intake | Compression | Input | Output | Dynamic power | Exhaust |
| | 0° | | | | Compressed help combustion air enters into Cz | | | Gc→Cy | |
| | 20° | mixed fuel gas enters into Cx | Compressed mixed fuel gas enters into pressure-saved chamber of common gate plate set Gc | help combustion air enters into Cx' | | Cx→Cz | | Ignition and Combustion | |
| | 40° | | | | | | | | |
| | 60° | | | | | | Cz→Cy | air help combustion | Exhaust |
| | 80° | | | | | | | | |
| 83-2 | 100° | | | help combustion air enters into Cx' | Compressed help combustion air enters into Cz | | | Dynamic stroke | |
| | 120° | | | | | | | | |
| | 140° | | | | | | | | |
| | 160° | | | | | | | | |
| 83-3 | 180° | | | | | | | | |
| 83-4 | 200° | mixed fuel gas enters into Cx | Compressed mixed fuel gas enters into pressure-saved chamber of common gate plate set Gc | | | | | Gc→Cy | |
| | 220° | | | | | Cx'→Cz | | Ignition and Combustion | |
| 83-5 | 240° | | | | | | Cz→Cy | air help combustion | Exhaust |
| 83-6 | 260° | | | help combustion air enters into Cx' | Compressed help combustion air enters into Cz | | | Dynamic stroke | |
| | 280° | | | | | | | | |
| | 300° | | | | | | | | |
| | 320° | | | | | | | | |
| | 340° | | | | | | | | |
| | 360° | | | | | | | | |

Cx : pressure intake gas chamber set.
Cx : help combustion pressure intake gas chamber set.
Cz : exchange gas chamber set
Cy : explosive exhaust gas chamber set.

Gc ↔ Cy : common gate plate set communicate with Cy.
Cx' ↔ Cz : gas chambers Cx' communicate with Cz.
Cz ↔ Cy : gas chambers Cz communicate with Cy.

## TABLE 14

| FIG | ANG | OPEPATION OF C-(7) | | | | | |
|---|---|---|---|---|---|---|---|
| | | Cx | | Cx' | | Cy | |
| | | Intake | Compression | Intake | Compression | Dynamic Power | Exhaust |
| 85-2 | 0° | | | | | | |
| | 20° | | | | | Dynamic stroke | Exhaust |
| 85-3 | 40° | mixed fuel gas enters into Cx | mixed fuel gas is compressed into Cy | | | | |
| | 60° | | | | | | |
| | 80° | | | | | | |
| 85-4 | 100° | | | | | Ignition and Combustion | |
| | 120° | | | | | | |
| 85-5 | 140° | | | help combustion air enters into Cx' | help combustion air compression | | |
| 85-6 | 160° | | | | | air help combustion | Exhaust |
| 85-7 | 180° | | | | | | |
| | 200° | | | | | Dynamic stroke | |
| | 220° | mixed fuel gas enters into Cx | mixed fuel gas is compressed into Cy | | | | |
| | 240° | | | | | | |
| | 260° | | | | | | |
| | 280° | | | | | | |
| | 300° | | | | | Ignition and Combustion | Exhaust |
| | 320° | | | help combustion air enters into Cx' | help combustion air compression | | |
| | 340° | | | | | | |
| | 360° | | | | | air help combustion | |

Cx: pressure intake gas chamber of fuel gas.

Cx: help combustion pressure intake gas chamber.

Cy: explosive exhaust gas chamber.

163

## TABLE 15

| FIG | ANG | OPERATION OF C—(8) | | | | | |
|---|---|---|---|---|---|---|---|
| | | Cx | | Cx′ | | Cy | |
| | | Intake | Compression | Intake | Compression | Dynamic Power | Exhaust |
| | 0° | | | | | | |
| 89-2 | 20° 40° 60° 80° 100° 120° | mixed fuel gas enters into Cx | mixed fuel gas is compressed | help combustion air enters into Cx′ | help combustion air is compressed. | Dynamic stroke | Exhaust |
| 89-3 | 140° | | Cx——Cy | | | Imput of fuel gas | |
| 89-4 | 160° | | | | | Ignition and combustion | |
| 89-5 | 180° | | | | Cx′——Cy | air help combustion | |
| 89-6 | 200° 220° 240° 260° 280° 300° | mixed fuel gas enters into Cx | mixed fuel gas is compressed | help combustion air enters into Cx′ | help combustion air is compressed | Dynamic stroke | Exhaust |
| | 320° | | Cx——Cy | | | Imput of fuel gas | |
| | 340° | | | | | Ignition and combustion | Exhaust |
| | 360° | | | | Cx′——Cy | air help combustion | |

Cx : pressure intake gas chamber of mixed fuel gas
Cx′ : pressure intake gas chamber of help combustion air
Cy : explosive exhaust gas chamber

Cx——Cy : gas chambers Cx, Cy communicate each other.
Cx′——Cy : gas chambers Cx′, Cy communicate each other.

164

## TABLE 16

| FIG | ANG | OPERATION OF FIG. 154 | | | | | | | | |
|---|---|---|---|---|---|---|---|---|---|---|
| | | Cx | | Cz | | | Cy | | | |
| | | Intake | Compression | Cx—Cz | Cz—Cy | save pressure | Intake | Compression | Dynamic power | Exhaust |
| | 0° | | | | | | | | | |
| 154-5 | 20° | | | | | | | | | Exhaust |
| 154-6 | 40° | Intake stroke | | | | | | piston raises up to compress the residual gas | | |
| | 60° | | | | | | | | | |
| | 80° | | | | | | | | | |
| | 100° | | | | | | | | | |
| | 120° | | | | | | | | | |
| | 140° | | | | | | | | | |
| | 160° | | | | Cz—Cy | | Cz—Cy | | | |
| 154-2 | 180° | | | | | | | | | |
| | 200° | | | | Cz—Cy | | | | Ignition | |
| 154-3 | 220° | | Compressive stroke | | | In Dynamic stroke Cy, Cz are separated, Cz stroke high pressure gas after combustion | | | In dynamic stroke piston pushes downward. | |
| | 240° | | | | | | | | | |
| | 260° | | | | | | | | | |
| | 280° | | | pressure of compressed gas of Cx is larger than pressure of pressure-saved gas chamber Cz, valve is opened, piston presses gas into Cz from Cx. | | | | | | |
| | 300° | | | | | | | | | |
| | 320° | | | | | | | | | |
| 154-4 | 340° | | | | | | | | | Exhaust |
| | 360° | | | | | | | | | |

Cz—Cy : gas chambers Cz and Cy communicate each other.
Cz : pressure-saved gas chamber.
Cx : pressure-intake gas chamber.
Cy : explosive exhaust gas chamber.

165

## TABLE 17

| FIG | ANG | OPERATION OF FIG 156 | | | | | | |
|---|---|---|---|---|---|---|---|---|
| | | Cx | | Cz | Cy | | | |
| | | Intake | Compression | | Intake | Compression | Dynamic power | Exhaust |
| | 0° | | | | | | | |
| | 30° | Intake stroke (→) | | | | | | |
| | 60° | | | | | | | |
| | 90° | | | | | Compression | | |
| | 120° | | | | | | | |
| | 150° | | | | | | | |
| | 180° | | | | | | | |
| | 210° | | Compressive stroke (→) | $C_x{-}C_z$ | | Compression | | |
| | 240° | | | | | | | |
| | 270° | | | | | | | |
| | 300° | | | | | | | |
| 156-2 | 330° | | | | | | | |
| 156-3 | 360° | | | $C_z{-}C_y$ | | | | |
| | 30° | Intake stroke (→) | | | | | Ignition | |
| | 60° | | | | | | Dynamic stroke (→) | |
| | 90° | | | | | | | |
| 156-4 | 120° | | | | | | | |
| | 150° | | | | | | | |
| 156-5 | 180° | | Compressive stroke (→) | $C_x{-}C_z$ | | Compression | | Exhaust |
| | 210° | | | | | | | |
| | 240° | | | | | | | |
| | 270° | | | | | | | |
| | 300° | | | | | | | |
| 156-6 | 330° | | | | | | | |
| | 360° | | | | | | | |

Cx : pressure intake gas chamber  $C_x{-}C_z$ : gas chambers $C_x$, $C_z$ communicate each other.
Cy : explosive gas chamber.  $C_z{-}C_y$ : gas chambers $C_z$, $C_y$ communicate each other.
Cz : pressure-saved gas chamber.

## TABLE 18

| FIG | ANG | OPERATION OF FIG 157 | | | | | | |
| --- | --- | --- | --- | --- | --- | --- | --- | --- |
| | | Cx | | Cz | Cy | | | |
| | | Intake | Compression | | Intake | Compression | Dynamic power | Exhaust |
| 157-2 | 0° | Intake stroke (-) | | | | | | |
| | 30° | | | | | | | |
| | 60° | | | | | | | |
| 157-3 | 90° | | | | | | | |
| | 120° | | | | | | | |
| | 150° | | | | | | | |
| 157-4 | 180° | | Compressive stroke (-) | | | Compression | | |
| | 210° | | | | | | | |
| | 240° | | | | | | | |
| | 270° | | | Cx←Cz | | | | |
| 157 5 | 300° | | | | | | | |
| | 330° | | | | | | | |
| 157-6 | 360° | Intake stroke (=) | | | Cz←Cy | | Ignition | |
| | 30° | | | | | | Dynamic stroke (-) | |
| | 60° | | | | | | | |
| 157-7 | 90° | | | | | | | |
| | 120° | | | | | | | |
| | 150° | | | | | | | |
| 157-8 | 180° | | Compressive stroke (=) | | | Compression | | Exhaust |
| | 210° | | | | | | | |
| | 240° | | | | | | | |
| | 270° | | | Cx←Cz | | | | |
| 157-9 | 300° | | | | | | | |
| | 330° | | | | | | | |
| | 360° | | | | | | | |

Cx: pressure intake gas chamber. Cx↔Cz: gas chambers Cx, Cz communicate each other.

Cy: explosive exhaust gas chamber set. Cz↔Cy: gas chambers Cx, Cz communicate each other.

Cz: pressure-saved gas chamber.

## TABLE 19

| FIG | ANG | OPERATION OF FIG 158 | | | | | | | |
|---|---|---|---|---|---|---|---|---|---|
| | | Pressure intake gas chamber Cx | | Pressure-saved gas chamber Cz | | | Explosive exhaust gas chamber Cy | | |
| | | Intake | Compression | Cx→Cz | Cz→Cy | save pressure | Compression | Dynamic power | Exhaust |
| 158-6 | 0° | | | | | | | | |
| | 20° | | | | | | | | Exhaust |
| | 40° | Intake | | | | | | | |
| | 60° | stroke | | | | | Compression | | |
| | 80° | | | | | | | | |
| | 100° | | | | | | | | |
| | 120° | | | | | | | | |
| | 140° | | | | Cz→Cy | | | | |
| 158-2 | 160° | | | | | | | | |
| | 180° | | | | | | | Exhaust | |
| 158-3 | 200° | | | | | | | Ignition | |
| | 220° | Compre- | | | Cy→Cz | | | | |
| | 240° | ssive | | | | | | Dynamic | |
| 158-4 | 260° | stroke | | | | Cz sealed save pressure | | stroke | |
| 158-5 | 280° | | | Cx→Cz | | | | | |
| | 300° | | | | | | | | |
| | 320° | | | | | | | | |
| | 340° | | | | | | | | Exhaust |
| | 360° | | | | | | | | |

Cx—Cz : gas chambers Cx, Cz communicate each other.

Cz—Cy : gas chambers Cz Cy communicate each other.

168

# TABLE 20

| FIG | ANG | OPERATION OF FIG 159 | | | | | | | |
|---|---|---|---|---|---|---|---|---|---|
| | | Cx | | Cz | | | Cy | | |
| | | Intake | Compression | Cx—Cz | Cz—Cy | save pressure | Compression | Dynamic Power | Exhaust |
| 159-2 | 0° | | | | | | | | |
| | 30° | Intake stroke (−) | | | | | | | |
| 159-3 | 60° | | | | | | | | |
| | 90° | | | | | | | | |
| | 120° | | | | | | | | |
| 159-4 | 150° | | | | | | | | |
| | 180° | | | | | | | | |
| 159-5 | 210° | | Compressive stroke (−) | | | | | | |
| | 240° | | | | | | | | |
| 159-6 | 270° | | | Cx→Cz | | | | | |
| | 300° | | | | | | | | |
| 159-7 | 330° | | | | | | | | |
| | 360° | | | | | | | | |
| | 30° | | | | | | Compression | | |
| | 60° | Intake stroke (=) | | | | | | | |
| 159-8 | 90° | | | | | | | | |
| | 120° | | | | | | | | |
| 159-9 | 150° | | | | Cz→Cy | | | | |
| | 180° | | | | Cy→Cz | | | | |
| 159-10 | 180° | | | | | | | Ignition | |
| 159-11 | 210° | | Compressive stroke (=) | | Cz→Cy | | | Dynamic stroke (−) | |
| | 240° | | | | | save pressure | | | |
| 159-12 | 270° | | | | | | | | |
| 159-13 | 300° | | | Cx→Cz | | | | | |
| | 330° | | | | | | | | |
| | 360° | | | | | | | | Exhaust |

Cx : pressure intake gas chamber.  Cx—Cz: gas chambers Cx, Cz communicate each other
Cy : explosive exhaust gas chamber. Cz—Cy: gas chambers Cz, Cy communicate each other.
Cz : pressure-saved gas chamber.

169

## TABLE 21

| FIG | ANG | OPERATION OF FIG. 160 | | | | | | | |
|---|---|---|---|---|---|---|---|---|---|
| | | Cx | | Cz | | | Cy | | |
| | 0° | Intake | Compression | $C_x \rightarrow C_z$ | $C_z \rightarrow C_y$ | save pressure | Compression | Dynamic power | Exhaust |
| | 30° 60° | Intake stroke | | | | | | | |
| | 90° | | | | | | | | |
| | 120° | | | | | | | | |
| | 150° | | | | | | | | |
| 160-2 | 180° | | | | | | | | |
| 160-3 | 210° | | Compressive stroke | | | | Compression | | |
| | 240° | | | | | | | | |
| 160-4 | 270° | | | | | | | | |
| | 300° | | | $C_x \rightarrow C_z$ | $C_z \rightarrow C_y$ | | | | |
| 160-5 | 330° | | | | | | | | |
| 160-6 | 360° | | | | $C_y \rightarrow C_z$ | | | Ignition | |
| 160-7 | 30° | Intake stroke | | | $C_z \rightarrow C_y$ | | | Dynamic stroke | |
| | 60° | | | | | save pressure | | | |
| 160-8 | 90° | | | | | | | | |
| 160-9 | 120° | | | | | | | | |
| | 150° | | | | | | | | Exhaust |
| 160-10 | 180° | | | | | | | | |
| | 210° | | Compressive stroke | | | | Compression | | |
| | 240° | | | | | | | | |
| | 270° | | | | | | | | |
| | 300° | | | $C_x \rightarrow C_z$ | $C_z \rightarrow C_y$ | | | | |
| | 330° | | | | | | | | |
| | 360° | | | | $C_y \rightarrow C_z$ | | | | |

Cx: pressure intake gas chamber.  Cx—Cz : gas chamber $C_x$. $C_z$ communicate each other.

Cy : explosive exhaust gas chamber. Cz—Cy : gas chamber $C_z$, $C_y$ communicate each other.

Cz : pressure-saved gas chamber.

170

## TABLE 22

| FIG | ANG | OPERATION OF FIG. 166 | | | | | | | | | |
|---|---|---|---|---|---|---|---|---|---|---|---|
| | | $C_x$ | | $C_z$ | | | $C_y$ | | | $C_x'$ | |
| | | Intake | Compression | $C_x{\to}C_z$ | $C_z{\to}C_y$ | save pressure | Compression | Dynamic power | Exhaust | Intake | Compression | help combustion |
| | 0° | | | | | | | | | | | |
| | 60° | Intake stroke (–) | | | | | | | | | air is Compressed | |
| | 120° | | | | | | | | | | | |
| | 180° | | | | $C_y{\to}C_z$ | | | | | | | |
| | 240° | | Compressive stroke (–) | | | | | | | air intake | | |
| | 300° | | | $C_x{\to}C_z$ | | | | | | | | |
| 166–2 | 360° | | | | | | | | | | | |
| 166–3 | 60° | Intake stroke (=) | | | | | air is Compressed | | | | air is Compressed | |
| 166–4 | 120° | | | | $C_z{\to}C_y$ | | | | | | | $C_x'{\to}341$ |
| 166–5 | 180° | | | | $C_y{\to}C_z$ | | | Ignition | | | | $C_x{\to}C_y$ |
| 166–6 | 240° | | Compressive stroke (=) | | $C_z{\to}C_y$ | save pressure | | Dynamic power | | air intake | | |
| 166–7 | | | | | | | | | | | | |
| 166–8 | 300° | | | $C_x{\to}C_z$ | | | | | | | | |
| 166–9 | 360° | | | | | | | | Exhaust | | | |
| 166–10 | 60° | Intake stroke (≡) | | | | | high temperature air is Compressed | | | | air is Compressed | |
| | 120° | | | | $C_z{\to}C_y$ | | | | | | | $C_x'{\to}341$ |
| | 180° | | | | $C_y{\to}C_z$ | | | Ignition | | | | $C_x{\to}C_y$ |
| | 240° | | Compressive stroke (≡) | | $C_z{\to}C_y$ | save pressure | | Dynamic power | | air intake | | |
| | 300° | | | $C_x{\to}C_z$ | | | | | | | | |
| | 360° | | | | | | | | Exhaust | | | |

Cx: pressure intake gas chamber.
Cx': help combustion pressure intake gas chamber.
Cy: explosive exhaust gas chamber.
Cz: pressure-saved gas chamber.

Cx—Cz: gas chambers $C_x$, $C_z$ communicate each other.
Cz—Cy: gas chambers $C_y$, $C_z$ communicate each other.
Cx'—Cy: gas chambers $C_x'$, $C_y$ communicate each other.
Cx'—341: gas chamber $C_x'$ communicates with help combustion pressure-saved gas chamber 341.

# EP 0 397 996 A2

## TABLE 23

| FIG | ANG | OPERATION OF FIG 167 | | | | | | | | | | |
|---|---|---|---|---|---|---|---|---|---|---|---|---|
| | | Cx | | Cz | | | | Cy | | | Cx' | | |
| | | Intake | Compression | $C_x$—$C_z$ | $C_z$—$C_y$ | save pressure | Compression | Dynamic power | Exhaust | Intake | Compression | help combustion |
| | 0° | | | | | | | | | | | |
| | 60° | Intake stroke (-) | | | | | | | | | air is compressed | |
| | 120° | | | | | | | | | | | |
| | 180° | | | | $C_y$—$C_z$ | | | | | | | |
| | 240° | | Compression stroke (-) | | | | | | | air intake | | |
| | 300° | | | $C_x$—$C_z$ | | | | | | | | |
| 167-3 | 360° | | | | | | | | | | | |
| 167-4 | 60° | Intake stroke (=) | | | | | air is compressed | | | | air is compressed | |
| 167-5 | 120° | | | | $C_z$—$C_y$ | | | | | | | |
| | | | | | $C_y$—$C_z$ | | | | | | | |
| 167-6 | 180° | | | | $C_z$—$C_y$ | | | Ignition | | | | $C_x'$—$C_y$ |
| 167-7 | 240° | | Compressive stroke (=) | | | save pressure | | Dynamic stroke | | air intake | | |
| 167-8 | | | | | | | | | | | | |
| 167-9 | 300° | | | $C_x$—$C_z$ | | | | | | | | |
| 167-10 | 360° | | | | | | | | Exhaust | | | |
| 167-11 | | | | | | | | | | | | |
| | 60° | Intake stroke (≡) | | | | | air is compressed | | | | air is compressed | |
| | 120° | | | | $C_z$—$C_y$ | | | | | | | |
| | 180° | | | | $C_y$—$C_z$ | | | Ignition | | | | $C_x'$—$C_y$ |
| | | | | | $C_z$—$C_y$ | | | | | | | |
| | 240° | | Compressive stroke (≡) | | | save pressure | | Dynamic stroke | | air intake | | |
| | 300° | | | $C_x$—$C_z$ | | | | | | | | |
| | 360° | | | | | | | | Exhaust | | | |

Cx : pressure intake gas chamber.  Cx—Cz : gas chambers $C_x$, $C_z$ communicate each other.

Cx' : help combustion pressure intake gas chamber.  Cz—Cy : gas chambers $C_z$, $C_y$ communicate each other.

Cz : pressure-saved gas chamber.  Cx'—Cy : gas chambers $C_x'$, $C_y$ communicate each other.

Cy : explosive exhaust gas chamber.

# TABLE 24

## OPERATION OF FIG 168

| FIG | ANG | Cx | | Cz | | | Cy | | | Cx' | | |
|---|---|---|---|---|---|---|---|---|---|---|---|---|
| | | Intake | Compression | Cx→Cz | Cz→Cy | save pressure | Compression | Dynamic power | Exhaust | Intake | Compression | help combustion |
| | 0° | | | | | | | | | | | |
| | 30° | Intake stroke (→) | | | | | | | | | | |
| | 60° | | | | | | | | | | | |
| | 90° | | | | | | | | | | | |
| | 120° | | | | | | | | | | | |
| | 150° | | | | | | | | | | | |
| 168-2 | 180° | | | | | | | | | air intake | | |
| 168-3 | 210° | | Compresive stroke (→) | | | | | | | | | |
| | 240° | | | | | | Compression | | | | | |
| 168-4 | 270° | | | Cx→Cz | | | | | | | | |
| | 300° | | | | Cz→Cy | | | | | | | |
| | 330° | | | | Cy→Cz | | | | | | | |
| 168-5 | 360° | | | | | | | Ignition | | | | |
| 168-6 | 30° | Intake stroke (→) | | Cz→Cy | | | | | | air is compressed | | |
| 168-7 | 60° | | | | | save pressure | | Dynamic stroke | | | | |
| 168-8 | 90° | | | | | | | | | | | |
| | 120° | | | | | | | | | | | Cx'→341 |
| 168-9 | 150° | | | | | | | | | | | |
| 168-10 | 180° | | | | | | | | Exhaust | | | |
| | 210° | | Compresive stroke (→) | | | | | | | air intake | | |
| | 240° | | | | | | | | | | | |
| | 270° | | | Cx→Cz | Cz→Cy | | Compression | | | | | |
| | 300° | | | | | | | | | | | |
| | 330° | | | | | | | | | | | |
| | 360° | | | | Cy→Cz | | | | | | | Cx'→Cy |

Cx: pressure intake gas chamber.
Cx': help combustion pressure intake gas chamber.
Cy: explosive exhaust gas chamber.
Cz: pressure-saved gas chamber.

Cx—Cz: gas chambers Cx, Cz communicate each other.
Cz—Cy: gas chambers Cz, Cy communicate each other.
Cx'—Cy: gas chambers Cx', Cy communicate each other.
Cx'—341: gas chamber Cx' communicates with help combustion pressure-saved gas chamber 341.

## TABLE 25

| FIG. | ANG | OPERATION OF FIG 170 | | | | | | | | | | |
|---|---|---|---|---|---|---|---|---|---|---|---|---|
| | | Cx | | Cz | | | Cy | | | | Cx' | | |
| | | Intake | Compression | $C_y \to C_z$ | $C_z \to C_y$ | save pressure | Compressed | Dynamic power | Oil-injection | Exhaust | Intake | Compression | Help combustion |
| | 0° | | | | | | | | | | | air is compressed | |
| | 60° | Intake stroke (−) | | | | | | | | | | | |
| | 120° | | | | $C_y \to C_z$ | | | | | | | | | |
| | 180° | | | | | | | | | | air intake | | |
| | 240° | | Compressive stroke (−) | | | | | | | | | | |
| | 300° | | | $C_x \to C_z$ | | | | | | | | | |
| 170-2 | 360° | | | | | | | | | | | | |
| 170-3 | 60° | Intake stroke (=) | | | | | air is compressed | | | | | air is compressed | |
| 170-4 | 120° | | | | | | | | | | | | $C_y \to 341$ |
| 170-5 | 180° | | | | $C_z \to C_y$ | | | Ignition | oil-injection | | | | $C_x \to C_y$ |
| 170-6 | 240° | | Compressive stroke (=) | | | save pressure | | Dynamic stroke | | | air intake | | |
| 170-7 | | | | | | | | | | | | | |
| 170-8 | 300° | | | $C_x \to C_z$ | | | | | | | | | |
| 170-9 | | | | | | | | | | | | | |
| 170-10 | 360° | | | | | | | | | Exhaust | | | |
| | 60° | Intake stroke (≡) | | | | | HigH temperature air is compressed | | | | | air is compressed | |
| | 120° | | | | | | | | | | | | $C_x \to 341$ |
| | 180° | | | | $C_z \to C_y$ | | | Ignition | oil-injection | | | | $C_x \to C_y$ |
| | 240° | | Compressive stroke (≡) | | | save pressure | | Dynamic stroke | | | air intake | | |
| | 300° | | | $C_y \to C_z$ | | | | | | | | | |
| | 360° | | | | | | | | | Exhaust | | | |

Cx:pressure intake gas chamber.  Cx——Cz:gas chambers Cx, Cz communicate each other.
Cx':help combustion pressure intake gas chamber. Cy——Cz:gas chambers Cy, Cz communicate each other.
Cy:explosive exhaust gas chamber.  Cx——Cy:gas chambers Cx', Cy communicate each other.
Cz:pressure-saved gas chamber.  Cx'—341:gas chamber Cx' communicates with help combustion pressure-saved gas chamber 341.

## Claims

1. An internal combustion engine, comprising:

gas chamber means including a fuel/air mixture intake and compression chamber for compressing a fuel/gas mixture and a combustion and exhaust chamber for combusting the fuel/gas mixture and for exhausting the waste gases, said intake and compression chamber and said combustion and exhaust chamber defined by stationary wall means and movable wall means;

means for sequestering a portion of the gases from the compression chamber, for saving the sequestered gases, and for releasing the sequestered gases into the combustion and exhaust chamber at a predetermined time inthe engine cycle after a partial suction is created in the combustion and exhaust chamber before the gases are exhausted from the engine, said sequestering, saving, and releasing means controlled by said movable wall means and the position of said sequestering, saving, and releasing means with respect to the stationary wall,

wherein said means for sequestering a portion of the gases from the compression chamber, said means for saving the sequestered gases, and said means for releasing the sequestered gases into the combustion and exhaust chamber are contained in a gate plate means supported by one of said wall means and extending toward and in sliding contact with the other of said wall means which serves as a camming surface for controlling said gate plate means, said plate means including;

housing means, piston means received by said housing means, said piston means having a piston wall which defines a pressure saving and transfer chamber means inside said piston means, gas transmission guide hole means located in the wall of said piston means on a side of said piston means, said gas transmission guide hole means blocked and unblocked by said wall means supporting said gate plate means, the blocking and unblocking of said gas transmission guide hole means controlled by the contact of said gate plate means against said wall means serving as the camming surface, said gas transmission guide hole means being in direct communication with said gas chamber means when said guide hole is unblocked by said wall means supporting said gate plate means one-way intake valve means located in said piston means on a side of said piston means opposite to the side of the location of said gas transmission guide hole means, said one-way intake valve means in direct communication with said gas chamber means when said intake valve means is open, piston means having a proximal end toward said housing and having a distal end away from said housing, said gas transmission guide hole means being located near said proximal end of said piston wall, said gas transmission guide hole means being capable of being blocked by the wall of said housing means and said one-way intake valve means being located near said distal end of said piston means; bias means for urging said piston means out of said housing means.

2. The internal combustion engine described in claim 1 wherein said movable wall means includes rotating wall means located inside said stationary wall means.

3. The internal combustion engine described in claim 1 wherein said fuel/air mixture is supplied to said gas chamber means by a fuel/air mixture chamber.

4. The internal combustion engine described in claim 1 wherein said chamber has a leading end and a following end and wherein said leading end is deeper in a radial direction than the following end of the chamber means.

5. The internal combustion engine described in claim 1 wherein:

said statichary wall supports said gate plate means; and said movable wall serves as the camming surface for said gate plate means.

6. The internal combustion engine described in claim 1 wherein the arrangement of said stationary wall, said movable wall, and said gate plate means serves to trap the fuel/air mixture in the compression chamber and retains the fuel/air mixture in the pressure saving and transfer chamber of the gate plate until the gate plate reaches the combustion and exhaustion chamber after which time the trapped fuel/air mixture is released from the gate plate to the combustion and exhaustion chamber.

7. The internal combustion engine described in claim 1 wherein the arrangement of said movable wall, said stationary wall, and said gate plate means provides that as long as gate plate means is in the compression chamber, said gas transmission guide hole is blocked, and the compressed fuel/air mixture trapped within said pressure saving and transfer chamber cannot escape.

8. The internal combustion engine described in claim 1 wherein the arrangement of said movable wall, said stationary wall, and said gate plate means provides that when said gate plate means reaches the combustion chamber which has a greater height than the compression chamber, said gas transmission guide hole becomes unblocked and releases the trapped compressed fuel/air mixture into said combustion chamber.

9. The internal combustion engine described in anyone of claims 1 to 8 wherein said moving wall means rotates with respect to said stationary wall means to form a rotating wall means.

10. The internal combustion engine described in claim 1 wherein said gate plate means are supported by said stationary wall means.

11. The internal combustion engine according to claim 1 wherein said gate plate means comprises:
cylindrical housing means, piston means received by said housing means, said piston means having a piston wall which defines a pressure saving and transfer chamber means inside said piston means,
gas transmission guide hole means located in the wall of said piston means on a side of said piston means,
one-way intake valve means located in said piston means on a side of said piston means opposite to the side of the location of said gas transmission guide hole means,
bias means for urging said piston means out of said housing means,
wherein said gas transmission guide hole means, said pressure saving and transfer chamber means, and said one-way intake valve means provide a path for gas flow from one side to the other side of said piston means,
wherein said piston means has a proximal end toward said housing and has a distal end away from said housing,
said gas transmission guide hole means is located near said proximal end of said piston wall, said gas transmission guide hole means being capable of being blocked by the wall of said housing means,
said one-way intake valve means is located near said distal end of said piston means.

12. The internal combustion engine described in claim 1 wherein said one-way intake valve is spring-biased in the closed position.

13. The internal combustion engine described in claim 1 further including a solid, spring-biased plate located in said stationary wall at approximately 180 degrees opposite said gate plate means.

14. The internal combustion engine described in claim 13 wherein a line between said gate plate means and said solid, spring-biased plate defines a line of symmetry for an intake and compression chamber and a combustion and exhaust chamber.

15. An internal combustion engine, comprising:
gas chamber means including a fuel/air mixture intake and compression chamber for compressing a fuel/air mixture and a combustion and exhaust chamber for combusting the fuel/gas mixture and for exhausting the waste gases, said intake and compression chamber and said combustion and exhaust chamber defined by stationary wall means and movable wall means, said moving wall means having sealing ends with rear surfaces,
means for sequestering a portion of the gases from the compression chamber, for saving the sequestered gases, and for releasing the sequestered gases into the combustion and exhaust chamber at a predetermined time in the engine cycle, said sequestering, saving, and releasing means controlled by said moving wall means and the position of said sequestering, saving, and releasing means with respect to the stationary wall,
wherein said means for sequestering a portion of the gases from the compression chamber, said means for saving the sequestered gases, and said means for releasing the sequestered gases into the combustion and exhaust chamber are contained in a gate plate means supported by one of said wall means and extending toward and in sliding contact with the other of said wall means which serves a camming surface for controlling said gate plate means, and wherein rear surfaces of sealing ends of said moving wall means are gently sloped to provide camming surfaces for said gate plate means that cause the internal pressure saving and transfer chamber to retain saved gases until asuction is provided in the combustion and exhaust chamber; and
wherein said gate plate means has a housing means and a piston means received by said housing means, said piston means having two opposite sides; means for one-way entry of the sequestered gases on the one side and means for releasing of the sequestered gases on the opposite side with means therebetween to provide direct communication for gas flow from one side to the other side of said piston means; wherein said piston means has a proximal end toward said housing and a distal end away from said housing, the means for one way entry of the sequestering gases being near the distal end of said piston means and the means for releasing the sequestering gases being near the proximal end of said piston means.

16. The internal combustion engine according to anyone of claims 1 to 8, 10,11,12,13,14 or 15 wherein the movable wall means is slidable relative to the stationary wall means.

Fig.1

Fig.1-1

Fig. 2

Fig. 2-1

Fig. 3

Fig. 3-1

Fig. 3-3

Fig. 3-2

Fig. 3-4

Fig. 3-5

EP 0 397 996 A2

Fig.4

Fig. 4-1

Fig. 5-1

Fig. 5

Fig.5-1

Fig.5-2

Fig.5-3

EP 0 397 996 A2

Fig. 5-4

Fig. 5-7

Fig. 5-5

Fig. 5-8

Fig. 5-6

Fig. 5-9

Fig. 6

Fig. 6-1

Fig. 7

Fig.7-2

Fig. 7-1

Fig. 7-3

EP 0 397 996 A2

Fig. 8

Fig. 8-1

Fig. 8-1

Fig. 9-1

Fig. 9

Fig.9-1

Fig. 9-2

Fig. 9-5

Fig. 9-3

Fig. 9-6

Fig. 9-4

Fig. 9-7

Fig.10

Fig. 10 - 1

Fig.11

Fig.11-1

Fig.11-2

Fig.11-3

Fig.11-4

Fig.11-5

Fig.11-6

Fig.11-7

Fig.12

Fig.12-1

Fig.12-2

Fig.12-3

Fig.12-4

Fig.12-5

Fig.12-6

Fig.12-7

Fig.12-8

Fig.12-9

Fig.12-10

Fig.12-11

Fig.12-12

Fig.12-13

Fig.13

Fig.13-1

Fig.13-2

Fig.13-3

Fig.13-4

Fig.13-5

Fig.13-6

Fig.13-7

Fig.14

Fig.14-1

Fig.14-2

Fig.14-3

Fig.14-4

Fig.14-5

Fig.14-6

Fig.14-7

Fig.14-8

Fig.14-9

Fig.14-10

Fig.14-11

Fig.14-12

Fig.14-13

Fig.15

Fig.15-1

Fig.15-2

Fig.15-3

Fig.15-4

Fig.15-5

Fig.15-6

Fig.15-7

Fig.15-8

Fig.15-9

Fig.15-10

Fig.15-11

Fig.15-12

Fig.15-13

Fig. 16

Fig. 16-1

Fig.16-2

Fig.16-3

Fig.16-4

Fig.16-5

Fig.16-6

Fig.16-7

Fig.16-8

Fig.16-9

Fig.16-10

Fig.16-11

Fig.16-12

Fig.16-13

Fig.17

Fig.17-1

Fig.17-2

Fig.17-3

Fig.17-4

Fig.17-5

Fig.17-6

Fig.17-7

Fig.17-8

Fig.17-9

Fig.17-10

Fig.17-11

Fig.17-12

Fig.17-13

Fig.18

Fig.18-1

Fig.18-2

Fig.18-3

Fig.18-4

Fig.18-5

Fig.18-6

Fig.18-7

Fig.18-8

Fig.18-9

Fig.18-10

Fig.18-11

Fig.18-12

Fig.18-13

Fig.19-1

Fig.19-1

Fig.19

Fig.19 -1

Fig·20

Fig. 21

Fig. 22

Fig.24

Fig.24

Fig.23.

Fig.24

Fig. 25

Fig. 26

Fig. 27

Fig. 27-1

Fig.27-2

Fig.27-3

Fig.27-4

Fig.27-5

Fig.27-6

Fig.27-7

Fig. 27-8

Fig. 27-9

Fig. 27-10

Fig. 27-11

Fig. 27-12

Fig. 27-13

Fig. 28

Fig. 28-1

Fig.28-2

Fig.28-3

Fig.28-4

Fig.28-5

Fig.28-6

Fig.28-7

Fig.28-8

Fig.28-9

Fig.28-10

Fig.28-11

Fig.28-12

Fig.28-13

Fig.29

Fig.29-1

Fig.29-1

Fig. 29-1

Fig.29-2

Fig. 29-3

Fig.29-4

Fig.29-5

Fig.29-6

Fig.29-7

Fig. 30

Fig. 30-1          Fig. 30-1

Fig. 30-1

Fig.30-2

Fig.30-3

Fig.30-4

Fig.30-5

Fig.30-6

Fig.30-7

Fig. 31

Fig. 32

Fig.32-1

Fig.33

Fig. 33-1

Fig. 33-5

Fig. 33-2

Fig. 33-6

Fig. 33-3

Fig. 33-7

Fig. 33-4

Fig. 33-8

Fig. 33-9

Fig. 33-13

Fig. 33-10

Fig. 33-14

Fig. 33-11

Fig. 33-15

Fig. 33-12

Fig. 33-16

Fig.34

Fig.35

Fig. 35-3

Fig.35-1

Fig. 35-4

Fig.35-2

Fig. 35-5

Fig.36

Fig. 37

Fig. 37-1

Fig. 37-1

Fig.37-2

Fig..37-3

Fig.37-4

Fig.37-5

Fig.37-6

Fig.37-7

80

Fig. 38

Fig. 38-1

Fig.39

Fig.40

Fig.41

Fig. 42

Fig. 42-1

Fig. 42-2

EP 0 397 996 A2

Fig. 42-3

Fig. 42-4

Fig. 42-5

Fig. 42-6

Fig. 43

Fig. 43-1

Fig. 43-2

Fig.43-3

Fig. 4 3-4

Fig. 43-5

Fig. 43-6

Fig. 43-7

EP 0 397 996 A2

Fig. 43-8

Fig. 43-9

Fig.43-10

Fig.43-11

Fig.43-12

Fig.43-13

Fig. 44

Fig. 44-1

Fig. 44-2

Fig. 44-3

Fig. 44-4

Fig. 44-5

Fig. 44-6

Fig. 45

Fig. 46

EP 0 397 996 A2

Fig.46-1

Fig.46-2

Fig.46-3

Fig.46-6

Fig.46-7

Fig.46-4

1045 (or 1055)

1020 (or 1030)

Fig.46-5

1045 (or 1055)

1020 (or 1030)

Fig.47

Fig.47-1

Fig.47-2

Fig.47-3

Fig.48

Fig.49

Fig. 49-1

Fig. 49-2

Fig. 49-3

Fig.50-1

Fig. 50

Fig.50-1

105
111'
1050
1040
110'
1060
108
104

Fig. 51

105
111'
1050
108
1040
110'
1060
104

Fig. 53

Fig. 52

Fig.54

1050

111'

1060

108

1040

110'

104

Fig.55

111'

105

1050

108

1060

1040

110'

104

Fig.55-1

Fig.56

Fig. 58

Fig. 57

1060

1061 —1061

Fig.59

104' 1040 110' 104

111' 108

1050

1065

105 1060

Fig.63

Fig. 60

1060

1063

Fig. 61

1060

1064

Fig. 62

Fig. 64

EP 0 397 996 A2

Fig. 65

Fig.65-1

Fig. 65-2

Fig.65-3

Fig.65-4

Fig.66

Fig. 66-1

Fig.66-2

Fig.66-3

Fig.67-1 →

104
1060
1040
110'
104'
104

105
111'
1050
108
105'
1060'
105

Fig.67-1 → i

Fig.67

Fig.67-1

Fig.67-2

Fig.67-3

Fig.68

Fig.68-1

Fig.68-1

Fig.69

Fig.70

Fig.70-1

Fig.70-1

Fig. 70-3

Fig. 70-4

Fig. 70-5

Fig. 70-6

Fig. 70-7

Fig. 70-8

Fig.70-2

Fig.71

Fig.71-1

Fig.71-1

Fig.72

Fig.72-1

Fig. 73

Fig.73-1

Fig.73-1

Fig.73-2

Fig.73-3

Fig.73-4

Fig.73-5

Fig.73-6

Fig.73-7

Fig.74

Fig.74-1

Fig. 75

Fig.75-1

Fig. 75-1

Fig.75-2

Fig.75-3

Fig.75-4

Fig.75-5

Fig.75-6

Fig.75-7

Fig. 76

Fig.76-1

Fig. 76-1

Fig. 77

Fig. 77-1

Fig. 78

Fig. 78-1

Fig.79

Fig. 79-1

Fig. 80

Fig.80-1

Fig.80-1

Fig.80-1

Fig.80-2

Fig.80-3

Fig.80-4

Fig.80-5

Fig.80-6

Fig.80-7

Fig. 81

Fig. 81-1

Fig. 81-1

Fig.81-2

Fig.81-3

Fig.81-4

Fig.81-5

Fig.81-6

Fig.81-7

EP 0 397 996 A2

Fig. 82

Fig. 82-1

Fig. 82-1

EP 0 397 996 A2

Fig.83

Fig.83-1

Fig.83-1

EP 0 397 996 A2

Fig. 83-2

Fig. 83-3

Fig. 83-4

Fig. 83-5

Fig. 83-6

Fig. 84

Fig. 84-1

Fig.85

Fig.85-1

EP 0 397 996 A2

Fig. 85-2

Fig. 85-3

Fig. 85-4

Fig. 85-5

Fig. 85-6

Fig. 85-7

Fig. 86

Fig. 86-1

EP 0 397 996 A2

Fig.87

Fig.87-1

Fig.88

Fig.88-1

Fig.89

Fig.89-1

Fig.89-1

Fig.89-2

Fig.89-3

Fig.89-4

Fig.89-5

Fig.89-6

Fig.90

Fig.90-1

Fig.90-2

Fig.90-3

Fig.90-4

Fig.90-5

Fig.90-6

Fig.90-7

Fig.91

Fig.91-1

Fig.92

Fig.92-1

Fig. 93

Fig. 93-1

Fig. 93-1

Fig. 93-1

Fig.94

Fig.94-1

Fig.94-1

Fig.94-2

Fig.94-3

Fig.94-4

Fig.94-5

Fig.94-6

Fig.94-7

Fig.95

Fig.95-1

Fig.95-1

Fig.95-2

Fig.95-3

Fig.95-4

Fig.95-5

Fig.95-6

Fig.95-7

EP 0 397 996 A2

Fig.96

Fig.96-1

Fig.96-1

Fig. 97

Fig. 97-1

Fig.97-2

Fig.97-3

Fig.97-4

Fig.97-5

Fig.97-6

Fig.98

Fig.98-1

Fig. 99

Fig. 99-1

Fig.99-1

Fig.99-1

Fig.100

Fig.100-1

EP 0 397 996 A2

Fig.100-2

Fig.100-3

Fig.100-4

Fig.100-5

Fig.100-6

Fig.100-7

Fig.101

Fig.101-1

Fig.102

Fig.102-1

Fig.102-1

Fig. 10 2-2

Fig.10 2-3

Fig.10 2 -4

Fig.10 2 -5

Fig.10 2-6

EP 0 397 996 A2

Fig.103

Fig.103-1

Fig.103-1

Fig.104

Fig.104-1

Fig.104-1

Fig.104-1

Fig.104-2

Fig.104-3

Fig.104-4

Fig.104-5

Fig.104-6

Fig.104-7

105 (or 104)

Fig.105

105 (or 104)

Fig.106

105 (or 104)

Fig.107

105 (or 104)

Fig.108

Fig.109

Fig.109-1

Fig.110

Fig.110-1

Fig.111

Fig.111-1

Fig.112

Fig.113

Fig.114

Fig. 115

Fig.115-1

Fig. 116

Fig.117

Fig.118

105 (or 104)

105′ (or 104′)

Fig.119

Fig.119-1

Fig.121

Fig.120

Fig.122

Fig.123

Fig.124

Fig.125

Fig.126

Fig.127

Fig.128

Fig.129

105

1051

105'

Fig.130

Fig.131

Fig.132

Fig.133

1043

Fig.134

1044

Fig.135

Fig.135-1

Fig.135-2

Fig.136

Fig.137

Fig.137-1

Fig. 138-1

105    111'         1050        1060    105

1040    110'    104

104    108    104'

Fig. 138-1

Fig. 138

105

1060

Fig. 138-1

108

1074

104

Fig.139

Fig.139-1

Fig.139-2

Fig. 140

Fig.140-1

Fig.140-2

Fig. 141-2    Fig. 141-1

Fig. 141

Fig.141-1

Fig.141-2

Fig.142

Fig.143

Fig. 144

Fig. 145

Fig.146

Fig.147

213  165  167  105  104  212

Fig.148

Fig.149

Fig.150

Fig. 150-1

Fig. 150-2

Fig.150-3

Fig.150-6

Fig.150-4

Fig.150-7

Fig.150-5

Fig.150-8

Fig.150-9

Fig.150-12

Fig.150-10

Fig.150-13

Fig.150-11

Fig.150-14

Fig.151

Fi g.151-1

Fig.151-3 →

110'

114

115

235

Fig.151-3 →

111'

Fig.151-2

Fig.151-3

Fig.151-4

Fig.151-5

Fig.152-1

116

110′  241  111′  118

Fig.152-1

Fig.152

Fig.152-.1

Fig.152-3

116

105

241

240

110'

111'

104

118

Fig.152-3

Fig.152-2

Fig.152-3

Fig.152-4

Fig.152-5

Fig.153

Fig.153-1

Fig.153-2

Fig.153-3

Fig. 154

Fig.154-1

Fig.154-2

Fig.154-6

Fig.154-3

0°

Fig.154-5

Fig.154-4

Fig.155

Fig.155-1

EP 0 397 996 A2

Fig. 156

Fig. 156-1

Fig.156-2

Fig.156-6

Fig.156-3

Fig.156-5

Fig.156-4

Fig. 157

Fig.157-1

Fig.157-2

Fig.157-5

Fig.157- 3

Fig.157-4

Fig.157-6

0°

Fig.157-9

Fig.157-7

Fig.157-8

Fig. 158

Fig. 158-1

Fig.158-2

Fig.158-3

Fig.158-6

Fig.158-4

0°

Fig. 158-5

INTAKE

COMPRESSION

POWER

EXHAUST

IGNITION

TDC.

180°

90° 270°

0°

BDC.

Fig. 158-7

P

Fig. 158-8

combustion

expansion

exhaust II

exhaust

intake comp.

0° 180° 360°(0°) 180° 0° 180° θ
BDC. TDC.

EP 0 397 996 A2

Fig. 159

Fig.159-1

Fig. 159-2

Fig. 159-3

Fig. 159-4

Fig. 159-5

Fig. 159-6

Fig. 159-7

Fig. 159-8

Fig. 159-9

Fig. 159-10

Fig. 159-11

Fig. 159-12

Fig. 159-13

Legend:
- INTAKE
- COMPRESSION
- 2nd COMPRESSION
- POWER
- EXHAUST
- ★ IGNITION

Fig. 159-14

Fig. 159-15

Fig. 160

Fig.160-1

Fig.160-2

Fig.160-3

Fig.160-4

Fig.160-5

Fig.160-6

Fig.160-7

Fig.160-8

Fig.160-9

Fig.160-10

IGNITION
INTAKE
COMPRESSION
POWER
EXHAUST
COMP. II

Fig.160-11

Fig. 160-12

Fig.161-1

Fig.161-1

Fig.161

Fig.161-1

Fig. 162

Fig.162-1

Fig. 163

Fig.163-2

Fig.163-1

Fig.163-3

Fig. 164

Fig. 164-1

Fig.165

Fig. 165-1

Fig. 166

Fig.166-1

Fig.166-2

Fig.166-3

Fig166-4

Fig.166-5

Fig.166-6

Fig.166-7

Fig.166-8

Fig.166-9

Fig.166-10

Fig. 166-11

Fig. 166-12

EP 0 397 996 A2

Fig.167-1

Fig.167-1

Fig.167

Fig. 167-1

Fig. 167-2

Fig.167-3 Fig.167-4 Fig.167-5

Fig.167-6 Fig.167-7 Fig.167-8

Fig.167-9 Fig.167-10 Fig.167-11

Fig. 168

Fig.168-1

Fig.
168-2

Fig.
168-3

Fig.
168-4

Fig.
168-5

Fig.
168-6

Fig.
168-7

Fig.
168-8

Fig.
168-9

Fig.
168-10

Fig. 169

Fig. 169-1

Fig. 169-2

Fig. 169-3

Fig. 169-4

Fig. 169-5

Fig. 169-6

Fig. 169-7

Fig. 169-8

Fig. 169-9

Fig. 169-10

Fig.170-1

Fig.170-1

Fig.170

Fig.170-1

Fig. 170-2   Fig.170-3   Fig.170-4

Fig.170-5   Fig.170-6   Fig.170-7

Fig.170-8   Fig.170-9   Fig.170-10

Fig.170-11

Fig. 170-12

EP 0 397 996 A2

Fig.171

Fig. 171-1

Fig. 171-2

Fig. 172

Fig. 172-1

EP 0 397 996 A2

Fig. 173

Fig.173-1

Fig. 174

Fig. 174-2

Fig. 174-1

Fig. 174-3

Fig.175

Fig. 176